# EUROPEAN PATENT SPECIFICATION

(11) **EP 1 128 729 B1**
(45) Date of publication and mention of the grant of the patent: **21.05.2003**
(21) Application number: 99971666.5
(22) Date of filing: 08.11.1999
(51) Int. Cl.: A01N 61/00

(54) **HERBICIDAL COMPOSITION**
HERBIZIDE ZUSAMMENSETZUNGEN
COMPOSITION HERBICIDE

(30) Priority: 10.11.1998 DE 19851854; 21.12.1998 DE 19859224; 01.04.1999 DE 19915013; 30.04.1999 DE 19919951
(43) Date of publication of application: 05.09.2001
(73) Proprietor: Syngenta Participations AG, 4058 Basel (CH)
(72) Inventor: NEVILL, David, John, CH-4125 Riehen (CH); ZOSCHKE, Andreas, D-79576 Weil am Rhein (DE); STEHLI, Andreas, CH-5073 Gipf-Oberfrick (CH)
(74) Representative: Bastian, Werner Maria
(86) International application number: EP9908559
(87) International publication number: WO00027203

(56) References cited:
- EP-A- 0 612 474
- EP-A- 0 625 306
- WO-A-97/32011
- WO-A-98/09525
- BRITISH CROP PROTECTION COUNCIL: "THE PESTICIDE MANUAL, TENTH EDITION" , PESTICIDE MANUAL,GB,FARNHAM, BCPC, VOL. ED. 10, PAGE(S) 1335-1341 XP002031460ISBN: 0-948404-79-5 the entire index

## Description

The present invention relates to a novel herbicidal synergistic composition comprising a herbicidal active compound combination which is suitable for selectively controlling undesirable vegetation in crops of useful plants resistant to protoporphyrinogen oxidase inhibitors, for example maize, sugar beet, soya beans, rape, cotton, sunflowers, cereals, rice and sugar cane.
The invention furthermore relates to a process for controlling undesirable vegetation using the herbicidal composition, and to the use of the composition mentioned for this purpose.

Suitable active compounds are a) a herbicide which inhibits the action of protoporphyrinogen oxidases in plants (= protoporphyrinogen oxidase inhibitors), and b) at least one further co-herbicide.

The herbicides under a) and b) are known and described, for example, in 'The Pesticide Manual', Editor C.D.S. Tomlin, 11th Edition, British Crop Protection Council, 1997, US-A-5 446 197, US-A-5 176 735 and WO 95/34659.
WO 97/32011 discloses DNA sequences coding for protox enzymes and modified, herbicide tolerant forms thereof. Different structural classes of protox inhibitors are listed as well. WO 98/09525 discloses a process for weed control in crops made resistant to phospho-herbicides with compositions comprising a synergistic mixture of a non-selective phospho-herbicide and at least a co-herbicide.
EP-A-0 612 474 discloses a herbicidal composition of 1,5-diphenyl-triazoles and at least a co-herbicide with broadened weed spectrum and synergistic effects.
EP-A-0 625 306 discloses a mixture of pyraflufen-ethyl and at least one co-herbicide such as aclonifen with synergistic effects and selectivity in cereals and maize.
WO 98/33927, WO 98/29554 and US-A-5 767 373 describe genetically transformed plants which are resistant to certain herbicides which inhibit protoporphyrinogen biosynthesis.

Surprisingly, it has now been found, that a combination, the ratios in which may vary, of protoporphyrinogen-oxidase-inhibiting active compounds under a) with one or more of the
a) a herbicide which inhibits the action of protoporphyrinogen oxidases selected from the group of diphenyl ethers consisting of acifluorphen (7), aclonifen (8), bifenox (69), chlornitrophen (S868), ethoxyfen (HC-252; 391), fluoroglycofen-ethyl (344), fomesafen (365), lactofen (442) and oxyfluorfen (547), or from the group of imides consisting of azafenidin (37), carfentrazon-ethyl (112), cinidon-ethyl, flumiclorac-pentyl (340), flumioxazin (341), fluthiacet-methyl (359), oxadiargyl (538), oxadiazon (539), pentoxazone (KPP 314; 560), sulfentrazone (665), flumipropyn (S1060), flupropacil, benzfendizone or the compound of the formula A 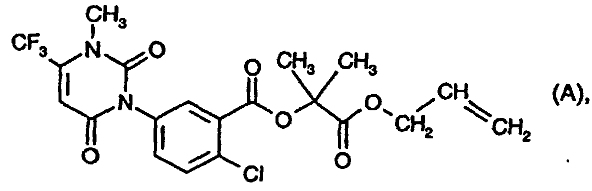 or from the group of phenylpyrazoles consisting of nipyraclofen (S1190) and also fluazolate (MON 48500/BAY 11500) and thidiazimin (S1305), and
b) at least one further co-herbicide selected from the group of atrazine (34), terbuthylazine (692), (S)-metolachlor, metolachlor (493), terbutryn (693), simazine (651), dimethenamid or (S)-dimethenamid, flufenacet (=fluthiamide, 51), acetochlor (6), alachlor (14), isoxaflutole (436), isoxachlortole, mesotrione, sulcotrione (664), metosulam (495), flumetsulam (339), pendimethalin (557), bromoxynil (88), bentazone (65), carfentrazone-ethyl (112), clomazone (150), nicosulfuron (519), rimsulfuron (644), halosulfuron-methyl (389), metribuzin (497), flumiclorac-pentyl (340), prosulfuron (613), primisulfuron-methyl (589), dicamba (210), fluthiacet-methyl (359), pyridate (626), 2,4-D (192), clopyralide (153), diflufenzopyr (BAS 65400H, 50), fluroxypyr (354), MCPA (455), MCPB (457), mecoprop (MCPP, 459), metobenzuron (491), thifensulfuron-methyl (704), aclonifen (8), EPTC (274), cyanazine (168), propaquizafop (602), metamitron (474), pyramin (chloridazon, 126), phenmedipham (563), desmedipham (206), ethofumesate (285), triasulfuron (723), chloridazon (126), lenacil (443), triallate (722), fluazifop (327), sethoxydim (648), quizalofop (640), fenoxaprop(P-ethyl) (S1044), clethodim (146), oxasulfuron (542), acifluorfen (7), benazolin-ethyl (55), sulfentrazone (665), chlorimuron-ethyl (127), cloransulam-methyl (155), dopyralid (153), fomesafen (365), imazamox (412), imazaquin (414), imazethapyr (415), imazapyr (413), lactofen (442), thidiazuron (703), tribufos (729), trifluralin (740), dimethachlor (238), napropamide (513), quinmerac (636), metazachlor (475), carbetamide (108), dimefuron (236), propyzamide (611), ethametsulfuron-methyl (280), tebutam (682), fluometuron (342), prometryn (597), norflurazon (526), pyrithiobac-sodium (632), MSMA (methylarsonic acid, 486), DSMA (486), diuron (260), flurochloridone (353), dithiopyr (259), thiazopyr (702), oxyfluorfen (547), ethalfluralin (279), clodinafop (147), amidosulfuron (21), diclofop-methyl (219), diflufenican (232), ethoxysulfuron (287), fentrazamide, flazasulfuron (325), florasulam, fluazolate (=MON 48500), flucarbazone, flupyrsulfuron-methyl sodium (348), flurtamone (356), iodosulfuron, isoproturon (433), chlortoluron (134), chlorsulfuron (139), metsulfuron-methyl (498), sulfosulfuron (668), tribenuron-methyl (728), 2,4-DB (199), 2,4-DP (dichlorprop, 216), bifenox (69), ethametsulfuron-methyl (280), flamprop-M (324), imazamethabenz-methyl (411), ioxynil (425), tralkoxydim (717), fluoroglycofen-ethyl (344), methabenzthiazuron (477), isoxaben (435), prosulfocarb (612), difenzoquat-metilsulfate (229), pretilachlor (588), cinosulfuron (145), fenclorim (304), bensulfuron-methyl (62), imazosulfuron (416), pyrazosulfuron-ethyl (620), azimsulfuron (39), esprocarb (278), mefenacet (461), molinate (501), propanil (600), pyrazolate (618), cyhalofop-butyl (178), bispyribac-sodium (76), pyriminobac-methyl (630), cafenstrole (102), oxadiargyl (538), oxadiazon (539), bromobutide (85), MY-100, dymron (daimuron, 195), NB 061, MK243 (indanofan, 422), HW-52 (etobenzanid, 291), AC 014, ametryn (20), hexazinone (400), asulam (33), azafenidin (37), tebuthiuron (683), glyphosate (383), glufosinate (382), sulfosate (383), and the compounds of the formulae A, B, C and D 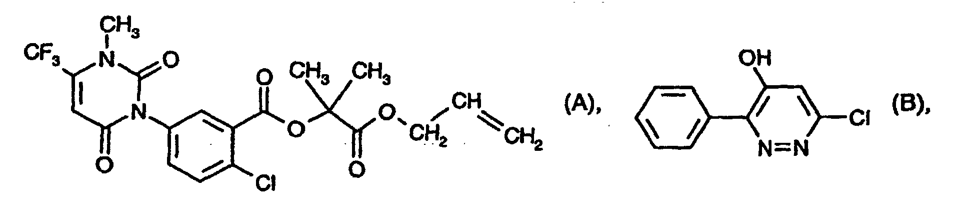 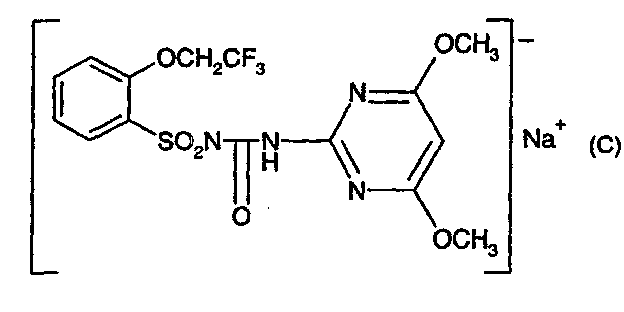 and 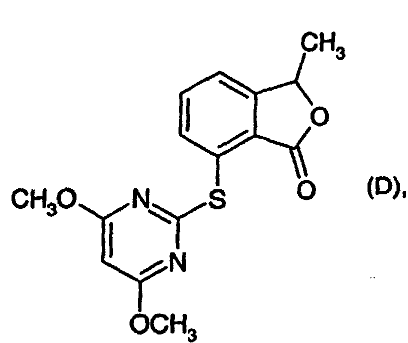 whereby the combination of the same compound of group a) and group b) cannot be employed as active ingredient.

The compound of the formula A and its preparation are described, for example, in US-A-5 183 492, whereas all other preferred diphenyl ethers, imides and phenylpyrazoles and also thidiazimin are described in the 'Pesticide Manual', 11th Edition, Editor C.D.S. Tomlin, British Crop Protection Council, 1997, under the entry number given in brackets, for example, acifluorfen (7) is described therein under the entry number 7.
Fluazolate is known under the name MON 48500/BAY 11500 and the registration number (Reg.No.) [174514-07-9].
Cinidon-ethyl corresponds to the compound ethyl 2-chloro-3-[2-chloro-5-(cyclohex-1-en-1,2-dicarboximido)phenyl]acrylate, known under Reg. No. [132057-06-8].
Flupropacil corresponds to the compound isopropyl 2-chloro-5-(1,2,3,6-tetrahydro-3-methyl-2,6-dioxo-4-trifluoromethylpyrimidin-1-yl)benzoate, known under Reg. No. [120890-70-2]. Benzfendizone is the name proposed by the ISO in AGROW No. 324 of 12th March, 1999, for the compound of the formula 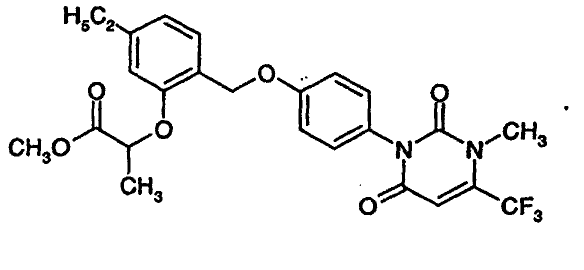 The compound of the formula B is described, for example, in Zeitschrift für Pflanzenkrankheiten and Pflanzenschutz, Special issue X, 355-360 (1984).
The compound of the formula C is described, for example, in WO 97/41112.
The compound of the formula D is described, for example, in EP-B-0 447 506 in Table 1 as Example 12.
(S)-Metolachlor and (S)-dimethenamid are described, for example, in WO 97/34485. Mesotrion is described, for example, in US-A-5 006 158, Iodosulfuron and isoxachlortole are known, for example, from 'AGROW' No. 296 of 16th January, 1998, page 22. Fentrazamide is described in 'The 1997 British Crop Protection Conference - Weeds, Conference Proceedings Vol. 1, 2-8, pages 67 to 72.
Florasulam is the name proposed by ISO in AGROW No. 304 of 15th May, 1998, page 21, for the triazolepyrimidinesulfonanilide herbicide developed by Dow Agro Sciences. Flucarbazone corresponds to the compound N-(2-trifluoromethoxyphenylsulfonyl)-4,5-dihydro-3-methoxy-4-methyl-5-oxo-1H-1,2,4-triazole-1-carboxamide known under Reg. No. [145026-88-6].
MY-100 (Oxaziclomefone) corresponds to the compound 3-[1-(3,5-dichlorophenyl)-1-methylethyl]-3,4-dihydro-6-methyl-5-phenyl-2H-1,3-oxazin-4-one known under Reg. No. [153197-14-9].
NB 061 is known under the code BAY YRC 2388 (=fentrazamide).
AC 014 (=cyclosulfamuron) corresponds to the compound1-[2-(cyclopropylcarbonyl)anilinsulfonyl]-3-(4,6-dimethoxypyrimidin-2-yl)urea known under Reg. No. [136849-15-5].
All other preferred co-herbicides under b) are described, for example, in 'Pesticide Manual', 11th Edition, Editor C.D.S. Tomlin, British Crop Protection Council, 1997, under the entry number given in brackets, for example, atrazine (34) is described therein under the entry number 34.

Some of the herbicides mentioned can be present both in the form of esters, usually alkyl esters having 1 to 8 carbon atoms, or of salts or free acids. When such herbicides are mentioned, all customary derivatives, as cited preferably in the abovementioned 'Pesticide Manual' or another reference, shall count as having been disclosed as well.

It is highly surprising that the combination of the protoporphyrinogen-oxidase-inhibiting active compound under a) with at least one co-herbicide under b) exceeds the additive effect on the weeds to be controlled which was to be expected in principle, thus widening the activity limits of both active compounds in particular in two respects: on the one hand, the application rates of the individual compounds a) and b) are reduced, with the activity remaining equally high. On the other hand, the composition according to the invention also achieves a high degree of weed control where the individual substances in the range of low application rates have become economically useless. The consequence of this is a considerable widening of the weed spectrum as is necessary and desired in the case of an unintentional overdose of active compound. Furthermore, the composition according to the invention permits more flexibility with respect to successor crops while maintaining excellent weed control in useful plants resistant to protoporphyrinogen oxidase inhibitors.

The composition according to the invention can be used against a large number of economically important weeds, such as Stellaria, Nasturtium, Agrostis, Digitaria, Avena, Setaria, Sinapis, Lolium, Solanum, Phaseolus, Echinochloa, Scirpus, Monochoria, Sagittaria, Bromus, Alopecurus, Sorghum halepense, Rottboellia, Cyperus, Abutilon, Sida, Xanthium, Amaranthus, Chenopodium, Ipomoea, Chrysanthemum, Galium, Viola and Veronica. The composition according to the invention is suitable for all economically customary application methods, for example pre-emergent application, post-emergent application and seed dressing. The composition according to the invention is preferably suitable for controlling weeds in crops of useful plants resistant to protoporphyrinogen oxidase inhibitors, such as maize, sugar beet, soya beans, rape, cotton, sunflowers, cereals, rice and sugar cane. Such useful plants and their preparation are described, for example, in WO95/34659 and WO98/33927.

The composition according to the invention comprises the protoporphyrinogen oxidase inhibitor a) and a co-herbicide b) in any mixing ratio, usually with an excess of one component over the other one. Preferred mixing ratios of active compound a) and co-herbicide b) are between 1:2000 and 2000:1, in particular between 1:200 and 200:1.

Preferred herbicidal compositions for controlling broad-leaved weeds and grasses in crops of maize resistant to protoporphyrinogen oxidase inhibitors comprise, as co-herbicide b), a compound selected from the group consisting of atrazine, terbuthylazine, (S)-metolachlor, metolachlor, terbutryn, simazine, dimethenamid or (S)-dimethenamid, flufenacet, acetochlor, alachlor, isoxaflutole, isoxachlortole, mesotrione, sulcotrione, metosulam, flumetsulam, pendimethalin, bromoxynil, bentazone, carfentrazone-ethyl, clomazone, nicosulfuron, rimsulfuron, halosulfuron-methyl, metribuzin, flumiclorac-pentyl, prosulfuron, primisulfuron-methyl, dicamba, fluthiacet-methyl, pyridate, 2,4-D, clopyralide, diflufenzopyr, fluroxypyr, MCPA, MCPB, MCPP, metobenzuron, thifensulfuron-methyl, aclonifen, EPTC, glyphosate, glufosinate, sulfosate and cyanazine, and also compounds of the formulae A and B.

Among these, preference is given to those compositions which comprise as co-herbicide b) a compound selected from the group consisting of (S)-metolachlor, metolachlor, dimethenamid and (S)-dimethenamid, acetochlor and alachlor.
Advantageously, these compositions may comprise as additional component c) a safener of the benzoxazine type, in particular benoxacor (61), or MON 4660, flurazole (350), dichlormid (213) or furilazole (377).
These safeners under c) are described, for example, in 'Pesticide Manual', 11th Edition, Editor C.D.S. Tomlin, British Crop Protection Council, 1997, under the entry number given in brackets, benoxacor (61), for example, is described therein under the entry number 61.
MON 4660 Is a safener from Monsanto of the following formula

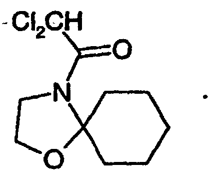

Preferred herbicidal compositions for controlling broad-leaved weeds and grasses In crops of sugar beet resistant to protoporphyrinogen oxidase inhibitors comprise as co-herbicide b) a compound selected from the group consisting of metolachlor, (S)-metolachlor, propaquizafop, metamitron, pyramin, phenmedipham, desmedipham, ethofumesate, triasulfuron, chloridazon, lenacil, triallate, fluazifop, sethoxydim, quizalofop, glyphosate, glufosinate, sulfosate and clethodim.

Preferred herbicidal compositions for controlling broad-leaved weeds and grasses in crops of soya resistant to protoporphyrinogen oxidase inhibitors comprise as co-herbicide b) a compound selected from the group consisting of (S)-metolachlor, metolachlor, oxasulfuron, fluthiacet-methyl, propaquizafop, alachlor, dimethenamid or (S)-dimethenamid, acifluorfen, benazolin-ethyl, bentazone, carfentrazone-ethyl, sulfentrazone, chlorimuron-ethyl, cloransulam-methyl, thifensulfuron-methyl, clopyralid, flumiclorac-pentyl, flumetsulam, fomesafen, imazamox, imazaquin, imazethapyr, imazapyr, lactofen, pyridate, sethoxydim, fluazifop, quizalofop, clethodim, fenoxaprop(P-ethyl), thidiazuron, tribufos, pendimethalin, glyphosate, glufosinate, sulfosate and trifluralin.

Preferred herbicidal compositions for controlling broad-leaved weeds and grasses in crops of rape resistant to protoporphyrinogen oxidase inhibitors comprise as co-herbicide b) a compound selected from the group consisting of dimethachlor, propaquizafop, clomazone, napropamide, quinmerac, metazachlor, carbetamide, dimefuron, propyzamide, clopyralid, ethametsulfuron-methyl, sethoxydim, fluazifop, quizalofop, clethodim, fenoxaprop(P-ethyl), glyphosate, glufosinate, sulfosate and tebutam.

Preferred herbicidal compositions for controlling broad-leaved weeds and grasses in crops of cotton resistant to protoporphyrinogen oxidase inhibitors comprise as co-herbicide b) a compound selected from the group consisting of fluometuron, prometryn, metolachlor, (S)-metolachlor, norflurazon, propaquizafop, pyrithiobac-sodium, trifluralin, pendimethalin, bromoxynil, clomazone, MSMA, DMSA, fluazifop, quizalofop, fenoxaprop(P-ethyl), sethoxydim, clethodim, diuron, cyanazine, alachlor, acetochlor, flurochloridone, dithiopyr, thiazopyr, lactofen, oxyfluorfen, glyphosate, glufosinate, sulfosate and ethalfluralin, and also the compound of the formula C.

Preferred herbicidal compositions for controlling broad-leaved weeds and grasses in crops of sunflowers resistant to protoporphyrinogen oxidase inhibitors comprise as co-herbicide b) a compound selected from the group consisting of metolachlor, (S)-metolachlor, pendimethalin, aclonifen, flurochloridon, prometryn, sethoxydim, fluazifop, quizalofop, clethodim, fenoxaprop(P-ethyl), terbutryn, acetochlor, glyphosate, glufosinate, sulfosate and trifluralin.

Preferred herbicide compositions for controlling broad-leaved weeds and grasses in crops of cereals resistant to protoporphyrinogen oxidase inhibitors comprise as co-herbicide b) a compound selected from the group consisting of triasulfuron, prosulfuron, clodinafop, terbutryne, amidosulfuron, bromoxynil, carfentrazone-ethyl, dicamba, diclofop-methyl, diflufenican, ethoxysulfuron, fenoxaprop(P-ethyl), fentrazamide, flazasulfuron, florasulam, fluazolate, flucarbazone, flufenacet, flupyrsulfuron-methyl sodium, flurtamone, iodosulfuron, isoproturon, chlortoluron, MCPA, MCPB, mecoprop (MCPP), chlorsulfuron, metsulfuron-methyl, sulfosulfuron, thifensulfuron-methyl, tribenuron-methyl, 2,4-D, 2,4-DB, 2,4-DP, bifenox, ethametsulfuron-methyl, flamprop-M, imazamethabenz-methyl, ioxynil, bromoxynil, metosulam, pyridate, quinmerac, tralkoxydim, fluoroglycofen-ethyl, methabenzthiazuron, ethalfluralin, pendimethalin, trifluralin, isoxaben, prosulfocarb, triallate, clopyralid, fluroxypyr, benazolin-ethyl, glyphosate, glufosinate, sulfosate and difenzoquat-metilsulfate.

Among these, preference is given to those compositions which comprise as co-herbicide b) a compound selected from the group consisting of triasulfuron, prosulfuron, clodinafop, amidosulfuron, diclofop-methyl, fenoxaprop(P-ethyl), flazasulfuron, flupyrsulfuron-methyl sodium, iodosulfuron, mecoprop (MCPP), chlorsulfuron, metsulfuron-methyl, sulfosulfuron and thifensulfuron-methyl. Advantageously, these compositions may comprise as additional component c) a safener of the quinoline type, in particular cloquintocet-mexyl (154).

Preferred herbicidal compositions for controlling broad-leaved weeds and grasses in crops of rice resistant to protoporphyrinogen oxidase inhibitors comprise as co-herbicide b) a compound selected from the group consisting of pretilachlor, cinosulfuron, triasulfuron, fenclorim, clodinafop, bensulfuron-methyl, imazosulfuron, pyrazosulfuron-ethyl, metsulfuron-methyl, azimsulfuron, halosulfuron-methyl, esprocarb, mefenacet, molinate, propanil, pyrazolate, cyhalofop-butyl, fenoxaprop(P-ethyl), bispyribac-sodium, pyriminobac-methyl, cafenstrole, oxadiargyl, oxadiazon, bromobutide, MY-100, dymron, NB 061, MK243, HW-52, glyphosate, glufosinate, sulfosate and AC 014, and also the compound of the formula D.

Preferred herbicidal compositions for controlling broad-leaved weeds and grasses in crops of sugar cane resistant to protoporphyrinogen oxidase inhibitors comprise as co-herbicide b) a compound selected from the group consisting of atrazine, ametryn, dicamba, terbutryn, prosulfuron, hexazinone, asulam, diuron, 2,4-D, halosulfuron-methyl, flazasulfuron, isoxaflutole, azafenidin, tebuthiuron, sulcotrione, pendimethalin, clomazone, metribuzin, thiazopyr, glyphosate, glufosinate, sulfosate and ethoxysulfuron, and also the compound of the formula C.

The following combinations of the compounds under a) with the co-herbicides under b) have been found to be very particularly effective synergistic compositions in crops of maize resistant to protoporphyrinogen oxidase inhibitors:
Acifluorfen + atrazine; acifluorfen + terbuthylazine; acifluorfen + (S)-metolachlor; acifluorfen + metolachlor; acifluorfen + compound of the formula A; acifluorfen + terbutryn; acifluorfen + simazine; acifluorfen + dimethenamid or (S)-dimethenamid; acifluorfen + flufenacet; acifluorfen + acetochlor; acifluorfen + alachlor; acifluorfen + isoxaflutole; acifluorfen + isoxachlortole; acifluorfen + mesotrione; acifluorfen + sulcotrione; acifluorfen + metosulam; acifluorfen + flumetsulam; acifluorfen + pendimethalin; acifluorfen + bromoxynil; acifluorfen + bentazone; acifluorfen + carfentrazone; acifluorfen + clomazone; acifluorfen + nicosulfuron; acifluorfen + rimsulfuron; acifluorfen + halosulfuron; acifluorfen + metribuzin; acifluorfen + flumiclorac; acifluorfen + prosulfuron; acifluorfen + primisulfuron; acifluorfen + dicamba; acifluorfen + fluthiacet; acifluorfen + pyridate; acifluorfen + compound of the formula B; acifluorfen + 2,4-D; acifluorfen + clopyralide; acifluorfen + diflufenzopyr; acifluorfen + fluroxypyr; acifluorfen + MCPA; acifluorfen + MCPB; acifluorfen + MCPP; acifluorfen + metobenzuron; acifluorfen + thifensulfuron; acifluorfen + aclonifen; acifluorfen + EPTC; acifluorfen + cyanazine; acifluorfen + glyphosate; acifluorfen + glufosinate; acifluorfen + sulfosate; aclonifen + atrazine; aclonifen + terbuthylazine; aclonifen + (S)-metolachlor; aclonifen + metolachlor; aclonifen + compound of the formula A; aclonifen + terbutryn; aclonifen + simazine; aclonifen + dimethenamid or (S)-dimethenamid; aclonifen + flufenacet; aclonifen + acetochlor; aclonifen + alachlor; aclonifen + isoxaflutole; aclonifen + isoxachlortole; aclonifen + mesotrione; aclonifen + sulcotrione; aclonifen + metosulam; aclonifen + flumetsulam; aclonifen + pendimethalin; aclonifen + bromoxynil; aclonifen + bentazone; aclonifen + carfentrazone; aclonifen + clomazone; aclonifen + nicosulfuron; aclonifen + rimsulfuron; aclonifen + halosulfuron; aclonifen + metribuzin; aclonifen + flumiclorac; aclonifen + prosulfuron; aclonifen + primisulfuron; aclonifen + dicamba; aclonifen + fluthiacet; aclonifen + pyridate; aclonifen + compound of the formula B; aclonifen + 2,4-D; aclonifen + clopyralide; aclonifen + diflufenzopyr; aclonifen + fluroxypyr; aclonifen + MCPA; aclonifen + MCPB; aclonifen + MCPP; aclonifen + metobenzuron; aclonifen + thifensulfuron; aclonifen + EPTC; aclonifen + cyanazine; aclonifen + glyphosate; aclonifen + glufosinate; aclonifen + sulfosate; bifenox + atrazine; bifenox + terbuthylazine; bifenox + (S)-metolachlor; bifenox + metolachlor; bifenox + compound of the formula A; bifenox + terbutryn; bifenox + simazine; bifenox + dimethenamid or (S)-dimethenamid; bifenox + flufenacet; bifenox + acetochlor; bifenox + alachlor; bifenox + isoxaflutole; bifenox + isoxachlortole; bifenox + mesotrione; bifenox + sulcotrione; bifenox + metosulam; bifenox + flumetsulam; bifenox + pendimethalin; bifenox + bromoxynil; bifenox + bentazone; bifenox + carfentrazone; bifenox + clomazone; bifenox + nicosulfuron; bifenox + rimsulfuron; bifenox + halosulfuron; bifenox + metribuzin; bifenox + flumiclorac; bifenox + prosulfuron; bifenox + primisulfuron; bifenox + dicamba; bifenox + fluthiacet; bifenox + pyridate; bifenox + compound of the formula B; bifenox + 2,4-D; bifenox + clopyralide; bifenox + diflufenzopyr; bifenox + fluroxypyr; bifenox + MCPA; bifenox + MCPB; bifenox + MCPP; bifenox + metobenzuron; bifenox + thifensulfuron; bifenox + aclonifen; bifenox + EPTC; bifenox + cyanazine; bifenox + glyphosate; bifenox + glufosinate; bifenox + sulfosate; chlornitrofen + atrazine; chlornitrofen + terbuthylazine; chlornitrofen + (S)-metolachlor; chlornitrofen + metolachlor; chlornitrofen + compound of the formula A; chlornitrofen + terbutryn; chlornitrofen + simazine; chlornitrofen + dimethenamid or (S)-dimethenamid; chlornitrofen + flufenacet; chlornitrofen + acetochlor; chlornitrofen + alachlor; chlornitrofen + isoxaflutole; chlornitrofen + isoxachlortole; chlornitrofen + mesotrione; chlornitrofen + sulcotrione; chlornitrofen + metosulam; chlornitrofen + flumetsulam; chlornitrofen + pendimethalin; chlornitrofen + bromoxynil; chlornitrofen + bentazone; chlornitrofen + carfentrazone; chlornitrofen + clomazone; chlornitrofen + nicosulfuron; chlornitrofen + rimsulfuron; chlornitrofen + halosulfuron; chlornitrofen + metribuzin; chlornitrofen + flumiclorac; chlornitrofen + prosulfuron; chlornitrofen + primisulfuron; chlornitrofen + dicamba; chlornitrofen + fluthiacet; chlornitrofen + pyridate; chlornitrofen + compound of the formula B; chlornitrofen + 2,4-D; chlornitrofen + dopyralide; chlornitrofen + diflufenzopyr; chlornitrofen + fluroxypyr; chlornitrofen + MCPA; chlornitrofen + MCPB; chlornitrofen + MCPP; chlornitrofen + metobenzuron; chlornitrofen + thifensulfuron; chlornitrofen + aclonifen; chlornitrofen + EPTC; chlornitrofen + cyanazine; chlornitrofen + glyphosate; chlornitrofen + glufosinate; chlornitrofen + sulfosate; ethoxyfen + atrazine; ethoxyfen + terbuthylazine; ethoxyfen + (S)-metolachlor; ethoxyfen + metolachlor; ethoxyfen + compound of the formula A; ethoxyfen + terbutryn; ethoxyfen + simazine; ethoxyfen + dimethenamid or (S)-dimethenamid; ethoxyfen + flufenacet; ethoxyfen + acetochlor; ethoxyfen + alachlor, ethoxyfen + isoxaflutole; ethoxyfen + isoxachlortole; ethoxyfen + mesotrione; ethoxyfen + sulcotrione; ethoxyfen + metosulam; ethoxyfen + flumetsulam; ethoxyfen + pendimethalin; ethoxyfen + bromoxynil; ethoxyfen + bentazone; ethoxyfen + carfentrazone; ethoxyfen + clomazone; ethoxyfen + nicosulfuron; ethoxyfen + rimsulfuron; ethoxyfen + halosulfuron; ethoxyfen + metribuzin; ethoxyfen + flumiclorac; ethoxyfen + prosulfuron; ethoxyfen + primisulfuron; ethoxyfen + dicamba; ethoxyfen + fluthiacet; ethoxyfen + pyridate; ethoxyfen + compound of the formula B; ethoxyfen + 2,4-D; ethoxyfen + clopyralide; ethoxyfen + diflufenzopyr; ethoxyfen + fluroxypyr; ethoxyfen + MCPA; ethoxyfen + MCPB; ethoxyfen + MCPP; ethoxyfen + metobenzuron; ethoxyfen + thifensulfuron; ethoxyfen + aclonifen; ethoxyfen + EPTC; ethoxyfen + cyanazine; ethoxyfen + glyphosate; ethoxyfen + glufosinate; ethoxyfen + sulfosate; fluoroglycofen + atrazine; fluoroglycofen + terbuthylazine; fluoroglycofen + (S)-metolachlor; fluoroglycofen + metolachlor; fluoroglycofen + compound of the formula A; fluoroglycofen + terbutryn; fluoroglycofen + simazine; fluoroglycofen + dimethenamid or (S)-dimethenamid; fluoroglycofen + flufenacet; fluoroglycofen + acetochlor; fluoroglycofen + alachlor; fluoroglycofen + isoxaflutole; fluoroglycofen + isoxachlortole; fluoroglycofen + mesotrione; fluoroglycofen + sulcotrione; fluoroglycofen + metosulam; fluoroglycofen + flumetsulam; fluoroglycofen + pendimethalin; fluoroglycofen + bromoxynil; fluoroglycofen + bentazone; fluoroglycofen + carfentrazone; fluoroglycofen + clomazone; fluoroglycofen + nicosulfuron; fluoroglycofen + rimsulfuron; fluoroglycofen + halosulfuron; fluoroglycofen + metribuzin; fluoroglycofen + flumiclorac; fluoroglycofen + prosulfuron; fluoroglycofen + primisutfuron; fluoroglycofen + dicamba; fluoroglycofen + fluthiacet; fluoroglycofen + pyridate; fluoroglycofen + compound of the formula B; fluoroglycofen + 2,4-D; fluoroglycofen + clopyralide; fluoroglycofen + diflufenzopyr; fluoroglycofen + fluroxypyr; fluoroglycofen + MCPA; fluoroglycofen + MCPB; fluoroglycofen + MCPP; fluoroglycofen + metobenzuron; fluoroglycofen + thifensulfuron; fluoroglycofen + aclonifen; fluoroglycofen + EPTC; fluoroglycofen + cyanazine; fluoroglycofen + glyphosate; fluoroglycofen + glufosinate; fluoroglycofen + sulfosate; fomesafen + atrazine; fomesafen + terbuthylazine; fomesafen + (S)-metolachlor; fomesafen + metolachlor; fomesafen + compound of the formula A; fomesafen + terbutryn; fomesafen + simazine; fomesafen + dimethenamid or (S)-dimethenamid; fomesafen + flufenacet; fomesafen + acetochlor; fomesafen + alachlor; fomesafen + isoxaflutole; fomesafen + isoxachlortole; fomesafen + mesotrione; fomesafen + sulcotrione; fomesafen + metosulam; fomesafen + flumetsulam; fomesafen + pendimethalin; fomesafen + bromoxynil; fomesafen + bentazone; fomesafen + carfentrazone; fomesafen + clomazone; fomesafen + nicosulfuron; fomesafen + rimsulfuron; fomesafen + halosulfuron; fomesafen + metribuzin; fomesafen + flumiclorac; fomesafen + prosulfuron; fomesafen + primisulfuron; fomesafen + dicamba; fomesafen + fluthiacet; fomesafen + pyridate; fomesafen + compound of the formula B; fomesafen + 2,4-D; fomesafen + clopyralide; fomesafen + diflufenzopyr; fomesafen + fluroxypyr; fomesafen + MCPA; fomesafen + MCPB; fomesafen + MCPP; fomesafen + metobenzuron; fomesafen + thifensulfuron; fomesafen + aclonifen; fomesafen + EPTC; fomesafen + cyanazine; fomesafen + glyphosate; fomesafen + glufosinate; fomesafen + sulfosate; lactofen + atrazine; lactofen + terbuthylazine; lactofen + (S)-metolachlor; lactofen + metolachlor; lactofen + compound of the formula A; lactofen + terbutryn; lactofen + simazine; lactofen + dimethenamid or (S)-dimethenamid; lactofen + flufenacet; lactofen + acetochlor; lactofen + alachlor; lactofen + isoxaflutole; lactofen + isoxachlortole; lactofen + mesotrione; lactofen + sulcotrione; lactofen + metosulam; lactofen + flumetsulam; lactofen + pendimethalin; lactofen + bromoxynil; lactofen + bentazone; lactofen + carfentrazone; lactofen + clomazone; lactofen + nicosulfuron; lactofen + rimsulfuron; lactofen + halosulfuron; lactofen + metribuzin; lactofen + flumiclorac; lactofen + prosulfuron; lactofen + primisulfuron; lactofen + dicamba; lactofen + fluthiacet; lactofen + pyridate; lactofen + compound of the formula B; lactofen + 2,4-D; lactofen + clopyralide; lactofen + diflufenzopyr; lactofen + fluroxypyr; lactofen + MCPA; lactofen + MCPB; lactofen + MCPP; lactofen + metobenzuron; lactofen + thifensulfuron; lactofen + aclonifen; lactofen + EPTC; lactofen + cyanazine; lactofen + glyphosate; lactofen + glufosinate; lactofen + sulfosate; oxyfluorfen + atrazine; oxyfluorfen + terbuthylazine; oxyfluorfen + (S)-metolachlor; oxyfluorfen + metolachlor; oxyfluorfen + compound of the formula A; oxyfluorfen + terbutryn; oxyfluorfen + simazine; oxyfluorfen + dimethenamid or (S)-dimethenamid; oxyfluorfen + flufenacet; oxyfluorfen + acetochlor; oxyfluorfen + alachlor; oxyfluorfen + isoxaflutole; oxyfluorfen + isoxachlortole; oxyfluorfen + mesotrione; oxyfluorfen + sulcotrione; oxyfluorfen + metosulam; oxyfluorfen + flumetsulam; oxyfluorfen + pendimethalin; oxyfluorfen + bromoxynil; oxyfluorfen + bentazone; oxyfluorfen + carfentrazone; oxyfluorfen + clomazone; oxyfluorfen + nicosulfuron; oxyfluorfen + rimsulfuron; oxyfluorfen + halosulfuron; oxyfluorfen + metribuzin; oxyfluorfen + flumiclorac; oxyfluorfen + prosulfuron; oxyfluorfen + primisulfuron; oxyfluorfen + dicamba; oxyfluorfen + fluthiacet; oxyfluorfen + pyridate; oxyfluorfen + compound of the formula B; oxyfluorfen + 2,4-D; oxyfluorfen + clopyralide; oxyfluorfen + diflufenzopyr; oxyfluorfen + fluroxypyr; oxyfluorfen + MCPA; oxyfluorfen + MCPB; oxyfluorfen + MCPP; oxyfluorfen + metobenzuron; oxyfluorfen + thifensulfuron; oxyfluorfen + aclonifen; oxyfluorfen + EPTC; oxyfluorfen + cyanazine; oxyfluorfen + glyphosate; oxyfluorfen + glufosinate; oxyfluorfen + sulfosate; azafenidin + atrazine; azafenidin + terbuthylazine; azafenidin + (S)-metolachlor; azafenidin + metolachlor; azafenidin + compound of the formula A; azafenidin + terbutryn; azafenidin + simazine; azafenidin + dimethenamid or (S)-dimethenamid; azafenidin + flufenacet; azafenidin + acetochlor; azafenidin + alachlor; azafenidin + isoxaflutole; azafenidin + isoxachlortole; azafenidin + mesotrione; azafenidin + sulcotrione; azafenidin + metosulam; azafenidin + flumetsulam; azafenidin + pendimethalin; azafenidin + bromoxynil; azafenidin + bentazone; azafenidin + carfentrazone; azafenidin + clomazone; azafenidin + nicosulfuron; azafenidin + rimsulfuron; azafenidin + halosulfuron; azafenidin + metribuzin; azafenidin + flumiclorac; azafenidin + prosulfuron; azafenidin + primisulfuron; azafenidin + dicamba; azafenidin + fluthiacet; azafenidin + pyridate; azafenidin + compound of the formula B; azafenidin + 2,4-D; azafenidin + clopyralide; azafenidin + diflufenzopyr; azafenidin + fluroxypyr; azafenidin + MCPA; azafenidin + MCPB; azafenidin + MCPP; azafenidin + metobenzuron; azafenidin + thifensulfuron; azafenidin + aclonifen; azafenidin + EPTC; azafenidin + cyanazine; azafenidin + glyphosate; azafenidin + glufosinate; azafenidin + sulfosate; carfentrazone-ethyl + atrazine; carfentrazone-ethyl + terbuthylazine; carfentrazone-ethyl + (S)-metolachior; carfentrazone-ethyl + metolachlor; carfentrazone-ethyl + compound of the formula A; carfentrazone-ethyl + terbutryn; carfentrazone-ethyl + simazine; carfentrazone-ethyl + dimethenamid or (S)-dimethenamid; carfentrazone-ethyl + flufenacet; carfentrazone-ethyl + acetochlor; carfentrazone-ethyl + alachlor; carfentrazone-ethyl + isoxaflutole; carfentrazone-ethyl + isoxachlortole; carfentrazone-ethyl + mesotrione; carfentrazone-ethyl + sulcotrione; carfentrazone-ethyl + metosulam; carfentrazone-ethyl + flumetsulam; carfentrazone-ethyl + pendimethalin; carfentrazone-ethyl + bromoxynil; carfentrazone-ethyl + bentazone; carfentrazone-ethyl + clomazone; carfentrazone-ethyl + nicosulfuron; carfentrazone-ethyl + rimsulfuron; carfentrazone-ethyl + halosulfuron; carfentrazone-ethyl + metribuzin; carfentrazone-ethyl + flumiclorac; carfentrazone-ethyl + prosulfuron; carfentrazone-ethyl + primisulfuron; carfentrazone-ethyl + dicamba; carfentrazone-ethyl + fluthiacet; carfentrazone-ethyl + pyridate; carfentrazone-ethyl + compound of the formula B; carfentrazone-ethyl + 2,4-D; carfentrazone-ethyl + clopyralide; carfentrazone-ethyl + diflufenzopyr; carfentrazone-ethyl + fluroxypyr; carfentrazone-ethyl + MCPA; carfentrazone-ethyl + MCPB; carfentrazone-ethyl + MCPP; carfentrazone-ethyl + metobenzuron; carfentrazone-ethyl + thifensulfuron; carfentrazone-ethyl + aclonifen; carfentrazone-ethyl + EPTC; carfentrazone-ethyl + cyanazine; carfentrazone-ethyl + glyphosate; carfentrazone-ethyl + glufosinate; carfentrazone-ethyl + sulfosate; compound of the formula A + atrazine; compound of the formula A + terbuthylazine; compound of the formula A + (S)-metolachlor; compound of the formula A + metolachlor; compound of the formula A + terbutryn; compound of the formula A + simazine; compound of the formula A + dimethenamid or (S)-dimethenamid; compound of the formula A + flufenacet; compound of the formula A + acetochlor; compound of the formula A + alachlor; compound of the formula A + isoxaflutole; compound of the formula A + isoxachlortole; compound of the formula A + mesotrione; compound of the formula A + sulcotrione; compound of the formula A + metosulam; compound of the formula A + flumetsulam; compound of the formula A + pendimethalin; compound of the formula A + bromoxynil; compound of the formula A + bentazone; compound of the formula A + carfentrazone; compound of the formula A + clomazone; compound of the formula A + nicosulfuron; compound of the formula A + rimsulfuron; compound of the formula A + halosulfuron; compound of the formula A + metribuzin; compound of the formula A + flumiclorac; compound of the formula A + prosulfuron; compound of the formula A + primisulfuron; compound of the formula A + dicamba; compound of the formula A + fluthiacet; compound of the formula A + pyridate; compound of the formula A + compound of the formula B; compound of the formula A + 2,4-D; compound of the formula A + clopyralide; compound of the formula A + diflufenzopyr; compound of the formula A + fluroxypyr; compound of the formula A + MCPA; compound of the formula A + MCPB; compound of the formula A + MCPP; compound of the formula A + metobenzuron; compound of the formula A + thifensulfuron; compound of the formula A + aclonifen; compound of the formula A + EPTC; compound of the formula A + cyanazine; compound of the formula A + glyphosate; compound of the formula A + glufosinate; compound of the formula A + sulfosate; cinidon-ethyl + atrazine; cinidon-ethyl + terbuthylazine; cinidon-ethyl + (S)-metolachlor; cinidon-ethyl + metolachlor; cinidon-ethyl + compound of the formula A; cinidon-ethyl + terbutryn; cinidon-ethyl + simazine; cinidon-ethyl + dimethenamid or (S)-dimethenamid; cinidon-ethyl + flufenacet; cinidon-ethyl + acetochlor; cinidon-ethyl + alachlor; cinidon-ethyl + isoxaflutole; cinidon-ethyl + isoxachlortole; cinidon-ethyl + mesotrione; cinidon-ethyl + sulcotrione; cinidon-ethyl + metosulam; cinidon-ethyl + flumetsulam; cinidon-ethyl + pendimethalin; cinidon-ethyl + bromoxynil; cinidon-ethyl + bentazone; cinidon-ethyl + carfentrazone; cinidon-ethyl + clomazone; cinidon-ethyl + nicosulfuron; cinidon-ethyl + rimsulfuron; cinidon-ethyl + halosulfuron; cinidon-ethyl + metribuzin; cinidon-ethyl + flumiclorac; cinidon-ethyl + prosulfuron; cinidon-ethyl + primisulfuron; cinidon-ethyl + dicamba; cinidon-ethyl + fluthiacet; cinidon-ethyl + pyridate; cinidon-ethyl + compound of the formula B; cinidon-ethyl + 2,4-D; cinidon-ethyl + clopyralide; cinidon-ethyl + diflufenzopyr; cinidon-ethyl + fluroxypyr; cinidon-ethyl + MCPA; cinidon-ethyl + MCPB; cinidon-ethyl + MCPP; cinidon-ethyl + metobenzuron; cinidon-ethyl + thifensulfuron; cinidon-ethyl + aclonifen; cinidon-ethyl + EPTC; cinidon-ethyl + cyanazine; cinidon-ethyl + glyphosate; cinidon-ethyl + glufosinate; cinidon-ethyl + sulfosate; flumiclorac-pentyl + atrazine; flumiclorac-pentyl + terbuthylazine; flumiclorac-pentyl + (S)-metolachlor; flumiclorac-pentyl + metolachlor; flumiclorac-pentyl + compound of the formula A; flumiclorac-pentyl + terbutryn; flumiclorac-pentyl + simazine; flumiclorac-pentyl + dimethenamid or (S)-dimethenamid; flumiclorac-pentyl + flufenacet; flumiclorac-pentyl + acetochlor; flumiclorac-pentyl + alachlor; flumiclorac-pentyl + isoxaflutole; flumiclorac-pentyl + isoxachlortole; flumiclorac-pentyl + mesotrione; flumiclorac-pentyl + sulcotrione; flumiclorac-pentyl + metosulam; flumiclorac-pentyl + flumetsulam; flumiclorac-pentyl + pendimethalin; flumiclorac-pentyl + bromoxynil; flumiclorac-pentyl + bentazone; flumiclorac-pentyl + carfentrazone; flumiclorac-pentyl + clomazone; flumiclorac-pentyl + nicosulfuron; flumiclorac-pentyl + rimsulfuron; flumiclorac-pentyl + halosulfuron; flumiclorac-pentyl + metribuzin; flumiclorac-pentyl + prosulfuron; flumiclorac-pentyl + primisulfuron; flumiclorac-pentyl + dicamba; flumiclorac-pentyl + fluthiacet; flumiclorac-pentyl + pyridate; flumiclorac-pentyl + compound of the formula B; flumiclorac-pentyl + 2,4-D; flumiclorac-pentyl + clopyralide; flumiclorac-pentyl + diflufenzopyr; flumiclorac-pentyl + fluroxypyr; flumiclorac-pentyl + MCPA; flumiclorac-pentyl + MCPB; flumiclorac-pentyl + MCPP; flumiclorac-pentyl + metobenzuron; flumiclorac-pentyl + thifensulfuron; flumiclorac-pentyl + aclonifen; flumiclorac-pentyl + EPTC; flumiclorac-pentyl + cyanazine; flumiclorac-pentyl + glyphosate; flumiclorac-pentyl + glufosinate; flumiclorac-pentyl + sulfosate; flumioxazin + atrazine; flumioxazin + terbuthylazine; flumioxazin + (S)-metolachlor; flumioxazin + metolachlor; flumioxazin + compound of the formula A; flumioxazin + terbutryn; flumioxazin + simazine; flumioxazin + dimethenamid or (S)-dimethenamid; flumioxazin + flufenacet; flumioxazin + acetochlor; flumioxazin + alachlor; flumioxazin + isoxaflutole; flumioxazin + isoxachlortole; flumioxazin + mesotrione; flumioxazin + sulcotrione; flumioxazin + metosulam; flumioxazin + flumetsulam; flumioxazin + pendimethalin; flumioxazin + bromoxynil; flumioxazin + bentazone; flumioxazin + carfentrazone; flumioxazin + clomazone; flumioxazin + nicosulfuron; flumioxazin + rimsulfuron; flumioxazin + halosulfuron; flumioxazin + metribuzin; flumioxazin + flumiclorac; flumioxazin + prosulfuron; flumioxazin + primisulfuron; flumioxazin + dicamba; flumioxazin + fluthiacet; flumioxazin + pyridate; flumioxazin + compound of the formula B; flumioxazin + 2,4-D; flumioxazin + clopyralide; flumioxazin + diflufenzopyr; flumioxazin + fluroxypyr, flumioxazin + MCPA; flumioxazin + MCPB; flumioxazin + MCPP; flumioxazin + metobenzuron; flumioxazin + thifensulfuron; flumioxazin + aclonifen; flumioxazin + EPTC; flumioxazin + cyanazine; flumioxazin + glyphosate; flumioxazin + glufosinate; flumioxazin + sulfosate; fluthiacet-methyl + atrazine; fluthiacet-methyl + terbuthylazine; fluthiacet-methyl + (S)-metolachlor; fluthiacet-methyl + metolachlor; fluthiacet-methyl + compound of the formula A; fluthiacet-methyl + terbutryn; fluthiacet-methyl + simazine; fluthiacet-methyl + dimethenamid or (S)-dimethenamid; fluthiacet-methyl + flufenacet; fluthiacet-methyl + acetochlor; fluthiacet-methyl + alachlor; fluthiacet-methyl + isoxaflutole; fluthiacet-methyl + isoxachlortole; fluthiacet-methyl + mesotrione; fluthiacet-methyl + sulcotrione; fluthiacet-methyl + metosulam; fluthiacet-methyl + flumetsulam; fluthiacet-methyl + pendimethalin; fluthiacet-methyl + bromoxynil; fluthiacet-methyl + bentazone; fluthiacet-methyl + carfentrazone; fluthiacet-methyl + clomazone; fluthiacet-methyl + nicosulfuron; fluthiacet-methyl + rimsulfuron; fluthiacet-methyl + halosulfuron; fluthiacet-methyl + metribuzin; fluthiacet-methyl + flumiclorac; fluthiacet-methyl + prosulfuron; fluthiacet-methyl + primisulfuron; fluthiacet-methyl + dicamba; fluthiacet-methyl + pyridate; fluthiacet-methyl + compound of the formula B; fluthiacet-methyl + 2,4-D; fluthiacet-methyl + clopyralide; fluthiacet-methyl + diflufenzopyr; fluthiacet-methyl + fluroxypyr; fluthiacet-methyl + MCPA; fluthiacet-methyl + MCPB; fluthiacet-methyl + MCPP; fluthiacet-methyl + metobenzuron; fluthiacet-methyl + thifensulfuron; fluthiacet-methyl + aclonifen; fluthiacet-methyl + EPTC; fluthiacet-methyl + cyanazine; fluthiacet-methyl + glyphosate; fluthiacet-methyl + glufosinate; fluthiacet-methyl + sulfosate; oxadiargyl + atrazine; oxadiargyl + terbuthylazine; oxadiargyl + (S)-metolachlor; oxadiargyl + metolachlor; oxadiargyl + compound of the formula A; oxadiargyl + terbutryn; oxadiargyl + simazine; oxadiargyl + dimethenamid or (S)-dimethenamid; oxadiargyl + flufenacet; oxadiargyl + acetochlor; oxadiargyl + alachlor; oxadiargyl + isoxaflutole; oxadiargyl + ioxachlortole; oxadiargyl + mesotrione; oxadiargyl + sulcotrione; oxadiargyl + metosulam; oxadiargyl + flumetsulam; oxadiargyl + pendimethalin; oxadiargyl + bromoxynil; oxadiargyl + bentazone; oxadiargyl + carfentrazone; oxadiargyl + clomazone; oxadiargyl + nicosulfuron; oxadiargyl + rimsulfuron; oxadiargyl + halosulfuron; oxadiargyl + metribuzin; oxadiargyl + flumiclorac; oxadiargyl + prosulfuron; oxadiargyl + primisulfuron; oxadiargyl + dicamba; oxadiargyl + fluthiacet; oxadiargyl + pyridate; oxadiargyl + compound of the formula B; oxadiargyl + 2,4-D; oxadiargyl + clopyralide; oxadiargyl + diflufenzopyr; oxadiargyl + fluroxypyr; oxadiargyl + MCPA; oxadiargyl + MCPB; oxadiargyl + MCPP; oxadiargyl + metobenzuron; oxadiargyl + thifensulfuron; oxadiargyl + aclonifen; oxadiargyl + EPTC; oxadiargyl + cyanazine; oxadiargyl + glyphosate; oxadiargyl + glufosinate; oxadiargyl + sulfosate; oxadiazon + atrazine; oxadiazon + terbuthylazine; oxadiazon + (S)-metolachlor; oxadiazon + metolachlor; oxadiazon + compound of the formula A; oxadiazon + terbutryn; oxadiazon + simazine; oxadiazon + dimethenamid or (S)-dimethenamid; oxadiazon + flufenacet; oxadiazon + acetochlor; oxadiazon + alachlor; oxadiazon + isoxaflutole; oxadiazon + isoxachlortole; oxadiazon + mesotrione; oxadiazon + sulcotrione; oxadiazon + metosulam; oxadiazon + flumetsulam; oxadiazon + pendimethalin; oxadiazon + bromoxynil; oxadiazon + bentazone; oxadiazon + carfentrazone; oxadiazon + clornazone; oxadiazon + nicosulfuron; oxadiazon + rimsulfuron; oxadiazon + halosulfuron; oxadiazon + metribuzin; oxadiazon + flumiclorac; oxadiazon + prosulfuron; oxadiazon + primisulfuron; oxadiazon + dicamba; oxadiazon + fluthiacet; oxadiazon + pyridate; oxadiazon + compound of the formula B; oxadiazon + 2,4-D; oxadiazon + clopyralide; oxadiazon + diflufenzopyr; oxadiazon + fluroxypyr; oxadiazon + MCPA; oxadiazon + MCPB; oxadiazon + MCPP; oxadiazon + metobenzuron; oxadiazon + thifensulfuron; oxadiazon + aclonifen; oxadiazon + EPTC; oxadiazon + cyanazine; oxadiazon + glyphosate; oxadiazon + glufosinate; oxadiazon + sulfosate; pentoxazone + atrazine; pentoxazone + terbuthylazine; pentoxazone + (S)-metolachlor; pentoxazone + metolachlor; pentoxazone + compound of the formula A; pentoxazone + terbutryn; pentoxazone + simazine; pentoxazone + dimethenamid or (S)-dimethenamid; pentoxazone + flufenacet; pentoxazone + acetochlor; pentoxazone + alachlor; pentoxazone + isoxaflutole; pentoxazone + isoxachlortole; pentoxazone + mesotrione; pentoxazone + sulcotrione; pentoxazone + metosulam; pentoxazone + flumetsulam; pentoxazone + pendimethalin; pentoxazone + bromoxynil; pentoxazone + bentazone; pentoxazone + carfentrazone; pentoxazone + clomazone; pentoxazone + nicosulfuron; pentoxazone + rimsulfuron; pentoxazone + halosulfuron; pentoxazone + metribuzin; pentoxazone + flumiclorac; pentoxazone + prosulfuron; pentoxazone + primisulfuron; pentoxazone + dicamba; pentoxazone + fluthiacet; pentoxazone + pyridate; pentoxazone + compound of the formula B; pentoxazone + 2,4-D; pentoxazone + clopyralide; pentoxazone + diflufenzopyr; pentoxazone + fluroxypyr; pentoxazone + MCPA; pentoxazone + MCPB; pentoxazone + MCPP; pentoxazone + metobenzuron; pentoxazone + thifensulfuron; pentoxazone + aclonifen; pentoxazone + EPTC; pentoxazone + cyanazine; pentoxazone + glyphosate; pentoxazone + glufosinate; pentoxazone + sulfosate; sulfentrazone + atrazine; sulfentrazone + terbuthylazine; sulfentrazone + (S)-metolachlor; sulfentrazone + metolachlor; sulfentrazone + compound of the formula A; sulfentrazone + terbutryn; sulfentrazone + simazine; sulfentrazone + dimethenamid or (S)-dimethenamid; sulfentrazone + flufenacet; sulfentrazone + acetochlor; sulfentrazone + alachlor; sulfentrazone + isoxaflutole; sulfentrazone + isoxachlortole; sulfentrazone + mesotrione; sulfentrazone + sulcotrione; sulfentrazone + metosulam; sulfentrazone + flumetsulam; sulfentrazone + pendimethalin; sulfentrazone + bromoxynil; sulfentrazone + bentazone; sulfentrazone + carfentrazone; sulfentrazone + clomazone; sulfentrazone + nicosulfuron; sulfentrazone + rimsulfuron; sulfentrazone + halosulfuron; sulfentrazone + metribuzin; sulfentrazone + flumiclorac; sulfentrazone + prosulfuron; sulfentrazone + primisulfuron; sulfentrazone + dicamba; sulfentrazone + fluthiacet; sulfentrazone + pyridate; sulfentrazone + compound of the formula B; sulfentrazone + 2,4-D; sulfentrazone + clopyralide; sulfentrazone + diflufenzopyr; sulfentrazone + fluroxypyr; sulfentrazone + MCPA; sulfentrazone + MCPB; sulfentrazone + MCPP; sulfentrazone + metobenzuron; sulfentrazone + thifensulfuron; sulfentrazone + aclonifen; sulfentrazone + EPTC; sulfentrazone + cyanazine; sulfentrazone + glyphosate; sulfentrazone + glufosinate; sulfentrazone + sulfosate; fluazolate + atrazine; fluazolate + terbuthylazine; fluazolate + (S)-metolachlor; fluazolate + metolachlor; fluazolate + compound of the formula A; fluazolate + terbutryn; fluazolate + simazine; fluazolate + dimethenamid or (S)-dimethenamid; fluazolate + flufenacet; fluazolate + acetochlor; fluazolate + alachlor; fluazolate + isoxaflutole; fluazolate + isoxachlortole; fluazolate + mesotrione; fluazolate + sulcotrione; fluazolate + metosulam; fluazolate + flumetsulam; fluazolate + pendimethalin; fluazolate + bromoxynil; fluazolate + bentazone; fluazolate + carfentrazone; fluazolate + clomazone; fluazolate + nicosulfuron; fluazolate + rimsulfuron; fluazolate + halosulfuron; fluazolate + metribuzin; fluazolate + flumiclorac; fluazolate + prosulfuron; fluazolate + primisulfuron; fluazolate + dicamba; fluazolate + fluthiacet; fluazolate + pyridate; fluazolate + compound of the formula B; fluazolate + 2,4-D; fluazolate + clopyralide; fluazolate + diflufenzopyr; fluazolate + fluroxypyr; fluazolate + MCPA; fluazolate + MCPB; fluazolate + MCPP; fluazolate + metobenzuron; fluazolate + thifensulfuron; fluazolate + aclonifen; fluazolate + EPTC; fluazolate + cyanazine; fluazolate + glyphosate; fluazolate + glufosinate; fluazolate + sulfosate; pyraflufen-ethyl + atrazine; pyraflufen-ethyl + terbuthylazine; pyraflufen-ethyl + (S)-metolachlor; pyraflufen-ethyl + metolachlor; pyraflufen-ethyl + compound of the formula A; pyraflufen-ethyl + terbutryn; pyraflufen-ethyl + simazine; pyraflufen-ethyl + dimethenamid or (S)-dimethenamid; pyraflufen-ethyl + flufenacet; pyraflufen-ethyl + acetochlor; pyraflufen-ethyl + alachlor; pyraflufen-ethyl + isoxaflutole; pyraflufen-ethyl + isoxachlortole; pyraflufen-ethyl + mesotrione; pyraflufen-ethyl + sulcotrione; pyraflufen-ethyl + metosulam; pyraflufen-ethyl + flumetsulam; pyraflufen-ethyl + pendimethalin; pyraflufen-ethyl + bromoxynil; pyraflufen-ethyl + bentazone; pyraflufen-ethyl + carfentrazone; pyraflufen-ethyl + clomazone; pyraflufen-ethyl + nicosulfuron; pyraflufen-ethyl + rimsulfuron; pyraflufen-ethyl + halosulfuron; pyraflufen-ethyl + metribuzin; pyraflufen-ethyl + flumiclorac; pyraflufen-ethyl + prosulfuron; pyraflufen-ethyl + primisulfuron; pyraflufen-ethyl + dicamba; pyraflufen-ethyl + fluthiacet; pyraflufen-ethyl + pyridate; pyraflufen-ethyl + compound of the formula B; pyraflufen-ethyl + 2,4-D; pyraflufen-ethyl + clopyralide; pyraflufen-ethyl + diflufenzopyr; pyraflufen-ethyl + fluroxypyr; pyraflufen-ethyl + MCPA; pyraflufen-ethyl + MCPB; pyraflufen-ethyl + MCPP; pyraflufen-ethyl + metobenzuron; pyraflufen-ethyl + thifensulfuron; pyraflufen-ethyl + aclonifen; pyraflufen-ethyl + EPTC; pyraflufen-ethyl + cyanazine; pyraflufen-ethyl + glyphosate; pyraflufen-ethyl + glufosinate; pyraflufen-ethyl + sulfosate; flumipropyn + atrazine; flumipropyn + terbuthylazine; flumipropyn + (S)-metolachlor; flumipropyn + metolachlor; flumipropyn + compound of the formula A; flumipropyn + terbutryn; flumipropyn + simazine; flumipropyn + dimethenamid or (S)-dimethenamid; flumipropyn + flufenacet; flumipropyn + acetochlor; flumipropyn + alachlor; flumipropyn + isoxaflutole; flumipropyn + isoxachlortole; flumipropyn + mesotrione; flumipropyn + sulcotrione; flumipropyn + metosulam; flumipropyn + flumetsulam; flumipropyn + pendimethalin; flumipropyn + bromoxynil; flumipropyn + bentazone; flumipropyn + carfentrazone; flumipropyn + clomazone; flumipropyn + nicosulfuron; flumipropyn + rimsulfuron; flumipropyn + halosulfuron; flumipropyn + metribuzin; flumipropyn + flumiclorac; flumipropyn + prosulfuron; flumipropyn + primisulfuron; flumipropyn + dicamba; flumipropyn + fluthiacet; flumipropyn + pyridate; flumipropyn + compound of the formula B; flumipropyn + 2,4-D; flumipropyn + clopyralide; flumipropyn + diflufenzopyr; flumipropyn + fluroxypyr; flumipropyn + MCPA; flumipropyn + MCPB; flumipropyn + MCPP; flumipropyn + metobenzuron; flumipropyn + thifensulfuron; flumipropyn + aclonifen; flumipropyn + EPTC; flumipropyn + cyanazine; flumipropyn + glyphosate; flumipropyn + glufosinate; flumipropyn + sulfosate; flupropacil + atrazine; flupropacil + terbuthylazine; flupropacil + (S)-metolachlor; flupropacil + metolachlor; flupropacil + compound of the formula A; flupropacil + terbutryn; flupropacil + simazine; flupropacil + dimethenamid or (S)-dimethenamid; flupropacil + flufenacet; flupropacil + acetochlor; flupropacil + alachlor; flupropacil + isoxaflutole; flupropacil + isoxachlortole; flupropacil + mesotrione; flupropacil + sulcotrione; flupropacil + metosulam; flupropacil + flumetsulam; flupropacil + pendimethalin; flupropacil + bromoxynil; flupropacil + bentazone; flupropacil + carfentrazone; flupropacil + clomazone; flupropacil + nicosulfuron; flupropacil + rimsulfuron; flupropacil + halosulfuron; flupropacil + metribuzin; flupropacil + flumiclorac; flupropacil + prosulfuron; flupropacil + primisulfuron; flupropacil + dicamba; flupropacil + fluthiacet; flupropacil + pyridate; flupropacil + compound of the formula B; flupropacil + 2,4-D; flupropacil + clopyralide; flupropacil + diflufenzopyr; flupropacil + fluroxypyr; flupropacil + MCPA; flupropacil + MCPB; flupropacil + MCPP; flupropacil + metobenzuron; flupropacil + thifensulfuron; flupropacil + aclonifen; flupropacil + EPTC; flupropacil + cyanazine; flupropacil + glyphosate; flupropacil + glufosinate; flupropacil + sulfosate; nipyraclofen + atrazine; nipyraclofen + terbuthylazine; nipyraclofen + (S)-metolachlor; nipyraclofen + metolachlor; nipyraclofen + compound of the formula A; nipyraclofen + terbutryn; nipyraclofen + simazine; nipyraclofen + dimethenamid or (S)-dimethenamid; nipyraclofen + flufenacet; nipyraclofen + acetochlor; nipyraclofen + alachlor; nipyraclofen + isoxaflutole; nipyraclofen + isoxachlortole; nipyraclofen + mesotrione; nipyraclofen + sulcotrione; nipyraclofen + metosulam; nipyraclofen + flumetsulam; nipyraclofen + pendimethalin; nipyraclofen + bromoxynil; nipyraclofen +bentazone; nipyraclofen + carfentrazone; nipyraclofen + clomazone; nipyraclofen + nicosulfuron; nipyraclofen + rimsulfuron; nipyraclofen + halosulfuron; nipyraclofen + metribuzin; nipyraclofen + flumiclorac; nipyraclofen + prosulfuron; nipyraclofen + primisulfuron; nipyraclofen + dicamba; nipyraclofen + fluthiacet; nipyraclofen + pyridate; nipyraclofen + compound of the formula B; nipyraclofen + 2,4-D; nipyraclofen + clopyralide; nipyraclofen + diflufenzopyr; nipyraclofen + fluroxypyr; nipyraclofen + MCPA; nipyraclofen + MCPB; nipyraclofen + MCPP; nipyraclofen + metobenzuron; nipyraclofen + thifensulfuron; nipyraclofen + aclonifen; nipyraclofen + EPTC; nipyraclofen + cyanazine; nipyraclofen + glyphosate; nipyraclofen + glufosinate; nipyraclofen + sulfosate; benzfendizone + atrazine; benzfendizone + terbuthylazine; benzfendizone + (S)-metolachlor; benzfendizone + metolachlor; benzfendizone + compound of the formula A; benzfendizone + terbutryn; benzfendizone + simazine; benzfendizone + dimethenamid or (S)-dimethenamid; benzfendizone + flufenacet; benzfendizone + acetochlor; benzfendizone + alachlor; benzfendizone + isoxaflutole; benzfendizone + isoxachlortole; benzfendizone + mesotrione; benzfendizone + sulcotrione; benzfendizone + metosulam; benzfendizone + flumetsulam; benzfendizone + pendimethalin; benzfendizone + bromoxynil; benzfendizone + bentazone; benzfendizone + carfentrazone; benzfendizone + clomazone; benzfendizone + nicosulfuron; benzfendizone + rimsulfuron; benzfendizone + halosulfuron; benzfendizone + metribuzin; benzfendizone + flumiclorac; benzfendizone + prosulfuron; benzfendizone + primisulfuron; benzfendizone + dicamba; benzfendizone + fluthiacet; benzfendizone + pyridate; benzfendizone + compound of the formula B; benzfendizone + 2,4-D; benzfendizone + clopyralide; benzfendizone + diflufenzopyr; benzfendizone + fluroxypyr; benzfendizone + MCPA; benzfendizone + MCPB; benzfendizone + MCPP; benzfendizone + metobenzuron; benzfendizone + thifensulfuron; benzfendizone + aclonifen; benzfendizone + EPTC; benzfendizone + cyanazine; benzfendizone + glyphosate; benzfendizone + glufosinate; benzfendizone + sulfosate; thidiazimin + atrazine; thidiazimin + terbuthylazine; thidiazimin + (S)-metolachlor; thidiazimin + metolachlor; thidiazimin + compound of the formula A; thidiazimin + terbutryn; thidiazimin + simazine; thidiazimin + dimethenamid or (S)-dimethenamid; thidiazimin + flufenacet; thidiazimin + acetochlor; thidiazimin + alachlor; thidiazimin + isoxaflutole; thidiazimin + isoxachlortole; thidiazimin + mesotrione; thidiazimin + sulcotrione; thidiazimin + metosulam; thidiazimin + flumetsulam; thidiazimin + pendimethalin; thidiazimin + bromoxynil; thidiazimin + bentazone; thidiazimin + carfentrazone; thidiazimin + clomazone; thidiazimin + nicosulfuron; thidiazimin + rimsulfuron; thidiazimin + halosulfuron; thidiazimin + metribuzin; thidiazimin + flumiclorac; thidiazimin + prosulfuron; thidiazimin + primisulfuron; thidiazimin + dicamba; thidiazimin + fluthiacet; thidiazimin + pyridate; thidiazimin + compound of the formula B; thidiazimin + 2,4-D; thidiazimin + clopyralide; thidiazimin + diflufenzopyr; thidiazimin + fluroxypyr; thidiazimin + MCPA; thidiazimin + MCPB; thidiazimin + MCPP; thidiazimin + metobenzuron; thidiazimin + thifensulfuron; thidiazimin + aclonifen; thidiazimin + EPTC; thidiazimin + cyanazine; thidiazimin + glyphosate; thidiazimin + glufosinate; and thidiazimin + sulfosate.

The following combinations of the compounds under a) with the co-herbicides under b) have been found to be very particularly effective synergistic compositions in crops of sugar beet resistant to protoporphyrinogen oxidase inhibitors:
acifluorfen + metolachlor; acifluorfen + (S)-metolachlor; acifluorfen + propaquizafop; acifluorfen + metamitron; acifluorfen + pyramin; acifluorfen + phenmedipham; acifluorfen + desmedipham; acifluorfen + ethofumesate; acifluorfen + triasulfuron; acifluorfen + chloridazon; acifluorfen + lenacil; acifluorfen + triallate; acifluorfen + fluazifop; acifluorfen + sethoxydim; acifluorfen + quizalofop; acifluorfen + clethodim; acifluorfen + glyphosate; acifluorfen + glufosinate; acifluorfen + sulfosate; aclonifen + metolachlor; aclonifen + (S)-metolachlor; aclonifen + propaquizafop; aclonifen + metamitron; aclonifen + pyramin; aclonifen + phenmedipham; aclonifen + desmedipham; aclonifen + ethofumesate; aclonifen + triasulfuron; aclonifen + chloridazon; aclonifen + lenacil; aclonifen + triallate; aclonifen + fluazifop; aclonifen + sethoxydim; aclonifen + quizalofop; aclonifen + clethodim; aclonifen + glyphosate; aclonifen + glufosinate; aclonifen + sulfosate; bifenox + metolachlor; bifenox + (S)-metolachlor; bifenox + propaquizafop; bifenox + metamitron; bifenox + pyramin; bifenox + phenmedipham; bifenox + desmedipham; bifenox + ethofumesate; bifenox + triasulfuron; bifenox + chloridazon; bifenox + lenacil; bifenox + triallate; bifenox + fluazifop; bifenox + sethoxydim; bifenox + quizalofop; bifenox + clethodim; bifenox + glyphosate; bifenox + glufosinate; bifenox + sulfosate; chlornitrofen + metolachlor; chlornitrofen + (S)-metolachlor; chlornitrofen + propaquizafop; chlornitrofen + metamitron; chlornitrofen + pyramin; chlornitrofen + phenmedipham; chlornitrofen + desmedipham; chlornitrofen + ethofumesate; chlornitrofen + triasulfuron; chlornitrofen + chloridazon; chlornitrofen + lenacil; chlornitrofen + triallate; chlornitrofen + fluazifop; chlornitrofen + sethoxydim; chlornitrofen + quizalofop; chlornitrofen + clethodim; chlornitrofen + glyphosate; chlornitrofen + glufosinate; chlornitrofen + sulfosate; ethoxyfen + metolachlor; ethoxyfen + (S)-metolachlor; ethoxyfen + propaquizafop; ethoxyfen + metamitron; ethoxyfen + pyramin; ethoxyfen + phenmedipham; ethoxyfen + desmedipham; ethoxyfen + ethofumesate; ethoxyfen + triasulfuron; ethoxyfen + chloridazon; ethoxyfen + lenacil; ethoxyfen + triallate; ethoxyfen + fluazifop; ethoxyfen + sethoxydim; ehoxyfen + quizalofop; ethoxyfen + clethodim; ethoxyfen + glyphosate; ethoxyfen + glufosinate; ethoxyfen + sulfosate; fluoroglycofen + metolachlor; fluoroglycofen + (S)-metolachlor; fluoroglycofen + propaquizafop; fluoroglycofen + metamitron; fluoroglycofen + pyramin; fluoroglycofen + phenmedipham; fluoroglycofen + desmedipham; fluoroglycofen + ethofumesate; fluoroglycofen + triasulfuron; fluoroglycofen + chloridazon; fluoroglycofen + lenacil; fluoroglycofen + triallate; fluoroglycofen + fluazifop; fluoroglycofen + sethoxydim; fluoroglycofen + quizalofop; fluoroglycofen + clethodim; fluoroglycofen + glyphosate; fluoroglycofen + glufosinate; fluoroglycofen + sulfosate; fomesafen + metolachlor; fomesafen + (S)-metolachlor; fomesafen + propaquizafop; fomesafen + metamitron; fomesafen + pyramin; fomesafen + phenmedipham; fomesafen + desmedipham; fomesafen + ethofumesate; fomesafen + triasulfuron; fomesafen + chloridazon; fomesafen + lenacil; fomesafen + triallate; fomesafen + fluazifop; fomesafen + sethoxydim; fomesafen + quizalofop; fomesafen + clethodim; fomesafen + glyphosate; fomesafen + glufosinate; fomesafen + sulfosate; lactofen + metolachlor; lactofen + (S)-metolachlor; lactofen + propaquizafop; lactofen + metamitron; lactofen + pyramin; lactofen + phenmedipham; lactofen + desmedipham; lactofen + ethofumesate; lactofen + triasulfuron; lactofen + chloridazon; lactofen + lenacil; lactofen + triallate; lactofen + fluazifop; lactofen + sethoxydim; lactofen + quizalofop; lactofen + clethodim; lactofen + glyphosate; lactofen + glufosinate; lactofen + sulfosate; oxyfluorfen + metolachlor; oxyfluorfen + (S)-metolachlor; oxyfluorfen + propaquizafop; oxyfluorfen + metamitron; oxyfluorfen + pyramin; oxyfluorfen + phenmedipham; oxyfluorfen + desmedipham; oxyfluorfen + ethofumesate; oxyfluorfen + triasulfuron; oxyfluorfen + chloridazon; oxyfluorfen + lenacil; oxyfluorfen + triallate; oxyfluorfen + fluazifop; oxyfluorfen + sethoxydim; oxyfluorfen +quizalofop; oxyfluorfen + clethodim; oxyfluorfen + glyphosate; oxyfluorfen + glufosinate; oxyfluorfen + sulfosate; azafenidin + metolachlor; azafenidin + (S)-metolachlor; azafenidin + propaquizafop; azafenidin + metamitron; azafenidin + pyramin; azafenidin + phenmedipham; azafenidin + desmedipham; azafenidin + ethofumesate; azafenidin + triasulfuron; azafenidin + chloridazon; azafenidin + lenacil; azafenidin + triallate; azafenidin + fluazifop; azafenidin + sethoxydim; azafenidin + quizalofop; azafenidin + clethodim; azafenidin + glyphosate; azafenidin + glufosinate; azafenidin + sulfosate; carfentrazone-ethyl + metolachlor; carfentrazone-ethyl + (S)-metolachlor; carfentrazone-ethyl + propaquizafop; carfentrazone-ethyl + metamitron; carfentrazone-ethyl + pyramin; carfentrazone-ethyl + phenmedipham; carfentrazone-ethyl + desmedipham; carfentrazone-ethyl + ethofumesate; carfentrazone-ethyl + triasulfuron; carfentrazone-ethyl + chloridazon; carfentrazone-ethyl + lenacil; carfentrazone-ethyl + triallate; carfentrazone-ethyl + fluazifop; carfentrazone-ethyt + sethoxydim; carfentrazone-ethyl + quizalofop; carfentrazone-ethyl + clethodim; carfentrazone-ethyl + glyphosate; carfentrazone-ethyl + glufosinate; carfentrazone-ethyl + sulfosate; compound of the formula A + metolachlor; compound of the formula A + (S)-metolachlor; compound of the formula A + propaquizafop; compound of the formula A + metamitron; compound of the formula A + pyramin; compound of the formula A + phenmedipham; compound of the formula A + desmedipham; compound of the formula A + ethofumesate; compound of the formula A + triasulfuron; compound of the formula A + chloridazon; compound of the formula A + lenacil; compound of the formula A + triallate; compound of the formula A + fluazifop; compound of the formula A + sethoxydim; compound of the formula A + quizalofop; compound of the formula A + clethodim; compound of the formula A + glyphosate; compound of the formula A + glufosinate; compound of the formula A + sulfosate; cinidon-ethyl + metolachlor; cinidon-ethyl + (S)-metolachlor; cinidon-ethyl + propaquizafop; cinidon-ethyl + metamitron; cinidon-ethyl + pyramin; cinidon-ethyl + phenmedipham; cinidon-ethyl + desmedipham; cinidon-ethyl + ethofumesate; cinidon-ethyl + triasulfuron; cinidon-ethyl + chloridazon; cinidon-ethyl + lenacil; cinidon-ethyl + triallate; cinidon-ethyl + fluazifop; cinidon-ethyl + sethoxydim; cinidon-ethyl + quizalofop; cinidon-ethyl + clethodim; cinidon-ethyl + glyphosate; cinidon-ethyl + glufosinate; cinidon-ethyl + sulfosate; flumiclorac-pentyl + metolachlor; flumiclorac-pentyl + (S)-metolachlor; flumiclorac-pentyl + Propaquizafop; flumiclorac-pentyl + metamitron; flumiclorac-pentyl + pyramin; flumiclorac-pentyl + phenmedipham; flumiclorac-pentyl + desmedipham; flumiclorac-pentyl + ethofumesate; flumiclorac-pentyl + triasulfuron; flumiclorac-pentyl + chloridazon; flumiclorac-pentyl + lenacil; flumiclorac-pentyl + triallate; flumiclorac-pentyl + fluazifop; flumiclorac-pentyl + sethoxydim; flumiclorac-pentyl + quizalofop; flumiclorac-pentyl + clethodim; flumiclorac-pentyl + glyphosate; flumiclorac-pentyl + glufosinate; flumiclorac-pentyl + sulfosate; flumioxazin + metolachlor; flumioxazin + (S)-metolachlor; flumioxazin + propaquizafop; flumioxazin + metamitron; flumioxazin + pyramin; flumioxazin + phenmedipham; flumioxazin + desmedipham; flumioxazin + ethofumesate; flumioxazin + triasulfuron; flumioxazin + chloridazon; flumioxazin + lenacil; flumioxazin + triallate; flumioxazin + fluazifop; flumioxazin + sethoxydim; flumioxazin + quizalofop; flumioxazin + clethodim; flumioxazin + glyphosate; flumioxazin + glufosinate; flumioxazin + sulfosate; fluthiacet-methyl + metolachlor; fluthiacet-methyl + (S)-metolachlor; fluthiacet-methyl + propaquizafop; fluthiacet-methyl + metamitron; fluthiacet-methyl + pyramin; fluthiacet-methyl + phenmedipham; fluthiacet-methyl + desmedipham; fluthiacet-methyl + ethofumesate; fluthiacet-methyl + triasulfuron; fluthiacet-methyl + chloridazon; fluthiacet-methyl + lenacil; fluthiacet-methyl + triallate; fluthiacet-methyl + fluazifop; fluthiacet-methyl + sethoxydim; fluthiacet-methyl + quizalofop; fluthiacet-methyl + clethodim; fluthiacet-methyl + glyphosate; fluthiacet-methyl + glufosinate; fluthiacet-methyl + sulfosate; oxadiargyl + metolachlor; oxadiargyl + (S)-metolachlor; oxadiargyl + propaquizafop; oxadiargyl + metamitron; oxadiargyl + pyramin; oxadiargyl + phenmedipham; oxadiargyl + desmedipham; oxadiargyl + ethofumesate; oxadiargyl + triasulfuron; oxadiargyl + chloridazon; oxadiargyl + lenacil; oxadiargyl + triallate; oxadiargyl + fluazifop; oxadiargyl + sethoxydim; oxadiargyl + quizalofop; oxadiargyl + clethodim; oxadiargyl + glyphosate; oxadiargyl + glufosinate; oxadiargyl + sulfosate; oxadiazon + metolachlor, oxadiazon + (S)-metolachlor; oxadiazon + propaquizafop; oxadiazon + metamitron; oxadiazon + pyramin; oxadiazon + phenmedipham; oxadiazon + desmedipham; oxadiazon + ethofumesate; oxadiazon + triasulfuron; oxadiazon + chloridazon; oxadiazon + lenacil; oxadiazon + triallate; oxadiazon + fluazifop; oxadiazon + sethoxydim; oxadiazon + quizalofop; oxadiazon + clethodim; oxadiazon + glyphosate; oxadiazon + glufosinate; oxadiazon + sulfosate; pentoxazone + metolachlor; pentoxazone + (S)-metolachlor; pentoxazone + propaquizafop; pentoxazone + metamitron; pentoxazone + pyramin; pentoxazone + phenmedipham; pentoxazone + desmedipham; pentoxazone + ethofumesate; pentoxazone + triasulfuron; pentoxazone + chloridazon; pentoxazone + lenacil; pentoxazone + triallate; pentoxazone + fluazifop; pentoxazone + sethoxydim; pentoxazone + quizalofop; pentoxazone + clethodim; pentoxazone + glyphosate; pentoxazone + glufosinate; pentoxazone + sulfosate; sulfentrazone + metolachlor; sulfentrazone + (S)-metolachlor; sulfentrazone + propaquizafop; sulfentrazone + metamitron; sulfentrazone + pyramin; sulfentrazone + phenmedipham; sulfentrazone + desmedipham; sulfentrazone + ethofumesate; sulfentrazone + triasulfuron; sulfentrazone + chloridazon; sulfentrazone + lenacil; sulfentrazone + triallate; sulfentrazone + fluazifop; sulfentrazone + sethoxydim; sulfentrazone + quizalofop; sulfentrazone + clethodim; sulfentrazone + glyphosate; sulfentrazone + glufosinate; sulfentrazone + sulfosate; fluazolate + metolachlor; fluazolate + (S)-metolachlor; fluazolate + propaquizafop; fluazolate + metamitron; fluazolate + pyramin; fluazolate + phenmedipham; fluazolate + desmedipham; fluazolate + ethofumesate; fluazolate + triasulfuron; fluazolate + chloridazon; fluazolate + lenacil; fluazolate + triallate; fluazolate + fluazifop; fluazolate + sethoxydim; fluazolate + quizalofop; fluazolate + clethodim; fluazolate + glyphosate; fluazolate + glufosinate; fluazolate + sulfosate; pyraflufen-ethyl + metolachlor; pyraflufen-ethyl + (S)-metolachlor; pyraflufen-ethyl + propaquizafop; pyraflufen-ethyl + metamitron; pyraflufen-ethyl + pyramin; pyraflufen-ethyl + phenmedipham; pyraflufen-ethyl + desmedipham; pyraflufen-ethyl + ethofumesate; pyraflufen-ethyl + triasulfuron; pyraflufen-ethyl + chloridazon; pyraflufen-ethyl + lenacil; pyraflufen-ethyl + triallate; pyraflufen-ethyl + fluazifop; pyraflufen-ethyl + sethoxydim; pyraflufen-ethyl + quizalofop; pyraflufen-ethyl + clethodim; pyraflufen-ethyl + glyphosate; pyraflufen-ethyl + glufosinate; pyraflufen-ethyl + sulfosate; flumipropyn + metolachlor; flumipropyn + (S)-metolachlor; flumipropyn + propaquizafop; flumipropyn + metamitron; flumipropyn + pyramin; flumipropyn + phenmedipham; flumipropyn + desmedipham; flumipropyn + ethofumesate; flumipropyn + triasulfuron; flumipropyn + chloridazon; flumipropyn + lenacil; flumipropyn + triallate; flumipropyn + fluazifop; flumipropyn + sethoxydim; flumipropyn + quizalofop; flumipropyn + clethodim; flumipropyn + glyphosate; flumipropyn + glufosinate; flumipropyn + sulfosate; flupropacil + metolachlor; flupropacil + (S)-metolachlor; flupropacil + propaquizafop; flupropacil + metamitron; flupropacil + pyramin; flupropacil + phenmedipham; flupropacil + desmedipham; flupropacil + ethofumesate; flupropacil + triasulfuron; flupropacil + chloridazon; flupropacil + lenacil; flupropacil + triallate; flupropacil + fluazifop; flupropacil + sethoxydim; flupropacil + quizalofop; flupropacil + clethodim; flupropacil + glyphosate; flupropacil + glufosinate; flupropacil + sulfosate; nipyraclofen + metolachlor; nipyraclofen + (S)-metolachlor; nipyraclofen + propaquizafop; nipyraclofen + metamitron; nipyraclofen + pyramin; nipyraclofen + phenmedipham; nipyraclofen + desmedipham; nipyraclofen + ethofumesate; nipyraclofen + triasulfuron; nipyraclofen + chloridazon; nipyraclofen + lenacil; nipyraclofen + triallate; nipyraclofen + fluazifop; nipyraclofen + sethoxydim; nipyraclofen + quizalofop; nipyraclofen + clethodim; nipyraclofen + glyphosate; nipyraclofen + glufosinate; nipyraclofen + sulfosate; benzfendizone + metolachlor; benzfendizone + (S)-metolachlor; benzfendizone + propaquizafop; benzfendizone + metamitron; benzfendizone + pyramin; benzfendizone + phenmedipham; benzfendizone + desmedipham; benzfendizone + ethofumesate; benzfendizone + triasulfuron; benzfendizone + chloridazon; benzfendizone + lenacil; benzfendizone + triallate; benzfendizone + fluazifop; benzfendizone + sethoxydim; benzfendizone + quizalofop; benzfendizone + clethodim; benzfendizone + glyphosate; benzfendizone + glufosinate; benzfendizone + sulfosate; thidiazimin + metolachlor; thidiazimin + (S)-metolachlor; thidiazimin + propaquizafop; thidiazimin + metamitron; thidiazimin + pyramin; thidiazimin + phenmedipham; thidiazimin + desmedipham; thidiazimin + ethofumesate; thidiazimin + triasulfuron; thidiazimin + chloridazon; thidiazimin + lenacil; thidiazimin + triallate; thidiazimin + fluazifop; thidiazimin + sethoxydim; thidiazimin + quizalofop; thidiazimin + clethodim; thidiazimin + glyphosate; thidiazimin + glufosinate; and thidiazimin + sulfosate.

The following combinations of the compound under a) with the co-herbicides under b) have been found to be very particularly effective synergistic compositions in soya crops resistant to protoporphyrinogen oxidase inhibitors:
Acifluorfen + (S)-metolachlor; acifluorfen + metolachlor, acifluorfen + oxasulfuron; acifluorfen + fluthiacet; acifluorfen + propaquizafop; acifluorfen + alachlor; acifluorfen + dimethenamid or (S)-dimethenamid; acifluorfen + benazolin; acifluorfen + bentazone; acifluorfen + carfentrazone; acifluorfen + sulfentrazone; acifluorfen + chlorimuron-ethyl; acifluorfen + cloransulam-methyl; acifluorfen + thifensulfuron-methyl; acifluorfen + clopyralid; acifluorfen + flumiclorac-pentyl; acifluorfen + flumetsulam; acifluorfen + fomesafen; acifluorfen + imazamox; acifluorfen + imazaquin; acifluorfen + imazethapyr; acifluorfen + imazapyr; acifluorfen + lactofen; acifluorfen + pyridate; acifluorfen + sethoxydim; acifluorfen + fluazifop; acifluorfen + quizalofop; acifluorfen + clethodim; acifluorfen + fenoxaprop; acifluorfen + thidiazuron; acifluorfen + tribufos; acifluorfen + pendimethalin; acifluorfen + trifluralin; acifluorfen + glyphosate; acifluorfen + glufosinate; acifluorfen + sulfosate; aclonifen + (S)-metolachlor; aclonifen + metolachlor; aclonifen + oxasulfuron; aclonifen + fluthiacet; aclonifen + propaquizafop; aclonifen + alachlor; aclonifen + dimethenamid or (S)-dimethenamid; aclonifen + acifluorfen; aclonifen + benazolin; aclonifen + bentazone; aclonifen + carfentrazone; aclonifen + sulfentrazone; aclonifen + chlorimuron-ethyl; aclonifen + cloransulam-methyl; aclonifen + thifensulfuron-methyl; aclonifen + clopyralid; aclonifen + flumiclorac-pentyl; aclonifen + flumetsulam; aclonifen + fomesafen; aclonifen + imazamox; aclonifen + imazaquin; aclonifen + imazethapyr; aclonifen + imazapyr; aclonifen + lactofen; aclonifen + pyridate; aclonifen + sethoxydim; aclonifen + fluazifop; aclonifen + quizalofop; aclonifen + clethodim; aclonifen + fenoxaprop; aclonifen + thidiazuron; aclonifen + tribufos; aclonifen + pendimethalin; aclonifen + trifluralin; aclonifen + glyphosate; aclonifen + glufosinate; aclonifen + sulfosate; bifenox + (S)-metolachlor; bifenox + metolachlor; bifenox + oxasulfuron; bifenox + fluthiacet; bifenox + propaquizafop; bifenox + alachlor; bifenox + dimethenamid or (S)-dimethenamid; bifenox + acifluorfen; bifenox + benazolin; bifenox + bentazone; bifenox + carfentrazone; bifenox + sulfentrazone; bifenox + chlorimuron-ethyl; bifenox + cloransulam-methyl; bifenox + thifensulfuron-methyl; bifenox + clopyralid; bifenox + flumiclorac-pentyl; bifenox + flumetsulam; bifenox + fomesafen; bifenox + imazamox; bifenox + imazaquin; bifenox + imazethapyr; bifenox + imazapyr; bifenox + lactofen; bifenox + pyridate; bifenox + sethoxydim; bifenox + fluazifop; bifenox + quizalofop; bifenox + clethodim; bifenox + fenoxaprop; bifenox + thidiazuron; bifenox + tribufos; bifenox + pendimethalin; bifenox + trifluralin; bifenox + glyphosate; bifenox + glufosinate; bifenox + sulfosate; chlornitrofen + (S)-metolachlor; chlornitrofen + metolachlor; chlornitrofen + oxasulfuron; chlornitrofen + fluthiacet; chlornitrofen + propaquizafop; chlornitrofen + alachlor; chlornitrofen + dimethenamid or (S)-dimethenamid; chlornitrofen + acifluorfen; chlornitrofen + benazolin; chlornitrofen + bentazone; chlornitrofen + carfentrazone; chlornitrofen + sulfentrazone; chlornitrofen + chlorimuron-ethyl; chlornitrofen + cloransulam-methyl; chlornitrofen + thifensulfuron-methyl; chlornitrofen + clopyralid; chlornitrofen + flumiclorac-pentyl; chlornitrofen + flumetsulam; chlornitrofen + fomesafen; chlornitrofen + Imazamox; chlornitrofen + imazaquin; chlornitrofen + imazethapyr; chlornitrofen + imazapyr, chlornitrofen + lactofen; chlornitrofen + pyridate; chlornitrofen + sethoxydim; chlornitrofen + fluazifop; chlornitrofen + quizalofop; chlornitrofen + clethodim; chlornitrofen + fenoxaprop; chlornitrofen + thidiazuron; chlornitrofen + tribufos; chlornitrofen + pendimethalin; chlornitrofen + trifluralin; chlornitrofen + glyphosate; chlornitrofen + glufosinate; chlornitrofen + sulfosate; ethoxyfen + (S)-metolachlor; ethoxyfen + metolachlor; ethoxyfen + oxasulfuron; ethoxyfen + fluthiacet; ethoxyfen + propaquizafop; ethoxyfen + alachlor; ethoxyfen + dimethenamid or (S)-dimethenamid; ethoxyfen + acifluorfen; ethoxyfen + benazolin; ethoxyfen + bentazone; ethoxyfen + carfentrazone; ethoxyfen + sulfentrazone; ethoxyfen + chlorimuron-ethyl; ethoxyfen + cloransulam-methyl; ethoxyfen + thifensulfuron-methyl; ethoxyfen + clopyralid; ethoxyfen + flumiclorac-pentyl; ethoxyfen + flumetsulam; ethoxyfen + fomesafen; ethoxyfen + imazamox; ethoxyfen + imazaquin; ethoxyfen + imazethapyr; ethoxyfen + imazapyr; ethoxyfen + lactofen; ethoxyfen + pyridate; ethoxyfen + sethoxydim; ethoxyfen + fluazifop; ethoxyfen + quizalofop; ethoxyfen + clethodim; ethoxyfen + fenoxaprop; ethoxyfen + thidiazuron; ethoxyfen + tribufos; ethoxyfen + pendimethalin; ethoxyfen + trifluralin; ethoxyfen + glyphosate; ethoxyfen + glufosinate; ethoxyfen + sulfosate; fluoroglycofen + (S)-metolachlor; ftuoroglycofen + metolachlor; fluoroglycofen + oxasulfuron; fluoroglycofen + fluthiacet; fluoroglycofen + propaquizafop; fluoroglycofen + alachlor; fluoroglycofen + dimethenamid or (S)-dimethenamid; fluoroglycofen + acifluorfen; fluoroglycofen + benazolin; fluoroglycofen + bentazone; fluoroglycofen + carfentrazone; fluoroglycofen + sulfentrazone; fluoroglycofen + chlorimuron-ethyl; fluoroglycofen + cloransulam-methyl; fluoroglycofen + thifensulfuron-methyl; fluoroglycofen + clopyralid; fluoroglycofen + flumiclorac-pentyl; fluoroglycofen + flumetsulam; fluoroglycofen + fomesafen; fluoroglycofen + imazamox; fluoroglycofen + imazaquin; fluoroglycofen + imazethapyr; fluoroglycofen + imazapyr; fluoroglycofen + lactofen; fluoroglycofen + pyridate; fluoroglycofen + sethoxydim; fluoroglycofen + fluazifop; fluoroglycofen + quizalofop; fluoroglycofen + clethodim; fluoroglycofen + fenoxaprop; fluoroglycofen + thidiazuron; fluoroglycofen + tribufos; fluoroglycofen + pendimethalin; fluoroglycofen + trifluralin; fluoroglycofen + glyphosate; fluoroglycofen + glufosinate; fluoroglycofen + sulfosate; fomesafen + (S)-metolachlor; fomesafen + metolachlor; fomesafen + oxasulfuron; fomesafen + fluthiacet; fomesafen + propaquizafop; fomesafen + alachlor; fomesafen + dimethenamid or (S)-dimethenamid; fomesafen + acifluorfen; fomesafen + benazolin; fomesafen + bentazone; fomesafen + carfentrazone; fomesafen + sulfentrazone; fomesafen + chlorimuron-ethyl; fomesafen + cloransulam-methyl; fomesafen + thifensulfuron-methyl; fomesafen + clopyralid; fomesafen + flumiclorac-pentyl; fomesafen + flumetsulam; fomesafen + imazamox; fomesafen + imazaquin; fomesafen + imazethapyr; fomesafen + imazapyr; fomesafen + lactofen; fomesafen + pyridate; fomesafen + sethoxydim; fomesafen + fluazifop; fomesafen + quizalofop; fomesafen + clethodim; fomesafen + fenoxaprop; fomesafen + thidiazuron; fomesafen + tribufos; fomesafen + pendimethalin; fomesafen + trifluralin; fomesafen + glyphosate; fomesafen + glufosinate; fomesafen + sulfosate; lactofen + (S)-metolachlor; lactofen + metolachlor; lactofen + oxasulfuron; lactofen + fluthiacet; lactofen + propaquizafop; lactofen + alachlor; lactofen + dimethenamid or (S)-dimethenamid; lactofen + acifluorfen; lactofen + benazolin; lactofen + bentazone; lactofen + carfentrazone; lactofen + sulfentrazone; lactofen + chlorimuron-ethyl; lactofen + cloransulam-methyl; lactofen + thifensulfuron-methyl; lactofen + clopyralid; lactofen + flumiclorac-pentyl; lactofen + flumetsulam; lactofen + fomesafen; lactofen + imazamox; lactofen + imazaquin; lactofen + imazethapyr; lactofen + imazapyr; lactofen + pyridate; lactofen + sethoxydim; lactofen + fluazifop; lactofen + quizalofop; lactofen + clethodim; lactofen + fenoxaprop; lactofen + thidiazuron; lactofen + tribufos; lactofen + pendimethalin; lactofen + trifluralin; lactofen + glyphosate; lactofen + glufosinate; lactofen + sulfosate; oxyfluorfen + (S)-metolachlor; oxyfluorfen + metolachlor; oxyfluorfen + oxasulfuron; oxyfluorfen + fluthiacet; oxyfluorfen + propaquizafop; oxyfluorfen + alachlor; oxyfluorfen + dimethenamid or (S)-dimethenamid; oxyfluorfen + acifluorfen; oxyfluorfen + benazolin; oxyfluorfen + bentazone; oxyfluorfen + carfentrazone; oxyfluorfen + sulfentrazone; oxyfluorfen + chlorimuron-ethyl; oxyfluorfen + cloransulam-methyl; oxyfluorfen + thifensulfuron-methyl; oxyfluorfen + clopyralid; oxyfluorfen + flumiclorac-pentyl; oxyfluorfen + flumetsulam; oxyfluorfen + fomesafen; oxyfluorfen + imazamox; oxyfluorfen + imazaquin; oxyfluorfen + imazethapyr; oxyfluorfen + imazapyr; oxyfluorfen + lactofen; oxyfluorfen + pyridate; oxyfluorfen + sethoxydim; oxyfluorfen + fluazifop; oxyfluorfen + quizalofop; oxyfluorfen + clethodim; oxyfluorfen + fenoxaprop; oxyfluorfen + thidiazuron; oxyfluorfen + tribufos; oxyfluorfen + pendimethalin; oxyfluorfen + trifluralin; oxyfluorfen + glyphosate; oxyfluorfen + glufosinate; oxyfluorfen + sulfosate; azafenidin + (S)-metolachlor; azafenidin + metolachlor; azafenidin + oxasulfuron; azafenidin + fluthiacet; azafenidin + propaquizafop; azafenidin + alachlor; azafenidin + dimethenamid or (S)-dimethenamid; azafenidin + acifluorfen; azafenidin + benazolin; azafenidin + bentazone; azafenidin + carfentrazone; azafenidin + sulfentrazone; azafenidin + chlorimuron-ethyl; azafenidin + cloransulam-methyl; azafenidin + thifensulfuron-methyl; azafenidin + clopyralid; azafenidin + flumiclorac-pentyl; azafenidin + flumetsulam; azafenidin + fomesafen; azafenidin + imazamox; azafenidin + imazaquin; azafenidin + imazethapyr; azafenidin + imazapyr; azafenidin + lactofen; azafenidin + pyridate; azafenidin + sethoxydim; azafenidin + fluazifop; azafenidin + quizalofop; azafenidin + clethodim; azafenidin + fenoxaprop; azafenidin + thidiazuron; azafenidin + tribufos; azafenidin + pendimethalin; azafenidin + trifluralin; azafenidin + glyphosate; azafenidin + glufosinate; azafenidin + sulfosate; carfentrazone-ethyl + (S)-metolachlor; carfentrazone-ethyl + metolachlor; carfentrazone-ethyl + oxasulfuron; carfentrazone-ethyl + fluthiacet; carfentrazone-ethyl + propaquizafop; carfentrazone-ethyl + alachlor; carfentrazone-ethyl + dimethenamid or (S)-dimethenamid; carfentrazone-ethyl + acifluorfen; carfentrazone-ethyl + benazolin; carfentrazone-ethyl + bentazone; carfentrazone-ethyl + sulfentrazone; carfentrazone-ethyl + chlorimuron-ethyl; carfentrazone-ethyl + cloransulam-methyl; carfentrazone-ethyl + thifensulfuron-methyl; carfentrazone-ethyl + clopyralid; carfentrazone-ethyl + flumiclorac-pentyl; carfentrazone-ethyl + flumetsulam; carfentrazone-ethyl + fomesafen; carfentrazone-ethyl + imazamox; carfentrazone-ethyl + imazaquin; carfentrazone-ethyl + imazethapyr; carfentrazone-ethyl + imazapyr; carfentrazone-ethyl + lactofen; carfentrazone-ethyl + pyridate; carfentrazone-ethyl + sethoxydim; carfentrazone-ethyl + fluazifop; carfentrazone-ethyl + quizalofop; carfentrazone-ethyl + clethodim; carfentrazone-ethyl + fenoxaprop; carfentrazone-ethyl + thidiazuron; carfentrazone-ethyl + tribufos; carfentrazone-ethyl + pendimethalin; carfentrazone-ethyl + trifluralin; carfentrazone-ethyl + glyphosate; carfentrazone-ethyl + glufosinate; carfentrazone-ethyl + sulfosate; compound of the formula A + (S)-metolachlor; compound of the formula A + metolachlor; compound of the formula A + oxasulfuron; compound of the formula A + fluthiacet; compound of the formula A + propaquizafop; compound of the formula A + alachlor; compound of the formula A + dimethenamid or (S)-dimethenamid; compound of the formula A + acifluorfen; compound of the formula A + benazolin; compound of the formula A + bentazone; compound of the formula A + carfentrazone; compound of the formula A + sulfentrazone; compound of the formula A + chlorimuron-ethyl; compound of the formula A + cloransulam-methyl; compound of the formula A + thifensulfuron-methyl; compound of the formula A + clopyralid; compound of the formula A + flumiclorac-pentyl; compound of the formula A + flumetsulam; compound of the formula A + fomesafen; compound of the formula A + imazamox; compound of the formula A + imazaquin; compound of the formula A + imazethapyr; compound of the formula A + imazapyr; compound of the formula A + lactofen; compound of the formula A + pyridate; compound of the formula A + sethoxydim; compound of the formula A + fluazifop; compound of the formula A + quizalofop; compound of the formula A + clethodim; compound of the formula A + fenoxaprop; compound of the formula A + thidiazuron; compound of the formula A + tribufos; compound of the formula A + pendimethalin; compound of the formula A + trifluralin; compound of the formula A + glyphosate; compound of the formula A + glufosinate; compound of the formula A + sulfosate; cinidon-ethyl + (S)-metolachlor; cinidon-ethyl + metolachlor; cinidon-ethyl + oxasulfuron; cinidon-ethyl + fluthiacet; cinidon-ethyl + propaquizafop; cinidon-ethyl + alachlor; cinidon-ethyl + dimethenamid or (S)-dimethenamid; cinidon-ethyl + acifluorfen; cinidon-ethyl + benazolin; cinidon-ethyl + bentazone; cinidon-ethyl + carfentrazone; cinidon-ethyl + sulfentrazone; cinidon-ethyl + chlorimuron-ethyl; cinidon-ethyl + cloransulam-methyl; cinidon-ethyl + thifensulfuron-methyl; cinidon-ethyl + clopyralid; cinidon-ethyl + flumiclorac-pentyl; cinidon-ethyl + flumetsulam; cinidon-ethyl + fomesafen; cinidon-ethyl + imazamox; cinidon-ethyl + imazaquin; cinidon-ethyl + imazethapyr; cinidon-ethyl + imazapyr; cinidon-ethyl + lactofen; cinidon-ethyl + pyridate; cinidon-ethyl + sethoxydim; cinidon-ethyl + fluazifop; cinidon-ethyl + quizalofop; cinidon-ethyl + clethodim; cinidon-ethyl + fenoxaprop; cinidon-ethyl + thidiazuron; cinidon-ethyl + tribufos; cinidon-ethyl + pendimethalin; cinidon-ethyl + trifluralin; cinidon-ethyl + glyphosate; cinidon-ethyl + glufosinate; cinidon-ethyl + sulfosate; flumiclorac-pentyl + (S)-metolachlor; flumiclorac-pentyl + metolachlor; flumiclorac-pentyl + oxasulfuron; flumiclorac-pentyl + fluthiacet; flumiclorac-pentyl + propaquizafop; flumiclorac-pentyl + alachlor; flumiclorac-pentyl + dimethenamid or (S)-dimethenamid; flumiclorac-pentyl + acifluorfen; flumiclorac-pentyl + benazolin; flumiclorac-pentyl + bentazone; flumiclorac-pentyl + carfentrazone; flumiclorac-pentyl + sulfentrazone; flumiclorac-pentyl + chlorimuron-ethyl; flumiclorac-pentyl + cloransulam-methyl; flumiclorac-pentyl + thifensuffuron-methyl; flumiclorac-pentyl + clopyralid; flumiclorac-pentyl + flumetsulam; flumiclorac-pentyl + fomesafen; flumiclorac-pentyl + imazamox; flumiclorac-pentyl + imazaquin; flumiclorac-pentyl + imazethapyr; flumiclorac-pentyl + imazapyr; flumiclorac-pentyl + lactofen; flumiclorac-pentyl + pyridate; flumiclorac-pentyl + sethoxydim; flumiclorac-pentyl + fluazifop; flumiclorac-pentyl + quizalofop; flumiclorac-pentyl + clethodim; flumiclorac-pentyl + fenoxaprop; flumiclorac-pentyl + thidiazuron; flumiclorac-pentyl + tribufos; flumiclorac-pentyl + pendimethalin; flumiclorac-pentyl + trifluralin; flumiclorac-pentyl + glyphosate; flumiclorac-pentyl + glufosinate; flumiclorac-pentyl + sulfosate; flumioxazin + (S)-metolachlor; flumioxazin + metolachlor; flumioxazin + oxasulfuron; flumioxazin + fluthiacet; flumioxazin + propaquizafop; flumioxazin + alachlor; flumioxazin + dimethenamid or (S)-dimethenamid; flumioxazin + acifluorfen; flumioxazin + benazolin; flumioxazin + bentazone; flumioxazin + carfentrazone; flumioxazin + sulfentrazone; flumioxazin + chlorimuron-ethyl; flumioxazin + cloransulam-methyl; flumioxazin + thifensulfuron-methyl; flumioxazin + clopyralid; flumioxazin + flumiclorac-pentyl; flumioxazin + flumetsulam; flumioxazin + fomesafen; flumioxazin + imazamox; flumioxazin + imazaquin; flumioxazin + imazethapyr; flumioxazin + imazapyr; flumioxazin + lactofen; flumioxazin + pyridate; flumioxazin + sethoxydim; flumioxazin + fluazifop; flumioxazin + quizalofop; flumioxazin + clethodim; flumioxazin + fenoxaprop; flumioxazin + thidiazuron; flumioxazin + tribufos; flumioxazin + pendimethalin; flumioxazin + trifluralin; flumioxazin + glyphosate; flumioxazin + glufosinate; flumioxazin + sulfosate; fluthiacet-methyl + (S)-metolachlor; fluthiacet-methyl + metolachlor; fluthiacet-methyl + oxasulfuron; fluthiacet-methyl + propaquizafop; fluthiacet-methyl + alachlor; fluthiacet-methyl + dimethenamid or (S)-dimethenamid; fluthiacet-methyl + acifluorfen; fluthiacet-methyl + benazolin; fluthiacet-methyl + bentazone; fluthiacet-methyl + carfentrazone; fluthiacet-methyl + sulfentrazone; fluthiacet-methyl + chlorimuron-ethyl; fluthiacet-methyl + cloransulam-methyl; fluthiacet-methyl + thifensulfuron-methyl; fluthiacet-methyl + clopyralid; fluthiacet-methyl + flumiclorac-pentyl; fluthiacet-methyl + flumetsulam; fluthiacet-methyl + fomesafen; fluthiacet-methyl + imazamox; fluthiacet-methyl + imazaquin; fluthiacet-methyl + imazethapyr; fluthiacet-methyl + imazapyr; fluthiacet-methyl + lactofen; fluthiacet-methyl + pyridate; fluthiacet-methyl + sethoxydim; fluthiacet-methyl + fluazifop; fluthiacet-methyl + quizalofop; fluthiacet-methyl + clethodim; fluthiacet-methyl + fenoxaprop; fluthiacet-methyl + thidiazuron; fluthiacet-methyl + tribufos; fluthiacet-methyl + pendimethalin; fluthiacet-methyl + trifluralin; fluthiacet-methyl + glyphosate; fluthiacet-methyl + glufosinate; fluthiacet-methyl + sulfosate; oxadiargyl + (S)-metolachlor; oxadiargyl + metolachlor; oxadiargyl + oxasulfuron; oxadiargyl + fluthiacet; oxadiargyl + propaquizafop; oxadiargyl + alachlor; oxadiargyl + dimethenamid or (S)-dimethenamid; oxadiargyl + acifluorfen; oxadiargyl + benazolin; oxadiargyl + bentazone; oxadiargyl + carfentrazone; oxadiargyl + sulfentrazone; oxadiargyl + chlorimuron-ethyl; oxadiargyl + cloransulam-methyl; oxadiargyl + thifensulfuron-methyl; oxadiargyl + clopyralid; oxadiargyl + flumiclorac-pentyl; oxadiargyl + flumetsulam; oxadiargyl + fomesafen; oxadiargyl + imazamox; oxadiargyl + imazaquin; oxadiargyl + imazethapyr; oxadiargyl + imazapyr; oxadiargyl + lactofen; oxadiargyl + pyridate; oxadiargyl + sethoxydim; oxadiargyl + fluazifop; oxadiargyl + quizalofop; oxadiargyl + clethodim; oxadiargyl + fenoxaprop; oxadiargyl + thidiazuron; oxadiargyl + tribufos; oxadiargyl + pendimethalin; oxadiargyl + trifluralin; oxadiargyl + glyphosate; oxadiargyl + glufosinate; oxadiargyl + sulfosate; oxadiazon + (S)-metolachlor; oxadiazon + metolachlor; oxadiazon + oxasulfuron; oxadiazon + fluthiacet; oxadiazon + propaquizafop; oxadiazon + alachlor; oxadiazon + dimethenamid or (S)-dimethenamid; oxadiazon + acifluorfen; oxadiazon + benazolin; oxadiazon + bentazone; oxadiazon + carfentrazone; oxadiazon + sulfentrazone; oxadiazon + chlorimuron-ethyl; oxadiazon + cloransulam-methyl; oxadiazon + thifensulfuron-methyl; oxadiazon + clopyralid; oxadiazon + flumiclorac-pentyl; oxadiazon + flumetsulam; oxadiazon + fomesafen; oxadiazon + imazamox; oxadiazon + imazaquin; oxadiazon + imazethapyr; oxadiazon + imazapyr; oxadiazon + lactofen; oxadiazon + pyridate; oxadiazon + sethoxydim; oxadiazon + fluazifop; oxadiazon + quizalofop; oxadiazon + clethodim; oxadiazon + fenoxaprop; oxadiazon + thidiazuron; oxadiazon + tribufos; oxadiazon + pendimethalin; oxadiazon + trifluralin; oxadiazon + glyphosate; oxadiazon + glufosinate; oxadiazon + sulfosate; pentoxazone + (S)-metolachlor; pentoxazone + metolachlor; pentoxazone + oxasulfuron; pentoxazone + fluthiacet; pentoxazone + propaquizafop; pentoxazone + alachlor; pentoxazone + dimethenamid or (S)-dimethenamid; pentoxazone + acifluorfen; pentoxazone + benazolin; pentoxazone + bentazone; pentoxazone + carfentrazone; pentoxazone + sulfentrazone; pentoxazone + chlorimuron-ethyl; pentoxazone + cloransulam-methyl; pentoxazone + thifensulfuron-methyl; pentoxazone + clopyralid; pentoxazone + flumiclorac-pentyl; pentoxazone + flumetsulam; pentoxazone + fomesafen; pentoxazone + imazamox; pentoxazone + imazaquin; pentoxazone + imazethapyr; pentoxazone + imazapyr; pentoxazone + lactofen; pentoxazone + pyridate; pentoxazone + sethoxydim; pentoxazone + fluazifop; pentoxazone + quizalofop; pentoxazone + clethodim; pentoxazone + fenoxaprop; pentoxazone + thidiazuron; pentoxazone + tribufos; pentoxazone + pendimethalin; pentoxazone + trifluralin; pentoxazone + glyphosate; pentoxazone + glufosinate; pentoxazone + sulfosate; sulfentrazone + (S)-metolachlor; sulfentrazone + metolachlor; sulfentrazone + oxasulfuron; sulfentrazone + fluthiacet; sulfentrazone + propaquizafop; sulfentrazone + alachlor; sulfentrazone + dimethenamid or (S)-dimethenamid; sulfentrazone + acifluorfen; sulfentrazone + benazolin; sulfentrazone + bentazone; sulfentrazone + carfentrazone; sulfentrazone + chlorimuron-ethyl; sulfentrazone + cloransulam-methyl; sulfentrazone + thifensulfuron-methyl; sulfentrazone + clopyralid; sulfentrazone + flumiclorac-pentyl; sulfentrazone + flumetsulam; sulfentrazone + fomesafen; sulfentrazone + imazamox; sulfentrazone + imazaquin; sulfentrazone + imazethapyr; sulfentrazone + imazapyr; sulfentrazone + lactofen; sulfentrazone + pyridate; sulfentrazone + sethoxydim; sulfentrazone + fluazifop; sulfentrazone + quizalofop; sulfentrazone + clethodim; sulfentrazone + fenoxaprop; sulfentrazone + thidiazuron; sulfentrazone + tribufos; sulfentrazone + pendimethalin; sulfentrazone + trifluralin; sulfentrazone + glyphosate; sulfentrazone + glufosinate; sulfentrazone + sulfosate; fluazolate + (S)-metolachlor; fluazolate + metolachlor; fluazolate + oxasulfuron; fluazolate + fluthiacet; fluazolate + propaquizafop; fluazolate + alachlor; fluazolate + dimethenamid or (S)-dimethenamid; fluazolate + acifluorfen; fluazolate + benazolin; fluazolate + bentazone; fluazolate + carfentrazone; fluazolate + sulfentrazone; fluazolate + chlorimuron-ethyl; fluazolate + cloransulam-methyl; fluazolate + thifensulfuron-methyl; fluazolate + clopyralid; fluazolate + flumiclorac-pentyl; fluazolate + flumetsulam; fluazolate + fomesafen; ftuazolate + imazamox; fluazolate + imazaquin; fluazolate + imazethapyr; fluazolate + imazapyr; fluazolate + lactofen; fluazolate + pyridate; fluazolate + sethoxydim; fluazolate + fluazifop; fluazolate + quizalofop; fluazolate + clethodim; fluazolate + fenoxaprop; fluazolate + thidiazuron; fluazolate + tribufos; fluazolate + pendimethalin; fluazolate + trifluralin; fluazolate + glyphosate; fluazolate + glufosinate; fluazolate + sulfosate; pyraflufen-ethyl + (S)-metolachlor; pyraflufen-ethyl + metolachlor; pyraflufen-ethyl + oxasulfuron; pyraflufen-ethyl + fluthiacet; pyraflufen-ethyl + propaquizafop; pyraflufen-ethyl + alachlor; pyraflufen-ethyl + dimethenamid or (S)-dimethenamid; pyraflufen-ethyl + acifluorfen; pyraflufen-ethyl + benazolin; pyraflufen-ethyl + bentazone; pyraflufen-ethyl + carfentrazone; pyraflufen-ethyl + sulfentrazone; pyraflufen-ethyl + chlorimuron-ethyl; pyraflufen-ethyl + cloransulam-methyl; pyraflufen-ethyl + thifensulfuron-methyl; pyraflufen-ethyl + clopyralid; pyraflufen-ethyl + flumiclorac-pentyl; pyraflufen-ethyl + flumetsulam; pyraflufen-ethyl + fomesafen; pyraflufen-ethyl + imazamox; pyraflufen-ethyl + imazaquin; pyraflufen-ethyl + imazethapyr; pyraflufen-ethyl + imazapyr; pyraflufen-ethyl + lactofen; pyraflufen-ethyl + pyridate; pyraflufen-ethyl + sethoxydim; pyraflufen-ethyl + fluazifop; pyraflufen-ethyl + quizalofop; pyraflufen-ethyl + clethodim; pyraflufen-ethyl + fenoxaprop; pyraflufen-ethyl + thidiazuron; pyraflufen-ethyl + tribufos; pyraflufen-ethyl + pendimethalin; pyraflufen-ethyl + trifluralin; pyraflufen-ethyl + glyphosate; pyraflufen-ethyl + glufosinate; pyraflufen-ethyl + sulfosate; flumipropyn + (S)-metolachlor; flumipropyn + metolachlor; flumipropyn + oxasulfuron; flumipropyn + fluthiacet; flumipropyn + propaquizafop; flumipropyn + alachlor; flumipropyn + dimethenamid or (S)-dimethenamid; flumipropyn + acifluorfen; flumipropyn + benazolin; flumipropyn + bentazone; flumipropyn + carfentrazone; flumipropyn + sulfentrazone; flumipropyn + chlorimuron-ethyl; flumipropyn + cloransulam-methyl; flumipropyn + thifensulfuron-methyl; flumipropyn + clopyralid; flumipropyn + flumiclorac-pentyl; flumipropyn + flumetsulam; flumipropyn + fomesafen; flumipropyn + imazamox; flumipropyn + imazaquin; flumipropyn + imazethapyr; flumipropyn + imazapyr; flumipropyn + lactofen; flumipropyn + pyridate; flumipropyn + sethoxydim; flumipropyn + fluazifop; flumipropyn + quizalofop; flumipropyn + clethodim; flumipropyn + fenoxaprop; flumipropyn + thidiazuron; flumipropyn + tribufos; flumipropyn + pendimethalin; flumipropyn + trifluralin; flumipropyn + glyphosate; flumipropyn + glufosinate; flumipropyn + sulfosate; flupropacil + (S)-metolachlor; flupropacil + metolachlor; flupropacil + oxasulfuron; flupropacil + fluthiacet; flupropacil + propaquizafop; flupropacil + alachlor; flupropacil + dimethenamid or (S)-dimethenamid; flupropacil + acifluorfen; flupropacil + benazolin; flupropacil + bentazone; flupropacil + carfentrazone; flupropacil + sulfentrazone; flupropacil + chlorimuron-ethyl; flupropacil + cloransulam-methyl; flupropacil + thifensulfuron-methyl; flupropacil + clopyralid; flupropacil + flumiclorac-pentyl; flupropacil + flumetsulam; flupropacil + fomesafen; flupropacil + imazamox; flupropacil + imazaquin; flupropacil + imazethapyr; flupropacil + imazapyr; flupropacil + lactofen; flupropacil + pyridate; flupropacil + sethoxydim; flupropacil + fluazifop; flupropacil + quizalofop; flupropacil + clethodim; flupropacil + fenoxaprop; flupropacil + thidiazuron; flupropacil + tribufos; flupropacil + pendimethalin; flupropacil + trifluralin; flupropacil + glyphosate; flupropacil + glufosiate; flupropacil + sulfosate; benzfendizone + (S)-metolachlor; benzfendizone + metolachlor; benzfendizone + oxasulfuron; benzfendizone + fluthiacet; benzfendizone + propaquizafop; benzfendizone + alachlor; benzfendizone + dimethenamid or (S)-dimethenamid; benzfendizone + acifluorfen; benzfendizone + benazolin; benzfendizone + bentazone; benzfendizone + carfentrazone; benzfendizone + sulfentrazone; benzfendizone + chlorimuron-ethyl; benzfendizone + cloransulam-methyl; benzfendizone + thifensulfuron-methyl; benzfendizone + clopyralid; benzfendizone + flumiclorac-pentyl; benzfendizone + flumetsulam; benzfendizone + fomesafen; benzfendizone + imazamox; benzfendizone + imazaquin; benzfendizone + imazethapyr; benzfendizone + imazapyr; benzfendizone + lactofen; benzfendizone + pyridate; benzfendizone + sethoxydim; benzfendizone + fluazifop; benzfendizone + quizalofop; benzfendizone + clethodim; benzfendizone + fenoxaprop; benzfendizone + thidiazuron; benzfendizone + tribufos; benzfendizone + pendimethalin; benzfendizone + trifluralin; benzfendizone + glyphosate; benzfendizone + glufosiate; benzfendizone + sulfosate; thidiazimin + (S)-metolachlor; thidiazimin + metolachlor; thidiazimin + oxasulfuron; thidiazimin + fluthiacet; thidiazimin + propaquizafop; thidiazimin + alachlor, thidiazimin + dimethenamid or (S)-dimethenamid; thidiazimin + acifluorfen; thidiazimin + benazolin; thidiazimin + bentazone; thidiazimin + carfentrazone; thidiazimin + sulfentrazone; thidiazimin + chlorimuron-ethyl; thidiazimin + cloransulam-methyl; thidiazimin + thifensulfuron-methyl; thidiazimin + clopyralid; thidiazimin + flumiclorac-pentyl; thidiazimin + flumetsulam; thidiazimin + fomesafen; thidiazimin + imazamox; thidiazimin + imazaquin; thidiazimin + imazethapyr; thidiazimin + imazapyr; thidiazimin + lactofen; thidiazimin + pyridate; thidiazimin + sethoxydim; thidiazimin + fluazifop; thidiazimin + quizalofop; thidiazimin + clethodim; thidiazimin + fenoxaprop; thidiazimin + thidiazuron; thidiazimin + tribufos; thidiazimin + pendimethalin; thidiazimin + trifluralin; thidiazimin + glyphosate; thidiazimin + glufosinate; and thidiazimin + sulfosate.

The following combinations of the compounds under a) with the co-herbicides under b) have been found to be very particularly effective synergistic compositions in crops of rape resistant to protoporphyrinogen oxidase inhibitors:
acifluorfen + dimethachlor; acifluorfen + propaquizafop; acifluorfen + clomazone; acifluorfen + napropamide; acifluorfen + quinmerac; acifluorfen + metazachlor; acifluorfen + carbetamide; acifluorfen + dimefuron; acifluorfen + propyzamide; acifluorfen + clopyralid; acifluorfen + ethametsulfuron; acifluorfen + sethoxydim; acifluorfen + fluazifop; acifluorfen + quizalofop; acifluorfen + clethodim; acifluorfen + fenoxaprop; acifluorfen + tebutam; acifluorfen + glyphosate; acifluorfen + glufosinate; acifluorfen + sulfosate; bifenox + dimethachlor; bifenox + propaquizafop; bifenox + clomazone; bifenox + napropamide; bifenox + quinmerac; bifenox + metazachlor; bifenox + carbetamide; bifenox + dimefuron; bifenox + propyzamide; bifenox + clopyralid; bifenox + ethametsulfuron; bifenox + sethoxydim; bifenox + fluazifop; bifenox + quizalofop; bifenox + clethodim; bifenox + fenoxaprop; bifenox + tebutam; bifenox + glyphosate; bifenox + glufosinate; bifenox + sulfosate; chlornitrofen + dimethachlor; chlornitrofen + propaquizafop; chlornitrofen + clomazone; chlornitrofen + napropamide; chlornitrofen + quinmerac; chlornitrofen + metazachlor; chlornitrofen + carbetamide; chlornitrofen + dimefuron; chlornitrofen + propyzamide; chlornitrofen + clopyralid; chlornitrofen + ethametsulfuron; chlornitrofen + sethoxydim; chlornitrofen + fluazifop; chlornitrofen + quizalofop; chlornitrofen + clethodim; chlornitrofen + fenoxaprop; chlornitrofen + tebutam; chlornitrofen + glyphosate; chlornitrofen + glufosinate; chlornitrofen + sulfosate; ethoxyfen + dimethachlor; ethoxyfen + propaquizafop; ethoxyfen + clomazone; ethoxyfen + napropamide; ethoxyfen + quinmerac; ethoxyfen + metazachlor; ethoxyfen + carbetamide; ethoxyfen + dimefuron; ethoxyfen + propyzamide; ethoxyfen + clopyralid; ethoxyfen + ethametsulfuron; ethoxyfen + sethoxydim; ethoxyfen + fluazifop; ethoxyfen + quizalofop; ethoxyfen + clethodim; ethoxyfen + fenoxaprop; ethoxyfen + tebutam; ethoxyfen + glyphosate; ethoxyfen + glufosinate; ethoxyfen + sulfosate; fluoroglycofen + dimethachlor; fluoroglycofen + propaquizafop; fluoroglycofen + clomazone; fluoroglycofen + napropamide; fluoroglycofen + quinmerac; fluoroglycofen + metazachlor; fluoroglycofen + carbetamide; fluoroglycofen + dimefuron; fluoroglycofen + propyzamide; fluoroglycofen + clopyralid; fluoroglycofen + ethametsulfuron; fluoroglycofen + sethoxydim; fluoroglycofen + fluazifop; fluoroglycofen + quizalofop; fluoroglycofen + clethodim; fluoroglycofen + fenoxaprop; fluoroglycofen + tebutam; fluoroglycofen + glyphosate; fluoroglycofen + glufosinate; fluoroglycofen + sulfosate; fomesafen + dimethachlor; fomesafen + propaquizafop; fomesafen + clomazone; fomesafen + napropamide; fomesafen + quinmerac; fomesafen + metazachlor; fomesafen + carbetamide; fomesafen + dimefuron; fomesafen + propyzamide; fomesafen + clopyralid; fomesafen + ethametsulfuron; fomesafen + sethoxydim; fomesafen + fluazifop; fomesafen + quizalofop; fomesafen + clethodim; fomesafen + fenoxaprop; fomesafen + tebutam; fomesafen + glyphosate; fomesafen + glufosinate; fomesafen + sulfosate; lactofen + dimethachlor; lactofen + propaquizafop; lactofen + clomazone; lactofen + napropamide; lactofen + quinmerac; lactofen + metazachlor; lactofen + carbetamide; lactofen + dimefuron; lactofen + propyzamide; lactofen + clopyralid; lactofen + ethametsulfuron; lactofen + sethoxydim; lactofen + fluazifop; lactofen + quizalofop; lactofen + clethodim; lactofen + fenoxaprop; lactofen + tebutam; lactofen + glyphosate; lactofen + glufosinate; lactofen + sulfosate; oxyfluorfen + dimethachlor; oxyfluorfen + propaquizafop; oxyfluorfen + clomazone; oxyfluorfen + napropamide; oxyfluorfen + quinmerac; oxyfluorfen + metazachlor; oxyfluorfen + carbetamide; oxyfluorfen + dimefuron; oxyfluorfen + propyzamide; oxyfluorfen + clopyralid; oxyfluorfen + ethametsulfuron; oxyfluorfen + sethoxydim; oxyfluorfen + fluazifop; oxyfluorfen + quizalofop; oxyfluorfen + clethodim; oxyfluorfen + fenoxaprop; oxyfluorfen + tebutam; oxyfluorfen + glyphosate; oxyfluorfen + glufosinate; oxyfluorfen + sulfosate; azafenidin + dimethachlor; azafenidin + propaquizafop; azafenidin + clomazone; azafenidin + napropamide; azafenidin + quinmerac; azafenidin + metazachlor; azafenidin + carbetamide; azafenidin + dimefuron; azafenidin + propyzamide; azafenidin + clopyratid; azafenidin + ethametsulfuron; azafenidin + sethoxydim; azafenidin + fluazifop; azafenidin + quizalofop; azafenidin + clethodim; azafenidin + fenoxaprop; azafenidin + tebutam; azafenidin + glyphosate; azafenidin + glufosinate; azafenidin + sulfosate; carfentrazone-ethyl + dimethachlor; carfentrazone-ethyl + propaquizafop; carfentrazone-ethyl + clomazone; carfentrazone-ethyl + napropamide; carfentrazone-ethyl + quinmerac; carfentrazone-ethyl + metazachlor; carfentrazone-ethyl + carbetamide; carfentrazone-ethyl + dimefuron; carfentrazone-ethyl + propyzamide; carfentrazone-ethyl + clopyralid; carfentrazone-ethyl + ethametsulfuron; carfentrazone-ethyl + sethoxydim; carfentrazone-ethyl + fluazifop; carfentrazone-ethyl + quizalofop; carfentrazone-ethyl + clethodim; carfentrazone-ethyl + fenoxaprop; carfentrazone-ethyl + tebutam; carfentrazone-ethyl + glyphosate; carfentrazone-ethyl + glufosinate; carfentrazone-ethyl + sulfosate; compound of the formula A + dimethachlor; compound of the formula A + propaquizafop; compound of the formula A + clomazone; compound of the formula A + napropamide; compound of the formula A + quinmerac; compound of the formula A + metazachlor; compound of the formula A + carbetamide; compound of the formula A + dimefuron; compound of the formula A + propyzamide; compound of the formula A + clopyralid; compound of the formula A + ethametsulfuron; compound of the formula A + sethoxydim; compound of the formula A + fluazifop; compound of the formula A + quizalofop; compound of the formula A + clethodim; compound of the formula A + fenoxaprop; compound of the formula A + tebutam; compound of the formula A + glyphosate; compound of the formula A + glufosinate; compound of the formula A + sulfosate; cinidon-ethyl + dimethachlor; cinidon-ethyl + propaquizafop; cinidon-ethyl + clomazone; cinidon-ethyl + napropamide; cinidon-ethyl + quinmerac; cinidon-ethyl + metazachlor; cinidon-ethyl + carbetamide; cinidon-ethyl + dimefuron; cinidon-ethyl + propyzamide; cinidon-ethyl + clopyralid; cinidon-ethyl + ethametsulfuron; cinidon-ethyl + sethoxydim; cinidon-ethyl + fluazifop; cinidon-ethyl + quizalofop; cinidon-ethyl + clethodim; cinidon-ethyl + fenoxaprop; cinidon-ethyl + tebutam; cinidon-ethyl + glyphosate; cinidon-ethyl + glufosinate; cinidon-ethyl + sulfosate; flumiclorac-pentyl + dimethachlor; flumiclorac-pentyl + propaquizafop; flumiclorac-pentyl + clomazone; flumiclorac-pentyl + napropamide; flumiclorac-pentyl + quinmerac; flumiclorac-pentyl + metazachlor; flumiclorac-pentyl + carbetamide; flumiclorac-pentyl + dimefuron; flumiclorac-pentyl + propyzamide; flumiclorac-pentyl + clopyralid; flumiclorac-pentyl + ethametsulfuron; flumiclorac-pentyl + sethoxydim; flumiclorac-pentyl + fluazifop; flumiclorac-pentyl + quizalofop; flumiclorac-pentyl + clethodim; flumiclorac-pentyl + fenoxaprop; flumiclorac-pentyl + tebutam; flumiclorac-pentyl + glyphosate; glufosinate; flumiclorac-pentyl + sulfosate; flumioxazin + dimethachlor; flumioxazin + propaquizafop; flumioxazin + clomazone; flumioxazin + napropamide; flumioxazin + quinmerac; flumioxazin + metazachlor; flumioxazin + carbetamide; flumioxazin + dimefuron; flumioxazin + propyzamide; flumioxazin + clopyralid; flumioxazin + ethametsulfuron; flumioxazin + sethoxydim; flumioxazin + fluazifop; flumioxazin + quizalofop; flumioxazin + clethodim; flumioxazin + fenoxaprop; flumioxazin + tebutam; flumioxazin + glyphosate; flumioxazin + glufosinate; flumioxazin + sulfosate; fluthiacet-methyl + dimethachlor; fluthiacet-methyl + propaquizafop; fluthiacet-methyl + clomazone; fluthiacet-methyl + napropamide; fluthiacet-methyl + quinmerac; fluthiacet-methyl + metazachlor; fluthiacet-methyl + carbetamide; fluthiacet-methyl + dimefuron; fluthiacet-methyl + propyzamide; fluthiacet-methyl + clopyralid; fluthiacet-methyl + ethametsulfuron; fluthiacet-methyl + sethoxydim; fluthiacet-methyl + fluazifop; fluthiacet-methyl + quizalofop; fluthiacet-methyl + clethodim; fluthiacet-methyl + fenoxaprop; fluthiacet-methyl + tebutam; fluthiacet-methyl + glyphosate; fluthiacet-methyl + glufosinate; fluthiacet-methyl + sulfosate; oxadiargyl + dimethachlor, oxadiargyl + propaquizafop; oxadiargyl + clomazone; oxadiargyl + napropamide; oxadiargyl + quinmerac; oxadiargyl + metazachlor; oxadiargyl + carbetamide; oxadiargyl + dimefuron; oxadiargyl + propyzamide; oxadiargyl + clopyralid; oxadiargyl + ethametsulfuron; oxadiargyl + sethoxydim; oxadiargyl + gluazifop; oxadiargyl + quizalofop; oxadiargyl + clethodim; oxadiargyl + fenoxaprop; oxadiargyl + tebutam; oxadiargyl + glyphosate; oxadiargyl + glufosinate; oxadiargyl + sulfosate; oxadiazon + dimethachlor; oxadiazon + propaquizafop; oxadiazon + clomazone; oxadiazon + napropamide; oxadiazon + quinmerac; oxadiazon + metazachlor; oxadiazon + carbetamide; oxadiazon + dimefuron; oxadiazon + propyzamide; oxadiazon + clopyralid; oxadiazon + ethametsulfuron; oxadiazon + sethoxydim; oxadiazon + fluazifop; oxadiazon + quizalofop; oxadiazon + clethodim; oxadiazon + fenoxaprop; oxadiazon + tebutam; oxadiazon + glyphosate; oxadiazon + glufosinate; oxadiazon + sulfosate; pentoxazone + dimethachlor; pentoxazone + propaquizafop; pentoxazone + clomazone; pentoxazone + napropamide; pentoxazone + quinmerac; pentoxazone + metazachlor; pentoxazone + carbetamide; pentoxazone + dimefuron; pentoxazone + propyzamide; pentoxazone + clopyralid; pentoxazone + ethametsulfuron; pentoxazone + sethoxydim; pentoxazone + fluazifop; pentoxazone + quizalofop; pentoxazone + clethodim; pentoxazone + fenoxaprop; pentoxazone + tebutam; pentoxazone + glyphosate; pentoxazone + glufosinate; pentoxazone + sulfosate; sulfentrazone + dimethachlor; sulfentrazone + propaquizafop; sulfentrazone + clomazone; sulfentrazone + napropamide; sulfentrazone + quinmerac; sulfentrazone + metazachlor; sulfentrazone + carbetamide; sulfentrazone + dimefuron; sulfentrazone + propyzamide; sulfentrazone + clopyralid; sulfentrazone + ethametsulfuron; sulfentrazone + sethoxydim; sulfentrazone + fluazlfop; sulfentrazone + quizalofop; sulfentrazone + clethodim; sulfentrazone + fenoxaprop; sulfentrazone + tebutam; sulfentrazone + glyphosate; sulfentrazone + glufosinate; sulfentrazone + sulfosate; fluazolate + dimethachlor; fluazolate + propaquizafop; fluazolate + clomazone; fluazolate + napropamide; fluazolate + quinmerac; fluazolate + metazachlor; fluazolate + carbetamide; fluazolate + dimefuron; fluazolate + propyzamide; fluazolate + clopyralid; fluazolate + ethametsulfuron; fluazolate + sethoxydim; fluazolate + fluazifop; fluazolate + quizalofop; fluazolate + clethodim; fluazolate + fenoxaprop; fluazolate + tebutam; fluazolate + glyphosate; fluazolate + glufosinate; fluazolate + sulfosate; pyraflufen-ethyl + dimethachlor; pyraflufen-ethyl + propaquizafop; pyraflufen-ethyl + clomazone; pyraflufen-ethyl + napropamide; pyraflufen-ethyl + quinmerac; pyraflufen-ethyl + metazachlor; pyraflufen-ethyl + carbetamide; pyraflufen-ethyl + dimefuron; pyraflufen-ethyl + propyzamide; pyraflufen-ethyl + clopyralid; pyraflufen-ethyl + ethametsulfuron; pyraflufen-ethyl + sethoxydim; pyraflufen-ethyl + fluazifop; pyraflufen-ethyl + quizalofop; pyraflufen-ethyl + clethodim; pyraflufen-ethyl + fenoxaprop; pyraflufen-ethyl + tebutam; pyraflufen-ethyl + glyphosate; pyraflufen-ethyl + glufosinate; sulfosate; flumipropyn + dimethachlor; flumipropyn + propaquizafop; flumipropyn + clomazone; flumipropyn + napropamide; flumipropyn + quinmerac; flumipropyn + metazachlor; flumipropyn + carbetamide; flumipropyn + dimefuron; flumipropyn + propyzamide; flumipropyn + clopyralid; flumipropyn + ethametsulfuron; flumipropyn + sethoxydim; flumipropyn + fluazifop; flumipropyn + quizalofop; flumipropyn + clethodim; flumipropyn + fenoxaprop; flumipropyn + tebutam; pyraflufen-ethyl + glyphosate; pyraflufen-ethyl + glufosinate; pyraflufen-ethyl + sulfosate; flupropacil + dimethachlor; flupropacil + propaquizafop; flupropacil + clomazone; flupropacil + napropamide; flupropacil + quinmerac; flupropacil + metazachlor; flupropacil + carbetamide; flupropacil + dimefuron; flupropacil + propyzamide; flupropacil + clopyralid; flupropacil + ethametsulfuron; flupropacil + sethoxydim; flupropacil + fluazifop; flupropacil + quizalofop; flupropacil + clethodim; flupropacil + fenoxaprop; flupropacil + tebutam; pyraflufen-ethyl + glyphosate; pyraflufen-ethyl + glufosinate; pyraflufen-ethyl + sulfosate; nipyraclofen + dimethachlor; nipyraclofen + propaquizafop; nipyraclofen + clomazone; nipyraclofen + napropamide; nipyraclofen + quinmerac; nipyraclofen + metazachlor; nipyraclofen + carbetamide; nipyraclofen + dimefuron; nipyraclofen + propyzamide; nipyraclofen + clopyralid; nipyraclofen + ethametsulfuron; nipyraclofen + sethoxydim; nipyraclofen + fluazifop; nipyraclofen + quizalofop; nipyraclofen + clethodim; nipyraclofen + fenoxaprop; nipyraclofen + tebutam; nipyraclofen + glyphosate; nipyraclofen + glufosinate; nipyraclofen + sulfosate; benzfendizone + dimethachlor; benzfendizone + propaquizafop; benzfendizone + clomazone; benzfendizone + napropamide; benzfendizone + quinmerac; benzfendizone + metazachlor; benzfendizone + carbetamide; benzfendizone + dimefuron; benzfendizone + propyzamide; benzfendizone + clopyralid; benzfendizone + ethametsulfuron; benzfendizone + sethoxydim; benzfendizone + fluazifop; benzfendizone + quizalofop; benzfendizone + clethodim; benzfendizone + fenoxaprop; benzfendizone + tebutam; benzfendizone + glyphosate; benzfendizone + glufosinate; benzfendizone + sulfosate; thidiazimin + dimethachlor; thidiazimin + propaquizafop; thidiazimin + clomazone; thidiazimin + napropamide; thidiazimin + quinmerac; thidiazimin + metazachlor; thidiazimin + carbetamide; thidiazimin + dimefuron; thidiazimin + propyzamide; thidiazimin + clopyralid; thidiazimin + ethametsulfuron; thidiazimin + sethoxydim; thidiazimin + fluazifop; thidiazimin + quizalofop; thidiazimin + clethodim; thidiazimin + fenoxaprop; thidiazimin + tebutam; thidiazimin + glyphosate; thidiazimin + glufosinate; and thidiazimin + sulfosate.

The following combinations of the compounds under a) with the co-herbicides under b) have been found to be very particularly effective synergistic compositions in crops of cotton resistant to protoporphyrinogen oxidase inhibitors:
acifluorfen + fluometuron; acifluorfen + prometryn; acifluorfen + metolachlor; acifluorfen + (S)-metolachlor; acifluorfen + norflurazon; acifluorfen + propaquizafop; acifluorfen + pyrithiobac; acifluorfen + trifluralin; acifluorfen + pendimethalin; acifluorfen + bromoxynil; acifluorfen + clomazone; acifluorfen + MSMA; acifluorfen + DMSA; acifluorfen + fluazifop; acifluorfen + quizalofop; acifluorfen + fenoxaprop; acifluorfen + sethoxydim; acifluorfen + clethodim; acifluorfen + diuron; acifluorfen + cyanazine; acifluorfen + glyphosate; acifluorfen + glufosinate; acifluorfen + sulfosate; acifluorfen + alachlor; acifluorfen + acetochlor; acifluorfen + flurochloridone; acifluorfen + dithiopyr; acifluorfen + thiazopyr; acifluorfen + lactofen; acifluorfen + oxyfluorfen; acifluorfen + ethalfluralin; acifluorfen + compound of the formula C; aclonifen + fluometuron; aclonifen + prometryn; aclonifen + metolachlor; aclonifen + (S)-metolachlor; aclonifen + norflurazon; aclonifen + propaquizafop; aclonifen + pyrithiobac; aclonifen + trifluralin; aclonifen + pendimethalin; aclonifen + bromoxynil; aclonifen + clomazone; aclonifen + MSMA; aclonifen + DMSA; aclonifen + fluazifop; aclonifen + quizalofop; aclonifen + fenoxaprop; aclonifen + sethoxydim; aclonifen + clethodim; aclonifen + diuron; aclonifen + cyanazine; aclonifen + glyphosate; aclonifen + glufosinate; aclonifen + sulfosate; aclonifen + alachlor; aclonifen + acetochlor; aclonifen + flurochloridone; aclonifen + dithiopyr; aclonifen + thiazopyr; aclonifen + lactofen; aclonifen + oxyfluorfen; aclonifen + ethalfluralin; aclonifen + compound of the formula C; bifenox + fluometuron; bifenox + prometryn; bifenox + metolachlor; bifenox + (S)-metolachlor; bifenox + norflurazon; bifenox + propaquizafop; bifenox + pyrithiobac; bifenox + trifluralin; bifenox + pendimethalin; bifenox + bromoxynil; bifenox + clomazone; bifenox + MSMA; bifenox + DMSA; bifenox + fluazifop; bifenox + quizalofop; bifenox + fenoxaprop; bifenox + sethoxydim; bifenox + clethodim; bifenox + diuron; bifenox + cyanazine; bifenox + glyphosate; bifenox + glufosinate; bifenox + sulfosate; bifenox + alachlor; bifenox + acetochlor, bifenox + flurochloridone; bifenox + dithiopyr; bifenox + thiazopyr; bifenox + lactofen; bifenox + oxyfluorfen; bifenox + ethalfluralin; bifenox + compound of the formula C; chlornitrofen + fluometuron; chlornitrofen + prometryn; chlornitrofen + metolachlor; chlornitrofen + (S)-metolachlor; chlornitrofen + norflurazon; chlornitrofen + propaquizafop; chlornitrofen + pyrithiobac; chlornitrofen + trifluralin; chlornitrofen + pendimethalin; chlornitrofen + bromoxynil; chlornitrofen + clomazone; chlornitrofen + MSMA; chlornitrofen + DMSA; chlornitrofen + fluazifop; chlornitrofen + quizalofop; chlornitrofen + fenoxaprop; chlornitrofen + sethoxydim; chlornitrofen + clethodim; chlornitrofen + diuron; chlornitrofen + cyanazine; chiornitrofen + alachlor; chlornitrofen + acetochlor; chlornitrofen + flurochloridone; chlornitrofen + dithiopyr; chlornitrofen + thiazopyr; chlornitrofen + lactofen; chlornitrofen + oxyfluorfen; chlornitrofen + ethalfluralin; chlornitrofen + compound of the formula C; chlornitrofen + glyphosate; chlornitrofen + glufosinate; chlornitrofen + sulfosate; ethoxyfen + fluometuron; ethoxyfen + prometryn; ethoxyfen + metolachlor; ethoxyfen + (S)-metolachlor; ethoxyfen + norflurazon; ethoxyfen + propaquizafop; ethoxyfen + pyrithiobac; ethoxyfen + trifluralin; ethoxyfen + pendimethalin; ethoxyfen + bromoxynil; ethoxyfen + clomazone; ethoxyfen + MSMA; ethoxyfen + DMSA; ethoxyfen + fluazifop; ethoxyfen + quizalofop; ethoxyfen + fenoxaprop; ethoxyfen + sethoxydim; ethoxyfen + clethodim; ethoxyfen + diuron; ethoxyfen + cyanazine; ethoxyfen + alachlor; ethoxyfen + acetochlor; ethoxyfen + flurochloridone; ethoxyfen + dithiopyr; ethoxyfen + thiazopyr; ethoxyfen + lactofen; ethoxyfen + oxyfluorfen; ethoxyfen + ethalfluralin; ethoxyfen + compound of the formula C; ethoxyfen + glyphosate; ethoxyfen + glufosinate; ethoxyfen + sulfosate; fluoroglycofen + fluometuron; fluoroglycofen + prometryn; fluoroglycofen + metolachlor; fluoroglycofen + (S)-metolachlor; fluoroglycofen + norflurazon; fluoroglycofen + propaquizafop; fluoroglycofen + pyrithiobac; fluoroglycofen + trifluralin; fluoroglycofen + pendimethalin; fluoroglycofen + bromoxynil; fluoroglycofen + clomazone; fluoroglycofen + MSMA; fluoroglycofen + DMSA; fluoroglycofen + fluazifop; fluoroglycofen + quizalofop; fluoroglycofen + fenoxaprop; fluoroglycofen + sethoxydim; fluoroglycofen + clethodim; fluoroglycofen + diuron; fluoroglycofen + cyanazine; fluoroglycofen + alachlor; fluoroglycofen + acetochlor; fluoroglycofen + flurochloridone; fluoroglycofen + dithiopyr; fluoroglycofen + thiazopyr; fluoroglycofen + lactofen; fluoroglycofen + oxyfluorfen; fluoroglycofen + ethalfluralin; fluoroglycofen + compound of the formula C; fluoroglycofen + glyphosate; fluoroglycofen + glufosinate; fluoroglycofen + sulfosate; fomesafen + fluometuron; fomesafen + prometryn; fomesafen + metolachlor; fomesafen + (S)-metolachlor; fomesafen + norflurazon; fomesafen + propaquizafop; fomesafen + pyrithiobac; fomesafen + trifluralin; fomesafen + pendimethalin; fomesafen + bromoxynil; fomesafen + clomazone; fomesafen + MSMA; fomesafen + DMSA; fomesafen + fluazifop; fomesafen + quizalofop; fomesafen + fenoxaprop; fomesafen + sethoxydim; fomesafen + clethodim; fomesafen + diuron; fomesafen + cyanazine; fomesafen + alachlor; fomesafen + acetochlor; fomesafen + flurochloridone; fomesafen + dithiopyr; fomesafen + thiazopyr; fomesafen + lactofen; fomesafen + oxyfluorfen; fomesafen + ethalfluralin; fomesafen + compound of the formula C; fomesafen + glyphosate; fomesafen + glufosinate; fomesafen + sulfosate; lactofen + fluometuron; lactofen + prometryn; lactofen + metolachlor; lactofen + (S)-metolachlor; lactofen + norflurazon; lactofen + propaquizafop; lactofen + pyrithiobac; lactofen + trifluralin; lactofen + pendimethalin; lactofen + bromoxynil; lactofen + clomazone; lactofen + MSMA; lactofen + DMSA; lactofen + fluazifop; lactofen + quizalofop; lactofen + fenoxaprop; lactofen + sethoxydim; lactofen + clethodim; lactofen + diuron; lactofen + cyanazine; lactofen + alachlor; lactofen + acetochlor; lactofen + flurochloridone; lactofen + dithiopyr; lactofen + thiazopyr; lactofen + oxyfluorfen; lactofen + ethalfluralin; lactofen + compound of the formula C; lactofen + glyphosate; lactofen + glufosinate; lactofen + sulfosate; oxyfluorfen + fluometuron; oxyfluorfen + prometryn; oxyfluorfen + metolachlor; oxyfluorfen + (S)-metolachlor; oxyfluorfen + norflurazon; oxyfluorfen + propaquizafop; oxyfluorfen + pyrithiobac; oxyfluorfen + trifluralin; oxyfluorfen + pendimethalin; oxyfluorfen + bromoxynil; oxyfluorfen + clomazone; oxyfluorfen + MSMA; oxyfluorfen + DMSA; oxyfluorfen + fluazifop; oxyfluorfen + quizalofop; oxyfluorfen + fenoxaprop; oxyfluorfen + sethoxydim; oxyfluorfen + clethodim; oxyfluorfen + diuron; oxyfluorfen + cyanazine; oxyfluorfen + alachlor; oxyfluorfen + acetochlor; oxyfluorfen + flurochloridone; oxyfluorfen + dithiopyr; oxyfluorfen + thiazopyr; oxyfluorfen + lactofen; oxyfluorfen + ethalfluralin; oxyfluorfen + compound of the formula C; oxyfluorfen + glyphosate; oxyfluorfen + glufosinate; oxyfluorfen + sulfosate; azafenidin + fluometuron; azafenidin + prometryn; azafenidin + metolachlor; azafenidin + (S)-metolachlor, azafenidin + norflurazon; azafenidin + propaquizafop; azafenidin + pyrithiobac; azafenidin + trifluralin; azafenidin + pendimethalin; azafenidin + bromoxynil; azafenidin + clomazone; azafenidin + MSMA; azafenidin + DMSA; azafenidin + fluazifop; azafenidin + quizalofop; azafenidin + fenoxaprop; azafenidin + sethoxydim; azafenidin + clethodim; azafenidin + diuron; azafenidin + cyanazine; azafenidin + alachlor; azafenidin + acetochlor; azafenidin + flurochloridone; azafenidin + dithiopyr, azafenidin + thiazopyr; azafenidin + lactofen; azafenidin + oxyfluorfen; azafenidin + ethalfluralin; azafenidin + compound of the formula C; azafenidin + glyphosate; azafenidin + glufosinate; azafenidin + sulfosate; carfentrazone-ethyl + fluometuron; carfentrazone-ethyl + prometryn; carfentrazone-ethyl + metolachlor; carfentrazone-ethyl + (S)-metolachlor; carfentrazone-ethyl + norflurazon; carfentrazone-ethyl + propaquizafop; carfentrazone-ethyl + pyrithiobac; carfentrazone-ethyl + trifluralin; carfentrazone-ethyl + pendimethalin; carfentrazone-ethyl + bromoxynil; carfentrazone-ethyl + clomazone; carfentrazone-ethyl + MSMA; carfentrazone-ethyl + DMSA; carfentrazone-ethyl + fluazifop; carfentrazone-ethyl + quizalofop; carfentrazone-ethyl + fenoxaprop; carfentrazone-ethyl + sethoxydim; carfentrazone-ethyl + clethodim; carfentrazone-ethyl + diuron; carfentrazone-ethyl + cyanazine; carfentrazone-ethyl + alachlor; carfentrazone-ethyl + acetochlor; carfentrazone-ethyl + flurochloridone; carfentrazone-ethyl + dithiopyr; carfentrazone-ethyl + thiazopyr; carfentrazone-ethyl + lactofen; carfentrazone-ethyl + oxyfluorfen; carfentrazone-ethyl + ethalfluralin; carfentrazone-ethyl + compound of the formula C; carfentrazone-ethyl + glyphosate; carfentrazone-ethyl + glufosinate; carfentrazone-ethyl + sulfosate; compound of the formula A + fluometuron; compound of the formula A + prometryn; compound of the formula A + metolachlor; compound of the formula A + (S)-metolachlor; compound of the formula A + norflurazon; compound of the formula A + propaquizafop; compound of the formula A + pyrithiobac; compound of the formula A + trifluralin; compound of the formula A + pendimethalin; compound of the formula A + bromoxynil; compound of the formula A + clomazone; compound of the formula A + MSMA; compound of the formula A + DMSA; compound of the formula A + fluazifop; compound of the formula A + quizalofop; compound of the formula A + fenoxaprop; compound of the formula A + sethoxydim; compound of the formula A + clethodim; compound of the formula A + diuron; compound of the formula A + cyanazine; compound of the formula A + alachlor; compound of the formula A + acetochlor; compound of the formula A + flurochloridone; compound of the formula A + dithiopyr; compound of the formula A + thiazopyr; compound of the formula A + lactofen; compound of the formula A + oxyfluorfen; compound of the formula A + ethalfluralin; compound of the formula A + compound of the formula C; compound of the formula A + glyphosate; compound of the formula A + glufosinate; compound of the formula A + sulfosate; cinidon-ethyl + fluometuron; cinidon-ethyl + prometryn; cinidon-ethyl + metolachlor; cinidon-ethyl + (S)-metolachlor; cinidon-ethyl + norflurazon; cinidon-ethyl + propaquizafop; cinidon-ethyl + pyrithiobac; cinidon-ethyl + trifluralin; cinidon-ethyl + pendimethalin; cinidon-ethyl + bromoxynil; cinidon-ethyl + clomazone; cinidon-ethyl + MSMA; cinidon-ethyl + DMSA; cinidon-ethyl + fluazifop; cinidon-ethyl + quizalofop; cinidon-ethyl + fenoxaprop; cinidon-ethyl + sethoxydim; cinidon-ethyl + clethodim; cinidon-ethyl + diuron; cinidon-ethyl + cyanazine; cinidon-ethyl + alachlor; cinidon-ethyl + acetochlor; cinidon-ethyl + flurochloridone; cinidon-ethyl + dithiopyr; cinidon-ethyl + thiazopyr; cinidon-ethyl + lactofen; cinidon-ethyl + oxyfluorfen; cinidon-ethyl + ethalfluralin; cinidon-ethyl + compound of the formula C; cinidon-ethyl + glyphosate; cinidon-ethyl + glufosinate; cinidon-ethyl + sulfosate; flumiclorac-pentyl + fluometuron; flumiclorac-pentyl + prometryn; flumiclorac-pentyl + metolachlor; flumiclorac-pentyl + (S)-metolachlor; flumiclorac-pentyl + norflurazon; flumiclorac-pentyl + propaquizafop; flumiclorac-pentyl + pyrithiobac; flumiclorac-pentyl + trifluralin; flumiclorac-pentyl + pendimethalin; flumiclorac-pentyl + bromoxynil; flumiclorac-pentyl + clomazone; flumiclorac-pentyl + MSMA; flumiclorac-pentyl + DMSA; flumiclorac-pentyl + fluazifop; flumiclorac-pentyl + quizalofop; flumiclorac-pentyl + fenoxaprop; flumiclorac-pentyl + sethoxydim; flumiclorac-pentyl + clethodim; flumiclorac-pentyl + diuron; flumiclorac-pentyl + cyanazine; flumiclorac-pentyl + alachlor; flumiclorac-pentyl + acetochlor; flumiclorac-pentyl + flurochloridone; flumiclorac-pentyl + dithiopyr; flumiclorac-pentyl + thiazopyr; flumiclorac-pentyl + lactofen; flumiclorac-pentyl + oxyfluorfen; flumiclorac-pentyl + ethalfluralin; flumiclorac-pentyl + compound of the formula C; flumiclorac-pentyl + glyphosate; flumiclorac-pentyl + glufosinate; flumiclorac-pentyl + sulfosate; flumioxazin + fluometuron; flumioxazin + prometryn; flumioxazin + metolachlor; flumioxazin + (S)-metolachlor; flumioxazin + norflurazon; flumioxazin + propaquizafop; flumioxazin + pyrithiobac; flumioxazin + Trifluralin; flumioxazin + pendimethalin; flumioxazin + bromoxynil; flumioxazin + clomazone; flumioxazin + MSMA; flumioxazin + DMSA; flumioxazin + fluazifop; flumioxazin + quizalofop; flumioxazin + fenoxaprop; flumioxazin + sethoxydim; flumioxazin + clethodim; flumioxazin + diuron; flumioxazin + cyanazine; flumioxazin + alachlor; flumioxazin + acetochlor; flumioxazin + flurochloridone; flumioxazin + dithiopyr; flumioxazin + thiazopyr; flumioxazin + lactofen; flumioxazin + oxyfluorfen; flumioxazin + ethalfluralin; flumioxazin + compound of the formula C; flumioxazin + glyphosate; flumioxazin + glufosinate; flumioxazin + sulfosate; fluthiacet-methyl + fluometuron; fluthiacet-methyl + prometryn; fluthiacet-methyl + metolachlor; fluthiacet-methyl + (S)-metolachlor; fluthiacet-methyl + norflurazon; fluthiacet-methyl + propaquizafop; fluthiacet-methyl + pyrithiobac; fluthiacet-methyl + trifluralin; fluthiacet-methyl + pendimethalin; fluthiacet-methyl + bromoxynil; fluthiacet-methyl + clomazone; fluthiacet-methyl + MSMA; fluthiacet-methyl + DMSA; fluthiacet-methyl + fluazifop; fluthiacet-methyl + quizalofop; fluthiacet-methyl + fenoxaprop; fluthiacet-methyl + sethoxydim; fluthiacet-methyl + clethodim; fluthiacet-methyl + diuron; fluthiacet-methyl + cyanazine; fluthiacet-methyl + alachlor; fluthiacet-methyl + acetochlor; fluthiacet-methyl + flurochloridone; fluthiacet-methyl + dithiopyr; fluthiacet-methyl + thiazopyr; fluthiacet-methyl + lactofen; fluthiacet-methyl + oxyfluorfen; fluthiacet-methyl + ethalfluralin; fluthiacet-methyl + compound of the formula C; fluthiacet-methyl + glyphosate; fluthiacet-methyl + glufosinate; fluthiacet-methyl + sulfosate; oxadiargyl + fluometuron; oxadiargyl + prometryn; oxadiargyl + metolachlor; oxadiargyl + (S)-metolachlor; oxadiargyl + norflurazon; oxadiargyl + propaquizafop; oxadiargyl + pyrithiobac; oxadiargyl + trifluralin; oxadiargyl + pendimethalin; oxadiargyl + bromoxynil; oxadiargyl + clomazone; oxadiargyl + MSMA; oxadiargyl + DMSA; oxadiargyl + fluazifop; oxadiargyl + quizalofop; oxadiargyl + fenoxaprop; oxadiargyl + sethoxydim; oxadiargyl + clethodim; oxadiargyl + diuron; oxadiargyl + cyanazine; oxadiargyl + alachlor; oxadiargyl + acetochlor; oxadiargyl + flurochloridone; oxadiargyl + dithiopyr; oxadiargyl + thiazopyr; oxadiargyl + lactofen; oxadiargyl + oxyfluorfen; oxadiargyl + ethalfluralin; oxadiargyl + compound of the formula C; oxadiargyl + glyphosate; oxadiargyl + glufosinate; oxadiargyl + sulfosate; oxadiazon + fluometuron; oxadiazon + prometryn; oxadiazon + metolachlor; oxadiazon + (S)-metolachlor; oxadiazon + norflurazon; oxadiazon + propaquizafop; oxadiazon + pyrithiobac; oxadiazon + trifluralin; oxadiazon + pendimethalin; oxadiazon + bromoxynil; oxadiazon + clomazone; oxadiazon + MSMA; oxadiazon + DMSA; oxadiazon + fluazifop; oxadiazon + quizalofop; oxadiazon + fenoxaprop; oxadiazon + sethoxydim; oxadiazon + clethodim; oxadiazon + diuron; oxadiazon + cyanazine; oxadiazon + alachlor; oxadiazon + acetochlor; oxadiazon + flurochloridone; oxadiazon + dithiopyr; oxadiazon + thiazopyr; oxadiazon + lactofen; oxadiazon + oxyfluorfen; oxadiazon + ethalfluralin; oxadiazon + compound of the formula C; oxadiazon + glyphosate; oxadiazon + glufosinate; oxadiazon + sulfosate; pentoxazone + fluometuron; pentoxazone + prometryn; pentoxazone + metolachlor; pentoxazone + (S)-metolachlor; pentoxazone + norflurazon; pentoxazone + propaquizafop; pentoxazone + pyrithiobac; pentoxazone + trifluralin; pentoxazone + pendimethalin; pentoxazone + bromoxynil; pentoxazone + clomazone; pentoxazone + MSMA; pentoxazone + DMSA; pentoxazone + fluazifop; pentoxazone + quizalofop; pentoxazone + fenoxaprop; pentoxazone + sethoxydim; pentoxazone + clethodim; pentoxazone + diuron; pentoxazone + cyanazine; pentoxazone + alachlor; pentoxazone + acetochlor; pentoxazone + flurochloridone; pentoxazone + dithiopyr; pentoxazone + thiazopyr; pentoxazone + lactofen; pentoxazone + oxyfluorfen; pentoxazone + ethalfluralin; pentoxazone + compound of the formula C; pentoxazone + glyphosate; pentoxazone + glufosinate; pentoxazone + sulfosate; sulfentrazone + fluometuron; sulfentrazone + prometryn; sulfentrazone + metolachlor; sulfentrazone + (S)-metolachlor; sulfentrazone + norflurazon; sulfentrazone + propaquizafop; sulfentrazone + pyrithiobac; sulfentrazone + trifluralin; sulfentrazone + pendimethalin; sulfentrazone + bromoxynil; sulfentrazone + clomazone; sulfentrazone + MSMA; sulfentrazone + DMSA; sulfentrazone + fluazifop; sulfentrazone + quizalofop; sulfentrazone + fenoxaprop; sulfentrazone + sethoxydim; sulfentrazone + clethodim; sulfentrazone + diuron; sulfentrazone + cyanazine; sulfentrazone + alachlor; sulfentrazone + acetochlor; sulfentrazone + flurochloridone; sulfentrazone + dithiopyr; sulfentrazone + thiazopyr; sulfentrazone + lactofen; sulfentrazone + oxyfluorfen; sulfentrazone + ethalfluralin; sulfentrazone + compound of the formula C; sulfentrazone + glyphosate; sulfentrazone + glufosinate; sulfentrazone + sulfosate; fluazolate + fluometuron; fluazolate + prometryn; fluazolate + metolachlor; fluazolate + (S)-metolachlor; fluazolate + norflurazon; fluazolate + propaquizafop; fluazolate + pyrithiobac; fluazolate + trifluralin; fluazolate + pendimethalin; fluazolate + bromoxynil; fluazolate + clomazone; fluazolate + MSMA; fluazolate + DMSA; fluazolate + fluazifop; fluazolate + quizalofop; fluazolate + fenoxaprop; fluazolate + Sethoxydim; fluazolate + clethodim; fluazolate + diuron; fluazolate + cyanazine; fluazolate + alachlor; fluazolate + acetochlor; fluazolate + flurochloridone; fluazolate + dithiopyr; fluazolate + thiazopyr; fluazolate + lactofen; fluazolate + oxyfluorfen; fluazolate + ethalfluralin; fluazolate + compound of the formula C; fluazolate + glyphosate; fluazolate + glufosinate; fluazolate + sulfosate; pyraflufen-ethyl + fluometuron; pyraflufen-ethyl + prometryn; pyraflufen-ethyl + metolachlor; pyraflufen-ethyl + (S)-metolachlor; pyraflufen-ethyl + norflurazon; pyraflufen-ethyl + propaquizafop; pyraflufen-ethyl + pyrithiobac; pyraflufen-ethyl + trifluralin; pyraflufen-ethyl + pendimethalin; pyraflufen-ethyl + bromoxynil; pyraflufen-ethyl + clomazone; pyraflufen-ethyl + MSMA; pyraflufen-ethyl + DMSA; pyraflufen-ethyl + fluazifop; pyraflufen-ethyl + quizalofop; pyraflufen-ethyl + fenoxaprop; pyraflufen-ethyl + Sethoxydim; pyraflufen-ethyl + clethodim; pyraflufen-ethyl + diuron; pyraflufen-ethyl + cyanazine; pyraflufen-ethyl + alachlor, pyraflufen-ethyl + acetochlor; pyraflufen-ethyl + flurochloridone; pyraflufen-ethyl + dithiopyr; pyraflufen-ethyl + thiazopyr; pyraflufen-ethyl + lactofen; pyraflufen-ethyl + oxyfluorfen; pyraflufen-ethyl + ethalfluratin; pyraflufen-ethyl + compound of the formula C; pyraflufen-ethyl + glyphosate; pyraflufen-ethyl + glufosinate; pyraflufen-ethyl + sulfosate; flumipropyn + fluometuron; flumipropyn + prometryn; flumipropyn + metolachlor; flumipropyn + (S)-metolachlor; flumipropyn + norflurazon; flumipropyn + propaquizafop; flumipropyn + pyrithiobac; flumipropyn + trifluralin; flumipropyn + pendimethalin; flumipropyn + bromoxynil; flumipropyn + clomazone; flumipropyn + MSMA; flumipropyn + DMSA; flumipropyn + fluazifop; flumipropyn + quizalofop; flumipropyn + fenoxaprop; flumipropyn + sethoxydim; flumipropyn + clethodim; flumipropyn + diuron; flumipropyn + cyanazine; flumipropyn + alachlor; flumipropyn + acetochlor; flumipropyn + flurochloridone; flumipropyn + dithiopyr; flumipropyn + thiazopyr; flumipropyn + lactofen; flumipropyn + oxyfluorfen; flumipropyn + ethalfluralin; flumipropyn + compound of the formula C; flumipropyn + glyphosate; flumipropyn + glufosinate; flumipropyn + sulfosate; flupropacil + fluometuron; flupropacil + prometryn; flupropacil + metolachlor; flupropacil + (S)-metolachlor; flupropacil + norflurazon; flupropacil + propaquizafop; flupropacil + pyrithiobac; flupropacil + trifluralin; flupropacil + pendimethalin; flupropacil + bromoxynil; flupropacil + clomazone; flupropacil + MSMA; flupropacil + DMSA; flupropacil + fluazifop; flupropacil + quizalofop; flupropacil + fenoxaprop; flupropacil + sethoxydim; flupropacil + clethodim; flupropacil + diuron; flupropacil + cyanazine; flupropacil + alachlor; flupropacil + acetochlor; flupropacil + flurochloridone; flupropacil + dithiopyr; flupropacil + thiazopyr; flupropacil + lactofen; flupropacil + oxyfluorfen; flupropacil + ethalfluralin; flupropacil + compound of the formula C; flupropacil + glyphosate; flupropacil + glufosinate; flupropacil + sulfosate; nipyraclofen + fluometuron; nipyraclofen + prometryn; nipyraclofen + metolachlor; nipyraclofen + (S)-metolachlor; nipyraclofen + norflurazon; nipyraclofen + propaquizafop; nipyraclofen + pyrithiobac; nipyraclofen + trifluralin; nipyraclofen + pendimethalin; nipyraclofen + bromoxynil; nipyraclofen + clomazone; nipyraclofen + MSMA; nipyraclofen + DMSA; nipyraclofen + fluazifop; nipyraclofen + quizalofop; nipyraclofen + fenoxaprop; nipyraclofen + sethoxydim; nipyraclofen + clethodim; nipyraclofen + diuron; nipyraclofen + cyanazine; nipyraclofen + alachlor; nipyraclofen + acetochlor; nipyraclofen + flurochloridone; nipyraclofen + dithiopyr; nipyraclofen + thiazopyr; nipyraclofen + lactofen; nipyraclofen + oxyfluorfen; nipyraclofen + ethalfluralin; nipyraclofen + compound of the formula C; nipyraclofen + glyphosate; nipyraclofen + glufosinate; nipyraclofen + sulfosate; benzfendizone + fluometuron; benzfendizone + prometryn; benzfendizone + metolachlor; benzfendizone + (S)-metolachlor; benzfendizone + norflurazon; benzfendizone + propaquizafop; benzfendizone + pyrithiobac; benzfendizone + trifluralin; benzfendizone + pendimethalin; benzfendizone + bromoxynil; benzfendizone + clomazone; benzfendizone + MSMA; benzfendizone + DMSA; benzfendizone + fluazifop; benzfendizone + quizalofop; benzfendizone + fenoxaprop; benzfendizone + sethoxydim; benzfendizone + clethodim; benzfendizone + diuron; benzfendizone + cyanazine; benzfendizone + alachlor; benzfendizone + acetochlor; benzfendizone + flurochloridone; benzfendizone + dithiopyr; benzfendizone + thiazopyr; benzfendizone + lactofen; benzfendizone + oxyfluorfen; benzfendizone + ethalfluralin; benzfendizone + compound of the formula C; benzfendizone + glyphosate; benzfendizone + glufosinate; benzfendizone + sulfosate; thidiazimin + fluometuron; thidiazimin + prometryn; thidiazimin + metolachlor; thidiazimin + (S)-metolachlor; thidiazimin + norflurazon; thidiazimin + propaquizafop; thidiazimin + pyrithiobac; thidiazimin + trifluralin; thidiazimin + pendimethalin; thidiazimin + bromoxynil; thidiazimin + clomazone; thidiazimin + MSMA; thidiazimin + DMSA; thidiazimin + fluazifop; thidiazimin + quizalofop; thidiazimin + fenoxaprop; thidiazimin + sethoxydim; thidiazimin + clethodim; thidiazimin + diuron; thidiazimin + cyanazine; thidiazimin + alachlor; thidiazimin + acetochlor; thidiazimin + flurochloridone; thidiazimin + dithiopyr; thidiazimin + thiazopyr; thidiazimin + lactofen; thidiazimin + oxyfluorfen; thidiazimin + ethalfluralin; thidiazimin + compound of the formula C; thidiazimin + glyphosate; thidiazimin + glufosinate; and thidiazimin + sulfosate.

The following combinations of the compounds under a) with the co-herbicides under b) have been found to be very particularly effective synergistic compositions in crops of sunflowers resistant to protoporphyrinogen oxidase inhibitors:
acifluorfen + metolachlor; acifluorfen + (S)-metolachlor; acifluorfen + pendimethalin; acifluorfen + aclonifen; acifluorfen + flurochloridone; acifluorfen + prometryn; acifluorfen + sethoxydim; acifluorfen + fluazifop; acifluorfen + quizalofop; acifluorfen + clethodim; acifluorfen + fenoxaprop; acifluorfen + terbutryn; acifluorfen + acetochlor; acifluorfen + trifluralin; acifluorfen + glyphosate; acifluorfen + glufosinate; acifluorfen + sulfosate; aclonifen + metolachlor, aclonifen + (S)-metolachlor; aclonifen + pendimethalin; aclonifen + flurochloridon; aclonifen + prometryn; aclonifen + sethoxydim; aclonifen + fluazifop; aclonifen + quizalofop; aclonifen + clethodim; aclonifen + fenoxaprop; aclonifen + terbutryn; aclonifen + acetochlor; aclonifen + trifluralin; aclonifen + glyphosate; aclonifen + glufosinate; aclonifen + sulfosate; bifenox + metolachlor; bifenox + (S)-metolachlor; bifenox + pendimethalin; bifenox + aclonifen; bifenox + flurochloridon; bifenox + prometryn; bifenox + sethoxydim; bifenox + fluazifop; bifenox + quizalofop; bifenox + clethodim; bifenox + fenoxaprop; bifenox + terbutryn; bifenox + acetochlor; bifenox + trifluralin; bifenox + glyphosate; bifenox + glufosinate; bifenox + sulfosate; chlornitrofen + metolachlor; chlornitrofen + (S)-metolachlor; chlornitrofen + pendimethalin; chlornitrofen + aclonifen; chlornitrofen + flurochloridon; chlornitrofen + prometryn; chlornitrofen + sethoxydim; chlornitrofen + fluazifop; chlornitrofen + quizalofop; chlornitrofen + clethodim; chlornitrofen + fenoxaprop; chlornitrofen + terbutryn; chlornitrofen + acetochlor; chlornitrofen + trifluralin; chlornitrofen + glyphosate; chlornitrofen + glufosinate; chlornitrofen + sulfosate; ethoxyfen + metolachlor; ethoxyfen + (S)-metolachlor; ethoxyfen + pendimethalin; ethoxyfen + aclonifen; ethoxyfen + flurochloridon; ethoxyfen + prometryn; ethoxyfen + sethoxydim; ethoxyfen + fluazifop; ethoxyfen + quizalofop; ethoxyfen + clethodim; ethoxyfen + fenoxaprop; ethoxyfen + terbutryn; ethoxyfen + acetochlor; ethoxyfen + trifluralin; ethoxyfen + glyphosate; ethoxyfen + glufosinate; ethoxyfen + sulfosate; fluoroglycofen + metolachlor; fluoroglycofen + (S)-metolachlor; fluoroglycofen + pendimethalin; fluoroglycofen + aclonifen; fluoroglycofen + flurochforidon; fluoroglycofen + prometryn; fluoroglycofen + sethoxydim; fluoroglycofen + fluazifop; fluoroglycofen + quizalofop; fluoroglycofen + clethodim; fluoroglycofen + fenoxaprop; fluoroglycofen + terbutryn; fluoroglycofen + acetochlor; fluoroglycofen + trifluralin; fluoroglycofen + glyphosate; fluoroglycofen + glufosinate; fluoroglycofen + sulfosate; fomesafen + metolachlor; fomesafen + (S)-metolachlor; fomesafen + pendimethalin; fomesafen + aclonifen; fomesafen + flurochloridon; fomesafen + prometryn; fomesafen + sethoxydim; fomesafen + fluazifop; fomesafen + quizalofop; fomesafen + clethodim; fomesafen + fenoxaprop; fomesafen + terbutryn; fomesafen + acetochlor; fomesafen + trifluralin; fomesafen + glyphosate; fomesafen + glufosinate; fomesafen + sulfosate; lactofen + metolachlor; lactofen + (S)-metolachlor; lactofen + pendimethalin; lactofen + aclonifen; lactofen + flurochloridon; lactofen + prometryn; lactofen + sethoxydim; lactofen + fluazifop; lactofen + quizalofop; lactofen + clethodim; lactofen + fenoxaprop; lactofen + terbutryn; lactofen + acetochlor; lactofen + trifluralin; lactofen + glyphosate; lactofen + glufosinate; lactofen + sulfosate; oxyfluorfen + metolachlor; oxyfluorfen + (S)-metolachlor; oxyfluorfen + pendimethalin; oxyfluorfen + aclonifen; oxyfluorfen + flurochloridon; oxyfluorfen + prometryn; oxyfluorfen + sethoxydim; oxyfluorfen + fluazifop; oxyfluorfen + quizalofop; oxyfluorfen + clethodim; oxyfluorfen + fenoxaprop; oxyfluorfen + terbutryn; oxyfluorfen + acetochlor; oxyfluorfen + trifluralin; oxyfluorfen + glyphosate; oxyfluorfen + glufosinate; oxyfluorfen + sulfosate; azafenidin + metolachlor; azafenidin + (S)-metolachlor; azafenidin + pendimethalin; azafenidin + aclonifen; azafenidin + flurochloridon; azafenidin + prometryn; azafenidin + sethoxydim; azafenidin + fluazifop; azafenidin + quizalofop; azafenidin + clethodim; azafenidin + fenoxaprop; azafenidin + terbutryn; azafenidin + acetochlor; azafenidin + trifluralin; azafenidin + glyphosate; azafenidin + glufosinate; azafenidin + sulfosate; carfentrazone-ethyl + metolachlor; carfentrazone-ethyl + (S)-metolachlor; carfentrazone-ethyl + pendimethalin; carfentrazone-ethyl + aclonifen; carfentrazone-ethyl + flurochloridon; carfentrazone-ethyl + prometryn; carfentrazone-ethyl + sethoxydim; carfentrazone-ethyl + fluazifop; carfentrazone-ethyl + quizalofop; carfentrazone-ethyl + clethodim; carfentrazone-ethyl + fenoxaprop; carfentrazone-ethyl + terbutryn; carfentrazone-ethyl + acetochlor; carfentrazone-ethyl + trifluralin; carfentrazone-ethyl + glyphosate; carfentrazone-ethyl + glufosinate; carfentrazone-ethyl + sulfosate; compound of the formula A + metolachlor; compound of the formula A + (S)-metolachlor; compound of the formula A + pendimethalin; compound of the formula A + aclonifen; compound of the formula A + flurochloridon; compound of the formula A + prometryn; compound of the formula A + sethoxydim; compound of the formula A + fluazifop; compound of the formula A + quizalofop; compound of the formula A + clethodim; compound of the formula A + fenoxaprop; compound of the formula A + terbutryn; compound of the formula A + acetochlor; compound of the formula A + trifluratin; compound of the formula A + glyphosate; compound of the formula A + glufosinate; compound of the formula A + sulfosate; cinidon-ethyl + metolachlor; cinidon-ethyl + (S)-metolachlor; cinidon-ethyl + pendimethalin; cinidon-ethyl + aclonifen; cinidon-ethyl + flurochloridon; cinidon-ethyl + prometryn; cinidon-ethyl + sethoxydim; cinidon-ethyl + fluazifop; cinidon-ethyl + quizalofop; cinidon-ethyl + clethodim; cinidon-ethyl + fenoxaprop; cinidon-ethyl + terbutryn; cinidon-ethyl + acetochlor; cinidon-ethyl + trifluralin; cinidon-ethyl + glyphosate; cinidon-ethyl + glufosinate; ciniden-ethyl + sulfosate; flumiclorac-pentyl + metolachlor; flumiclorac-pentyl + (S)-metolachlor; flumiclorac-pentyl + pendimethalin; flumiclorac-pentyl + aclonifen; flumiclorac-pentyl + flurochloridon; flumiclorac-pentyl + prometryn; flumiclorac-pentyl + sethoxydim; flumiclorac-pentyl + fluazifop; flumiclorac-pentyl + quizalofop; flumiclorac-pentyl + clethodim; flumiclorac-pentyl + fenoxaprop; flumiclorac-pentyl + terbutryn; flumiclorac-pentyl + acetochlor; flumiclorac-pentyl + trifluralin; flumiclorac-pentyl + glyphosate; flumiclorac-pentyl + glufosinate; flumiclorac-pentyl + sulfosate; flumioxazin + metolachlor; flumioxazin + (S)-metolachlor; flumioxazin + pendimethalin; flumioxazin + aclonifen; flumioxazin + flurochloridon; flumioxazin + prometryn; flumioxazin + sethoxydim; flumioxazin + fluazifop; flumioxazin + quizalofop; flumioxazin + clethodim; flumioxazin + fenoxaprop; flumioxazin + terbutryn; flumioxazin + acetochlor; flumioxazin + trifluralin; flumioxazin + glyphosate; flumioxazin + glufosinate; flumioxazin + sulfosate; fluthiacet-methyl + metolachlor; fluthiacet-methyl + (S)-metolachlor; fluthiacet-methyl + pendimethalin; fluthiacet-methyl + aclonifen; fluthiacet-methyl + flurochloridon; fluthiacet-methyl + prometryn; fluthiacet-methyl + sethoxydim; fluthiacet-methyl + fluazifop; fluthiacet-methyl + quizalofop; fluthiacet-methyl + clethodim; fluthiacet-methyl + fenoxaprop; fluthiacet-methyl + terbutryn; fluthiacet-methyl + acetochlor; fluthiacet-methyl + trifluralin; fluthiacet-methyl + glyphosate; fluthiacet-methyl + glufosinate; fluthiacet-methyl + sulfosate; oxadiargyl + metolachlor; oxadiargyl + (S)-metolachlor; oxadiargyl + pendimethalin; oxadiargyl + aclonifen; oxadiargyl + flurochloridon; oxadiargyl + prometryn; oxadiargyl + sethoxydim; oxadiargyl + fluazifop; oxadiargyl + quizalofop; oxadiargyl + clethodim; oxadiargyl + fenoxaprop; oxadiargyl + terbutryn; oxadiargyl + acetochlor; oxadiargyl + trifluralin; oxadiargyl + glyphosate; oxadiargyl + glufosinate; oxadiargyl + sulfosate; oxadiazon + metolachlor; oxadiazon + (S)-metolachlor; oxadiazon + pendimethalin; oxadiazon + aclonifen; oxadiazon + flurochloridon; oxadiazon + prometryn; oxadiazon + sethoxydim; oxadiazon + fluazifop; oxadiazon + quizalofop; oxadiazon + clethodim; oxadiazon + fenoxaprop; oxadiazon + terbutryn; oxadiazon + acetochlor; oxadiazon + trifluralin; oxadiazon + glyphosate; oxadiazon + glufosinate; oxadiazon + sulfosate; pentoxazone + metolachlor; pentoxazone + (S)-metolachlor; pentoxazone + pendimethalin; pentoxazone + aclonifen; pentoxazone + flurochloridon; pentoxazone + prometryn; pentoxazone + sethoxydim; pentoxazone + fluazifop; pentoxazone + quizalofop; pentoxazone + clethodim; pentoxazone + fenoxaprop; pentoxazone + terbutryn; pentoxazone + acetochlor; pentoxazone + trifluralin; pentoxazone + glyphosate; pentoxazone + glufosinate; pentoxazone + sulfosate; sulfentrazone + metolachlor; sulfentrazone + (S)-metolachlor; sulfentrazone + pendimethalin; sulfentrazone + aclonifen; sulfentrazone + flurochloridon; sulfentrazone + prometryn; sulfentrazone + sethoxydim; sulfentrazone + fluazifop; sulfentrazone + quizalofop; sulfentrazone + clethodim; sulfentrazone + fenoxaprop; sulfentrazone + terbutryn; sulfentrazone + acetochlor; sulfentrazone + trifluralin; sulfentrazone + glyphosate; sulfentrazone + glufosinate; sulfentrazone + sulfosate; fluazolate + metolachlor; fluazolate + (S)-metotachlor; fluazolate + pendimethalin; fluazolate + aclonifen; fluazolate + flurochloridon; fluazolate + prometryn; fluazolate + sethoxydim; fluazolate + fluazifop; fluazolate + quizalofop; fluazolate + clethodim; fluazolate + fenoxaprop; fluazolate + terbutryn; fluazolate + acetochlor; fluazolate + trifluralin; fluazolate + glyphosate; fluazolate + glufosinate; fluazolate + sulfosate; pyraflufen-ethyl + metolachlor; pyraflufen-ethyl + (S)-metolachlor; pyraflufen-ethyl + pendimethalin; pyraflufen-ethyl + aclonifen; pyraflufen-ethyl + flurochloridon; pyraflufen-ethyl + prometryn; pyraflufen-ethyl + sethoxydim; pyraflufen-ethyl + fluazifop; pyraflufen-ethyl + quizalofop; pyraflufen-ethyl + clethodim; pyraflufen-ethyl + fenoxaprop; pyraflufen-ethyl + terbutryn; pyraflufen-ethyl + acetochlor; pyraflufen-ethyl + trifluralin; pyraflufen-ethyl + glyphosate; pyraflufen-ethyl + glufosinate; pyraflufen-ethyl + sulfosate; flumipropyn + metolachlor; flumipropyn + (S)-metolachlor; flumipropyn + pendimethalin; flumipropyn + aclonifen; flumipropyn + flurochloridon; flumipropyn + prometryn; flumipropyn + sethoxydim; flumipropyn + fluazifop; flumipropyn + quizalofop; flumipropyn + clethodim; flumipropyn + fenoxaprop; flumipropyn + terbutryn; flumipropyn + acetochlor; flumipropyn + trifluralin; flumipropyn + glyphosate; flumipropyn + glufosinate; flumipropyn + sulfosate; flupropacil + metolachlor; flupropacil + (S)-metolachlor; flupropacil + pendimethalin; flupropacil + aclonifen; flupropacil + flurochloridon; flupropacil + prometryn; flupropacil + sethoxydim; flupropacil + fluazifop; flupropacil + quizalofop; flupropacil + clethodim; flupropacil + fenoxaprop; flupropacil + terbutryn; flupropacil + acetochlor; flupropacil + trifluralin; flupropacil + glyphosate; flupropacil + glufosinate; flupropacil + sulfosate; nipyraclofen + metolachlor; nipyraclofen + (S)-metolachlor; nipyraclofen + pendimethalin; nipyraclofen + aclonifen; nipyraclofen + flurochloridon; nipyraclofen + prometryn; nipyraclofen + sethoxydim; nipyraclofen + fluazifop; nipyraclofen + quizalofop; nipyraclofen + clethodim; nipyraclofen + fenoxaprop; nipyraclofen + terbutryn; nipyraclofen + acetochlor; nipyraclofen + trifluralin; nipyraclofen + glyphosate; nipyraclofen + glufosinate; nipyraclofen + sulfosate; benzfendizone + metolachlor; benzfendizone + (S)-metolachlor; benzfendizone + pendimethalin; benzfendizone + aclonifen; benzfendizone + flurochloridon; benzfendizone + prometryn; benzfendizone + sethoxydim; benzfendizone + fluazifop; benzfendizone + quizalofop; benzfendizone + clethodim; benzfendizone + fenoxaprop; benzfendizone + terbutryn; benzfendizone + acetochlor; benzfendizone + trifluralin; benzfendizone + glyphosate; benzfendizone + glufosinate; benzfendizone + sulfosate; thidiazimin + metolachlor; thidiazimin + (S)-metolachlor; thidiazimin + pendimethalin; thidiazimin + aclonifen; thidiazimin + flurochloridon; thidiazimin + prometryn; thidiazimin + sethoxydim; thidiazimin + fluazifop; thidiazimin + quizalofop; thidiazimin + clethodim; thidiazimin + fenoxaprop; thidiazimin + terbutryn; thidiazimin + acetochlor; thidiazimin + trifluralin; thidiazimin + glyphosate; thidiazimin + glufosinate; and thidiazimin + sulfosate.

The following combinations of the compounds under a) with the co-herbicides under b) have been found to be very particularly effective synergistic compositions in crops of cereals resistant to protoporphyrinogen oxidase inhibitors:
acifluorfen + triasulfuron; acifluorfen + prosulfuron; acifluorfen + clodinafop; acifluorfen + terbutryne; acifluorfen + amidosulfuron; acifluorfen + bromoxynil; acifluorfen + carfentrazone; acifluorfen + dicamba; acifluorfen + diclofop-methyl; acifluorfen + diflufenican; acifluorfen + ethoxysulfuron; acifluorfen + fenoxaprop(P-ethyl); acifluorfen + fentrazamide; acifluorfen + flazasulfuron; acifluorfen + florasulam; acifluorfen + fluazolate; acifluorfen + flucarbazone; acifluorfen + flufenacet; acifluorfen + flupyrsulfuron; acifluorfen + flurtamone; acifluorfen + iodosulfuron; acifluorfen + isoproturon; acifluorfen + chlortoluron; acifluorfen + MCPA; acifluorfen + MCPB; acifluorfen + mecoprop; acifluorfen + MCPP; acifluorfen + chlorsulfuron; acifluorfen + metsulfuron; acifluorfen + sulfosulfuron; acifluorfen + thifensulfuron; acifluorfen + tribenuron; acifluorfen + 2,4-D; acifluorfen + 2,4-DB; acifluorfen + 2,4DP; acifluorfen + bifenox; acifluorfen + ethametsulfuron; acifluorfen + flamprop-M; acifluorfen + imazamethabenz; acifluorfen + ioxynil; acifluorfen + bromoxynil; acifluorfen + metosulam; acifluorfen + pyridate; acifluorfen + quinmerac; acifluorfen + tralkoxydim; acifluorfen + fluoroglycofen-ethyl; acifluorfen + methabenzthiazuron; acifluorfen + ethalfluralin; acifluorfen + pendimethalin; acifluorfen + trifluralin; acifluorfen + isoxaben; acifluorfen + prosulfocarb; acifluorfen + triallate; acifluorfen + clopyralid; acifluorfen + fluroxypyr; acifluorfen + benazolin-ethyl; acifluorfen + difenzoquat; acifluorfen + glyphosate; acifluorfen + glufosinate; acifluorfen + sulfosate; aclonifen + triasulfuron; aclonifen + prosulfuron; aclonifen + clodinafop; aclonifen + terbutryne; aclonifen + amidosulfuron; aclonifen + bromoxynil; aclonifen + carfentrazone; aclonifen + dicamba; aclonifen + diclofop-methyl; aclonifen + diflufenican; aclonifen + ethoxysulfuron; aclonifen + fenoxaprop(P-ethyl); aclonifen + fentrazamide; aclonifen + flazasulfuron; aclonifen + florasulam; aclonifen + fluazolate; aclonifen + flucarbazone; aclonifen + flufenacet; aclonifen + flupyrsulfuron; aclonifen + flurtamone; aclonifen + iodosulfuron; aclonifen + isoproturon; aclonifen + chlortoluron; aclonifen + MCPA; aclonifen + MCPB; aclonifen + mecoprop; aclonifen + MCPP; aclonifen + chlorsulfuron; aclonifen + metsulfuron; aclonifen + sulfosulfuron; aclonifen + thifensulfuron; aclonifen + tribenuron; aclonifen + 2,4-D; aclonifen + 2,4-DB; aclonifen + 2,4DP; aclonifen + bifenox; aclonifen + ethametsulfuron; aclonifen + flamprop-M; aclonifen + imazamethabenz; aclonifen + ioxynil; aclonifen + bromoxynil; aclonifen + metosulam; aclonifen + pyridate; aclonifen + quinmerac; aclonifen + tralkoxydim; aclonifen + fluoroglycofen-ethyl; aclonifen + methabenzthiazuron; aclonifen + ethalfluralin; aclonifen + pendimethalin; aclonifen + trifluralin; aclonifen + isoxaben; aclonifen + prosulfocarb; aclonifen + triallate; aclonifen + clopyralid; aclonifen + fluroxypyr; aclonifen + benazolin-ethyl; aclonifen + difenzoquat; aclonifen + glyphosate; aclonifen + glufosinate; aclonifen + sulfosate; bifenox + triasulfuron; bifenox + prosulfuron; bifenox + clodinafop; bifenox + terbutryne; bifenox + amidosulfuron; bifenox + bromoxynil; bifenox + carfentrazone; bifenox + dicamba; bifenox + diclofop-methyl; bifenox + diflufenican; bifenox + ethoxysulfuron; bifenox + fenoxaprop(P-ethyl); bifenox + fentrazamide; bifenox + flazasulfuron; bifenox + florasulam; bifenox + fluazolate; bifenox + flucarbazone; bifenox + flufenacet; bifenox + flupyrsulfuron; bifenox + flurtamone; bifenox + iodosulfuron; bifenox + isoproturon; bifenox + chlortoluron; bifenox + MCPA; bifenox + MCPB; bifenox + mecoprop; bifenox + MCPP; bifenox + chlorsulfuron; bifenox + metsulfuron; bifenox + sulfosulfuron; bifenox + thifensulfuron; bifenox + tribenuron; bifenox + 2,4-D; bifenox + 2,4-DB; bifenox + 2,4DP; bifenox + ethametsulfuron; bifenox + flamprop-M; bifenox + imazamethabenz; bifenox + ioxynil; bifenox + bromoxynil; bifenox + metosulam; bifenox + pyridate; bifenox + quinmerac; bifenox + tralkoxydim; bifenox + fluoroglycofen-ethyl; bifenox + methabenzthiazuron; bifenox + ethalfluralin; bifenox + pendimethalin; bifenox + trifluralin; bifenox + isoxaben; bifenox + prosulfocarb; bifenox + triallate; bifenox + clopyralid; bifenox + fluroxypyr; bifenox + benazolin-ethyl; bifenox + difenzoquat; aclonifen + glyphosate; aclonifen + glufosinate; aclonifen + sulfosate; chlornitrofen + triasulfuron; chlornitrofen + prosulfuron; chlornitrofen + clodinafop; chlornitrofen + terbutryne; chlornitrofen + amidosulfuron; chlornitrofen + bromoxynil; chlornitrofen + carfentrazone; chlornitrofen + dicamba; chlornitrofen + diclofop-methyl; chlornitrofen + diflufenican; chlornitrofen + ethoxysulfuron; chlornitrofen + fenoxaprop(P-ethyl); chlornitrofen + fentrazamide; chlornitrofen + flazasulfuron; chlornitrofen + florasulam; chlornitrofen + fluazolate; chlornitrofen + flucarbazone; chlornitrofen + flufenacet; chlornitrofen + flupyrsulfuron; chlornitrofen + flurtamone; chlornitrofen + iodosulfuron; chlornitrofen + isoproturon; chlornitrofen + chlortoluron; chlornitrofen + MCPA; chlornitrofen + MCPB; chlornitrofen + mecoprop; chlornitrofen + MCPP; chlornitrofen + chlorsulfuron; chlornitrofen + metsulfuron; chlornitrofen + sulfosulfuron; chlornitrofen + thifensulfuron; chlornitrofen + tribenuron; chlornitrofen + 2,4-D; chlornitrofen + 2,4-DB; chlornitrofen + 2,4DP; chlornitrofen + bifenox; chlornitrofen + ethametsulfuron; chlornitrofen + flamprop-M; chlornitrofen + imazamethabenz; chlornitrofen + ioxynil; chlornitrofen + bromoxynil; chlornitrofen + metosulam; chlornitrofen + pyridate; chlornitrofen + quinmerac; chlornitrofen + tralkoxydim; chlornitrofen + fluoroglycofen-ethyl; chlornitrofen + methabenzthiazuron; chlornitrofen + ethalfluralin; chlornitrofen + pendimethalin; chlornitrofen + trifluralin; chlornitrofen + isoxaben; chlornitrofen + prosulfocarb; chlornitrofen + triallate; chlornitrofen + clopyralid; chlornitrofen + fluroxypyr; chlornitrofen + benazolin-ethyl; chlornitrofen + difenzoquat; chlornitrofen + glyphosate; chlornitrofen + glufosinate; chlornitrofen + sulfosate; ethoxyfen + triasulfuron; ethoxyfen + prosulfuron; ethoxyfen + clodinafop; ethoxyfen + terbutryne; ethoxyfen + amidosulfuron; ethoxyfen + bromoxynil; ethoxyfen + carfentrazone; ethoxyfen + dicamba; ethoxyfen + diclofop-methyl; ethoxyfen + diflufenican; ethoxyfen + ethoxysulfuron; ethoxyfen + fenoxaprop(P-ethyl); ethoxyfen + fentrazamide; ethoxyfen + flazasulfuron; ethoxyfen + florasulam; ethoxyfen + fluazolate; ethoxyfen + flucarbazone; ethoxyfen + flufenacet; ethoxyfen + flupyrsulfuron; ethoxyfen + flurtamone; ethoxyfen + iodosulfuron; ethoxyfen + isoproturon; ethoxyfen + chlortoluron; ethoxyfen + MCPA; ethoxyfen + MCPB; ethoxyfen + mecoprop; ethoxyfen + MCPP; ethoxyfen + chlorsulfuron; ethoxyfen + metsulfuron; ethoxyfen + sulfosulfuron; ethoxyfen + thifensulfuron; ethoxyfen + tribenuron; ethoxyfen + 2,4-D; ethoxyfen + 2,4-DB; ethoxyfen + 2,4DP; ethoxyfen + bifenox; ethoxyfen + ethametsulfuron; ethoxyfen + flamprop-M; ethoxyfen + imazamethabenz; ethoxyfen + ioxynil; ethoxyfen + bromoxynil; ethoxyfen + metosulam; ethoxyfen + pyridate; ethoxyfen + quinmerac; ethoxyfen + tralkoxydim; ethoxyfen + fluoroglycofen-ethyl; ethoxyfen + methabenzthiazuron; ethoxyfen + ethalfluralin; ethoxyfen + pendimethalin; ethoxyfen + trifluralin; ethoxyfen + isoxaben; ethoxyfen + prosulfocarb; ethoxyfen + triallate; ethoxyfen + clopyralid; ethoxyfen + fluroxypyr; ethoxyfen + benazolin-ethyl; ethoxyfen + difenzoquat; ethoxyfen + glyphosate; ethoxyfen + glufosinate; ethoxyfen + sulfosate; fluoroglycofen + triasulfuron; fluoroglycofen + prosulfuron; fluoroglycofen + clodinafop; fluoroglycofen + terbutryne; fluoroglycofen + amidosulfuron; fluoroglycofen + bromoxynil; fluoroglycofen + carfentrazone; fluoroglycofen + dicamba; fluoroglycofen + diclofop-methyl; fluoroglycofen + diflufenican; fluoroglycofen + ethoxysulfuron; fluoroglycofen + fenoxaprop(P-ethyl); fluoroglycofen + fentrazamide; fluoroglycofen + flazasulfuron; fluoroglycofen + florasulam; fluoroglycofen + fluazolate; fluoroglycofen + flucarbazone; fluoroglycofen + flufenacet; fluoroglycofen + flupyrsulfuron; fluoroglycofen + flurtamone; fluoroglycofen + iodosulfuron; fluoroglycofen + isoproturon; fluoroglycofen + chlortoluron; fluoroglycofen + MCPA; fluoroglycofen + MCPB; fluoroglycofen + mecoprop; fluoroglycofen + MCPP; fluoroglycofen + chlorsulfuron; fluoroglycofen + metsulfuron; fluoroglycofen + sulfosulfuron; fluoroglycofen + thifensulfuron; fluoroglycofen + tribenuron; fluoroglycofen + 2,4-D; fluoroglycofen + 2,4-DB; fluoroglycofen + 2,4DP; fluoroglycofen + bifenox; fluoroglycofen + ethametsulfuron; fluoroglycofen + flamprop-M; fluoroglycofen + imazamethabenz; fluoroglycofen + ioxynil; fluoroglycofen + bromoxynil; fluoroglycofen + metosulam; fluoroglycofen + pyridate; fluoroglycofen + quinmerac; fluoroglycofen + tralkoxydim; fluoroglycofen + methabenzthiazuron; fluoroglycofen + ethalfluralin; fluoroglycofen + pendimethalin; fluoroglycofen + trifluralin; fluoroglycofen + isoxaben; fluoroglycofen + prosulfocarb; fluoroglycofen + triallate; fluoroglycofen + clopyralid; fluoroglycofen + fluroxypyr; fluoroglycofen + benazolin-ethyl; fluoroglycofen + difenzoquat; fluoroglycofen + glyphosate; fluoroglycofen + glufosinate; fluoroglycofen + sulfosate; fomesafen + triasulfuron; fomesafen + prosulfuron; fomesafen + clodinafop; fomesafen + terbutryne; fomesafen + amidosulfuron; fomesafen + bromoxynil; fomesafen + carfentrazone; fomesafen + dicamba; fomesafen + diclofop-methyl; fomesafen + diflufenican; fomesafen + ethoxysulfuron; fomesafen + fenoxaprop(P-ethyl); fomesafen + fentrazamide; fomesafen + flazasulfuron; fomesafen + florasulam; fomesafen + fluazolate; fomesafen + flucarbazone; fomesafen + flufenacet; fomesafen + flupyrsulfuron; fomesafen + flurtamone; fomesafen + iodosulfuron; fomesafen + isoproturon; fomesafen + chlortoluron; fomesafen + MCPA; fomesafen + MCPB; fomesafen + mecoprop; fomesafen + MCPP; fomesafen + chlorsulfuron; fomesafen + metsulfuron; fomesafen + sulfosulfuron; fomesafen + thifensulfuron; fomesafen + tribenuron; fomesafen + 2,4-D; fomesafen + 2,4-DB; fomesafen + 2,4DP; fomesafen + bifenox; fomesafen + ethametsulfuron; fomesafen + flamprop-M; fomesafen + imazamethabenz; fomesafen + ioxynil; fomesafen + bromoxynil; fomesafen + metosulam; fomesafen + pyridate; fomesafen + quinmerac; fomesafen + tralkoxydim; fomesafen + fluoroglycofen-ethyl; fomesafen + methabenzthiazuron; fomesafen + ethalfluralin; fomesafen + pendimethalin; fomesafen + trifluralin; fomesafen + isoxaben; fomesafen + prosulfocarb; fomesafen + triallate; fomesafen + clopyralid; fomesafen + fluroxypyr; fomesafen + benazolin-ethyl; fomesafen + difenzoquat; fomesafen + glyphosate; fomesafen + glufosinate; fomesafen + sulfosate; lactofen + triasulfuron; lactofen + prosulfuron; lactofen + clodinafop; lactofen + terbutryne; lactofen + amidosulfuron; lactofen + bromoxynil; lactofen + carfentrazone; lactofen + dicamba; lactofen + diclofop-methyl; lactofen + diflufenican; lactofen + ethoxysulfuron; lactofen + fenoxaprop(P-ethyl); lactofen + fentrazamide; lactofen + flazasulfuron; lactofen + florasulam; lactofen + fluazolate; lactofen + flucarbazone; lactofen + flufenacet; lactofen + flupyrsulfuron; lactofen + flurtamone; lactofen + iodosulfuron; lactofen + isoproturon; lactofen + chlortoluron; lactofen + MCPA; lactofen + MCPB; lactofen + mecoprop; lactofen + MCPP; lactofen + chlorsulfuron; lactofen + metsulfuron; lactofen + sulfosulfuron; lactofen + thifensulfuron; lactofen + tribenuron; lactofen + 2,4-D; lactofen + 2,4-DB; lactofen + 2,4DP; lactofen + bifenox; lactofen + ethametsulfuron; lactofen + flamprop-M; lactofen + imazamethabenz; lactofen + ioxynil; lactofen + bromoxynil; lactofen + metosulam; lactofen + pyridate; lactofen + quinmerac; lactofen + tralkoxydim; lactofen + fluoroglycofen-ethyl; lactofen + methabenzthiazuron; lactofen + ethalfluralin; lactofen + pendimethalin; lactofen + trifluralin; lactofen + isoxaben; lactofen + prosulfocarb; lactofen + triallate; lactofen + clopyralid; lactofen + fluroxypyr; lactofen + benazolin-ethyl; lactofen + difenzoquat; lactofen + glyphosate; lactofen + glufosinate; lactofen + sulfosate; oxyfluorfen + triasulfuron; oxyfluorfen + prosulfuron; oxyfluorfen + clodinafop; oxyfluorfen + terbutryne; oxyfluorfen + amidosulfuron; oxyfluorfen + bromoxynil; oxyfluorfen + carfentrazone; oxyfluorfen + dicamba; oxyfluorfen + diclofop-methyl; oxyfluorfen + diflufenican; oxyfluorfen + ethoxysulfuron; oxyfluorfen + fenoxaprop(P-ethyl); oxyfluorfen + fentrazamide; oxyfluorfen + flazasulfuron; oxyfluorfen + florasulam; oxyfluorfen + fluazolate; oxyfluorfen + flucarbazone; oxyfluorfen + flufenacet; oxyfluorfen + flupyrsulfuron; oxyfluorfen + flurtamone; oxyfluorfen + iodosulfuron; oxyfluorfen + isoproturon; oxyfluorfen + chlortoluron; oxyfluorfen + MCPA; oxyfluorfen + MCPB; oxyfluorfen + mecoprop; oxyfluorfen + MCPP; oxyfluorfen + chlorsulfuron; oxyfluorfen + metsulfuron; oxyfluorfen + sulfosulfuron; oxyfluorfen + thifensulfuron; oxyfluorfen + tribenuron; oxyfluorfen + 2,4-D; oxyfluorfen + 2,4-DB; oxyfluorfen + 2,4DP; oxyfluorfen + bifenox; oxyfluorfen + ethametsulfuron; oxyfluorfen + flamprop-M; oxyfluorfen + imazamethabenz; oxyfluorfen + ioxynil; oxyfluorfen + bromoxynil; oxyfluorfen + metosulam; oxyfluorfen + pyridate; oxyfluorfen + quinmerac; oxyfluorfen + tralkoxydim; oxyfluorfen + fluoroglycofen-ethyl; oxyfluorfen + methabenzthiazuron; oxyfluorfen + ethalfluralin; oxyfluorfen + pendimethalin; oxyfluorfen + trifluralin; oxyfluorfen + isoxaben; oxyfluorfen + prosulfocarb; oxyfluorfen + triallate; oxyfluorfen + clopyralid; oxyfluorfen + fluroxypyr; oxyfluorfen + benazolin-ethyl; oxyfluorfen + difenzoquat; oxyfluorfen + glyphosate; oxyfluorfen + glufosinate; oxyfluorfen + sulfosate; azafenidin + triasulfuron; azafenidin + prosulfuron; azafenidin + clodinafop; azafenidin + terbutryne; azafenidin + amidosulfuron; azafenidin + bromoxynil; azafenidin + carfentrazone; azafenidin + dicamba; azafenidin + diclofop-methyl; azafenidin + diflufenican; azafenidin + ethoxysulfuron; azafenidin + fenoxaprop(P-ethyl); azafenidin + fentrazamide; azafenidin + flazasulfuron; azafenidin + florasulam; azafenidin + fluazolate; azafenidin + flucarbazone; azafenidin + flufenacet; azafenidin + flupyrsulfuron; azafenidin + flurtamone; azafenidin + iodosulfuron; azafenidin + isoproturon; azafenidin + chlortoluron; azafenidin + MCPA; azafenidin + MCPB; azafenidin + mecoprop; azafenidin + MCPP; azafenidin + chlorsulfuron; azafenidin + metsulfuron; azafenidin + sulfosulfuron; azafenidin + thifensulfuron; azafenidin + tribenuron; azafenidin + 2,4-D; azafenidin + 2,4-DB; azafenidin + 2,4DP; azafenidin + bifenox; azafenidin + ethametsulfuron; azafenidin + flamprop-M; azafenidin + imazamethabenz; azafenidin + ioxynil; azafenidin + bromoxynil; azafenidin + metosulam; azafenidin + pyridate; azafenidin + quinmerac; azafenidin + tralkoxydim; azafenidin + fluoroglycofen-ethyl; azafenidin + methabenzthiazuron; azafenidin + ethalfluralin; azafenidin + pendimethalin; azafenidin + trifluralin; azafenidin + isoxaben; azafenidin + prosulfocarb; azafenidin + triallate; azafenidin + clopyralid; azafenidin + fluroxypyr; azafenidin + benazolin-ethyl; azafenidin + difenzoquat; azafenidin + glyphosate; azafenidin + glufosinate; azafenidin + sulfosate; carfentrazone-ethyl + triasulfuron; carfentrazone-ethyl + prosulfuron; carfentrazone-ethyl + clodinafop; carfentrazone-ethyl + terbutryne; carfentrazone-ethyl + amidosulfuron; carfentrazone-ethyl + bromoxynil; carfentrazone-ethyl + dicamba; carfentrazone-ethyl + diclofop-methyl; carfentrazone-ethyl + diflufenican; carfentrazone-ethyl + ethoxysulfuron; carfentrazone-ethyl + fenoxaprop(P-ethyl); carfentrazone-ethyl + fentrazamide; carfentrazone-ethyl + flazasulfuron; carfentrazone-ethyl + florasulam; carfentrazone-ethyl + fluazolate; carfentrazone-ethyl + flucarbazone; carfentrazone-ethyl + flufenacet; carfentrazone-ethyl + flupyrsulfuron; carfentrazone-ethyl + flurtamone; carfentrazone-ethyl + iodosulfuron; carfentrazone-ethyl + isoproturon; carfentrazone-ethyl + chlortoluron; carfentrazone-ethyl + MCPA; carfentrazone-ethyl + MCPB; carfentrazone-ethyl + mecoprop; carfentrazone-ethyl + MCPP; carfentrazone-ethyl + chlorsulfuron; carfentrazone-ethyl + metsulfuron; carfentrazone-ethyl + sulfosulfuron; carfentrazone-ethyl + thifensulfuron; carfentrazone-ethyl + tribenuron; carfentrazone-ethyl + 2,4-D; carfentrazone-ethyl + 2,4-DB; carfentrazone-ethyl + 2,4DP; carfentrazone-ethyl + bifenox; carfentrazone-ethyl + ethametsulfuron; carfentrazone-ethyl + flamprop-M; carfentrazone-ethyl + imazamethabenz; carfentrazone-ethyl + ioxynil; carfentrazone-ethyl + bromoxynil; carfentrazone-ethyl + metosulam; carfentrazone-ethyl + pyridate; carfentrazone-ethyl + quinmerac; carfentrazone-ethyl + tralkoxydim; carfentrazone-ethyl + fluoroglycofen-ethyl; carfentrazone-ethyl + methabenzthiazuron; carfentrazone-ethyl + ethalfluralin; carfentrazone-ethyl + pendimethalin; carfentrazone-ethyl + trifluralin; carfentrazone-ethyl + isoxaben; carfentrazone-ethyl + prosulfocarb; carfentrazone-ethyl + triallate; carfentrazone-ethyl + clopyralid; carfentrazone-ethyl + fluroxypyr; carfentrazone-ethyl + benazolin-ethyl; carfentrazone-ethyl + difenzoquat; carfentrazone-ethyl + glyphosate; carfentrazone-ethyl + glufosinate; carfentrazone-ethyl + sulfosate; compound of the formula A + triasulfuron; compound of the formula A + prosulfuron; compound of the formula A + clodinafop; compound of the formula A + terbutryne; compound of the formula A + amidosulfuron; compound of the formula A + bromoxynil; compound of the formula A + carfentrazone; compound of the formula A + dicamba; compound of the formula A + diclofop-methyl; compound of the formula A + diflufenican; compound of the formula A + ethoxysulfuron; compound of the formula A + fenoxaprop(P-ethyl); compound of the formula A + fentrazamide; compound of the formula A + flazasulfuron; compound of the formula A + florasulam; compound of the formula A + fluazolate; compound of the formula A + flucarbazone; compound of the formula A + flufenacet; compound of the formula A + flupyrsulfuron; compound of the formula A + flurtamone; compound of the formula A + iodosulfuron; compound of the formula A + isoproturon; compound of the formula A + chlortoluron; compound of the formula A + MCPA; compound of the formula A + MCPB; compound of the formula A + mecoprop; compound of the formula A + MCPP; compound of the formula A + chlorsulfuron; compound of the formula A + metsulfuron; compound of the formula A + sulfosulfuron; compound of the formula A + thifensulfuron; compound of the formula A + tribenuron; compound of the formula A + 2,4-D; compound of the formula A + 2,4-DB; compound of the formula A + 2,4DP; compound of the formula A + bifenox; compound of the formula A + ethametsulfuron; compound of the formula A + flamprop-M; compound of the formula A + imazamethabenz; compound of the formula A + ioxynil; compound of the formula A + bromoxynil; compound of the formula A + metosulam; compound of the formula A + pyridate; compound of the formula A + quinmerac; compound of the formula A + tralkoxydim; compound of the formula A + fluoroglycofen-ethyl; compound of the formula A + methabenzthiazuron; compound of the formula A + ethalfluralin; compound of the formula A + pendimethalin; compound of the formula A + trifluralin; compound of the formula A + isoxaben; compound of the formula A + prosulfocarb; compound of the formula A + triallate; compound of the formula A + clopyralid; compound of the formula A + fluroxypyr; compound of the formula A + benazolin-ethyl; compound of the formula A + difenzoquat; compound of the formula A + glyphosate; compound of the formula A + glufosinate; compound of the formula A + sulfosate; cinidon-ethyl + triasulfuron; cinidon-ethyl + prosulfuron; cinidon-ethyl + clodinafop; cinidon-ethyl + terbutryne; cinidon-ethyl + amidosulfuron; cinidon-ethyl + bromoxynil; cinidon-ethyl + carfentrazone; cinidon-ethyl + dicamba; cinidon-ethyl + diclofop-methyl; cinidon-ethyl + diflufenican; cinidon-ethyl + ethoxysulfuron; cinidon-ethyl + fenoxaprop(P-ethyl); cinidon-ethyl + fentrazamide; cinidon-ethyl + flazasulfuron; cinidon-ethyl + florasulam; cinidon-ethyl + fluazolate; cinidon-ethyl + flucarbazone; cinidon-ethyl + flufenacet; cinidon-ethyl + flupyrsulfuron; cinidon-ethyl + flurtamone; cinidon-ethyl + iodosulfuron; cinidon-ethyl + isoproturon; cinidon-ethyl + chlortoluron; cinidon-ethyl + MCPA; cinidon-ethyl + MCPB; cinidon-ethyl + mecoprop; cinidon-ethyl + MCPP; cinidon-ethyl + chlorsulfuron; cinidon-ethyl + metsulfuron; cinidon-ethyl + sulfosulfuron; cinidon-ethyl + thifensulfuron; cinidon-ethyl + tribenuron; cinidon-ethyl + 2,4-D; cinidon-ethyl + 2,4-DB; cinidon-ethyl + 2,4DP; cinidon-ethyl + bifenox; cinidon-ethyl + ethametsulfuron; cinidon-ethyl + flamprop-M; cinidon-ethyl + imazamethabenz; cinidon-ethyl + ioxynil; cinidon-ethyl + bromoxynil; cinidon-ethyl + metosulam; cinidon-ethyl + pyridate; cinidon-ethyl + quinmerac; cinidon-ethyl + tralkoxydim; cinidon-ethyl + fluoroglycofen-ethyl; cinidon-ethyl + methabenzthiazuron; cinidon-ethyl + ethalfluralin; cinidon-ethyl + pendimethalin; cinidon-ethyl + trifluralin; cinidon-ethyl + isoxaben; cinidon-ethyl + prosulfocarb; cinidon-ethyl + triallate; cinidon-ethyl + clopyralid; cinidon-ethyl + fluroxypyr; cinidon-ethyl + benazolin-ethyl; cinidon-ethyl + difenzoquat; cinidon-ethyl + glyphosate; cinidon-ethyl + glufosinate; cinidon-ethyl + sulfosate; flumiclorac-pentyl + flurtamone; flumiclorac-pentyl + iodosulfuron; flumiclorac-pentyl + isoproturon; flumiclorac-pentyl + chlortoluron; flumiclorac-pentyl + MCPA; flumiclorac-pentyl + MCPB; flumiclorac-pentyl + mecoprop; flumiclorac-pentyl + MCPP; flumiclorac-pentyl + chlorsulfuron; flumiclorac-pentyl + metsulfuron; flumiclorac-pentyl + sulfosulfuron; flumiclorac-pentyl + thifensulfuron; flumiclorac-pentyl + tribenuron; flumiclorac-pentyl + 2,4-D; flumiclorac-pentyl + 2,4-DB; flumiclorac-pentyl + 2,4DP; flumiclorac-pentyl + bifenox; flumiclorac-pentyl + ethametsulfuron; flumiclorac-pentyl + flamprop-M; flumiclorac-pentyl + imazamethabenz; flumiclorac-pentyl + ioxynil; flumiclorac-pentyl + bromoxynil; flumiclorac-pentyl + metosulam; flumiclorac-pentyl + pyridate; flumiclorac-pentyl + quinmerac; flumiclorac-pentyl + tralkoxydim; flumiclorac-pentyl + fluoroglycofen-ethyl; ftumiclorac-pentyl + methabenzthiazuron; flumiclorac-pentyl + ethalfluralin; flumiclorac-pentyl + pendimethalin; flumiclorac-pentyl + trifluralin; flumiclorac-pentyl + isoxaben; flumiclorac-pentyl + prosulfocarb; flumiclorac-pentyl + triallate; flumiclorac-pentyl + clopyralid; flumiclorac-pentyl + fluroxypyr; flumiclorac-pentyl + benazolin-ethyl; flumiclorac-pentyl + difenzoquat; flumiclorac-pentyl + glyphosate; flumiclorac-pentyl + glufosinate; flumiclorac-pentyl + sulfosate; flumioxazin + triasulfuron; flumioxazin + prosulfuron; flumioxazin + clodinafop; flumioxazin + terbutryne; flumioxazin + amidosulfuron; flumioxazin + bromoxynil; flumioxazin + carfentrazone; flumioxazin + dicamba; flumioxazin + diclofop-methyl; flumioxazin + diflufenican; flumioxazin + ethoxysulfuron; flumioxazin + fenoxaprop(P-ethyl); flumioxazin + fentrazamide; flumioxazin + flazasulfuron; flumioxazin + florasulam; flumioxazin + fluazolate; flumioxazin + flucarbazone; flumioxazin + flufenacet; flumioxazin + flupyrsulfuron; flumioxazin + flurtamone; flumioxazin + iodosulfuron; flumioxazin + isoproturon; flumioxazin + chlortoluron; flumioxazin + MCPA; flumioxazin + MCPB; flumioxazin + mecoprop; flumioxazin + MCPP; flumioxazin + chlorsulfuron; flumioxazin + metsulfuron; flumioxazin + sulfosulfuron; flumioxazin + thifensulfuron; flumioxazin + tribenuron; flumioxazin + 2,4-D; flumioxazin + 2,4-DB; flumioxazin + 2,4DP; flumioxazin + bifenox; flumioxazin + ethametsulfuron; flumioxazin + flamprop-M; flumioxazin + imazamethabenz; flumioxazin + ioxynil; flumioxazin + bromoxynil; flumioxazin + metosulam; flumioxazin + pyridate; flumioxazin + quinmerac; flumioxazin + tralkoxydim; flumioxazin + fluoroglycofen-ethyl; flumioxazin + methabenzthiazuron; flumioxazin + ethalfluralin; flumioxazin + pendimethalin; flumioxazin + trifluralin; flumioxazin + isoxaben; flumioxazin + prosulfocarb; flumioxazin + triallate; flumioxazin + clopyralid; flumioxazin + fluroxypyr; flumioxazin + benazolin-ethyl; flumioxazin + difenzoquat; flumioxazin + glyphosate; flumioxazin + glufosinate; flumioxazin + sulfosate; fluthiacet-methyl + triasulfuron; fluthiacet-methyl + prosulfuron; fluthiacet-methyl + clodinafop; fluthiacet-methyl + terbutryne; fluthiacet-methyl + amidosulfuron; fluthiacet-methyl + bromoxynil; fluthiacet-methyl + carfentrazone; fluthiacet-methyl + dicamba; fluthiacet-methyl + diclofop-methyl; fluthiacet-methyl + diflufenican; fluthiacet-methyl + ethoxysulfuron; fluthiacet-methyl + fenoxaprop(P-ethyl); fluthiacet-methyl + fentrazamide; fluthiacet-methyl + flazasulfuron; fluthiacet-methyl + florasulam; fluthiacet-methyl + fluazolate; fluthiacet-methyl + flucarbazone; fluthiacet-methyl + flufenacet; fluthiacet-methyl + flupyrsulfuron; fluthiacet-methyl + flurtamone; fluthiacet-methyl + iodosulfuron; fluthiacet-methyl + isoproturon; fluthiacet-methyl + chlortoluron; fluthiacet-methyl + MCPA; fluthiacet-methyl + MCPB; fluthiacet-methyl + mecoprop; fluthiacet-methyl + MCPP; fluthiacet-methyl + chlorsulfuron; fluthiacet-methyl + metsulfuron; fluthiacet-methyl + sulfosulfuron; fluthiacet-methyl + thifensulfuron; fluthiacet-methyl + tribenuron; fluthiacet-methyl + 2,4-D; fluthiacet-methyl + 2,4-DB; fluthiacet-methyl + 2,4DP; fluthiacet-methyl + bifenox; fluthiacet-methyl + ethametsulfuron; fluthiacet-methyl + flamprop-M; fluthiacet-methyl + Imazamethabenz; fluthiacet-methyl + ioxynil; fluthiacet-methyl + bromoxynil; fluthiacet-methyl + metosulam; fluthiacet-methyl + pyridate; fluthiacet-methyl + quinmerac; fluthiacet-methyl + tralkoxydim; fluthiacet-methyl + fluoroglycofen-ethyl; fluthiacet-methyl + methabenzthiazuron; fluthiacet-methyl + ethalfluralin; fluthiacet-methyl + pendimethalin; fluthiacet-methyl + trifluralin; fluthiacet-methyl + isoxaben; fluthiacet-methyl + prosulfocarb; fluthiacet-methyl + triallate; fluthiacet-methyl + clopyralid; fluthiacet-methyl + fluroxypyr; fluthiacet-methyl + benazolin-ethyl; fluthiacet-methyl + difenzoquat; fluthiacet-methyl + glyphosate; fluthiacet-methyl + glufosinate; fluthiacet-methyl + sulfosate; oxadiargyl + triasulfuron; oxadiargyl + prosulfuron; oxadiargyl + clodinafop; oxadiargyl + terbutryne; oxadiargyl + amidosulfuron; oxadiargyl + bromoxynil; oxadiargyl + carfentrazone; oxadiargyl + dicamba; oxadiargyl + diclofop-methyl; oxadiargyl + diflufenican; oxadiargyl + ethoxysulfuron; oxadiargyl + fenoxaprop(P-ethyl); oxadiargyl + fentrazamide; oxadiargyl + flazasulfuron; oxadiargyl + florasulam; oxadiargyl + fluazolate; oxadiargyl + flucarbazone; oxadiargyl + flufenacet; oxadiargyl + flupyrsulfuron; oxadiargyl + flurtamone; oxadiargyl + iodosulfuron; oxadiargyl + isoproturon; oxadiargyl + chlortoluron; oxadiargyl + MCPA; oxadiargyl + MCPB; oxadiargyl + mecoprop; oxadiargyl + MCPP; oxadiargyl + chlorsulfuron; oxadiargyl + metsulfuron; oxadiargyl + sulfosulfuron; oxadiargyl + thifensulfuron; oxadiargyl + tribenuron; oxadiargyl + 2,4-D; oxadiargyl + 2,4-DB; oxadiargyl + 2,4DP; oxadiargyl + bifenox; oxadiargyl + ethametsulfuron; oxadiargyl + flamprop-M; oxadiargyl +imazamethabenz; oxadiargyl + ioxynil; oxadiargyl + bromoxynil; oxadiargyl + metosulam; oxadiargyl + pyridate; oxadiargyl + quinmerac; oxadiargyl + tralkoxydim; oxadiargyl + fluoroglycofen-ethyl; oxadiargyl + methabenzthiazuron; oxadiargyl + ethalfluralin; oxadiargyl + pendimethalin; oxadiargyl + trifluralin; oxadiargyl + isoxaben; oxadiargyl + prosulfocarb; oxadiargyl + triallate; oxadiargyl + clopyralid; oxadiargyl + fluroxypyr; oxadiargyl + benazolin-ethyl; oxadiargyl + difenzoquat; oxadiargyl + glyphosate; oxadiargyl + glufosinate; oxadiargyl + sulfosate; oxadiazon + triasulfuron; oxadiazon + prosulfuron; oxadiazon + clodinafop; oxadiazon + terbutryne; oxadiazon + amidosulfuron; oxadiazon + bromoxynil; oxadiazon + carfentrazone; oxadiazon + dicamba; oxadiazon + diclofop-methyl; oxadiazon + diflufenican; oxadiazon + ethoxysulfuron; oxadiazon + fenoxaprop(P-ethyl); oxadiazon + fentrazamide; oxadiazon + flazasulfuron; oxadiazon + florasulam; oxadiazon + fluazolate; oxadiazon + flucarbazone; oxadiazon + flufenacet; oxadiazon + flupyrsulfuron; oxadiazon + flurtamone; oxadiazon + iodosulfuron; oxadiazon + isoproturon; oxadiazon + chlortoluron; oxadiazon + MCPA; oxadiazon + MCPB; oxadiazon + mecoprop; oxadiazon + MCPP; oxadiazon + chlorsulfuron; oxadiazon + metsulfuron; oxadiazon + sulfosulfuron; oxadiazon + thifensulfuron; oxadiazon + tribenuron; oxadiazon + 2,4-D; oxadiazon + 2,4-DB; oxadiazon + 2,4DP; oxadiazon + bifenox; oxadiazon + ethametsulfuron; oxadiazon + flamprop-M; oxadiazon + imazamethabenz; oxadiazon + ioxynil; oxadiazon + bromoxynil; oxadiazon + metosulam; oxadiazon + pyridate; oxadiazon + quinmerac; oxadiazon + tralkoxydim; oxadiazon + fluoroglycofen-ethyl; oxadiazon + methabenzthiazuron; oxadiazon + ethalfluralin; oxadiazon + pendimethalin; oxadiazon + trifluralin; oxadiazon + isoxaben; oxadiazon + prosulfocarb; oxadiazon + triallate; oxadiazon + clopyralid; oxadiazon + fluroxypyr; oxadiazon + benazolin-ethyl; oxadiazon + difenzoquat; oxadiazon + glyphosate; oxadiazon + glufosinate; oxadiazon + sulfosate; pentoxazone + triasulfuron; pentoxazone + prosulfuron; pentoxazone + clodinafop; pentoxazone + terbutryne; pentoxazone + amidosulfuron; pentoxazone + bromoxynil; pentoxazone + carfentrazone; pentoxazone + dicamba; pentoxazone + diclofop-methyl; pentoxazone + diflufenican; pentoxazone + ethoxysulfuron; pentoxazone + fenoxaprop(P-ethyl); pentoxazone + fentrazamide; pentoxazone + flazasulfuron; pentoxazone + florasulam; pentoxazone + fluazolate; pentoxazone + flucarbazone; pentoxazone + flufenacet; pentoxazone + flupyrsulfuron; pentoxazone + flurtamone; pentoxazone + iodosulfuron; pentoxazone + isoproturon; pentoxazone + chlortoluron; pentoxazone + MCPA; pentoxazone + MCPB; pentoxazone + mecoprop; pentoxazone + MCPP; pentoxazone + chlorsulfuron; pentoxazone + metsulfuron; pentoxazone + sulfosulfuron; pentoxazone + thifensulfuron; pentoxazone + tribenuron; pentoxazone + 2,4-D; pentoxazone + 2,4-DB; pentoxazone + 2,4DP; pentoxazone + bifenox; pentoxazone + ethametsulfuron; pentoxazone + flamprop-M; pentoxazone + imazamethabenz; pentoxazone + ioxynil; pentoxazone + bromoxynil; pentoxazone + metosulam; pentoxazone + pyridate; pentoxazone + quinmerac; pentoxazone + tralkoxydim; pentoxazone + fluoroglycofen-ethyl; pentoxazone + methabenzthiazuron; pentoxazone + ethalfluralin; pentoxazone + pendimethalin; pentoxazone + trifluralin; pentoxazone + isoxaben; pentoxazone + prosulfocarb; pentoxazone + triallate; pentoxazone + clopyralid; pentoxazone + fluroxypyr; pentoxazone + benazolin-ethyl; pentoxazone + difenzoquat; pentoxazone + glyphosate; pentoxazone + glufosinate; pentoxazone + sulfosate; sulfentrazone + triasulfuron; sulfentrazone + prosulfuron; sulfentrazone + clodinafop; sulfentrazone + terbutryne; sulfentrazone + Amidosulfuron; sulfentrazone + bromoxynil; sulfentrazone + carfentrazone; sulfentrazone + dicamba; sulfentrazone + diclofop-methyl; sulfentrazone + diflufenican; sulfentrazone + ethoxysulfuron; sulfentrazone + fenoxaprop(P-ethyl); sulfentrazone + fentrazamide; sulfentrazone + flazasulfuron; sulfentrazone + florasulam; sulfentrazone + fluazolate; sulfentrazone + flucarbazone; sulfentrazone + flufenacet; sulfentrazone + flupyrsulfuron; sulfentrazone + flurtamone; sulfentrazone + iodosulfuron; sulfentrazone + isoproturon; sulfentrazone + chlortoluron; sulfentrazone + MCPA; sulfentrazone + MCPB; sulfentrazone + mecoprop; sulfentrazone + MCPP; sulfentrazone + chlorsulfuron; sulfentrazone + metsulfuron; sulfentrazone + sulfosulfuron; sulfentrazone + thifensulfuron; sulfentrazone + tribenuron; sulfentrazone + 2,4-D; sulfentrazone + 2,4-DB; sulfentrazone + 2,4DP; sulfentrazone + bifenox; sulfentrazone + ethametsulfuron; sulfentrazone + flamprop-M; sulfentrazone + imazamethabenz; sulfentrazone + ioxynil; sulfentrazone + bromoxynil; sulfentrazone + metosulam; sulfentrazone + pyridate; sulfentrazone + quinmerac; sulfentrazone + tralkoxydim; sulfentrazone + fluoroglycofen-ethyl; sulfentrazone + methabenzthiazuron; sulfentrazone + ethalfluralin; sulfentrazone + pendimethalin; sulfentrazone + trifluralin; sulfentrazone + isoxaben; sulfentrazone + prosulfocarb; sulfentrazone + triallate; sulfentrazone + clopyralid; sulfentrazone + fluroxypyr; sulfentrazone + benazolin-ethyl; sulfentrazone + difenzoquat; sulfentrazone + glyphosate; sulfentrazone + glufosinate; sulfentrazone + sulfosate; fluazolate + triasulfuron; fluazolate + prosulfuron; fluazolate + clodinafop; fluazolate + terbutryne; fluazolate + amidosulfuron; fluazolate + bromoxynil; fluazolate + carfentrazone; fluazolate + dicamba; fluazolate + diciofop-methyl; fluazolate + diflufenican; fluazolate + ethoxysulfuron; fluazolate + fenoxaprop(P-ethyl); fluazolate + fentrazamide; fluazolate + flazasulfuron; fluazolate + florasulam; fluazolate + fluazolate; fluazolate + flucarbazone; fluazolate + flufenacet; fluazolate + flupyrsulfuron; fluazolate + flurtamone; fluazolate + iodosulfuron; fluazolate + isoproturon; fluazolate + chlortoluron; fluazolate + MCPA; fluazolate + MCPB; fluazolate + mecoprop; fluazolate + MCPP; fluazolate + chlorsulfuron; fluazolate + metsulfuron; fluazolate + sulfosulfuron; fluazolate + thifensulfuron; fluazolate + tribenuron; fluazolate + 2,4-D; fluazolate + 2,4-DB; fluazolate + 2,4DP; fluazolate + bifenox; fluazolate + ethametsulfuron; fluazolate + flamprop-M; fluazolate + imazamethabenz; fluazolate + ioxynil; fluazolate + bromoxynil; fluazolate + metosulam; fluazolate + pyridate; fluazolate + quinmerac; fluazolate + tralkoxydim; fluazolate + fluoroglycofen-ethyl; fluazolate + methabenzthiazuron; fluazolate + ethalfluralin; fluazolate + pendimethalin; fluazolate + trifluralin; fluazolate + isoxaben; fluazolate + prosulfocarb; fluazolate + triallate; fluazolate + clopyralid; fluazolate + fluroxypyr; fluazolate + benazolin-ethyl; fluazolate + difenzoquat; fluazolate + glyphosate; fluazolate + glufosinate; fluazolate + sulfosate; pyraflufen-ethyl + triasulfuron; pyraflufen-ethyl + prosulfuron; pyraflufen-ethyl + clodinafop; pyraflufen-ethyl + terbutryne; pyraflufen-ethyl + amidosulfuron; pyraflufen-ethyl + bromoxynil; pyraflufen-ethyl + carfentrazone; pyraflufen-ethyl + dicamba; pyraflufen-ethyl + diclofop-methyl; pyraflufen-ethyl + diflufenican; pyraflufen-ethyl + ethoxysulfuron; pyraflufen-ethyl + fenoxaprop(P-ethyl); pyraflufen-ethyl + fentrazamide; pyraflufen-ethyl + flazasulfuron; pyraflufen-ethyl + florasulam; pyraflufen-ethyl + fluazolate; pyraflufen-ethyl + flucarbazone; pyraflufen-ethyl + flufenacet; pyraflufen-ethyl + flupyrsulfuron; pyraflufen-ethyl + flurtamone; pyraflufen-ethyl + iodosulfuron; pyraflufen-ethyl + isoproturon; pyraflufen-ethyl + chlortoluron; pyraflufen-ethyl + MCPA; pyraflufen-ethyl + MCPB; pyraflufen-ethyl + mecoprop; pyraflufen-ethyl + MCPP; pyraflufen-ethyl + chlorsulfuron; pyraflufen-ethyl + metsulfuron; pyraflufen-ethyl + sulfosulfuron; pyraflufen-ethyl + thifensulfuron; pyraflufen-ethyl + tribenuron; pyraflufen-ethyl + 2,4-D; pyraflufen-ethyl + 2,4-DB; pyraflufen-ethyl + 2,4DP; pyraflufen-ethyl + bifenox; pyraflufen-ethyl + ethametsulfuron; pyraflufen-ethyl + flamprop-M; pyraflufen-ethyl + imazamethabenz; pyraflufen-ethyl + ioxynil; pyraflufen-ethyl + bromoxynil; pyraflufen-ethyl + metosulam; pyraflufen-ethyl + pyridate; pyraflufen-ethyl + quinmerac; pyraflufen-ethyl + tralkoxydim; pyraflufen-ethyl + fluoroglycofen-ethyl; pyraflufen-ethyl + methabenzthiazuron; pyraflufen-ethyl + ethalfluralin; pyraflufen-ethyl + pendimethalin; pyraflufen-ethyl + trifluralin; pyraflufen-ethyl + isoxaben; pyraflufen-ethyl + prosulfocarb; pyraflufen-ethyl + triallate; pyraflufen-ethyl + clopyralid; pyraflufen-ethyl + fluroxypyr; pyraflufen-ethyl + benazolin-ethyl; pyraflufen-ethyl + difenzoquat; pyraflufen-ethyl + glyphosate; pyraflufen-ethyl + glufosinate; pyraflufen-ethyl + sulfosate; flumipropyn + triasulfuron; flumipropyn + prosulfuron; flumipropyn + clodinafop; flumipropyn + terbutryne; flumipropyn + amidosulfuron; flumipropyn + bromoxynil; flumipropyn + carfentrazone; flumipropyn + dicamba; flumipropyn + diclofop-methyl; flumipropyn + diflufenican; flumipropyn + ethoxysulfuron; flumipropyn + fenoxaprop(P-ethyl); flumipropyn + fentrazamide; flumipropyn + flazasulfuron; flumipropyn + florasulam; flumipropyn + fluazolate; flumipropyn + flucarbazone; flumipropyn + flufenacet; flumipropyn + flupyrsulfuron; flumipropyn + flurtamone; flumipropyn + iodosulfuron; flumipropyn + isoproturon; flumipropyn + chlortoluron; flumipropyn + MCPA; flumipropyn + MCPB; flumipropyn + mecoprop; flumipropyn + MCPP; flumipropyn + chlorsulfuron; flumipropyn + metsulfuron; flumipropyn + sulfosulfuron; flumipropyn + thifensulfuron; flumipropyn + tribenuron; flumipropyn + 2,4-D; flumipropyn + 2,4-DB; flumipropyn + 2,4DP; flumipropyn + bifenox; flumipropyn + ethametsulfuron; flumipropyn + flamprop-M; flumipropyn + imazamethabenz; flumipropyn + ioxynil; flumipropyn + bromoxynil; flumipropyn + metosulam; flumipropyn + pyridate; flumipropyn + quinmerac; flumipropyn + tralkoxydim; flumipropyn + fluoroglycofen-ethyl; flumipropyn + methabenzthiazuron; flumipropyn + ethalfluralin; flumipropyn + pendimethalin; flumipropyn + trifluralin; flumipropyn + isoxaben; flumipropyn + prosulfocarb; flumipropyn + triallate; flumipropyn + clopyralid; flumipropyn + fluroxypyr; flumipropyn + benazolin-ethyl; flumipropyn + difenzoquat; flumipropyn + glyphosate; flumipropyn + glufosinate; flumipropyn + sulfosate; flupropacil + triasulfuron; flupropacil + prosulfuron; flupropacil + clodinafop; flupropacil + terbutryne; flupropacil + amidosulfuron; flupropacil + bromoxynil; flupropacil + carfentrazone; flupropacil + dicamba; flupropacil + diclofop-methyl; flupropacil + diflufenican; flupropacil + ethoxysulfuron; flupropacil + fenoxaprop(P-ethyl); flupropacil + fentrazamide; flupropacil + flazasulfuron; flupropacil + florasulam; flupropacil + fluazolate; flupropacil + flucarbazone; flupropacil + flufenacet; flupropacil + flupyrsulfuron; flupropacil + flurtamone; flupropacil + iodosulfuron; flupropacil + isoproturon; flupropacil + chlortoluron; flupropacil + MCPA; flupropacil + MCPB; flupropacil + mecoprop; flupropacil + MCPP; flupropacil + chlorsulfuron; flupropacil + metsulfuron; flupropacil + sulfosulfuron; flupropacil + thifensulfuron; flupropacil + tribenuron; flupropacil + 2,4-D; flupropacil + 2,4-DB; flupropacil + 2,4DP; flupropacil + bifenox; flupropacil + ethametsulfuron; flupropacil + flamprop-M; flupropacil + imazamethabenz; flupropacil + ioxynil; flupropacil + bromoxynil; flupropacil + metosulam; flupropacil + pyridate; flupropacil + quinmerac; flupropacil + tralkoxydim; flupropacil + fluoroglycofen-ethyl; flupropacil + methabenzthiazuron; flupropacil + ethalfluralin; flupropacil + pendimethalin; flupropacil + trifluralin; flupropacil + isoxaben; flupropacil + prosulfocarb; flupropacil + triallate; flupropacil + clopyralid; flupropacil + fluroxypyr; flupropacil + benazolin-ethyl; flupropacil + difenzoquat; flupropacil + glyphosate; flupropacil + glufosinate; flupropacil + sulfosate; nipyraclofen + triasulfuron; nipyraclofen + prosulfuron; nipyraclofen + clodinafop; nipyraclofen + terbutryne; nipyraclofen + amidosulfuron; nipyraclofen + bromoxynil; nipyraclofen + carfentrazone; nipyraclofen + dicamba; nipyraclofen + diclofop-methyl; nipyraclofen + diflufenican; nipyraclofen + ethoxysulfuron; nipyraclofen + fenoxaprop (P-ethyl); nipyraclofen + fentrazamide; nipyraclofen + flazasulfuron; nipyraclofen + florasulam; nipyraclofen + fluazolate; nipyraclofen + flucarbazone; nipyraclofen + flufenacet; nipyraclofen + flupyrsulfuron; nipyraclofen + flurtamone; nipyraclofen + iodosulfuron; nipyraclofen + isoproturon; nipyraclofen + chlortoluron; nipyraclofen + MCPA; nipyraclofen + MCPB; nipyraclofen + mecoprop; nipyraclofen + MCPP; nipyraclofen + chlorsulfuron; nipyraclofen + metsulfuron; nipyraclofen + sulfosulfuron; nipyraclofen + thifensulfuron; nipyraclofen + tribenuron; nipyraclofen + 2,4-D; nipyraclofen + 2,4-DB; nipyraclofen + 2,4DP; nipyraclofen + bifenox; nipyraclofen + ethametsulfuron; nipyraclofen + flamprop-M; nipyraclofen + imazamethabenz; nipyraclofen + ioxynil; nipyraclofen + bromoxynil; nipyraclofen + metosulam; nipyraclofen + pyridate; nipyraclofen + quinmerac; nipyraclofen + tralkoxydim; nipyraclofen + fluoroglycofen-ethyl; nipyraclofen + methabenzthiazuron; nipyraclofen + ethalfluralin; nipyraclofen + pendimethalin; nipyraclofen + trifluralin; nipyraclofen + isoxaben; nipyraclofen + prosulfocarb; nipyraclofen + triallate; nipyraclofen + clopyralid; nipyraclofen + fluroxypyr; nipyraclofen + benazolin-ethyl; nipyraclofen + difenzoquat; nipyraclofen + glyphosate; nipyraclofen + glufosinate; nipyraclofen + sulfosate; benzfendizone + triasulfuron; benzfendizone + prosulfuron; benzfendizone + clodinafop; benzfendizone + terbutryne; benzfendizone + amidosulfuron; benzfendizone + bromoxynil; benzfendizone + carfentrazone; benzfendizone + dicamba; benzfendizone + diclofop-methyl; benzfendizone + diflufenican; benzfendizone + ethoxysulfuron; benzfendizone + fenoxaprop(P-ethyl); benzfendizone + fentrazamide; benzfendizone + flazasulfuron; benzfendizone + florasulam; benzfendizone + fluazolate; benzfendizone + flucarbazone; benzfendizone + flufenacet; benzfendizone + flupyrsulfuron; benzfendizone + flurtamone; benzfendizone + iodosulfuron; benzfendizone + isoproturon; benzfendizone + chlortoluron; benzfendizone + MCPA; benzfendizone + MCPB; benzfendizone + mecoprop; benzfendizone + MCPP; benzfendizone + chlorsulfuron; benzfendizone + metsulfuron; benzfendizone + sulfosulfuron; benzfendizone + thifensulfuron; benzfendizone + tribenuron; benzfendizone + 2,4-D; benzfendizone + 2,4-DB; benzfendizone + 2,4DP; benzfendizone + bifenox; benzfendizone + ethametsulfuron; benzfendizone + flamprop-M; benzfendizone + imazamethabenz; benzfendizone + ioxynil; benzfendizone + bromoxynil; benzfendizone + metosulam; benzfendizone + pyridate; benzfendizone + quinmerac; benzfendizone + tralkoxydim; benzfendizone + fluoroglycofen-ethyl; benzfendizone + methabenzthiazuron; benzfendizone + ethalfluralin; benzfendizone + pendimethalin; benzfendizone + trifluralin; benzfendizone + isoxaben; benzfendizone + prosulfocarb; benzfendizone + triallate; benzfendizone + clopyralid; benzfendizone + fluroxypyr; benzfendizone + benazolin-ethyl; benzfendizone + difenzoquat; benzfendizone + glyphosate; benzfendizone + glufosinate; benzfendizone + sulfosate; thidiazimin + triasulfuron; thidiazimin + prosulfuron; thidiazimin + clodinafop; thidiazimin + terbutryne; thidiazimin + amidosulfuron; thidiazimin + bromoxynil; thidiazimin + carfentrazone; thidiazimin + dicamba; thidiazimin + diclofop-methyl; thidiazimin + diflufenican; thidiazimin + ethoxysulfuron; thidiazimin + fenoxaprop(P-ethyl); thidiazimin + fentrazamide; thidiazimin + flazasulfuron; thidiazimin + florasulam; thidiazimin + fluazolate; thidiazimin + flucarbazone; thidiazimin + flufenacet; thidiazimin + flupyrsulfuron; thidiazimin + flurtamone; thidiazimin + iodosulfuron; thidiazimin + isoproturon; thidiazimin + chlortoluron; thidiazimin + MCPA; thidiazimin + MCPB; thidiazimin + mecoprop; thidiazimin + MCPP; thidiazimin + chlorsulfuron; thidiazimin + metsulfuron; thidiazimin + sulfosulfuron; thidiazimin + thifensulfuron; thidiazimin + tribenuron; thidiazimin + 2,4-D; thidiazimin + 2,4-DB; thidiazimin + 2,4DP; thidiazimin + bifenox; thidiazimin + ethametsulfuron; thidiazimin + flamprop-M; thidiazimin + imazamethabenz; thidiazimin + ioxynil; thidiazimin + bromoxynil; thidiazimin + metosulam; thidiazimin + pyridate; thidiazimin + quinmerac; thidiazimin + tralkoxydim; thidiazimin + fluoroglycofen-ethyl; thidiazimin + methabenzthiazuron; thidiazimin + ethalfluralin; thidiazimin + pendimethalin; thidiazimin + trifluralin; thidiazimin + isoxaben; thidiazimin + prosulfocarb; thidiazimin + triallate; thidiazimin + clopyralid; thidiazimin + fluroxypyr; thidiazimin + benazolin-ethyl; thidiazimin + difenzoquat; thidiazimin + glyphosate; thidiazimin + glufosinate; and thidiazimin + sulfosate.

The following combinations of the compounds under a) with the co-herbicides under b) have been found to be very particularly effective synergistic compositions in crops of rice resistant to protoporphyrinogen oxidase inhibitors:
acifluorfen + pretilachlor; acifluorfen + cinosulfuron; acifluorfen + triasulfuron; acifluorfen + fenclorim; acifluorfen + clodinafop; acifluorfen + bensulfuron; acifluorfen + imazosulfuron; acifluorfen + pyrazosulfuron; acifluorfen + metsulfuron; acifluorfen + azimsulfuron; acifluorfen + halosulfuron; acifluorfen + esprocarb; acifluorfen + mefenacet; acifluorfen + molinate; acifluorfen + propanil; acifluorfen + pyrazolate; acifluorfen + cyhalofop; acifluorfen + fenoxaprop; acifluorfen + bispyribac; acifluorfen + pyriminobac; acifluorfen + cafenstrole; acifluorfen + oxadiargyl; acifluorfen + oxadiazon; acifluorfen + bromobutide; acifluorfen + MY-100; acifluorfen + dymron; acifluorfen + NB 061; acifluorfen + MK243; acifluorfen + HW-52; acifluorfen + AC 014; acifluorfen + compound of the formula D; acifluorfen + glyphosate; acifluorfen + glufosinate; acifluorfen + sulfosate; aclonifen + pretilachlor; aclonifen + cinosulfuron; aclonifen + triasulfuron; aclonifen + fenclorim; aclonifen + clodinafop; aclonifen + bensulfuron; aclonifen + imazosulfuron; aclonifen + pyrazosulfuron; aclonifen + metsulfuron; aclonifen + azimsulfuron; aclonifen + halosulfuron; aclonifen + esprocarb; aclonifen + mefenacet; aclonifen + molinate; aclonifen + propanil; aclonifen + pyrazolate; aclonifen + cyhalofop; aclonifen + fenoxaprop; aclonifen + bispyribac; aclonifen + pyriminobac; aclonifen + cafenstrole; aclonifen + oxadiargyl; aclonifen + oxadiazon; aclonifen + bromobutide; aclonifen + MY-100; aclonifen + dymron; aclonifen + NB 061; aclonifen + MK243; aclonifen + HW-52; aclonifen + AC 014; aclonifen + compound of the formula D; aclonifen + glyphosate; aclonifen + glufosinate; aclonifen + sulfosate; bifenox + pretilachlor; bifenox + cinosulfuron; bifenox + triasulfuron; bifenox + fenclorim; bifenox + clodinafop; bifenox + bensulfuron; bifenox + imazosulfuron; bifenox + pyrazosulfuron; bifenox + metsulfuron; bifenox + azimsulfuron; bifenox + halosulfuron; bifenox + esprocarb; bifenox + mefenacet; bifenox + molinate; bifenox + propanil; bifenox + pyrazolate; bifenox + cyhalofop; bifenox + fenoxaprop; bifenox + bispyribac; bifenox + pyriminobac; bifenox + cafenstrole; bifenox + oxadiargyl; bifenox + oxadiazon; bifenox + bromobutide; bifenox + MY-100; bifenox + dymron; bifenox + NB 061; bifenox + MK243; bifenox + HW-52; bifenox + AC 014; bifenox + compound of the formula D; bifenox + glyphosate; bifenox + glufosinate; bifenox + sulfosate; chlornitrofen + pretilachlor; chlornitrofen + cinosulfuron; chlornitrofen + triasulfuron; chlornitrofen + fenclorim; chlornitrofen + clodinafop; chlornitrofen + bensulfuron; chlornitrofen + imazosulfuron; chlornitrofen + pyrazosulfuron; chlornitrofen + metsulfuron; chlornitrofen + azimsulfuron; chlornitrofen + halosulfuron; chlornitrofen + esprocarb; chlornitrofen + mefenacet; chlornitrofen + molinate; chlornitrofen + propanil; chlornitrofen + pyrazolate; chlornitrofen + cyhalofop; chlornitrofen + fenoxaprop; chlornitrofen + bispyribac; chlornitrofen + pyriminobac; chlornitrofen + cafenstrole; chlornitrofen + oxadiargyl; chlornitrofen + oxadiazon; chlornitrofen + bromobutide; chlornitrofen + MY-100; chlornitrofen + dymron; chlornitrofen + NB 061; chlornitrofen + MK243; chlornitrofen + HW-52; chlornitrofen + AC 014; chlornitrofen + compound of the formula D; chlornitrofen + glyphosate; chlornitrofen + glufosinate; chlornitrofen + sulfosate; ethoxyfen + pretilachlor; ethoxyfen + cinosulfuron; ethoxyfen + triasulfuron; ethoxyfen + fenclorim; ethoxyfen + clodinafop; ethoxyfen + bensulfuron; ethoxyfen + imazosulfuron; ethoxyfen + pyrazosulfuron; ethoxyfen + metsulfuron; ethoxyfen + azimsulfuron; ethoxyfen + halosulfuron; ethoxyfen + esprocarb; ethoxyfen + mefenacet; ethoxyfen + molinate; ethoxyfen + propanil; ethoxyfen + pyrazolate; ethoxyfen + cyhalofop; ethoxyfen + fenoxaprop; ethoxyfen + bispyribac; ethoxyfen + pyriminobac; ethoxyfen + cafenstrole; ethoxyfen + oxadiargyl; ethoxyfen + oxadiazon; ethoxyfen + bromobutide; ethoxyfen + MY-100; ethoxyfen + dymron; ethoxyfen + NB 061; ethoxyfen + MK243; ethoxyfen + HW-52; ethoxyfen + AC 014; ethoxyfen + compound of the formula D; ethoxyfen + glyphosate; ethoxyfen + glufosinate; ethoxyfen + sulfosate; fluoroglycofen + pretilachlor; fluoroglycofen + cinosulfuron; fluoroglycofen + triasulfuron; fluoroglycofen + fenclorim: fluoroglycofen + clodinafop; fluoroglycofen + bensulfuron; fluoroglycofen + imazosulfuron; fluoroglycofen + pyrazosulfuron; fluoroglycofen + metsulfuron; fluoroglycofen + azimsulfuron; fluoroglycofen + halosulfuron; fluoroglycofen + esprocarb; fluoroglycofen + mefenacet; fluoroglycofen + molinate; fluoroglycofen + propanil; fluoroglycofen + pyrazolate; fluoroglycofen + cyhalofop; fluoroglycofen + fenoxaprop; fluoroglycofen + bispyribac; fluoroglycofen + pyriminobac; fluoroglycofen + cafenstrole; fluoroglycofen + oxadiargyl; fluoroglycofen + oxadiazon; fluoroglycofen + bromobutide; fluoroglycofen + MY-100; fluoroglycofen + dymron; fluoroglycofen + NB 061; fluoroglycofen + MK243; fluoroglycofen + HW-52; fluoroglycofen + AC 014; fluoroglycofen + compound of the formula D; fluoroglycofen + glyphosate; fluoroglycofen + glufosinate; fluoroglycofen + sulfosate; fomesafen + pretilachlor; fomesafen + cinosulfuron; fomesafen + triasulfuron; fomesafen + fenclorim; fomesafen + clodinafop; fomesafen + bensulfuron; fomesafen + imazosulfuron; fomesafen + pyrazosulfuron; fomesafen + metsulfuron; fomesafen + azimsulfuron; fomesafen + halosulfuron; fomesafen + esprocarb; fomesafen + mefenacet; fomesafen + molinate; fomesafen + propanil; fomesafen + pyrazolate; fomesafen + cyhalofop; fomesafen + fenoxaprop; fomesafen + bispyribac; fomesafen + pyriminobac; fomesafen + cafenstrole; fomesafen + oxadiargyl; fomesafen + oxadiazon; fomesafen + bromobutide; fomesafen + MY-100; fomesafen + dymron; fomesafen + NB 061; fomesafen + MK243; fomesafen + HW-52; fomesafen + AC 014; fomesafen + compound of the formula D; fomesafen + glyphosate; fomesafen + glufosinate; fomesafen + sulfosate; lactofen + pretilachlor; lactofen + cinosulfuron; lactofen + triasulfuron; lactofen + fenclorim; lactofen + clodinafop; lactofen + bensulfuron; lactofen + imazosulfuron; lactofen + pyrazosulfuron; lactofen + metsulfuron; lactofen + azimsulfuron; lactofen + halosulfuron; lactofen + esprocarb; lactofen + mefenacet; lactofen + molinate; lactofen + propanil; lactofen + pyrazolate; lactofen + cyhalofop; lactofen + fenoxaprop; lactofen + bispyribac; lactofen + pyriminobac; lactofen + cafenstrole; lactofen + oxadiargyl; lactofen + oxadiazon; lactofen + bromobutide; lactofen + MY-100; lactofen + dymron; lactofen + NB 061; lactofen + MK243; lactofen + HW-52; lactofen + AC 014; lactofen + compound of the formula D; lactofen + glyphosate; lactofen + glufosinate; lactofen + sulfosate; oxyfluorfen + pretilachlor; oxyfluorfen + cinosulfuron; oxyfluorfen + triasulfuron; oxyfluorfen + fenclorim; oxyfluorfen + clodinafop; oxyfluorfen + bensulfuron; oxyfluorfen + imazosulfuron; oxyfluorfen + pyrazosulfuron; oxyfluorfen + metsulfuron; oxyfluorfen + azimsulfuron; oxyfluorfen + halosulfuron; oxyfluorfen + esprocarb; oxyfluorfen + mefenacet; oxyfluorfen + molinate; oxyfluorfen + propanil; oxyfluorfen + pyrazolate; oxyfluorfen + cyhalofop; oxyfluorfen + fenoxaprop; oxyfluorfen + bispyribac; oxyfluorfen + pyriminobac; oxyfluorfen + cafenstrole; oxyfluorfen + oxadiargyl; oxyfluorfen + oxadiazon; oxyfluorfen + bromobutide; oxyfluorfen + MY-100; oxyfluorfen + dymron; oxyfluorfen + NB 061; oxyfluorfen + MK243; oxyfluorfen + HW-52; oxyfluorfen + AC 014; oxyfluorfen + compound of the formula D; oxyfluorfen + glyphosate; oxyfluorfen + glufosinate; sulfosate; azafenidin + pretilachtor; azafenidin + cinosulfuron; azafenidin + triasulfuron; azafenidin + fenclorim; azafenidin + clodinafop; azafenidin + bensulfuron; azafenidin + imazosulfuron; azafenidin + pyrazosulfuron; azafenidin + metsulfuron; azafenidin + azimsulfuron; azafenidin + halosulfuron; azafenidin + esprocarb; azafenidin + mefenacet; azafenidin + molinate; azafenidin + propanil; azafenidin + pyrazolate; azafenidin + cyhalofop; azafenidin + fenoxaprop; azafenidin + bispyribac; azafenidin + pyriminobac; azafenidin + cafenstrole; azafenidin + oxadiargyl; azafenidin + oxadiazon; azafenidin + bromobutide; azafenidin + MY-100; azafenidin + dymron; azafenidin + NB 061; azafenidin + MK243; azafenidin + HW-52; azafenidin + AC 014; azafenidin + compound of the formula D; azafenidin + glyphosate; azafenidin + glufosinate; azafenidin + sulfosate; carfentrazone-ethyl + pretilachlor, carfentrazone-ethyl + cinosulfuron; carfentrazone-ethyl + triasulfuron; carfentrazone-ethyl + fenclorim; carfentrazone-ethyl + clodinafop; carfentrazone-ethyl + bensulfuron; carfentrazone-ethyl + imazosulfuron; carfentrazone-ethyl + pyrazosulfuron; carfentrazone-ethyl + metsulfuron; carfentrazone-ethyl + azimsulfuron; carfentrazone-ethyl + halosulfuron; carfentrazone-ethyl + esprocarb; carfentrazone-ethyl + mefenacet; carfentrazone-ethyl + molinate; carfentrazone-ethyl + propanil; carfentrazone-ethyl + pyrazolate; carfentrazone-ethyl + cyhalofop; carfentrazone-ethyl + fenoxaprop; carfentrazone-ethyl + bispyribac; carfentrazone-ethyl + pyriminobac; carfentrazone-ethyl + cafenstrole; carfentrazone-ethyl + oxadiargyl; carfentrazone-ethyl + oxadiazon; carfentrazone-ethyl + bromobutide; carfentrazone-ethyl + MY-100; carfentrazone-ethyl + dymron; carfentrazone-ethyl + NB 061; carfentrazone-ethyl + MK243; carfentrazone-ethyl + HW-52; carfentrazone-ethyl + AC 014; carfentrazone-ethyl + compound of the formula D; carfentrazone-ethyl + glyphosate; carfentrazone-ethyl + glufosinate; carfentrazone-ethyl + sulfosate; compound of the formula A + pretilachlor; compound of the formula A + cinosulfuron; compound of the formula A + triasulfuron; compound of the formula A + fenclorim; compound of the formula A + clodinafop; compound of the formula A + bensulfuron; compound of the formula A + imazosulfuron; compound of the formula A + pyrazosulfuron; compound of the formula A + metsulfuron; compound of the formula A + azimsulfuron; compound of the formula A + halosulfuron; compound of the formula A + esprocarb; compound of the formula A + mefenacet; compound of the formula A + molinate; compound of the formula A + propanil; compound of the formula A + pyrazolate; compound of the formula A + cyhalofop; compound of the formula A + fenoxaprop; compound of the formula A + bispyribac; compound of the formula A + pyriminobac; compound of the formula A + cafenstrole; compound of the formula A + oxadiargyl; compound of the formula A + oxadiazon; compound of the formula A + bromobutide; compound of the formula A + MY-100; compound of the formula A + dymron; compound of the formula A + NB 061; compound of the formula A + MK243; compound of the formula A + HW-52; compound of the formula A + AC 014; compound of the formula A + compound of the formula D; compound of the formula A + glyphosate; compound of the formula A + glufosinate; compound of the formula A + sulfosate; cinidon-ethyl + pretilachlor; cinidon-ethyl + cinosulfuron; cinidon-ethyl + triasulfuron; cinidon-ethyl + fenclorim; cinidon-ethyl + clodinafop; cinidon-ethyl + bensulfuron; cinidon-ethyl + imazosulfuron; cinidon-ethyl + pyrazosulfuron; cinidon-ethyl + metsulfuron; cinidon-ethyl + azimsulfuron; cinidon-ethyl + halosulfuron; cinidon-ethyl + esprocarb; cinidon-ethyl + mefenacet; cinidon-ethyl + molinate; cinidon-ethyl + propanil; cinidon-ethyl + pyrazolate; cinidon-ethyl + cyhalofop; cinidon-ethyl + fenoxaprop; cinidon-ethyl + bispyribac; cinidon-ethyl + pyriminobac; cinidon-ethyl + cafenstrole; cinidon-ethyl + oxadiargyl; cinidon-ethyl + oxadiazon; cinidon-ethyl + bromobutide; cinidon-ethyl + MY-100; cinidon-ethyl + dymron; cinidon-ethyl + NB 061; cinidon-ethyl + MK243; cinidon-ethyl + HW-52; cinidon-ethyl + AC 014; cinidon-ethyl + compound of the formula D; cinidon-ethyl + glyphosate; cinidon-ethyl + glufosinate; cinidon-ethyl + sulfosate; flumiclorac-pentyl + pretilachlor; flumiclorac-pentyl + cinosulfuron; flumiclorac-pentyl + triasulfuron; flumiclorac-pentyl + fenclorim; flumiclorac-pentyl + clodinafop; flumiclorac-pentyl + bensulfuron; flumiclorac-pentyl + imazosulfuron; flumiclorac-pentyl + pyrazosulfuron; flumiclorac-pentyl + metsulfuron; flumiclorac-pentyl + azimsulfuron; flumiclorac-pentyl + halosulfuron; flumiclorac-pentyl + esprocarb; flumiclorac-pentyl + mefenacet; flumiclorac-pentyl + molinate; flumiclorac-pentyl + propanil; flumiclorac-pentyl + pyrazolate; flumiclorac-pentyl + cyhalofop; flumiclorac-pentyl + fenoxaprop; flumiclorac-pentyl + bispyribac; flumiclorac-pentyl + pyriminobac; flumiclorac-pentyl + cafenstrole; flumiclorac-pentyl + oxadiargyl; flumiclorac-pentyl + oxadiazon; flumiclorac-pentyl + bromobutide; flumiclorac-pentyl + MY-100; flumiclorac-pentyl + dymron; flumiclorac-pentyl + NB 061; flumiclorac-pentyl + MK243; flumiclorac-pentyl + HW-52; flumiclorac-pentyl + AC 014; flumiclorac-pentyl + compound of the formula D; flumiclorac-pentyl + glyphosate; flumiclorac-pentyl + glufosinate; flumiclorac-pentyi + sulfosate; flumioxazin + pretilachlor; flumioxazin + cinosulfuron; flumioxazin + triasulfuron; flumioxazin + fenclorim; flumioxazin + clodinafop; flumioxazin + bensulfuron; flumioxazin + imazosulfuron; flumioxazin + pyrazosulfuron; flumioxazin + metsulfuron; flumioxazin + azimsulfuron; flumioxazin + halosulfuron; flumioxazin + esprocarb; flumioxazin + mefenacet; flumioxazin + molinate; flumioxazin + propanil; flumioxazin + pyrazolate; flumioxazin + cyhalofop; flumioxazin + fenoxaprop; flumioxazin + bispyribac; flumioxazin + pyriminobac; flumioxazin + cafenstrole; flumioxazin + oxadiargyl; flumioxazin + oxadiazon; flumioxazin + bromobutide; flumioxazin + MY-100; flumioxazin + dymron; flumioxazin + NB 061; flumioxazin + MK243; flumioxazin + HW-52; flumioxazin + AC 014; flumioxazin + compound of the formula D; flumioxazin + glyphosate; flumioxazin + glufosinate; flumioxazin + sulfosate; fluthiacet-methyl + pretilachlor; fluthiacet-methyl + cinosulfuron; fluthiacet-methyl + triasulfuron; fluthiacet-methyl + fenclorim; fluthiacet-methyl + clodinafop; fluthiacet-methyl + bensulfuron; fluthiacet-methyl + imazosulfuron; fluthiacet-methyl + pyrazosulfuron; fluthiacet-methyl + metsulfuron; fluthiacet-methyl + azimsulfuron; fluthiacet-methyl + halosulfuron; fluthiacet-methyl + esprocarb; fluthiacet-methyl + mefenacet; fluthiacet-methyl + molinate; fluthiacet-methyl + propanil; fluthiacet-methyl + pyrazolate; fluthiacet-methyl + cyhalofop; fluthiacet-methyl + fenoxaprop; fluthiacet-methyl + bispyribac; fluthiacet-methyl + pyriminobac; fluthiacet-methyl + cafenstrole; fluthiacet-methyl + oxadiargyl; fluthiacet-methyl + oxadiazon; fluthiacet-methyl + bromobutide; fluthiacet-methyl + MY-100; fluthiacet-methyl + dymron; fluthiacet-methyl + NB 061; fluthiacet-methyl + MK243; fluthiacet-methyl + HW-52; fluthiacet-methyl + AC 014; fluthiacet-methyl + compound of the formula D; fluthiacet-methyl + glyphosate; fluthiacet-methyl + glufosinate; fluthiacet-methyl + sulfosate; oxadiargyl + pretilachlor; oxadiargyl + cinosulfuron; oxadiargyl + triasulfuron; oxadiargyl + fenclorim; oxadiargyl + clodinafop; oxadiargyl + bensulfuron; oxadiargyl + imazosulfuron; oxadiargyl + pyrazosulfuron; oxadiargyl + metsulfuron; oxadiargyl + azimsulfuron; oxadiargyl + halosulfuron; oxadiargyl + esprocarb; oxadiargyl + mefenacet; oxadiargyl + molinate; oxadiargyl + propanil; oxadiargyl + pyrazolate; oxadiargyl + cyhalofop; oxadiargyl + fenoxaprop; oxadiargyl + bispyribac; oxadiargyl + pyriminobac; oxadiargyl + cafenstrole; oxadiargyl + oxadiazon; oxadiargyl + bromobutide; oxadiargyl + MY-100; oxadiargyl + dymron; oxadiargyl + NB 061; oxadiargyl + MK243; oxadiargyl + HW-52; oxadiargyl + AC 014; oxadiargyl + compound of the formula D; oxadiargyl + glyphosate; oxadiargyl + glufosinate; oxadiargyl + sulfosate; oxadiazon + pretilachlor; oxadiazon + cinosulfuron; oxadiazon + triasulfuron; oxadiazon + fenclorim; oxadiazon + clodinafop; oxadiazon + bensulfuron; oxadiazon + imazosulfuron; oxadiazon + pyrazosulfuron; oxadiazon + metsulfuron; oxadiazon + azimsulfuron; oxadiazon + halosulfuron; oxadiazon + esprocarb; oxadiazon + mefenacet; oxadiazon + molinate; oxadiazon + propanil; oxadiazon + pyrazolate; oxadiazon + cyhalofop; oxadiazon + fenoxaprop; oxadiazon + bispyribac; oxadiazon + pyriminobac; oxadiazon + cafenstrole; oxadiazon + oxadiargyl; oxadiazon + bromobutide; oxadiazon + MY-100; oxadiazon + dymron; oxadiazon + NB 061; oxadiazon + MK243; oxadiazon + HW-52; oxadiazon + AC 014; oxadiazon + compound of the formula D; oxadiazon + glyphosate; oxadiazon + glufosinate; oxadiazon + sulfosate; pentoxazone + pretilachlor; pentoxazone + cinosulfuron; pentoxazone + triasulfuron; pentoxazone + fenclorim; pentoxazone + clodinafop; pentoxazone + bensulfuron; pentoxazone + imazosulfuron; pentoxazone + pyrazosulfuron; pentoxazone + metsulfuron; pentoxazone + azimsulfuron; pentoxazone + halosulfuron; pentoxazone + esprocarb; pentoxazone + mefenacet; pentoxazone + molinate; pentoxazone + propanil; pentoxazone + pyrazolate; pentoxazone + cyhalofop; pentoxazone + fenoxaprop; pentoxazone + bispyribac; pentoxazone + pyriminobac; pentoxazone + cafenstrole; pentoxazone + oxadiargyl; pentoxazone + oxadiazon; pentoxazone + bromobutide; pentoxazone + MY-100; pentoxazone + dymron; pentoxazone + NB 061; pentoxazone + MK243; pentoxazone + HW-52; pentoxazone + AC 014; pentoxazone + compound of the formula D; pentoxazone + glyphosate; pentoxazone + glufosinate; pentoxazone + sulfosate; sulfentrazone + pretilachlor; sulfentrazone + cinosulfuron; sulfentrazone + triasulfuron; sulfentrazone + fenclorim; sulfentrazone + clodinafop; sulfentrazone + bensulfuron; sulfentrazone + imazosulfuron; sulfentrazone + pyrazosulfuron; sulfentrazone + metsulfuron; sulfentrazone + azimsulfuron; sulfentrazone + halosulfuron; sulfentrazone + esprocarb; sulfentrazone + mefenacet; sulfentrazone + molinate; sulfentrazone + propanil; sulfentrazone + pyrazolate; sulfentrazone + cyhalofop; sulfentrazone + fenoxaprop; sulfentrazone + bispyribac; sulfentrazone + pyriminobac; sulfentrazone + cafenstrole; sulfentrazone + oxadiargyl; sulfentrazone + oxadiazon; sulfentrazone + bromobutide; sulfentrazone + MY-100; sulfentrazone + dymron; sulfentrazone + NB 061; sulfentrazone + MK243; sulfentrazone + HW-52; sulfentrazone + AC 014; sulfentrazone + compound of the formula D; sulfentrazone + glyphosate; sulfentrazone + glufosinate; sulfentrazone + sulfosate; fluazolate + pretilachlor; fluazolate + cinosulfuron; fluazolate + triasulfuron; fluazolate + fenclorim; fluazolate + clodinafop; fluazolate + bensulfuron; fluazolate + imazosulfuron; fluazolate + pyrazosulfuron; fluazolate + metsulfuron; fluazolate + azimsulfuron; fluazolate + halosulfuron; fluazolate + esprocarb; fluazolate + mefenacet; fluazolate + molinate; fluazolate + propanil; fluazolate + pyrazolate; fluazolate + cyhalofop; fluazolate + fenoxaprop; fluazolate + bispyribac; fluazolate + pyriminobac; fluazolate + cafenstrole; fluazolate + oxadiargyl; fluazolate + oxadiazon; fluazolate + bromobutide; fluazolate + MY- 100; fluazolate + dymron; fluazolate + NB 061; fluazolate + MK243; fluazolate + HW-52; fluazolate + AC 014; fluazolate + compound of the formula D; fluazolate + glyphosate; fluazolate + glufosinate; fluazolate + sulfosate; pyraflufen-ethyl + pretilachlor; pyraflufen-ethyl + cinosulfuron; pyraflufen-ethyl + triasulfuron; pyraflufen-ethyl + fenclorim; pyraflufen-ethyl + clodinafop; pyraflufen-ethyl + bensulfuron; pyraflufen-ethyl + imazosulfuron; pyraflufen-ethyl + pyrazosulfuron; pyraflufen-ethyl + metsulfuron; pyraflufen-ethyl + azimsulfuron; pyraflufen-ethyl + halosulfuron; pyraflufen-ethyl + esprocarb; pyraflufen-ethyl + mefenacet; pyraflufen-ethyl + molinate; pyraflufen-ethyl + propanil; pyraflufen-ethyl + pyrazolate; pyraflufen-ethyl + cyhalofop; pyraflufen-ethyl + fenoxaprop; pyraflufen-ethyl + bispyribac; pyraflufen-ethyl + pyriminobac; pyraflufen-ethyl + cafenstrole; pyraflufen-ethyl + oxadiargyl; pyraflufen-ethyl + oxadiazon; pyraflufen-ethyl + bromobutide; pyraflufen-ethyl + MY-100; pyraflufen-ethyl + dymron; pyraflufen-ethyl + NB 061; pyraflufen-ethyl + MK243; pyraflufen-ethyl + HW-52; pyraflufen-ethyl + AC 014; pyraflufen-ethyl + compound of the formula D; pyraflufen-ethyl + glyphosate; pyraflufen-ethyl + glufosinate; pyraflufen-ethyl + sulfosate; flumipropyn + pretilachlor; flumipropyn + cinosulfuron; flumipropyn + triasulfuron; flumipropyn + fenclorim; flumipropyn + clodinafop; flumipropyn + bensulfuron; flumipropyn + imazosulfuron; flumipropyn + pyrazosulfuron; flumipropyn + metsulfuron; flumipropyn + azimsulfuron; flumipropyn + halosulfuron; flumipropyn + esprocarb; flumipropyn + mefenacet; flumipropyn + molinate; flumipropyn + propanil; flumipropyn + pyrazolate; flumipropyn + cyhalofop; flumipropyn + fenoxaprop; flumipropyn + bispyribac; flumipropyn + pyriminobac; flumipropyn + cafenstrole; flumipropyn + oxadiargyl; flumipropyn + oxadiazon; flumipropyn + bromobutide; flumipropyn + MY-100; flumipropyn + dymron; flumipropyn + NB 061; flumipropyn + MK243; flumipropyn + HW-52; flumipropyn + AC 014; flumipropyn + compound of the formula D; flumipropyn + glyphosate; flumipropyn + glufosinate; flumipropyn + sulfosate; flupropacil + pretitachlor; flupropacil + cinosulfuron; flupropacil + triasulfuron; flupropacil + fenclorim; flupropacil + clodinafop; flupropacil + bensulfuron; flupropacil + imazosulfuron; flupropacil + pyrazosulfuron; flupropacil + metsulfuron; flupropacil + azimsulfuron; flupropacil + halosulfuron; flupropacil + esprocarb; flupropacil + mefenacet; flupropacil + molinate; flupropacil + propanil; flupropacil + pyrazolate; flupropacil + cyhalofop; flupropacil + fenoxaprop; flupropacil + bispyribac; flupropacil + pyriminobac; flupropacil + cafenstrole; flupropacil + oxadiargyl; flupropacil + oxadiazon; flupropacil + bromobutide; flupropacil + MY-100; flupropacil + dymron; flupropacil + NB 061; flupropacil + MK243; flupropacil + HW-52; flupropacil + AC 014; flupropacil + compound of the formula D; flupropacil + glyphosate; flupropacil + glufosinate; flupropacil + sulfosate; nipyraclofen + pretilachlor; nipyraclofen + cinosulfuron; nipyraclofen + triasulfuron; nipyraclofen + fenclorim; nipyraclofen + clodinafop; nipyraclofen + bensulfuron; nipyraclofen + imazosulfuron; nipyraclofen + pyrazosulfuron; nipyraclofen + metsulfuron; nipyraclofen + azimsulfuron; nipyraclofen + halosulfuron; nipyraclofen + esprocarb; nipyraclofen + mefenacet; nipyraclofen + molinate; nipyraclofen + propanil; nipyraclofen + pyrazolate; nipyraclofen + cyhalofop; nipyraclofen + fenoxaprop; nipyraclofen + bispyribac; nipyraclofen + pyriminobac; nipyraclofen + cafenstrole; nipyraclofen + oxadiargyl; nipyraclofen + oxadiazon; nipyraclofen + bromobutide; nipyraclofen + MY-100; nipyraclofen + dymron; nipyraclofen + NB 061; nipyraclofen + MK243; nipyraclofen + HW-52; nipyraclofen + AC 014; nipyraclofen + compound of the formula D; nipyraclofen + glyphosate; nipyraclofen + glufosinate; nipyraclofen + sulfosate; benzfendizone + pretilachlor; benzfendizone + cinosulfuron; benzfendizone + triasulfuron; benzfendizone + fenclorim; benzfendizone + clodinafop; benzfendizone + bensulfuron; benzfendizone + imazosulfuron; benzfendizone + pyrazosulfuron; benzfendizone + metsulfuron; benzfendizone + azimsulfuron; benzfendizone + halosulfuron; benzfendizone + esprocarb; benzfendizone + mefenacet; benzfendizone + molinate; benzfendizone + propanil; benzfendizone + pyrazolate; benzfendizone + cyhalofop; benzfendizone + fenoxaprop; benzfendizone + bispyribac; benzfendizone + pyriminobac; benzfendizone + cafenstrole; benzfendizone + oxadiargyl; benzfendizone + oxadiazon; benzfendizone + bromobutide; benzfendizone + MY-100; benzfendizone + dymron; benzfendizone + NB 061; benzfendizone + MK243; benzfendizone + HW-52; benzfendizone + AC 014; benzfendizone + compound of the formula D; benzfendizone + glyphosate; benzfendizone + glufosinate; benzfendizone + sulfosate; thidiazimin + pretilachlor; thidiazimin + cinosulfuron; thidiazimin + triasulfuron; thidiazimin + fenclorim; thidiazimin + clodinafop; thidiazimin + bensulfuron; thidiazimin + imazosulfuron; thidiazimin + pyrazosulfuron; thidiazimin + metsulfuron; thidiazimin + azimsulfuron; thidiazimin + halosulfuron; thidiazimin + esprocarb; thidiazimin + mefenacet; thidiazimin + molinate; thidiazimin + propanil; thidiazimin + pyrazolate; thidiazimin + cyhalofop; thidiazimin + fenoxaprop; thidiazimin + bispyribac; thidiazimin + pyriminobac; thidiazimin + cafenstrole; thidiazimin + oxadiargyl; thidiazimin + oxadiazon; thidiazimin + bromobutide; thidiazimin + MY-100; thidiazimin + dymron; thidiazimin + NB 061; thidiazimin + MK243; thidiazimin + HW-52; thidiazimin + AC 014; thidiazimin + compound of the formula D; thidiazimin + glyphosate; thidiazimin + glufosinate; and thidiazimin + sulfosate.

The following combinations of the compounds under a) with the co-herbicides under b) have been found to be very particularly effective synergistic compositions in crops of sugar cane resistant to protoporphyrinogen oxidase inhibitors:
acifluorfen + atrazine; acifluorfen + ametryn; acifluorfen + dicamba; acifluorfen + terbutryn; acifluorfen + prosulfuron; acifluorfen + hexazinone; acifluorfen + asulam; acifluorfen + diuron; acifluorfen + 2,4-D; acifluorfen + halosulfuron; acifluorfen + flazasulfuron; acifluorfen + isoxaflutole; acifluorfen + azafenidin; acifluorfen + tebuthiuron; acifluorfen + sulcotrione; acifluorfen + pendimethalin; acifluorfen + clomazone; acifluorfen + metribuzin; acifluorfen + thiazopyr; acifluorfen + ethoxysulfuron; acifluorfen + compound of the formula C; acifluorfen + glyphosate; acifluorfen + glufosinate; acifluorfen + sulfosate; aclonifen + atrazine; aclonifen + ametryn; aclonifen + dicamba; aclonifen + terbutryn; aclonifen + prosulfuron; aclonifen + hexazinone; aclonifen + asulam; aclonifen + diuron; aclonifen + 2,4-D; aclonifen + halosulfuron; aclonifen + flazasulfuron; aclonifen + isoxaflutole; aclonifen + azafenidin; aclonifen + tebuthiuron; aclonifen + sulcotrione; aclonifen + pendimethalin; aclonifen + clomazone; aclonifen + metribuzin; aclonifen + thiazopyr; aclonifen + ethoxysulfuron; aclonifen + compound of the formula C; aclonifen + glyphosate; aclonifen + glufosinate; aclonifen + sulfosate; bifenox + atrazine; bifenox + ametryn; bifenox + dicamba; bifenox + terbutryn; bifenox + prosulfuron; bifenox + hexazinone; bifenox + asulam; bifenox + diuron; bifenox + 2,4-D; bifenox + halosulfuron; bifenox + flazasulfuron; bifenox + isoxaflutole; bifenox + azafenidin; bifenox + tebuthiuron; bifenox + sulcotrione; bifenox + pendimethalin; bifenox + clomazone; bifenox + metribuzin; bifenox + thiazopyr; bifenox + ethoxysulfuron; bifenox + compound of the formula C; bifenox + glyphosate; bifenox + glufosinate; bifenox + sulfosate; chlornitrofen + atrazine; chlornitrofen + ametryn; chlornitrofen + dicamba; chlornitrofen + terbutryn; chlornitrofen + prosulfuron; chlornitrofen + hexazinone; chlornitrofen + asulam; chlornitrofen + diuron; chlornitrofen + 2,4-D; chlornitrofen + halosulfuron; chlornitrofen + flazasulfuron; chlornitrofen + isoxaflutole; chlornitrofen + azafenidin; chlornitrofen + tebuthiuron; chiornitrofen + sulcotrione; chlornitrofen + pendimethalin; chlornitrofen + clomazone; chlornitrofen + metribuzin; chlornitrofen + thiazopyr; chlornitrofen + ethoxysulfuron; chlornitrofen + compound of the formula C; chlornitrofen + glyphosate; chlornitrofen + glufosinate; chlornitrofen + sulfosate; ethoxyfen + atrazine; ethoxyfen + ametryn; ethoxyfen + dicamba; ethoxyfen + terbutryn; ethoxyfen + prosulfuron; ethoxyfen + hexazinone; ethoxyfen + asulam; ethoxyfen + diuron; ethoxyfen + 2,4-D; ethoxyfen + halosulfuron; ethoxyfen + flazasulfuron; ethoxyfen + isoxaflutole; ethoxyfen + azafenidin; ethoxyfen + tebuthiuron; ethoxyfen + sulcotrione; ethoxyfen + pendimethalin; ethoxyfen + clomazone; ethoxyfen + metribuzin; ethoxyfen + thiazopyr; ethoxyfen + ethoxysulfuron; ethoxyfen + compound of the formula C; ethoxyfen + glyphosate; ethoxyfen + glufosinate; ethoxyfen + sulfosate; fluoroglycofen + atrazine; fluoroglycofen + ametryn; fluoroglycofen + dicamba; fluoroglycofen + terbutryn; fluoroglycofen + prosulfuron; fluoroglycofen + hexazinone; fluoroglycofen + asulam; fluoroglycofen + diuron; fluoroglycofen + 2,4-D; fluoroglycofen + halosulfuron; fluoroglycofen + flazasulfuron; fluoroglycofen + isoxaflutole; fluoroglycofen + azafenidin; fluoroglycofen + tebuthiuron; fluoroglycofen + sulcotrione; fluoroglycofen + pendimethalin; fluoroglycofen + clomazone; fluoroglycofen + metribuzin; fluoroglycofen + thiazopyr; fluoroglycofen + ethoxysulfuron; fluoroglycofen + compound of the formula C; fluoroglycofen + glyphosate; fluoroglycofen + glufosinate; fluoroglycofen + sulfosate; fomesafen + atrazine; fomesafen + ametryn; fomesafen + dicamba; fomesafen + terbutryn; fomesafen + prosulfuron; fomesafen + hexazinone; fomesafen + asulam; fomesafen + diuron; fomesafen + 2,4-D; fomesafen + halosulfuron; fomesafen + flazasulfuron; fomesafen + isoxaflutole; fomesafen + azafenidin; fomesafen + tebuthiuron; fomesafen + sulcotrione; fomesafen + pendimethalin; fomesafen + clomazone; fomesafen + metribuzin; fomesafen + thiazopyr; fomesafen + ethoxysulfuron; fomesafen + compound of the formula C; fomesafen + glyphosate; fomesafen + glufosinate; fomesafen + sulfosate; lactofen + atrazine; lactofen + ametryn; lactofen + dicamba; lactofen + terbutryn; lactofen + prosulfuron; lactofen + hexazinone; lactofen + asulam; lactofen + diuron; lactofen + 2,4-D; lactofen + halosulfuron; lactofen + flazasulfuron; lactofen + isoxaflutole; lactofen + azafenidin; lactofen + tebuthiuron; lactofen + sulcotrione; lactofen + pendimethalin; lactofen + clomazone; lactofen + metribuzin; lactofen + thiazopyr; lactofen + ethoxysulfuron; lactofen + compound of the formula C; lactofen + glyphosate; lactofen + glufosinate; lactofen + sulfosate; oxyfluorfen + atrazine; oxyfluorfen + ametryn; oxyfluorfen + dicamba; oxyfluorfen + terbutryn; oxyfluorfen + prosulfuron; oxyfluorfen + hexazinone; oxyfluorfen + asulam; oxyfluorfen + diuron; oxyfluorfen + 2,4-D; oxyfluorfen + halosulfuron; oxyfluorfen + flazasulfuron; oxyfluorfen + isoxaflutole; oxyfluorfen + azafenidin; oxyfluorfen + tebuthiuron; oxyfluorfen + sulcotrione; oxyfluorfen + pendimethalin; oxyfluorfen + clomazone; oxyfluorfen + metribuzin; oxyfluorfen + thiazopyr; oxyfluorfen + ethoxysulfuron; oxyfluorfen + compound of the formula C; oxyfluorfen + glyphosate; oxyfluorfen + glufosinate; oxyfluorfen + sulfosate; azafenidin + atrazine; azafenidin + ametryn; azafenidin + dicamba; azafenidin + terbutryn; azafenidin + prosulfuron; azafenidin + hexazinone; azafenidin + asulam; azafenidin + diuron; azafenidin + 2,4-D; azafenidin + halosulfuron; azafenidin + flazasulfuron; azafenidin + isoxaflutole; azafenidin + tebuthiuron; azafenidin + sulcotrione; azafenidin + pendimethalin; azafenidin + clomazone; azafenidin + metribuzin; azafenidin + thiazopyr; azafenidin + ethoxysulfuron; azafenidin + compound of the formula C; azafenidin + glyphosate; azafenidin + glufosinate; azafenidin + sulfosate; carfentrazone-ethyl + atrazine; carfentrazone-ethyl + ametryn; carfentrazone-ethyl + dicamba; carfentrazone-ethyl + terbutryn; carfentrazone-ethyl + prosulfuron; carfentrazone-ethyl + hexazinone; carfentrazone-ethyl + asulam; carfentrazone-ethyl + diuron; carfentrazone-ethyl + 2,4-D; carfentrazone-ethyl + halosulfuron; carfentrazone-ethyl + flazasulfuron; carfentrazone-ethyl + isoxaflutole; carfentrazone-ethyl + azafenidin; carfentrazone-ethyl + tebuthiuron; carfentrazone-ethyl + sulcotrione; carfentrazone-ethyl + pendimethalin; carfentrazone-ethyl + clomazone; carfentrazone-ethyl + metribuzin; carfentrazone-ethyl + thiazopyr; carfentrazone-ethyl + ethoxysulfuron; carfentrazone-ethyl + compound of the formula C; carfentrazone-ethyl + glyphosate; carfentrazone-ethyl + glufosinate; carfentrazone-ethyl + sulfosate; compound of the formula A + atrazine; compound of the formula A + ametryn; compound of the formula A + dicamba; compound of the formula A + terbutryn; compound of the formula A + prosulfuron; compound of the formula A + hexazinone; compound of the formula A + asulam; compound of the formula A + diuron; compound of the formula A + 2,4-D; compound of the formula A + halosulfuron; compound of the formula A + flazasulfuron; compound of the formula A + isoxaflutole; compound of the formula A + azafenidin; compound of the formula A + tebuthiuron; compound of the formula A + sulcotrione; compound of the formula A + pendimethalin; compound of the formula A + clomazone; compound of the formula A + metribuzin; compound of the formula A + thiazopyr; compound of the formula A + ethoxysulfuron; compound of the formula A + compound of the formula C; compound of the formula A + glyphosate; compound of the formula A + glufosinate; compound of the formula A + sulfosate; cinidon-ethyl + atrazine; cinidon-ethyl + ametryn; cinidon-ethyl + dicamba; cinidon-ethyl + terbutryn; cinidon-ethyl + prosulfuron; cinidon-ethyl + hexazinone; cinidon-ethyl + asulam; cinidon-ethyl + diuron; cinidon-ethyl + 2,4-D; cinidon-ethyl + halosulfuron; cinidon-ethyl + flazasulfuron; cinidon-ethyl + isoxaflutole; cinidon-ethyl + azafenidin; cinidon-ethyl + tebuthiuron; cinidon-ethyl + sulcotrione; cinidon-ethyl + pendimethalin; cinidon-ethyl + clomazone; cinidon-ethyl + metribuzin; cinidon-ethyl + thiazopyr; cinidon-ethyl + ethoxysulfuron; cinidon-ethyl + compound of the formula C; cinidon-ethyl + glyphosate; cinidon-ethyl + glufosinate; cinidon-ethyl + sulfosate; flumiclorac-pentyl + atrazine; flumiclorac-pentyl + ametryn; flumiclorac-pentyl + dicamba; flumiclorac-pentyl + terbutryn; flumiclorac-pentyl + prosulfuron; flumiclorac-pentyl + hexazinone; flumiclorac-pentyl + asulam; flumiclorac-pentyl + diuron; flumiclorac-pentyl + 2,4-D; flumiclorac-pentyl + halosulfuron; flumiclorac-pentyl + flazasulfuron; flumiclorac-pentyl + isoxaflutole; flumiclorac-pentyl + azafenidin; flumiclorac-pentyl + tebuthiuron; flumiclorac-pentyl + sulcotrione; flumiclorac-pentyl + pendimethalin; flumiclorac-pentyl + clomazone; flumiclorac-pentyl + metribuzin; flumiclorac-pentyl + thiazopyr; flumiclorac-pentyl + ethoxysulfuron; flumiclorac-pentyl + compound of the formula C; flumiclorac-pentyl + glyphosate; flumiclorac-pentyl + glufosinate; flumiclorac-pentyl + sulfosate; flumioxazin + atrazine; flumioxazin + ametryn; flumioxazin + dicamba; flumioxazin + terbutryn; flumioxazin + prosulfuron; flumioxazin + hexazinone; flumioxazin + asulam; flumioxazin + diuron; flumioxazin + 2,4-D; flumioxazin + halosulfuron; flumioxazin + flazasulfuron; flumioxazin + isoxaflutole; flumioxazin + azafenidin; flumioxazin + tebuthiuron; flumioxazin + sulcotrione; flumioxazin + pendimethalin; flumioxazin + clomazone; flumioxazin + metribuzin; flumioxazin + thiazopyr; flumioxazin + ethoxysulfuron; flumioxazin + compound of the formula C; flumioxazin + glyphosate; flumioxazin + glufosinate; flumioxazin + sulfosate; fluthiacet-methyl + atrazine; fluthiacet-methyl + ametryn; fluthiacet-methyl + dicamba; fluthiacet-methyl + terbutryn; fluthiacet-methyl + prosulfuron; fluthiacet-methyl + hexazinone; fluthiacet-methyl + asulam; fluthiacet-methyl + diuron; fluthiacet-methyl + 2,4-D; fluthiacet-methyl + halosulfuron; fluthiacet-methyl + flazasulfuron; fluthiacet-methyl + isoxaflutole; fluthiacet-methyl + azafenidin; fluthiacet-methyl + tebuthiuron; fluthiacet-methyl + sulcotrione; fluthiacet-methyl + pendimethalin; fluthiacet-methyl + clomazone; fluthiacet-methyl + metribuzin; fluthiacet-methyl + thiazopyr; fluthiacet-methyl + ethoxysulfuron; fluthiacet-methyl + compound of the formula C; fluthiacet-methyl + glyphosate; fluthiacet-methyl + glufosinate; fluthiacet-methyl + sulfosate; oxadiargyl + atrazine; oxadiargyl + ametryn; oxadiargyl + dicamba; oxadiargyl + terbutryn; oxadiargyl + prosulfuron; oxadiargyl + hexazinone; oxadiargyl + asulam; oxadiargyl + diuron; oxadiargyl + 2,4-D; oxadiargyl + halosulfuron; oxadiargyl + flazasulfuron; oxadiargyl + isoxaflutole; oxadiargyl + azafenidin; oxadiargyl + tebuthiuron; oxadiargyl + sulcotrione; oxadiargyl + pendimethalin; oxadiargyl + clomazone; oxadiargyl + metribuzin; oxadiargyl + thiazopyr; oxadiargyl + ethoxysulfuron; oxadiargyl + compound of the formula C; oxadiargyl + glyphosate; oxadiargyl + glufosinate; oxadiargyl + sulfosate; oxadiazon + atrazine; oxadiazon + ametryn; oxadiazon + dicamba; oxadiazon + terbutryn; oxadiazon + prosulfuron; oxadiazon + hexazinone; oxadiazon + asulam; oxadiazon + diuron; oxadiazon + 2,4-D; oxadiazon + halosulfuron; oxadiazon + flazasulfuron; oxadiazon + isoxaflutole; oxadiazon + azafenidin; oxadiazon + tebuthiuron; oxadiazon + sulcotrione; oxadiazon + pendimethalin; oxadiazon + clomazone; oxadiazon + metribuzin; oxadiazon + thiazopyr; oxadiazon + ethoxysulfuron; oxadiazon + compound of the formula C; oxadiazon + glyphosate; oxadiazon + glufosinate; oxadiazon + sulfosate; pentoxazone + atrazine; pentoxazone + ametryn; pentoxazone + dicamba; pentoxazone + terbutryn; pentoxazone + prosulfuron; pentoxazone + hexazinone; pentoxazone + asulam; pentoxazone + diuron; pentoxazone + 2,4-D; pentoxazone + halosulfuron; pentoxazone + flazasulfuron; pentoxazone + isoxaflutole; pentoxazone + azafenidin; pentoxazone + tebuthiuron; pentoxazone + sulcotrione; pentoxazone + pendimethalin; pentoxazone + clomazone; pentoxazone + metribuzin; pentoxazone + thiazopyr; pentoxazone + ethoxysulfuron; pentoxazone + compound of the formula C; pentoxazone + glyphosate; pentoxazone + glufosinate; pentoxazone + sulfosate; sulfentrazone + atrazine; sulfentrazone + ametryn; sulfentrazone + dicamba; sulfentrazone + terbutryn; sulfentrazone + prosulfuron; sulfentrazone + hexazinone; sulfentrazone + asulam; sulfentrazone + diuron; sulfentrazone + 2,4-D; sulfentrazone + halosulfuron; sulfentrazone + flazasulfuron; sulfentrazone + isoxaflutole; sulfentrazone + azafenidin; sulfentrazone + tebuthiuron; sulfentrazone + sulcotrione; sulfentrazone + pendimethalin; sulfentrazone + clomazone; sulfentrazone + metribuzin; sulfentrazone + thiazopyr; sulfentrazone + ethoxysulfuron; sulfentrazone + compound of the formula C; sulfentrazone + glyphosate; sulfentrazone + glufosinate; sulfentrazone + sulfosate; fluazolate + atrazine; fluazolate + ametryn; fluazolate + dicamba; fluazolate + terbutryn; fluazolate + prosulfuron; fluazolate + hexazinone; fluazolate + asulam; fluazolate + diuron; fluazolate + 2,4-D; fluazolate + halosulfuron; fluazolate + flazasulfuron; fluazolate + isoxaflutole; fluazolate + azafenidin; fluazolate + tebuthiuron; fluazolate + sulcotrione; fluazolate + pendimethalin; fluazolate + clomazone; fluazolate + metribuzin; fluazolate + thiazopyr; fluazolate + ethoxysulfuron; fluazolate + compound of the formula C; fluazolate + glyphosate; fluazolate + glufosinate; fluazolate + sulfosate; pyraflufen-ethyl + atrazine; pyraflufen-ethyl + ametryn; pyraflufen-ethyl + dicamba; pyraflufen-ethyl + terbutryn; pyraflufen-ethyl + prosulfuron; pyraflufen-ethyl + hexazinone; pyraflufen-ethyl + asulam; pyraflufen-ethyl + diuron; pyraflufen-ethyl + 2,4-D; pyraflufen-ethyl halosulfuron; pyraflufen-ethyl + flazasulfuron; pyraflufen-ethyl + Isoxaflutole; pyraflufen-ethyl + azafenidin; pyraflufen-ethyl + tebuthiuron; pyraflufen-ethyl + sulcotrione; pyraflufen-ethyl + pendimethalin; pyraflufen-ethyl + clomazone; pyraflufen-ethyl + metribuzin; pyraflufen-ethyl + thiazopyr; pyraflufen-ethyl + ethoxysulfuron; pyraflufen-ethyl + compound of the formula C; pyraflufen-ethyl + glyphosate; pyraflufen-ethyl + glufosinate; pyraflufen-ethyl + sulfosate; flumipropyn + atrazine; flumipropyn + ametryn; flumipropyn + dicamba; flumipropyn + terbutryn; flumipropyn + prosulfuron; flumipropyn + hexazinone; flumipropyn + asulam; flumipropyn + diuron; flumipropyn + 2,4-D; flumipropyn + halosulfuron; flumipropyn + flazasulfuron; flumipropyn + isoxaflutole; flumipropyn + azafenidin; flumipropyn + tebuthiuron; flumipropyn + sulcotrione; flumipropyn + pendimethalin; flumipropyn + clomazone; flumipropyn + metribuzin; flumipropyn + thiazopyr; flumipropyn + ethoxysulfuron; flumipropyn + compound of the formula C; flumipropyn + glyphosate; flumipropyn + glufosinate; flumipropyn + sulfosate; flupropacil + atrazine; flupropacil + ametryn; flupropacil + dicamba; flupropacil + terbutryn; flupropacil + prosulfuron; flupropacil + hexazinone; flupropacil + asulam; flupropacil + diuron; flupropacil + 2,4-D; flupropacil + halosulfuron; flupropacil + flazasulfuron; flupropacil + isoxaflutole; flupropacil + azafenidin; flupropacil + tebuthiuron; flupropacil + sulcotrione; flupropacil + pendimethalin; flupropacil + clomazone; flupropacil + metribuzin; flupropacil + thiazopyr; flupropacil + ethoxysulfuron; flupropacil + compound of the formula C; flupropacil + glyphosate; flupropacil + glufosinate; flupropacil + sulfosate; nipyraclofen + atrazine; nipyraclofen + ametryn; nipyraclofen + dicamba; nipyraclofen + terbutryn; nipyraclofen + prosulfuron; nipyraclofen + hexazinone; nipyraclofen + asulam; nipyraclofen + diuron; nipyraclofen + 2,4-D; nipyraclofen + halosulfuron; nipyraclofen + flazasulfuron; nipyraclofen + isoxaflutole; nipyraclofen + azafenidin; nipyraclofen + tebuthiuron; nipyraclofen + sulcotrione; nipyraclofen + pendimethalin; nipyraclofen + clomazone; nipyraclofen + metribuzin; nipyraclofen + thiazopyr; nipyraclofen + ethoxysulfuron; nipyraclofen + compound of the formula C; nipyraclofen + glyphosate; nipyraclofen + glufosinate; nipyraclofen + sulfosate; benzfendizone + atrazine; benzfendizone + ametryn; benzfendizone + dicamba; benzfendizone + terbutryn; benzfendizone + prosulfuron; benzfendizone + hexazinone; benzfendizone + asulam; benzfendizone + diuron; benzfendizone + 2,4-D; benzfendizone + halosulfuron; benzfendizone + flazasulfuron; benzfendizone + isoxaflutole; benzfendizone + azafenidin; benzfendizone + tebuthiuron; benzfendizone + sulcotrione; benzfendizone + pendimethalin; benzfendizone + clomazone; benzfendizone + metribuzin; benzfendizone + thiazopyr; benzfendizone + ethoxysulfuron; benzfendizone + compound of the formula C; benzfendizone + glyphosate; benzfendizone + glufosinate; benzfendizone + sulfosate; thidiazimin + atrazine; thidiazimin + ametryn; thidiazimin + dicamba; thidiazimin + terbutryn; thidiazimin + prosulfuron; thidiazimin + hexazinone; thidiazimin + asulam; thidiazimin + diuron; thidiazimin + 2,4-D; thidiazimin + halosulfuron; thidiazimin + flazasulfuron; thidiazimin + isoxaflutole; thidiazimin + azafenidin; thidiazimin + tebuthiuron; thidiazimin + sulcotrione; thidiazimin + pendimethalin; thidiazimin + clomazone; thidiazimin + metribuzin; thidiazimin + thiazopyr; thidiazimin + ethoxysulfuron; thidiazimin + compound of the formula C; thidiazimin + glyphosate; thidiazimin + glufosinate; and thidiazimin + sulfosate.

The application rate may vary within wide ranges and depends on the soil properties, the type of application (pre- or postemergent; seed dressing; application in a seed farrow, no tillage application, etc.), the crop plant, the weed to be controlled, the climatic conditions prevailing in each case and other factors determined by the type and the time of application and the target crop. In general, the active compound mixture according to the invention can be used with an application rate of from 1 to 5000 g/ha, in particular from 1 to 2000 g/ha, of active compound mixture.

The composition according to the invention comprises the protoporphyrinogen oxidase inhibitor a) and the pesticide under b) in any mixing ratio, usually with an excess of one component over the other. Preferred mixing ratios of active compound a) and the pesticides under b) are between 1:2000 and 2000:1, in particular between 1:200 and 200:1.

The invention also relates to a method for the selective control of broad-leaved weeds and grasses in crops of useful plants resistant to protoporphyrinogen oxidase inhibitors which comprises treating the useful plants, their seeds or seedlings or the area under cultivation simultaneously or separately with a herbicide-synergistically effective amount of the herbicide a), at least one further co-herbicide b), and, if appropriate, a herbicide-antagonistically effective amount of the safener c).

Preference is likewise given to a method characterized in that a herbicide a) is used on useful plants resistant to protoporphyrinogen oxidase inhibitors or on the surroundings of these useful plants, and, jointly with the herbicide a) or at a later point in time, a further co-herbicide is used. Suitable herbicides a) and co-herbicides b) are the same active compounds as listed above.

The mixtures of the protoporphyrinogen oxidase inhibitors a) with the co-herbicides b) can be employed in unmodified form, i.e. as obtained in the synthesis. However, they are preferably processed in a conventional manner using auxiliaries customary in formulation technique, such as solvents, solid carriers or surfactants, for example to emulsifiable concentrates, directly sprayable or dilutable solutions, diluted emulsions, wettable powders, soluble powders, dusts, granules or microcapsules. The application methods, such as spraying, atomizing, dusting, wetting, scattering or watering, like the type of composition, are chosen according to the targets and the prevailing conditions.

The formulations, i.e. the compositions, preparations or combinations comprising the protoporphyrinogen oxidase inhibitors a) and the co-herbicides b) and, if appropriate, one or more solid or liquid formulation auxiliaries, are prepared in a manner known per se, for example by intimately mixing and/or grinding the active compounds with the formulation auxilaries, for example solvents or solid carriers. Furthermore, surface-active compounds (surfactants) may additionally be used in the preparation of the formulations.

Examples of solvents and solid carriers are given, for example, in WO 97/34485, on page 6.

Suitable surface-active compounds are, depending on the nature of the active compounds under a) and b) to be formulated, nonionic, cationic and/or anionic surfactants and surfactant mixtures having good emulsifying, dispersing and wetting properties.

Examples of suitable anionic, nonionic and cationic surfactants are listed, for example, in WO 97/34485 , on pages 7 and 8.

The surfactants conventionally used in the art of formulation and which can also be used in the preparation of the herbicidal compositions according to the invention are described, inter alia, in "McCutcheon's Detergents and Emulsifiers Annual" MC Publishing Corp., Ridgewood New Jersey, 1981, Stache, H., "Tensid-Taschenbuch" [Surfactant Handbook], Carl Hanser Verlag, Münich/Vienna, 1981 and M. and J. Ash, "Encyclopedia of Surfactants", Vol I-III, Chemical Publishing Co., New York, 1980-81.

The herbicidal formulations generally comprise 0.1 to 99% by weight, in particular 0.1 to 95% by weight, of the active compound mixture of the compound under a) with the co-herbicides under b), 1 to 99.9% by weight of a solid or liquid formulation auxiliary and 0 to 25% by weight, in particular 0.1 to 25% by weight, of a surfactant.

While concentrated compositions are usually preferred as commercial goods, the end user generally uses dilute compositions. The compositions can also comprise further additives, such as stabilizers, for example epoxidized or non-epoxidized vegetable oils (epoxidized coconut oil, rapeseed oil or soya oil), defoamers, for example silicone oil, preservatives, viscosity regulators, binders, tackifiers and fertilizers or other active substances. Preferred formulations have, in particular, the following compositions:
(% = % by weight)

| Emulsifable concentrates: | |
|---|---|
| Active compound mixture | 1 to 90%, preferably 5 to 20% |
| Surface-active agent | 1 to 30%, preferably 10 to 20% |
| Liquid carrier | 5 to 94%, preferably 70 to 85% |

| Dusts: | |
|---|---|
| Active compound mixture | 0.1 to 10%, preferably 0.1 to 5% |
| Solid carrier | 99.9 to 90%, preferably 99.9 to 99% |

| Suspension concentrates: | |
|---|---|
| Active compound mixture: | 5 to 75%, preferably 10 to 50% |
| Water | 94 to 24%, preferably 88 to 30% |
| Surface-active agent | 1 to 40%, preferably 2 to 30% |

| Wettable powders: | |
|---|---|
| Active compound mixture | 0.5 to 90%, preferably 1 to 80% |
| Surface-active agent | 0.5 to 20%, preferably 1 to 15% |
| Solid carrier | 5 to 95%, preferably 15 to 90% |

| Granules: | |
|---|---|
| Active compound mixture | 0.1 to 30%, preferably 0.1 to 15% |
| Solid carrier | 99.5 to 70%, preferably 97 to 85% |

The examples below illustrate the invention in more detail, without limiting it.

| F1. Emulsion concentrates | a) | b) | c) | d) |
|---|---|---|---|---|
| Active compound mixture | 5% | 10% | 25% | 50% |
| Ca dodecylbenzenesulfonate | 6% | 8% | 6% | 8% |
| Castor oil polyglycol ether (36 mol of EO) | 4% | - | 4% | 4% |
| Octylphenol polyglycol ether (7-8 mol of EO) | - | 4% | - | 2% |
| Cyclohexanone | - | - | 10% | 20% |
| Arom. C₉-C₁₂ hydrocarbon mixture | 85% | 78% | 55% | 16% |

Emulsions of any desired concentration can be prepared from such concentrates by dilution with water.

| F2. Solutions | a) | b) | c) | d) |
|---|---|---|---|---|
| Active compound mixture | 5% | 10% | 50% | 90% |
| 1 -Methoxy-3-(3-methoxypropoxy)propane | - | 20% | 20% | - |
| Polyethylene glycol MW 400 | 20% | 10% | - | - |
| N-Methyl-2-pyrrolidone | - | - | 30% | 10% |
| Arom. C₉-C₁₂ hydrocarbon mixture | 75% | 60% | - | - |

The solutions are suitable for use in the form of tiny droplets.

| F3. Wettable powders | a) | b) | c) | d) |
|---|---|---|---|---|
| Active compound mixture | 5% | 25% | 50% | 80% |
| Sodium lignosulfonate | 4% | - | 3% | - |
| Sodium laurylsulfate | 2% | 3% | - | 4% |
| Sodium diisobutylnaphthalene sulfonate | - | 6% | 5% | 6% |
| Octylphenol polyglycol ether (7-8 mol of EO) | - | 1% | 2% | - |
| Finely divided silica | 1% | 3% | 5% | 10% |
| Kaolin | 88% | 62% | 35% | - |

The active compound is thoroughly mixed with the additives and ground well in a suitable mill. This gives wettable powders which can be diluted with water to give suspensions of any desired concentration.

| F4. Coated granules | a) | b) | c) |
|---|---|---|---|
| Active compound mixture | 0.1% | 5% | 15% |
| Finely divided silica | 0.9% | 2% | 2% |
| Inorg. carrier (Æ 0.1 - 1 mm), for example CaCO₃ or SiO₂ | 99.0% | 93% | 83% |

The active compound is dissolved in methylene chloride, the solution is sprayed onto the carrier and the solvent is subsequently evaporated off under reduced pressure.

| F5. Coated granules | a) | b) | c) |
|---|---|---|---|
| Active compound mixture | 0.1% | 5% | 15% |
| Polyethylene glycol MW 200 | 1.0% | 2% | 3% |
| Finely divided silica | 0.9% | 1% | 2% |
| Inorg. Carrier (Æ 0.1 -1 mm), for example CaCO₃ or SiO₂ | 98.0% | 92% | 80% |

In a mixer, the finely ground active compound is applied evenly to the carrier moistened with polyethylene glycol. In this manner, dust-free coated granules are obtained.

| F6. Extruder granules | a) | b) | c) | d) |
|---|---|---|---|---|
| Active compound mixture | 0.1% | 3% | 5% | 15% |
| Sodium lignosulfonate | 1.5% | 2% | 3% | 4% |
| Carboxymethylcellulose | 1.4% | 2% | 2% | 2% |
| Kaolin | 97.0% | 93% | 90% | 79% |

The active compound is mixed with the additives, ground and moistened with water. This mixture is extruded and subsequently dried in a stream of air.

| F7. Dusts | a) | b) | c) |
|---|---|---|---|
| Active compound mixture | 0.1% | 1% | 5% |
| Talc | 39.9% | 49% | 35% |
| Kaolin | 60.0% | 50% | 60% |

Ready-to-use dusts are obtained by mixing the active compound with the carriers and grinding the mixture in a suitable mill.

| F8. Suspension concentrates | a) | b) | c) | d) |
|---|---|---|---|---|
| Active compound mixture | 3% | 10% | 25% | 50% |
| Ethylene glycol | 5% | 5% | 5% | 5% |
| Nonylphenol polyglycol ether (15 mol of EO) | - | 1% | 2% | - |
| Sodium lignosulfonate | 3% | 3% | 4% | 5% |
| Carboxymethylcellulose | 1% | 1% | 1% | 1% |
| 37% aqueous formaldehyde solution | 0.2% | 0.2% | 0.2% | 0.2% |
| Silicone oil emulsion | 0.8% | 0.8% | 0.8% | 0.8% |
| Water | 87% | 79% | 62% | 38% |

The finely ground active compound is intimately mixed with the additives. This gives a suspension concentrate, from which suspensions of any desired concentration can be prepared by dilution with water.

It is often more practical to formulate the active compound under a) and the mixing partner under b) individually and then to mix them shortly before application in the applicator in the desired mixing ratio as "tank mix" in water.

### Biological examples:

A synergistic effect is always given when the effect of the combination of the active compounds a) and b) is greater than the sum of the effect of the active compounds applied on their own. The expected herbicidal effect Ee for a given combination of two herbicides can be calculated using the method of COLBY, S.R., "Calculating synergistic and antagonistic response of herbicide combinations", Weeds 15, pages 20-22, 1967. This method has already been used in EP-A-0 768 034.

The synergistic effect of the combination of the active compound under a) with the active co-herbicides under b) is demonstrated in the examples below.

### Example B1: pre-emergence test:

Under greenhouse conditions, the test plants are sown in pots. The culture substrate used is a standard soil. At the pre-emergence stage, the herbicides are applied to the surface of the soil both on their own and in a mixture. Application is carried out as an aqueous suspension of the test substances, prepared from a 25% wettable powder (Example F3, b)), using 500 I of water/ha. The application rates depend on the optimum dosages determined under outdoor or greenhouse conditions. Evaluation of the tests is carried out after 2 to 4 weeks.
In this test, the mixtures used show good synergistic effects.

### Example B2: post-emergence test:

Under greenhouse conditions, the test plants are grown in pots until they have reached a post-emergence stage. The culture substrate used is a standard soil. In a post-emergence stage, the herbicides are applied to the test plants both on their own and in a mixture. Application is carried out as an aqueous suspension of the test substances prepared from a 25% wettable powder (Example F3, b)), using 500 l of water/ha. The application rates depend on the optimum dosages determined under outdoor or greenhouse conditions. Evaluation of the tests is carried out after 2 to 4 weeks.
The mixtures used in this test likewise show good synergistic effects.
Surprisingly, it has been found that specific safeners as additional component c) are suitable for mixing with the synergistic composition according to the invention. The present invention therefore also relates to a selective-herbicidal composition for controlling broad-leaved weeds and grasses in crops of useful plants resistant to protoporphyrinogen oxidase inhibitors, in particular in crops of maize and cereal, said composition comprising a protoporphyrinogen oxidase inhibitor a), at least one co-herbicide b), and one safener (antidote) c) which protects the useful plants but not the broad-leaved weeds and grasses against the pytotoxic action of the herbicides, and to the use of this composition for controlling weeds in crops of useful plants.

Suitable additional components c) are herbicide safeners of the benzoxazine type, in particular benoxacor (61), and also MON 4660, flurazole (350), dichlormid (213) and furilazole (377).

The following combinations of the compounds under a) with the co-herbicides under b) and benoxacor have been found to be very particularly effective selective-herbicidal compositions in crops of maize resistant to protoporphyrinogen oxidase inhibitors:
acifluorfen + (S)-metolachlor + benoxacor; acifluorfen + metolachlor + benoxacor; acifluorfen + dimethenamid or (S)-dimethenamid + benoxacor; acifluorfen + acetochlor + benoxacor; acifluorfen + alachlor + benoxacor, aclonifen + (S)-metolachlor + benoxacor; aclonifen + metolachlor + benoxacor; aclonifen + dimethenamid or (S)-dimethenamid + benoxacor; aclonifen + acetochlor + benoxacor; aclonifen + alachlor + benoxacor; bifenox + (S)-metolachlor + benoxacor; bifenox + metolachlor + benoxacor; bifenox + dimethenamid or (S)-dimethenamid + benoxacor; bifenox + acetochlor + benoxacor; bifenox + alachlor + benoxacor; chlornitrofen + (S)-metolachlor + benoxacor; chlornitrofen + metolachlor + benoxacor, chlornitrofen + dimethenamid or (S)-dimethenamid + benoxacor; chlornitrofen + acetochlor + benoxacor; chlornitrofen + alachlor + benoxacor; ethoxyfen + (S)-metolachlor + benoxacor; ethoxyfen + metolachlor + benoxacor; ethoxyfen + dimethenamid or (S)-dimethenamid + benoxacor; ethoxyfen + acetochlor + benoxacor; ethoxyfen + alachlor + benoxacor; fluoroglycofen + (S)-metolachlor + benoxacor; fluoroglycofen + metolachlor + benoxacor; fluoroglycofen + dimethenamid or (S)-dimethenamid + benoxacor; fluoroglycofen + acetochlor + benoxacor; fluoroglycofen + alachlor + benoxacor; fomesafen + (S)-metolachlor + benoxacor; fomesafen + metolachlor + benoxacor; fomesafen + dimethenamid or (S)-dimethenamid + benoxacor; fomesafen + acetochlor + benoxacor; fomesafen + alachlor + benoxacor; lactofen + (S)-metolachlor + benoxacor; lactofen + metolachlor + benoxacor; lactofen + dimethenamid or (S)-dimethenamid + benoxacor; lactofen + acetochlor + benoxacor; lactofen + alachlor + benoxacor; oxyfluorfen + (S)-metolachlor + benoxacor; oxyfluorfen + metolachlor + benoxacor; oxyfluorfen + dimethenamid or (S)-dimethenamid + benoxacor; oxyfluorfen + acetochlor + benoxacor; oxyfluorfen + alachlor + benoxacor; azafenidin + (S)-metolachlor + benoxacor; azafenidin + metolachlor + benoxacor; azafenidin + dimethenamid or (S)-dimethenamid + benoxacor; azafenidin + acetochlor + benoxacor; azafenidin + alachlor + benoxacor; carfentrazone-ethyl + (S)-metolachlor + benoxacor; carfentrazone-ethyl + metolachlor + benoxacor; carfentrazone-ethyl + dimethenamid or (S)-dimethenamid + benoxacor; carfentrazone-ethyl + acetochlor + benoxacor; carfentrazone-ethyl + alachlor + benoxacor; compound of the formula A + (S)-metolachlor + benoxacor; compound of the formula A + metolachlor + benoxacor, compound of the formula A + dimethenamid or (S)-dimethenamid + benoxacor; compound of the formula A + acetochlor + benoxacor; compound of the formula A + alachlor + benoxacor; cinidon-ethyl + (S)-metolachlor + benoxacor; cinidon-ethyl + metolachlor + benoxacor; cinidon-ethyl + dimethenamid or (S)-dimethenamid + benoxacor; cinidon-ethyl + acetochlor + benoxacor; cinidon-ethyl + alachlor + benoxacor; flumiclorac-pentyl + (S)-metolachlor + benoxacor; flumiclorac-pentyl + metolachlor + benoxacor; flumiclorac-pentyl + dimethenamid or (S)-dimethenamid + benoxacor; flumiclorac-pentyl + acetochlor + benoxacor; flumiclorac-pentyl + alachlor + benoxacor; flumioxazin + (S)-metolachlor + benoxacor; flumioxazin + metolachlor + benoxacor; flumioxazin + dimethenamid or (S)-dimethenamid + benoxacor; flumioxazin + acetochlor + benoxacor; flumioxazin + alachlor + benoxacor; fluthiacet-methyl + (S)-metolachlor + benoxacor; fluthiacet-methyl + metolachlor + benoxacor; fluthiacet-methyl + dimethenamid or (S)-dimethenamid + benoxacor; fluthiacet-methyl + acetochlor + benoxacor; fluthiacet-methyl + alachlor + benoxacor; oxadiargyl + (S)-metolachlor + benoxacor; oxadiargyl + metolachlor + benoxacor; oxadiargyl + dimethenamid or (S)-dimethenamid + benoxacor; oxadiargyl + acetochlor + benoxacor; oxadiargyl + alachlor + benoxacor; oxadiazon + (S)-metolachlor + benoxacor; oxadiazon + metolachlor + benoxacor; oxadiazon + dimethenamid or (S)-dimethenamid + benoxacor, oxadiazon + acetochtor + benoxacor; oxadiazon + alachlor + benoxacor; pentoxazone + (S)-metolachlor + benoxacor; pentoxazone + metolachlor + benoxacor; pentoxazone + dimethenamid or (S)-dimethenamid + benoxacor; pentoxazone + acetochlor + benoxacor; pentoxazone + alachlor + benoxacor; sulfentrazone + (S)-metolachlor + benoxacor; sulfentrazone + metolachlor + benoxacor; sulfentrazone + dimethenamid or (S)-dimethenamid + benoxacor; sulfentrazone + acetochlor + benoxacor; sulfentrazone + alachlor + benoxacor, fluazolate + (S)-metolachlor + benoxacor; fluazolate + metolachlor + benoxacor; fluazolate + dimethenamid or (S)-dimethenamid + benoxacor; fluazolate + acetochlor + benoxacor; fluazolate + alachlor + benoxacor; pyraflufen-ethyl + (S)-metolachlor + benoxacor; pyraflufen-ethyl + metolachlor + benoxacor; pyraflufen-ethyl + dimethenamid or (S)-dimethenamid + benoxacor; pyraflufen-ethyl + acetochlor + benoxacor; pyraflufen-ethyl + alachlor + benoxacor; flumipropyn + (S)-metolachlor + benoxacor; flumipropyn + metolachlor + benoxacor; flumipropyn + dimethenamid or (S)-dimethenamid + benoxacor; flumipropyn + acetochlor + benoxacor; flumipropyn + alachlor + benoxacor; flupropacil + (S)-metolachlor + benoxacor; flupropacil + metolachlor + benoxacor; flupropacil + dimethenamid or (S)-dimethenamid + benoxacor; flupropacil + acetochlor + benoxacor; flupropacil + alachlor + benoxacor; nipyraclofen + (S)-metolachlor + benoxacor; nipyraclofen + metolachlor + benoxacor; nipyraclofen + dimethenamid or (S)-dimethenamid + benoxacor; nipyraclofen + acetochlor + benoxacor; nipyraclofen + alachlor + benoxacor; benzfendizone + (S)-metolachlor + benoxacor; benzfendizone + metolachlor + benoxacor; benzfendizone + dimethenamid or (S)-dimethenamid + benoxacor; benzfendizone + acetochlor + benoxacor; benzfendizone + alachlor + benoxacor; thidiazimin + (S)-metolachlor + benoxacor; thidiazimin + metolachlor + benoxacor; thidiazimin + dimethenamid or (S)-dimethenamid + benoxacor; thidiazimin + acetochlor + benoxacor, and thidiazimin + alachlor + benoxacor.

The following combinations of the compounds under a) with the co-herbicides under b) and MON 4660 have likewise been found to be very particularly effective selective-herbicidal compositions in crops of maize resistant to protoporphyrinogen oxidase inhibitors:
acifluorfen + (S)-metolachlor + MON 4660; acifluorfen + metolachlor + MON 4660; acifluorfen + dimethenamid or (S)-dimethenamid + MON 4660; acifluorfen + acetochlor + MON 4660; acifluorfen + alachlor + MON 4660; aclonifen + (S)-metolachlor + MON 4660; aclonifen + metolachlor + MON 4660; aclonifen + dimethenamid or (S)-dimethenamid + MON 4660; aclonifen + acetochlor + MON 4660; aclonifen + alachlor + MON 4660; bifenox + (S)-metolachlor + MON 4660; bifenox + metolachlor + MON 4660; bifenox + dimethenamid or (S)-dimethenamid + MON 4660; bifenox + acetochlor + MON 4660; bifenox + alachlor + MON 4660; chlornitrofen + (S)-metolachlor + MON 4660; chlornitrofen + metolachlor + MON 4660; chlornitrofen + dimethenamid or (S)-dimethenamid + MON 4660; chlornitrofen + acetochlor + MON 4660; chlornitrofen + alachlor + MON 4660; ethoxyfen + (S)-metolachlor + MON 4660; ethoxyfen + metolachlor + MON 4660; ethoxyfen + dimethenamid or (S)-dimethenamid + MON 4660; ethoxyfen + acetochlor + MON 4660; ethoxyfen + alachlor + MON 4660; fluoroglycofen + (S)-metolachlor + MON 4660; fluoroglycofen + metolachlor + MON 4660; fluoroglycofen + dimethenamid or (S)-dimethenamid + MON 4660; fluoroglycofen + acetochlor + MON 4660; fluoroglycofen + alachlor + MON 4660; fomesafen + (S)-metolachlor + MON 4660; fomesafen + metolachlor + MON 4660; fomesafen + dimethenamid or (S)-dimethenamid + MON 4660; fomesafen + acetochlor + MON 4660; fomesafen + alachlor + MON 4660; lactofen + (S)-metolachlor + MON 4660; lactofen + metolachlor + MON 4660; lactofen + dimethenamid or (S)-dimethenamid + MON 4660; lactofen + acetochlor + MON 4660; lactofen + alachlor + MON 4660; oxyfluorfen + (S)-metolachlor + MON 4660; oxyfluorfen + metolachlor + MON 4660; oxyfluorfen + dimethenamid or (S)-dimethenamid + MON 4660; oxyfluorfen + acetochlor + MON 4660; oxyfluorfen + alachlor + MON 4660; azafenidin + (S)-metolachlor + MON 4660; azafenidin + metolachlor + MON 4660; azafenidin + dimethenamid or (S)-dimethenamid + MON 4660; azafenidin + acetochlor + MON 4660; azafenidin + alachlor + MON 4660; carfentrazone-ethyl + (S)-metolachlor + MON 4660; carfentrazone-ethyl + metolachlor + MON 4660; carfentrazone-ethyl + dimethenamid or (S)-dimethenamid + MON 4660; carfentrazone-ethyl + acetochlor + MON 4660; carfentrazone-ethyl + alachlor + MON 4660; compound of the formula A + (S)-metolachlor + MON 4660; compound of the formula A + metolachlor + MON 4660; compound of the formula A + dimethenamid or (S)-dimethenamid + MON 4660; compound of the formula A + acetochlor + MON 4660; compound of the formula A + alachlor + MON 4660; cinidon-ethyl + (S)-metolachlor + MON 4660; cinidon-ethyl + metolachlor + MON 4660; cinidon-ethyl + dimethenamid or (S)-dimethenamid + MON 4660; cinidon-ethyl + acetochlor + MON 4660; cinidon-ethyl + alachlor + MON 4660; flumiclorac-pentyl + (S)-metolachlor + MON 4660; flumiclorac-pentyl + metolachlor + MON 4660; flumiclorac-pentyl + dimethenamid or (S)-dimethenamid + MON 4660; flumiclorac-pentyl + acetochlor + MON 4660; flumiclorac-pentyl + alachlor + MON 4660; flumioxazin + (S)-metolachlor + MON 4660; flumioxazin + metolachlor + MON 4660; flumioxazin + dimethenamid or (S)-dimethenamid + MON 4660; flumioxazin + acetochlor + MON 4660; flumioxazin + alachlor + MON 4660; fluthiacet-methyl + (S)-metolachlor + MON 4660; fluthiacet-methyl + metolachlor + MON 4660; fluthiacet-methyl + dimethenamid or (S)-dimethenamid + MON 4660; fluthiacet-methyl + acetochlor + MON 4660; fluthiacet-methyl + alachlor + MON 4660; oxadiargyl + (S)-metolachlor + MON 4660; oxadiargyl + metolachlor + MON 4660; oxadiargyl + dimethenamid or (S)-dimethenamid + MON 4660; oxadiargyl + acetochlor + MON 4660; oxadiargyl + alachlor + MON 4660; oxadiazon + (S)-metolachlor + MON 4660; oxadiazon + metolachlor + MON 4660; oxadiazon + dimethenamid or (S)-dimethenamid + MON 4660; oxadiazon + acetochlor + MON 4660; oxadiazon + alachior + MON 4660; pentoxazone + (S)-metolachlor + MON 4660; pentoxazone + metolachlor + MON 4660; pentoxazone + dimethenamid or (S)-dimethenamid + MON 4660; pentoxazone + acetochlor + MON 4660; pentoxazone + alachlor + MON 4660; sulfentrazone + (S)-metolachlor + MON 4660; sulfentrazone + metolachlor + MON 4660; sulfentrazone + dimethenamid or (S)-dimethenamid + MON 4660; sulfentrazone + acetochlor + MON 4660; sulfentrazone + alachlor + MON 4660; fluazolate + (S)-metolachlor + MON 4660; fluazolate + metolachlor + MON 4660; fluazolate + dimethenamid or (S)-dimethenamid + MON 4660; fluazolate + acetochlor + MON 4660; fluazolate + afachior + MON 4660; pyraflufen-ethyl + (S)-metolachlor + MON 4660; pyraflufen-ethyl + metolachlor + MON 4660; pyraflufen-ethyl + dimethenamid or (S)-dimethenamid + MON 4660; pyraflufen-ethyl + acetochlor + MON 4660; pyraflufen-ethyl + alachlor + MON 4660; flumipropyn + (S)-metolachlor + MON 4660; flumipropyn + metolachlor + MON 4660; flumipropyn + dimethenamid or (S)-dimethenamid + MON 4660; flumipropyn + acetochlor + MON 4660; flumipropyn + alachlor + MON 4660; flupropacil + (S)-metolachlor + MON 4660; flupropacil + metolachlor + MON 4660; flupropacil + dimethenamid or (S)-dimethenamid + MON 4660; flupropacil + acetochlor + MON 4660; flupropacil + alachlor + MON 4660; nipyraclofen + (S)-metolachlor + MON 4660; nipyraclofen + metolachlor + MON 4660; nipyraclofen + dimethenamid or (S)-dimethenamid + MON 4660; nipyraclofen + acetochlor + MON 4660; nipyraclofen + alachlor + MON 4660; benzfendizone + (S)-metolachlor + MON 4660; benzfendizone + metolachlor + MON 4660; benzfendizone + dimethenamid or (S)-dimethenamid + MON 4660; benzfendizone + acetochlor + MON 4660; benzfendizone + alachlor + MON 4660; thidiazimin + (S)-metolachlor + MON 4660; thidiazimin + metolachlor + MON 4660; thidiazimin + dimethenamid or (S)-dimethenamid + MON 4660; thidiazimin + acetochlor + MON 4660; and thidiazimin + alachlor + MON 4660.

The following combinations of the compounds under a) with the co-herbicides under b) and flurazole have likewise been found to be very particularly effective selective-herbicidal compositions in crops of maize resistant to protoporphyrinogen oxidase inhibitors:
acifluorfen + (S)-metolachlor + flurazole; acifluorfen + metolachlor + flurazole; acifluorfen + dimethenamid or (S)-dimethenamid + flurazole; acifluorfen + acetochlor + flurazole; acifluorfen + alachlor + flurazole; aclonifen + (S)-metolachlor + flurazole; aclonifen + metolachlor + flurazole; aclonifen + dimethenamid or (S)-dimethenamid + flurazole; aclonifen + acetochlor + flurazole; aclonifen + alachlor + flurazole; bifenox + (S)-metolachlor + flurazole; bifenox + metolachlor + flurazole; bifenox + dimethenamid or (S)-dimethenamid + flurazole; bifenox + acetochlor + flurazole; bifenox + alachlor + flurazole; chlornitrofen + (S)-metolachlor + flurazole; chlornitrofen + metolachlor + flurazole; chlornitrofen + dimethenamid or (S)-dimethenamid + flurazole; chlornitrofen + acetochlor + flurazole; chlornitrofen + alachlor + flurazole; ethoxyfen + (S)-metolachlor + flurazole; ethoxyfen + metolachlor + flurazole; ethoxyfen + dimethenamid or (S)-dimethenamid + flurazole; ethoxyfen + acetochlor + flurazole; ethoxyfen + alachlor + flurazole; fluoroglycofen + (S)-metolachlor + flurazole; fluoroglycofen + metolachlor + flurazole; fluoroglycofen + dimethenamid or (S)-dimethenamid + flurazole; fluoroglycofen + acetochlor + flurazole; fluoroglycofen + alachlor + flurazole; fomesafen + (S)-metolachlor + flurazole; fomesafen + metolachlor + flurazole; fomesafen + dimethenamid or (S)-dimethenamid + flurazole; fomesafen + acetochlor + flurazole; fomesafen + alachlor + flurazole; lactofen + (S)-metolachlor + flurazole; lactofen + metolachlor + flurazole; lactofen + dimethenamid or (S)-dimethenamid + flurazole; lactofen + acetochlor + flurazole; lactofen + alachlor + flurazole; oxyfluorfen + (S)-metolachlor + flurazole; oxyfluorfen + metolachlor + flurazole; oxyfluorfen + dimethenamid or (S)-dimethenamid + flurazole; oxyfluorfen + acetochlor + flurazole; oxyfluorfen + alachlor + flurazole; azafenidin + (S)-metolachlor + flurazole; azafenidin + metolachlor + flurazole; azafenidin + dimethenamid or (S)-dimethenamid + flurazole; azafenidin + acetochlor + flurazole; azafenidin + alachlor + flurazole; carfentrazone-ethyl + (S)-metolachlor + flurazole; carfentrazone-ethyl + metolachlor + flurazole; carfentrazone-ethyl + dimethenamid or (S)-dimethenamid + flurazole; carfentrazone-ethyl + acetochlor + flurazole; carfentrazone-ethyl + alachlor + flurazole; compound of the formula A + (S)-metolachlor + flurazole; compound of the formula A + metolachlor + flurazole; compound of the formula A + dimethenamid or (S)-dimethenamid + flurazole; compound of the formula A + acetochlor + flurazole; compound of the formula A + alachlor + flurazole; cinidon-ethyl + (S)-metolachlor + flurazole; cinidon-ethyl + metolachlor + flurazole; cinidon-ethyl + dimethenamid or (S)-dimethenamid + flurazole; cinidon-ethyl + acetochlor + flurazole; cinidon-ethyl + alachlor + flurazole; flumiclorac-pentyl + (S)-metolachlor + flurazole; flumiclorac-pentyl + metolachlor + flurazole; flumiclorac-pentyl + dimethenamid or (S)-dimethenamid + flurazole; flumiclorac-pentyl + acetochlor + flurazole; flumiclorac-pentyl + alachlor + flurazole; flumioxazin + (S)-metolachlor + flurazole; flumioxazin + metolachlor + flurazole; flumioxazin + dimethenamid or (S)-dimethenamid + flurazole; flumioxazin + acetochlor + flurazole; flumioxazin + alachlor + flurazole; fluthiacet-methyl + (S)-metolachlor + flurazole; fluthiacet-methyl + metolachlor + flurazole; fluthiacet-methyl + dimethenamid or (S)-dimethenamid + flurazole; fluthiacet-methyl + acetochlor + flurazole; fluthiacet-methyl + alachlor + flurazole; oxadiargyl + (S)-metolachlor + flurazole; oxadiargyl + metolachlor + flurazole; oxadiargyl + dimethenamid or (S)-dimethenamid + flurazole; oxadiargyl + acetochlor + flurazole; oxadiargyl + alachlor + flurazole; oxadiazon + (S)-metolachlor + flurazole; oxadiazon + metolachlor + flurazole; oxadiazon + dimethenamid or (S)-dimethenamid + flurazole; oxadiazon + acetochlor + flurazole; oxadiazon + alachlor + flurazole; pentoxazone + (S)-metolachlor + flurazole; pentoxazone + metolachlor + flurazole; pentoxazone + dimethenamid or (S)-dimethenamid + flurazole; pentoxazone + acetochlor + flurazole; pentoxazone + alachlor + flurazole; sulfentrazone + (S)-metolachlor + flurazole; sulfentrazone + metolachlor + flurazole; sulfentrazone + dimethenamid or (S)-dimethenamid + flurazole; sulfentrazone + acetochlor + flurazole; sulfentrazone + alachlor + flurazole; fluazolate + (S)-metolachlor + flurazole; fluazolate + metolachlor + flurazole; fluazolate + dimethenamid or (S)-dimethenamid + flurazole; fluazolate + acetochlor + flurazole; fluazolate + alachlor + flurazole; pyraflufen-ethyl + (S)-metolachlor + flurazole; pyraflufen-ethyl + metolachlor + flurazole; pyraflufen-ethyl + dimethenamid or (S)-dimethenamid + flurazole; pyraflufen-ethyl + acetochlor + flurazole; pyraflufen-ethyl + alachlor + flurazole; flumipropyn + (S)-metolachlor + flurazole; flumipropyn + metolachlor + flurazole; flumipropyn + dimethenamid or (S)-dimethenamid + flurazole; flumipropyn + acetochlor + flurazole; flumipropyn + alachlor + flurazole; flupropacil + (S)-metolachlor + flurazole; flupropacil + metolachlor + flurazole; flupropacil + dimethenamid or (S)-dimethenamid + flurazole; flupropacil + acetochlor + flurazole; flupropacil + alachlor + flurazole; nipyraclofen + (S)-metolachlor + flurazole; nipyraclofen + metolachlor + flurazole; nipyraclofen + dimethenamid or (S)-dimethenamid + flurazole; nipyraclofen + acetochlor + flurazole; nipyraclofen + alachlor + flurazole; benzfendizone + (S)-metolachlor + flurazole; benzfendizone + metolachlor + flurazole; benzfendizone + dimethenamid or (S)-dimethenamid + flurazole; benzfendizone + acetochlor + flurazole; benzfendizone + alachlor + flurazole; thidiazimin + (S)-metolachlor + flurazole; thidiazimin + metolachlor + flurazole; thidiazimin + dimethenamid or (S)-dimethenamid + flurazole; thidiazimin + acetochlor + flurazole; and thidiazimin + alachlor + flurazole.

The following combinations of the compounds under a) with the co-herbicides under b) and dichlormid have likewise been found to be very particularly effective selective-herbicidal compositions in crops of maize resistant to protoporphyrinogen oxidase inhibitors:
acifluorfen + (S)-metolachlor + dichlormid; acifluorfen + metolachlor + dichlormid; acifluorfen + dimethenamid or (S)-dimethenamid + dichlormid; acifluorfen + acetochlor + dichlormid; acifluorfen + alachlor + dichlormid; aclonifen + (S)-metolachlor + dichlormid; aclonifen + metolachlor + dichlormid; aclonifen + dimethenamid or (S)-dimethenamid + dichlormid; aclonifen + acetochlor + dichlormid; aclonifen + alachlor + dichlormid; bifenox + (S)-metolachlor + dichlormid; bifenox + metolachlor + dichlormid; bifenox + dimethenamid or (S)-dimethenamid + dichlormid; bifenox + acetochlor + dichlormid; bifenox + alachlor + dichlormid; chlornitrofen + (S)-metolachlor + dichlormid; chlornitrofen + metolachlor + dichlormid; chlornitrofen + dimethenamid or (S)-dimethenamid + dichlormid; chlornitrofen + acetochlor + dichlormid; chlornitrofen + alachlor + dichiormid; ethoxyfen + (S)-metotachlor + dichlormid; ethoxyfen + metolachlor + dichlormid; ethoxyfen + dimethenamid or (S)-dimethenamid + dichlormid; ethoxyfen + acetochlor + dichlormid; ethoxyfen + alachlor + dichlormid; fluoroglycofen + (S)-metolachlor + dichlormid; fluoroglycofen + metolachlor + dichlormid; fluoroglycofen + dimethenamid or (S)-dimethenamid + dichlormid; fluoroglycofen + acetochlor + dichlormid; fluorogtycofen + alachlor + dichlormid; fomesafen + (S)-metolachlor + dichlormid; fomesafen + metolachlor + dichlormid; fomesafen + dimethenamid or (S)-dimethenamid + dichlormid; fomesafen + acetochlor + dichlormid; fomesafen + alachlor + dichlormid; lactofen + (S)-metolachlor + dichlormid; lactofen + metolachlor + dichiormid; lactofen + dimethenamid or (S)-dimethenamid + dichlormid; lactofen + acetochlor + dichlormid; lactofen + alachlor + dichlormid; oxyfluorfen + (S)-metolachlor + dichlormid; oxyfluorfen + metolachlor + dichlormid; oxyfluorfen + dimethenamid or (S)-dimethenamid + dichlormid; oxyfluorfen + acetochlor + dichlormid; oxyfluorfen + alachlor + dichlormid; azafenidin + (S)-metolachlor + dichlormid, azafenidin + metolachlor + dichlormid; azafenidin + dimethenamid or (S)-dimethenamid + dichlormid; azafenidin + acetochlor + dichlormid; azafenidin + alachlor + dichlormid; carfentrazone-ethyl + (S)-metolachlor + dichlormid; carfentrazone-ethyl + metolachlor + dichlormid; carfentrazone-ethyl + dimethenamid or (S)-dimethenamid + dichlormid; carfentrazone-ethyl + acetochlor + dichlormid; carfentrazone-ethyl + alachlor + dichlormid; compound of the formula A + (S)-metolachlor + dichlormid; compound of the formula A + metolachlor + dichlormid; compound of the formula A + dimethenamid or (S)-dimethenamid + dichlormid; compound of the formula A + acetochlor + dichlormid; compound of the formula A + alachlor + dichlormid; cinidon-ethyl + (S)-metolachlor + dichlormid; cinidon-ethyl + metolachlor + dichlormid; cinidon-ethyl + dimethenamid or (S)-dimethenamid + dichlormid; cinidon-ethyl + acetochlor + dichlormid; cinidon-ethyl + alachlor + dichlormid; flumiclorac-pentyl + (S)-metolachlor + dichlormid; flumiclorac-pentyl + metolachlor + dichlormid; flumiclorac-pentyl + dimethenamid or (S)-dimethenamid + dichlormid; flumiclorac-pentyl + acetochlor + dichlormid; flumiclorac-pentyl + alachlor + dichlormid; flumioxazin + (S)-metolachlor + dichlormid; flumioxazin + metolachlor + dichlormid; flumioxazin + dimethenamid or (S)-dimethenamid + dichlormid; flumioxazin + acetochlor + dichlormid; flumioxazin + alachlor + dichlormid; fluthiacet-methyl + (S)-metolachlor + dichlormid; fluthiacet-methyl + metolachlor + dichlormid; fluthiacet-methyl + dimethenamid or (S)-dimethenamid + dichlormid; fluthiacet-methyl + acetochlor + dichlormid; fluthiacet-methyl + alachlor + dichlormid; oxadiargyl + (S)-metolachlor + dichlormid; oxadiargyl + metolachlor + dichlormid; oxadiargyl + dimethenamid or (S)-dimethenamid + dichlormid; oxadiargyl + acetochlor + dichlormid; oxadiargyl + alachlor + dichlormid; oxadiazon + (S)-metolachlor + dichlormid; oxadiazon + metolachlor + dichlormid; oxadiazon + dimethenamid or (S)-dimethenamid + dichlormid; oxadiazon + acetochlor + dichlormid; oxadiazon + alachlor + dichlormid; pentoxazone + (S)-metolachlor + dichlormid; pentoxazone + metolachlor + dichlormid; pentoxazone + dimethenamid or (S)-dimethenamid + dichlormid; pentoxazone + acetochlor + dichlormid; pentoxazone + alachlor + dichlormid; sulfentrazone + (S)-metolachlor + dichlormid; suffentrazone + metolachlor + dichlormid; sulfentrazone + dimethenamid or (S)-dimethenamid + dichlormid; sulfentrazone + acetochlor + dichlormid; sulfentrazone + alachlor + dichlormid; fluazolate + (S)-metolachlor + dichlormid; fluazolate + metolachlor + dichlormid; fluazolate + dimethenamid or (S)-dimethenamid + dichlormid; fluazolate + acetochlor + dichlormid; fluazolate + alachlor + dichlormid; pyraflufen-ethyl + (S)-metolachlor + dichlormid; pyraflufen-ethyl + metolachlor + dichlormid; pyraflufen-ethyl + dimethenamid or (S)-dimethenamid + dichlormid; pyraflufen-ethyl + acetochlor + dichiormid; pyraflufen-ethyl + alachlor + dichlormid; flumipropyn + (S)-metolachlor + dichlormid; flumipropyn + metotachlor + dichlormid; flumipropyn + dimethenamid or (S)-dimethenamid + dichlormid; flumipropyn + acetochlor + dichlormid; flumipropyn + alachlor + dichlormid; flupropacil + (S)-metolachlor + dichlormid; flupropacil + metolachior + dichlormid; flupropacil + dimethenamid or (S)-dimethenamid + dichlormid; flupropacil + acetochlor + dichlormid; flupropacil + alachlor + dichlormid; nipyraclofen + (S)-metolachlor + dichlormid; nipyractofen + metolachlor + dichlormid; nipyraclofen + dimethenamid or (S)-dimethenamid + dichlormid; nipyraclofen + acetochlor + dichlormid; nipyraclofen + alachlor + dichlormid; benzfendizone + (S)-metolachlor + dichlormid; benzfendizone + metolachlor + dichlormid; benzfendizone + dimethenamid or (S)-dimethenamid + dichlormid; benzfendizone + acetochlor + dichlormid; benzfendizone + alachlor + dichlormid; thidiazimin + (S)-metolachlor + dichlormid; thidiazimin + metolachlor + dichlormid; thidiazimin + dimethenamid or (S)-dimethenamid + dichlormid; thidiazimin + acetochlor + dichlormid; and thidiazimin + alachlor + dichlormid.

The following combinations of the compounds under a) with the co-herbicides under b) and furilazole have likewise been found to be very particularly effective selective-herbicidal compositions in crops of maize resistant to protoporphyrinogen oxidase inhibitors:
acifluorfen + (S)-metolachlor + furilazole; acifluorfen + metolachlor + furilazole; acifluorfen + dimethenamid or (S)-dimethenamid + furilazole; acifluorfen + acetochlor + furilazole; acifluorfen + alachlor + furilazole; aclonifen + (S)-metolachlor + furilazole; aclonifen + metolachlor + furilazole; aclonifen + dimethenamid or (S)-dimethenamid + furilazole; aclonifen + acetochlor + furilazole; aclonifen + alachlor + furilazole; bifenox + (S)-metolachlor + furilazole; bifenox + metolachlor + furilazole; bifenox + dimethenamid or (S)-dimethenamid + furilazole; bifenox + acetochlor + furilazole; bifenox + alachlor + furilazole; chlornitrofen + (S)-metolachlor + furilazole; chlornitrofen + metolachlor + furilazole; chlornitrofen + dimethenamid or (S)-dimethenamid + furilazole; chlornitrofen + acetochlor + furilazole; chlornitrofen + alachlor + furilazole; ethoxyfen + (S)-metolachlor + furilazole; ethoxyfen + metolachlor + furilazole; ethoxyfen + dimethenamid or (S)-dimethenamid + furilazole; ethoxyfen + acetochlor + furilazole; ethoxyfen + alachlor + furilazole; fluoroglycofen + (S)-metolachlor + furilazole; fluoroglycofen + metolachlor + furilazole; fluoroglycofen + dimethenamid or (S)-dimethenamid + furilazole; fluoroglycofen + acetochlor + furilazole; fluoroglycofen + alachlor + furilazole; fomesafen + (S)-metolachlor + furilazole; fomesafen + metolachlor + furilazole; fomesafen + dimethenamid or (S)-dimethenamid + furilazole; fomesafen + acetochlor + furilazole; fomesafen + alachlor + furilazole; lactofen + (S)-metolachlor + furilazole; lactofen + metolachlor + furilazole; lactofen + dimethenamid or (S)-dimethenamid + furilazole; lactofen + acetochlor + furilazole; lactofen + alachlor + furilazole; oxyfluorfen + (S)-metolachlor + furilazole; oxyfluorfen + metolachlor + furilazole; oxyfluorfen + dimethenamid or (S)-dimethenamid + furilazole; oxyfluorfen + acetochlor + furilazole; oxyfluorfen + alachlor + furilazole; azafenidin + (S)-metolachlor + furilazole; azafenidin + metolachlor + furilazole; azafenidin + dimethenamid or (S)-dimethenamid + furilazole; azafenidin + acetochlor + furilazole; azafenidin + alachlor + furilazole; carfentrazone-ethyl + (S)-metolachlor + furilazole; carfentrazone-ethyl + metolachlor + furilazole; carfentrazone-ethyl + dimethenamid or (S)-dimethenamid + furilazole; carfentrazone-ethyl + acetochlor + furilazole; carfentrazone-ethyl + alachlor + furilazole; compound of the formula A + (S)-metolachlor + furilazole; compound of the formula A + metolachlor + furilazole; compound of the formula A + dimethenamid or (S)-dimethenamid + furilazole; compound of the formula A + acetochlor + furilazole; compound of the formula A + alachlor + furilazole; cinidon-ethyl + (S)-metolachlor + furilazole; cinidon-ethyl + metolachlor + furilazole; cinidon-ethyl + dimethenamid or (S)-dimethenamid + furilazole; cinidon-ethyl + acetochlor + furilazole; cinidon-ethyl + alachlor + furilazole; flumiclorac-pentyl + (S)-metolachlor + furilazole; flumiclorac-pentyl + metolachlor + furilazole; flumiclorac-pentyl + dimethenamid or (S)-dimethenamid + furilazole; flumiclorac-pentyl + acetochlor + furilazole; flumiclorac-pentyl + alachlor + furilazole; flumioxazin + (S)-metolachlor + furilazole; flumioxazin + metolachlor + furilazole; flumioxazin + dimethenamid or (5)-dimethenamid + furilazole; flumioxazin + acetochlor + furilazole; flumioxazin + alachlor + furilazole; fluthiacet-methyl + (S)-metolachlor + furilazole; fluthiacet-methyl + metolachlor + furilazole; fluthiacet-methyl + dimethenamid or (S)-dimethenamid + furilazole; fluthiacet-methyl + acetochlor + furilazole; fluthiacet-methyl + alachlor + furilazole; oxadiargyl + (S)-meto(achlor + furilazole; oxadiargyl + metolachlor + furilazole; oxadiargyl + dimethenamid or (S)-dimethenamid + furilazole; oxadiargyl + acetochlor + furilazole; oxadiargyl + alachlor + furilazole; oxadiazon + (S)-metolachlor + furilazole; oxadiazon + metolachlor + furilazole; oxadiazon + dimethenamid or (S)-dimethenamid + furilazole; oxadiazon + acetochlor + furilazole; oxadiazon + alachlor + furilazole; pentoxazone + (S)-metolachlor + furilazole; pentoxazone + metolachlor + furilazole; pentoxazone + dimethenamid or (S)-dimethenamid + furilazole; pentoxazone + acetochlor + furilazole; pentoxazone + alachlor + furilazole; sulfentrazone + (S)-metolachlor + furilazole; sulfentrazone + metolachlor + furilazole; sulfentrazone + dimethenamid or (S)-dimethenamid + furilazole; sulfentrazone + acetochlor + furilazole; sulfentrazone + alachlor + furilazole; fluazolate + (S)-metolachlor + furilazole; fluazolate + metolachlor + furilazole; fluazolate + dimethenamid or (S)-dimethenamid + furilazole; fluazolate + acetochlor + furilazole; fluazolate + alachlor + furilazole; pyraflufen-ethyl + (S)-metolachlor + furilazole; pyraflufen-ethyl + metolachlor + furilazole; pyraflufen-ethyl + dimethenamid or (S)-dimethenamid + furilazole; pyraflufen-ethyl + acetochlor + furilazole; pyraflufen-ethyl + alachlor + furilazole; flumipropyn + (S)-metolachlor + furilazole; flumipropyn + metolachlor + furilazole; flumipropyn + dimethenamid or (S)-dimethenamid + furilazole; flumipropyn + acetochlor + furilazole; flumipropyn + alachlor + furilazole; flupropacil + (S)-metolachlor + furilazole; flupropacil + metolachlor + furilazole; flupropacil + dimethenamid or (S)-dimethenamid + furilazole; flupropacil + acetochlor + furilazole; flupropacil + alachlor + furilazole; nipyraclofen + (S)-metolachlor + furilazole; nipyraclofen + metolachlor + furilazole; nipyraclofen + dimethenamid or (S)-dimethenamid + furilazole; nipyraclofen + acetochlor + furilazole; nipyraclofen + alachlor + furilazole; benzfendizone + (S)-metolachlor + furilazole; benzfendizone + metolachlor + furilazole; benzfendizone + dimethenamid or (S)-dimethenamid + furilazole; benzfendizone + acetochlor + furilazole; benzfendizone + alachlor + furilazole; thidiazimin + (S)-metolachlor + furilazole; thidiazimin + metolachlor + furilazole; thidiazimin + dimethenamid or (S)-dimethenamid + furilazole; thidiazimin + acetochlor + furilazole; and thidiazimin + alachlor + furilazole.

The following combinations of the compounds under a) with the co-herbicides under b) and cloquintocet-mexyl have likewise been found to be very particularly effective selective-herbicidal compositions in crops of cereals resistant to protoporphyrinogen oxidase inhibitors:
acifluorfen + triasulfuron + cloquintocet; acifluorfen + prosulfuron + cloquintocet; acifluorfen + clodinafop + cloquintocet; acifluorfen + amidosulfuron + cloquintocet; acifluorfen + diclofop-methyl + cloquintocet; acifluorfen + fenoxaprop(P-ethyl) + cloquintocet; acifluorfen + flazasulfuron + cloquintocet; acifluorfen + flupyrsulfuron + cloquintocet; acifluorfen + iodosulfuron + cloquintocet; acifluorfen + mecoprop + cloquintocet; acifluorfen + chlorsulfuron + cloquintocet; acifluorfen + metsulfuron + cloquintocet; acifluorfen + sulfosulfuron + cloquintocet; acifluorfen + thifensulfuron + cloquintocet; acifluorfen + tribenuron + cloquintocet; acifluorfen + ethametsulfuron + cloquintocet; acifluorfen + flamprop-M + cloquintocet; aclonifen + triasulfuron + cloquintocet; aclonifen + prosulfuron + cloquintocet; aclonifen + clodinafop + cloquintocet; aclonifen + amidosulfuron + cloquintocet; aclonifen + diclofop-methyl + cloquintocet; aclonifen + fenoxaprop(P-ethyl) + cloquintocet; aclonifen + flazasulfuron + cloquintocet; aclonifen + flupyrsulfuron + cloquintocet; aclonifen + iodosulfuron + cloquintocet; aclonifen + mecoprop + cloquintocet; aclonifen + chlorsulfuron + cloquintocet; aclonifen + metsulfuron + cloquintocet; aclonifen + sulfosulfuron + cloquintocet; aclonifen + thifensulfuron + cloquintocet; aclonifen + tribenuron + cloquintocet; aclonifen + ethametsulfuron + cloquintocet; aclonifen + flamprop-M + cloquintocet; bifenox + triasulfuron + cloquintocet; bifenox + prosulfuron + cloquintocet; bifenox + clodinafop + cloquintocet; bifenox + amidosulfuron + cloquintocet; bifenox + diclofop-methyl + cloquintocet; bifenox + fenoxaprop(P-ethyl) + cloquintocet; bifenox + flazasulfuron + cloquintocet; bifenox + flupyrsulfuron + cloquintocet; bifenox + iodosulfuron + cloquintocet; bifenox + mecoprop + cloquintocet; bifenox + chlorsuifuron + cloquintocet; bifenox + metsulfuron + cloquintocet; bifenox + sulfosulfuron + cloquintocet; bifenox + thifensulfuron + cloquintocet; bifenox + tribenuron + cloquintocet; bifenox + ethametsulfuron + cloquintocet; bifenox + flamprop-M + cloquintocet; chlornitrofen + triasulfuron + cloquintocet; chlornitrofen + prosulfuron + cloquintocet; chlornitrofen + clodinafop + cloquintocet; chlornitrofen + amidosulfuron + cloquintocet; chlornitrofen + diclofop-methyl + cloquintocet; chlornitrofen + fenoxaprop (P-ethyl) + cloquintocet; chlornitrofen + flazasulfuron + cloquintocet; chlornitrofen + flupyrsulfuron + cloquintocet; chlornitrofen + iodosulfuron + cloquintocet; chlornitrofen + mecoprop + cloquintocet; chlornitrofen + chlorsulfuron + cloquintocet; chlornitrofen + metsulfuron + cloquintocet; chlornitrofen + sulfosulfuron + cloquintocet; chlornitrofen + thifensulfuron + cloquintocet; chlornitrofen + tribenuron + cloquintocet; chlornitrofen + ethametsulfuron + cloquintocet; chlornitrofen + flamprop-M + cloquintocet; ethoxyfen + triasulfuron + cloquintocet; ethoxyfen + prosulfuron + cloquintocet; ethoxyfen + clodinafop + cloquintocet; ethoxyfen + amidosulfuron + cloquintocet; ethoxyfen + diclofop-methyl + cloquintocet; ethoxyfen + fenoxaprop(P-ethyl) + cloquintocet; ethoxyfen + flazasulfuron + cloquintocet; ethoxyfen + flupyrsulfuron + cloquintocet; ethoxyfen + iodosulfuron + cloquintocet; ethoxyfen + mecoprop + cloquintocet; ethoxyfen + chlorsulfuron + cloquintocet; ethoxyfen + metsulfuron + cloquintocet; ethoxyfen + sulfosulfuron + cloquintocet; ethoxyfen + thifensulfuron + cloquintocet; ethoxyfen + tribenuron + cloquintocet; ethoxyfen + ethametsulfuron + cloquintocet; ethoxyfen + flamprop-M + cloquintocet; fluoroglycofen + triasulfuron + cloquintocet; fluoroglycofen + prosulfuron + cloquintocet; fluoroglycofen + clodinafop + cloquintocet; fluoroglycofen + amidosulfuron + cloquintocet; fluoroglycofen + diclofop-methyl + cloquintocet; fluoroglycofen + fenoxaprop(P-ethyl) + cloquintocet; fluoroglycofen + flazasulfuron + cloquintocet; fluoroglycofen + flupyrsulfuron + cloquintocet; fluoroglycofen + iodosulfuron + cloquintocet; fluoroglycofen + mecoprop + cloquintocet; fluoroglycofen + chlorsulfuron + cloquintocet; fluoroglycofen + metsulfuron + cloquintocet; fluoroglycofen + sulfosulfuron + cloquintocet; fluoroglycofen + thifensulfuron + cloquintocet; fluoroglycofen + tribenuron + cloquintocet; fluoroglycofen + ethametsulfuron + cloquintocet; fluoroglycofen + flamprop-M + cloquintocet; fomesafen + triasulfuron + cloquintocet; fomesafen + prosulfuron + cloquintocet; fomesafen + clodinafop + cloquintocet; fomesafen + amidosulfuron + cloquintocet; fomesafen + diclofop-methyl + cloquintocet; fomesafen + fenoxaprop(P-ethyl) + cloquintocet; fomesafen + flazasulfuron + cloquintocet; fomesafen + flupyrsulfuron + cloquintocet; fomesafen + iodosulfuron + cloquintocet; fomesafen + mecoprop + cloquintocet; fomesafen + chlorsulfuron + cloquintocet; fomesafen + metsulfuron + cloquintocet; fomesafen + sulfosulfuron + cloquintocet; fomesafen + thifensulfuron + cloquintocet; fomesafen + tribenuron + cloquintocet; fomesafen + ethametsulfuron + cloquintocet; fomesafen + flamprop-M + cloquintocet; lactofen + triasulfuron + cloquintocet; lactofen + prosulfuron + cloquintocet; lactofen + clodinafop + cloquintocet; lactofen + amidosulfuron + cloquintocet; lactofen + diclofop-methyl + cloquintocet; lactofen + fenoxaprop(P-ethyl) + cloquintocet; lactofen + flazasulfuron + cloquintocet; lactofen + flupyrsulfuron + cloquintocet; lactofen + iodosulfuron + cloquintocet; lactofen + mecoprop + cloquintocet; lactofen + chlorsulfuron + cloquintocet; lactofen + metsulfuron + cloquintocet; lactofen + sulfosulfuron + cloquintocet; lactofen + thifensulfuron + cloquintocet; lactofen + tribenuron + cloquintocet; lactofen + ethametsulfuron + cloquintocet; lactofen + flamprop-M + cloquintocet; oxyfluorfen + triasulfuron + cloquintocet; oxyfluorfen + prosulfuron + cloquintocet; oxyfluorfen + clodinafop + cloquintocet; oxyfluorfen + amidosulfuron + cloquintocet; oxyfluorfen + diclofop-methyl + cloquintocet; oxyfluorfen + fenoxaprop(P-ethyl) + cloquintocet; oxyfluorfen + flazasulfuron + cloquintocet; oxyfluorfen + flupyrsulfuron + cloquintocet; oxyfluorfen + iodosulfuron + cloquintocet; oxyfluorfen + mecoprop + cloquintocet; oxyfluorfen + chlorsulfuron + cloquintocet; oxyfluorfen + metsulfuron + cloquintocet; oxyfluorfen + sulfosulfuron + cloquintocet; oxyfluorfen + thifensulfuron + cloquintocet; oxyfluorfen + tribenuron + cloquintocet; oxyfluorfen + ethametsulfuron + cloquintocet; oxyfluorfen + flamprop-M + cloquintocet; azafenidin + triasulfuron + cloquintocet; azafenidin + prosulfuron + cloquintocet; azafenidin + clodinafop + cloquintocet; azafenidin + amidosulfuron + cloquintocet; azafenidin + diclofop-methyl + cloquintocet; azafenidin + fenoxaprop(P-ethyl) + cloquintocet; azafenidin + flazasulfuron + cloquintocet; azafenidin + flupyrsulfuron + cloquintocet; azafenidin + iodosulfuron + cloquintocet; azafenidin + mecoprop + cloquintocet; azafenidin + chlorsulfuron + cloquintocet; azafenidin + metsulfuron + cloquintocet; azafenidin + sulfosulfuron + cloquintocet; azafenidin + thifensulfuron + cloquintocet; azafenidin + tribenuron + cloquintocet; azafenidin + ethametsulfuron + cloquintocet; azafenidin + flamprop-M + cloquintocet; carfentrazone-ethyl + triasulfuron + cloquintocet; carfentrazone-ethyl + prosulfuron + cloquintocet; carfentrazone-ethyl + clodinafop + cloquintocet; carfentrazone-ethyl + amidosulfuron + cloquintocet; carfentrazone-ethyl + diclofop-methyl + cloquintocet; carfentrazone-ethyl + fenoxaprop(P-ethyl) + cloquintocet; carfentrazone-ethyl + flazasulfuron + cloquintocet; carfentrazone-ethyl + flupyrsulfuron + cloquintocet; carfentrazone-ethyl + iodosulfuron + cloquintocet; carfentrazone-ethyl + mecoprop + cloquintocet; carfentrazone-ethyl + chlorsulfuron + cloquintocet; carfentrazone-ethyl + metsulfuron + cloquintocet; carfentrazone-ethyl + sulfosulfuron + cloquintocet; carfentrazone-ethyl + thifensulfuron + cloquintocet; carfentrazone-ethyl + tribenuron + cloquintocet; carfentrazone-ethyl + ethametsulfuron + cloquintocet; carfentrazone-ethyl + flamprop-M + cloquintocet; compound of the formula A + triasulfuron + cloquintocet; compound of the formula A + prosulfuron + cloquintocet; compound of the formula A + clodinafop + cloquintocet; compound of the formula A + amidosulfuron + cloquintocet; compound of the formula A + diclofop-methyl + cloquintocet; compound of the formula A + fenoxaprop(P-ethyl) + cloquintocet; compound of the formula A + flazasulfuron + cloquintocet; compound of the formula A + flupyrsulfuron + cloquintocet; compound of the formula A + iodosulfuron + cloquintocet; compound of the formula A + mecoprop + cloquintocet; compound of the formula A + chlorsulfuron + cloquintocet; compound of the formula A + metsulfuron + cloquintocet; compound of the formula A + sulfosulfuron + cloquintocet; compound of the formula A + thifensulfuron + cloquintocet; compound of the formula A + tribenuron + cloquintocet; compound of the formula A + ethametsulfuron + cloquintocet; compound of the formula A + flamprop-M + cloquintocet; cinidon-ethyl + triasulfuron + cloquintocet; cinidon-ethyl + prosulfuron + cloquintocet; cinidon-ethyl + clodinafop + cloquintocet; cinidon-ethyl + amidosulfuron + cloquintocet; cinidon-ethyl + diclofop-methyl + cloquintocet; cinidon-ethyl + fenoxaprop (P-ethyl) + cloquintocet; cinidon-ethyl + flazasulfuron + cloquintocet; cinidon-ethyl + flupyrsulfuron + cloquintocet; cinidon-ethyl + iodosulfuron + cloquintocet; cinidon-ethyl + mecoprop + cloquintocet; cinidon-ethyl + chlorsulfuron + cloquintocet; cinidon-ethyl + metsulfuron + cloquintocet; cinidon-ethyl + sulfosulfuron + cloquintocet; cinidon-ethyl + thifensulfuron + cloquintocet; cinidon-ethyl + tribenuron + cloquintocet; cinidon-ethyl + ethametsulfuron + cloquintocet; cinidon-ethyl + flamprop-M + cloquintocet; flumiclorac-pentyl + triasulfuron + cloquintocet; flumiclorac-pentyl + prosulfuron + cloquintocet; flumiclorac-pentyl + clodinafop + cloquintocet; flumiclorac-pentyl + amidosulfuron + cloquintocet; flumiclorac-pentyl + diclofop-methyl + cloquintocet; flumiclorac-pentyl + fenoxaprop(P-ethyl) + cloquintocet; flumiclorac-pentyl + flazasulfuron + cloquintocet; flumiclorac-pentyl + flupyrsulfuron + cloquintocet; flumictorac-pentyl + iodosutfuron + cloquintocet; flumiclorac-pentyl + mecoprop + cloquintocet; flumiclorac-pentyl + chlorsulfuron + cloquintocet; flumiclorac-pentyl + metsulfuron + cloquintocet; flumiclorac-pentyl + sulfosulfuron + cloquintocet; flumiclorac-pentyl + thifensulfuron + cloquintocet; flumiclorac-pentyl + tribenuron + cloquintocet; flumiclorac-pentyl + ethametsulfuron + cloquintocet; flumiclorac-pentyl + flamprop-M + cloquintocet; flumioxazin + triasulfuron + cloquintocet; flumioxazin + prosulfuron + cloquintocet; flumioxazin + clodinafop + cloquintocet; flumioxazin + amidosulfuron + cloquintocet; flumioxazin + diclofop-methyl + cloquintocet; flumioxazin + fenoxaprop(P-ethyl) + cloquintocet; flumioxazin + flazasulfuron + cloquintocet; flumioxazin + flupyrsulfuron + cloquintocet; flumioxazin + iodosulfuron + cloquintocet; flumioxazin + mecoprop + cloquintocet; flumioxazin + chlorsulfuron + cloquintocet; flumioxazin + metsulfuron + cloquintocet; flumioxazin + sulfosulfuron + cloquintocet; flumioxazin + thifensulfuron + cloquintocet; flumioxazin + tribenuron + cloquintocet; flumioxazin + ethametsulfuron + cloquintocet; flumioxazin + flamprop-M + cloquintocet; fluthiacet-methyl + triasulfuron + cloquintocet; fluthiacet-methyl + prosulfuron + cloquintocet; fluthiacet-methyl + clodinafop + cloquintocet; fluthiacet-methyl + amidosulfuron + cloquintocet; fluthiacet-methyl + diclofop-methyl + cloquintocet; fluthiacet-methyl + fenoxaprop(P-ethyl) + cloquintocet; fluthiacet-methyl + flazasulfuron + cloquintocet; fluthiacet-methyl + flupyrsulfuron + cloquintocet; fluthiacet-methyl + iodosulfuron + cloquintocet; fluthiacet-methyl + mecoprop + cloquintocet; fluthiacet-methyl + chlorsulfuron + cloquintocet; fluthiacet-methyl + metsulfuron + cloquintocet; fluthiacet-methyl + sulfosulfuron + cloquintocet; fluthiacet-methyl + thifensulfuron + cloquintocet; fluthiacet-methyl + tribenuron + cloquintocet; fluthiacet-methyl + ethametsulfuron + cloquintocet; fluthiacet-methyl + flamprop-M + doquintocet; oxadiargyl + triasulfuron + cloquintocet; oxadiargyl + prosulfuron + doquintocet; oxadiargyl + clodinafop + cloquintocet; oxadiargyl + amidosulfuron + cloquintocet; oxadiargyl + diclofop-methyl + doquintocet; oxadiargyl + fenoxaprop(P-ethyl) + cloquintocet; oxadiargyl + flazasulfuron + cloquintocet; oxadiargyl + flupyrsulfuron + cloquintocet; oxadiargyl + iodosulfuron + cloquintocet; oxadiargyl + mecoprop + cloquintocet; oxadiargyl + chlorsulfuron + cloquintocet; oxadiargyl + metsulfuron + cloquintocet; oxadiargyl + sulfosulfuron + cloquintocet; oxadiargyl + thifensulfuron + cloquintocet; oxadiargyl + tribenuron + cloquintocet; oxadiargyl + ethametsulfuron + cloquintocet; oxadiargyl + flamprop-M + cloquintocet; oxadiazon + triasulfuron + cloquintocet; oxadiazon + prosulfuron + cloquintocet; oxadiazon + clodinafop + cloquintocet; oxadiazon + amidosulfuron + cloquintocet; oxadiazon + diclofop-methyl + cloquintocet; oxadiazon + fenoxaprop(P-ethyl) + cloquintocet; oxadiazon + flazasulfuron + cloquintocet; oxadiazon + flupyrsulfuron + cloquintocet; oxadiazon + iodosulfuron + cloquintocet; oxadiazon + mecoprop + cloquintocet; oxadiazon + chlorsulfuron + cloquintocet; oxadiazon + metsulfuron + cloquintocet; oxadiazon + sulfosulfuron + cloquintocet; oxadiazon + thifensulfuron + cloquintocet; oxadiazon + tribenuron + cloquintocet; oxadiazon + ethametsulfuron + cloquintocet; oxadiazon + flamprop-M + cloquintocet; pentoxazone + triasulfuron + cloquintocet; pentoxazone + prosulfuron + cloquintocet; pentoxazone + clodinafop + cloquintocet; pentoxazone + amidosulfuron + cloquintocet; pentoxazone + diclofop-methy) + cloquintocet; pentoxazone + fenoxaprop (P-ethyl) + cloquintocet; pentoxazone + flazasulfuron + cloquintocet; pentoxazone + flupyrsulfuron + cloquintocet; pentoxazone + iodosulfuron + cloquintocet; pentoxazone + mecoprop + cloquintocet; pentoxazone + chlorsulfuron + cloquintocet; pentoxazone + metsulfuron + cloquintocet; pentoxazone + sulfosulfuron + cloquintocet; pentoxazone + thifensulfuron + cloquintocet; pentoxazone + tribenuron + cloquintocet; pentoxazone + ethametsulfuron + cloquintocet; pentoxazone + flamprop-M + cloquintocet; sulfentrazone + triasulfuron + cloquintocet; sulfentrazone + prosulfuron + cloquintocet; sulfentrazone + clodinafop + cloquintocet; sulfentrazone + amidosulfuron + cloquintocet; sulfentrazone + diclofop-methyl + cloquintocet; sulfentrazone + fenoxaprop(P-ethyl) + cloquintocet; sulfentrazone + flazasulfuron + cloquintocet; sulfentrazone + flupyrsulfuron + cloquintocet; sulfentrazone + iodosulfuron + cloquintocet; sulfentrazone + mecoprop + cloquintocet; sulfentrazone + chlorsulfuron + cloquintocet; sulfentrazone + metsulfuron + cloquintocet; sulfentrazone + sulfosulfuron + cloquintocet; sulfentrazone + thifensulfuron + cloquintocet; sulfentrazone + tribenuron + cloquintocet; sulfentrazone + ethametsulfuron + cloquintocet; sulfentrazone + flamprop-M + cloquintocet; fluazolate + triasulfuron + cloquintocet; fluazolate + prosulfuron + cloquintocet; fluazolate + clodinafop + cloquintocet; fluazolate + amidosulfuron + cloquintocet; fluazolate + diclofop-methyl + cloquintocet; fluazolate + fenoxaprop(P-ethyl) + cloquintocet; fluazolate + flazasulfuron + cloquintocet; fluazolate + flupyrsulfuron + cloquintocet; fluazolate + iodosulfuron + cloquintocet; fluazolate + mecoprop + cloquintocet; fluazolate + chlorsulfuron + cloquintocet; fluazolate + metsulfuron + cloquintocet; fluazolate + sulfosulfuron + cloquintocet; fluazolate + thifensulfuron + cloquintocet; fluazolate + tribenuron + cloquintocet; fluazolate + ethametsulfuron + cloquintocet; fluazolate + flamprop-M + cloquintocet; pyraflufen-ethyl + triasulfuron + cloquintocet; pyraflufen-ethyl + prosulfuron + cloquintocet; pyraflufen-ethyl + clodinafop + cloquintocet; pyraflufen-ethyl + amidosulfuron + cloquintocet; pyraflufen-ethyl + diclofop-methyl + cloquintocet; pyraflufen-ethyl + fenoxaprop(P-ethyl) + cloquintocet; pyraflufen-ethyl + flazasulfuron + cloquintocet; pyraflufen-ethyl + flupyrsulfuron + cloquintocet; pyraflufen-ethyl + iodosulfuron + cloquintocet; pyraflufen-ethyl + mecoprop + cloquintocet; pyraflufen-ethyl + chlorsulfuron + cloquintocet; pyraflufen-ethyl + metsulfuron + cloquintocet; pyraflufen-ethyl + sulfosulfuron + cloquintocet; pyraflufen-ethyl + thifensulfuron + cloquintocet; pyraflufen-ethyl + tribenuron + cloquintocet; pyraflufen-ethyl + ethametsulfuron + cloquintocet; pyraflufen-ethyl + flamprop-M + cloquintocet; flumipropyn + triasulfuron + cloquintocet; flumipropyn + prosulfuron + cloquintocet; flumipropyn + clodinafop + cloquintocet; flumipropyn + amidosulfuron + cloquintocet; flumipropyn + diclofop-methyl + cloquintocet; flumipropyn + fenoxaprop(P-ethyl) + doquintocet; flumipropyn + flazasulfuron + cloquintocet; flumipropyn + flupyrsulfuron + cloquintocet; flumipropyn + iodosulfuron + cloquintocet; flumipropyn + mecoprop + cloquintocet; flumipropyn + chlorsulfuron + cloquintocet; flumipropyn + metsulfuron + cloquintocet; flumipropyn + sulfosulfuron + cloquintocet; flumipropyn + thifensulfuron + cloquintocet; flumipropyn + tribenuron + cloquintocet; flumipropyn + ethametsulfuron + cloquintocet; flumipropyn + flamprop-M + cloquintocet; flupropacil + triasulfuron + cloquintocet; flupropacil + prosulfuron + cloquintocet; flupropacil + clodinafop + cloquintocet; flupropacil + amidosulfuron + cloquintocet; flupropacil + diclofop-methyl + cloquintocet; flupropacil + fenoxaprop(P-ethyl) + cloquintocet; flupropacil + flazasulfuron + cloquintocet; flupropacil + flupyrsulfuron + cloquintocet; flupropacil + iodosulfuron + cloquintocet; flupropacil + mecoprop + cloquintocet; flupropacil + chlorsulfuron + cloquintocet; flupropacil + metsulfuron + cloquintocet; flupropacil + sulfosulfuron + cloquintocet; flupropacil + thifensulfuron + cloquintocet; flupropacil + tribenuron + cloquintocet; flupropacil + ethametsulfuron + cloquintocet; flupropacil + flamprop-M + cloquintocet; nipyraclofen + triasulfuron + cloquintocet; nipyraclofen + prosulfuron + cloquintocet; nipyraclofen + clodinafop + cloquintocet; nipyraclofen + amidosulfuron + cloquintocet; nipyraclofen + diclofop-methyl + cloquintocet; nipyraclofen + fenoxaprop(P-ethyl) + cloquintocet; nipyraclofen + flazasulfuron + cloquintocet; nipyraclofen + flupyrsulfuron + cloquintocet; nipyraclofen + iodosulfuron + cloquintocet; nipyraclofen + mecoprop + cloquintocet; nipyraclofen + chlorsulfuron + cloquintocet; nipyraclofen + metsulfuron + cloquintocet; nipyraclofen + sulfosulfuron + cloquintocet; nipyraclofen + thifensulfuron + cloquintocet; nipyraclofen + tribenuron + cloquintocet; nipyraclofen + ethametsulfuron + cloquintocet; nipyraclofen + flamprop-M + cloquintocet; benzfendizone + triasulfuron + cloquintocet; benzfendizone + prosulfuron + cloquintocet; benzfendizone + clodinafop + cloquintocet; benzfendizone + amidosulfuron + cloquintocet; benzfendizone + diclofop-methyl + cloquintocet; benzfendizone + fenoxaprop(P-ethyl) + cloquintocet; benzfendizone + flazasulfuron + cloquintocet; benzfendizone + flupyrsulfuron + cloquintocet; benzfendizone + iodosulfuron + cloquintocet; benzfendizone + mecoprop + cloquintocet; benzfendizone + chlorsulfuron + cloquintocet; benzfendizone + metsulfuron + cloquintocet; benzfendizone + sulfosulfuron + cloquintocet; benzfendizone + thifensulfuron + cloquintocet; benzfendizone + tribenuron + cloquintocet; benzfendizone + ethametsulfuron + cloquintocet; benzfendizone + flamprop-M + cloquintocet; thidiazimin + triasulfuron + cloquintocet; thidiazimin + prosulfuron + cloquintocet; thidiazimin + clodinafop + cloquintocet; thidiazimin + amidosulfuron + cloquintocet; thidiazimin + diclofop-methyl + cloquintocet; thidiazimin + fenoxaprop(P-ethyl) + cloquintocet; thidiazimin + flazasulfuron + cloquintocet; thidiazimin + flupyrsulfuron + cloquintocet; thidiazimin + iodosulfuron + cloquintocet; thidiazimin + mecoprop + cloquintocet; thidiazimin + chlorsulfuron + cloquintocet; thidiazimin + metsulfuron + cloquintocet; thidiazimin + sulfosulfuron + cloquintocet; thidiazimin + thifensulfuron + cloquintocet; thidiazimin + tribenuron + cloquintocet; thidiazimin + ethametsulfuron + cloquintocet; and thidiazimin + flamprop-M + cloquintocet.

The following specific combinations of the compounds under a) with the co-herbicides under b) (3-compound and 4-compound combinations) have been found to be further groups of very particularly effective herbicidal synergistic and selective-herbicidal compositions, in particular in crops of maize resistant to protoporphyrinogen oxidase inhibitors:
acifluorfen + prosulfuron + primisulfuron; acifluorfen + prosulfuron + dicamba; acifluorfen + primisulfuron + dicamba; acifluorfen + nicosulfuron + primisulfuron; acifluorfen + nicosulfuron + prosulfuron; acifluorfen + rimsulfuron + primisulfuron; acifluorfen + rimsulfuron + prosulfuron; acifluorfen + metolachlor + isoxaflutole; acifluorfen + metolachlor + isoxaflutole + benoxacor; acifluorfen + S-metolachlor + isoxaflutole; acifluorfen + S-metolachlor + isoxaflutole + benoxacor; acifluorfen + metolachlor + mesotrione; acifluorfen + metolachlor + mesotrione + benoxacor; acifluorfen + S-metolachlor + mesotrione; acifluorfen + S-metolachlor + mesotrione + benoxacor; acifluorfen + metolachlor + atrazine; acifluorfen + metolachlor + atrazine + benoxacor; acifluorfen + S-metolachlor + atrazine; acifluorfen + S-metolachlor + atrazine + benoxacor; acifluorfen + metolachlor + terbuthylazine; acifluorfen + metolachlor + terbuthylazine + benoxacor; acifluorfen + S-metolachlor + terbuthylazine; acifluorfen + S-metolachlor + terbuthylazine + benoxacor; acifluorfen + atrazine + nicosulfuron; acifluorfen + atrazine + nicosulfuron + benoxacor; aclonifen + prosulfuron + primisulfuron; aclonifen + prosulfuron + dicamba; aclonifen + primisulfuron + dicamba; aclonifen + nicosulfuron + primisulfuron; aclonifen + nicosulfuron + prosulfuron; aclonifen + rimsulfuron + primisulfuron; aclonifen + rimsulfuron + prosulfuron; aclonifen + metolachlor + isoxaflutole; aclonifen + metolachlor + isoxaflutole + benoxacor; aclonifen + S-metolachlor + isoxaflutole; aclonifen + S-metolachlor + isoxaflutole + benoxacor; aclonifen + metolachlor + mesotrione; aclonifen + metolachlor + mesotrione + benoxacor; aclonifen + S-metolachlor + mesotrione; aclonifen + S-metolachlor + mesotrione + benoxacor; aclonifen + metolachlor + atrazine; aclonifen + metolachlor + atrazine + benoxacor; aclonifen + S-metolachlor + atrazine; aclonifen + S-metolachlor + atrazine + benoxacor; aclonifen + metolachlor + terbuthylazine; aclonifen + metolachlor + terbuthylazine + benoxacor; aclonifen + S-metolachlor + terbuthylazine; aclonifen + S-metolachlor + terbuthylazine + benoxacor; aclonifen + atrazine + nicosulfuron; aclonifen + atrazine + nicosulfuron + benoxacor; bifenox + prosulfuron + primisulfuron; bifenox + prosulfuron + dicamba; bifenox + primisulfuron + dicamba; bifenox + nicosulfuron + primisulfuron; bifenox + nicosulfuron + prosulfuron; bifenox + rimsulfuron + primisulfuron; bifenox + rimsulfuron + prosutfuron; bifenox + metolachlor + isoxaflutole; bifenox + metolachlor + isoxaflutole + benoxacor; bifenox + S-metolachlor + isoxaflutole; bifenox + S-metolachlor + isoxaflutole + benoxacor; bifenox + metolachlor + mesotrione; bifenox + metolachlor + mesotrione + benoxacor; bifenox + S-metolachtor + mesotrione; bifenox + S-metolachlor + mesotrione + benoxacor; bifenox + metolachlor + atrazine; bifenox + metolachlor + atrazine + benoxacor; bifenox + S-metolachlor + atrazine; bifenox + S-metolachlor + atrazine + benoxacor; bifenox + metolachlor + terbuthylazine; bifenox + metolachlor + terbuthylazine + benoxacor; bifenox + S-metolachlor + terbuthylazine; bifenox + S-metolachlor + terbuthylazine + benoxacor; bifenox + atrazine + nicosutfuron; bifenox + atrazine + nicosulfuron + benoxacor; chlornitrofen + prosulfuron + primisulfuron; chlornitrofen + prosulfuron + dicamba; chlornitrofen + primisutfuron + dicamba; chlornitrofen + nicosulfuron + primisulfuron; chlornitrofen + nicosulfuron + prosulfuron; chlornitrofen + rimsulfuron + primisulfuron; chlornitrofen + rimsulfuron + prosulfuron; chlornitrofen + metolachlor + isoxaflutole; chlornitrofen + metolachlor + isoxaflutole + benoxacor; chlornitrofen + S-metolachlor + isoxaflutole; chlornitrofen + S-metolachlor + isoxaflutole + benoxacor; chlornitrofen + metolachlor + mesotrione; chlornitrofen + metolachlor + mesotrione + benoxacor; chlornitrofen + S-metolachlor + mesotrione; chlornitrofen + S-metolachlor + mesotrione + benoxacor; chlornitrofen + metolachlor + atrazine; chlornitrofen + metolachlor + atrazine + benoxacor; chlornitrofen + S-metolachlor + atrazine; chlornitrofen + S-metolachlor + atrazine + benoxacor; chlornitrofen + metolachlor + terbuthylazine; chlornitrofen + metolachlor + terbuthylazine + benoxacor, chlornitrofen + S-metolachlor + terbuthylazine; chlornitrofen + S-metolachlor + terbuthylazine + benoxacor; chlornitrofen + atrazine + nicosulfuron; chlornitrofen + atrazine + nicosulfuron + benoxacor; ethoxyfen + prosulfuron + primisulfuron; ethoxyfen + prosulfuron + dicamba; ethoxyfen + primisulfuron + dicamba; ethoxyfen + nicosulfuron + primisulfuron; ethoxyfen + nicosulfuron + prosulfuron; ethoxyfen + rimsulfuron + primisulfuron; ethoxyfen + rimsulfuron + prosulfuron; ethoxyfen + metolachlor + isoxaflutole; ethoxyfen + metolachlor + isoxaflutole + benoxacor; ethoxyfen + S-metolachlor + isoxaflutole; ethoxyfen + S-metolachlor + isoxaflutole + benoxacor; ethoxyfen + metolachlor + mesotrione; ethoxyfen + metolachlor + mesotrione + benoxacor; ethoxyfen + S-metolachlor + mesotrione; ethoxyfen + S-metolachlor + mesotrione + benoxacor; ethoxyfen + metolachlor + atrazine; ethoxyfen + metolachlor + atrazine + benoxacor; ethoxyfen + S-metolachlor + atrazine; ethoxyfen + S-metolachlor + atrazine + benoxacor; ethoxyfen + metolachlor + terbuthylazine; ethoxyfen + metolachlor + terbuthylazine + benoxacor; ethoxyfen + S-metolachlor + terbuthylazine; ethoxyfen + S-metolachlor + terbuthylazine + benoxacor; ethoxyfen + atrazine + nicosulfuron; ethoxyfen + atrazine + nicosulfuron + benoxacor; fluoroglycofen + prosulfuron + primisulfuron; fluoroglycofen + prosulfuron + dicamba; fluoroglycofen + primisulfuron + dicamba; fluoroglycofen + nicosulfuron + primisulfuron; fluoroglycofen + nicosulfuron + prosulfuron; fluoroglycofen + rimsulfuron + primisulfuron; fluoroglycofen + rimsulfuron + prosulfuron; fluoroglycofen + metolachlor + isoxaflutole; fluoroglycofen + metolachlor + isoxaflutole + benoxacor; fluoroglycofen + S-metolachlor + isoxaflutole; fluoroglycofen + S-metolachlor + isoxaflutole + benoxacor; fluoroglycofen + metolachlor + mesotrione; fluoroglycofen + metolachlor + mesotrione + benoxacor; fluoroglycofen + S-metolachlor + mesotrione; fluoroglycofen + S-metolachlor + mesotrione + benoxacor; fluoroglycofen + metolachlor + atrazine; fluoroglycofen + metolachlor + atrazine + benoxacor; fluoroglycofen + S-metolachlor + atrazine; fluoroglycofen + S-metolachlor + atrazine + benoxacor; fluoroglycofen + metolachlor + terbuthylazine; fluoroglycofen + metolachlor + terbuthylazine + benoxacor; fluoroglycofen + S-metolachlor + terbuthylazine; fluoroglycofen + S-metolachlor + terbuthylazine + benoxacor; fluoroglycofen + atrazine + nicosulfuron; fluoroglycofen + atrazine + nicosulfuron + benoxacor; fomesafen + prosulfuron + primisulfuron; fomesafen + prosulfuron + dicamba; fomesafen + primisulfuron + dicamba; fomesafen + nicosulfuron + primisulfuron; fomesafen + nicosulfuron + prosulfuron; fomesafen + rimsulfuron + primisulfuron; fomesafen + rimsulfuron + prosulfuron; fomesafen + metolachlor + isoxaflutole; fomesafen + metolachlor + isoxaflutole + benoxacor; fomesafen + S-metolachlor + isoxaflutole; fomesafen + S-metolachlor + isoxaflutole + benoxacor; fomesafen + metolachlor + mesotrione; fomesafen + metolachlor + mesotrione + benoxacor; fomesafen + S-metolachlor + mesotrione; fomesafen + S-metolachlor + mesotrione + benoxacor; fomesafen + metolachlor + atrazine; fomesafen + metolachlor + atrazine + benoxacor; fomesafen + S-metolachlor + atrazine; fomesafen + S-metolachlor + atrazine + benoxacor; fomesafen + metolachlor + terbuthylazine; fomesafen + metolachlor + terbuthylazine + benoxacor; fomesafen + S-metolachlor + terbuthylazine; fomesafen + S-metolachlor + terbuthylazine + benoxacor; fomesafen + atrazine + nicosulfuron; fomesafen + atrazine + nicosulfuron + benoxacor; lactofen + prosulfuron + primisulfuron; lactofen + prosulfuron + dicamba; lactofen + primisulfuron + dicamba; lactofen + nicosulfuron + primisulfuron; lactofen + nicosulfuron + prosulfuron; lactofen + rimsulfuron + primisulfuron; lactofen + rimsulfuron + prosulfuron; lactofen + metolachlor + isoxaflutole; lactofen + metolachlor + isoxaflutole + benoxacor; lactofen + S-metolachlor + isoxaflutole; lactofen + S-metolachlor + isoxaflutole + benoxacor; lactofen + metolachlor + mesotrione; lactofen + metolachlor + mesotrione + benoxacor; lactofen + S-metolachlor + mesotrione; lactofen + S-metolachlor + mesotrione + benoxacor; lactofen + metolachlor + atrazine; lactofen + metolachlor + atrazine + benoxacor; lactofen + S-metolachlor + atrazine; lactofen + S-metolachlor + atrazine + benoxacor; lactofen + metolachlor + terbuthylazine; lactofen + metolachlor + terbuthylazine + benoxacor; lactofen + S-metolachlor + terbuthylazine; lactofen + S-metolachlor + terbuthylazine + benoxacor; lactofen + atrazine + nicosulfuron; lactofen + atrazine + nicosulfuron + benoxacor; oxyfluorfen + prosulfuron + primisulfuron; oxyfluorfen + prosulfuron + dicamba; oxyfluorfen + primisulfuron + dicamba; oxyfluorfen + nicosulfuron + primisulfuron; oxyfluorfen + nicosulfuron + prosulfuron; oxyfluorfen + rimsulfuron + primisulfuron; oxyfluorfen + rimsulfuron + prosulfuron; oxyfluorfen + metolachlor + isoxaflutole; oxyfluorfen + metolachlor + isoxaflutole + benoxacor; oxyfluorfen + S-metolachlor + isoxaflutole; oxyfluorfen + S-metolachlor + isoxaflutole + benoxacor; oxyfluorfen + metolachlor + mesotrione; oxyfluorfen + metolachlor + mesotrione + benoxacor; oxyfluorfen + S-metolachlor + mesotrione; oxyfluorfen + S-metolachlor + mesotrione + benoxacor; oxyfluorfen + metolachlor + atrazine; oxyfluorfen + metolachlor + atrazine + benoxacor; oxyfluorfen + S-metolachlor + atrazine; oxyfluorfen + S-metolachlor + atrazine + benoxacor; oxyfluorfen + metolachlor + terbuthylazine; oxyfluorfen + metolachlor + terbuthylazine + benoxacor; oxyfluorfen + S-metolachlor + terbuthylazine; oxyfluorfen + S-metolachlor + terbuthylazine + benoxacor; oxyfluorfen + atrazine + nicosulfuron; oxyfluorfen + atrazine + nicosulfuron + benoxacor; azafenidin + prosulfuron + primisulfuron; azafenidin + prosulfuron + dicamba; azafenidin + primisulfuron + dicamba; azafenidin + nicosulfuron + primisulfuron; azafenidin + nicosulfuron + prosulfuron; azafenidin + rimsulfuron + primisulfuron; azafenidin + rimsulfuron + prosulfuron; azafenidin + metolachlor + isoxaflutole; azafenidin + metolachlor + isoxaflutole + benoxacor; azafenidin + S-metolachlor + isoxaflutole; azafenidin + S-metolachlor + isoxaflutole + benoxacor; azafenidin + metolachlor + mesotrione; azafenidin + metolachlor + mesotrione + benoxacor; azafenidin + S-metolachlor + mesotrione; azafenidin + S-metolachlor + mesotrione + benoxacor; azafenidin + metolachlor + atrazine; azafenidin + metolachlor + atrazine + benoxacor; azafenidin + S-metolachlor + atrazine; azafenidin + S-metolachlor + atrazine + benoxacor; azafenidin + metolachlor + terbuthylazine; azafenidin + metolachlor + terbuthytazine + benoxacor; azafenidin + S-metolachlor + terbuthylazine; azafenidin + S-metolachlor + terbuthylazine + benoxacor; azafenidin + atrazine + nicosulfuron; azafenidin + atrazine + nicosulfuron + benoxacor, carfentrazone-ethyl + prosulfuron + primisulfuron; carfentrazone-ethyl + prosulfuron + dicamba; carfentrazone-ethyl + primisulfuron + dicamba; carfentrazone-ethyl + nicosulfuron + primisulfuron; carfentrazone-ethyl + nicosulfuron + prosulfuron; carfentrazone-ethyl + rimsulfuron + primisulfuron; carfentrazone-ethyl + rimsulfuron + prosulfuron; carfentrazone-ethyl + metolachlor + isoxaflutole; carfentrazone-ethyl + metolachlor + isoxaflutole + benoxacor; carfentrazone-ethyl + S-metolachlor + isoxaflutole; carfentrazone-ethyl + S-metolachlor + isoxaflutole + benoxacor; carfentrazone-ethyl + metolachlor + mesotrione; carfentrazone-ethyl + metolachlor + mesotrione + benoxacor; carfentrazone-ethyl + S-metolachlor + mesotrione; carfentrazone-ethyl + S-metolachlor + mesotrione + benoxacor; carfentrazone-ethyl + metolachlor + atrazine; carfentrazone-ethyl + metolachlor + atrazine + benoxacor; carfentrazone-ethyl + S-metolachlor + atrazine; carfentrazone-ethyl + S-metolachlor + atrazine + benoxacor; carfentrazone-ethyl + metolachlor + terbuthylazine; carfentrazone-ethyl + metolachlor + terbuthylazine + benoxacor; carfentrazone-ethyl + S-metolachlor + terbuthylazine; carfentrazone-ethyl + S-metolachlor + terbuthylazine + benoxacor; carfentrazone-ethyl + atrazine + nicosulfuron; carfentrazone-ethyl + atrazine + nicosulfuron + benoxacor; compound of the formula A + prosulfuron + primisulfuron; compound of the formula A + prosulfuron + dicamba; compound of the formula A + primisulfuron + dicamba; compound of the formula A + nicosulfuron + primisulfuron; compound of the formula A + nicosulfuron + prosulfuron; compound of the formula A + rimsulfuron + primisulfuron; compound of the formula A + rimsulfuron + prosulfuron; compound of the formula A + metolachlor + isoxaflutole; compound of the formula A + metolachlor + isoxaflutole + benoxacor; compound of the formula A + S-metolachlor + isoxaflutole; compound of the formula A + S-metolachlor + isoxaflutole + benoxacor; compound of the formula A + metolachlor + mesotrione; compound of the formula A + metolachlor + mesotrione + benoxacor; compound of the formula A + S-metolachlor + mesotrione; compound of the formula A + S-metolachlor + mesotrione + benoxacor; compound of the formula A + metolachlor + atrazine; compound of the formula A + metolachlor + atrazine + benoxacor; compound of the formula A + S-metolachlor + atrazine; compound of the formula A + S-metolachlor + atrazine + benoxacor; compound of the formula A + metolachlor + terbuthylazine; compound of the formula A + metolachlor + terbuthylazine + benoxacor; compound of the formula A + S-metolachlor + terbuthylazine; compound of the formula A + S-metolachlor + terbuthylazine + benoxacor; compound of the formula A + atrazine + nicosulfuron; compound of the formula A + atrazine + nicosulfuron + benoxacor; cinidon-ethyl + prosulfuron + primisulfuron; cinidon-ethyl + prosulfuron + dicamba; cinidon-ethyl + primisulfuron + dicamba; cinidon-ethyl + nicosulfuron + primisulfuron; cinidon-ethyl + nicosulfuron + prosulfuron; cinidon-ethyl + rimsulfuron + primisulfuron; cinidon-ethyl + rimsulfuron + prosulfuron; cinidon-ethyl + metolachlor + isoxaflutole; cinidon-ethyl + metolachlor + isoxaflutole + benoxacor; cinidon-ethyl + S-metolachlor + isoxaflutole; cinidon-ethyl + S-metolachlor + isoxaflutole + benoxacor; cinidon-ethyl + metolachlor + mesotrione; cinidon-ethyl + metolachlor + mesotrione + benoxacor; cinidon-ethyl + S-metolachlor + mesotrione; cinidon-ethyl + S-metolachlor + mesotrione + benoxacor, cinidon-ethyl + metolachlor + atrazine; cinidon-ethyl + metolachlor + atrazine + benoxacor; cinidon-ethyl + S-metolachlor + atrazine; cinidon-ethyl + S-metolachlor + atrazine + benoxacor; cinidon-ethyl + metolachlor + terbuthylazine; cinidon-ethyl + metolachlor + terbuthylazine + benoxacor; cinidon-ethyl + S-metolachlor + terbuthylazine; cinidon-ethyl + S-metolachlor + terbuthylazine + benoxacor, cinidon-ethyl + atrazine + nicosulfuron; cinidon-ethyl + atrazine + nicosulfuron + benoxacor; flumiclorac-pentyl + prosulfuron + primisulfuron; flumiclorac-pentyl + prosulfuron + dicamba; flumiclorac-pentyl + primisulfuron + dicamba; flumiclorac-pentyl + nicosulfuron + primisulfuron; flumiclorac-pentyl + nicosulfuron + prosulfuron; flumiclorac-pentyl + rimsulfuron + primisulfuron; flumiclorac-pentyl + rimsulfuron + prosulfuron; flumiclorac-pentyl + metolachlor + isoxaflutole; flumiclorac-pentyl + metolachlor + isoxaflutole + benoxacor; flumiclorac-pentyl + S-metolachlor + isoxaflutole; flumiclorac-pentyl + S-metolachlor + isoxaflutole + benoxacor; flumiclorac-pentyl + metolachlor + mesotrione; flumiclorac-pentyl + metolachlor + mesotrione + benoxacor; flumiclorac-pentyl + S-metolachlor + mesotrione; flumiclorac-pentyl + S-metolachlor + mesotrione + benoxacor; flumiclorac-pentyl + metolachlor + atrazine; flumiclorac-pentyl + metolachlor + atrazine + benoxacor; flumiclorac-pentyl + S-metolachlor + atrazine; flumiclorac-pentyl + S-metolachlor + atrazine + benoxacor, flumiclorac-pentyl + metolachlor + terbuthylazine; flumiclorac-pentyl + metolachlor + terbuthylazine + benoxacor; flumiclorac-pentyl + S-metolachlor + terbuthylazine; flumiclorac-pentyl + S-metolachlor + terbuthylazine + benoxacor; flumiclorac-pentyl + atrazine + nicosulfuron; flumiclorac-pentyl + atrazine + nicosulfuron + benoxacor; flumioxazin + prosulfuron + primisulfuron; flumioxazin + prosulfuron + dicamba; flumioxazin + primisulfuron + dicamba; flumioxazin + nicosulfuron + primisulfuron; flumioxazin + nicosulfuron + prosulfuron; flumioxazin + rimsulfuron + primisulfuron; flumioxazin + rimsulfuron + prosulfuron; flumioxazin + metolachlor + isoxaflutole; flumioxazin + metolachlor + isoxaflutole + benoxacor; flumioxazin + S-metolachlor + isoxaflutole; flumioxazin + S-metolachlor + isoxaflutole + benoxacor; flumioxazin + metolachlor + mesotrione; flumioxazin + metolachlor + mesotrione + benoxacor, flumioxazin + S-metolachlor + mesotrione; flumioxazin + S-metolachlor + mesotrione + benoxacor; flumioxazin + metolachlor + atrazine; flumioxazin + metolachlor + atrazine + benoxacor; flumioxazin + S-metolachlor + atrazine; flumioxazin + S-metolachlor + atrazine + benoxacor; flumioxazin + metolachlor + terbuthylazine; flumioxazin + metolachlor + terbuthylazine + benoxacor; flumioxazin + S-metolachlor + terbuthylazine; flumioxazin + S-metolachlor + terbuthylazine + benoxacor; flumioxazin + atrazine + nicosulfuron; flumioxazin + atrazine + nicosulfuron + benoxacor; fluthiacet-methyl + prosulfuron + primisulfuron; fluthiacet-methyl + prosulfuron + dicamba; fluthiacet-methyl + primisulfuron + dicamba; fluthiacet-methyl + nicosulfuron + primisulfuron; fluthiacet-methyl + nicosulfuron + prosulfuron; fluthiacet-methyl + rimsulfuron + primisulfuron; fluthiacet-methyl + rimsulfuron + prosulfuron; fluthiacet-methyl + metolachlor + isoxaflutole; fluthiacet-methyl + metolachlor + isoxaflutole + benoxacor; fluthiacet-methyl + S-metolachlor + isoxaflutole; fluthiacet-methyl + S-metolachlor + isoxaflutole + benoxacor; fluthiacet-methyl + metolachlor + mesotrione; fluthiacet-methyl + metolachlor + mesotrione + benoxacor, fluthiacet-methyl + S-metolachlor + mesotrione; fluthiacet-methyl + S-metolachlor + mesotrione + benoxacor, fluthiacet-methyl + metolachlor + atrazine; fluthiacet-methyl + metolachlor + atrazine + benoxacor; fluthiacet-methyl + S-metolachlor + atrazine; fluthiacet-methyl + S-metolachlor + atrazine + benoxacor; fluthiacet-methyl + metotachlor + terbuthylazine; fluthiacet-methyl + metolachlor + terbuthylazine + benoxacor; fluthiacet-methyl + S-metolachlor + terbuthylazine; fluthiacet-methyl + S-metolachlor + terbuthylazine + benoxacor; fluthiacet-methyl + atrazine + nicosulfuron; fluthiacet-methyl + atrazine + nicosulfuron + benoxacor; oxadiargyl + prosulfuron + primisulfuron; oxadiargyl + prosulfuron + dicamba; oxadiargyl + primisulfuron + dicamba; oxadiargyl + nicosulfuron + primisulfuron; oxadiargyl + nicosulfuron + prosulfuron; oxadiargyl + rimsulfuron + primisulfuron; oxadiargyl + rimsulfuron + prosulfuron; oxadiargyl + metolachlor + isoxaflutole; oxadiargyl + metolachlor + isoxaflutole + benoxacor; oxadiargyl + S-metolachlor + isoxaflutole; oxadiargyl + S-metolachlor + isoxaflutole + benoxacor; oxadiargyl + metolachlor + mesotrione; oxadiargyl + metolachlor + mesotrione + benoxacor; oxadiargyl + S-metolachlor + mesotrione; oxadiargyl + S-metolachlor + mesotrione + benoxacor; oxadiargyl + metolachlor + atrazine; oxadiargyl + metolachlor + atrazine + benoxacor; oxadiargyl + S-metolachlor + atrazine; oxadiargyl + S-metolachlor + atrazine + benoxacor; oxadiargyl + metolachlor + terbuthylazine; oxadiargyl + metolachlor + terbuthylazine + benoxacor; oxadiargyl + S-metolachlor + terbuthylazine; oxadiargyl + S-metolachlor + terbuthylazine + benoxacor; oxadiargyl + atrazine + nicosulfuron; oxadiargyl + atrazine + nicosulfuron + benoxacor; oxadiazon + prosulfuron + primisulfuron; oxadiazon + prosulfuron + dicamba; oxadiazon + primisulfuron + dicamba; oxadiazon + nicosulfuron + primisulfuron; oxadiazon + nicosulfuron + prosulfuron; oxadiazon + rimsulfuron + primisulfuron; oxadiazon + rimsulfuron + prosulfuron; oxadiazon + metolachlor + isoxaflutole; oxadiazon + metolachlor + isoxaflutole + benoxacor, oxadiazon + S-metolachlor + isoxaflutole; oxadiazon + S-metolachlor + isoxaflutole + benoxacor; oxadiazon + metolachlor + mesotrione; oxadiazon + metolachlor + mesotrione + benoxacor; oxadiazon + S-metolachlor + mesotrione; oxadiazon + S-metolachlor + mesotrione + benoxacor; oxadiazon + metolachlor + atrazine; oxadiazon + metolachlor + atrazine + benoxacor; oxadiazon + S-metolachlor + atrazine; oxadiazon + S-metolachlor + atrazine + benoxacor; oxadiazon + metolachlor + terbuthylazine; oxadiazon + metolachlor + terbuthylazine + benoxacor; oxadiazon + S-metolachtor + terbuthylazine; oxadiazon + S-metolachlor + terbuthylazine + benoxacor; oxadiazon + atrazine + nicosulfuron; oxadiazon + atrazine + nicosulfuron + benoxacor; pentoxazone + prosulfuron + primisulfuron; pentoxazone + prosulfuron + dicamba; pentoxazone + primisulfuron + dicamba; pentoxazone + nicosulfuron + primisulfuron; pentoxazone + nicosulfuron + prosulfuron; pentoxazone + rimsulfuron + primisulfuron; pentoxazone + rimsulfuron + prosulfuron; pentoxazone + metolachlor + isoxaflutole; pentoxazone + metolachlor + isoxaflutole + benoxacor; pentoxazone + S-metolachlor + isoxaflutole; pentoxazone + S-metolachlor + isoxaflutole + benoxacor; pentoxazone + metolachlor + mesotrione; pentoxazone + metolachlor + mesotrione + benoxacor; pentoxazone + S-metolachlor + mesotrione; pentoxazone + S-metolachlor + mesotrione + benoxacor; pentoxazone + metolachlor + atrazine; pentoxazone + metolachlor + atrazine + benoxacor; pentoxazone + S-metolachlor + atrazine; pentoxazone + S-metolachlor + atrazine + benoxacor; pentoxazone + metolachior + terbuthylazine; pentoxazone + metolachlor + terbuthylazine + benoxacor; pentoxazone + S-metolachlor + terbuthylazine; pentoxazone + S-metolachlor + terbuthylazine + benoxacor; pentoxazone + atrazine + nicosulfuron; pentoxazone + atrazine + nicosulfuron + benoxacor; sulfentrazone + prosulfuron + primisulfuron; sulfentrazone + prosulfuron + dicamba; sulfentrazone + primisulfuron + dicamba; sulfentrazone + nicosulfuron + primisulfuron; sulfentrazone + nicosulfuron + prosulfuron; sulfentrazone + rimsulfuron + primisulfuron; sulfentrazone + rimsulfuron + prosulfuron; sulfentrazone + metolachlor + isoxaflutole; sulfentrazone + metolachlor + isoxaflutole + benoxacor; sulfentrazone + S-metolachlor + isoxaflutole; sulfentrazone + S-metolachlor + isoxaflutole + benoxacor; sulfentrazone + metolachlor + mesotrione; sulfentrazone + metolachlor + mesotrione + benoxacor; sulfentrazone + S-metolachlor + mesotrione; sulfentrazone + S-metolachlor + mesotrione + benoxacor; sulfentrazone + metolachlor + atrazine; sulfentrazone + metolachlor + atrazine + benoxacor; sulfentrazone + S-metolachlor + atrazine; sulfentrazone + S-metolachlor + atrazine + benoxacor; sulfentrazone + metolachlor + terbuthylazine; sulfentrazone + metolachlor + terbuthylazine + benoxacor; sulfentrazone + S-metolachlor + terbuthylazine; sulfentrazone + S-metolachlor + terbuthylazine + benoxacor; sulfentrazone + atrazine + nicosulfuron; sulfentrazone + atrazine + nicosulfuron + benoxacor; fluazolate + prosulfuron + primisulfuron; fluazolate + prosulfuron + dicamba; fluazolate + primisulfuron + dicamba; fluazolate + nicosulfuron + primisulfuron; fluazolate + nicosulfuron + prosulfuron; fluazolate + rimsulfuron + primisulfuron; fluazolate + rimsulfuron + prosulfuron; fluazolate + metolachlor + isoxaflutole; fluazolate + metolachlor + isoxaflutole + benoxacor; fluazolate + S-metolachlor + isoxaflutole; fluazolate + S-metolachlor + isoxaflutole + benoxacor; fluazolate + metolachlor + mesotrione; fluazolate + metolachlor + mesotrione + benoxacor; fluazolate + S-metolachlor + mesotrione; fluazolate + S-metolachlor + mesotrione + benoxacor; fluazolate + metolachlor + atrazine; fluazolate + metolachlor + atrazine + benoxacor; fluazolate + S-metolachlor + atrazine; fluazolate + S-metolachlor + atrazine + benoxacor; fluazolate + metolachlor + terbuthylazine; fluazolate + metolachlor + terbuthylazine + benoxacor; fluazolate + S-metolachlor + terbuthylazine; fluazolate + S-metolachlor + terbuthylazine + benoxacor; fluazolate + atrazine + nicosulfuron; fluazolate + atrazine + nicosulfuron + benoxacor, pyraflufen-ethyl + prosulfuron + primisulfuron; pyraflufen-ethyl + prosulfuron + dicamba; pyraflufen-ethyl + primisulfuron + dicamba; pyraflufen-ethyl + nicosulfuron + primisulfuron; pyraflufen-ethyl + nicosulfuron + prosulfuron; pyraflufen-ethyl + rimsulfuron + primisulfuron; pyraflufen-ethyl + rimsulfuron + prosulfuron; pyraflufen-ethyl + metolachlor + isoxaflutole; pyraflufen-ethyl + metolachlor + isoxaflutole + benoxacor; pyraflufen-ethyl + S-metolachlor + isoxaflutole; pyraflufen-ethyl + S-metolachlor + isoxaflutole + benoxacor; pyraflufen-ethyl + metolachlor + mesotrione; pyraflufen-ethyl + metolachlor + mesotrione + benoxacor; pyraflufen-ethyl + S-metolachlor + mesotrione; pyraflufen-ethyl + S-metolachlor + mesotrione + benoxacor; pyraflufen-ethyl + metolachlor + atrazine; pyraflufen-ethyl + metolachlor + atrazine + benoxacor; pyraflufen-ethyl + S-metolachlor + atrazine; pyraflufen-ethyl + S-metolachlor + atrazine + benoxacor; pyraflufen-ethyl + metolachlor + terbuthylazine; pyraflufen-ethyl + metolachlor + terbuthylazine + benoxacor; pyraflufen-ethyl + S-metolachlor + terbuthylazine; pyraflufen-ethyl + S-metolachlor + terbuthylazine + benoxacor; pyraflufen-ethyl + atrazine + nicosulfuron; pyraflufen-ethyl + atrazine + nicosulfuron + benoxacor; flumipropyn + prosulfuron + primisulfuron; flumipropyn + prosulfuron + dicamba; flumipropyn + primisulfuron + dicamba; flumipropyn + nicosulfuron + primisulfuron; flumipropyn + nicosulfuron + prosulfuron; flumipropyn + rimsulfuron + primisulfuron; flumipropyn + rimsulfuron + prosulfuron; flumipropyn + metolachlor + isoxaflutole; flumipropyn + metolachlor + isoxaflutole + benoxacor; flumipropyn + S-metolachlor + isoxaflutole; flumipropyn + S-metolachlor + isoxaflutole + benoxacor; flumipropyn + metolachlor + mesotrione; flumipropyn + metolachlor + mesotrione + benoxacor; flumipropyn + S-metolachlor + mesotrione; flumipropyn + S-metolachlor + mesotrione + benoxacor; flumipropyn + metolachlor + atrazine; flumipropyn + metolachlor + atrazine + benoxacor; flumipropyn + S-metolachlor + atrazine; flumipropyn + S-metolachlor + atrazine + benoxacor; flumipropyn + metolachlor + terbuthylazine; flumipropyn + metolachlor + terbuthylazine + benoxacor; flumipropyn + S-metolachlor + terbuthylazine; flumipropyn + S-metolachlor + terbuthylazine + benoxacor; flumipropyn + atrazine + nicosulfuron; flumipropyn + atrazine + nicosulfuron + benoxacor; flupropacil + prosulfuron + primisulfuron; flupropacil + prosulfuron + dicamba; flupropacil + primisulfuron + dicamba; flupropacil + nicosulfuron + primisulfuron; flupropacil + nicosulfuron + prosulfuron; flupropacil + rimsulfuron + primisulfuron; flupropacil + rimsulfuron + prosulfuron; flupropacil + metolachlor + isoxaflutole; flupropacil + metolachlor + isoxaflutole + benoxacor; flupropacil + S-metolachlor + isoxaflutole; flupropacil + S-metolachlor + isoxaflutole + benoxacor; flupropacil + metolachlor + mesotrione; flupropacil + metolachlor + mesotrione + benoxacor; flupropacil + S-metolachlor + mesotrione; flupropacil + S-metolachlor + mesotrione + benoxacor, flupropacil + metolachlor + atrazine; flupropacil + metolachlor + atrazine + benoxacor; flupropacil + S-metolachlor + atrazine; flupropacil + S-metolachlor + atrazine + benoxacor; flupropacil + metolachlor + terbuthylazine; flupropacil + metolachlor + terbuthylazine + benoxacor; flupropacil + S-metolachlor + terbuthylazine; flupropacil + S-metolachlor + terbuthylazine + benoxacor; flupropacil + atrazine + nicosulfuron; flupropacil + atrazine + nicosulfuron + benoxacor; nipyraclofen + prosulfuron + primisulfuron; nipyraclofen + prosulfuron + dicamba; nipyraclofen + primisulfuron + dicamba; nipyraclofen + nicosulfuron + primisulfuron; nipyraclofen + nicosulfuron + prosulfuron; nipyraclofen + rimsulfuron + primisulfuron; nipyraclofen + rimsulfuron + prosulfuron; nipyraclofen + metolachlor + isoxaflutole; nipyraclofen + metolachlor + isoxaflutole + benoxacor; nipyraclofen + S-metolachlor + isoxaflutole; nipyraclofen + S-metolachlor + isoxaflutole + benoxacor; nipyraclofen + metolachlor + mesotrione; nipyraclofen + metolachlor + mesotrione + benoxacor; nipyraclofen + S-metolachlor + mesotrione; nipyraclofen + S-metolachlor + mesotrione + benoxacor; nipyraclofen + metolachlor + atrazine; nipyraclofen + metolachlor + atrazine + benoxacor; nipyraclofen + S-metolachlor + atrazine; nipyraclofen + S-metoiachlor + atrazine + benoxacor; nipyraclofen + metolachlor + terbuthylazine; nipyraclofen + metolachlor + terbuthylazine + benoxacor; nipyraclofen + S-metolachlor + terbuthylazine; nipyraclofen + S-metolachlor + terbuthylazine + benoxacor; nipyraclofen + atrazine + nicosulfuron; nipyraclofen + atrazine + nicosulfuron + benoxacor; benzfendizone + prosulfuron + primisulfuron; benzfendizone + prosulfuron + dicamba; benzfendizone + primisulfuron + dicamba; benzfendizone + nicosulfuron + primisulfuron; benzfendizone + nicosulfuron + prosulfuron; benzfendizone + rimsulfuron + primisulfuron; benzfendizone + rimsulfuron + prosulfuron; benzfendizone + metolachlor + isoxaflutole; benzfendizone + metolachlor + isoxaflutole + benoxacor; benzfendizone + S-metolachlor + isoxaflutole; benzfendizone + S-metolachlor + isoxaflutole + benoxacor, benzfendizone + metolachlor + mesotrione; benzfendizone + metolachlor + mesotrione + benoxacor; benzfendizone + S-metolachlor + mesotrione; benzfendizone + S-metolachlor + mesotrione + benoxacor; benzfendizone + metolachlor + atrazine; benzfendizone + metolachior + atrazine + benoxacor; benzfendizone + S-metolachlor + atrazine; benzfendizone + S-metolachlor + atrazine + benoxacor; benzfendizone + metolachlor + terbuthylazine; benzfendizone + metolachlor + terbuthylazine + benoxacor; benzfendizone + S-metolachlor + terbuthylazine; benzfendizone + S-metolachlor + terbuthylazine + benoxacor; benzfendizone + atrazine + nicosulfuron; benzfendizone + atrazine + nicosulfuron + benoxacor; thidiazimin + prosulfuron + primisulfuron; thidiazimin + prosulfuron + dicamba; thidiazimin + primisulfuron + dicamba; thidiazimin + nicosulfuron + primisulfuron; thidiazimin + nicosulfuron + prosulfuron; thidiazimin + rimsulfuron + primisulfuron; thidiazimin + rimsutfuron + prosulfuron; thidiazimin + metolachlor + isoxaflutole; thidiazimin + metolachlor + isoxaflutole + benoxacor; thidiazimin + S-metolachlor + isoxaflutole; thidiazimin + S-metolachlor + isoxaflutole + benoxacor; thidiazimin + metolachlor + mesotrione; thidiazimin + metolachlor + mesotrione + benoxacor; thidiazimin + S-metolachlor + mesotrione; thidiazimin + S-metolachlor + mesotrione + benoxacor; thidiazimin + metolachlor + atrazine; thidiazimin + metolachlor + atrazine + benoxacor; thidiazimin + S-metolachlor + atrazine; thidiazimin + S-metolachlor + atrazine + benoxacor; thidiazimin + metolachlor + terbuthylazine; thidiazimin + metolachlor + terbuthylazine + benoxacor; thidiazimin + S-metolachlor + terbuthylazine; thidiazimin + S-metolachlor + terbuthylazine + benoxacor; thidiazimin + atrazine + nicosulfuron; and thidiazimin + atrazine + nicosulfuron + benoxacor.

Acifluorfen + metolachlor + isoxaflutole + MON 4660; acifluorfen + S-metolachlor + isoxaflutole + MON 4660; acifluorfen + metolachlor + mesotrione + MON 4660; acifluorfen + S-metolachlor + mesotrione + MON 4660; acifluorfen + metolachlor + atrazine + MON 4660; acifluorfen + S-metolachlor + atrazine + MON 4660; acifluorfen + metolachlor + terbuthylazine + MON 4660; acifluorfen + S-metolachlor + terbuthylazine + MON 4660; acifluorfen + atrazine + nicosulfuron + MON 4660; aclonifen + metolachlor + isoxaflutole + MON 4660; aclonifen + S-metolachlor + isoxaflutole + MON 4660; aclonifen + metolachlor + mesotrione + MON 4660; aclonifen + S-metolachlor + mesotrione + MON 4660; aclonifen + metolachlor + atrazine + MON 4660; aclonifen + S-metolachlor + atrazine + MON 4660; aclonifen + metolachlor + terbuthylazine + MON 4660; aclonifen + S-metolachlor + terbuthylazine + MON 4660; aclonifen + atrazine + nicosulfuron + MON 4660; bifenox + metolachlor + isoxaflutole + MON 4660; bifenox + S-metolachlor + isoxaflutole + MON 4660; bifenox + metolachlor + mesotrione + MON 4660; bifenox + S-metolachlor + mesotrione + MON 4660; bifenox + metolachlor + atrazine + MON 4660; bifenox + S-metolachlor + atrazine + MON 4660; bifenox + metolachlor + terbuthylazine + MON 4660; bifenox + S-metolachlor + terbuthylazine + MON 4660; bifenox + atrazine + nicosulfuron + MON 4660; chlornitrofen + metolachlor + isoxaflutole + MON 4660; chlornitrofen + S-metolachlor + isoxaflutole + MON 4660; chlornitrofen + metolachlor + mesotrione + MON 4660; chlornitrofen + S-metolachlor + mesotrione + MON 4660; chlornitrofen + metolachlor + atrazine + MON 4660; chlornitrofen + S-metolachlor + atrazine + MON 4660; chlornitrofen + metolachlor + terbuthylazine + MON 4660; chlornitrofen + S-metoiachlor + terbuthylazine + MON 4660; chlornitrofen + atrazine + nicosulfuron + MON 4660; ethoxyfen + metolachlor + isoxaflutole + MON 4660; ethoxyfen + S-metolachlor + isoxaflutole + MON 4660; ethoxyfen + metolachlor + mesotrione + MON 4660; ethoxyfen + S-metolachlor + mesotrione + MON 4660; ethoxyfen + metolachlor + atrazine + MON 4660; ethoxyfen + S-metolachlor + atrazine + MON 4660; ethoxyfen + metolachlor + terbuthylazine + MON 4660; ethoxyfen + S-metolachlor + terbuthylazine + MON 4660; ethoxyfen + atrazine + nicosulfuron + MON 4660; fluoroglycofen + metolachlor + isoxaflutole + MON 4660; fluoroglycofen + S-metolachlor + isoxaflutole + MON 4660; fluoroglycofen + metolachlor + mesotrione + MON 4660; fluoroglycofen + S-metolachlor + mesotrione + MON 4660; fluoroglycofen + metolachlor + atrazine + MON 4660; fluoroglycofen + S-metolachlor + atrazine + MON 4660; fluoroglycofen + metolachlor + terbuthylazine + MON 4660; fluoroglycofen + S-metolachlor + terbuthylazine + MON 4660; fluoroglycofen + atrazine + nicosulfuron + MON 4660; fomesafen + metolachlor + isoxaflutole + MON 4660; fomesafen + S-metolachlor + isoxaflutole + MON 4660; fomesafen + metolachlor + mesotrione + MON 4660; fomesafen + S-metolachlor + mesotrione + MON 4660; fomesafen + metolachlor + atrazine + MON 4660; fomesafen + S-metolachlor + atrazine + MON 4660; fomesafen + metolachlor + terbuthylazine + MON 4660; fomesafen + S-metolachlor + terbuthylazine + MON 4660; fomesafen + atrazine + nicosulfuron + MON 4660; lactofen + metolachlor + isoxaflutole + MON 4660; lactofen + S-metolachlor + isoxaflutole + MON 4660; lactofen + metolachlor + mesotrione + MON 4660; lactofen + S-metolachlor + mesotrione + MON 4660; lactofen + metolachlor + atrazine + MON 4660; lactofen + S-metolachlor + atrazine + MON 4660; lactofen + metolachlor + terbuthylazine + MON 4660; lactofen + S-metolachlor + terbuthylazine + MON 4660; lactofen + atrazine + nicosulfuron + MON 4660; oxyfluorfen + metolachlor + isoxaflutole + MON 4660; oxyfluorfen + S-metolachlor + isoxaflutole + MON 4660; oxyfluorfen + metolachlor + mesotrione + MON 4660; oxyfluorfen + S-metolachlor + mesotrione + MON 4660; oxyfluorfen + metolachlor + atrazine + MON 4660; oxyfluorfen + S-metolachlor + atrazine + MON 4660; oxyfluorfen + metolachlor + terbuthylazine + MON 4660; oxyfluorfen + S-metolachlor + terbuthylazine + MON 4660; oxyfluorfen + atrazine + nicosulfuron + MON 4660; azafenidin + metolachlor + isoxaflutole + MON 4660; azafenidin + S-metolachlor + isoxaflutole + MON 4660; azafenidin + metolachlor + mesotrione + MON 4660; azafenidin + S-metolachlor + mesotrione + MON 4660; azafenidin + metolachlor + atrazine + MON 4660; azafenidin + S-metolachlor + atrazine + MON 4660; azafenidin + metolachlor + terbuthylazine + MON 4660; azafenidin + S-metolachlor + terbuthylazine + MON 4660; azafenidin + atrazine + nicosulfuron + MON 4660; carfentrazone-ethyl + metolachlor + isoxaflutole + MON 4660; carfentrazone-ethyl + S-metolachlor + isoxaflutole + MON 4660; carfentrazone-ethyl + metolachlor + mesotrione + MON 4660; carfentrazone-ethyl + S-metolachlor + mesotrione + MON 4660; carfentrazone-ethyl + metolachlor + atrazine + MON 4660; carfentrazone-ethyl + S-metolachlor + atrazine + MON 4660; carfentrazone-ethyl + metolachlor + terbuthylazine + MON 4660; carfentrazone-ethyl + S-metolachlor + terbuthylazine + MON 4660; carfentrazone-ethyl + atrazine + nicosulfuron + MON 4660; compound of the formula A + metolachlor + isoxaflutole + MON 4660; compound of the formula A + S-metolachlor + isoxaflutole + MON 4660; compound of the formula A + metolachlor + mesotrione + MON 4660; compound of the formula A + S-metolachlor + mesotrione + MON 4660; compound of the formula A + metolachlor + atrazine + MON 4660; compound of the formula A + S-metolachlor + atrazine + MON 4660; compound of the formula A + metolachlor + terbuthylazine + MON 4660; compound of the formula A + S-metolachlor + terbuthylazine + MON 4660; compound of the formula A + atrazine + nicosulfuron + MON 4660; cinidon-ethyl + metolachlor + isoxaflutole + MON 4660; cinidon-ethyl + S-metolachlor + isoxaflutole + MON 4660; cinidon-ethyl + metolachlor + mesotrione + MON 4660; cinidon-ethyl + S-metolachlor + mesotrione + MON 4660; cinidon-ethyl + metolachlor + atrazine + MON 4660; cinidon-ethyl + S-metolachlor + atrazine + MON 4660; cinidon-ethyl + metolachlor + terbuthylazine + MON 4660; cinidon-ethyl + S-metolachlor + terbuthylazine + MON 4660; cinidon-ethyl + atrazine + nicosulfuron + MON 4660; flumiclorac-pentyl + metolachlor + isoxaflutole + MON 4660; flumiclorac-pentyl + S-metolachlor + isoxaflutole + MON 4660; flumiclorac-pentyl + metolachlor + mesotrione + MON 4660; flumiclorac-pentyl + S-metolachlor + mesotrione + MON 4660; flumiclorac-pentyl + metolachlor + atrazine + MON 4660; flumiclorac-pentyl + S-metolachlor + atrazine + MON 4660; flumiclorac-pentyl + metolachlor + terbuthylazine + MON 4660; flumiclorac-pentyl + S-metolachlor + terbuthylazine + MON 4660; flumiclorac-pentyl + atrazine + nicosulfuron + MON 4660; flumioxazin + metolachlor + isoxaflutole + MON 4660; flumioxazin + S-metolachlor + isoxaflutole + MON 4660; flumioxazin + metolachlor + mesotrione + MON 4660; flumioxazin + S-metolachlor + mesotrione + MON 4660; flumioxazin + metolachlor + atrazine + MON 4660; flumioxazin + S-metolachlor + atrazine + MON 4660; flumioxazin + metolachlor + terbuthylazine + MON 4660; flumioxazin + S-metolachlor + terbuthylazine + MON 4660; flumioxazin + atrazine + nicosulfuron + MON 4660; fluthiacet-methyl + metolachlor + isoxaflutole + MON 4660; fluthiacet-methyl + S-metolachlor + isoxaflutole + MON 4660; fluthiacet-methyl + metolachlor + mesotrione + MON 4660; fluthiacet-methyl + S-metolachlor + mesotrione + MON 4660; fluthiacet-methyl + metolachlor + atrazine + MON 4660; fluthiacet-methyl + S-metolachlor + atrazine + MON 4660; fluthiacet-methyl + metolachlor + terbuthylazine + MON 4660; fluthiacet-methyl + S-metolachlor + terbuthylazine + MON 4660; fluthiacet-methyl + atrazine + nicosulfuron + MON 4660; oxadiargyl + metolachlor + isoxaflutole + MON 4660; oxadiargyl + S-metolachlor + isoxaflutole + MON 4660; oxadiargyl + metolachlor + mesotrione + MON 4660; oxadiargyl + S-metolachlor + mesotrione + MON 4660; oxadiargyl + metolachlor + atrazine + MON 4660; oxadiargyl + S-metolachlor + atrazine + MON 4660; oxadiargyl + metotachlor + terbuthylazine + MON 4660; oxadiargyl + S-metolachlor + terbuthylazine + MON 4660; oxadiargyl + atrazine + nicosulfuron + MON 4660; oxadiazon + metolachlor + isoxaflutole + MON 4660; oxadiazon + S-metolachlor + isoxaflutole + MON 4660; oxadiazon + metolachlor + mesotrione + MON 4660; oxadiazon + S-metotachlor + mesotrione + MON 4660; oxadiazon + metolachlor + atrazine + MON 4660; oxadiazon + S-metolachlor + atrazine + MON 4660; oxadiazon + metolachlor + terbuthylazine + MON 4660; oxadiazon + S-metolachlor + terbuthylazine + MON 4660; oxadiazon + atrazine + nicosulfuron + MON 4660; pentoxazone + metolachlor + isoxaflutole + MON 4660; pentoxazone + S-metolachlor + isoxaflutole + MON 4660; pentoxazone + metolachlor + mesotrione + MON 4660; pentoxazone + S-metolachlor + mesotrione + MON 4660; pentoxazone + metolachlor + atrazine + MON 4660; pentoxazone + S-metolachlor + atrazine + MON 4660; pentoxazone + metolachlor + terbuthylazine + MON 4660; pentoxazone + S-metolachlor + terbuthylazine + MON 4660; pentoxazone + atrazine + nicosulfuron + MON 4660; sulfentrazone + metolachlor + isoxaflutole + MON 4660; sulfentrazone + S-metolachlor + isoxaflutole + MON 4660; sulfentrazone + metolachlor + mesotrione + MON 4660; sulfentrazone + S-metolachlor + mesotrione + MON 4660; sulfentrazone + metolachlor + atrazine + MON 4660; sulfentrazone + S-metolachlor + atrazine + MON 4660; sulfentrazone + metolachlor + terbuthylazine + MON 4660; sulfentrazone + S-metolachlor + terbuthylazine + MON 4660; sulfentrazone + atrazine + nicosulfuron + MON 4660; fluazolate + metolachlor + isoxaflutole + MON 4660; fluazolate + S-metolachlor + isoxaflutole + MON 4660; fluazolate + metolachlor + mesotrione + MON 4660; fluazolate + S-metolachlor + mesotrione + MON 4660; fluazolate + metolachlor + atrazine + MON 4660; fluazolate + S-metolachlor + atrazine + MON 4660; fluazolate + metolachlor + terbuthylazine + MON 4660; fluazolate + S-metolachlor + terbuthylazine + MON 4660; fluazolate + atrazine + nicosulfuron + MON 4660; pyraflufen-ethyl + metolachlor + isoxaflutole + MON 4660; pyraflufen-ethyl + S-metolachlor + isoxaflutole + MON 4660; pyraflufen-ethyl + metolachlor + mesotrione + MON 4660; pyraflufen-ethyl + S-metolachlor + mesotrione + MON 4660; pyraflufen-ethyl + metolachlor + atrazine + MON 4660; pyraflufen-ethyl + S-metolachlor + atrazine + MON 4660; pyraflufen-ethyl + metolachlor + terbuthylazine + MON 4660; pyraflufen-ethyl + S-metolachlor + terbuthylazine + MON 4660; pyraflufen-ethyl + atrazine + nicosulfuron + MON 4660; flumipropyn + metolachlor + isoxaflutole + MON 4660; flumipropyn + S-metolachlor + isoxaflutole + MON 4660; flumipropyn + metolachlor + mesotrione + MON 4660; flumipropyn + S-metolachlor + mesotrione + MON 4660; flumipropyn + metolachlor + atrazine + MON 4660; flumipropyn + S-metolachlor + atrazine + MON 4660; flumipropyn + metolachlor + terbuthylazine + MON 4660; flumipropyn + S-metolachlor + terbuthylazine + MON 4660; flumipropyn + atrazine + nicosulfuron + MON 4660; flupropacil + metolachlor + isoxaflutole + MON 4660; flupropacil + S-metolachlor + isoxaflutole + MON 4660; flupropacil + metolachlor + mesotrione + MON 4660; flupropacil + S-metolachlor + mesotrione + MON 4660; flupropacil + metolachlor + atrazine + MON 4660; flupropacil + S-metolachlor + atrazine + MON 4660; flupropacil + metolachlor + terbuthylazine + MON 4660; flupropacil + S-metolachlor + terbuthylazine + MON 4660; flupropacil + atrazine + nicosulfuron + MON 4660; nipyraclofen + metolachlor + isoxaflutole + MON 4660; nipyraclofen + S-metolachlor + isoxaflutole + MON 4660; nipyraclofen + metolachlor + mesotrione + MON 4660; nipyraclofen + S-metolachlor + mesotrione + MON 4660; nipyraclofen + metolachlor + atrazine + MON 4660; nipyraclofen + S-metolachlor + atrazine + MON 4660; nipyraclofen + metolachlor + terbuthylazine + MON 4660; nipyraclofen + S-metolachlor + terbuthylazine + MON 4660; nipyraclofen + atrazine + nicosulfuron + MON 4660; benzfendizone + metolachlor + isoxaflutole + MON 4660; benzfendizone + S-metolachlor + isoxaflutole + MON 4660; benzfendizone + metolachlor + mesotrione + MON 4660; benzfendizone + S-metolachlor + mesotrione + MON 4660; benzfendizone + metolachlor + atrazine + MON 4660; benzfendizone + S-metolachlor + atrazine + MON 4660; benzfendizone + metolachlor + terbuthylazine + MON 4660; benzfendizone + S-metolachlor + terbuthylazine + MON 4660; benzfendizone + atrazine + nicosulfuron + MON 4660; thidiazimin + metolachlor + isoxaflGtote + MON 4660; thidiazimin + S-metolachlor + isoxaflutole + MON 4660; thidiazimin + metolachlor + mesotrione + MON 4660; thidiazimin + S-metolachlor + mesotrione + MON 4660; thidiazimin + metolachlor + atrazine + MON 4660; thidiazimin + S-metolachlor + atrazine + MON 4660; thidiazimin + metolachlor + terbuthylazine + MON 4660; thidiazimin + S-metolachlor + terbuthylazine + MON 4660; and thidiazimin + atrazine + nicosulfuron + MON 4660.

Acifluorfen + metolachlor + isoxaflutole + FLURAZOLE; acifluorfen + S-metolachlor + isoxaflutole + FLURAZOLE; acifluorfen + metolachlor + mesotrione + FLURAZOLE; acifluorfen + S-metolachior + mesotrione + FLURAZOLE; acifluorfen + metolachlor + atrazine + FLURAZOLE; acifluorfen + S-metolachlor + atrazine + FLURAZOLE; acifluorfen + metolachlor + terbuthylazine + FLURAZOLE; acifluorfen + S-metolachlor + terbuthylazine + FLURAZOLE; acifluorfen + atrazine + nicosulfuron + FLURAZOLE; aclonifen + metolachlor + isoxaflutole + FLURAZOLE; aclonifen + S-metolachlor + isoxaflutole + FLURAZOLE; aclonifen + metolachlor + mesotrione + FLURAZOLE; aclonifen + S-metolachlor + mesotrione + FLURAZOLE; aclonifen + metolachlor + atrazine + FLURAZOLE; aclonifen + S-metolachlor + atrazine + FLURAZOLE; aclonifen + metolachlor + terbuthylazine + FLURAZOLE; aclonifen + S-metolachlor + terbuthylazine + FLURAZOLE; aclonifen + atrazine + nicosulfuron + FLURAZOLE; bifenox + metolachlor + isoxaflutole + FLURAZOLE; bifenox + S-metolachlor + isoxaflutole + FLURAZOLE; bifenox + metolachlor + mesotrione + FLURAZOLE; bifenox + S-metolachlor + mesotrione + FLURAZOLE; bifenox + metolachlor + atrazine + FLURAZOLE; bifenox + S-metolachlor + atrazine + FLURAZOLE; bifenox + metolachlor + terbuthylazine + FLURAZOLE; bifenox + S-metolachlor + terbuthylazine + FLURAZOLE; bifenox + atrazine + nicosulfuron + FLURAZOLE; chlornitrofen + metolachlor + isoxaflutole + FLURAZOLE; chlornitrofen + S-metolachlor + isoxaflutole + FLURAZOLE; chlornitrofen + metolachlor + mesotrione + FLURAZOLE; chlornitrofen + S-metolachlor + mesotrione + FLURAZOLE; chlornitrofen + metolachlor + atrazine + FLURAZOLE; chlornitrofen + S-metolachlor + atrazine + FLURAZOLE; chlornitrofen + metolachlor + terbuthylazine + FLURAZOLE; chlornitrofen + S-metolachlor + terbuthylazine + FLURAZOLE; chlornitrofen + atrazine + nicosulfuron + FLURAZOLE; ethoxyfen + metolachlor + isoxaflutole + FLURAZOLE; ethoxyfen + S-metolachlor + isoxaflutole + FLURAZOLE; ethoxyfen + metolachlor + mesotrione + FLURAZOLE; ethoxyfen + S-metolachlor + mesotrione + FLURAZOLE; ethoxyfen + metolachlor + atrazine + FLURAZOLE; ethoxyfen + S-metolachlor + atrazine + FLURAZOLE; ethoxyfen + metolachlor + terbuthylazine + FLURAZOLE; ethoxyfen + S-metolachlor + terbuthylazine + FLURAZOLE; ethoxyfen + atrazine + nicosulfuron + FLURAZOLE; fluoroglycofen + metolachlor + isoxaflutole + FLURAZOLE; fluoroglycofen + S-metolachlor + isoxaflutole + FLURAZOLE; fluoroglycofen + metolachlor + mesotrione + FLURAZOLE; fluoroglycofen + S-metolachlor + mesotrione + FLURAZOLE; fluoroglycofen + metolachlor + atrazine + FLURAZOLE; fluoroglycofen + S-metolachlor + atrazine + FLURAZOLE; fluoroglycofen + metolachlor + terbuthylazine + FLURAZOLE; fluoroglycofen + S-metolachlor + terbuthylazine + FLURAZOLE; fluoroglycofen + atrazine + nicosulfuron + FLURAZOLE; fomesafen + metolachlor + isoxaflutole + FLURAZOLE; fomesafen + S-metolachlor + isoxaflutole + FLURAZOLE; fomesafen + metolachlor + mesotrione + FLURAZOLE; fomesafen + S-metolachlor + mesotrione + FLURAZOLE; fomesafen + metolachlor + atrazine + FLURAZOLE; fomesafen + S-metolachlor + atrazine + FLURAZOLE; fomesafen + metolachlor + terbuthylazine + FLURAZOLE; fomesafen + S-metolachlor + terbuthylazine + FLURAZOLE; fomesafen + atrazine + nicosulfuron + FLURAZOLE; lactofen + metolachlor + isoxaflutole + FLURAZOLE; lactofen + S-metolachlor + isoxaflutole + FLURAZOLE; lactofen + metolachlor + mesotrione + FLURAZOLE; lactofen + S-metolachlor + mesotrione + FLURAZOLE; lactofen + metolachlor + atrazine + FLURAZOLE; lactofen + S-metolachlor + atrazine + FLURAZOLE; lactofen + metolachlor + terbuthylazine + FLURAZOLE; lactofen + S-metolachlor + terbuthylazine + FLURAZOLE; lactofen + atrazine + nicosulfuron + FLURAZOLE; oxyfluorfen + metolachlor + isoxaflutole + FLURAZOLE; oxyfluorfen + S-metolachlor + isoxaflutole + FLURAZOLE; oxyfluorfen + metolachlor + mesotrione + FLURAZOLE; oxyfluorfen + S-metolachlor + mesotrione + FLURAZOLE; oxyfluorfen + metolachlor + atrazine + FLURAZOLE; oxyfluorfen + S-metolachlor + atrazine + FLURAZOLE; oxyfluorfen + metolachlor + terbuthylazine + FLURAZOLE; oxyfluorfen + S-metolachlor + terbuthylazine + FLURAZOLE; oxyfluorfen + atrazine + nicosulfuron + FLURAZOLE; azafenidin + metolachlor + isoxaflutole + FLURAZOLE; azafenidin + S-metolachlor + isoxaflutole + FLURAZOLE; azafenidin + metolachlor + mesotrione + FLURAZOLE; azafenidin + S-metolacotrione + FLURAZOLE; azafenidin + metolachlor + atrazine + FLURAZOLE; azafenidin + S-metolachlor + atrazine + FLURAZOLE; azafenidin + metolachlor + terbuthylazine + FLURAZOLE; azafenidin + S-metolachlor + terbuthylazine + FLURAZOLE; azafenidin + atrazine + nicosulfuron + FLURAZOLE; carfentrazone-ethyl + metolachlor + isoxaflutole + FLURAZOLE; carfentrazone-ethyl + S-metolachlor + isoxaflutole + FLURAZOLE; carfentrazone-ethyl + metolachlor + mesotrione + FLURAZOLE; carfentrazone-ethyl + S-metolachlor + mesotrione + FLURAZOLE; carfentrazone-ethyl + metolachlor + atrazine + FLURAZOLE; carfentrazone-ethyl + S-metolachlor + atrazine + FLURAZOLE; carfentrazone-ethyl + metolachlor + terbuthylazine + FLURAZOLE; carfentrazone-ethyl + S-metolachlor + terbuthylazine + FLURAZOLE; carfentrazone-ethyl + atrazine + nicosulfuron + FLURAZOLE; compounds of the formula A + metolachlor + isoxaflutole + FLURAZOLE; compounds of the formula A + S-metolachlor + isoxaflutole + FLURAZOLE; compounds of the formula A + metolachlor + mesotrione + FLURAZOLE; compounds of the formula A + S-metolachlor + mesotrione + FLURAZOLE; compounds of the formula A + metolachlor + atrazine + FLURAZOLE; compounds of the formula A + S-metolachlor + atrazine + FLURAZOLE; compounds of the formula A + metolachlor + terbuthylazine + FLURAZOLE; compounds of the formula A + S-metolachlor + terbuthylazine + FLURAZOLE; compounds of the formula A + atrazine + nicosulfuron + FLURAZOLE; cinidon-ethyl + metolachlor + isoxaflutole + FLURAZOLE; cinidon-ethyl + S-metolachlor + isoxaflutole + FLURAZOLE; cinidon-ethyl + metolachlor + mesotrione + FLURAZOLE; cinidon-ethyl + S-metolachlor + mesotrione + FLURAZOLE; cinidon-ethyl + metolachlor + atrazine + FLURAZOLE; cinidon-ethyl + S-metolachlor + atrazine + FLURAZOLE; cinidon-ethyl + metolachlor + terbuthylazine + FLURAZOLE; cinidon-ethyl + S-metolachlor + terbuthylazine + FLURAZOLE; cinidon-ethyl + atrazine + nicosulfuron + FLURAZOLE; flumiclorac-pentyl + metolachlor + isoxaflutole + FLURAZOLE; flumiclorac-pentyl + S-metolachlor + isoxaflutole + FLURAZOLE; flumiclorac-pentyl + metolachlor + mesotrione + FLURAZOLE; flumiclorac-pentyl + S-metolachlor + mesotrione + FLURAZOLE; flumiclorac-pentyl + metolachlor + atrazine + FLURAZOLE; flumiclorac-pentyl + S-metolachlor + atrazine + FLURAZOLE; flumiclorac-pentyl + metolachlor + terbuthylazine + FLURAZOLE; flumiclorac-pentyl + S-metolachlor + terbuthylazine + FLURAZOLE; flumiclorac-pentyl + atrazine + nicosulfuron + FLURAZOLE; flumioxazin + metolachlor + isoxaflutole + FLURAZOLE; flumioxazin + S-metolachlor + isoxaflutole + FLURAZOLE; flumioxazin + metolachlor + mesotrione + FLURAZOLE; flumioxazin + S-metolachlor + mesotrione + FLURAZOLE; flumioxazin + metolachlor + atrazine + FLURAZOLE; flumioxazin + S-metolachlor + atrazine + FLURAZOLE; flumioxazin + metolachlor + terbuthylazine + FLURAZOLE; flumioxazin + S-metolachlor + terbuthylazine + FLURAZOLE; flumioxazin + atrazine + nicosulfuron + FLURAZOLE; fluthiacet-methyl + metolachlor + isoxaflutole + FLURAZOLE; fluthiacet-methyl + S-metolachlor + isoxaflutole + FLURAZOLE; fluthiacet-methyl + metolachlor + mesotrione + FLURAZOLE; fluthiacet-methyl + S-metolachlor + mesotrione + FLURAZOLE; fluthiacet-methyl + metolachlor + atrazine + FLURAZOLE; fluthiacet-methyl + S-metolachlor + atrazine + FLURAZOLE; fluthiacet-methyl + metolachlor + terbuthylazine + FLURAZOLE; fluthiacet-methyl + S-metolachlor + terbuthylazine + FLURAZOLE; fluthiacet-methyl + atrazine + nicosulfuron + FLURAZOLE; oxadiargyl + metolachlor + isoxaflutole + FLURAZOLE; oxadiargyl + S-metolachlor + isoxaflutole + FLURAZOLE; oxadiargyl + metolachlor + mesotrione + FLURAZOLE; oxadiargyl + S-metolachlor + mesotrione + FLURAZOLE; oxadiargyl + metolachlor + atrazine + FLURAZOLE; oxadiargyl + S-metolachlor + atrazine + FLURAZOLE; oxadiargyl + metolachlor + terbuthylazine + FLURAZOLE; oxadiargyl + S-metolachlor + terbuthylazine + FLURAZOLE; oxadiargyl + atrazine + nicosulfuron + FLURAZOLE; oxadiazon + metolachlor + isoxaflutole + FLURAZOLE; oxadiazon + S-metolachlor + isoxaflutole + FLURAZOLE; oxadiazon + metolachlor + mesotrione + FLURAZOLE; oxadiazon + S-metolachlor + mesotrione + FLURAZOLE; oxadiazon + metolachlor + atrazine + FLURAZOLE; oxadiazon + S-metolachlor + atrazine + FLURAZOLE; oxadiazon + metolachlor + terbuthylazine + FLURAZOLE; oxadiazon + S-metolachlor + terbuthylazine + FLURAZOLE; oxadiazon + atrazine + nicosulfuron + FLURAZOLE; pentoxazone + metolachlor + isoxaflutole + FLURAZOLE; pentoxazone + S-metolachlor + isoxaflutole + FLURAZOLE; pentoxazone + metolachlor + mesotrione + FLURAZOLE; pentoxazone + S-metolachlor + mesotrione + FLURAZOLE; pentoxazone + metolachlor + atrazine + FLURAZOLE; pentoxazone + S-metolachlor + atrazine + FLURAZOLE; pentoxazone + metolachlor + terbuthylazine + FLURAZOLE; pentoxazone + S-metolachlor + terbuthylazine + FLURAZOLE; pentoxazone + atrazine + nicosulfuron + FLURAZOLE; sulfentrazone + metolachlor + isoxaflutole + FLURAZOLE; sulfentrazone + S-metolachlor + isoxaflutole + FLURAZOLE; sulfentrazone + metolachlor + mesotrione + FLURAZOLE; sulfentrazone + S-metolachlor + mesotrione + FLURAZOLE; sulfentrazone + metolachlor + atrazine + FLURAZOLE; sulfentrazone + S-metolachlor + atrazine + FLURAZOLE; sulfentrazone + metolachlor + terbuthylazine + FLURAZOLE; sulfentrazone + S-metolachlor + terbuthylazine + FLURAZOLE; sulfentrazone + atrazine + nicosulfuron + FLURAZOLE; fluazolate + metolachlor + isoxaflutole + FLURAZOLE; fluazolate + S-metolachlor + isoxaflutole + FLURAZOLE; fluazolate + metolachlor + mesotrione + FLURAZOLE; fluazolate + S-metolachlor + mesotrione + FLURAZOLE; fluazolate + metolachlor + atrazine + FLURAZOLE; fluazolate + S-metolachlor + atrazine + FLURAZOLE; fluazolate + metolachlor + terbuthylazine + FLURAZOLE; fluazolate + S-metolachlor + terbuthylazine + FLURAZOLE; fluazolate + atrazine + nicosulfuron + FLURAZOLE; pyraflufen-ethyl + metolachlor + isoxaflutole + FLURAZOLE; pyraflufen-ethyl + S-metolachlor + isoxaflutole + FLURAZOLE; pyraflufen-ethyl + metolachlor + mesotrione + FLURAZOLE; pyraflufen-ethyl + S-metolachlor + mesotrione + FLURAZOLE; pyraflufen-ethyl + metolachlor + atrazine + FLURAZOLE; pyraflufen-ethyl + S-metolachlor + atrazine + FLURAZOLE; pyraflufen-ethyl + metolachlor + terbuthylazine + FLURAZOLE; pyraflufen-ethyl + S-metolachlor + terbuthylazine + FLURAZOLE; pyraflufen-ethyl + atrazine + nicosulfuron + FLURAZOLE; flumipropyn + metolachlor + isoxaflutole + FLURAZOLE; flumipropyn + S-metolachlor + isoxaflutole + FLURAZOLE; flumipropyn + metolachlor + mesotrione + FLURAZOLE; flumipropyn + S-metolachlor + mesotrione + FLURAZOLE; flumipropyn + metolachlor + atrazine + FLURAZOLE; flumipropyn + S-metolachlor + atrazine + FLURAZOLE; flumipropyn + metolachlor + terbuthylazine + FLURAZOLE; flumipropyn + S-metolachlor + terbuthylazine + FLURAZOLE; flumipropyn + atrazine + nicosulfuron + FLURAZOLE; flupropacil + metolachlor + isoxaflutole + FLURAZOLE; flupropacil + S-metolachlor + isoxaflutole + FLURAZOLE; flupropacil + metolachlor + mesotrione + FLURAZOLE; flupropacil + S-metolachlor + mesotrione + FLURAZOLE; flupropacil + metolachlor + atrazine + FLURAZOLE; flupropacil + S-metolachlor + atrazine + FLURAZOLE; flupropacil + metolachlor + terbuthylazine + FLURAZOLE; flupropacil + S-metolachlor + terbuthylazine + FLURAZOLE; flupropacil + atrazine + nicosulfuron + FLURAZOLE; nipyraclofen + metolachlor + isoxaflutole + FLURAZOLE; nipyraclofen + S-metolachlor + isoxaflutole + FLURAZOLE; nipyraclofen + metolachlor + mesotrione + FLURAZOLE; nipyraclofen + S-metolachlor + mesotrione + FLURAZOLE; nipyraclofen + metolachlor + atrazine + FLURAZOLE; nipyraclofen + S-metolachlor + atrazine + FLURAZOLE; nipyraclofen + metolachlor + terbuthylazine + FLURAZOLE; nipyraclofen + S-metolachlor + terbuthylazine + FLURAZOLE; nipyraclofen + atrazine + nicosulfuron + FLURAZOLE; benzfendizone + metolachlor + isoxaflutole + FLURAZOLE; benzfendizone + S-metolachlor + isoxaflutole + FLURAZOLE; benzfendizone + metolachlor + mesotrione + FLURAZOLE; benzfendizone + S-metolachlor + mesotrione + FLURAZOLE; benzfendizone + metolachlor + atrazine + FLURAZOLE; benzfendizone + S-metolachlor + atrazine + FLURAZOLE; benzfendizone + metolachlor + terbuthylazine + FLURAZOLE; benzfendizone + S-metolachlor + terbuthylazine + FLURAZOLE; benzfendizone + atrazine + nicosulfuron + FLURAZOLE; thidiazimin + metolachlor + isoxaflutole + FLURAZOLE; thidiazimin + S-metolachlor + isoxaflutole + FLURAZOLE; thidiazimin + metolachlor + mesotrione + FLURAZOLE; thidiazimin + S-metolachlor + mesotrione + FLURAZOLE; thidiazimin + metotachlor + atrazine + FLURAZOLE; thidiazimin + S-metolachlor + atrazine + FLURAZOLE; thidiazimin + metolachlor + terbuthylazine + FLURAZOLE; thidiazimin + S-metolachlor + terbuthylazine + FLURAZOLE; and thidiazimin + atrazine + nicosulfuron + FLURAZOLE.

Acifluorfen + metolachlor + isoxaflutole + DICHLORMID; acifluorfen + S-metolachlor + isoxaflutole + DICHLORMID; acifluorfen + metolachlor + mesotrione + DICHLORMID; acifluorfen + S-metolachlor + mesotrione + DICHLORMID; acifluorfen + metolachlor + atrazine + DICHLORMID; acifluorfen + S-metolachlor + atrazine + DICHLORMID; acifluorfen + metolachlor + terbuthylazine + DICHLORMID; acifluorfen + S-metolachlor + terbuthylazine + DICHLORMID; acifluorfen + atrazine + nicosulfuron + DICHLORMID; aclonifen + metolachlor + isoxaflutole + DICHLORMID; aclonifen + S-metolachlor + isoxaflutole + DICHLORMID; aclonifen + metolachlor + mesotrione + DICHLORMID; aclonifen + S-metotachtor + mesotrione + DICHLORMID; aclonifen + metolachlor + atrazine + DICHLORMID; aclonifen + S-metolachlor + atrazine + DICHLORMID; aclonifen + metolachlor + terbuthylazine + DICHLORMID; aclonifen + S-metolachlor + terbuthylazine + DICHLORMID; aclonifen + atrazine + nicosulfuron + DICHLORMID; bifenox + metolachlor + isoxaflutole + DICHLORMID; bifenox + S-metolachlor + isoxaflutole + DICHLORMID; bifenox + metolachlor + mesotrione + DICHLORMID; bifenox + S-metolachlor + mesotrione + DICHLORMID; bifenox + metolachlor + atrazine + DICHLORMID; bifenox + S-metolachlor + atrazine + DICHLORMID; bifenox + metolachlor + terbuthylazine + DICHLORMID; bifenox + S-metolachlor + terbuthylazine + DICHLORMID; bifenox + atrazine + nicosulfuron + DICHLORMID; chlornitrofen + metolachlor + isoxaflutole + DICHLORMID; chlornitrofen + S-metolachlor + isoxaflutole + DICHLORMID; chlornitrofen + metolachlor + mesotrione + DICHLORMID; chlornitrofen + S-metolachlor + mesotrione + DICHLORMID; chlornitrofen + metolachlor + atrazine + DICHLORMID; chlornitrofen + S-metolachlor + atrazine + DICHLORMID; chlornitrofen + metolachlor + terbuthylazine + DICHLORMID; chlornitrofen + S-metolachlor + terbuthylazine + DICHLORMID; chlornitrofen + atrazine + nicosulfuron + DICHLORMID; ethoxyfen + metolachlor + isoxaflutole + DICHLORMID; ethoxyfen + S-metolachlor + isoxaflutole + DICHLORMID; ethoxyfen + metolachlor + mesotrione + DICHLORMID; ethoxyfen + S-metolachlor + mesotrione + DICHLORMID; ethoxyfen + metotachlor + atrazine + DICHLORMID; ethoxyfen + S-metolachlor + atrazine + DICHLORMID; ethoxyfen + metolachlor + terbuthylazine + DICHLORMID; ethoxyfen + S-metolachlor + terbuthylazine + DICHLORMID; ethoxyfen + atrazine + nicosulfuron + DICHLORMID; fluoroglycofen + metolachlor + isoxaflutole + DICHLORMID; fluoroglycofen + S-metolachlor + isoxaflutole + DICHLORMID; fluoroglycofen + metolachlor + mesotrione + DICHLORMID; fluoroglycofen + S-metolachlor + mesotrione + DICHLORMID; fluoroglycofen + metolachlor + atrazine + DICHLORMID; fluoroglycofen + S-metolachlor + atrazine + DICHLORMID; fluoroglycofen + metolachlor + terbuthylazine + DICHLORMID; fluoroglycofen + S-metolachlor + terbuthylazine + DICHLORMID; fluoroglycofen + atrazine + nicosulfuron + DICHLORMID; fomesafen + metolachlor + isoxaflutole + DICHLORMID; fomesafen + S-metolachlor + isoxaflutole + DICHLORMID; fomesafen + metolachlor + mesotrione + DICHLORMID; fomesafen + S-metolachlor + mesotrione + DICHLORMID; fomesafen + metolachlor + atrazine + DICHLORMID; fomesafen + S-metolachlor + atrazine + DICHLORMID; fomesafen + metolachlor + terbuthylazine + DICHLORMID; fomesafen + S-metolachlor + terbuthylazine + DICHLORMID; fomesafen + atrazine + nicosulfuron + DICHLORMID; lactofen + metolachlor + isoxaflutole + DICHLORMID; lactofen + S-metolachlor + isoxaflutole + DICHLORMID; lactofen + metolachlor + mesotrione + DICHLORMID; lactofen + S-metolachlor + mesotrione + DICHLORMID; lactofen + metolachlor + atrazine + DICHLORMID; lactofen + S-metolachlor + atrazine + DICHLORMID; lactofen + metolachlor + terbuthylazine + DICHLORMID; lactofen + S-metolachlor + terbuthylazine + DICHLORMID; lactofen + atrazine + nicosulfuron + DICHLORMID; oxyfluorfen + metolachlor + isoxaflutole + DICHLORMID; oxyfluorfen + S-metolachlor + isoxaflutole + DICHLORMID; oxyfluorfen + metolachlor + mesotrione + DICHLORMID; oxyfluorfen + S-metolachlor + mesotrione + DICHLORMID; oxyfluorfen + metolachlor + atrazine + DICHLORMID; oxyfluorfen + S-metolachlor + atrazine + DICHLORMID; oxyfluorfen + metolachlor + terbuthylazine + DICHLORMID; oxyfluorfen + S-metolachlor + terbuthylazine + DICHLORMID; oxyfluorfen + atrazine + nicosulfuron + DICHLORMID; azafenidin + metolachlor + isoxaflutole + DICHLORMID; azafenidin + S-metolachlor + isoxaflutole + DICHLORMID; azafenidin + metolachlor + mesotrione + DICHLORMID; azafenidin + S-metolachlor + mesotrione + DICHLORMID; azafenidin + metolachlor + atrazine + DICHLORMID; azafenidin + S-metolachlor + atrazine + DICHLORMID; azafenidin + metolachlor + terbuthylazine + DICHLORMID; azafenidin + S-metolachlor + terbuthylazine + DICHLORMID; azafenidin + atrazine + nicosulfuron + DICHLORMID; carfentrazone-ethyl + metolachlor + isoxaflutole + DICHLORMID; carfentrazone-ethyl + S-metolachlor + isoxaflutole + DICHLORMID; carfentrazone-ethyl + metolachlor + mesotrione + DICHLORMID; carfentrazone-ethyl + S-metolachlor + mesotrione + DICHLORMID; carfentrazone-ethyl + metolachlor + atrazine + DICHLORMID; carfentrazone-ethyl + S-metolachlor + atrazine + DICHLORMID; carfentrazone-ethyl + metolachlor + terbuthylazine + DICHLORMID; carfentrazone-ethyl + S-metolachlor + terbuthylazine + DICHLORMID; carfentrazone-ethyl + atrazine + nicosulfuron + DICHLORMID; compound of the formula A + metolachlor + isoxaflutole + DICHLORMID; compound of the formula A + S-metolachlor + isoxaflutole + DICHLORMID; compound of the formula A + metolachlor + mesotrione + DICHLORMID; compound of the formula A + S-metolachlor + mesotrione + DICHLORMID; compound of the formula A + metolachlor + atrazine + DICHLORMID; compound of the formula A + S-metolachlor + atrazine + DICHLORMID; compound of the formula A + metolachlor + terbuthylazine + DICHLORMID; compound of the formula A + S-metolachlor + terbuthylazine + DICHLORMID; compound of the formula A + atrazine + nicosulfuron + DICHLORMID; cinidon-ethyl + metolachlor + isoxaflutole + DICHLORMID; cinidon-ethyl + S-metolachlor + isoxaflutole + DICHLORMID; cinidon-ethyl + metolachlor + mesotrione + DICHLORMID; cinidon-ethyl + S-metolachlor + mesotrione + DICHLORMID; cinidon-ethyl + metolachlor + atrazine + DICHLORMID; cinidon-ethyl + S-metolachlor + atrazine + DICHLORMID; cinidon-ethyl + metolachlor + terbuthylazine + DICHLORMID; cinidon-ethyl + S-metolachlor + terbuthylazine + DICHLORMID; cinidon-ethyl + atrazine + nicosulfuron + DICHLORMID; flumiclorac-pentyl + metolachlor + isoxaflutole + DICHLORMID; flumiclorac-pentyl + S-metolachlor + isoxaflutole + DICHLORMID; flumiclorac-pentyl + metolachlor + mesotrione + DICHLORMID; flumiclorac-pentyl + S-metolachlor + mesotrione + DICHLORMID; flumiclorac-pentyl + metolachlor + atrazine + DICHLORMID; flumiclorac-pentyl + S-metolachlor + atrazine + DICHLORMID; flumiclorac-pentyl + metolachlor + terbuthylazine + DICHLORMID; flumiclorac-pentyl + S-metolachlor + terbuthylazine + DICHLORMID; flumiclorac-pentyl + atrazine + nicosulfuron + DICHLORMID; flumioxazin + metolachlor + isoxaflutole + DICHLORMID; flumioxazin + S-metolachlor + isoxaflutole + DICHLORMID; flumioxazin + metolachlor + mesotrione + DICHLORMID; flumioxazin + S-metolachlor + mesotrione + DICHLORMID; flumioxazin + metolachlor + atrazine + DICHLORMID; flumioxazin + S-metolachlor + atrazine + DICHLORMID; flumioxazin + metolachlor + terbuthylazine + DICHLORMID; flumioxazin + S-metolachlor + terbuthylazine + DICHLORMID; flumloxazin + atrazine + nicosulfuron + DICHLORMID; fluthiacet-methyl + metolachlor + isoxaflutole + DICHLORMID; fluthiacet-methyl + S-metolachlor + isoxaflutole + DICHLORMID; fluthiacet-methyl + metolachlor + mesotrione + DICHLORMID; fluthiacet-methyl + S-metolachlor + mesotrione + DICHLORMID; fluthiacet-methyl + metolachlor + atrazine + DICHLORMID; fluthiacet-methyl + S-metolachlor + atrazine + DICHLORMID; fluthiacet-methyl + metolachlor + terbuthylazine + DICHLORMID; fluthiacet-methyl + S-metolachlor + terbuthylazine + DICHLORMID; fluthiacet-methyl + atrazine + nicosulfuron + DICHLORMID; oxadiargyl + metolachlor + isoxaflutole + DICHLORMID; oxadiargyl + S-metolachlor + isoxaflutole + DICHLORMID; oxadiargyl + metolachlor + mesotrione + DICHLORMID; oxadiargyl + S-metolachlor + mesotrione + DICHLORMID; oxadiargyl + metolachlor + atrazine + DICHLORMID; oxadiargyl + S-metolachlor + atrazine + DICHLORMID; oxadiargyl + metolachlor + terbuthylazine + DICHLORMID; oxadiargyl + S-metolachlor + terbuthylazine + DICHLORMID; oxadiargyl + atrazine + nicosulfuron + DICHLORMID; oxadiazon + metolachlor + isoxaflutole + DICHLORMID; oxadiazon + S-metolachlor + isoxaflutole + DICHLORMID; oxadiazon + metolachlor + mesotrione + DICHLORMID; oxadiazon + S-metolachlor + mesotrione + DICHLORMID; oxadiazon + metolachlor + atrazine + DICHLORMID; oxadiazon + S-metolachlor + atrazine + DICHLORMID; oxadiazon + metolachlor + terbuthylazine + DICHLORMID; oxadiazon + S-metolachlor + terbuthylazine + DICHLORMID; oxadiazon + atrazine + nicosulfuron + DICHLORMID; pentoxazone + metolachlor + isoxaflutole + DICHLORMID; pentoxazone + S-metolachlor + isoxaflutole + DICHLORMID; pentoxazone + metolachlor + mesotrione + DICHLORMID; pentoxazone + S-metolachlor + mesotrione + DICHLORMID; pentoxazone + metolachlor + atrazine + DICHLORMID; pentoxazone + S-metolachlor + atrazine + DICHLORMID; pentoxazone + metolachlor + terbuthylazine + DICHLORMID; pentoxazone + S-metolachlor + terbuthylazine + DICHLORMID; pentoxazone + atrazine + nicosulfuron + DICHLORMID; sulfentrazone + metolachlor + isoxaflutole + DICHLORMID; sulfentrazone + S-metolachlor + isoxaflutole + DICHLORMID; sulfentrazone + metolachlor + mesotrione + DICHLORMID; sulfentrazone + S-metolachlor + mesotrione + DICHLORMID; sulfentrazone + metolachlor + atrazine + DICHLORMID; sulfentrazone + S-metolachlor + atrazine + DICHLORMID; sulfentrazone + metolachlor + terbuthylazine + DICHLORMID; sulfentrazone + S-metolachlor + terbuthylazine + DICHLORMID; sulfentrazone + atrazine + nicosulfuron + DICHLORMID; fluazolate + metolachlor + isoxaflutole + DICHLORMID; fluazolate + S-metolachlor + isoxaflutole + DICHLORMID; fluazolate + metolachlor + mesotrione + DICHLORMID; fluazolate + S-metolachlor + mesotrione + DICHLORMID; fluazolate + metolachlor + atrazine + DICHLORMID; fluazolate + S-metolachlor + atrazine + DICHLORMID; fluazolate + metolachlor + terbuthylazine + DICHLORMID; fluazolate + S-metolachlor + terbuthylazine + DICHLORMID; fluazolate + atrazine + nicosulfuron + DICHLORMID; pyraflufen-ethyl + metolachlor + isoxaflutole + DICHLORMID; pyraflufen-ethyl + S-metolachlor + isoxaflutole + DICHLORMID; pyraflufen-ethyl + metolachlor + mesotrione + DICHLORMID; pyraflufen-ethyl + S-metolachlor + mesotrione + DICHLORMID; pyraflufen-ethyl + metolachlor + atrazine + DICHLORMID; pyraflufen-ethyl + S-metolachlor + atrazine + DICHLORMID; pyraflufen-ethyl + metolachlor + terbuthylazine + DICHLORMID; pyraflufen-ethyl + S-metolachlor + terbuthylazine + DICHLORMID; pyraflufen-ethyl + atrazine + nicosulfuron + DICHLORMID; flumipropyn + metolachlor + isoxaflutole + DICHLORMID; flumipropyn + S-metolachlor + isoxaflutole + DICHLORMID; flumipropyn + metolachlor + mesotrione + DICHLORMID; flumipropyn + S-metolachlor + mesotrione + DICHLORMID; flumipropyn + metolachlor + atrazine + DICHLORMID; flumipropyn + S-metolachlor + atrazine + DICHLORMID; flumipropyn + metolachlor + terbuthylazine + DICHLORMID; flumipropyn + S-metolachlor + terbuthylazine + DICHLORMID; flumipropyn + atrazine + nicosulfuron + DICHLORMID; flupropacil + metolachlor + isoxaflutole + DICHLORMID; flupropacil + S-metolachlor + isoxaflutole + DICHLORMID; flupropacil + metolachlor + mesotrione + DICHLORMID; flupropacil + S-metolachlor + mesotrione + DICHLORMID; flupropacil + metolachlor + atrazine + DICHLORMID; flupropacil + S-metolachlor + atrazine + DICHLORMID; flupropacil + metolachlor + terbuthylazine + DICHLORMID; flupropacil + S-metolachlor + terbuthylazine + DICHLORMID; flupropacil + atrazine + nicosulfuron + DICHLORMID; nipyraclofen + metolachlor + isoxaflutole + DICHLORMID; nipyraclofen + S-metolachlor + isoxaflutole + DICHLORMID; nipyraclofen + metolachlor + mesotrione + DICHLORMID; nipyraclofen + S-metolachlor + mesotrione + DICHLORMID; nipyraclofen + metolachlor + atrazine + DICHLORMID; nipyraclofen + S-metolachlor + atrazine + DICHLORMID; nipyraclofen + metolachlor + terbuthylazine + DICHLORMID; nipyraclofen + S-metolachlor + terbuthylazine + DICHLORMID; nipyraclofen + atrazine + nicosulfuron + DICHLORMID; benzfendizone + metolachlor + isoxaflutole + DICHLORMID; benzfendizone + S-metolachlor + isoxaflutole + DICHLORMID; benzfendizone + metolachlor + mesotrione + DICHLORMID; benzfendizone + S-metolachlor + mesotrione + DICHLORMID; benzfendizone + metolachlor + atrazine + DICHLORMID; benzfendizone + S-metolachlor + atrazine + DICHLORMID; benzfendizone + metolachlor + terbuthylazine + DICHLORMID; benzfendizone + S-metolachlor + terbuthylazine + DICHLORMID; benzfendizone + atrazine + nicosulfuron + DICHLORMID; thidiazimin + metolachlor + isoxaflutole + DICHLORMID; thidiazimin + S-metolachlor + isoxaflutole + DICHLORMID; thidiazimin + metolachlor + mesotrione + DICHLORMID; thidiazimin + S-metolachlor + mesotrione + DICHLORMID; thidiazimin + metolachlor + atrazine + DICHLORMID; thidiazimin + S-metolachlor + atrazine + DICHLORMID; thidiazimin + metolachlor + terbuthylazine + DICHLORMID; thidiazimin + S-metolachlor + terbuthylazine + DICHLORMID; and thidiazimin + atrazine + nicosulfuron + DICHLORMID.

Acifluorfen + metolachlor + isoxaflutole + FURILAZOLE; acifluorfen + S-metolachlor + isoxaflutole + FURILAZOLE; acifluorfen + metolachlor + mesotrione + FURILAZOLE; acifluorfen + S-metolachlor + mesotrione + FURILAZOLE; acifluorfen + metolachlor + atrazine + FURILAZOLE; acifluorfen + S-metolachlor + atrazine + FURILAZOLE; acifluorfen + metolachlor + terbuthylazine + FURILAZOLE; acifluorfen + S-metolachlor + terbuthylazine + FURILAZOLE; acifluorfen + atrazine + nicosulfuron + FURILAZOLE; aclonifen + metotachlor + isoxaflutole + FURILAZOLE; aclonifen + S-metolachlor + isoxaflutole + FURILAZOLE; aclonifen + metolachlor + mesotrione + FURILAZOLE; aclonifen + S-metolachlor + mesotrione + FURILAZOLE; aclonifen + metolachlor + atrazine + FURILAZOLE; aclonifen + S-metolachlor + atrazine + FURILAZOLE; aclonifen + metolachlor + terbuthylazine + FURILAZOLE; aclonifen + S-metolachlor + terbuthylazine + FURILAZOLE; aclonifen + atrazine + nicosulfuron + FURILAZOLE; bifenox + metolachlor + isoxaflutole + FURILAZOLE; bifenox + S-metolachlor + isoxaflutole + FURILAZOLE; bifenox + metolachlor + mesotrione + FURILAZOLE; bifenox + S-metolachlor + mesotrione + FURILAZOLE; bifenox + metolachlor + atrazine + FURILAZOLE; bifenox + S-metolachlor + atrazine + FURILAZOLE; bifenox + metolachlor + terbuthylazine + FURILAZOLE; bifenox + S-metolachlor + terbuthylazine + FURILAZOLE; bifenox + atrazine + nicosulfuron + FURILAZOLE; chlornitrofen + metolachlor + isoxaflutole + FURILAZOLE; chlornitrofen + S-metolachlor + isoxaflutole + FURILAZOLE; chlornitrofen + metolachlor + mesotrione + FURILAZOLE; chlornitrofen + S-metolachlor + mesotrione + FURILAZOLE; chlornitrofen + metolachlor + atrazine + FURILAZOLE; chlornitrofen + S-metolachlor + atrazine + FURILAZOLE; chlornitrofen + metolachlor + terbuthylazine + FURILAZOLE; chlornitrofen + S-metolachlor + terbuthylazine + FURILAZOLE; chlornitrofen + atrazine + nicosulfuron + FURILAZOLE; ethoxyfen + metolachlor + isoxaflutole + FURILAZOLE; ethoxyfen + S-metolachlor + isoxaflutole + FURILAZOLE; ethoxyfen + metolachlor + mesotrione + FURILAZOLE; ethoxyfen + S-metolachlor + mesotrione + FURILAZOLE; ethoxyfen + metolachlor + atrazine + FURILAZOLE; ethoxyfen + S-metolachlor + atrazine + FURILAZOLE; ethoxyfen + metolachlor + terbuthylazine + FURILAZOLE; ethoxyfen + S-metolachlor + terbuthylazine + FURILAZOLE; ethoxyfen + atrazine + nicosulfuron + FURILAZOLE; fluoroglycofen + metolachlor + isoxaflutole + FURILAZOLE; fluoroglycofen + S-metolachlor + isoxaflutole + FURILAZOLE; fluoroglycofen + metolachlor + mesotrione + FURILAZOLE; fluoroglycofen + S-metolachlor + mesotrione + FURILAZOLE; fluoroglycofen + metolachlor + atrazine + FURILAZOLE; fluoroglycofen + S-metolachlor + atrazine + FURILAZOLE; fluoroglycofen + metolachlor + terbuthylazine + FURILAZOLE; fluoroglycofen + S-metolachlor + terbuthylazine + FURILAZOLE; fluoroglycofen + atrazine + nicosulfuron + FURILAZOLE; fomesafen + metolachlor + isoxaflutole + FURILAZOLE; fomesafen + S-metolachlor + isoxaflutole + FURILAZOLE; fomesafen + metolachlor + mesotrione + FURILAZOLE; fomesafen + S-metolachlor + mesotrione + FURILAZOLE; fomesafen + metolachlor + atrazine + FURILAZOLE; fomesafen + S-metolachlor + atrazine + FURILAZOLE; fomesafen + metolachlor + terbuthylazine + FURILAZOLE; fomesafen + S-metolachlor + terbuthylazine + FURILAZOLE; fomesafen + atrazine + nicosulfuron + FURILAZOLE; lactofen + metolachlor + isoxaflutole + FURILAZOLE; lactofen + S-metolachlor + isoxaflutole + FURILAZOLE; lactofen + metolachlor + mesotrione + FURILAZOLE; lactofen + S-metolachlor + mesotrione + FURILAZOLE; lactofen + metolachlor + atrazine + PURILAZOLE; lactofen + S-metolachlor + atrazine + FURILAZOLE; lactofen + metolachlor + terbuthylazine + FURILAZOLE; lactofen + S-metolachlor + terbuthylazine + FURILAZOLE; lactofen + atrazine + nicosulfuron + FURILAZOLE; oxyfluorfen + metolachlor + isoxaflutole + FURILAZOLE; oxyfluorfen + S-metolachlor + isoxaflutole + FURILAZOLE; oxyfluorfen + metolachlor + mesotrione + FURILAZOLE; oxyfluorfen + S-metolachlor + mesotrione + FURILAZOLE; oxyfluorfen + metolachlor + atrazine + FURILAZOLE; oxyfluorfen + S-metolachlor + atrazine + FURILAZOLE; oxyfluorfen + metolachlor + terbuthylazine + FURILAZOLE; oxyfluorfen + S-metolachlor + terbuthylazine + FURILAZOLE; oxyfluorfen + atrazine + nicosulfuron + FURILAZOLE; azafenidin + metolachlor + isoxaflutole + FURILAZOLE; azafenidin + S-metolachlor + isoxaflutole + FURILAZOLE; azafenidin + metolachlor + mesotrione + FURILAZOLE; azafenidin + S-metolachlor + mesotrione + FURILAZOLE; azafenidin + metolachlor + atrazine + FURILAZOLE; azafenidin + S-metolachlor + atrazine + FURILAZOLE; azafenidin + metolachlor + terbuthylazine + FURILAZOLE; azafenidin + S-metolachlor + terbuthylazine + FURILAZOLE; azafenidin + atrazine + nicosulfuron + FURILAZOLE; carfentrazone-ethyl + metolachlor + isoxaflutole + FURILAZOLE; carfentrazone-ethyl + S-metolachlor + isoxaflutole + FURILAZOLE; carfentrazone-ethyl + metolachlor + mesotrione + FURILAZOLE; carfentrazone-ethyl + S-metolachlor + mesotrione + FURILAZOLE; carfentrazone-ethyl + metolachlor + atrazine + FURILAZOLE; carfentrazone-ethyl + S-metolachlor + atrazine + FURILAZOLE; carfentrazone-ethyl + metolachlor + terbuthylazine + FURILAZOLE; carfentrazone-ethyl + S-metolachlor + terbuthylazine + FURILAZOLE; carfentrazone-ethyl + atrazine + nicosulfuron + FURILAZOLE; compound of the formula A + metolachlor + isoxaflutole + FURILAZOLE; compound of the formula A + S-metolachlor + isoxaflutole + FURILAZOLE; compound of the formula A + metolachlor + mesotrione + FURILAZOLE; compound of the formula A + S-metolachlor + mesotrione + FURILAZOLE; compound of the formula A + metolachlor + atrazine + FURILAZOLE; compound of the formula A + S-metolachlor + atrazine + FURILAZOLE; compound of the formula A + metolachlor + terbuthylazine + FURILAZOLE; compound of the formula A + S-metolachlor + terbuthylazine + FURILAZOLE; compound of the formula A + atrazine + nicosulfuron + FURILAZOLE; cinidon-ethyl + metolachlor + isoxaflutole + FURILAZOLE; cinidon-ethyl + S-metolachlor + isoxaflutole + FURILAZOLE; cinidon-ethyl + metolachlor + mesotrione + FURILAZOLE; cinidon-ethyl + S-metolachlor + mesotrione + FURILAZOLE; cinidon-ethyl + metolachlor + atrazine + FURILAZOLE; cinidon-ethyl + S-metolachlor + atrazine + FURILAZOLE; cinidon-ethyl + metolachlor + terbuthylazine + FURILAZOLE; cinidon-ethyl + S-metolachlor + terbuthylazine + FURILAZOLE; cinidon-ethyl + atrazine + nicosulfuron + FURILAZOLE; flumiclorac-pentyl + metolachlor + isoxaflutole + FURILAZOLE; flumiclorac-pentyl + S-metolachlor + isoxaflutole + FURILAZOLE; flumiclorac-pentyl + metolachlor + mesotrione + FURILAZOLE; flumiclorac-pentyl + S-metolachlor + mesotrione + FURILAZOLE; flumiclorac-pentyl + metolachlor + atrazine + FURILAZOLE; flumiclorac-pentyl + S-metolachlor + atrazine + FURILAZOLE; flumiclorac-pentyl + metolachlor + terbuthylazine + FURILAZOLE; flumiclorac-pentyl + S-metolachlor + terbuthylazine + FURILAZOLE; flumiclorac-pentyl + atrazine + nicosulfuron + FURILAZOLE; flumioxazin + metolachlor + isoxaflutole + FURILAZOLE; flumioxazin + S-metolachlor + isoxaflutole + FURILAZOLE; flumioxazin + metolachlor + mesotrione + FURILAZOLE; flumioxazin + S-metolachlor + mesotrione + FURILAZOLE; flumioxazin + metolachlor + atrazine + FURILAZOLE; flumioxazin + S-metolachlor + atrazine + FURILAZOLE; flumioxazin + metolachlor + terbuthylazine + FURILAZOLE; flumioxazin + S-metolachlor + terbuthylazine + FURILAZOLE; flumioxazin + atrazine + nicosulfuron + FURILAZOLE; fluthiacet-methyl + metolachlor + isoxaflutole + FURILAZOLE; fluthiacet-methyl + S-metolachlor + isoxaflutole + FURILAZOLE; fluthiacet-methyl + metolachlor + mesotrione + FURILAZOLE; fluthiacet-methyl + S-metolachlor + mesotrione + FURILAZOLE; fluthiacet-methyl + metolachlor + atrazine + FURILAZOLE; fluthiacet-methyl + S-metolachlor + atrazine + FURILAZOLE; fluthiacet-methyl + metolachlor + terbuthylazine + FURILAZOLE; fluthiacet-methyl + S-metolachlor + terbuthylazine + FURILAZOLE; fluthiacet-methyl + atrazine + nicosulfuron + FURILAZOLE; oxadiargyl + metolachlor + isoxaflutole + FURILAZOLE; oxadiargyl + S-metolachlor + isoxaflutole + FURILAZOLE; oxadiargyl + metolachlor + mesotrione + FURILAZOLE; oxadiargyl + S-metolachlor + mesotrione + FURILAZOLE; oxadiargyl + metolachlor + atrazine + FURILAZOLE; oxadiargyl + S-metolachlor + atrazine + FURILAZOLE; oxadiargyl + metolachtor + terbuthylazine + FURILAZOLE; oxadiargyl + S-metolachlor + terbuthylazine + FURILAZOLE; oxadiargyl + atrazine + nicosulfuron + FURILAZOLE; oxadiazon + metolachlor + isoxaflutole + FURILAZOLE; oxadiazon + S-metolachlor + isoxaflutole + FURILAZOLE; oxadiazon + metolachlor + mesotrione + FURILAZOLE; oxadiazon + S-metolachlor + mesotrione + FURILAZOLE; oxadiazon + metolachlor + atrazine + FURILAZOLE; oxadiazon + S-metolachlor + atrazine + FURILAZOLE; oxadiazon + metolachlor + terbuthylazine + FURILAZOLE; oxadiazon + S-metolachlor + terbuthylazine + FURILAZOLE; oxadiazon + atrazine + nicosulfuron + FURILAZOLE; pentoxazone + metolachlor + isoxaflutole + FURILAZOLE; pentoxazone + S-metolachlor + isoxaflutole + FURILAZOLE; pentoxazone + metolachlor + mesotrione + FURILAZOLE; pentoxazone + S-metolachlor + mesotrione + FURILAZOLE; pentoxazone + metolachlor + atrazine + FURILAZOLE; pentoxazone + S-metolachlor + atrazine + FURILAZOLE; pentoxazone + metolachlor + terbuthylazine + FURILAZOLE; pentoxazone + S-metolachlor + terbuthylazine + FURILAZOLE; pentoxazone + atrazine + nicosulfuron + FURILAZOLE; sulfentrazone + metolachlor + isoxaflutole + FURILAZOLE; sulfentrazone + S-metolachlor + isoxaflutole + FURILAZOLE; sulfentrazone + metolachlor + mesotrione + FURILAZOLE; sulfentrazone + S-metolachtor + mesotrione + FURILAZOLE; sulfentrazone + metolachlor + atrazine + FURILAZOLE; sulfentrazone + S-metolachlor + atrazine + FURILAZOLE; sulfentrazone + metolachlor + terbuthylazine + FURILAZOLE; sulfentrazone + S-metolachlor + terbuthylazine + FURILAZOLE; sulfentrazone + atrazine + nicosulfuron + FURILAZOLE; fluazolate + metolachlor + isoxaflutole + FURILAZOLE; fluazolate + S-metolachlor + isoxaflutole + FURILAZOLE; fluazolate + metolachlor + mesotrione + FURILAZOLE; fluazolate + S-metolachlor + mesotrione + FURILAZOLE; fluazolate + metolachlor + atrazine + FURILAZOLE; fluazolate + S-metolachlor + atrazine + FURILAZOLE; fluazolate + metolachlor + terbuthylazine + FURILAZOLE; fluazolate + S-metolachlor + terbuthylazine + FURILAZOLE; fluazolate + atrazine + nicosulfuron + FURILAZOLE; pyraflufen-ethyl + metolachlor + isoxaflutole + FURILAZOLE; pyraflufen-ethyl + S-metolachlor + isoxaflutole + FURILAZOLE; pyraflufen-ethyl + metolachlor + mesotrione + FURILAZOLE; pyraflufen-ethyl + S-metolachlor + mesotrione + FURILAZOLE; pyraflufen-ethyl + metolachlor + atrazine + FURILAZOLE; pyraflufen-ethyl + S-metolachlor + atrazine + FURILAZOLE; pyraflufen-ethyl + metolachlor + terbuthylazine + FURILAZOLE; pyraflufen-ethyl + S-metolachlor + terbuthylazine + FURILAZOLE; pyraflufen-ethyl + atrazine + nicosulfuron + FURILAZOLE; flumipropyn + metolachlor + isoxaflutole + FURILAZOLE; flumipropyn + S-metolachlor + isoxaflutole + FURILAZOLE; flumipropyn + metolachlor + mesotrione + FURILAZOLE; flumipropyn + S-metolachlor + mesotrione + FURILAZOLE; flumipropyn + metolachlor + atrazine + FURILAZOLE; flumipropyn + S-metolachlor + atrazine + FURILAZOLE; flumipropyn + metolachlor + terbuthylazine + FURILAZOLE; flumipropyn + S-metolachlor + terbuthylazine + FURILAZOLE; flumipropyn + atrazine + nicosulfuron + FURILAZOLE; flupropacil + metolachlor + isoxaflutole + FURILAZOLE; flupropacil + S-metolachlor + isoxaflutole + FURILAZOLE; flupropacil + metolachlor + mesotrione + FURILAZOLE; flupropacil + S-metolachlor + mesotrione + FURILAZOLE; flupropacil + metolachlor + atrazine + FURILAZOLE; flupropacil + S-metolachlor + atrazine + FURILAZOLE; flupropacil + metolachlor + terbuthylazine + FURILAZOLE; flupropacil + S-metolachlor + terbuthylazine + FURILAZOLE; flupropacil + atrazine + nicosulfuron + FURILAZOLE; nipyraclofen + metolachlor + isoxaflutole + FURILAZOLE; nipyraclofen + S-metolachlor + isoxaflutole + FURILAZOLE; nipyraclofen + metolachlor + mesotrione + FURILAZOLE; nipyraclofen + S-metolachlor + mesotrione + FURILAZOLE; nipyraclofen + metolachlor + atrazine + FURILAZOLE; nipyraclofen + S-metolachlor + atrazine + FURILAZOLE; nipyraclofen + metolachlor + terbuthylazine + FURILAZOLE; nipyraclofen + S-metolachlor + terbuthylazine + FURILAZOLE; nipyraclofen + atrazine + nicosutfuron + FURILAZOLE; benzfendizone + metolachlor + isoxaflutole + FURILAZOLE; benzfendizone + S-metolachlor + isoxaflutole + FURILAZOLE; benzfendizone + metolachlor + mesotrione + FURILAZOLE; benzfendizone + S-metolachlor + mesotrione + FURILAZOLE; benzfendizone + metolachior + atrazine + FURILAZOLE; benzfendizone + S-metolachlor + atrazine + FURILAZOLE; benzfendizone + metolachlor + terbuthylazine + FURILAZOLE; benzfendizone + S-metolachlor + terbuthylazine + FURILAZOLE; benzfendizone + atrazine + nicosulfuron + FURILAZOLE; thidiazimin + metolachlor + isoxaflutole + FURILAZOLE; thidiazimin + S-metolachlor + isoxaflutole + FURILAZOLE; thidiazimin + metolachlor + mesotrione + FURILAZOLE; thidiazimin + S-metolachlor + mesotrione + FURILAZOLE; thidiazimin + metolachlor + atrazine + FURILAZOLE; thidiazimin + S-metolachlor + atrazine + FURILAZOLE; thidiazimin + metolachlor + terbuthylazine + FURILAZOLE; thidiazimin + S-metolachlor + terbuthylazine + FURILAZOLE; and thidiazimin + atrazine + nicosulfuron + FURILAZOLE.

Acifluorfen + atrazin + glyphosate; acifluorfen + terbuthylazine + glyphosate; acifluorfen + (S)-metolachlor + glyphosate; acifluorfen + metolachlor + glyphosate; acifluorfen + compound of the formula A + glyphosate; acifluorfen + terbutryn + glyphosate; acifluorfen + simazine + glyphosate; acifluorfen + dimethenamid or (S)-dimethenamid + glyphosate; acifluorfen + flufenacet + glyphosate; acifluorfen + acetochlor + glyphosate; acifluorfen + alachlor + glyphosate; acifluorfen + isoxaflutole + glyphosate; acifluorfen + isoxachlortole + glyphosate; acifluorfen + mesotrione + glyphosate; acifluorfen + sulcotrione + glyphosate; acifluorfen + metosulam + glyphosate; acifluorfen + flumetsulam + glyphosate; acifluorfen + pendimethalin + glyphosate; acifluorfen + bromoxynil + glyphosate; acifluorfen + bentazone + glyphosate; acifluorfen + carfentrazone + glyphosate; acifluorfen + clomazone + glyphosate; acifluorfen + nicosulfuron + glyphosate; acifluorfen + rimsulfuron + glyphosate; acifluorfen + halosulfuron + glyphosate; acifluorfen + metribuzin + glyphosate; acifluorfen + flumiclorac + glyphosate; acifluorfen + prosulfuron + glyphosate; acifluorfen + primisulfuron + glyphosate; acifluorfen + dicamba + glyphosate; acifluorfen + fluthiacet + glyphosate; acifluorfen + pyridate + glyphosate; acifluorfen + compound of the formula B + glyphosate; acifluorfen + 2,4-D + glyphosate; acifluorfen + clopyralide + glyphosate; acifluorfen + diflufenzopyr + glyphosate; acifluorfen + fluroxypyr + glyphosate; acifluorfen + MCPA + glyphosate; acifluorfen + MCPB + glyphosate; acifluorfen + MCPP + glyphosate; acifluorfen + metobenzuron + glyphosate; acifluorfen + thifensulfuron + glyphosate; acifluorfen + aclonifen + glyphosate; acifluorfen + EPTC + glyphosate; acifluorfen + cyanazine + glyphosate; aclonifen + atrazin + glyphosate; aclonifen + terbuthylazine + glyphosate; aclonifen + (S)-metolachlor + glyphosate; aclonifen + metolachlor + glyphosate; aclonifen + compound of the formula A + glyphosate; aclonifen + terbutryn + glyphosate; aclonifen + simazine + glyphosate; aclonifen + dimethenamid or (S)-dimethenamid + glyphosate; aclonifen + flufenacet + glyphosate; aclonifen + acetochlor + glyphosate; aclonifen + alachlor + glyphosate; aclonifen + isoxaflutole + glyphosate; aclonifen + isoxachlortole + glyphosate; aclonifen + mesotrione + glyphosate; aclonifen + sulcotrione + glyphosate; aclonifen + metosulam + glyphosate; aclonifen + flumetsulam + glyphosate; aclonifen + pendimethalin + glyphosate; aclonifen + bromoxynil + glyphosate; aclonifen + bentazone + glyphosate; aclonifen + carfentrazone + glyphosate; aclonifen + clomazone + glyphosate; aclonifen + nicosulfuron + glyphosate; aclonifen + rimsulfuron + glyphosate; aclonifen + halosulfuron + glyphosate; aclonifen + metribuzin + glyphosate; aclonifen + flumiclorac + glyphosate; aclonifen + prosulfuron + glyphosate; aclonifen + primisulfuron + glyphosate; aclonifen + dicamba + glyphosate; aclonifen + fluthiacet + glyphosate; aclonifen + pyridate + glyphosate; aclonifen + compound of the formula B + glyphosate; aclonifen + 2,4-D + glyphosate; aclonifen + clopyralide + glyphosate; aclonifen + diflufenzopyr + glyphosate; aclonifen + fluroxypyr + glyphosate; aclonifen + MCPA + glyphosate; aclonifen + MCPB + glyphosate; aclonifen + MCPP + glyphosate; aclonifen + metobenzuron + glyphosate; aclonifen + thifensulfuron + glyphosate; aclonifen + EPTC + glyphosate; aclonifen + cyanazine + glyphosate; bifenox + atrazin + glyphosate; bifenox + terbuthylazine + glyphosate; bifenox + (S)-metolachlor + glyphosate; bifenox + metolachlor + glyphosate; bifenox + compound of the formula A + glyphosate; bifenox + terbutryn + glyphosate; bifenox + simazine + glyphosate; bifenox + dimethenamid or (S)-dimethenamid + glyphosate; bifenox + flufenacet + glyphosate; bifenox + acetochlor + glyphosate; bifenox + alachlor + glyphosate; bifenox + isoxaflutole + glyphosate; bifenox + isoxachlortole + glyphosate; bifenox + mesotrione + glyphosate; bifenox + sulcotrione + glyphosate; bifenox + metosulam + glyphosate; bifenox + flumetsulam + glyphosate; bifenox + pendimethalin + glyphosate; bifenox + bromoxynil + glyphosate; bifenox + bentazone + glyphosate; bifenox + carfentrazone + glyphosate; bifenox + clomazone + glyphosate; bifenox + nicosulfuron + glyphosate; bifenox + rimsulfuron + glyphosate; bifenox + halosulfuron + glyphosate; bifenox + metribuzin + glyphosate; bifenox + flumiclorac + glyphosate; bifenox + prosulfuron + glyphosate; bifenox + primisulfuron + glyphosate; bifenox + dicamba + glyphosate; bifenox + fluthiacet + glyphosate; bifenox + pyridate + glyphosate; bifenox + compound of the formula B + glyphosate; bifenox + 2,4-D + glyphosate; bifenox + clopyralide + glyphosate; bifenox + diflufenzopyr + glyphosate; bifenox + fluroxypyr + glyphosate; bifenox + MCPA + glyphosate; bifenox + MCPB + glyphosate; bifenox + MCPP + glyphosate; bifenox + metobenzuron + glyphosate; bifenox + thifensulfuron + glyphosate; bifenox + aclonifen + glyphosate; bifenox + EPTC + glyphosate; bifenox + cyanazine + glyphosate; chlornitrofen + atrazin + glyphosate; chlornitrofen + terbuthylazine + glyphosate; chlornitrofen + (S)-metolachlor + glyphosate; chlornitrofen + metolachlor + glyphosate; chiornitrofen + compound of the formula A + glyphosate; chlornitrofen + terbutryn + glyphosate; chlornitrofen + simazine + glyphosate; chlornitrofen + dimethenamid or (S)-dimethenamid + glyphosate; chlornitrofen + flufenacet + glyphosate; chlornitrofen + acetochlor + glyphosate; chlornitrofen + alachlor + glyphosate; chlornitrofen + isoxaflutole + glyphosate; chlornitrofen + isoxachlortole + glyphosate; chlornitrofen + mesotrione + glyphosate; chlornitrofen + sulcotrione + glyphosate; chlornitrofen + metosulam + glyphosate; chlornitrofen + flumetsulam + glyphosate; chlornitrofen + pendimethalin + glyphosate; chlornitrofen + bromoxynil + glyphosate; chlornitrofen + bentazone + glyphosate; chlornitrofen + carfentrazone + glyphosate; chlornitrofen + clomazone + glyphosate; chlornitrofen + nicosulfuron + glyphosate; chlornitrofen + rimsulfuron + glyphosate; chlornitrofen + halosulfuron + glyphosate; chlornitrofen + metribuzin + glyphosate; chlornitrofen + flumiclorac + glyphosate; chlornitrofen + prosulfuron + glyphosate; chlornitrofen + primisulfuron + glyphosate; chlornitrofen + dicamba + glyphosate; chlornitrofen + fluthiacet + glyphosate; chlornitrofen + pyridate + glyphosate; chlornitrofen + compound of the formula B + glyphosate; chlornitrofen + 2,4-D + glyphosate; chlornitrofen + clopyralide + glyphosate; chlornitrofen + diflufenzopyr + glyphosate; chlornitrofen + fluroxypyr + glyphosate; chlornitrofen + MCPA + glyphosate; chlornitrofen + MCPB + glyphosate; chlornitrofen + MCPP + glyphosate; chlornitrofen + metobenzuron + glyphosate; chlornitrofen + thifensulfuron + glyphosate; chlornitrofen + aclonifen + glyphosate; chlornitrofen + EPTC + glyphosate; chlornitrofen + cyanazine + glyphosate; ethoxyfen + atrazin + glyphosate; ethoxyfen + terbuthylazine + glyphosate; ethoxyfen + (S)-metolachlor + glyphosate; ethoxyfen + metolachlor + glyphosate; ethoxyfen + compound of the formula A + glyphosate; ethoxyfen + terbutryn + glyphosate; ethoxyfen + simazine + glyphosate; ethoxyfen + dimethenamid or (S)-dimethenamid + glyphosate; ethoxyfen + flufenacet + glyphosate; ethoxyfen + acetochlor + glyphosate; ethoxyfen + alachlor + glyphosate; ethoxyfen + isoxaflutole + glyphosate; ethoxyfen + isoxachlortole + glyphosate; ethoxyfen + mesotrione + glyphosate; ethoxyfen + sulcotrione + glyphosate; ethoxyfen + metosulam + glyphosate; ethoxyfen + flumetsulam + glyphosate; ethoxyfen + pendimethalin + glyphosate; ethoxyfen + bromoxynil + glyphosate; ethoxyfen + bentazone + glyphosate; ethoxyfen + carfentrazone + glyphosate; ethoxyfen + clomazone + glyphosate; ethoxyfen + nicosulfuron + glyphosate; ethoxyfen + rimsulfuron + glyphosate; ethoxyfen + halosulfuron + glyphosate; ethoxyfen + metribuzin + glyphosate; ethoxyfen + flumiclorac + glyphosate; ethoxyfen + prosulfuron + glyphosate; ethoxyfen + primisulfuron + glyphosate; ethoxyfen + dicamba + glyphosate; ethoxyfen + fluthiacet + glyphosate; ethoxyfen + pyridate + glyphosate; ethoxyfen + compound of the formula B + glyphosate; ethoxyfen + 2,4-D + glyphosate; ethoxyfen + clopyralide + glyphosate; ethoxyfen + diflufenzopyr + glyphosate; ethoxyfen + fluroxypyr + glyphosate; ethoxyfen + MCPA + glyphosate; ethoxyfen + MCPB + glyphosate; ethoxyfen + MCPP + glyphosate; ethoxyfen + metobenzuron + glyphosate; ethoxyfen + thifensulfuron + glyphosate; ethoxyfen + aclonifen + glyphosate; ethoxyfen + EPTC + glyphosate; ethoxyfen + cyanazine + glyphosate; fluoroglycofen + atrazin + glyphosate; fluoroglycofen + terbuthylazine + glyphosate; fluoroglycofen + (S)-metolachlor + glyphosate; fluoroglycofen + metolachlor + glyphosate; fluoroglycofen + compound of the formula A + glyphosate; fluoroglycofen + terbutryn + glyphosate; fluoroglycofen + simazine + glyphosate; fluoroglycofen + dimethenamid or (S)-dimethenamid + glyphosate; fluoroglycofen + flufenacet + glyphosate; fluoroglycofen + acetochlor + glyphosate; fluoroglycofen + alachlor + glyphosate; fluoroglycofen + isoxaflutole + glyphosate; fluoroglycofen + isoxachlortole + glyphosate; fluoroglycofen + mesotrione + glyphosate; fluoroglycofen + sulcotrione + glyphosate; fluoroglycofen + metosulam + glyphosate; fluoroglycofen + flumetsulam + glyphosate; fluoroglycofen + pendimethalin + glyphosate; fluoroglycofen + bromoxynil + glyphosate; fluoroglycofen + bentazone + glyphosate; fluoroglycofen + carfentrazone + glyphosate; fluoroglycofen + clomazone + glyphosate; fluoroglycofen + nicosulfuron + glyphosate; fluoroglycofen + rimsulfuron + glyphosate; fluoroglycofen + halosulfuron + glyphosate; fluoroglycofen + metribuzin + glyphosate; fluoroglycofen + flumiclorac + glyphosate; fluoroglycofen + prosulfuron + glyphosate; fluoroglycofen + primisulfuron + glyphosate; fluoroglycofen + dicamba + glyphosate; fluoroglycofen + fluthiacet + glyphosate; fluoroglycofen + pyridate + glyphosate; fluoroglycofen + compound of the formula B + glyphosate; fluoroglycofen + 2,4-D + glyphosate; fluoroglycofen + clopyralide + glyphosate; fluoroglycofen + diflufenzopyr + glyphosate; fluoroglycofen + fluroxypyr + glyphosate; fluoroglycofen + MCPA + glyphosate; fluoroglycofen + MCPB + glyphosate; fluoroglycofen + MCPP + glyphosate; fluoroglycofen + metobenzuron + glyphosate; fluoroglycofen + thifensulfuron + glyphosate; fluoroglycofen + aclonifen + glyphosate; fluoroglycofen + EPTC + glyphosate; fluoroglycofen + cyanazine + glyphosate; fomesafen + atrazin + glyphosate; fomesafen + terbuthylazine + glyphosate; fomesafen + (S)-metolachlor + glyphosate; fomesafen + metolachlor + glyphosate; fomesafen + compound of the formula A + glyphosate; fomesafen + terbutryn + glyphosate; fomesafen + simazine + glyphosate; fomesafen + dimethenamid or (S)-dimethenamid + glyphosate; fomesafen + flufenacet + glyphosate; fomesafen + acetochlor + glyphosate; fomesafen + alachlor + glyphosate; fomesafen + isoxaflutole + glyphosate; fomesafen + isoxachlortole + glyphosate; fomesafen + mesotrione + glyphosate; fomesafen + sulcotrione + glyphosate; fomesafen + metosulam + glyphosate; fomesafen + flumetsulam + glyphosate; fomesafen + pendimethalin + glyphosate; fomesafen + bromoxynil + glyphosate; fomesafen + bentazone + glyphosate; fomesafen + carfentrazone + glyphosate; fomesafen + clomazone + glyphosate; fomesafen + nicosulfuron + glyphosate; fomesafen + rimsulfuron + glyphosate; fomesafen + halosulfuron + glyphosate; fomesafen + metribuzin + glyphosate; fomesafen + flumiclorac + glyphosate; fomesafen + prosutfuron + glyphosate; fomesafen + primisulfuron + glyphosate; fomesafen + dicamba + glyphosate; fomesafen + fluthiacet + glyphosate; fomesafen + pyridate + glyphosate; fomesafen + compound of the formula B + glyphosate; fomesafen + 2,4-D + glyphosate; fomesafen + clopyralide + glyphosate; fomesafen + diflufenzopyr + glyphosate; fomesafen + fluroxypyr + glyphosate; fomesafen + MCPA + glyphosate; fomesafen + MCPB + glyphosate; fomesafen + MCPP + glyphosate; fomesafen + metobenzuron + glyphosate; fomesafen + thifensulfuron + glyphosate; fomesafen + aclonifen + glyphosate; fomesafen + EPTC + glyphosate; fomesafen + cyanazine + glyphosate; lactofen + atrazin + glyphosate; lactofen + terbuthylazine + glyphosate; lactofen + (S)-metolachlor + glyphosate; lactofen + metolachlor + glyphosate; lactofen + compound of the formula A + glyphosate; lactofen + terbutryn + glyphosate; lactofen + simazine + glyphosate; lactofen + dimethenamid or (S)-dimethenamid + glyphosate; lactofen + flufenacet + glyphosate; lactofen + acetochlor+ glyphosate; lactofen + alachlor + glyphosate; lactofen + isoxaflutole + glyphosate; lactofen + isoxachlortole + glyphosate; lactofen + mesotrione + glyphosate; lactofen + sulcotrione + glyphosate; lactofen + metosulam + glyphosate; lactofen + flumetsulam + glyphosate; lactofen + pendimethalin + glyphosate; lactofen + bromoxynil + glyphosate; lactofen + bentazone + glyphosate; lactofen + carfentrazone + glyphosate; lactofen + clomazone + glyphosate; lactofen + nicosulfuron + glyphosate; lactofen + rimsulfuron + glyphosate; lactofen + halosulfuron + glyphosate; lactofen + metribuzin + glyphosate; lactofen + flumiclorac + glyphosate; lactofen + prosulfuron + glyphosate; lactofen + primisulfuron + glyphosate; lactofen + dicamba + glyphosate; lactofen + fluthiacet + glyphosate; lactofen + pyridate + glyphosate; lactofen + compound of the formula B + glyphosate; lactofen + 2,4-D + glyphosate; lactofen + clopyralide + glyphosate; lactofen + diflufenzopyr + glyphosate; lactofen + fluroxypyr + glyphosate; lactofen + MCPA + glyphosate; lactofen + MCPB + glyphosate; lactofen + MCPP + glyphosate; lactofen + metobenzuron + glyphosate; lactofen + thifensulfuron + glyphosate; lactofen + aclonifen + glyphosate; lactofen + EPTC + glyphosate; lactofen + cyanazine + glyphosate; oxyfluorfen + atrazin + glyphosate; oxyfluorfen + terbuthylazine + glyphosate; oxyfluorfen + (S)-metolachlor + glyphosate; oxyfluorfen + metolachlor + glyphosate; oxyfluorfen + compound of the formula A + glyphosate; oxyfluorfen + terbutryn + glyphosate; oxyfluorfen + simazine + glyphosate; oxyfluorfen + dimethenamid or (S)-dimethenamid + glyphosate; oxyfluorfen + flufenacet + glyphosate; oxyfluorfen + acetochlor + glyphosate; oxyfluorfen + alachlor + glyphosate; oxyfluorfen + isoxaflutole + glyphosate; oxyfluorfen + isoxachlortole + glyphosate; oxyfluorfen + mesotrione + glyphosate; oxyfluorfen + sulcotrione + glyphosate; oxyfluorfen + metosulam + glyphosate; oxyfluorfen + flumetsulam + glyphosate; oxyfluorfen + pendimethalin + glyphosate; oxyfluorfen + bromoxynil + glyphosate; oxyfluorfen + bentazone + glyphosate; oxyfluorfen + carfentrazone + glyphosate; oxyfluorfen + clomazone + glyphosate; oxyfluorfen + nicosulfuron + glyphosate; oxyfluorfen + rimsulfuron + glyphosate; oxyfluorfen + halosulfuron + glyphosate; oxyfluorfen + metribuzin + glyphosate; oxyfluorfen + flumiclorac + glyphosate; oxyfluorfen + prosulfuron + glyphosate; oxyfluorfen + primisulfuron + glyphosate; oxyfluorfen + dicamba + glyphosate; oxyfluorfen + fluthiacet + glyphosate; oxyfluorfen + pyridate + glyphosate; oxyfluorfen + compound of the formula B + glyphosate; oxyfluorfen + 2,4-D + glyphosate; oxyfluorfen + clopyralide + glyphosate; oxyfluorfen + diflufenzopyr + glyphosate; oxyfluorfen + fluroxypyr + glyphosate; oxyfluorfen + MCPA + glyphosate; oxyfluorfen + MCPB + glyphosate; oxyfluorfen + MCPP + glyphosate; oxyfluorfen + metobenzuron + glyphosate; oxyfluorfen + thifensulfuron + glyphosate; oxyfluorfen + aclonifen + glyphosate; oxyfluorfen + EPTC + glyphosate; oxyfluorfen + cyanazine + glyphosate; azafenidin + atrazin + glyphosate; azafenidin + terbuthylazine + glyphosate; azafenidin + (S)-metolachlor + glyphosate; azafenidin + metolachlor + glyphosate; azafenidin + compound of the formula A + glyphosate; azafenidin + terbutryn + glyphosate; azafenidin + simazine + glyphosate; azafenidin + dimethenamid or (S)-dimethenamid + glyphosate; azafenidin + flufenacet + glyphosate; azafenidin + acetochlor + glyphosate; azafenidin + alachlor + glyphosate; azafenidin + isoxaflutole + glyphosate; azafenidin + isoxachlortole + glyphosate; azafenidin + mesotrione + glyphosate; azafenidin + sulcotrione + glyphosate; azafenidin + metosulam + glyphosate; azafenidin + flumetsulam + glyphosate; azafenidin + pendimethalin + glyphosate; azafenidin + bromoxynil + glyphosate; azafenidin + bentazone + glyphosate; azafenidin + carfentrazone + glyphosate; azafenidin + clomazone + glyphosate; azafenidin + nicosulfuron + glyphosate; azafenidin + rimsulfuron + glyphosate; azafenidin + halosulfuron + glyphosate; azafenidin + metribuzin + glyphosate; azafenidin + flumiclorac + glyphosate; azafenidin + prosulfuron + glyphosate; azafenidin + primisulfuron + glyphosate; azafenidin + dicamba + glyphosate; azafenidin + fluthiacet + glyphosate; azafenidin + pyridate + glyphosate; azafenidin + compound of the formula B + glyphosate; azafenidin + 2,4-D + glyphosate; azafenidin + clopyralide + glyphosate; azafenidin + diflufenzopyr + glyphosate; azafenidin + fluroxypyr + glyphosate; azafenidin + MCPA + glyphosate; azafenidin + MCPB + glyphosate; azafenidin + MCPP + glyphosate; azafenidin + metobenzuron + glyphosate; azafenidin + thifensulfuron + glyphosate; azafenidin + aclonifen + glyphosate; azafenidin + EPTC + glyphosate; azafenidin + cyanazine + glyphosate; carfentrazone-ethyl + atrazin + glyphosate; carfentrazone-ethyl + terbuthylazine + glyphosate; carfentrazone-ethyl + (S)-metolachlor + glyphosate; carfentrazone-ethyl + metolachlor + glyphosate; carfentrazone-ethyl + compound of the formula A + glyphosate; carfentrazone-ethyl + terbutryn + glyphosate; carfentrazone-ethyl + simazine + glyphosate; carfentrazone-ethyl + dimethenamid or (S)-dimethenamid + glyphosate; carfentrazone-ethyl + flufenacet + glyphosate; carfentrazone-ethyl + acetochlor + glyphosate; carfentrazone-ethyl + alachtor + glyphosate; carfentrazone-ethyl + isoxaflutole + glyphosate; carfentrazone-ethyl + isoxachlortole + glyphosate; carfentrazone-ethyl + mesotrione + glyphosate; carfentrazone-ethyl + sulcotrione + glyphosate; carfentrazone-ethyl + metosulam + glyphosate; carfentrazone-ethyl + flumetsulam + glyphosate; carfentrazone-ethyl + pendimethalin + glyphosate; carfentrazone-ethyl + bromoxynil + glyphosate; carfentrazone-ethyl + bentazone + glyphosate; carfentrazone-ethyl + clomazone + glyphosate; carfentrazone-ethyl + nicosulfuron + glyphosate; carfentrazone-ethyl + rimsulfuron + glyphosate; carfentrazone-ethyl + halosulfuron + glyphosate; carfentrazone-ethyl + metribuzin + glyphosate; carfentrazone-ethyl + flumiclorac + glyphosate; carfentrazone-ethyl + prosulfuron + glyphosate; carfentrazone-ethyl + primisulfuron + glyphosate; carfentrazone-ethyl + dicamba + glyphosate; carfentrazone-ethyl + fluthiacet + glyphosate; carfentrazone-ethyl + pyridate + glyphosate; carfentrazone-ethyl + compound of the formula B + glyphosate; carfentrazone-ethyl + 2,4-D + glyphosate; carfentrazone-ethyl + clopyralide + glyphosate; carfentrazone-ethyl + diflufenzopyr + glyphosate; carfentrazone-ethyl + fluroxypyr + glyphosate; carfentrazone-ethyl + MCPA + glyphosate; carfentrazone-ethyl + MCPB + glyphosate; carfentrazone-ethyl + MCPP + glyphosate; carfentrazone-ethyl + metobenzuron + glyphosate; carfentrazone-ethyl + thifensulfuron + glyphosate; carfentrazone-ethyl + aclonifen + glyphosate; carfentrazone-ethyl + EPTC + glyphosate; carfentrazone-ethyl + cyanazine + glyphosate; compound of the formula A + atrazin + glyphosate; compound of the formula A + terbuthylazine + glyphosate; compound of the formula A + (S)-metolachlor + glyphosate; compound of the formula A + metolachlor + glyphosate; compound of the formula A + terbutryn + glyphosate; compound of the formula A + simazine + glyphosate; compound of the formula A + dimethenamid or (S)-dimethenamid + glyphosate; compound of the formula A + flufenacet + glyphosate; compound of the formula A + acetochlor + glyphosate; compound of the formula A + alachlor; compound of the formula A + isoxaflutole + glyphosate; compound of the formula A + isoxachlortole + glyphosate; compound of the formula A + mesotrione + glyphosate; compound of the formula A + sulcotrione + glyphosate; compound of the formula A + metosulam + glyphosate; compound of the formula A + flumetsulam + glyphosate; compound of the formula A + pendimethalin + glyphosate; compound of the formula A + bromoxynil + glyphosate; compound of the formula A + bentazone + glyphosate; compound of the formula A + carfentrazone + glyphosate; compound of the formula A + clomazone + glyphosate; compound of the formula A + nicosulfuron + glyphosate; compound of the formula A + rimsulfuron + glyphosate; compound of the formula A + halosulfuron + glyphosate; compound of the formula A + metribuzin + glyphosate; compound of the formula A + flumiclorac + glyphosate; compound of the formula A + prosulfuron + glyphosate; compound of the formula A + primisulfuron + glyphosate; compound of the formula A + dicamba + glyphosate; compound of the formula A + fluthiacet + glyphosate; compound of the formula A + pyridate + glyphosate; compound of the formula A + compound of the formula B + glyphosate; compound of the formula A + 2,4-D + glyphosate; compound of the formula A + clopyralide + glyphosate; compound of the formula A + diflufenzopyr + glyphosate; compound of the formula A + fluroxypyr + glyphosate; compound of the formula A + MCPA + glyphosate; compound of the formula A + MCPB + glyphosate; compound of the formula A + MCPP + glyphosate; compound of the formula A + metobenzuron + glyphosate; compound of the formula A + thifensulfuron + glyphosate; compound of the formula A + aclonifen + glyphosate; compound of the formula A + EPTC + glyphosate; compound of the formula A + cyanazine + glyphosate; cinidon-ethyl + atrazin + glyphosate; cinidon-ethyl + terbuthylazine + glyphosate; cinidon-ethyl + (S)-metolachlor + glyphosate; cinidon-ethyl + metolachlor + glyphosate; cinidon-ethyl + compound of the formula A + glyphosate; cinidon-ethyl + terbutryn + glyphosate; cinidon-ethyl + simazine + glyphosate; cinidon-ethyl + dimethenamid or (S)-dimethenamid + glyphosate; cinidon-ethyl + flufenacet + glyphosate; cinidon-ethyl + acetochlor + glyphosate; cinidon-ethyl + alachlor + glyphosate; cinidon-ethyl + isoxaflutole + glyphosate; cinidon-ethyl + isoxachlortole + glyphosate; cinidon-ethyl + mesotrione + glyphosate; cinidon-ethyl + sulcotrione + glyphosate; cinidon-ethyl + metosulam + glyphosate; cinidon-ethyl + flumetsulam + glyphosate; cinidon-ethyl + pendimethalin + glyphosate; cinidon-ethyl + bromoxynil + glyphosate; cinidon-ethyl + bentazone + glyphosate; cinidon-ethyl + carfentrazone + glyphosate; cinidon-ethyl + clomazone + glyphosate; cinidon-ethyl + nicosulfuron + glyphosate; cinidon-ethyl + rimsulfuron + glyphosate; cinidon-ethyl + halosulfuron + glyphosate; cinidon-ethyl + metribuzin + glyphosate; cinidon-ethyl + flumiclorac + glyphosate; cinidon-ethyl + prosulfuron + glyphosate; cinidon-ethyl + primisulfuron + glyphosate; cinidon-ethyl + dicamba + glyphosate; cinidon-ethyl + fluthiacet + glyphosate; cinidon-ethyl + pyridate + glyphosate; cinidon-ethyl + compound of the formula B + glyphosate; cinidon-ethyl + 2,4-D + glyphosate; cinidon-ethyl + clopyralide + glyphosate; cinidon-ethyl + diflufenzopyr + glyphosate; cinidon-ethyl + fluroxypyr + glyphosate; cinidon-ethyl + MCPA + glyphosate; cinidon-ethyl + MCPB + glyphosate; cinidon-ethyl + MCPP + glyphosate; cinidon-ethyl + metobenzuron + glyphosate; cinidon-ethyl + thifensulfuron + glyphosate; cinidon-ethyl + aclonifen + glyphosate; cinidon-ethyl + EPTC + glyphosate; cinidon-ethyl + cyanazine + glyphosate; flumiclorac-pentyl + atrazin + glyphosate; flumiclorac-pentyl + terbuthylazine + glyphosate; flumiclorac-pentyl + (S)-metolachlor + glyphosate; flumiclorac-pentyl + metolachlor + glyphosate; flumiclorac-pentyl + compound of the formula A + glyphosate; flumiclorac-pentyl + terbutryn + glyphosate; flumiclorac-pentyl + simazine + glyphosate; flumiclorac-pentyl + dimethenamid or (S)-dimethenamid + glyphosate; flumiclorac-pentyl + flufenacet + glyphosate; flumiclorac-pentyl + acetochlor + glyphosate; flumiclorac-pentyl + alachlor + glyphosate; flumiclorac-pentyl + isoxaflutole + glyphosate; flumiclorac-pentyl + isoxachlortole + glyphosate; flumiclorac-pentyl + mesotrione + glyphosate; flumiclorac-pentyl + sulcotrione + glyphosate; flumidorac-pentyl + metosulam + glyphosate; flumiclorac-pentyl + flumetsulam + glyphosate; flumiclorac-pentyl + pendimethalin + glyphosate; flumidorac-pentyl + bromoxynil + glyphosate; flumiclorac-pentyl + bentazone + glyphosate; flumiclorac-pentyl + carfentrazone + glyphosate; flumiclorac-pentyl + clomazone + glyphosate; flumiclorac-pentyl + nicosulfuron + glyphosate; flumiclorac-pentyl + rimsulfuron + glyphosate; flumidorac-pentyl + halosulfuron + glyphosate; flumiclorac-pentyl + metribuzin + glyphosate; flumiclorac-pentyl + prosulfuron + glyphosate; flumiclorac-pentyl + primisulfuron + glyphosate; flumiclorac-pentyl + dicamba + glyphosate; flumiclorac-pentyl + fluthiacet + glyphosate; flumiclorac-pentyl + pyridate + glyphosate; flumiclorac-pentyl + compound of the formula B + glyphosate; flumiclorac-pentyl + 2,4-D + glyphosate; flumiclorac-pentyl + clopyralide + glyphosate; flumiclorac-pentyl + diflufenzopyr + glyphosate; flumiclorac-pentyl + fluroxypyr + glyphosate; flumiclorac-pentyl + MCPA + glyphosate; flumiclorac-pentyl + MCPB + glyphosate; flumidorac-pentyl + MCPP + glyphosate; flumiclorac-pentyl + metobenzuron + glyphosate; flumiclorac-pentyl + thifensulfuron + glyphosate; flumiclorac-pentyl + aclonifen + glyphosate; flumiclorac-pentyl + EPTC + glyphosate; flumiclorac-pentyl + cyanazine + glyphosate; flumioxazin + atrazin + glyphosate; flumioxazin + terbuthylazine + glyphosate; flumioxazin + (S)-metolachlor + glyphosate; flumioxazin + metolachlor + glyphosate; flumioxazin + compound of the formula A + glyphosate; flumioxazin + terbutryn + glyphosate; flumioxazin + simazine + glyphosate; flumioxazin + dimethenamid or (S)-dimethenamid + glyphosate; flumioxazin + flufenacet + glyphosate; ftumioxazin + acetochlor + glyphosate; flumioxazin + alachlor + glyphosate; flumioxazin + isoxaflutole + glyphosate; flumioxazin + isoxachlortole + glyphosate; flumioxazin + mesotrione + glyphosate; flumioxazin + sulcotrione + glyphosate; flumioxazin + metosulam + glyphosate; flumioxazin + flumetsulam + glyphosate; flumioxazin + pendimethalin + glyphosate; flumioxazin + bromoxynil + glyphosate; flumioxazin + bentazone + glyphosate; flumioxazin + carfentrazone + glyphosate; flumioxazin + clomazone + glyphosate; flumioxazin + nicosulfuron + glyphosate; flumioxazin + rimsulfuron + glyphosate; flumioxazin + halosulfuron + glyphosate; flumioxazin + metribuzin + glyphosate; flumioxazin + flumiclorac + glyphosate; flumioxazin + prosulfuron + glyphosate; flumioxazin + primisulfuron + glyphosate; flumioxazin + dicamba + glyphosate; flumioxazin + fluthiacet + glyphosate; flumioxazin + pyridate + glyphosate; flumioxazin + compound of the formula B + glyphosate; flumioxazin + 2,4-D + glyphosate; flumioxazin + clopyralide + glyphosate; flumioxazin + diflufenzopyr + glyphosate; flumioxazin + fluroxypyr + glyphosate; flumioxazin + MCPA + glyphosate; flumioxazin + MCPB + glyphosate; flumioxazin + MCPP + glyphosate; flumioxazin + metobenzuron + glyphosate; flumioxazin + thifensulfuron + glyphosate; flumioxazin + aclonifen + glyphosate; flumioxazin + EPTC + glyphosate; flumioxazin + cyanazine + glyphosate; fluthiacet-methyl + atrazin + glyphosate; fluthiacet-methyl + terbuthylazine + glyphosate; fluthiacet-methyl + (S)-metolachlor + glyphosate; fluthiacet-methyl + metolachlor + glyphosate; fluthiacet-methyl + compound of the formula A + glyphosate; fluthiacet-methyl + terbutryn + glyphosate; fluthiacet-methyl + simazine + glyphosate; fluthiacet-methyl + dimethenamid or (S)-dimethenamid + glyphosate; fluthiacet-methyl + flufenacet + glyphosate; fluthiacet-methyl + acetochlor + glyphosate; fluthiacet-methyl + alachlor + glyphosate; fluthiacet-methyl + isoxaflutole + glyphosate; fluthiacet-methyl + isoxachlortole + glyphosate; fluthiacet-methyl + mesotrione + glyphosate; fluthiacet-methyl + sulcotrione + glyphosate; fluthiacet-methyl + metosulam + glyphosate; fluthiacet-methyl + flumetsulam + glyphosate; fluthiacet-methyl + pendimethalin + glyphosate; fluthiacet-methyl + bromoxynil + glyphosate; fluthiacet-methyl + bentazone + glyphosate; fluthiacet-methyl + carfentrazone + glyphosate; fluthiacet-methyl + clomazone + glyphosate; fluthiacet-methyl + nicosulfuron + glyphosate; fluthiacet-methyl + rimsulfuron + glyphosate; fluthiacet-methyl + halosulfuron + glyphosate; fluthiacet-methyl + metribuzin + glyphosate; fluthiacet-methyl + flumiclorac + glyphosate; fluthiacet-methyl + prosutfuron + glyphosate; fluthiacet-methyl + primisulfuron + glyphosate; fluthiacet-methyl + dicamba + glyphosate; fluthiacet-methyl + pyridate + glyphosate; fluthiacet-methyl + compound of the formula B + glyphosate; fluthiacet-methyl + 2,4-D + glyphosate; fluthiacet-methyl + clopyralide + glyphosate; fluthiacet-methyl + diflufenzopyr + glyphosate; fluthiacet-methyl + fluroxypyr + glyphosate; fluthiacet-methyl + MCPA + glyphosate; fluthiacet-methyl + MCPB + glyphosate; fluthiacet-methyl + MCPP + glyphosate; fluthiacet-methyl + metobenzuron + glyphosate; fluthiacet-methyl + thifensulfuron + glyphosate; fluthiacet-methyl + aclonifen + glyphosate; fluthiacet-methyl + EPTC + glyphosate; fluthiacet-methyl + cyanazine + glyphosate; oxadiargyl + atrazin + glyphosate; oxadiargyl + terbuthylazine + glyphosate; oxadiargyl + (S)-metolachlor + glyphosate; oxadiargyl + metolachlor + glyphosate; oxadiargyl + compound of the formula A + glyphosate; oxadiargyl + terbutryn + glyphosate; oxadiargyl + simazine + glyphosate; oxadiargyl + dimethenamid or (S)-dimethenamid + glyphosate; oxadiargyl + flufenacet + glyphosate; oxadiargyl + acetochlor + glyphosate; oxadiargyl + alachlor + glyphosate; oxadiargyl + isoxaflutole + glyphosate; oxadiargyl + isoxachlortole + glyphosate; oxadiargyl + mesotrione + glyphosate; oxadiargyl + sulcotrione + glyphosate; oxadiargyl + metosulam + glyphosate; oxadiargyl + flumetsulam + glyphosate; oxadiargyl + pendimethalin + glyphosate; oxadiargyl + bromoxynil + glyphosate; oxadiargyl + bentazone + glyphosate; oxadiargyl + carfentrazone + glyphosate; oxadiargyl + clomazone + glyphosate; oxadiargyl + nicosulfuron + glyphosate; oxadiargyl + rimsulfuron + glyphosate; oxadiargyl + halosulfuron + glyphosate; oxadiargyl + metribuzin + glyphosate; oxadiargyl + flumiclorac + glyphosate; oxadiargyl + prosulfuron + glyphosate; oxadiargyl + primisulfuron + glyphosate; oxadiargyl + dicamba + glyphosate; oxadiargyl + fluthiacet + glyphosate; oxadiargyl + pyridate + glyphosate; oxadiargyl + compound of the formula B + glyphosate; oxadiargyl + 2,4-D + glyphosate; oxadiargyl + clopyralide + glyphosate; oxadiargyl + diflufenzopyr + glyphosate; oxadiargyl + fluroxypyr + glyphosate; oxadiargyl + MCPA + glyphosate; oxadiargyl + MCPB + glyphosate; oxadiargyl + MCPP + glyphosate; oxadiargyl + metobenzuron + glyphosate; oxadiargyl + thifensulfuron + glyphosate; oxadiargyl + aclonifen + glyphosate; oxadiargyl + EPTC + glyphosate; oxadiargyl + cyanazine + glyphosate; oxadiazon + atrazin + glyphosate; oxadiazon + terbuthylazine + glyphosate; oxadiazon + (S)-metolachlor + glyphosate; oxadiazon + metolachlor + glyphosate; oxadiazon + compound of the formula A + glyphosate; oxadiazon + terbutryn + glyphosate; oxadiazon + simazine + glyphosate; oxadiazon + dimethenamid or (S)-dimethenamid + glyphosate; oxadiazon + flufenacet + glyphosate; oxadiazon + acetochlor + glyphosate; oxadiazon + alachlor + glyphosate; oxadiazon + isoxaflutole + glyphosate; oxadiazon + isoxachlortole + glyphosate; oxadiazon + mesotrione + glyphosate; oxadiazon + sulcotrione + glyphosate; oxadiazon + metosulam + glyphosate; oxadiazon + flumetsulam + glyphosate; oxadiazon + pendimethalin + glyphosate; oxadiazon + bromoxynil + , glyphosate; oxadiazon + bentazone + glyphosate; oxadiazon + carfentrazone + glyphosate; oxadiazon + clomazone + glyphosate; oxadiazon + nicosulfuron + glyphosate; oxadiazon + rimsulfuron + glyphosate; oxadiazon + halosulfuron + glyphosate; oxadiazon + metribuzin + glyphosate; oxadiazon + flumiclorac + glyphosate; oxadiazon + prosulfuron + glyphosate; oxadiazon + primisulfuron + glyphosate; oxadiazon + dicamba + glyphosate; oxadiazon + fluthiacet + glyphosate; oxadiazon + pyridate + glyphosate; oxadiazon + compound of the formula B + glyphosate; oxadiazon + 2,4-D + glyphosate; oxadiazon + clopyralide + glyphosate; oxadiazon + diflufenzopyr + glyphosate; oxadiazon + fluroxypyr + glyphosate; oxadiazon + MCPA + glyphosate; oxadiazon + MCPB + glyphosate; oxadiazon + MCPP + glyphosate; oxadiazon + metobenzuron + glyphosate; oxadiazon + thifensulfuron + glyphosate; oxadiazon + aclonifen + glyphosate; oxadiazon + EPTC + glyphosate; oxadiazon + cyanazine + glyphosate; pentoxazone + atrazin + glyphosate; pentoxazone + terbuthylazine + glyphosate; pentoxazone + (S)-metolachlor + glyphosate; pentoxazone + metolachlor + glyphosate; pentoxazone + compound of the formula A + glyphosate; pentoxazone + terbutryn + glyphosate; pentoxazone + simazine + glyphosate; pentoxazone + dimethenamid or (S)-dimethenamid + glyphosate; pentoxazone + flufenacet + glyphosate; pentoxazone + acetochlor + glyphosate; pentoxazone + alachlor + glyphosate; pentoxazone + isoxaflutole + glyphosate; pentoxazone + isoxachlortole + glyphosate; pentoxazone + mesotrione + glyphosate; pentoxazone + sulcotrione + glyphosate; pentoxazone + metosulam + glyphosate; pentoxazone + flumetsulam + glyphosate; pentoxazone + pendimethalin + glyphosate; pentoxazone + bromoxynil + glyphosate; pentoxazone + bentazone + glyphosate; pentoxazone + carfentrazone + glyphosate; pentoxazone + clomazone + glyphosate; pentoxazone + nicosulfuron + glyphosate; pentoxazone + rimsulfuron + glyphosate; pentoxazone + halosulfuron + glyphosate; pentoxazone + metribuzin + glyphosate; pentoxazone + flumiclorac + glyphosate; pentoxazone + prosulfuron + glyphosate; pentoxazone + primisulfuron + glyphosate; pentoxazone + dicamba + glyphosate; pentoxazone + fluthiacet + glyphosate; pentoxazone + pyridate + glyphosate; pentoxazone + compound of the formula B + glyphosate; pentoxazone + 2,4-D + glyphosate; pentoxazone + clopyralide + glyphosate; pentoxazone + diflufenzopyr + glyphosate; pentoxazone + fluroxypyr + glyphosate; pentoxazone + MCPA + glyphosate; pentoxazone + MCPB + glyphosate; pentoxazone + MCPP + glyphosate; pentoxazone + metobenzuron + glyphosate; pentoxazone + thifensulfuron + glyphosate; pentoxazone + aclonifen + glyphosate; pentoxazone + EPTC + glyphosate; pentoxazone + cyanazine + glyphosate; sulfentrazone + atrazin + glyphosate; sulfentrazone + terbuthylazine + glyphosate; sulfentrazone + (S)-metolachlor + glyphosate; sulfentrazone + metolachlor + glyphosate; sulfentrazone + compound of the formula A + glyphosate; sulfentrazone + terbutryn + glyphosate; sulfentrazone + simazine + glyphosate; sulfentrazone + dimethenamid or (S)-dimethenamid + glyphosate; sulfentrazone + flufenacet + glyphosate; sulfentrazone + acetochlor + glyphosate; sulfentrazone + alachlor + glyphosate; sulfentrazone + isoxaflutole + glyphosate; sulfentrazone + isoxachlortole + glyphosate; sulfentrazone + mesotrione + glyphosate; sulfentrazone + sulcotrione + glyphosate; sulfentrazone + metosulam + glyphosate; sulfentrazone + flumetsulam + glyphosate; sulfentrazone + pendimethalin + glyphosate; sulfentrazone + bromoxynil + glyphosate; sulfentrazone + bentazone + glyphosate; sulfentrazone + carfentrazone + glyphosate; sulfentrazone + clomazone + glyphosate; sulfentrazone + nicosulfuron + glyphosate; sulfentrazone + rimsulfuron + glyphosate; sulfentrazone + halosulfuron + glyphosate; sulfentrazone + metribuzin + glyphosate; sulfentrazone + flumiclorac + glyphosate; sulfentrazone + prosulfuron + glyphosate; sulfentrazone + primisulfuron + glyphosate; sulfentrazone + dicamba + glyphosate; sulfentrazone + fluthiacet + glyphosate; sulfentrazone + pyridate + glyphosate; sulfentrazone + compound of the formula B + glyphosate; sulfentrazone + 2,4-D + glyphosate; sulfentrazone + clopyralide + glyphosate; sulfentrazone + diflufenzopyr + glyphosate; sulfentrazone + fluroxypyr + glyphosate; sulfentrazone + MCPA + glyphosate; sulfentrazone + MCPB + glyphosate; sulfentrazone + MCPP + glyphosate; sulfentrazone + metobenzuron + glyphosate; sulfentrazone + thifensulfuron + glyphosate; sulfentrazone + aclonifen + glyphosate; sulfentrazone + EPTC + glyphosate; sulfentrazone + cyanazine + glyphosate; fluazolate + atrazin + glyphosate; fluazolate + terbuthylazine + glyphosate; fluazolate + (S)-metolachlor + glyphosate; fluazolate + metolachlor + glyphosate; fluazolate + compound of the formula A + glyphosate; fluazolate + terbutryn + glyphosate; fluazolate + simazine + glyphosate; fluazolate + dimethenamid or (S)-dimethenamid + glyphosate; fluazolate + flufenacet + glyphosate; fluazolate + acetochlor + glyphosate; fluazolate + alachlor + glyphosate; fluazolate + isoxaflutole + glyphosate; fluazolate + isoxachlortole + glyphosate; fluazolate + mesotrione + glyphosate; fluazolate + sulcotrione + glyphosate; fluazolate + metosulam + glyphosate; fluazolate + flumetsulam + glyphosate; fluazolate + pendimethalin + glyphosate; fluazolate + bromoxynil + glyphosate; fluazolate + bentazone + glyphosate; fluazolate + carfentrazone + glyphosate; fluazolate + clomazone + glyphosate; fluazolate + nicosulfuron + glyphosate; fluazolate + rimsulfuron + glyphosate; fluazolate + halosulfuron + glyphosate; fluazolate + metribuzin + glyphosate; fluazolate + flumiclorac + glyphosate; fluazolate + prosulfuron + glyphosate; fluazolate + primisulfuron + glyphosate; fluazolate + dicamba + glyphosate; fluazolate + fluthiacet + glyphosate; fluazolate + pyridate + glyphosate; fluazolate + compound of the formula B + glyphosate; fluazolate + 2,4-D + glyphosate; fluazolate + clopyralide + glyphosate; fluazolate + diflufenzopyr + glyphosate; fluazolate + fluroxypyr + glyphosate; fluazolate + MCPA + glyphosate; fluazolate + MCPB + glyphosate; fluazolate + MCPP + glyphosate; fluazolate + metobenzuron + glyphosate; fluazolate + thifensulfuron + glyphosate; fluazolate + aclonifen + glyphosate; fluazolate + EPTC + glyphosate; fluazolate + cyanazine + glyphosate; pyraflufen-ethyl + atrazin + glyphosate; pyraflufen-ethyl + terbuthylazine + glyphosate; pyraflufen-ethyl + (S)-metolachlor + glyphosate; pyraflufen-ethyl + metolachlor + glyphosate; pyraflufen-ethyl + compound of the formula A + glyphosate; pyraflufen-ethyl + terbutryn + glyphosate; pyraflufen-ethyl + simazine + glyphosate; pyraflufen-ethyl + dimethenamid or (S)-dimethenamid + glyphosate; pyraflufen-ethyl + flufenacet + glyphosate; pyraflufen-ethyl + acetochlor + glyphosate; pyraflufen-ethyl + alachlor + glyphosate; pyraflufen-ethyl + isoxaflutole + glyphosate; pyraflufen-ethyl + isoxachlortole + glyphosate; pyraflufen-ethyl + mesotrione + glyphosate; pyraflufen-ethyl + sulcotrione + glyphosate; pyraflufen-ethyl + metosulam + glyphosate; pyraflufen-ethyl + flumetsulam + glyphosate; pyraflufen-ethyl + pendimethalin + glyphosate; pyraflufen-ethyl + bromoxynil + glyphosate; pyraflufen-ethyl + bentazone + glyphosate; pyraflufen-ethyl + carfentrazone + glyphosate; pyraflufen-ethyl + clomazone + glyphosate; pyraflufen-ethyl + nicosulfuron + glyphosate; pyraflufen-ethyl + rimsulfuron + glyphosate; pyraflufen-ethyl + halosulfuron + glyphosate; pyraflufen-ethyl + metribuzin + glyphosate; pyraflufen-ethyl + flumiclorac + glyphosate; pyraflufen-ethyl + prosulfuron + glyphosate; pyraflufen-ethyl + primisulfuron + glyphosate; pyraflufen-ethyl + dicamba + glyphosate; pyraflufen-ethyl + fluthiacet + glyphosate; pyraflufen-ethyl + pyridate + glyphosate; pyraflufen-ethyl + compound of the formula B + glyphosate; pyraflufen-ethyl + 2,4-D + glyphosate; pyraflufen-ethyl + clopyralide + glyphosate; pyraflufen-ethyl + diflufenzopyr + glyphosate; pyraflufen-ethyl + fluroxypyr + glyphosate; pyraflufen-ethyl + MCPA + glyphosate; pyraflufen-ethyl + MCPB + glyphosate; pyraflufen-ethyl + MCPP + glyphosate; pyraflufen-ethyl + metobenzuron + glyphosate; pyraflufen-ethyl + thifensulfuron + glyphosate; pyraflufen-ethyl + aclonifen + glyphosate; pyraflufen-ethyl + EPTC + glyphosate; pyraflufen-ethyl + cyanazine + glyphosate; flumipropyn + atrazin + glyphosate; flumipropyn + terbuthylazine + glyphosate; flumipropyn + (S)-metolachlor + glyphosate; flumipropyn + metolachlor + glyphosate; flumipropyn + compound of the formula A + glyphosate; flumipropyn + terbutryn + glyphosate; flumipropyn + simazine + glyphosate; flumipropyn + dimethenamid or (S)-dimethenamid + glyphosate; flumipropyn + flufenacet + glyphosate; flumipropyn + acetochlor + glyphosate; flumipropyn + alachlor + glyphosate; flumipropyn + isoxaflutole + glyphosate; flumipropyn + isoxachlortole + glyphosate; flumipropyn + mesotrione + glyphosate; flumipropyn + sulcotrione + glyphosate; flumipropyn + metosulam + glyphosate; flumipropyn + flumetsulam + glyphosate; flumipropyn + pendimethalin + glyphosate; flumipropyn + bromoxynil + glyphosate; flumipropyn + bentazone + glyphosate; flumipropyn + carfentrazone + glyphosate; flumipropyn + clomazone + glyphosate; flumipropyn + nicosulfuron + glyphosate; flumipropyn + rimsulfuron + glyphosate; flumipropyn + halosulfuron + glyphosate; flumipropyn + metribuzin + glyphosate; flumipropyn + flumiclorac + glyphosate; flumipropyn + prosulfuron + glyphosate; flumipropyn + primisulfuron + glyphosate; flumipropyn + dicamba + glyphosate; flumipropyn + fluthiacet + glyphosate; flumipropyn + pyridate + glyphosate; flumipropyn + compound of the formula B + glyphosate; flumipropyn + 2,4-D + glyphosate; flumipropyn + clopyralide + glyphosate; flumipropyn + diflufenzopyr + glyphosate; flumipropyn + fluroxypyr + glyphosate; flumipropyn + MCPA + glyphosate; flumipropyn + MCPB + glyphosate; flumipropyn + MCPP + glyphosate; flumipropyn + metobenzuron + glyphosate; flumipropyn + thifensulfuron + glyphosate; flumipropyn + aclonifen + glyphosate; flumipropyn + EPTC + glyphosate; flumipropyn + cyanazine + glyphosate; flupropacil + atrazin + glyphosate; flupropacil + terbuthylazine + glyphosate; flupropacil + (S)-metolachlor + glyphosate; flupropacil + metolachlor + glyphosate; flupropacil + compound of the formula A + glyphosate; flupropacil + terbutryn + glyphosate; flupropacil + simazine + glyphosate; flupropacil + dimethenamid or (S)-dimethenamid + glyphosate; flupropacil + flufenacet + glyphosate; flupropacil + acetochlor + glyphosate; flupropacil + alachlor + glyphosate; flupropacil + isoxaflutole + glyphosate; flupropacil + isoxachlortole + glyphosate; flupropacil + mesotrione + glyphosate; flupropacil + sulcotrione + glyphosate; flupropacil + metosulam + glyphosate; flupropacil + flumetsulam + glyphosate; flupropacil + pendimethalin + glyphosate; flupropacil + bromoxynil + glyphosate; flupropacil + bentazone + glyphosate; flupropacil + carfentrazone + glyphosate; flupropacil + clomazone + glyphosate; flupropacil + nicosulfuron + glyphosate; flupropacil + rimsulfuron + glyphosate; flupropacil + halosulfuron + glyphosate; flupropacil + metribuzin + glyphosate; flupropacil + flumiclorac + glyphosate; flupropacil + prosulfuron + glyphosate; flupropacil + primisulfuron + glyphosate; flupropacil + dicamba + glyphosate; flupropacil + fluthiacet + glyphosate; flupropacil + pyridate + glyphosate; flupropacil + compound of the formula B + glyphosate; flupropacil + 2,4-D + glyphosate; flupropacil + clopyralide + glyphosate; flupropacil + diflufenzopyr + glyphosate; flupropacil + fluroxypyr + glyphosate; flupropacil + MCPA + glyphosate; flupropacil + MCPB + glyphosate; flupropacil + MCPP + glyphosate; flupropacil + metobenzuron + glyphosate; flupropacil + thifensulfuron + glyphosate; flupropacil + aclonifen + glyphosate; flupropacil + EPTC + glyphosate; flupropacil + cyanazine + glyphosate; nipyraclofen + atrazin + glyphosate; nipyraclofen + terbuthylazine + glyphosate; nipyraclofen + (S)-metolachlor + glyphosate; nipyraclofen + metolachlor + glyphosate; nipyraclofen + compound of the formula A + glyphosate; nipyraclofen + terbutryn + glyphosate; nipyraclofen + simazine + glyphosate; nipyraciofen + dimethenamid or (S)-dimethenamid + glyphosate; nipyraclofen + flufenacet + glyphosate; nipyraclofen + acetochlor + glyphosate; nipyraclofen + atachlor + glyphosate; nipyraclofen + isoxaflutole + glyphosate; nipyraclofen + isoxachlortole + glyphosate; nipyraclofen + mesotrione + glyphosate; nipyraclofen + sulcotrione + glyphosate; nipyraclofen + metosulam + glyphosate; nipyraclofen + flumetsulam + glyphosate; nipyraclofen + pendimethalin + glyphosate; nipyraclofen + bromoxynil + glyphosate; nipyraclofen + bentazone + glyphosate; nipyraclofen + carfentrazone + glyphosate; nipyraclofen + clomazone + glyphosate; nipyraclofen + nicosulfuron + glyphosate; nipyraclofen + rimsulfuron + glyphosate; nipyraclofen + halosulfuron + glyphosate; nipyraclofen + metribuzin + glyphosate; nipyraclofen + flumiclorac + glyphosate; nipyraclofen + prosulfuron + glyphosate; nipyraclofen + primisulfuron + glyphosate; nipyraclofen + dicamba + glyphosate; nipyraclofen + fluthiacet + glyphosate; nipyraclofen + pyridate + glyphosate; nipyraclofen + compound of the formula B + glyphosate; nipyraclofen + 2,4-D + glyphosate; nipyraclofen + clopyralide + glyphosate; nipyraclofen + diflufenzopyr + glyphosate; nipyraclofen + fluroxypyr + glyphosate; nipyraclofen + MCPA + glyphosate; nipyraclofen + MCPB + glyphosate; nipyraclofen + MCPP + glyphosate; nipyraclofen + metobenzuron + glyphosate; nipyraclofen + thifensulfuron + glyphosate; nipyraclofen + aclonifen + glyphosate; nipyraclofen + EPTC + glyphosate; nipyraclofen + cyanazine + glyphosate; benzfendizone + atrazin + glyphosate; benzfendizone + terbuthylazine + glyphosate; benzfendizone + (S)-metolachlor + glyphosate; benzfendizone + metolachlor + glyphosate; benzfendizone + compound of the formula A + glyphosate; benzfendizone + terbutryn + glyphosate; benzfendizone + simazine + glyphosate; benzfendizone + dimethenamid or (S)-dimethenamid + glyphosate; benzfendizone + flufenacet + glyphosate; benzfendizone + acetochlor + glyphosate; benzfendizone + alachlor + glyphosate; benzfendizone + isoxaflutole + glyphosate; benzfendizone + isoxachlortole + glyphosate; benzfendizone + mesotrione + glyphosate; benzfendizone + sulcotrione + glyphosate; benzfendizone + metosutam + glyphosate; benzfendizone + flumetsulam + glyphosate; benzfendizone + pendimethalin + glyphosate; benzfendizone + bromoxynil + glyphosate; benzfendizone + bentazone + glyphosate; benzfendizone + carfentrazone + glyphosate; benzfendizone + clomazone + glyphosate; benzfendizone + nicosulfuron + glyphosate; benzfendizone + rimsulfuron + glyphosate; benzfendizone + halosulfuron + glyphosate; benzfendizone + metribuzin + glyphosate; benzfendizone + flumiclorac + glyphosate; benzfendizone + prosulfuron + glyphosate; benzfendizone + primisulfuron + glyphosate; benzfendizone + dicamba + glyphosate; benzfendizone + fluthiacet + glyphosate; benzfendizone + pyridate + glyphosate; benzfendizone + compound of the formula B + glyphosate; benzfendizone + 2,4-D + glyphosate; benzfendizone + clopyralide + glyphosate; benzfendizone + diflufenzopyr + glyphosate; benzfendizone + fluroxypyr + glyphosate; benzfendizone + MCPA + glyphosate; benzfendizone + MCPB + glyphosate; benzfendizone + MCPP + glyphosate; benzfendizone + metobenzuron + glyphosate; benzfendizone + thifensulfuron + glyphosate; benzfendizone + aclonifen + glyphosate; benzfendizone + EPTC + glyphosate; benzfendizone + cyanazine + glyphosate; thidiazimin + atrazin + glyphosate; thidiazimin + terbuthylazine + glyphosate; thidiazimin + (S)-metolachlor + glyphosate; thidiazimin + metolachlor + glyphosate; thidiazimin + compound of the formula A + glyphosate; thidiazimin + terbutryn + glyphosate; thidiazimin + simazine + glyphosate; thidiazimin + dimethenamid or (S)-dimethenamid + glyphosate; thidiazimin + flufenacet + glyphosate; thidiazimin + acetochtor + glyphosate; thidiazimin + alachlor + glyphosate; thidiazimin + isoxaflutole + glyphosate; thidiazimin + isoxachlortole + glyphosate; thidiazimin + mesotrione + glyphosate; thidiazimin + sulcotrione + glyphosate; thidiazimin + metosulam + glyphosate; thidiazimin + flumetsulam + glyphosate; thidiazimin + pendimethalin + glyphosate; thidiazimin + bromoxynil + glyphosate; thidiazimin + bentazone + glyphosate; thidiazimin + carfentrazone + glyphosate; thidiazimin + clomazone + glyphosate; thidiazimin + nicosulfuron + glyphosate; thidiazimin + rimsulfuron + glyphosate; thidiazimin + halosulfuron + glyphosate; thidiazimin + metribuzin + glyphosate; thidiazimin + flumiclorac + glyphosate; thidiazimin + prosulfuron + glyphosate; thidiazimin + primisulfuron + glyphosate; thidiazimin + dicamba + glyphosate; thidiazimin + fluthiacet + glyphosate; thidiazimin + pyridate + glyphosate; thidiazimin + compound of the formula B + glyphosate; thidiazimin + 2,4-D + glyphosate; thidiazimin + clopyralide + glyphosate; thidiazimin + diflufenzopyr + glyphosate; thidiazimin + fluroxypyr + glyphosate; thidiazimin + MCPA + glyphosate; thidiazimin + MCPB + glyphosate; thidiazimin + MCPP + glyphosate; thidiazimin + metobenzuron + glyphosate; thidiazimin + thifensulfuron + glyphosate; thidiazimin + aclonifen + glyphosate; thidiazimin + EPTC + glyphosate; and thidiazimin + cyanazine + glyphosate.

acifluorfen + atrazin + glufosinate; acifluorfen + terbuthylazine + glufosinate; acifluorfen + (S)-metolachlor + glufosinate; acifluorfen + metolachlor + glufosinate; acifluorfen + compound of the formula A + glufosinate; acifluorfen + terbutryn + glufosinate; acifluorfen + simazine + glufosinate; acifluorfen + dimethenamid or (S)-dimethenamid + glufosinate; acifluorfen + flufenacet + glufosinate; acifluorfen + acetochlor + glufosinate; acifluorfen + alachlor + glufosinate; acifluorfen + isoxaflutole + glufosinate; acifluorfen + isoxachlortole + glufosinate; acifluorfen + mesotrione + glufosinate; acifluorfen + sulcotrione + glufosinate; acifluorfen + metosulam + glufosinate; acifluorfen + flumetsulam + glufosinate; acifluorfen + pendimethalin + glufosinate; acifluorfen + bromoxynil + glufosinate; acifluorfen + bentazone + glufosinate; acifluorfen + carfentrazone + glufosinate; acifluorfen + clomazone + glufosinate; acifluorfen + nicosulfuron + glufosinate; acifluorfen + rimsulfuron + glufosinate; acifluorfen + halosulfuron + glufosinate; acifluorfen + metribuzin + glufosinate; acifluorfen + flumiclorac + glufosinate; acifluorfen + prosulfuron + glufosinate; acifluorfen + primisulfuron + glufosinate; acifluorfen + dicamba + glufosinate; acifluorfen + fluthiacet + glufosinate; acifluorfen + pyridate + glufosinate; acifluorfen + compound of the formula B + glufosinate; acifluorfen + 2,4-D + glufosinate; acifluorfen + clopyralide + glufosinate; acifluorfen + diflufenzopyr + glufosinate; acifluorfen + fluroxypyr + glufosinate; acifluorfen + MCPA + glufosinate; acifluorfen + MCPB + glufosinate; acifluorfen + MCPP + glufosinate; acifluorfen + metobenzuron + glufosinate; acifluorfen + thifensulfuron + glufosinate; acifluorfen + aclonifen + glufosinate; acifluorfen + EPTC + glufosinate; acifluorfen + cyanazine + glufosinate; aclonifen + atrazin + glufosinate; aclonifen + terbuthylazine + glufosinate; aclonifen + (S)-metolachlor + glufosinate; aclonifen + metolachlor + glufosinate; aclonifen + compound of the formula A + glufosinate; aclonifen + terbutryn + glufosinate; aclonifen + simazine + glufosinate; aclonifen + dimethenamid or (S)-dimethenamid + glufosinate; aclonifen + flufenacet + glufosinate; aclonifen + acetochlor + glufosinate; aclonifen + alachlor + glufosinate; aclonifen + isoxaflutole + glufosinate; aclonifen + isoxachlortole + glufosinate; aclonifen + mesotrione + glufosinate; aclonifen + sulcotrione + glufosinate; aclonifen + metosulam + glufosinate; aclonifen + flumetsulam + glufosinate; aclonifen + pendimethalin + glufosinate; aclonifen + bromoxynil + glufosinate; aclonifen + bentazone + glufosinate; aclonifen + carfentrazone + glufosinate; aclonifen + clomazone + glufosinate; aclonifen + nicosulfuron + glufosinate; aclonifen + rimsulfuron + glufosinate; aclonifen + halosulfuron + glufosinate; aclonifen + metribuzin + glufosinate; aclonifen + flumiclorac + glufosinate; aclonifen + prosulfuron + glufosinate; aclonifen + primisulfuron + glufosinate; aclonifen + dicamba + glufosinate; aclonifen + fluthiacet + glufosinate; aclonifen + pyridate + glufosinate; aclonifen + compound of the formula B + glufosinate; aclonifen + 2,4-D + glufosinate; aclonifen + clopyralide + glufosinate; aclonifen + diflufenzopyr + glufosinate; aclonifen + fluroxypyr + glufosinate; aclonifen + MCPA + glufosinate; aclonifen + MCPB + glufosinate; aclonifen + MCPP + glufosinate; aclonifen + metobenzuron + glufosinate; aclonifen + thifensulfuron + glufosinate; aclonifen + EPTC + glufosinate; aclonifen + cyanazine + glufosinate; bifenox + atrazin + glufosinate; bifenox + terbuthylazine + glufosinate; bifenox + (S)-metolachlor + glufosinate; bifenox + metolachlor + glufosinate; bifenox + compound of the formula A + glufosinate; bifenox + terbutryn + glufosinate; bifenox + simazine + glufosinate; bifenox + dimethenamid or (5)-dimethenamid + glufosinate; bifenox + flufenacet + glufosinate; bifenox + acetochlor + glufosinate; bifenox + alachlor + glufosinate; bifenox + isoxaflutole + glufosinate; bifenox + isoxachlortole + glufosinate; bifenox + mesotrione + glufosinate; bifenox + sulcotrione + glufosinate; bifenox + metosulam + glufosinate; bifenox + flumetsulam + glufosinate; bifenox + pendimethalin + glufosinate; bifenox + bromoxynil + glufosinate; bifenox + bentazone + glufosinate; bifenox + carfentrazone + glufosinate; bifenox + clomazone + glufosinate; bifenox + nicosutfuron + glufosinate; bifenox + rimsulfuron + glufosinate; bifenox + halosulfuron + glufosinate; bifenox + metribuzin + glufosinate; bifenox + flumiclorac + glufosinate; bifenox + prosulfuron + glufosinate; bifenox + primisulfuron + glufosinate; bifenox + dicamba + glufosinate; bifenox + fluthiacet + glufosinate; bifenox + pyridate + glufosinate; bifenox + compound of the formula B + glufosinate; bifenox + 2,4-D + glufosinate; bifenox + ctopyralide + glufosinate; bifenox + diflufenzopyr + glufosinate; bifenox + fluroxypyr + glufosinate; bifenox + MCPA + glufosinate; bifenox + MCPB + glufosinate; bifenox + MCPP + glufosinate; bifenox + metobenzuron + glufosinate; bifenox + thifensulfuron + glufosinate; bifenox + aclonifen + glufosinate; bifenox + EPTC + glufosinate; bifenox + cyanazine + glufosinate; chlornitrofen + atrazin + glufosinate; chlornitrofen + terbuthylazine + glufosinate; chlornitrofen + (S)-metolachlor + glufosinate; chlornitrofen + metolachlor + glufosinate; chlornitrofen + compound of the formula A + glufosinate; chlornitrofen + terbutryn + glufosinate; chlornitrofen + simazine + glufosinate; chlornitrofen + dimethenamid or (S)-dimethenamid + glufosinate; chlornitrofen + flufenacet + glufosinate; chlornitrofen + acetochlor + glufosinate; chlornitrofen + alachlor + glufosinate; chlornitrofen + isoxaflutole + glufosinate; chlornitrofen + isoxachlortole + glufosinate; chlornitrofen + mesotrione + glufosinate; chlornitrofen + sulcotrione + glufosinate; chlornitrofen + metosulam + glufosinate; chlornitrofen + flumetsulam + glufosinate; chlornitrofen + pendimethalin + glufosinate; chlornitrofen + bromoxynil + glufosinate; chlornitrofen + bentazone + glufosinate; chlornitrofen + carfentrazone + glufosinate; chlornitrofen + ciomazone + glufosinate; chlornitrofen + nicosulfuron + glufosinate; chlornitrofen + rimsulfuron + glufosinate; chlornitrofen + halosulfuron + glufosinate; chlornitrofen + metribuzin + glufosinate; chlornitrofen + flumiclorac + glufosinate; chlornitrofen + prosulfuron + glufosinate; chlornitrofen + primisulfuron + glufosinate; chlornitrofen + dicamba + glufosinate; chlornitrofen + fluthiacet + glufosinate; chlornitrofen + pyridate + glufosinate; chlornitrofen + compound of the formula B + glufosinate; chlornitrofen + 2,4-D + glufosinate; chlornitrofen + clopyratide + glufosinate; chlornitrofen + diflufenzopyr + glufosinate; chlornitrofen + fluroxypyr + glufosinate; chlornitrofen + MCPA + glufosinate; chlornitrofen + MCPB + glufosinate; chlornitrofen + MCPP + glufosinate; chlornitrofen + metobenzuron + glufosinate; chlornitrofen + thifensulfuron + glufosinate; chlornitrofen + aclonifen + glufosinate; chlornitrofen + EPTC + glufosinate; chlornitrofen + cyanazine + glufosinate; ethoxyfen + atrazin + glufosinate; ethoxyfen + terbuthylazine + glufosinate; ethoxyfen + (S)-metolachlor + glufosinate; ethoxyfen + metolachlor + glufosinate; ethoxyfen + compound of the formula A + glufosinate; ethoxyfen + terbutryn + glufosinate; ethoxyfen + simazine + glufosinate; ethoxyfen + dimethenamid or (S)-dimethenamid + glufosinate; ethoxyfen + flufenacet + glufosinate; ethoxyfen + acetochlor + glufosinate; ethoxyfen + alachlor + glufosinate; ethoxyfen + isoxaflutole + glufosinate; ethoxyfen + isoxachlortole + glufosinate; ethoxyfen + mesotrione + glufosinate; ethoxyfen + sulcotrione + glufosinate; ethoxyfen + metosulam + glufosinate; ethoxyfen + flumetsulam + glufosinate; ethoxyfen + pendimethalin + glufosinate; ethoxyfen + bromoxynil + glufosinate; ethoxyfen + bentazone + glufosinate; ethoxyfen + carfentrazone + glufosinate; ethoxyfen + clomazone + glufosinate; ethoxyfen + nicosulfuron + glufosinate; ethoxyfen + rimsulfuron + glufosinate; ethoxyfen + halosulfuron + glufosinate; ethoxyfen + metribuzin + glufosinate; ethoxyfen + flumiclorac + glufosinate; ethoxyfen + prosulfuron + glufosinate; ethoxyfen + primisulfuron + glufosinate; ethoxyfen + dicamba + glufosinate; ethoxyfen + fluthiacet + glufosinate; ethoxyfen + pyridate + glufosinate; ethoxyfen + compound of the formula B + glufosinate; ethoxyfen + 2,4-D + glufosinate; ethoxyfen + clopyralide + glufosinate; ethoxyfen + diflufenzopyr + glufosinate; ethoxyfen + fluroxypyr + glufosinate; ethoxyfen + MCPA + glufosinate; ethoxyfen + MCPB + glufosinate; ethoxyfen + MCPP + glufosinate; ethoxyfen + metobenzuron + glufosinate; ethoxyfen + thifensulfuron + glufosinate; ethoxyfen + aclonifen + glufosinate; ethoxyfen + EPTC + glufosinate; ethoxyfen + cyanazine + glufosinate; fluoroglycofen + atrazin + glufosinate; fluoroglycofen + terbuthylazine + glufosinate; fluoroglycofen + (S)-metolachlor + glufosinate; fluoroglycofen + metolachlor + glufosinate; fluoroglycofen + compound of the formula A + glufosinate; fluoroglycofen + terbutryn + glufosinate; fluoroglycofen + simazine + glufosinate; fluoroglycofen + dimethenamid or (S)-dimethenamid + glufosinate; fluoroglycofen + flufenacet + glufosinate; fluoroglycofen + acetochlor + glufosinate; fluoroglycofen + alachlor + glufosinate; fluoroglycofen + isoxaflutole + glufosinate; fluoroglycofen + isoxachlortole + glufosinate; fluoroglycofen + mesotrione + glufosinate; fluoroglycofen + sulcotrione + glufosinate; fluoroglycofen + metosulam + glufosinate; fluoroglycofen + flumetsulam + glufosinate; fluoroglycofen + pendimethalin + glufosinate; fluoroglycofen + bromoxynil + glufosinate; fluoroglycofen + bentazone + glufosinate; fluoroglycofen + carfentrazone + glufosinate; fluoroglycofen + clomazone + glufosinate; fluoroglycofen + nicosulfuron + glufosinate; fluoroglycofen + rimsulfuron + glufosinate; fluoroglycofen + halosulfuron + glufosinate; fluoroglycofen + metribuzin + glufosinate; fluoroglycofen + flumiclorac + glufosinate; fluoroglycofen + prosulfuron + glufosinate; fluoroglycofen + primisulfuron + glufosinate; fluoroglycofen + dicamba + glufosinate; fluoroglycofen + fluthiacet + glufosinate; fluoroglycofen + pyridate + glufosinate; fluoroglycofen + compound of the formula B + glufosinate; fluoroglycofen + 2,4-D + glufosinate; fluoroglycofen + clopyralide + glufosinate; fluoroglycofen + diflufenzopyr + glufosinate; fluoroglycofen + fluroxypyr + glufosinate; fluoroglycofen + MCPA + glufosinate; fluoroglycofen + MCPB + glufosinate; fluoroglycofen + MCPP + glufosinate; fluoroglycofen + metobenzuron + glufosinate; fluoroglycofen + thifensulfuron + glufosinate; fluoroglycofen + aclonifen + glufosinate; fluoroglycofen + EPTC + glufosinate; fluoroglycofen + cyanazine + glufosinate; fomesafen + atrazin + glufosinate; fomesafen + terbuthylazine + glufosinate; fomesafen + (S)-metolachlor + glufosinate; fomesafen + metolachlor + glufosinate; fomesafen + compound of the formula A + glufosinate; fomesafen + terbutryn + glufosinate; fomesafen + simazine + glufosinate; fomesafen + dimethenamid or (S)-dimethenamid + glufosinate; fomesafen + flufenacet + glufosinate; fomesafen + acetochlor + glufosinate; fomesafen + alachlor + glufosinate; fomesafen + isoxaflutole + glufosinate; fomesafen + isoxachlortole + glufosinate; fomesafen + mesotrione + glufosinate; fomesafen + sulcotrione + glufosinate; fomesafen + metosulam + glufosinate; fomesafen + flumetsulam + glufosinate; fomesafen + pendimethalin + glufosinate; fomesafen + bromoxynil + glufosinate; fomesafen + bentazone + glufosinate; fomesafen + carfentrazone + glufosinate; fomesafen + clomazone + glufosinate; fomesafen + nicosulfuron + glufosinate; fomesafen + rimsulfuron + glufosinate; fomesafen + halosulfuron + glufosinate; fomesafen + metribuzin + glufosinate; fomesafen + flumiclorac + glufosinate; fomesafen + prosulfuron + glufosinate; fomesafen + primisulfuron + glufosinate; fomesafen + dicamba + glufosinate; fomesafen + fluthiacet + glufosinate; fomesafen + pyridate + glufosinate; fomesafen + compound of the formula B + glufosinate; fomesafen + 2,4-D + glufosinate; fomesafen + clopyralide + glufosinate; fomesafen + diflufenzopyr + glufosinate; fomesafen + fluroxypyr + glufosinate; fomesafen + MCPA + glufosinate; fomesafen + MCPB + glufosinate; fomesafen + MCPP + glufosinate; fomesafen + metobenzuron + glufosinate; fomesafen + thifensulfuron + glufosinate; fomesafen + aclonifen + glufosinate; fomesafen + EPTC + glufosinate; fomesafen + cyanazine + glufosinate; lactofen + atrazin + glufosinate; lactofen + terbuthylazine + glufosinate; lactofen + (S)-metotachlor + glufosinate; lactofen + metolachlor + glufosinate; lactofen + compound of the formula A + glufosinate; lactofen + terbutryn + glufosinate; lactofen + simazine + glufosinate; lactofen + dimethenamid or (S)-dimethenamid + glufosinate; lactofen + flufenacet + glufosinate; lactofen + acetochlor + glufosinate; lactofen + alachlor + glufosinate; lactofen + isoxaflutole + glufosinate; lactofen + isoxachlortole + glufosinate; lactofen + mesotrione + glufosinate; lactofen + sulcotrione + glufosinate; lactofen + metosulam + glufosinate; lactofen + flumetsulam + glufosinate; lactofen + pendimethalin + glufosinate; lactofen + bromoxynil + glufosinate; lactofen + bentazone + glufosinate; lactofen + carfentrazone + glufosinate; lactofen + clomazone + glufosinate; lactofen + nicosulfuron + glufosinate; lactofen + rimsulfuron + glufosinate; lactofen + halosulfuron + glufosinate; lactofen + metribuzin + glufosinate; lactofen + flumiclorac + glufosinate; lactofen + prosulfuron + glufosinate; lactofen + primisulfuron + glufosinate; lactofen + dicamba + glufosinate; lactofen + fluthiacet + glufosinate; lactofen + pyridate + glufosinate; lactofen + compound of the formula B + glufosinate; lactofen + 2,4-D + glufosinate; lactofen + clopyralide + glufosinate; lactofen + diflufenzopyr + glufosinate; lactofen + fluroxypyr + glufosinate; lactofen + MCPA + glufosinate; lactofen + MCPB + glufosinate; lactofen + MCPP + glufosinate; lactofen + metobenzuron + glufosinate; lactofen + thifensulfuron + glufosinate; lactofen + aclonifen + glufosinate; lactofen + EPTC + glufosinate; lactofen + cyanazine + glufosinate; oxyfluorfen + atrazin + glufosinate; oxyfluorfen + terbuthylazine + glufosinate; oxyfluorfen + (S)-metolachlor + glufosinate; oxyfluorfen + metolachlor + glufosinate; oxyfluorfen + compound of the formula A + glufosinate; oxyfluorfen + terbutryn + glufosinate; oxyfluorfen + simazine + glufosinate; oxyfluorfen + dimethenamid or (S)-dimethenamid + glufosinate; oxyfluorfen + flufenacet + glufosinate; oxyfluorfen + acetochlor + glufosinate; oxyfluorfen + alachlor + glufosinate; oxyfluorfen + isoxaflutole + glufosinate; oxyfluorfen + isoxachlortole + glufosinate; oxyfluorfen + mesotrione + glufosinate; oxyfluorfen + sulcotrione + glufosinate; oxyfluorfen + metosulam + glufosinate; oxyfluorfen + flumetsulam + glufosinate; oxyfluorfen + pendimethalin + glufosinate; oxyfluorfen + bromoxynil + glufosinate; oxyfluorfen + bentazone + glufosinate; oxyfluorfen + carfentrazone + glufosinate; oxyfluorfen + clomazone + glufosinate; oxyfluorfen + nicosulfuron + glufosinate; oxyfluorfen + rimsulfuron + glufosinate; oxyfluorfen + halosulfuron + glufosinate; oxyfluorfen + metribuzin + glufosinate; oxyfluorfen + flumiclorac + glufosinate; oxyfluorfen + prosulfuron + glufosinate; oxyfluorfen + primisulfuron + glufosinate; oxyfluorfen + dicamba + glufosinate; oxyfluorfen + fluthiacet + glufosinate; oxyfluorfen + pyridate + glufosinate; oxyfluorfen + compound of the formula B + glufosinate; oxyfluorfen + 2,4-D + glufosinate; oxyfluorfen + clopyralide + glufosinate; oxyfluorfen + diflufenzopyr + glufosinate; oxyfluorfen + fluroxypyr + glufosinate; oxyfluorfen + MCPA + glufosinate; oxyfluorfen + MCPB + glufosinate; oxyfluorfen + MCPP + glufosinate; oxyfluorfen + metobenzuron + glufosinate; oxyfluorfen + thifensulfuron + glufosinate; oxyfluorfen + aclonifen + glufosinate; oxyfluorfen + EPTC + glufosinate; oxyfluorfen + cyanazine + glufosinate; azafenidin + atrazin + glufosinate; azafenidin + terbuthylazine + glufosinate; azafenidin + (S)-metolachlor + glufosinate; azafenidin + metolachlor + glufosinate; azafenidin + compound of the formula A + glufosinate; azafenidin + terbutryn + glufosinate; azafenidin + simazine + glufosinate; azafenidin + dimethenamid or (S)-dimethenamid + glufosinate; azafenidin + flufenacet + glufosinate; azafenidin + acetochlor + glufosinate; azafenidin + alachlor + glufosinate; azafenidin + isoxaflutole + glufosinate; azafenidin + isoxachlortole + glufosinate; azafenidin + mesotrione + glufosinate; azafenidin + sulcotrione + glufosinate; azafenidin + metosulam + glufosinate; azafenidin + flumetsulam + glufosinate; azafenidin + pendimethalin + glufosinate; azafenidin + bromoxynil + glufosinate; azafenidin + bentazone + glufosinate; azafenidin + carfentrazone + glufosinate; azafenidin + clomazone + glufosinate; azafenidin + nicosulfuron + glufosinate; azafenidin + rimsulfuron + glufosinate; azafenidin + halosulfuron + glufosinate; azafenidin + metribuzin + glufosinate; azafenidin + flumiclorac + glufosinate; azafenidin + prosulfuron + glufosinate; azafenidin + primisulfuron + glufosinate; azafenidin + dicamba + glufosinate; azafenidin + fluthiacet + glufosinate; azafenidin + pyridate + glufosinate; azafenidin + compound of the formula B + glufosinate; azafenidin + 2,4-D + glufosinate; azafenidin + clopyralide + glufosinate; azafenidin + diflufenzopyr + glufosinate; azafenidin + fluroxypyr + glufosinate; azafenidin + MCPA + glufosinate; azafenidin + MCPB + glufosinate; azafenidin + MCPP + glufosinate; azafenidin + metobenzuron + glufosinate; azafenidin + thifensulfuron + glufosinate; azafenidin + aclonifen + glufosinate; azafenidin + EPTC + glufosinate; azafenidin + cyanazine + glufosinate; carfentrazone-ethyl + atrazin + glufosinate; carfentrazone-ethyl + terbuthylazine + glufosinate; carfentrazone-ethyl + (S)-metolachlor + glufosinate; carfentrazone-ethyl + metolachlor + glufosinate; carfentrazone-ethyl + compound of the formula A + glufosinate; carfentrazone-ethyl + terbutryn + glufosinate; carfentrazone-ethyl + simazine + glufosinate; carfentrazone-ethyl + dimethenamid or (S)-dimethenamid + glufosinate; carfentrazone-ethyl + flufenacet + glufosinate; carfentrazone-ethyl + acetochlor + glufosinate; carfentrazone-ethyl + alachlor + glufosinate; carfentrazone-ethyl + isoxaflutole + glufosinate; carfentrazone-ethyl + isoxachlortole + glufosinate; carfentrazone-ethyl + mesotrione + glufosinate; carfentrazone-ethyl + sulcotrione + glufosinate; carfentrazone-ethyl + metosulam + glufosinate; carfentrazone-ethyl + flumetsulam + glufosinate; carfentrazone-ethyl + pendimethalin + glufosinate; carfentrazone-ethyl + bromoxynil + glufosinate; carfentrazone-ethyl + bentazone + glufosinate; carfentrazone-ethyl + clomazone + glufosinate; carfentrazone-ethyl + nicosulfuron + glufosinate; carfentrazone-ethyl + rimsulfuron + glufosinate; carfentrazone-ethyl + halosulfuron + glufosinate; carfentrazone-ethyl + metribuzin + glufosinate; carfentrazone-ethyl + flumiclorac + glufosinate; carfentrazone-ethyl + prosulfuron + glufosinate; carfentrazone-ethyl + primisulfuron + glufosinate; carfentrazone-ethyl + dicamba + glufosinate; carfentrazone-ethyl + fluthiacet + glufosinate; carfentrazone-ethyl + pyridate + glufosinate; carfentrazone-ethyl + compound of the formula B + glufosinate; carfentrazone-ethyl + 2,4-D + glufosinate; carfentrazone-ethyl + clopyralide + glufosinate; carfentrazone-ethyl + diflufenzopyr + glufosinate; carfentrazone-ethyl + fluroxypyr + glufosinate; carfentrazone-ethyl + MCPA + glufosinate; carfentrazone-ethyl + MCPB + glufosinate; carfentrazone-ethyl + MCPP + glufosinate; carfentrazone-ethyl + metobenzuron + glufosinate; carfentrazone-ethyl + thifensulfuron + glufosinate; carfentrazone-ethyl + aclonifen + glufosinate; carfentrazone-ethyl + EPTC + glufosinate; carfentrazone-ethyl + cyanazine + glufosinate; compound of the formula A + atrazin + glufosinate; compound of the formula A + terbuthylazine + glufosinate; compound of the formula A + (S)-metolachlor + glufosinate; compound of the formula A + metolachlor + glufosinate; compound of the formula A + terbutryn + glufosinate; compound of the formula A + simazine + glufosinate; compound of the formula A + dimethenamid or (S)-dimethenamid + glufosinate; compound of the formula A + flufenacet + glufosinate; compound of the formula A + acetochlor + glufosinate; compound of the formula A + alachlor; compound of the formula A + isoxaflutole + glufosinate; compound of the formula A + isoxachlortole + glufosinate; compound of the formula A + mesotrione + glufosinate; compound of the formula A + sulcotrione + glufosinate; compound of the formula A + metosulam + glufosinate; compound of the formula A + flumetsulam + glufosinate; compound of the formula A + pendimethalin + glufosinate; compound of the formula A + bromoxynil + glufosinate; compound of the formula A + bentazone + glufosinate; compound of the formula A + carfentrazone + glufosinate; compound of the formula A + clomazone + glufosinate; compound of the formula A + nicosulfuron + glufosinate; compound of the formula A + rimsulfuron + glufosinate; compound of the formula A + halosulfuron + glufosinate; compound of the formula A + metribuzin + glufosinate; compound of the formula A + flumiclorac + glufosinate; compound of the formula A + prosulfuron + glufosinate; compound of the formula A + primisulfuron + glufosinate; compound of the formula A + dicamba + glufosinate; compound of the formula A + fluthiacet + glufosinate; compound of the formula A + pyridate + glufosinate; compound of the formula A + compound of the formula B + glufosinate; compound of the formula A + 2,4-D + glufosinate; compound of the formula A + clopyralide + glufosinate; compound of the formula A + diflufenzopyr + glufosinate; compound of the formula A + fluroxypyr + glufosinate; compound of the formula A + MCPA + glufosinate; compound of the formula A + MCPB + glufosinate; compound of the formula A + MCPP + glufosinate; compound of the formula A + metobenzuron + glufosinate; compound of the formula A + thifensulfuron + glufosinate; compound of the formula A + aclonifen + glufosinate; compound of the formula A + EPTC + glufosinate; compound of the formula A + cyanazine + glufosinate; cinidon-ethyl + atrazin + glufosinate; cinidon-ethyl + terbuthylazine + glufosinate; cinidon-ethyl + (S)-metolachlor + glufosinate; cinidon-ethyl + metolachlor + glufosinate; cinidon-ethyl + compound of the formula A + glufosinate; cinidon-ethyl + terbutryn + glufosinate; cinidon-ethyl + simazine + glufosinate; cinidon-ethyl + dimethenamid or (S)-dimethenamid + glufosinate; cinidon-ethyl + flufenacet + glufosinate; cinidon-ethyl + acetochlor + glufosinate; cinidon-ethyl + alachlor + glufosinate; cinidon-ethyl + isoxaflutole + glufosinate; cinidon-ethyl + isoxachlortole + glufosinate; cinidon-ethyl + mesotrione + glufosinate; cinidon-ethyl + sulcotrione + glufosinate; cinidon-ethyl + metosulam + glufosinate; cinidon-ethyl + flumetsulam + glufosinate; cinidon-ethyl + pendimethalin + glufosinate; cinidon-ethyl + bromoxynil + glufosinate; cinidon-ethyl + bentazone + glufosinate; cinidon-ethyl + carfentrazone + glufosinate; cinidon-ethyl + clomazone + glufosinate; cinidon-ethyl + nicosulfuron + glufosinate; cinidon-ethyl + rimsulfuron + glufosinate; cinidon-ethyl + halosulfuron + glufosinate; cinidon-ethyl + metribuzin + glufosinate; cinidon-ethyl + flumiclorac + glufosinate; cinidon-ethyl + prosulfuron + glufosinate; cinidon-ethyl + primisulfuron + glufosinate; cinidon-ethyl + dicamba + glufosinate; cinidon-ethyl + fluthiacet + glufosinate; cinidon-ethyl + pyridate + glufosinate; cinidon-ethyl + compound of the formula B + glufosinate; cinidon-ethyl + 2,4-D + glufosinate; cinidon-ethyl + clopyralide + glufosinate; cinidon-ethyl + diflufenzopyr + glufosinate; cinidon-ethyl + fluroxypyr + glufosinate; cinidon-ethyl + MCPA + glufosinate; cinidon-ethyl + MCPB + glufosinate; cinidon-ethyl + MCPP + glufosinate; cinidon-ethyl + metobenzuron + glufosinate; cinidon-ethyl + thifensulfuron + glufosinate; cinidon-ethyl + aclonifen + glufosinate; cinidon-ethyl + EPTC + glufosinate; cinidon-ethyl + cyanazine + glufosinate; flumiclorac-pentyl + atrazin + glufosinate; flumiclorac-pentyl + terbuthylazine + glufosinate; flumiclorac-pentyl + (S)-metolachlor + glufosinate; flumiclorac-pentyl + metolachlor + glufosinate; flumiclorac-pentyl + compound of the formula A + glufosinate; flumiclorac-pentyl + terbutryn + glufosinate; flumiclorac-pentyl + simazine + glufosinate; flumiclorac-pentyl + dimethenamid or (S)-dimethenamid + glufosinate; flumiclorac-pentyl + flufenacet + glufosinate; flumiclorac-pentyl + acetochlor + glufosinate; flumiclorac-pentyl + alachlor + glufosinate; flumiclorac-pentyl + isoxaflutole + glufosinate; flumiclorac-pentyl + isoxachlortole + glufosinate; flumiclorac-pentyl + mesotrione + glufosinate; flumiclorac-pentyl + sulcotrione + glufosinate; flumiclorac-pentyl + metosulam + glufosinate; flumiclorac-pentyl + flumetsulam + glufosinate; flumiclorac-pentyl + pendimethalin + glufosinate; flumiclorac-pentyl + bromoxynil + glufosinate; flumiclorac-pentyl + bentazone + glufosinate; flumiclorac-pentyl + carfentrazone + glufosinate; flumiclorac-pentyl + clomazone + glufosinate; flumiciorac-pentyl + nicosulfuron + glufosinate; flumiclorac-pentyl + rimsulfuron + glufosinate; flumiclorac-pentyl + halosulfuron + glufosinate; flumiclorac-pentyl + metribuzin + glufosinate; flumiclorac-pentyl + prosulfuron + glufosinate; flumiclorac-pentyl + primisulfuron + glufosinate; flumiclorac-pentyl + dicamba + glufosinate; flumiclorac-pentyl + fluthiacet + glufosinate; flumiclorac-pentyl + pyridate + glufosinate; flumiclorac-pentyl + compound of the formula B + glufosinate; flumiclorac-pentyl + 2,4-D + glufosinate; flumiclorac-pentyl + clopyralide + glufosinate; flumiclorac-pentyl + diflufenzopyr + glufosinate; flumiclorac-pentyl + fluroxypyr + glufosinate; flumiclorac-pentyl + MCPA + glufosinate; flumiclorac-pentyl + MCPB + glufosinate; flumiclorac-pentyl + MCPP + glufosinate; flumiclorac-pentyl + metobenzuron + glufosinate; flumiclorac-pentyl + thifensulfuron + glufosinate; flumiclorac-pentyl + aclonifen + glufosinate; flumiclorac-pentyl + EPTC + glufosinate; flumiclorac-pentyl + cyanazine + glufosinate; flumioxazin + atrazin + glufosinate; flumioxazin + terbuthylazine + glufosinate; flumioxazin + (S)-metolachlor + glufosinate; flumioxazin + metolachlor + glufosinate; flumioxazin + compound of the formula A + glufosinate; flumioxazin + terbutryn + glufosinate; flumioxazin + simazine + glufosinate; flumioxazin + dimethenamid or (S)-dimethenamid + glufosinate; flumioxazin + flufenacet + glufosinate; flumioxazin + acetochlor + glufosinate; flumioxazin + alachlor + glufosinate; flumioxazin + isoxaflutole + glufosinate; flumioxazin + isoxachlortole + glufosinate; flumioxazin + mesotrione + glufosinate; flumioxazin + sulcotrione + glufosinate; flumioxazin + metosulam + glufosinate; flumioxazin + flumetsulam + glufosinate; flumioxazin + pendimethalin + glufosinate; flumioxazin + bromoxynil + glufosinate; flumioxazin + bentazone + glufosinate; flumioxazin + carfentrazone + glufosinate; flumioxazin + clomazone + glufosinate; flumioxazin + nicosulfuron + glufosinate; flumioxazin + rimsulfuron + glufosinate; flumioxazin + halosulfuron + glufosinate; flumioxazin + metribuzin + glufosinate; flumioxazin + flumiclorac + glufosinate; flumioxazin + prosulfuron + glufosinate; flumioxazin + primisulfuron + glufosinate; flumioxazin + dicamba + glufosinate; flumioxazin + fluthiacet + glufosinate; flumioxazin + pyridate + glufosinate; flumioxazin + compound of the formula B + glufosinate; flumioxazin + 2,4-D + glufosinate; flumioxazin + clopyralide + glufosinate; flumioxazin + diflufenzopyr + glufosinate; flumioxazin + fluroxypyr + glufosinate; flumioxazin + MCPA + glufosinate; flumioxazin + MCPB + glufosinate; flumioxazin + MCPP + glufosinate; flumioxazin + metobenzuron + glufosinate; flumioxazin + thifensulfuron + glufosinate; flumioxazin + aclonifen + glufosinate; flumioxazin + EPTC + glufosinate; flumioxazin + cyanazine + glufosinate; fluthiacet-methyl + atrazin + glufosinate; fluthiacet-methyl + terbuthylazine + glufosinate; fluthiacet-methyl + (S)-metolachlor + glufosinate; fluthiacet-methyl + metolachlor + glufosinate; fluthiacet-methyl + compound of the formula A + glufosinate; fluthiacet-methyl + terbutryn + glufosinate; fluthiacet-methyl + simazine + glufosinate; fluthiacet-methyl + dimethenamid or (S)-dimethenamid + glufosinate; fluthiacet-methyl + flufenacet + glufosinate; fluthiacet-methyl + acetochlor + glufosinate; fluthiacet-methyl + alachlor + glufosinate; fluthiacet-methyl + isoxaflutole + glufosinate; fluthiacet-methyl + isoxachlortole + glufosinate; fluthiacet-methyl + mesotrione + glufosinate; fluthiacet-methyl + sulcotrione + glufosinate; fluthiacet-methyl + metosulam + glufosinate; fluthiacet-methyl + flumetsulam + glufosinate; fluthiacet-methyl + pendimethalin + glufosinate; fluthiacet-methyl + bromoxynil + glufosinate; fluthiacet-methyl + bentazone + glufosinate; fluthiacet-methyl + carfentrazone + glufosinate; fluthiacet-methyl + clomazone + glufosinate; fluthiacet-methyl + nicosulfuron + glufosinate; fluthiacet-methyl + rimsulfuron + glufosinate; fluthiacet-methyl + halosulfuron + glufosinate; fluthiacet-methyl + metribuzin + glufosinate; fluthiacet-methyl + flumiclorac + glufosinate; fluthiacet-methyl + prosulfuron + glufosinate; fluthiacet-methyl + primisulfuron + glufosinate; fluthiacet-methyl + dicamba + glufosinate; fluthiacet-methyl + pyridate + glufosinate; fluthiacet-methyl + compound of the formula B + glufosinate; fluthiacet-methyl + 2,4-D + glufosinate; fluthiacet-methyl + clopyralide + glufosinate; fluthiacet-methyl + diflufenzopyr + glufosinate; fluthiacet-methyl + fluroxypyr + glufosinate; fluthiacet-methyl + MCPA + glufosinate; fluthiacet-methyl + MCPB + glufosinate; fluthiacet-methyl + MCPP + glufosinate; fluthiacet-methyl + metobenzuron + glufosinate; fluthiacet-methyl + thifensulfuron + glufosinate; fluthiacet-methyl + aclonifen + glufosinate; fluthiacet-methyl + EPTC + glufosinate; fluthiacet-methyl + cyanazine + glufosinate; oxadiargyl + atrazin + glufosinate; oxadiargyl + terbuthylazine + glufosinate; oxadiargyl + (S)-metolachlor + glufosinate; oxadiargyl + metolachlor + glufosinate; oxadiargyl + compound of the formula A + glufosinate; oxadiargyl + terbutryn + glufosinate; oxadiargyl + simazine + glufosinate; oxadiargyl + dimethenamid or (S)-dimethenamid + glufosinate; oxadiargyl + flufenacet + glufosinate; oxadiargyl + acetochlor + glufosinate; oxadiargyl + alachlor + glufosinate; oxadiargyl + isoxaflutole + glufosinate; oxadiargyl + isoxachlortole + glufosinate; oxadiargyl + mesotrione + glufosinate; oxadiargyl + sulcotrione + glufosinate; oxadiargyl + metosulam + glufosinate; oxadiargyl + flumetsulam + glufosinate; oxadiargyl + pendimethalin + glufosinate; oxadiargyl + bromoxynil + glufosinate; oxadiargyl + bentazone + glufosinate; oxadiargyl + carfentrazone + glufosinate; oxadiargyl + clomazone + glufosinate; oxadiargyl + nicosulfuron + glufosinate; oxadiargyl + rimsulfuron + glufosinate; oxadiargyl + halosulfuron + glufosinate; oxadiargyl + metribuzin + glufosinate; oxadiargyl + flumiclorac + glufosinate; oxadiargyl + prosulfuron + glufosinate; oxadiargyl + primisulfuron + glufosinate; oxadiargyl + dicamba + glufosinate; oxadiargyl + fluthiacet + glufosinate; oxadiargyl + pyridate + glufosinate; oxadiargyl + compound of the formula B + glufosinate; oxadiargyl + 2,4-D + glufosinate; oxadiargyl + clopyralide + glufosinate; oxadiargyl + diflufenzopyr + glufosinate; oxadiargyl + fluroxypyr + glufosinate; oxadiargyl + MCPA + glufosinate; oxadiargyl + MOPB + glufosinate; oxadiargyl + MCPP + glufosinate; oxadiargyl + metobenzuron + glufosinate; oxadiargyl + thifensulfuron + glufosinate; oxadiargyl + aclonifen + glufosinate; oxadiargyl + EPTC + glufosinate; oxadiargyl + cyanazine + glufosinate; oxadiazon + atrazin + glufosinate; oxadiazon + terbuthylazine + glufosinate; oxadiazon + (S)-metolachlor + glufosinate; oxadiazon + metolachlor + glufosinate; oxadiazon + compound of the formula A + glufosinate; oxadiazon + terbutryn + glufosinate; oxadiazon + simazine + glufosinate; oxadiazon + dimethenamid or (S)-dimethenamid + glufosinate; oxadiazon + flufenacet + glufosinate; oxadiazon + acetochlor + glufosinate; oxadiazon + alachlor + glufosinate; oxadiazon + isoxaflutole + glufosinate; oxadiazon + isoxachlortole + glufosinate; oxadiazon + mesotrione + glufosinate; oxadiazon + sulcotrione + glufosinate; oxadiazon + metosulam + glufosinate; oxadiazon + flumetsulam + glufosinate; oxadiazon + pendimethalin + glufosinate; oxadiazon + bromoxynil + glufosinate; oxadiazon + bentazone + glufosinate; oxadiazon + carfentrazone + glufosinate; oxadiazon + clomazone + glufosinate; oxadiazon + nicosulfuron + glufosinate; oxadiazon + rimsulfuron + glufosinate; oxadiazon + halosutfuron + glufosinate; oxadiazon + metribuzin + glufosinate; oxadiazon + flumiclorac + glufosinate; oxadiazon + prosulfuron + glufosinate; oxadiazon + primisulfuron + glufosinate; oxadiazon + dicamba + glufosinate; oxadiazon + fluthiacet + glufosinate; oxadiazon + pyridate + glufosinate; oxadiazon + compound of the formula B + glufosinate; oxadiazon + 2,4-D + glufosinate; oxadiazon + clopyralide + glufosinate; oxadiazon + diflufenzopyr + glufosinate; oxadiazon + fluroxypyr + glufosinate; oxadiazon + MCPA + glufosinate; oxadiazon + MCPB + glufosinate; oxadiazon + MCPP + glufosinate; oxadiazon + metobenzuron + glufosinate; oxadiazon + thifensulfuron + glufosinate; oxadiazon + aclonifen + glufosinate; oxadiazon + EPTC + glufosinate; oxadiazon + cyanazine + glufosinate; pentoxazone + atrazin + glufosinate; pentoxazone + terbuthylazine + glufosinate; pentoxazone + (S)-metolachlor + glufosinate; pentoxazone + metolachlor + glufosinate; pentoxazone + compound of the formula A + glufosinate; pentoxazone + terbutryn + glufosinate; pentoxazone + simazine + glufosinate; pentoxazone + dimethenamid or (S)-dimethenamid + glufosinate; pentoxazone + flufenacet + glufosinate; pentoxazone + acetochlor + glufosinate; pentoxazone + alachlor + glufosinate; pentoxazone + isoxaflutole + glufosinate; pentoxazone + isoxachlortole + glufosinate; pentoxazone + mesotrione + glufosinate; pentoxazone + sulcotrione + glufosinate; pentoxazone + metosulam + glufosinate; pentoxazone + flumetsulam + glufosinate; pentoxazone + pendimethalin + glufosinate; pentoxazone + bromoxynil + glufosinate; pentoxazone + bentazone + glufosinate; pentoxazone + carfentrazone + glufosinate; pentoxazone + clomazone + glufosinate; pentoxazone + nicosulfuron + glufosinate; pentoxazone + rimsulfuron + glufosinate; pentoxazone + halosulfuron + glufosinate; pentoxazone + metribuzin + glufosinate; pentoxazone + flumiclorac + glufosinate; pentoxazone + prosulfuron + glufosinate; pentoxazone + primisulfuron + glufosinate; pentoxazone + dicamba + glufosinate; pentoxazone + fluthiacet + glufosinate; pentoxazone + pyridate + glufosinate; pentoxazone + compound of the formula B + glufosinate; pentoxazone + 2,4-D + glufosinate; pentoxazone + clopyralide + glufosinate; pentoxazone + diflufenzopyr + glufosinate; pentoxazone + fluroxypyr + glufosinate; pentoxazone + MCPA + glufosinate; pentoxazone + MCPB + glufosinate; pentoxazone + MCPP + glufosinate; pentoxazone + metobenzuron + glufosinate; pentoxazone + thifensulfuron + glufosinate; pentoxazone + aclonifen + glufosinate; pentoxazone + EPTC + glufosinate; pentoxazone + cyanazine + glufosinate; sulfentrazone + atrazin + glufosinate; sulfentrazone + terbuthylazine + glufosinate; sulfentrazone + (S)-metolachlor + glufosinate; sulfentrazone + metolachlor + glufosinate; sulfentrazone + compound of the formula A + glufosinate; sulfentrazone + terbutryn + glufosinate; sulfentrazone + simazine + glufosinate; sulfentrazone + dimethenamid or (S)-dimethenamid + glufosinate; sulfentrazone + flufenacet + glufosinate; sulfentrazone + acetochlor + glufosinate; sulfentrazone + alachlor + glufosinate; sulfentrazone + isoxaflutole + glufosinate; sulfentrazone + isoxachlortole + glufosinate; sulfentrazone + mesotrione + glufosinate; sulfentrazone + sulcotrione + glufosinate; sulfentrazone + metosulam + glufosinate; sulfentrazone + flumetsulam + glufosinate; sulfentrazone + pendimethalin + glufosinate; sulfentrazone + bromoxynil + glufosinate; sulfentrazone + bentazone + glufosinate; sulfentrazone + carfentrazone + glufosinate; sulfentrazone + clomazone + glufosinate; sulfentrazone + nicosulfuron + glufosinate; sulfentrazone + rimsulfuron + glufosinate; sulfentrazone + halosulfuron + glufosinate; sulfentrazone + metribuzin + glufosinate; sulfentrazone + flumiclorac + glufosinate; sulfentrazone + prosulfuron + glufosinate; sulfentrazone + primisulfuron + glufosinate; sulfentrazone + dicamba + glufosinate; sulfentrazone + fluthiacet + glufosinate; sulfentrazone + pyridate + glufosinate; sulfentrazone + compound of the formula B + glufosinate; sulfentrazone + 2,4-D + glufosinate; sulfentrazone + clopyralide + glufosinate; sulfentrazone + diflufenzopyr + glufosinate; sulfentrazone + fluroxypyr + glufosinate; sulfentrazone + MCPA + glufosinate; sulfentrazone + MCPB + glufosinate; sulfentrazone + MCPP + glufosinate; sulfentrazone + metobenzuron + glufosinate; sulfentrazone + thifensulfuron + glufosinate; sulfentrazone + aclonifen + glufosinate; sulfentrazone + EPTC + glufosinate; sulfentrazone + cyanazine + glufosinate; fluazolate + atrazin + glufosinate; fluazolate + terbuthylazine + glufosinate; fluazolate + (S)-metolachlor + glufosinate; fluazolate + metolachlor + glufosinate; fluazolate + compound of the formula A + glufosinate; fluazolate + terbutryn + glufosinate; fluazolate + simazine + glufosinate; fluazolate + dimethenamid or (S)-dimethenamid + glufosinate; fluazolate + flufenacet + glufosinate; fluazolate + acetochlor + glufosinate; fluazolate + alachlor + glufosinate; fluazolate + isoxaflutole + glufosinate; fluazolate + isoxachlortole + glufosinate; fluazolate + mesotrione + glufosinate; fluazolate + sulcotrione + glufosinate; fluazolate + metosulam + glufosinate; fluazolate + flumetsulam + glufosinate; fluazolate + pendimethalin + glufosinate; fluazolate + bromoxynil + glufosinate; fluazolate + bentazone + glufosinate; fluazolate + carfentrazone + glufosinate; fluazolate + clomazone + glufosinate; fluazolate + nicosulfuron + glufosinate; fluazolate + rimsulfuron + glufosinate; fluazolate + halosulfuron + glufosinate; fluazolate + metribuzin + glufosinate; fluazolate + flumiclorac + glufosinate; fluazolate + prosulfuron + glufosinate; fluazolate + primisulfuron + glufosinate; fluazolate + dicamba + glufosinate; fluazolate + fluthiacet + glufosinate; fluazolate + pyridate + glufosinate; fluazolate + compound of the formula B + glufosinate; fluazolate + 2,4-D + glufosinate; fluazolate + clopyralide + glufosinate; fluazolate + diflufenzopyr + glufosinate; fluazolate + fluroxypyr + glufosinate; fluazolate + MCPA + glufosinate; fluazolate + MCPB + glufosinate; fluazolate + MCPP + glufosinate; fluazolate + metobenzuron + glufosinate; fluazolate + thifensulfuron + glufosinate; fluazolate + aclonifen + glufosinate; fluazolate + EPTC + glufosinate; fluazolate + cyanazine + glufosinate; pyraflufen-ethyl + atrazin + glufosinate; pyraflufen-ethyl + terbuthylazine + glufosinate; pyraflufen-ethyl + (S)-metolachlor + glufosinate; pyraflufen-ethyl + metolachlor + glufosinate; pyraflufen-ethyl + compound of the formula A + glufosinate; pyraflufen-ethyl + terbutryn + glufosinate; pyraflufen-ethyl + simazine + glufosinate; pyraflufen-ethyl + dimethenamid or (S)-dimethenamid + glufosinate; pyraflufen-ethyl + flufenacet + glufosinate; pyraflufen-ethyl + acetochlor + glufosinate; pyraflufen-ethyl + alachlor + glufosinate; pyraflufen-ethyl + isoxaflutole + glufosinate; pyraflufen-ethyl + isoxachlortole + glufosinate; pyraflufen-ethyl + mesotrione + glufosinate; pyraflufen-ethyl + sulcotrione + glufosinate; pyraflufen-ethyl + metosulam + glufosinate; pyraflufen-ethyl + flumetsulam + glufosinate; pyraflufen-ethyl + pendimethalin + glufosinate; pyraflufen-ethyl + bromoxynil + glufosinate; pyraflufen-ethyl + bentazone + glufosinate; pyraflufen-ethyl + carfentrazone + glufosinate; pyraflufen-ethyl + clomazone + glufosinate; pyraflufen-ethyl + nicosulfuron + glufosinate; pyraflufen-ethyl + rimsulfuron + glufosinate; pyraflufen-ethyl + halosulfuron + glufosinate; pyraflufen-ethyl + metribuzin + glufosinate; pyraflufen-ethyl + flumiclorac + glufosinate; pyraflufen-ethyl + prosulfuron + glufosinate; pyraflufen-ethyl + primisulfuron + glufosinate; pyraflufen-ethyl + dicamba + glufosinate; pyraflufen-ethyl + fluthiacet + glufosinate; pyraflufen-ethyl + pyridate + glufosinate; pyraflufen-ethyl + compound of the formula B + glufosinate; pyraflufen-ethyl + 2,4-D + glufosinate; pyraflufen-ethyl + clopyralide + glufosinate; pyraflufen-ethyl + diflufenzopyr + glufosinate; pyraflufen-ethyl + fluroxypyr + glufosinate; pyraflufen-ethyl + MCPA + glufosinate; pyraflufen-ethyl + MCPB + glufosinate; pyraflufen-ethyl + MCPP + glufosinate; pyraflufen-ethyl + metobenzuron + glufosinate; pyraflufen-ethyl + thifensulfuron + glufosinate; pyraflufen-ethyl + aclonifen + glufosinate; pyraflufen-ethyl + EPTC + glufosinate; pyraflufen-ethyl + cyanazine + glufosinate; flumipropyn + atrazin + glufosinate; flumipropyn + terbuthylazine + glufosinate; flumipropyn + (S)-metolachlor + glufosinate; flumipropyn + metolachlor + glufosinate; flumipropyn + compound of the formula A + glufosinate; flumipropyn + terbutryn + glufosinate; flumipropyn + simazine + glufosinate; flumipropyn + dimethenamid or (S)-dimethenamid + glufosinate; flumipropyn + flufenacet + glufosinate; flumipropyn + acetochlor + glufosinate; flumipropyn + alachlor + glufosinate; flumipropyn + isoxaflutole + glufosinate; flumipropyn + isoxachlortole + glufosinate; flumipropyn + mesotrione + glufosinate; flumipropyn + sulcotrione + glufosinate; flumipropyn + metosulam + glufosinate; flumipropyn + flumetsulam + glufosinate; flumipropyn + pendimethalin + glufosinate; flumipropyn + bromoxynil + glufosinate; flumipropyn + bentazone + glufosinate; flumipropyn + carfentrazone + glufosinate; flumipropyn + clomazone + glufosinate; flumipropyn + nicosulfuron + glufosinate; flumipropyn + rimsulfuron + glufosinate; flumipropyn + halosulfuron + glufosinate; flumipropyn + metribuzin + glufosinate; flumipropyn + flumiclorac + glufosinate; flumipropyn + prosulfuron + glufosinate; flumipropyn + primisulfuron + glufosinate; flumipropyn + dicamba + glufosinate; flumipropyn + fluthiacet + glufosinate; flumipropyn + pyridate + glufosinate; flumipropyn + compound of the formula B + glufosinate; flumipropyn + 2,4-D + glufosinate; flumipropyn + clopyralide + glufosinate; flumipropyn + diflufenzopyr + glufosinate; flumipropyn + fluroxypyr + glufosinate; flumipropyn + MCPA + glufosinate; flumipropyn + MCPB + glufosinate; flumipropyn + MCPP + glufosinate; flumipropyn + metobenzuron + glufosinate; flumipropyn + thifensulfuron + glufosinate; flumipropyn + aclonifen + glufosinate; flumipropyn + EPTC + glufosinate; flumipropyn + cyanazine + glufosinate; flupropacil + atrazin + glufosinate; flupropacil + terbuthylazine + glufosinate; flupropacil + (S)-metolachlor + glufosinate; flupropacil + metolachlor + glufosinate; flupropacil + compound of the formula A + glufosinate; flupropacil + terbutryn + glufosinate; flupropacil + simazine + glufosinate; flupropacil + dimethenamid or (S)-dimethenamid + glufosinate; flupropacil + flufenacet + glufosinate; flupropacil + acetochlor + glufosinate; flupropacil + alachlor + glufosinate; flupropacil + isoxaflutole + glufosinate; flupropacil + isoxachlortole + glufosinate; flupropacil + mesotrione + glufosinate; flupropacil + sulcotrione + glufosinate; flupropacil + metosulam + glufosinate; flupropacil + flumetsulam + glufosinate; flupropacil + pendimethalin + glufosinate; flupropacil + bromoxynil + glufosinate; flupropacil + bentazone + glufosinate; flupropacil + carfentrazone + glufosinate; flupropacil + clomazone + glufosinate; flupropacil + nicosulfuron + glufosinate; flupropacil + rimsulfuron + glufosinate; flupropacil + halosulfuron + glufosinate; flupropacil + metribuzin + glufosinate; flupropacil + flumiclorac + glufosinate; flupropacil + prosulfuron + glufosinate; flupropacil + primisulfuron + glufosinate; flupropacil + dicamba + glufosinate; flupropacil + fluthiacet + glufosinate; flupropacil + pyridate + glufosinate; flupropacil + compound of the formula B + glufosinate; flupropacil + 2,4-D + glufosinate; flupropacil + clopyralide + glufosinate; flupropacil + diflufenzopyr + glufosinate; flupropacil + fluroxypyr + glufosinate; flupropacil + MCPA + glufosinate; flupropacil + MCPB + glufosinate; flupropacil + MCPP + glufosinate; flupropacil + metobenzuron + glufosinate; flupropacil + thifensulfuron + glufosinate; flupropacil + aclonifen + glufosinate; flupropacil + EPTC + glufosinate; flupropacil + cyanazine + glufosinate; nipyraclofen + atrazin + glufosinate; nipyraclofen + terbuthylazine + glufosinate; nipyraclofen + (S)-metolachlor + glufosinate; nipyraclofen + metolachlor + glufosinate; nipyraclofen + compound of the formula A + glufosinate; nipyraclofen + terbutryn + glufosinate; nipyraclofen + simazine + glufosinate; nipyraclofen + dimethenamid or (S)-dimethenamid + glufosinate; nipyraclofen + flufenacet + glufosinate; nipyraclofen + acetochlor + glufosinate; nipyraclofen + alachlor + glufosinate; nipyraclofen + isoxaflutole + glufosinate; nipyraclofen + isoxachlortole + glufosinate; nipyraclofen + mesotrione + glufosinate; nipyraclofen + sulcotrione + glufosinate; nipyraclofen + metosulam + glufosinate; nipyraclofen + flumetsulam + glufosinate; nipyraclofen + pendimethalin + glufosinate; nipyraclofen + bromoxynil + glufosinate; nipyraclofen + bentazone + glufosinate; nipyraclofen + carfentrazone + glufosinate; nipyraclofen + clomazone + glufosinate; nipyraclofen + nicosulfuron + glufosinate; nipyraclofen + rimsulfuron + glufosinate; nipyraclofen + halosulfuron + glufosinate; nipyraclofen + metribuzin + glufosinate; nipyraclofen + flumiclorac + glufosinate; nipyraclofen + prosulfuron + glufosinate; nipyraclofen + primisulfuron + glufosinate; nipyraclofen + dicamba + glufosinate; nipyraclofen + fluthiacet + glufosinate; nipyraclofen + pyridate + glufosinate; nipyraclofen + compound of the formula B + glufosinate; nipyraclofen + 2,4-D + glufosinate; nipyraclofen + clopyralide + glufosinate; nipyraclofen + diflufenzopyr + glufosinate; nipyraclofen + fluroxypyr + glufosinate; nipyraclofen + MOPA + glufosinate; nipyraclofen + MCPB + glufosinate; nipyraclofen + MCPP + glufosinate; nipyraclofen + metobenzuron + glufosinate; nipyraclofen + thifensulfuron + glufosinate; nipyraclofen + aclonifen + glufosinate; nipyraclofen + EPTC + glufosinate; nipyraclofen + cyanazine + glufosinate; benzfendizone + atrazin + glufosinate; benzfendizone + terbuthylazine + glufosinate; benzfendizone + (S)-metolachlor + glufosinate; benzfendizone + metolachlor + glufosinate; benzfendizone + compound of the formula A + glufosinate; benzfendizone + terbutryn + glufosinate; benzfendizone + simazine + glufosinate; benzfendizone + dimethenamid or (S)-dimethenamid + glufosinate; benzfendizone + flufenacet + glufosinate; benzfendizone + acetochlor + glufosinate; benzfendizone + alachlor + glufosinate; benzfendizone + isoxaflutole + glufosinate; benzfendizone + isoxachlortole + glufosinate; benzfendizone + mesotrione + glufosinate; benzfendizone + sulcotrione + glufosinate; benzfendizone + metosulam + glufosinate; benzfendizone + flumetsulam + glufosinate; benzfendizone + pendimethalin + glufosinate; benzfendizone + bromoxynil + glufosinate; benzfendizone + bentazone + glufosinate; benzfendizone + carfentrazone + glufosinate; benzfendizone + clomazone + glufosinate; benzfendizone + nicosulfuron + glufosinate; benzfendizone + rimsulfuron + glufosinate; benzfendizone + halosulfuron + glufosinate; benzfendizone + metribuzin + glufosinate; benzfendizone + flumiclorac + glufosinate; benzfendizone + prosulfuron + glufosinate; benzfendizone + primisulfuron + glufosinate; benzfendizone + dicamba + glufosinate; benzfendizone + fluthiacet + glufosinate; benzfendizone + pyridate + glufosinate; benzfendizone + compound of the formula B + glufosinate; benzfendizone + 2,4-D + glufosinate; benzfendizone + clopyralide + glufosinate; benzfendizone + diflufenzopyr + glufosinate; benzfendizone + fluroxypyr + glufosinate; benzfendizone + MCPA + glufosinate; benzfendizone + MCPB + glufosinate; benzfendizone + MCPP + glufosinate; benzfendizone + metobenzuron + giufosinate; benzfendizone + thifensulfuron + glufosinate; benzfendizone + aclonifen + glufosinate; benzfendizone + EPTC + glufosinate; benzfendizone + cyanazine + glufosinate; thidiazimin + atrazin + glufosinate; thidiazimin + terbuthylazine + glufosinate; thidiazimin + (S)-metolachlor + glufosinate; thidiazimin + metolachlor + glufosinate; thidiazimin + compound of the formula A + glufosinate; thidiazimin + terbutryn + glufosinate; thidiazimin + simazine + glufosinate; thidiazimin + dimethenamid or (5)-dimethenamid + glufosinate; thidiazimin + flufenacet + glufosinate; thidiazimin + acetochlor + glufosinate; thidiazimin + alachlor + glufosinate; thidiazimin + isoxaflutole + glufosinate; thidiazimin + isoxachlortole + glufosinate; thidiazimin + mesotrione + glufosinate; thidiazimin + sutcotrione + glufosinate; thidiazimin + metosulam + glufosinate; thidiazimin + flumetsulam + glufosinate; thidiazimin + pendimethalin + glufosinate; thidiazimin + bromoxynil + glufosinate; thidiazimin + bentazone + glufosinate; thidiazimin + carfentrazone + glufosinate; thidiazimin + clomazone + glufosinate; thidiazimin + nicosulfuron + glufosinate; thidiazimin + rimsulfuron + glufosinate; thidiazimin + halosulfuron + glufosinate; thidiazimin + metribuzin + glufosinate; thidiazimin + fiumiclorac + glufosinate; thidiazimin + prosulfuron + glufosinate; thidiazimin + primisulfuron + glufosinate; thidiazimin + dicamba + glufosinate; thidiazimin + fluthiacet + glufosinate; thidiazimin + pyridate + glufosinate; thidiazimin + compound of the formula B + glufosinate; thidiazimin + 2,4-D + glufosinate; thidiazimin + clopyralide + glufosinate; thidiazimin + diflufenzopyr + glufosinate; thidiazimin + fluroxypyr + glufosinate; thidiazimin + MCPA + glufosinate; thidiazimin + MCPB + glufosinate; thidiazimin + MCPP + glufosinate; thidiazimin + metobenzuron + glufosinate; thidiazimin + thifensulfuron + glufosinate; thidiazimin + aclonifen + glufosinate; thidiazimin + EPTC + glufosinate; and thidiazimin + cyanazine + glufosinate. acifluorfen + atrazin + sulfosate; acifluorfen + terbuthylazine + sulfosate; acifluorfen + (S)-metolachlor + sulfosate; acifluorfen + metolachlor + sulfosate; acifluorfen + compound of the formula A + sulfosate; acifluorfen + terbutryn + sulfosate; acifluorfen + simazine + sulfosate; acifluorfen + dimethenamid or (S)-dimethenamid + sulfosate; acifluorfen + flufenacet + sulfosate; acifluorfen + acetochlor + sulfosate; acifluorfen + alachlor + sulfosate; acifluorfen + isoxaflutole + sulfosate; acifluorfen + isoxachlortole + sulfosate; acifluorfen + mesotrione + sulfosate; acifluorfen + sulcotrione + sulfosate; acifluorfen + metosulam + sulfosate; acifluorfen + flumetsulam + sulfosate; acifluorfen + pendimethalin + sulfosate; acifluorfen + bromoxynil + sulfosate; acifluorfen + bentazone + sulfosate; acifluorfen + carfentrazone + sulfosate; acifluorfen + clomazone + sulfosate; acifluorfen + nicosulfuron + sulfosate; acifluorfen + rimsulfuron + sulfosate; acifluorfen + halosulfuron + sulfosate; acifluorfen + metribuzin + sulfosate; acifluorfen + flumiclorac + sulfosate; acifluorfen + prosulfuron + sulfosate; acifluorfen + primisulfuron + sulfosate; acifluorfen + dicamba + sulfosate; acifluorfen + fluthiacet + sulfosate; acifluorfen + pyridate + sulfosate; acifluorfen + compound of the formula B + sulfosate; acifluorfen + 2,4-D + sulfosate; acifluorfen + clopyralide + sulfosate; acifluorfen + diflufenzopyr + sulfosate; acifluorfen + fluroxypyr + sulfosate; acifluorfen + MCPA + sulfosate; acifluorfen + MCPB + sulfosate; acifluorfen + MCPP + sulfosate; acifluorfen + metobenzuron + sulfosate; acifluorfen + thifensulfuron + sulfosate; acifluorfen + aclonifen + sulfosate; acifluorfen + EPTC + sulfosate; acifluorfen + cyanazine + sulfosate; aclonifen + atrazin + sulfosate; aclonifen + terbuthylazine + sulfosate; aclonifen + (S)-metolachlor + sulfosate; aclonifen + metolachlor + sulfosate; aclonifen + compound of the formula A + sulfosate; aclonifen + terbutryn + sulfosate; aclonifen + simazine + sulfosate; aclonifen + dimethenamid or (S)-dimethenamid + sulfosate; aclonifen + flufenacet + sulfosate; aclonifen + acetochlor + sulfosate; aclonifen + alachlor + sulfosate; aclonifen + isoxaflutole + sulfosate; aclonifen + isoxachlortole + sulfosate; aclonifen + mesotrione + sulfosate; aclonifen + sulcotrione + sulfosate; aclonifen + metosulam + sulfosate; aclonifen + flumetsulam + sulfosate; aclonifen + pendimethalin + sulfosate; aclonifen + bromoxynil + sulfosate; aclonifen + bentazone + sulfosate; aclonifen + carfentrazone + sulfosate; aclonifen + clomazone + sulfosate; aclonifen + nicosulfuron + sulfosate; aclonifen + rimsulfuron + sulfosate; aclonifen + halosulfuron + sulfosate; aclonifen + metribuzin + sulfosate; aclonifen + flumiclorac + sulfosate; aclonifen + prosulfuron + sulfosate; aclonifen + primisulfuron + sulfosate; aclonifen + dicamba + sulfosate; aclonifen + fluthiacet + sulfosate; aclonifen + pyridate + sulfosate; aclonifen + compound of the formula B + sulfosate; aclonifen + 2,4-D + sulfosate; aclonifen + clopyralide + sulfosate; aclonifen + diflufenzopyr + sulfosate; aclonifen + fluroxypyr + sulfosate; aclonifen + MCPA + sulfosate; aclonifen + MCPB + sulfosate; aclonifen + MCPP + sulfosate; aclonifen + metobenzuron + sulfosate; aclonifen + thifensulfuron + sulfosate; aclonifen + EPTC + sulfosate; aclonifen + cyanazine + sulfosate; bifenox + atrazin + sulfosate; bifenox + terbuthylazine + sulfosate; bifenox + (S)-metolachlor + sulfosate; bifenox + metolachlor + sulfosate; bifenox + compound of the formula A + sulfosate; bifenox + terbutryn + sulfosate; bifenox + simazine + sulfosate; bifenox + dimethenamid or (S)-dimethenamid + sulfosate; bifenox + flufenacet + sulfosate; bifenox + acetochlor + sulfosate; bifenox + alachlor + sulfosate; bifenox + isoxaflutole + sulfosate; bifenox + isoxachlortole + sulfosate; bifenox + mesotrione + sulfosate; bifenox + sulcotrione + sulfosate; bifenox + metosulam + sulfosate; bifenox + flumetsulam + sulfosate; bifenox + pendimethalin + sulfosate; bifenox + bromoxynil + sulfosate; bifenox + bentazone + sulfosate; bifenox + carfentrazone + sulfosate; bifenox + clomazone + sulfosate; bifenox + nicosulfuron + sulfosate; bifenox + rimsulfuron + sulfosate; bifenox + halosulfuron + sulfosate; bifenox + metribuzin + sulfosate; bifenox + flumiclorac + sulfosate; bifenox + prosulfuron + sulfosate; bifenox + primisulfuron + sulfosate; bifenox + dicamba + sulfosate; bifenox + fluthiacet + sulfosate; bifenox + pyridate + sulfosate; bifenox + compound of the formula B + sulfosate; bifenox + 2,4-D + sulfosate; bifenox + clopyralide + sulfosate; bifenox + diflufenzopyr + sulfosate; bifenox + fluroxypyr + sulfosate; bifenox + MCPA + sulfosate; bifenox + MCPB + sulfosate; bifenox + MCPP + sulfosate; bifenox + metobenzuron + sulfosate; bifenox + thifensulfuron + sulfosate; bifenox + aclonifen + sulfosate; bifenox + EPTC + sulfosate; bifenox + cyanazine + sulfosate; chlornitrofen + atrazin + sulfosate; chlornitrofen + terbuthylazine + sulfosate; chlornitrofen + (S)-metolachlor + sulfosate; chlornitrofen + metolachlor + sulfosate; chlornitrofen + compound of the formula A + sulfosate; chlornitrofen + terbutryn + sulfosate; chlornitrofen + simazine + sulfosate; chlornitrofen + dimethenamid or (S)-dimethenamid + sulfosate; chlornitrofen + flufenacet + sulfosate; chlornitrofen + acetochlor + sulfosate; chlornitrofen + alachlor + sulfosate; chlornitrofen + isoxaflutole + sulfosate; chlornitrofen + isoxachlortole + sulfosate; chlornitrofen + mesotrione + sulfosate; chlornitrofen + sulcotrione + sulfosate; chlornitrofen + metosulam + sulfosate; chlornitrofen + flumetsulam + sulfosate; chlornitrofen + pendimethalin + sulfosate; chlornitrofen + bromoxynil + sulfosate; chlornitrofen + bentazone + sulfosate; chlornitrofen + carfentrazone + sulfosate; chlornitrofen + clomazone + sulfosate; chlornitrofen + nicosulfuron + sulfosate; chlornitrofen + rimsulfuron + sulfosate; chlornitrofen + halosulfuron + sulfosate; chlornitrofen + metribuzin + sulfosate; chlornitrofen + flumiclorac + sulfosate; chlornitrofen + prosulfuron + sulfosate; chlornitrofen + primisulfuron + sulfosate; chlornitrofen + dicamba + sulfosate; chlornitrofen + fluthiacet + sulfosate; chlornitrofen + pyridate + sulfosate; chlornitrofen + compound of the formula B + sulfosate; chlornitrofen + 2,4-D + sulfosate; chlornitrofen + clopyralide + sulfosate; chlornitrofen + diflufenzopyr + sulfosate; chlornitrofen + fluroxypyr + sulfosate; chlornitrofen + MCPA + sulfosate; chlornitrofen + MCPB + sulfosate; chlornitrofen + MCPP + sulfosate; chlornitrofen + metobenzuron + sulfosate; chlornitrofen + thifensulfuron + sulfosate; chlornitrofen + aclonifen + sulfosate; chlornitrofen + EPTC + sulfosate; chlornitrofen + cyanazine + sulfosate; ethoxyfen + atrazin + sulfosate; ethoxyfen + terbuthylazine + sulfosate; ethoxyfen + (S)-metolachlor + sulfosate; ethoxyfen + metolachlor + sulfosate; ethoxyfen + compound of the formula A + sulfosate; ethoxyfen + terbutryn + sulfosate; ethoxyfen + simazine + sulfosate; ethoxyfen + dimethenamid or (S)-dimethenamid + sulfosate; ethoxyfen + flufenacet + sulfosate; ethoxyfen + acetochlor + sulfosate; ethoxyfen + alachlor + sulfosate; ethoxyfen + isoxaflutole + sulfosate; ethoxyfen + isoxachlortole + sulfosate; ethoxyfen + mesotrione + sulfosate; ethoxyfen + sulcotrione + sulfosate; ethoxyfen + metosulam + sulfosate; ethoxyfen + flumetsulam + sulfosate; ethoxyfen + pendimethalin + sulfosate; ethoxyfen + bromoxynil + sulfosate; ethoxyfen + bentazone + sulfosate; ethoxyfen + carfentrazone + sulfosate; ethoxyfen + clomazone + sulfosate; ethoxyfen + nicosulfuron + sulfosate; ethoxyfen + rimsulfuron + sulfosate; ethoxyfen + halosulfuron + sulfosate; ethoxyfen + metribuzin + sulfosate; ethoxyfen + flumiclorac + sulfosate; ethoxyfen + prosulfuron + sulfosate; ethoxyfen + primisulfuron + sulfosate; ethoxyfen + dicamba + sulfosate; ethoxyfen + fluthiacet + sulfosate; ethoxyfen + pyridate + sulfosate; ethoxyfen + compound of the formula B + sulfosate; ethoxyfen + 2,4-D + sulfosate; ethoxyfen + clopyralide + sulfosate; ethoxyfen + diflufenzopyr + sulfosate; ethoxyfen + fluroxypyr + sulfosate; ethoxyfen + MCPA + sulfosate; ethoxyfen + MCPB + sulfosate; ethoxyfen + MCPP + sulfosate; ethoxyfen + metobenzuron + sulfosate; ethoxyfen + thifensulfuron + sulfosate; ethoxyfen + aclonifen + sulfosate; ethoxyfen + EPTC + sulfosate; ethoxyfen + cyanazine + sulfosate; fluoroglycofen + atrazin + sulfosate; fluoroglycofen + terbuthylazine + sulfosate; fluoroglycofen + (S)-metolachlor + sulfosate; fluoroglycofen + metolachlor + sulfosate; fluoroglycofen + compound of the formula A + sulfosate; fluoroglycofen + terbutryn + sulfosate; fluoroglycofen + simazine + sulfosate; fluoroglycofen + dimethenamid or (S)-dimethenamid + sulfosate; fluoroglycofen + flufenacet + sulfosate; fluoroglycofen + acetochlor + sulfosate; fluoroglycofen + alachlor + sulfosate; fluoroglycofen + isoxaflutole + sulfosate; fluoroglycofen + isoxachlortole + sulfosate; fluoroglycofen + mesotrione + sulfosate; fluoroglycofen + sulcotrione + sulfosate; fluoroglycofen + metosulam + sulfosate; fluoroglycofen + flumetsulam + sulfosate; fluoroglycofen + pendimethalin + sulfosate; fluoroglycofen + bromoxynil + sulfosate; fluoroglycofen + bentazone + sulfosate; fluoroglycofen + carfentrazone + sulfosate; fluoroglycofen + clomazone + sulfosate; fluoroglycofen + nicosulfuron + sulfosate; fluoroglycofen + rimsulfuron + sulfosate; fluoroglycofen + halosulfuron + sulfosate; fluoroglycofen + metribuzin + sulfosate; fluoroglycofen + flumiclorac + sulfosate; fluoroglycofen + prosulfuron + sulfosate; fluoroglycofen + primisulfuron + sulfosate; fluoroglycofen + dicamba + sulfosate; fluoroglycofen + fluthiacet + sulfosate; fluoroglycofen + pyridate + sulfosate; fluoroglycofen + compound of the formula B + sulfosate; fluoroglycofen + 2,4-D + sulfosate; fluoroglycofen + clopyralide + sulfosate; fluoroglycofen + diflufenzopyr + sulfosate; fluoroglycofen + fluroxypyr + sulfosate; fluoroglycofen + MCPA + sulfosate; fluoroglycofen + MCPB + sulfosate; fluoroglycofen + MCPP + sulfosate; fluoroglycofen + metobenzuron + sulfosate; fluoroglycofen + thifensulfuron + sulfosate; fluoroglycofen + aclonifen + sulfosate; fluoroglycofen + EPTC + sulfosate; fluoroglycofen + cyanazine + sulfosate; fomesafen + atrazin + sulfosate; fomesafen + terbuthylazine + sulfosate; fomesafen + (S)-metolachlor + sulfosate; fomesafen + metolachlor + sulfosate; fomesafen + compound of the formula A + sulfosate; fomesafen + terbutryn + sulfosate; fomesafen + simazine + sulfosate; fomesafen + dimethenamid or (S)-dimethenamid + sulfosate; fomesafen + flufenacet + sulfosate; fomesafen + acetochlor + sulfosate; fomesafen + alachlor + sulfosate; fomesafen + isoxaflutole + sulfosate; fomesafen + isoxachlortole + sulfosate; fomesafen + mesotrione + sulfosate; fomesafen + sulcotrione + sulfosate; fomesafen + metosulam + sulfosate; fomesafen + flumetsulam + sulfosate; fomesafen + pendimethalin + sulfosate; fomesafen + bromoxynil + sulfosate; fomesafen + bentazone + sulfosate; fomesafen + carfentrazone + sulfosate; fomesafen + clomazone + sulfosate; fomesafen + nicosulfuron + sulfosate; fomesafen + rimsulfuron + sulfosate; fomesafen + halosulfuron + sulfosate; fomesafen + metribuzin + sulfosate; fomesafen + flumiclorac + sulfosate; fomesafen + prosulfuron + sulfosate; fomesafen + primisulfuron + sulfosate; fomesafen + dicamba + sulfosate; fomesafen + fluthiacet + sulfosate; fomesafen + pyridate + sulfosate; fomesafen + compound of the formula B + sulfosate; fomesafen + 2,4-D + sulfosate; fomesafen + clopyralide + sulfosate; fomesafen + diflufenzopyr + sulfosate; fomesafen + fluroxypyr + sulfosate; fomesafen + MCPA + sulfosate; fomesafen + MCPB + sulfosate; fomesafen + MCPP + sulfosate; fomesafen + metobenzuron + sulfosate; fomesafen + thifensulfuron + sulfosate; fomesafen + aclonifen + sulfosate; fomesafen + EPTC + sulfosate; fomesafen + cyanazine + sulfosate; lactofen + atrazin + sulfosate; lactofen + terbuthylazine + sulfosate; lactofen + (S)-metolachlor + sulfosate; lactofen + metolachlor + sulfosate; lactofen + compound of the formula A + sulfosate; lactofen + terbutryn + sulfosate; lactofen + simazine + sulfosate; lactofen + dimethenamid or (S)-dimethenamid + sulfosate; lactofen + flufenacet + sulfosate; lactofen + acetochlor + sulfosate; lactofen + alachlor + sulfosate; lactofen + isoxaflutole + sulfosate; lactofen + isoxachlortole + sulfosate; lactofen + mesotrione + sulfosate; lactofen + sulcotrione + sulfosate; lactofen + metosulam + sulfosate; lactofen + flumetsulam + sulfosate; lactofen + pendimethalin + sulfosate; lactofen + bromoxynil + sulfosate; lactofen + bentazone + sulfosate; lactofen + carfentrazone + sulfosate; lactofen + clomazone + sulfosate; lactofen + nicosulfuron + sulfosate; lactofen + rimsulfuron + sulfosate; lactofen + halosulfuron + sulfosate; lactofen + metribuzin + sulfosate; lactofen + flumiclorac + sulfosate; lactofen + prosulfuron + sulfosate; lactofen + primisulfuron + sulfosate; lactofen + dicamba + sulfosate; lactofen + fluthiacet + sulfosate; lactofen + pyridate + sulfosate; lactofen + compound of the formula B + sulfosate; lactofen + 2,4-D + sulfosate; lactofen + clopyralide + sulfosate; lactofen + diflufenzopyr + sulfosate; lactofen + fluroxypyr + sulfosate; lactofen + MCPA + sulfosate; lactofen + MCPB + sulfosate; lactofen + MCPP + sulfosate; lactofen + metobenzuron + sulfosate; lactofen + thifensulfuron + sulfosate; lactofen + aclonifen + sulfosate; lactofen + EPTC + sulfosate; lactofen + cyanazine + sulfosate; oxyfluorfen + atrazin + sulfosate; oxyfluorfen + terbuthylazine + sulfosate; oxyfluorfen + (S)-metolachlor + sulfosate; oxyfluorfen + metolachlor + sulfosate; oxyfluorfen + compound of the formula A + sulfosate; oxyfluorfen + terbutryn + sulfosate; oxyfluorfen + simazine + sulfosate; oxyfluorfen + dimethenamid or (S)-dimethenamid + sulfosate; oxyfluorfen + flufenacet + sulfosate; oxyfluorfen + acetochlor + sulfosate; oxyfluorfen + alachlor + sulfosate; oxyfluorfen + isoxaflutole + sulfosate; oxyfluorfen + isoxachlortole + sulfosate; oxyfluorfen + mesotrione + sulfosate; oxyfluorfen + sulcotrione + sulfosate; oxyfluorfen + metosulam + sulfosate; oxyfluorfen + flumetsulam + sulfosate; oxyfluorfen + pendimethalin + sulfosate; oxyfluorfen + bromoxynil + sulfosate; oxyfluorfen + bentazone + sulfosate; oxyfluorfen + carfentrazone + sulfosate; oxyfluorfen + clomazone + sulfosate; oxyfluorfen + nicosulfuron + sulfosate; oxyfluorfen + rimsulfuron + sulfosate; oxyfluorfen + halosulfuron + sulfosate; oxyfluorfen + metribuzin + sulfosate; oxyfluorfen + flumiclorac + sulfosate; oxyfluorfen + prosulfuron + sulfosate; oxyfluorfen + primisulfuron + sulfosate; oxyfluorfen + dicamba + sulfosate; oxyfluorfen + fluthiacet + sulfosate; oxyfluorfen + pyridate + sulfosate; oxyfluorfen + compound of the formula B + sulfosate; oxyfluorfen + 2,4-D + sulfosate; oxyfluorfen + clopyralide + sulfosate; oxyfluorfen + diflufenzopyr + sulfosate; oxyfluorfen + fluroxypyr + sulfosate; oxyfluorfen + MCPA + sulfosate; oxyfluorfen + MCPB + sulfosate; oxyfluorfen + MCPP + sulfosate; oxyfluorfen + metobenzuron + sulfosate; oxyfluorfen + thifensulfuron + sulfosate; oxyfluorfen + aclonifen + sulfosate; oxyfluorfen + EPTC + sulfosate; oxyfluorfen + cyanazine + sulfosate; azafenidin + atrazin + sulfosate; azafenidin + terbuthylazine + sulfosate; azafenidin + (S)-metolachlor + sulfosate; azafenidin + metolachlor + sulfosate; azafenidin + compound of the formula A + sulfosate; azafenidin + terbutryn + sulfosate; azafenidin + simazine + sulfosate; azafenidin + dimethenamid or (S)-dimethenamid + sulfosate; azafenidin + flufenacet + sulfosate; azafenidin + acetochlor + sulfosate; azafenidin + alachlor + sulfosate; azafenidin + isoxaflutole + sulfosate; azafenidin + isoxachlortole + sulfosate; azafenidin + mesotrione + sulfosate; azafenidin + sulcotrione + sulfosate; azafenidin + metosulam + sulfosate; azafenidin + flumetsulam + sulfosate; azafenidin + pendimethalin + sulfosate; azafenidin + bromoxynil + sulfosate; azafenidin + bentazone + sulfosate; azafenidin + carfentrazone + sulfosate; azafenidin + clomazone + sulfosate; azafenidin + nicosulfuron + sulfosate; azafenidin + rimsulfuron + sulfosate; azafenidin + halosulfuron + sulfosate; azafenidin + metribuzin + sulfosate; azafenidin + flumiclorac + sulfosate; azafenidin + prosulfuron + sulfosate; azafenidin + primisulfuron + sulfosate; azafenidin + dicamba + sulfosate; azafenidin + fluthiacet + sulfosate; azafenidin + pyridate + sulfosate; azafenidin + compound of the formula B + sulfosate; azafenidin + 2,4-D + sulfosate; azafenidin + clopyralide + sulfosate; azafenidin + diflufenzopyr + sulfosate; azafenidin + fluroxypyr + sulfosate; azafenidin + MCPA + sulfosate; azafenidin + MCPB + sulfosate; azafenidin + MCPP + sulfosate; azafenidin + metobenzuron + sulfosate; azafenidin + thifensulfuron + sulfosate; azafenidin + aclonifen + sulfosate; azafenidin + EPTC + sulfosate; azafenidin + cyanazine + sulfosate; carfentrazone-ethyl + atrazin + sulfosate; carfentrazone-ethyl + terbuthylazine + sulfosate; carfentrazone-ethyl + (S)-metolachlor + sulfosate; carfentrazone-ethyl + metolachlor + sulfosate; carfentrazone-ethyl + compound of the formula A + sulfosate; carfentrazone-ethyl + terbutryn + sulfosate; carfentrazone-ethyl + simazine + sulfosate; carfentrazone-ethyl + dimethenamid or (S)-dimethenamid + sulfosate; carfentrazone-ethyl + flufenacet + sulfosate; carfentrazone-ethyl + acetochlor + sulfosate; carfentrazone-ethyl + alachlor + sulfosate; carfentrazone-ethyl + isoxaflutole + sulfosate; carfentrazone-ethyl + isoxachlortole + sulfosate; carfentrazone-ethyl + mesotrione + sulfosate; carfentrazone-ethyl + sulcotrione + sulfosate; carfentrazone-ethyl + metosulam + sulfosate; carfentrazone-ethyl + flumetsulam + sulfosate; carfentrazone-ethyl + pendimethalin + sulfosate; carfentrazone-ethyl + bromoxynil + sulfosate; carfentrazone-ethyl + bentazone + sulfosate; carfentrazone-ethyl + clomazone + sulfosate; carfentrazone-ethyl + nicosulfuron + sulfosate; carfentrazone-ethyl + rimsulfuron + sulfosate; carfentrazone-ethyl + halosulfuron + sulfosate; carfentrazone-ethyl + metribuzin + sulfosate; carfentrazone-ethyl + flumiclorac + sulfosate; carfentrazone-ethyl + prosulfuron + sulfosate; carfentrazone-ethyl + primisulfuron + sulfosate; carfentrazone-ethyl + dicamba + sulfosate; carfentrazone-ethyl + fluthiacet + sulfosate; carfentrazone-ethyl + pyridate + . sulfosate; carfentrazone-ethyl + compound of the formula B + sulfosate; carfentrazone-ethyl + 2,4-D + sulfosate; carfentrazone-ethyl + clopyralide + sulfosate; carfentrazone-ethyl + diflufenzopyr + sulfosate; carfentrazone-ethyl + fluroxypyr + sulfosate; carfentrazone-ethyl + MCPA + sulfosate; carfentrazone-ethyl + MCPB + sulfosate; carfentrazone-ethyl + MCPP + sulfosate; carfentrazone-ethyl + metobenzuron + sulfosate; carfentrazone-ethyl + thifensulfuron + sulfosate; carfentrazone-ethyl + aclonifen + sulfosate; carfentrazone-ethyl + EPTC + sulfosate; carfentrazone-ethyl + cyanazine + sulfosate; compound of the formula A + atrazin + sulfosate; compound of the formula A + terbuthylazine + sulfosate; compound of the formula A + (S)-metolachlor + sulfosate; compound of the formula A + metolachlor + sulfosate; compound of the formula A + terbutryn + sulfosate; compound of the formula A + simazine + sulfosate; compound of the formula A + dimethenamid or (S)-dimethenamid + sulfosate; compound of the formula A + flufenacet + sulfosate; compound of the formula A + acetochlor + sulfosate; compound of the formula A + alachlor; compound of the formula A + isoxaflutole + sulfosate; compound of the formula A + isoxachlortole + sulfosate; compound of the formula A + mesotrione + sulfosate; compound of the formula A + sulcotrione + sulfosate; compound of the formula A + metosulam + sulfosate; compound of the formula A + flumetsulam + sulfosate; compound of the formula A + pendimethalin + sulfosate; compound of the formula A + bromoxynil + sulfosate; compound of the formula A + bentazone + sulfosate; compound of the formula A + carfentrazone + sulfosate; compound of the formula A + clomazone + sulfosate; compound of the formula A + nicosulfuron + sulfosate; compound of the formula A + rimsulfuron + sulfosate; compound of the formula A + halosulfuron + sulfosate; compound of the formula A + metribuzin + sulfosate; compound of the formula A + flumiclorac + sulfosate; compound of the formula A + prosulfuron + sulfosate; compound of the formula A + primisulfuron + sulfosate; compound of the formula A + dicamba + sulfosate; compound of the formula A + fluthiacet + sulfosate; compound of the formula A + pyridate + sulfosate; compound of the formula A + compound of the formula B + sulfosate; compound of the formula A + 2,4-D + sulfosate; compound of the formula A + clopyralide + sulfosate; compound of the formula A + diflufenzopyr + sulfosate; compound of the formula A + fluroxypyr + sulfosate; compound of the formula A + MCPA + sulfosate; compound of the formula A + MCPB + sulfosate; compound of the formula A + MCPP + sulfosate; compound of the formula A + metobenzuron + sulfosate; compound of the formula A + thifensulfuron + sulfosate; compound of the formula A + aclonifen + sulfosate; compound of the formula A + EPTC + sulfosate; compound of the formula A + cyanazine + sulfosate; cinidon-ethyl + atrazin + sulfosate; cinidon-ethyl + terbuthylazine + sulfosate; cinidon-ethyl + (S)-metolachlor + sulfosate; cinidon-ethyl + metolachlor + sulfosate; cinidon-ethyl + compound of the formula A + sulfosate; cinidon-ethyl + terbutryn + sulfosate; cinidon-ethyl + simazine + sulfosate; cinidon-ethyl + dimethenamid or (S)-dimethenamid + sulfosate; cinidon-ethyl + flufenacet + sulfosate; cinidon-ethyl + acetochlor + sulfosate; cinidon-ethyl + alachlor + sulfosate; cinidon-ethyl + isoxaflutole + sulfosate; cinidon-ethyl + isoxachlortole + sulfosate; cinidon-ethyl + mesotrione + sulfosate; cinidon-ethyl + sulcotrione + sulfosate; cinidon-ethyl + metosulam + sulfosate; cinidon-ethyl + flumetsulam + sulfosate; cinidon-ethyl + pendimethalin + sulfosate; cinidon-ethyl + bromoxynil + sulfosate; cinidon-ethyl + bentazone + sulfosate; cinidon-ethyl + carfentrazone + sulfosate; cinidon-ethyl + clomazone + sulfosate; cinidon-ethyl + nicosulfuron + sulfosate; cinidon-ethyl + rimsulfuron + sulfosate; cinidon-ethyl + halosulfuron + sulfosate; cinidon-ethyl + metribuzin + sulfosate; cinidon-ethyl + flumiclorac + sulfosate; cinidon-ethyl + prosulfuron + sulfosate; cinidon-ethyl + primisulfuron + sulfosate; cinidon-ethyl + dicamba + sulfosate; cinidon-ethyl + fluthiacet + sulfosate; cinidon-ethyl + pyridate + sulfosate; cinidon-ethyl + compound of the formula B + sulfosate; cinidon-ethyl + 2,4-D + sulfosate; cinidon-ethyl + clopyralide + sulfosate; cinidon-ethyl + diflufenzopyr + sulfosate; cinidon-ethyl + fluroxypyr + sulfosate; cinidon-ethyl + MCPA + sulfosate; cinidon-ethyl + MCPB + sulfosate; cinidon-ethyl + MCPP + sulfosate; cinidon-ethyl + metobenzuron + sulfosate; cinidon-ethyl + thifensulfuron + sulfosate; cinidon-ethyl + aclonifen + sulfosate; cinidon-ethyl + EPTC + sulfosate; cinidon-ethyl + cyanazine + sutfosate; flumiclorac-pentyl + atrazin + sulfosate; flumiclorac-pentyl + terbuthylazine + sulfosate; flumiclorac-pentyl + (S)-metolachlor + sulfosate; flumiclorac-pentyl + metolachlor + sulfosate; flumiclorac-pentyl + compound of the formula A + sulfosate; flumiclorac-pentyl + terbutryn + sulfosate; flumictorac-pentyl + simazine + sulfosate; flumiclorac-pentyl + dimethenamid or (S)-dimethenamid + sulfosate; flumiclorac-pentyl + flufenacet + sulfosate; flumiclorac-pentyl + acetochlor + sulfosate; flumiclorac-pentyl + alachlor + sulfosate; flumiclorac-pentyl + isoxaflutole + sulfosate; flumiclorac-pentyl + isoxachlortole + sulfosate; flumiclorac-pentyl + mesotrione + sulfosate; flumiclorac-pentyl + sulcotrione + sulfosate; flumiclorac-pentyl + metosulam + sulfosate; flumiclorac-pentyl + flumetsulam + sulfosate; flumiclorac-pentyl + pendimethalin + sulfosate; flumiclorac-pentyl + bromoxynil + sulfosate; flumiclorac-pentyl + bentazone + sulfosate; flumiclorac-pentyl + carfentrazone + sulfosate; flumiclorac-pentyl + clomazone + sulfosate; flumiclorac-pentyl + nicosulfuron + sulfosate; flumiclorac-pentyl + rimsulfuron + sulfosate; flumiclorac-pentyl + halosulfuron + sulfosate; flumiclorac-pentyl + metribuzin + sulfosate; flumiclorac-pentyl + prosulfuron + sulfosate; flumiclorac-pentyl + primisulfuron + sulfosate; flumiclorac-pentyl + dicamba + sulfosate; flumiclorac-pentyl + fluthiacet + sulfosate; flumiclorac-pentyl + pyridate + sulfosate; flumiclorac-pentyl + compound of the formula B + sulfosate; flumiclorac-pentyl + 2,4-D + sulfosate; flumiclorac-pentyl + clopyralide + sulfosate; flumiclorac-pentyl + diflufenzopyr + sulfosate; flumiclorac-pentyl + fluroxypyr + sulfosate; flumiclorac-pentyl + MCPA + sulfosate; flumiclorac-pentyl + MCPB + sulfosate; flumiclorac-pentyl + MCPP + sulfosate; flumiclorac-pentyl + metobenzuron + sulfosate; flumiclorac-pentyl + thifensulfuron + sulfosate; flumiclorac-pentyl + aclonifen + sulfosate; flumiclorac-pentyl + EPTC + sulfosate; flumiclorac-pentyl + cyanazine + sulfosate; flumioxazin + atrazin + sulfosate; flumioxazin + terbuthylazine + sulfosate; flumioxazin + (S)-metolachlor + sulfosate; flumioxazin + metolachlor + sulfosate; flumioxazin + compound of the formula A + sulfosate; flumioxazin + terbutryn + sulfosate; flumioxazin + simazine + sulfosate; flumioxazin + dimethenamid or (S)-dimethenamid + sulfosate; flumioxazin + flufenacet + sulfosate; flumioxazin + acetochlor + sulfosate; flumioxazin + alachlor + sulfosate; flumioxazin + isoxaflutole + sulfosate; flumioxazin + isoxachlortole + sulfosate; flumioxazin + mesotrione + sulfosate; flumioxazin + sulcotrione + sulfosate; flumioxazin + metosulam + sulfosate; flumioxazin + flumetsulam + sulfosate; flumioxazin + pendimethalin + sulfosate; flumioxazin + bromoxynil + sulfosate; flumioxazin + bentazone + sulfosate; flumioxazin + carfentrazone + sulfosate; flumioxazin + clomazone + sulfosate; flumioxazin + nicosulfuron + sulfosate; flumioxazin + rimsulfuron + sulfosate; flumioxazin + halosulfuron + sulfosate; flumioxazin + metribuzin + sulfosate; flumioxazin + flumiclorac + sulfosate; flumioxazin + prosulfuron + sulfosate; flumioxazin + primisulfuron + sulfosate; flumioxazin + dicamba + sulfosate; flumioxazin + fluthiacet + sulfosate; flumioxazin + pyridate + sulfosate; flumioxazin + compound of the formula B + sulfosate; flumioxazin + 2,4-D + sulfosate; flumioxazin + clopyralide + sulfosate; flumioxazin + diflufenzopyr + sulfosate; flumioxazin + fluroxypyr + sulfosate; flumioxazin + MCPA + sulfosate; flumioxazin + MCPB + sulfosate; flumioxazin + MCPP + sulfosate; flumioxazin + metobenzuron + sulfosate; flumioxazin + thifensulfuron + sulfosate; flumioxazin + aclonifen + sulfosate; flumioxazin + EPTC + sutfosate; flumioxazin + cyanazine + sulfosate; fluthiacet-methyl + atrazin + sulfosate; fluthiacet-methyl + terbuthylazine + sulfosate; fluthiacet-methyl + (S)-metolachlor + sulfosate; fluthiacet-methyl + metolachlor + sulfosate; fluthiacet-methyl + compound of the formula A + sulfosate; fluthiacet-methyl + terbutryn + sulfosate; fluthiacet-methyl + simazine + sulfosate; fluthiacet-methyl + dimethenamid or (S)-dimethenamid + sulfosate; fluthiacet-methyl + flufenacet + sulfosate; fluthiacet-methyl + acetochlor + sulfosate; fluthiacet-methyl + alachlor + sulfosate; fluthiacet-methyl + isoxaflutole + sulfosate; fluthiacet-methyl + isoxachlortole + sulfosate; fluthiacet-methyl + mesotrione + sulfosate; fluthiacet-methyl + sulcotrione + sulfosate; fluthiacet-methyl + metosulam + sulfosate; fluthiacet-methyl + flumetsulam + sulfosate; fluthiacet-methyl + pendimethalin + sulfosate; fluthiacet-methyl + bromoxynil + sulfosate; fluthiacet-methyl + bentazone + sulfosate; fluthiacet-methyl + carfentrazone + sulfosate; fluthiacet-methyl + clomazone + sulfosate; fluthiacet-methyl + nicosulfuron + sulfosate; fluthiacet-methyl + rimsulfuron + sulfosate; fluthiacet-methyl + halosulfuron + sulfosate; fluthiacet-methyl + metribuzin + sulfosate; fluthiacet-methyl + flumiclorac + sulfosate; fluthiacet-methyl + prosulfuron + sulfosate; fluthiacet-methyl + primisulfuron + sulfosate; fluthiacet-methyl + dicamba + sulfosate; fluthiacet-methyl + pyridate + sulfosate; fluthiacet-methyl + compound of the formula B + sulfosate; fluthiacet-methyl + 2,4-D + sulfosate; fluthiacet-methyl + clopyralide + sulfosate; fluthiacet-methyl + diflufenzopyr + sulfosate; fluthiacet-methyl + fluroxypyr + sulfosate; fluthiacet-methyl + MCPA + sulfosate; fluthiacet-methyl + MCPB + sulfosate; fluthiacet-methyl + MCPP + sulfosate; fluthiacet-methyl + metobenzuron + sulfosate; fluthiacet-methyl + thifensulfuron + sulfosate; fluthiacet-methyl + aclonifen + sulfosate; fluthiacet-methyl + EPTC + sulfosate; fluthiacet-methyl + cyanazine + sulfosate; oxadiargyl + atrazin + sulfosate; oxadiargyl + terbuthylazine + sulfosate; oxadiargyl + (S)-metolachlor + sulfosate; oxadiargyl + metolachlor + sulfosate; oxadiargyl + compound of the formula A + sulfosate; oxadiargyl + terbutryn + sulfosate; oxadiargyl + simazine + sulfosate; oxadiargyl + dimethenamid or (S)-dimethenamid + sulfosate; oxadiargyl + flufenacet + sulfosate; oxadiargyl + acetochlor + sulfosate; oxadiargyl + alachlor + sulfosate; oxadiargyl + isoxaflutole + sulfosate; oxadiargyl + isoxachlortole + sulfosate; oxadiargyl + mesotrione + sulfosate; oxadiargyl + sulcotrione + sulfosate; oxadiargyl + metosulam + sulfosate; oxadiargyl + flumetsulam + sulfosate; oxadiargyl + pendimethalin + sulfosate; oxadiargyl + bromoxynil + sulfosate; oxadiargyl + bentazone + sulfosate; oxadiargyl + carfentrazone + sulfosate; oxadiargyl + clomazone + sulfosate; oxadiargyl + nicosulfuron + sulfosate; oxadiargyl + rimsulfuron + sulfosate; oxadiargyl + halosulfuron + sulfosate; oxadiargyl + metribuzin + sulfosate; oxadiargyl + flumiclorac + sulfosate; oxadiargyl + prosulfuron + sulfosate; oxadiargyl + primisulfuron + sulfosate; oxadiargyl + dicamba + sulfosate; oxadiargyl + fluthiacet + sulfosate; oxadiargyl + pyridate + sulfosate; oxadiargyl + compound of the formula B + sulfosate; oxadiargyl + 2,4-D + sulfosate; oxadiargyl + clopyralide + sulfosate; oxadiargyl + diflufenzopyr + sulfosate; oxadiargyl + fluroxypyr + sulfosate; oxadiargyl + MCPA + sulfosate; oxadiargyl + MCPB + sulfosate; oxadiargyl + MCPP + sulfosate; oxadiargyl + metobenzuron + sulfosate; oxadiargyl + thifensulfuron + sulfosate; oxadiargyl + aclonifen + sulfosate; oxadiargyl + EPTC + sulfosate; oxadiargyl + cyanazine + sulfosate; oxadiazon + atrazin + sulfosate; oxadiazon + terbuthylazine + sulfosate; oxadiazon + (S)-metolachlor + sulfosate; oxadiazon + metolachlor + sulfosate; oxadiazon + compound of the formula A + sulfosate; oxadiazon + terbutryn + sulfosate; oxadiazon + simazine + sulfosate; oxadiazon + dimethenamid or (S)-dimethenamid + sulfosate; oxadiazon + flufenacet + sulfosate; oxadiazon + acetochlor + sulfosate; oxadiazon + alachlor + sulfosate; oxadiazon + isoxaflutole + sulfosate; oxadiazon + isoxachlortole + sulfosate; oxadiazon + mesotrione + sulfosate; oxadiazon + sulcotrione + sulfosate; oxadiazon + metosulam + sulfosate; oxadiazon + flumetsulam + sulfosate; oxadiazon + pendimethalin + sulfosate; oxadiazon + bromoxynil + sulfosate; oxadiazon + bentazone + sulfosate; oxadiazon + carfentrazone + sulfosate; oxadiazon + clomazone + sulfosate; oxadiazon + nicosulfuron + sulfosate; oxadiazon + rimsulfuron + sulfosate; oxadiazon + halosulfuron + sulfosate; oxadiazon + metribuzin + sulfosate; oxadiazon + flumiclorac + sulfosate; oxadiazon + prosulfuron + sulfosate; oxadiazon + primisulfuron + sulfosate; oxadiazon + dicamba + sulfosate; oxadiazon + fluthiacet + sulfosate; oxadiazon + pyridate + sulfosate; oxadiazon + compound of the formula B + sulfosate; oxadiazon + 2,4-D + sulfosate; oxadiazon + clopyralide + sulfosate; oxadiazon + diflufenzopyr + sulfosate; oxadiazon + fluroxypyr + sulfosate; oxadiazon + MCPA + sulfosate; oxadiazon + MCPB + sulfosate; oxadiazon + MCPP + sulfosate; oxadiazon + metobenzuron + sulfosate; oxadiazon + thifensulfuron + sulfosate; oxadiazon + aclonifen + sulfosate; oxadiazon + EPTC + sulfosate; oxadiazon + cyanazine + sulfosate; pentoxazone + atrazin + sulfosate; pentoxazone + terbuthylazine + sulfosate; pentoxazone + (S)-metolachlor + sulfosate; pentoxazone + metolachlor + sulfosate; pentoxazone + compound of the formula A + sulfosate; pentoxazone + terbutryn + sulfosate; pentoxazone + simazine + sulfosate; pentoxazone + dimethenamid or (S)-dimethenamid + sulfosate; pentoxazone + flufenacet + sulfosate; pentoxazone + acetochlor + sulfosate; pentoxazone + alachlor + sulfosate; pentoxazone + isoxaflutole + sulfosate; pentoxazone + isoxachlortole + sulfosate; pentoxazone + mesotrione + sulfosate; pentoxazone + sulcotrione + sulfosate; pentoxazone + metosulam + sulfosate; pentoxazone + flumetsulam + sulfosate; pentoxazone + pendimethalin + sulfosate; pentoxazone + bromoxynil + sulfosate; pentoxazone + bentazone + sulfosate; pentoxazone + carfentrazone + sulfosate; pentoxazone + clomazone + sulfosate; pentoxazone + nicosulfuron + sulfosate; pentoxazone + rimsulfuron + sulfosate; pentoxazone + halosulfuron + sulfosate; pentoxazone + metribuzin + sulfosate; pentoxazone + flumiclorac + sulfosate; pentoxazone + prosulfuron + sulfosate; pentoxazone + primisulfuron + sulfosate; pentoxazone + dicamba + sulfosate; pentoxazone + fluthiacet + sulfosate; pentoxazone + pyridate + sulfosate; pentoxazone + compound of the formula B + sulfosate; pentoxazone + 2,4-D + sulfosate; pentoxazone + clopyralide + sulfosate; pentoxazone + diflufenzopyr + sulfosate; pentoxazone + fluroxypyr + sulfosate; pentoxazone + MCPA + sulfosate; pentoxazone + MCPB + sulfosate; pentoxazone + MCPP + sulfosate; pentoxazone + metobenzuron + sulfosate; pentoxazone + thifensulfuron + sulfosate; pentoxazone + aclonifen + sulfosate; pentoxazone + EPTC + sulfosate; pentoxazone + cyanazine + sulfosate; sulfentrazone + atrazin + sulfosate; sulfentrazone + terbuthylazine + sulfosate; sulfentrazone + (S)-metolachlor + sulfosate; sulfentrazone + metolachlor + sulfosate; sulfentrazone + compound of the formula A + sulfosate; sulfentrazone + terbutryn + sulfosate; sulfentrazone + simazine + sulfosate; sulfentrazone + dimethenamid or (S)-dimethenamid + sutfosate; sulfentrazone + flufenacet + sulfosate; sulfentrazone + acetochlor + sulfosate; sulfentrazone + alachlor + sulfosate; sulfentrazone + isoxaflutole + sulfosate; sulfentrazone + isoxachlortole + sulfosate; sulfentrazone + mesotrione + sulfosate; sulfentrazone + sulcotrione + sulfosate; sulfentrazone + metosulam + sulfosate; sulfentrazone + flumetsulam + sulfosate; sulfentrazone + pendimethalin + sulfosate; sulfentrazone + bromoxynil + sulfosate; sulfentrazone + bentazone + sulfosate; sulfentrazone + carfentrazone + sulfosate; sulfentrazone + clomazone + sulfosate; sulfentrazone + nicosulfuron + sulfosate; sulfentrazone + rimsulfuron + sulfosate; sulfentrazone + halosulfuron + sulfosate; sulfentrazone + metribuzin + sulfosate; sulfentrazone + flumiclorac + sulfosate; sulfentrazone + prosulfuron + sulfosate; sulfentrazone + primisulfuron + sulfosate; sulfentrazone + dicamba + sulfosate; sulfentrazone + fluthiacet + sulfosate; sulfentrazone + pyridate + sulfosate; sulfentrazone + compound of the formula B + sulfosate; sulfentrazone + 2,4-D + sulfosate; sulfentrazone + clopyralide + sulfosate; sulfentrazone + diflufenzopyr + sulfosate; sulfentrazone + fluroxypyr + sulfosate; sulfentrazone + MCPA + sulfosate; sulfentrazone + MCPB + sulfosate; sulfentrazone + MCPP + sulfosate; sulfentrazone + metobenzuron + sulfosate; sulfentrazone + thifensulfuron + sulfosate; sulfentrazone + aclonifen + sulfosate; sulfentrazone + EPTC + sulfosate; sulfentrazone + cyanazine + sulfosate; fluazolate + atrazin + sulfosate; fluazolate + terbuthylazine + sulfosate; fluazolate + (S)-metolachlor + sulfosate; fluazolate + metolachlor + sulfosate; fluazolate + compound of the formula A + sulfosate; fluazolate + terbutryn + sulfosate; fluazolate + simazine + sulfosate; fluazolate + dimethenamid or (S)-dimethenamid + sulfosate; fluazolate + flufenacet + sulfosate; fluazolate + acetochlor + sulfosate; fluazolate + alachlor + sulfosate; fluazolate + isoxaflutole + sulfosate; fluazolate + isoxachlortole + sulfosate; fluazolate + mesotrione + sulfosate; fluazolate + sulcotrione + sulfosate; fluazolate + metosulam + sulfosate; fluazolate + flumetsulam + sulfosate; fluazolate + pendimethalin + sulfosate; fluazolate + bromoxynil + sulfosate; fluazolate + bentazone + sulfosate; fluazolate + carfentrazone + sulfosate; fluazolate + clomazone + sulfosate; fluazolate + nicosulfuron + sulfosate; fluazolate + rimsulfuron + sulfosate; fluazolate + halosulfuron + sulfosate; fluazolate + metribuzin + sulfosate; fluazolate + flumiclorac + sulfosate; fluazolate + prosulfuron + sulfosate; fluazolate + primisulfuron + sulfosate; fluazolate + dicamba + sulfosate; fluazolate + fluthiacet + sulfosate; fluazolate + pyridate + sulfosate; fluazolate + compound of the formula B + sulfosate; fluazolate + 2,4-D + sulfosate; fluazolate + clopyralide + sulfosate; fluazolate + diflufenzopyr + sulfosate; fluazolate + fluroxypyr + sulfosate; fluazolate + MCPA + sulfosate; fluazolate + MCPB + sulfosate; fluazolate + MCPP + sulfosate; fluazolate + metobenzuron + sulfosate; fluazolate + thifensulfuron + sulfosate; fluazolate + aclonifen + sulfosate; fluazolate + EPTC + sulfosate; fluazolate + cyanazine + sulfosate; pyraflufen-ethyl + atrazin + sulfosate; pyraflufen-ethyl + terbuthylazine + sulfosate; pyraflufen-ethyl + (S)-metolachlor + sulfosate; pyraflufen-ethyl + metolachlor + sulfosate; pyraflufen-ethyl + compound of the formula A + sulfosate; pyraflufen-ethyl + terbutryn + sulfosate; pyraflufen-ethyl + simazine + sulfosate; pyraflufen-ethyl + dimethenamid or (S)-dimethenamid + sulfosate; pyraflufen-ethyl + flufenacet + sulfosate; pyraflufen-ethyl + acetochlor + sulfosate; pyraflufen-ethyl + alachlor + sulfosate; pyraflufen-ethyl + isoxaflutole + sulfosate; pyraflufen-ethyl + isoxachlortole + sulfosate; pyraflufen-ethyl + mesotrione + sulfosate; pyraflufen-ethyl + sulcotrione + sulfosate; pyraflufen-ethyl + metosulam + sulfosate; pyraflufen-ethyl + flumetsulam + sulfosate; pyraflufen-ethyl + pendimethalin + sulfosate; pyraflufen-ethyl + bromoxynil + sulfosate; pyraflufen-ethyl + bentazone + sulfosate; pyraflufen-ethyl + carfentrazone + sulfosate; pyraflufen-ethyl + clomazone + sulfosate; pyraflufen-ethyl + nicosulfuron + sulfosate; pyraflufen-ethyl + rimsulfuron + sulfosate; pyraflufen-ethyl + halosulfuron + sulfosate; pyraflufen-ethyl + metribuzin + sulfosate; pyraflufen-ethyl + flumiclorac + sulfosate; pyraflufen-ethyl + prosulfuron + sulfosate; pyraflufen-ethyl + primisulfuron + sulfosate; pyraflufen-ethyl + dicamba + sulfosate; pyraflufen-ethyl + fluthiacet + sulfosate; pyraflufen-ethyl + pyridate + sulfosate; pyraflufen-ethyl + compound of the formula B + sulfosate; pyraflufen-ethyl + 2,4-D + sulfosate; pyraflufen-ethyl + clopyralide + sulfosate; pyraflufen-ethyl + diflufenzopyr + sulfosate; pyraflufen-ethyl + fluroxypyr + sulfosate; pyraflufen-ethyl + MCPA + sulfosate; pyraflufen-ethyl + MCPB + sulfosate; pyraflufen-ethyl + MCPP + sulfosate; pyraflufen-ethyl + metobenzuron + sulfosate; pyraflufen-ethyl + thifensulfuron + sulfosate; pyraflufen-ethyl + aclonifen + sulfosate; pyraflufen-ethyl + EPTC + sulfosate; pyraflufen-ethyl + cyanazine + sulfosate; flumipropyn + atrazin + sulfosate; flumipropyn + terbuthylazine + sulfosate; flumipropyn + (S)-metolachlor + sulfosate; flumipropyn + metolachlor + sulfosate; flumipropyn + compound of the formula A + sulfosate; flumipropyn + terbutryn + sulfosate; flumipropyn + simazine + sulfosate; flumipropyn + dimethenamid or (S)-dimethenamid + sulfosate; flumipropyn + flufenacet + sulfosate; flumipropyn + acetochlor + sulfosate; flumipropyn + alachlor + sulfosate; flumipropyn + isoxaflutole + sulfosate; flumipropyn + isoxachlortole + sulfosate; flumipropyn + mesotrione + sulfosate; flumipropyn + sulcotrione + sulfosate; flumipropyn + metosulam + sulfosate; flumipropyn + flumetsulam + sulfosate; flumipropyn + pendimethalin + sulfosate; flumipropyn + bromoxynil + sulfosate; flumipropyn + bentazone + sulfosate; flumipropyn + carfentrazone + sulfosate; flumipropyn + clomazone + sulfosate; flumipropyn + nicosulfuron + sulfosate; flumipropyn + rimsulfuron + sulfosate; flumipropyn + halosulfuron + sulfosate; flumipropyn + metribuzin + sulfosate; flumipropyn + flumiclorac + sulfosate; flumipropyn + prosulfuron + sulfosate; flumipropyn + primisulfuron + sulfosate; flumipropyn + dicamba + sulfosate; flumipropyn + fluthiacet + sulfosate; flumipropyn + pyridate + sulfosate; flumipropyn + compound of the formula B + sulfosate; flumipropyn + 2,4-D + sulfosate; flumipropyn + clopyralide + sulfosate; flumipropyn + diflufenzopyr + sulfosate; flumipropyn + fluroxypyr + sulfosate; flumipropyn + MCPA + sulfosate; flumipropyn + MCPB + sulfosate; flumipropyn + MCPP + sulfosate; flumipropyn + metobenzuron + sulfosate; flumipropyn + thifensulfuron + sulfosate; flumipropyn + aclonifen + sulfosate; flumipropyn + EPTC + sulfosate; flumipropyn + cyanazine + sulfosate; flupropacil + atrazin + sulfosate; flupropacil + terbuthylazine + sulfosate; flupropacil + (S)-metolachlor + sulfosate; flupropacil + metolachlor + sulfosate; flupropacil + compound of the formula A + sulfosate; flupropacil + terbutryn + sulfosate; flupropacil + simazine + sulfosate; flupropacil + dimethenamid or (S)-dimethenamid + sulfosate; flupropacil + flufenacet + sulfosate; flupropacil + acetochlor + sulfosate; flupropacil + alachlor + sulfosate; flupropacil + isoxaflutole + sulfosate; flupropacil + isoxachlortole + sulfosate; flupropacil + mesotrione + sulfosate; flupropacil + sulcotrione + sulfosate; flupropacil + metosulam + sulfosate; flupropacil + flumetsulam + sulfosate; flupropacil + pendimethalin + sulfosate; flupropacil + bromoxynil + sulfosate; flupropacil + bentazone + sulfosate; flupropacil + carfentrazone + sulfosate; flupropacil + clomazone + sulfosate; flupropacil + nicosulfuron + sulfosate; flupropacil + rimsulfuron + sulfosate; flupropacil + halosulfuron + sulfosate; flupropacil + metribuzin + sulfosate; flupropacil + flumiclorac + sulfosate; flupropacil + prosulfuron + sulfosate; flupropacil + primisulfuron + sulfosate; flupropacil + dicamba + sulfosate; flupropacil + fluthiacet + sulfosate; flupropacil + pyridate + sulfosate; flupropacil + compound of the formula B + sulfosate; flupropacil + 2,4-D + sulfosate; flupropacil + clopyralide + sulfosate; flupropacil + diflufenzopyr + sulfosate; flupropacil + fluroxypyr + sulfosate; flupropacil + MCPA + sulfosate; flupropacil + MCPB + sulfosate; flupropacil + MCPP + sulfosate; flupropacil + metobenzuron + sulfosate; flupropacil + thifensulfuron + sulfosate; flupropacil + aclonifen + sulfosate; flupropacil + EPTC + sulfosate; flupropacil + cyanazine + sulfosate; nipyraclofen + atrazin + sulfosate; nipyraclofen + terbuthylazine + sulfosate; nipyraclofen + (S)-metolachlor + sulfosate; nipyraclofen + metolachlor + sulfosate; nipyraclofen + compound of the formula A + sulfosate; nipyraclofen + terbutryn + sulfosate; nipyraclofen + simazine + sulfosate; nipyraclofen + dimethenamid or (S)-dimethenamid + sulfosate; nipyraclofen + flufenacet + sulfosate; nipyraclofen + acetochlor + sulfosate; nipyraclofen + alachlor + sulfosate; nipyraclofen + isoxaflutole + sulfosate; nipyraclofen + isoxachlortole + sulfosate; nipyraclofen + mesotrione + sulfosate; nipyraclofen + sulcotrione + sulfosate; nipyraclofen + metosulam + sulfosate; nipyraclofen + flumetsulam + sulfosate; nipyraclofen + pendimethalin + sulfosate; nipyraclofen + bromoxynil + sulfosate; nipyraclofen + bentazone + sulfosate; nipyraclofen + carfentrazone + sulfosate; nipyraclofen + clomazone + sulfosate; nipyraclofen + nicosulfuron + sulfosate; nipyraclofen + rimsulfuron + sulfosate; nipyraclofen + halosulfuron + sulfosate; nipyraclofen + metribuzin + sulfosate; nipyraclofen + flumiclorac + sulfosate; nipyraclofen + prosulfuron + sulfosate; nipyraclofen + primisulfuron + sulfosate; nipyraclofen + dicamba + sulfosate; nipyraclofen + fluthiacet + sulfosate; nipyraclofen + pyridate + sulfosate; nipyraclofen + compound of the formula B + sulfosate; nipyraclofen + 2,4-D + sulfosate; nipyraclofen + clopyralide + sulfosate; nipyraclofen + diflufenzopyr + sulfosate; nipyraclofen + fluroxypyr + sulfosate; nipyraclofen + MCPA + sulfosate; nipyraclofen + MCPB + sulfosate; nipyraclofen + MCPP + sulfosate; nipyraclofen + metobenzuron + sulfosate; nipyraclofen + thifensulfuron + sulfosate; nipyraclofen + aclonifen + sulfosate; nipyraclofen + EPTC + sulfosate; nipyraclofen + cyanazine + sulfosate; benzfendizone + atrazin + sulfosate; benzfendizone + terbuthylazine + sulfosate; benzfendizone + (S)-metolachlor + sulfosate; benzfendizone + metolachlor + sulfosate; benzfendizone + compound of the formula A + sulfosate; benzfendizone + terbutryn + sulfosate; benzfendizone + simazine + sulfosate; benzfendizone + dimethenamid or (S)-dimethenamid + sulfosate; benzfendizone + flufenacet + sulfosate; benzfendizone + acetochlor + sulfosate; benzfendizone + alachlor + sulfosate; benzfendizone + isoxaflutole + sulfosate; benzfendizone + isoxachlortole + sulfosate; benzfendizone + mesotrione + sulfosate; benzfendizone + sulcotrione + sulfosate; benzfendizone + metosulam + sulfosate; benzfendizone + flumetsulam + sulfosate; benzfendizone + pendimethalin + sulfosate; benzfendizone + bromoxynil + sulfosate; benzfendizone + bentazone + sulfosate; benzfendizone + carfentrazone + sulfosate; benzfendizone + clomazone + sulfosate; benzfendizone + nicosulfuron + sulfosate; benzfendizone + rimsulfuron + sulfosate; benzfendizone + halosulfuron + sulfosate; benzfendizone + metribuzin + sulfosate; benzfendizone + flumiclorac + sulfosate; benzfendizone + prosulfuron + sulfosate; benzfendizone + primisulfuron + sulfosate; benzfendizone + dicamba + sulfosate; benzfendizone + fluthiacet + sulfosate; benzfendizone + pyridate + sulfosate; benzfendizone + compound of the formula B + sulfosate; benzfendizone + 2,4-D + sulfosate; benzfendizone + clopyralide + sulfosate; benzfendizone + diflufenzopyr + sulfosate; benzfendizone + fluroxypyr + sulfosate; benzfendizone + MCPA + sulfosate; benzfendizone + MCPB + sulfosate; benzfendizone + MCPP + sulfosate; benzfendizone + metobenzuron + sulfosate; benzfendizone + thifensulfuron + sulfosate; benzfendizone + aclonifen + sulfosate; benzfendizone + EPTC + sulfosate; benzfendizone + cyanazine + sulfosate; thidiazimin + atrazin + sulfosate; thidiazimin + terbuthylazine + sulfosate; thidiazimin + (S)-metolachlor + sulfosate; thidiazimin + metolachlor + sulfosate; thidiazimin + compound of the formula A + sulfosate; thidiazimin + terbutryn + sulfosate; thidiazimin + simazine + sulfosate; thidiazimin + dimethenamid or (S)-dimethenamid + sulfosate; thidiazimin + flufenacet + sulfosate; thidiazimin + acetochlor + sulfosate; thidiazimin + alachlor + sulfosate; thidiazimin + isoxaflutole + sulfosate; thidiazimin + isoxachlortole + sulfosate; thidiazimin + mesotrione + sulfosate; thidiazimin + sulcotrione + sulfosate; thidiazimin + metosulam + sulfosate; thidiazimin + flumetsulam + sulfosate; thidiazimin + pendimethalin + sulfosate; thidiazimin + bromoxynil + sulfosate; thidiazimin + bentazone + sulfosate; thidiazimin + carfentrazone + sulfosate; thidiazimin + clomazone + sulfosate; thidiazimin + nicosulfuron + sulfosate; thidiazimin + rimsulfuron + sulfosate; thidiazimin + halosulfuron + sulfosate; thidiazimin + metribuzin + sulfosate; thidiazimin + flumiclorac + sulfosate; thidiazimin + prosulfuron + sulfosate; thidiazimin + primisulfuron + sulfosate; thidiazimin + dicamba + sulfosate; thidiazimin + fluthiacet + sulfosate; thidiazimin + pyridate + sulfosate; thidiazimin + compound of the formula B + sulfosate; thidiazimin + 2,4-D + sulfosate; thidiazimin + clopyralide + sulfosate; thidiazimin + diflufenzopyr + sulfosate; thidiazimin + fluroxypyr + sulfosate; thidiazimin + MCPA + sulfosate; thidiazimin + MCPB + sulfosate; thidiazimin + MCPP + sulfosate; thidiazimin + metobenzuron + sulfosate; thidiazimin + thifensulfuron + sulfosate; thidiazimin + aclonifen + sulfosate; thidiazimin + EPTC + sulfosate; and thidiazimin + cyanazine + sulfosate.

acifluorfen + (S)-metolachlor + glyphosate + benoxacor; acifluorfen + metolachlor + glyphosate + benoxacor; acifluorfen + dimethenamid or (S)-dimethenamid + glyphosate + benoxacor; acifluorfen + acetochlor + glyphosate + benoxacor; acifluorfen + alachlor + glyphosate + benoxacor; aclonifen + (S)-metolachlor + glyphosate + benoxacor; aclonifen + metolachlor + glyphosate + benoxacor; aclonifen + dimethenamid or (S)-dimethenamid + glyphosate + benoxacor; aclonifen + acetochlor + glyphosate + benoxacor; aclonifen + alachlor + glyphosate + benoxacor; bifenox + (S)-metolachlor + glyphosate + benoxacor; bifenox + metolachlor + glyphosate + benoxacor; bifenox + dimethenamid or (S)-dimethenamid + glyphosate + benoxacor; bifenox + acetochlor + glyphosate + benoxacor; bifenox + alachlor + glyphosate + benoxacor; chlornitrofen + (S)-metolachlor + glyphosate + benoxacor, chlornitrofen + metolachlor + glyphosate + benoxacor; chlornitrofen + dimethenamid or (S)-dimethenamid + glyphosate + benoxacor; chlornitrofen + acetochlor + glyphosate + benoxacor; chlornitrofen + alachlor + glyphosate + benoxacor; ethoxyfen + (S)-metolachlor + glyphosate + benoxacor; ethoxyfen + metolachlor + glyphosate + benoxacor; ethoxyfen + dimethenamid or (S)-dimethenamid + glyphosate + benoxacor; ethoxyfen + acetochlor + glyphosate + benoxacor; ethoxyfen + alachlor + glyphosate + benoxacor; fluoroglycofen + (S)-metolachlor + glyphosate + benoxacor; fluoroglycofen + metolachlor + glyphosate + benoxacor; fluoroglycofen + dimethenamid or (S)-dimethenamid + glyphosate + benoxacor; fluoroglycofen + acetochlor + glyphosate + benoxacor; fluoroglycofen + alachlor + glyphosate + benoxacor; fomesafen + (S)-metolachlor + glyphosate + benoxacor; fomesafen + metolachlor + glyphosate + benoxacor; fomesafen + dimethenamid or (S)-dimethenamid + glyphosate + benoxacor; fomesafen + acetochlor + glyphosate + benoxacor; fomesafen + alachlor + glyphosate + benoxacor; lactofen + (S)-metolachlor + glyphosate + benoxacor; lactofen + metolachlor + glyphosate + benoxacor; lactofen + dimethenamid or (S)-dimethenamid + glyphosate + benoxacor; lactofen + acetochlor + glyphosate + benoxacor; lactofen + alachlor + glyphosate + benoxacor; oxyfluorfen + (S)-metolachlor + glyphosate + benoxacor; oxyfluorfen + metolachlor + glyphosate + benoxacor; oxyfluorfen + dimethenamid or (S)-dimethenamid + glyphosate + benoxacor; oxyfluorfen + acetochlor + glyphosate + benoxacor; oxyfluorfen + alachlor + glyphosate + benoxacor; azafenidin + (S)-metolachlor + glyphosate + benoxacor; azafenidin + metolachlor + glyphosate + benoxacor; azafenidin + dimethenamid or (S)-dimethenamid + glyphosate + benoxacor; azafenidin + acetochlor + glyphosate + benoxacor; azafenidin + alachlor + glyphosate + benoxacor; carfentrazone-ethyl + (S)-metolachlor + glyphosate + benoxacor; carfentrazone-ethyl + metolachlor + glyphosate + benoxacor; carfentrazone-ethyl + dimethenamid or (S)-dimethenamid + glyphosate + benoxacor; carfentrazone-ethyl + acetochlor + glyphosate + benoxacor; carfentrazone-ethyl + alachlor + glyphosate + benoxacor; compound of the formula A + (S)-metolachlor + glyphosate + benoxacor; compound of the formula A + metolachlor + glyphosate + benoxacor; compound of the formula A + dimethenamid or (S)-dimethenamid + glyphosate + benoxacor; compound of the formula A + acetochlor + glyphosate + benoxacor; compound of the formula A + alachlor + glyphosate + benoxacor; cinidon-ethyl + (S)-metolachlor + glyphosate + benoxacor; cinidon-ethyl + metolachlor + glyphosate + benoxacor; cinidon-ethyl + dimethenamid or (S)-dimethenamid + glyphosate + benoxacor; cinidon-ethyl + acetochlor + glyphosate + benoxacor; cinidon-ethyl + alachlor + glyphosate + benoxacor; flumiclorac-pentyl + (S)-metolachlor + glyphosate + benoxacor; flumiclorac-pentyl + metolachlor + glyphosate + benoxacor; flumiclorac-pentyl + dimethenamid or (S)-dimethenamid + glyphosate + benoxacor; flumiclorac-pentyl + acetochlor + glyphosate + benoxacor; flumiclorac-pentyl + alachlor + glyphosate + benoxacor; flumioxazin + (S)-metolachlor + glyphosate + benoxacor; flumioxazin + metolachlor + glyphosate + benoxacor; flumioxazin + dimethenamid or (S)-dimethenamid + glyphosate + benoxacor; flumioxazin + acetochlor + glyphosate + benoxacor; flumioxazin + alachlor + glyphosate + benoxacor; fluthiacet-methyl + (S)-metolachlor + glyphosate + benoxacor; fluthiacet-methyl + metolachlor + glyphosate + benoxacor; fluthiacet-methyl + dimethenamid or (S)-dimethenamid + glyphosate + benoxacor; fluthiacet-methyl + acetochlor + glyphosate + benoxacor; fluthiacet-methyl + alachlor + glyphosate + benoxacor; oxadiargyl + (S)-metolachlor + glyphosate + benoxacor; oxadiargyl + metolachlor + glyphosate + benoxacor; oxadiargyl + dimethenamid or (S)-dimethenamid + glyphosate + benoxacor; oxadiargyl + acetochlor + glyphosate + benoxacor; oxadiargyl + alachlor + glyphosate + benoxacor; oxadiazon + (S)-metolachlor + glyphosate + benoxacor; oxadiazon + metolachlor + glyphosate + benoxacor; oxadiazon + dimethenamid or (S)-dimethenamid + glyphosate + benoxacor; oxadiazon + acetochlor + glyphosate + benoxacor; oxadiazon + alachlor + glyphosate + benoxacor; pentoxazone + (S)-metolachlor + glyphosate + benoxacor; pentoxazone + metolachlor + glyphosate + benoxacor; pentoxazone + dimethenamid or (S)-dimethenamid + glyphosate + benoxacor; pentoxazone + acetochlor + glyphosate + benoxacor; pentoxazone + alachlor + glyphosate + benoxacor; sulfentrazone + (S)-metolachlor + glyphosate + benoxacor; sulfentrazone + metolachlor + glyphosate + benoxacor; sulfentrazone + dimethenamid or (S)-dimethenamid + glyphosate + benoxacor; sulfentrazone + acetochlor + glyphosate + benoxacor; sulfentrazone + alachlor + glyphosate + benoxacor; fluazolate + (S)-metolachlor + glyphosate + benoxacor; fluazolate + metolachlor + glyphosate + benoxacor; fluazolate + dimethenamid or (S)-dimethenamid + glyphosate + benoxacor; fluazolate + acetochlor + glyphosate + benoxacor; fluazotate + alachlor + glyphosate + benoxacor; pyraflufen-ethyl + (S)-metolachlor + glyphosate + benoxacor; pyraflufen-ethyl + metolachlor + glyphosate + benoxacor; pyraflufen-ethyl + dimethenamid or (S)-dimethenamid + glyphosate + benoxacor; pyraflufen-ethyl + acetochlor + glyphosate + benoxacor; pyraflufen-ethyl + alachlor + glyphosate + benoxacor; flumipropyn + (S)-metolachlor + glyphosate + benoxacor; flumipropyn + metolachlor + glyphosate + benoxacor; flumipropyn + dimethenamid or (S)-dimethenamid + glyphosate + benoxacor; flumipropyn + acetochlor + glyphosate + benoxacor; flumipropyn + alachlor + glyphosate + benoxacor; flupropacil + (S)-metolachlor + glyphosate + benoxacor; flupropacil + metolachlor + glyphosate + benoxacor; flupropacil + dimethenamid or (S)-dimethenamid + glyphosate + benoxacor; flupropacil + acetochlor + glyphosate + benoxacor; flupropacil + alachlor + glyphosate + benoxacor; nipyraclofen + (S)-metolachlor + glyphosate + benoxacor; nipyraclofen + metolachlor + glyphosate + benoxacor; nipyraclofen + dimethenamid or (S)-dimethenamid + glyphosate + benoxacor; nipyraclofen + acetochlor + glyphosate + benoxacor; nipyraclofen + alachlor + glyphosate + benoxacor; benzfendizone + (S)-metolachlor + glyphosate + benoxacor; benzfendizone + metolachlor + glyphosate + benoxacor; benzfendizone + dimethenamid or (S)-dimethenamid + glyphosate + benoxacor; benzfendizone + acetochlor + glyphosate + benoxacor; benzfendizone + alachlor + glyphosate + benoxacor; thidiazimin + (S)-metolachlor + glyphosate + benoxacor; thidiazimin + metolachlor + glyphosate + benoxacor; thidiazimin + dimethenamid or (S)-dimethenamid + glyphosate + benoxacor; thidiazimin + acetochlor + glyphosate + benoxacor; and thidiazimin + alachlor + glyphosate + benoxacor.

acifluorfen + (S)-metolachlor + glyphosate + MON 4660; acifluorfen + metolachlor + glyphosate + MON 4660; acifluorfen + dimethenamid or (S)-dimethenamid + glyphosate + MON 4660; acifluorfen + acetochlor + glyphosate + MON 4660; acifluorfen + alachlor + glyphosate + MON 4660; aclonifen + (S)-metolachlor + glyphosate + MON 4660; aclonifen + metolachlor + glyphosate + MON 4660; aclonifen + dimethenamid or (S)-dimethenamid + glyphosate + MON 4660; aclonifen + acetochlor + glyphosate + MON 4660; aclonifen + alachlor + glyphosate + MON 4660; bifenox + (S)-metolachlor + glyphosate + MON 4660; bifenox + metolachlor + glyphosate + MON 4660; bifenox + dimethenamid or (S)-dimethenamid + glyphosate + MON 4660; bifenox + acetochlor + glyphosate + MON 4660; bifenox + alachlor + glyphosate + MON 4660; chlornitrofen + (S)-metolachlor + glyphosate + MON 4660; chlornitrofen + metolachlor + glyphosate + MON 4660; chlornitrofen + dimethenamid or (S)-dimethenamid + glyphosate + MON 4660; chlornitrofen + acetochlor + glyphosate + MON 4660; chlornitrofen + alachlor + glyphosate + MON 4660; ethoxyfen + (S)-metolachlor + glyphosate + MON 4660; ethoxyfen + metolachlor + glyphosate + MON 4660; ethoxyfen + dimethenamid or (S)-dimethenamid + glyphosate + MON 4660; ethoxyfen + acetochlor + glyphosate + MON 4660; ethoxyfen + alachlor + glyphosate + MON 4660; fluoroglycofen + (S)-metolachlor + glyphosate + MON 4660; fluoroglycofen + metolachlor + glyphosate + MON 4660; fluoroglycofen + dimethenamid or (S)-dimethenamid + glyphosate + MON 4660; fluoroglycofen + acetochlor + glyphosate + MON 4660; fluoroglycofen + alachlor + glyphosate + MON 4660; fomesafen + (S)-metolachlor + glyphosate + MON 4660; fomesafen + metolachlor + glyphosate + MON 4660; fomesafen + dimethenamid or (S)-dimethenamid + glyphosate + MON 4660; fomesafen + acetochlor + glyphosate + MON 4660; fomesafen + alachlor + glyphosate + MON 4660; lactofen + (S)-metolachlor + glyphosate + MON 4660; lactofen + metolachlor + glyphosate + MON 4660; lactofen + dimethenamid or (S)-dimethenamid + glyphosate + MON 4660; lactofen + acetochlor + glyphosate + MON 4660; lactofen + alachlor + glyphosate + MON 4660; oxyfluorfen + (S)-metolachlor + glyphosate + MON 4660; oxyfluorfen + metolachlor + glyphosate + MON 4660; oxyfluorfen + dimethenamid or (S)-dimethenamid + glyphosate + MON 4660; oxyfluorfen + acetochlor + glyphosate + MON 4660; oxyfluorfen + alachlor + glyphosate + MON 4660; azafenidin + (S)-metolachlor + glyphosate + MON 4660; azafenidin + metolachlor + glyphosate + MON 4660; azafenidin + dimethenamid or (S)-dimethenamid + glyphosate + MON 4660; azafenidin + acetochlor + glyphosate + MON 4660; azafenidin + alachlor + glyphosate + MON 4660; carfentrazone-ethyl + (S)-metolachlor + glyphosate + MON 4660; carfentrazone-ethyl + metolachlor + glyphosate + MON 4660; carfentrazone-ethyl + dimethenamid or (S)-dimethenamid + glyphosate + MON 4660; catfentrazone-ethyl + acetochlor + glyphosate + MON 4660; carfentrazone-ethyl + alachlor + glyphosate + MON 4660; compound of the formula A + (S)-metolachlo + glyphosate + MON 4660; compound of the formula A + metolachlor + glyphosate + MON 4660; compound of the formula A + dimethenamid or (S)-dimethenamid + glyphosate + MON 4660; compound of the formula A + acetochlor + glyphosate + MON 4660; compound of the formula A + alachlor + glyphosate + MON 4660; cinidon-ethyl + (S)-metolachlor + glyphosate + MON 4660; cinidon-ethyl + metolachlor + glyphosate + MON 4660; cinidon-ethyl + dimethenamid or (S)-dimethenamid + glyphosate + MON 4660; cinidon-ethyl + acetochlor + glyphosate + MON 4660; cinidon-ethyl + alachlor + glyphosate + MON 4660; flumiclorac-pentyl + (S)-metolachlor + glyphosate + MON 4660; flumiclorac-pentyl + metolachlor + glyphosate + MON 4660; flumiclorac-pentyl + dimethenamid or (S)-dimethenamid + glyphosate + MON 4660; flumiclorac-pentyl + acetochlor + glyphosate + MON 4660; flumiclorac-pentyl + alachlor + glyphosate + MON 4660; flumioxazin + (S)-metolachlor + glyphosate + MON 4660; flumioxazin + metotachlor + glyphosate + MON 4660; flumioxazin + dimethenamid or (S)-dimethenamid + glyphosate + MON 4660; flumioxazin + acetochlor + glyphosate + MON 4660; flumioxazin + alachlor + glyphosate + MON 4660; fluthiacet-methyl + (S)-metolachlor + glyphosate + MON 4660; fluthiacet-methyl + metolachlor + glyphosate + MON 4660; fluthiacet-methyl + dimethenamid or (S)-dimethenamid + glyphosate + MON 4660; fluthiacet-methyl + acetochlor + glyphosate + MON 4660; fluthiacet-methyl + alachlor + glyphosate + MON 4660; oxadiargyl + (S)-metolachlor + glyphosate + MON 4660; oxadiargyl + metolachlor + glyphosate + MON 4660; oxadiargyl + dimethenamid or (S)-dimethenamid + glyphosate + MON 4660; oxadiargyl + acetochlor + glyphosate + MON 4660; oxadiargyl + alachlor + glyphosate + MON 4660; oxadiazon + (S)-metolachlor + glyphosate + MON 4660; oxadiazon + metolachlor + glyphosate + MON 4660; oxadiazon + dimethenamid or (S)-dimethenamid + glyphosate + MON 4660; oxadiazon + acetochlor + glyphosate + MON 4660; oxadiazon + alachlor + glyphosate + MON 4660; pentoxazone + (S)-metolachlor + glyphosate + MON 4660; pentoxazone + metolachlor + glyphosate + MON 4660; pentoxazone + dimethenamid or (S)-dimethenamid + glyphosate + MON 4660; pentoxazone + acetochlor + glyphosate + MON 4660; pentoxazone + alachlor + glyphosate + MON 4660; sulfentrazone + (S)-metolachlor + glyphosate + MON 4660; sulfentrazone + metolachlor + glyphosate + MON 4660; sulfentrazone + dimethenamid or (S)-dimethenamid + glyphosate + MON 4660; sulfentrazone + acetochlor + glyphosate + MON 4660; sulfentrazone + alachlor + glyphosate + MON 4660; fluazolate + (S)-metolachlor + glyphosate + MON 4660; fluazolate + metolachlor + glyphosate + MON 4660; fluazolate + dimethenamid or (S)-dimethenamid + glyphosate + MON 4660; fluazolate + acetochlor + glyphosate + MON 4660; fluazolate + alachlor + glyphosate + MON 4660; pyraflufen-ethyl + (S)-metolachlor + glyphosate + MON 4660; pyraflufen-ethyl + metolachlor + glyphosate + MON 4660; pyraflufen-ethyl + dimethenamid or (S)-dimethenamid + glyphosate + MON 4660; pyraflufen-ethyl + acetochlor + glyphosate + MON 4660; pyraflufen-ethyl + alachlor + glyphosate + MON 4660; flumipropyn + (S)-metolachlor + glyphosate + MON 4660; flumipropyn + metolachlor + glyphosate + MON 4660; flumipropyn + dimethenamid or (S)-dimethenamid + glyphosate + MON 4660; flumipropyn + acetochlor + glyphosate + MON 4660; flumipropyn + alachlor + glyphosate + MON 4660; flupropacil + (S)-metolachlor + glyphosate + MON 4660; flupropacil + metolachlor + glyphosate + MON 4660; flupropacil + dimethenamid or (S)-dimethenamid + glyphosate + MON 4660; flupropacil + acetochlor + glyphosate + MON 4660; flupropacil + alachlor + glyphosate + MON 4660; nipyraclofen + (S)-metolachlor + glyphosate + MON 4660; nipyraclofen + metolachlor + glyphosate + MON 4660; nipyraclofen + dimethenamid or (S)-dimethenamid + glyphosate + MON 4660; nipyraclofen + acetochlor + glyphosate + MON 4660; nipyraclofen + alachlor + glyphosate + MON 4660; benzfendizone + (S)-metolachlor + glyphosate + MON 4660; benzfendizone + metolachlor + glyphosate + MON 4660; benzfendizone + dimethenamid or (S)-dimethenamid + glyphosate + MON 4660; benzfendizone + acetochlor + glyphosate + MON 4660; benzfendizone + alachlor + glyphosate + MON 4660; thidiazimin + (S)-metolachlor + glyphosate + MON 4660; thidiazimin + metolachlor + glyphosate + MON 4660; thidiazimin + dimethenamid or (S)-dimethenamid + glyphosate + MON 4660; thidiazimin + acetochlor + glyphosate + MON 4660; and thidiazimin + alachlor + glyphosate + MON 4660.

Acifluorfen + (S)-metolachlor + glyphosate + flurazole; acifluorfen + metolachlor + glyphosate + flurazole; acifluorfen + dimethenamid or (S)-dimethenamid + glyphosate + flurazole; acifluorfen + acetochlor + glyphosate + flurazole; acifluorfen + alachlor + glyphosate + flurazole; aclonifen + (S)-metolachlor + glyphosate + flurazole; aclonifen + metolachlor + glyphosate + flurazole; aclonifen + dimethenamid or (S)-dimethenamid + glyphosate + flurazole; aclonifen + acetochlor + glyphosate + flurazole; aclonifen + alachlor + glyphosate + flurazole; bifenox + (S)-metolachlor + glyphosate + flurazole; bifenox + metolachlor + glyphosate + flurazole; bifenox + dimethenamid or (S)-dimethenamid + glyphosate + flurazole; bifenox + acetochlor + glyphosate + flurazole; bifenox + alachlor + glyphosate + flurazole; chlornitrofen + (S)-metolachlor + glyphosate + flurazole; chlornitrofen + metolachlor + glyphosate + flurazole; chlornitrofen + dimethenamid or (S)-dimethenamid + glyphosate + flurazole; chlornitrofen + acetochlor + glyphosate + flurazole; chlornitrofen + alachlor + glyphosate + flurazole; ethoxyfen + (S)-metolachlor + glyphosate + flurazole; ethoxyfen + metolachlor + glyphosate + flurazole; ethoxyfen + dimethenamid or (S)-dimethenamid + glyphosate + flurazole; ethoxyfen + acetochlor + glyphosate + flurazole; ethoxyfen + alachlor + glyphosate + flurazole; fluoroglycofen + (S)-metolachlor + glyphosate + flurazole; fluoroglycofen + metolachlor + glyphosate + flurazole; fluoroglycofen + dimethenamid or (S)-dimethenamid + glyphosate + flurazole; fluoroglycofen + acetochlor + glyphosate + flurazole; fluoroglycofen + alachlor + glyphosate + flurazole; fomesafen + (S)-metolachlor + glyphosate + flurazole; fomesafen + metolachlor + glyphosate + flurazole; fomesafen + dimethenamid or (S)-dimethenamid + glyphosate + flurazole; fomesafen + acetochlor + glyphosate + flurazole; fomesafen + alachlor + glyphosate + flurazole; lactofen + (S)-metolachlor + glyphosate + flurazole; lactofen + metolachlor + glyphosate + flurazole; lactofen + dimethenamid or (S)-dimethenamid + glyphosate + flurazole; lactofen + acetochlor + glyphosate + flurazole; lactofen + alachlor + glyphosate + flurazole; oxyfluorfen + (S)-metolachlor + glyphosate + flurazole; oxyfluorfen + metolachlor + glyphosate + flurazole; oxyfluorfen + dimethenamid or (S)-dimethenamid + glyphosate + flurazole; oxyfluorfen + acetochlor + glyphosate + flurazole; oxyfluorfen + alachlor + glyphosate + flurazole; azafenidin + (S)-metolachlor + glyphosate + flurazole; azafenidin + metolachlor + glyphosate + flurazole; azafenidin + dimethenamid or (S)-dimethenamid + glyphosate + flurazole; azafenidin + acetochlor + glyphosate + flurazole; azafenidin + alachlor + glyphosate + flurazole; carfentrazone-ethyl + (S)-metolachlor + glyphosate + flurazole; carfentrazone-ethyl + metolachlor + glyphosate + flurazole; carfentrazone-ethyl + dimethenamid or (S)-dimethenamid + glyphosate + flurazole; carfentrazone-ethyl + acetochlor + glyphosate + flurazole; carfentrazone-ethyl + alachlor + glyphosate + flurazole; compound of the formula A + (S)-metolachlor + glyphosate + flurazole; compound of the formula A + metolachlor + glyphosate + flurazole; compound of the formula A + dimethenamid or (S)-dimethenamid + glyphosate + flurazole; compound of the formula A + acetochlor + glyphosate + flurazole; compound of the formula A + alachlor + glyphosate + flurazole; cinidon-ethyl + (S)-metolachlor + glyphosate + flurazole; cinidon-ethyl + metolachlor + glyphosate + flurazole; cinidon-ethyl + dimethenamid or (S)-dimethenamid + glyphosate + flurazole; cinidon-ethyl + acetochlor + glyphosate + flurazole; cinidon-ethyl + alachlor + glyphosate + flurazole; flumiclorac-pentyl + (S)-metolachlor + glyphosate + flurazole; flumiclorac-pentyl + metolachlor + glyphosate + flurazole; flumiclorac-pentyl + dimethenamid or (S)-dimethenamid + glyphosate + flurazole; flumiclorac-pentyl + acetochlor + glyphosate + flurazole; flumiclorac-pentyl + alachlor + glyphosate + flurazole; flumioxazin + (S)-metolachlor + glyphosate + flurazole; flumioxazin + metolachlor + glyphosate + flurazole; flumioxazin + dimethenamid or (S)-dimethenamid + glyphosate + flurazole; flumioxazin + acetochlor + glyphosate + flurazole; flumioxazin + alachlor + glyphosate + flurazole; fluthiacet-methyl + (S)-metolachlor + glyphosate + flurazole; fluthiacet-methyl + metolachlor + glyphosate + flurazole; fluthiacet-methyl + dimethenamid or (S)-dimethenamid + glyphosate + flurazole; fluthiacet-methyl + acetochlor + glyphosate + flurazole; fluthiacet-methyl + alachlor + glyphosate + flurazole; oxadiargyl + (S)-metolachlor + glyphosate + flurazole; oxadiargyl + metolachlor + glyphosate + flurazole; oxadiargyl + dimethenamid or (S)-dimethenamid + glyphosate + flurazole; oxadiargyl + acetochlor + glyphosate + flurazole; oxadiargyl + alachlor + glyphosate + flurazole; oxadiazon + (S)-metolachlor + glyphosate + flurazole; oxadiazon + metolachlor + glyphosate + flurazole; oxadiazon + dimethenamid or (S)-dimethenamid + glyphosate + flurazole; oxadiazon + acetochlor + glyphosate + flurazole; oxadiazon + alachlor + glyphosate + flurazole; pentoxazone + (S)-metolachlor + glyphosate + flurazole; pentoxazone + metolachlor + glyphosate + flurazole; pentoxazone + dimethenamid or (S)-dimethenamid + glyphosate + flurazole; pentoxazone + acetochlor + glyphosate + flurazole; pentoxazone + alachlor + glyphosate + flurazole; sulfentrazone + (S)-metolachlor + glyphosate + flurazole; sulfentrazone + metolachlor + glyphosate + flurazole; sulfentrazone + dimethenamid or (S)-dimethenamid + glyphosate + flurazole; sulfentrazone + acetochlor + glyphosate + flurazole; sulfentrazone + alachlor + glyphosate + flurazole; fluazolate + (S)-metolachlor + glyphosate + flurazole; fluazolate + metolachtor + glyphosate + flurazole; fluazolate + dimethenamid or (S)-dimethenamid + glyphosate + flurazole; fluazolate + acetochlor + glyphosate + flurazole; fluazolate + alachlor + glyphosate + flurazole; pyraflufen-ethyl + (S)-metolachlor + glyphosate + flurazole; pyraflufen-ethyl + metolachlor + glyphosate + flurazole; pyraflufen-ethyl + dimethenamid or (S)-dimethenamid + glyphosate + flurazole; pyraflufen-ethyl + acetochlor + glyphosate + flurazole; pyraflufen-ethyl + alachlor + glyphosate + flurazole; flumipropyn + (S)-metolachlor + glyphosate + flurazole; flumipropyn + metolachlor + glyphosate + flurazole; flumipropyn + dimethenamid or (S)-dimethenamid + glyphosate + flurazole; flumipropyn + acetochlor + glyphosate + flurazole; flumipropyn + alachlor + glyphosate + flurazole; flupropacil + (S)-metolachlor + glyphosate + flurazole; flupropacil + metolachlor + glyphosate + flurazole; flupropacil + dimethenamid or (S)-dimethenamid + glyphosate + flurazole; flupropacil + acetochlor + glyphosate + flurazole; flupropacil + alachlor + glyphosate + flurazole; nipyraclofen + (S)-metolachlor + glyphosate + flurazole; nipyraclofen + metolachlor + glyphosate + flurazole; nipyraclofen + dimethenamid or (S)-dimethenamid + glyphosate + flurazole; nipyraclofen + acetochlor + glyphosate + flurazole; nipyraclofen + alachlor + glyphosate + flurazole; benzfendizone + (S)-metolachlor + glyphosate + flurazole; benzfendizone + metolachlor + glyphosate + flurazole; benzfendizone + dimethenamid or (S)-dimethenamid + glyphosate + flurazole; benzfendizone + acetochlor + glyphosate + flurazole; benzfendizone + alachlor + glyphosate + flurazole; thidiazimin + (S)-metolachlor + glyphosate + flurazole; thidiazimin + metolachlor + glyphosate + flurazole; thidiazimin + dimethenamid or (S)-dimethenamid + glyphosate + flurazole; thidiazimin + acetochlor + glyphosate + flurazole; and thidiazimin + alachlor + glyphosate + flurazole.

Acifluorfen + (S)-metolachlor + glyphosate + dichlormid; acifluorfen + metolachlor + glyphosate + dichlormid; acifluorfen + dimethenamid or (S)-dimethenamid + glyphosate + dichlormid; acifluorfen + acetochlor + glyphosate + dichlormid; acifluorfen + alachlor + glyphosate + dichlormid; aclonifen + (S)-metolachlor + glyphosate + dichlormid; aclonifen + metolachlor + glyphosate + dichlormid; aclonifen + dimethenamid or (S)-dimethenamid + glyphosate + dichlormid; aclonifen + acetochlor + glyphosate + dichlormid; aclonifen + alachlor + glyphosate + dichlormid; bifenox + (S)-metolachlor + glyphosate + dichlormid; bifenox + metolachlor + glyphosate + dichlormid; bifenox + dimethenamid or (S)-dimethenamid + glyphosate + dichlormid; bifenox + acetochlor + glyphosate + dichlormid; bifenox + alachlor + glyphosate + dichlormid; chlornitrofen + (S)-metolachlor + glyphosate + dichlormid; chlornitrofen + metolachlor + glyphosate + dichlormid; chlornitrofen + dimethenamid or (S)-dimethenamid + glyphosate + dichlormid; chlornitrofen + acetochlor + glyphosate + dichlormid; chlornitrofen + alachlor + glyphosate + dichlormid; ethoxyfen + (S)-metolachlor + glyphosate + dichlormid; ethoxyfen + metolachlor + glyphosate + dichlormid; ethoxyfen + dimethenamid or (S)-dimethenamid + glyphosate + dichlormid; ethoxyfen + acetochlor + glyphosate + dichlormid; ethoxyfen + alachlor + glyphosate + dichlormid; fluoroglycofen + (S)-metolachlor + glyphosate + dichlormid; fluoroglycofen + metolachlor + glyphosate + dichlormid; fluoroglycofen + dimethenamid or (S)-dimethenamid + glyphosate + dichlormid; fluoroglycofen + acetochlor + glyphosate + dichlormid; fluoroglycofen + alachlor + glyphosate + dichlormid; fomesafen + (S)-metolachlor + glyphosate + dichlormid; fomesafen + metolachlor + glyphosate + dichlormid; fomesafen + dimethenamid or (S)-dimethenamid + glyphosate + dichlormid; fomesafen + acetochlor + glyphosate + dichlormid; fomesafen + alachlor + glyphosate + dichlormid; lactofen + (S)-metolachlor + glyphosate + dichlormid; lactofen + metolachlor + glyphosate + dichlormid; lactofen + dimethenamid or (S)-dimethenamid + glyphosate + dichlormid; lactofen + acetochlor + glyphosate + dichlormid; lactofen + alachlor + glyphosate + dichlormid; oxyfluorfen + (S)-metolachlor + glyphosate + dichlormid; oxyfluorfen + metolachlor + glyphosate + dichlormid; oxyfluorfen + dimethenamid or (S)-dimethenamid + glyphosate + dichlormid; oxyfluorfen + acetochlor + glyphosate + dichlormid; oxyfluorfen + alachlor + glyphosate + dichlormid; azafenidin + (S)-metolachlor + glyphosate + dichlormid; azafenidin + metolachlor + glyphosate + dichlormid; azafenidin + dimethenamid or (S)-dimethenamid + glyphosate + dichlormid; azafenidin + acetochlor + glyphosate + dichlormid; azafenidin + alachlor + glyphosate + dichlormid; carfentrazone-ethyl + (S)-metolachlor + glyphosate + dichlormid; carfentrazone-ethyl + metolachlor + glyphosate + dichlormid; carfentrazone-ethyl + dimethenamid or (S)-dimethenamid + glyphosate + dichlormid; carfentrazone-ethyl + acetochlor + glyphosate + dichlormid; carfentrazone-ethyl + alachlor + glyphosate + dichlormid; compound of the formula A + (S)-metolachlor + glyphosate + dichlormid; compound of the formula A + metolachlor + glyphosate + dichlormid; compound of the formula A + dimethenamid or (S)-dimethenamid + glyphosate + dichlormid; compound of the formula A + acetochlor + glyphosate + dichlormid; compound of the formula A + alachlor + glyphosate + dichlormid; cinidon-ethyl + (S)-metolachlor + glyphosate + dichlormid; cinidon-ethyl + metolachlor + glyphosate + dichlormid; cinidon-ethyl + dimethenamid or (S)-dimethenamid + glyphosate + dichlormid; cinidon-ethyl + acetochlor + glyphosate + dichlormid; cinidon-ethyl + alachlor + glyphosate + dichlormid; flumiclorac-pentyl + (S)-metolachlor + glyphosate + dichlormid; flumiclorac-pentyl + metolachlor + glyphosate + dichlormid; flumiclorac-pentyl + dimethenamid or (S)-dimethenamid + glyphosate + dichlormid; flumiclorac-pentyl + acetochlor + glyphosate + dichlormid; flumiclorac-pentyl + alachlor + glyphosate + dichlormid; flumioxazin + (S)-metolachlor + glyphosate + dichlormid; flumioxazin + metolachlor + glyphosate + dichlormid; flumioxazin + dimethenamid or (S)-dimethenamid + glyphosate + dichlormid; flumioxazin + acetochlor + glyphosate + dichlormid; flumioxazin + alachlor + glyphosate + dichlormid; fluthiacet-methyl + (S)-metolachlor + glyphosate + dichlormid; fluthiacet-methyl + metolachlor + glyphosate + dichlormid; fluthiacet-methyl + dimethenamid or (S)-dimethenamid + glyphosate + dichlormid; fluthiacet-methyl + acetochlor + glyphosate + dichlormid; fluthiacet-methyl + alachlor + glyphosate + dichlormid; oxadiargyl + (S)-metolachlor + glyphosate + dichlormid; oxadiargyl + metolachlor + glyphosate + dichlormid; oxadiargyl + dimethenamid or (S)-dimethenamid + glyphosate + dichlormid; oxadiargyl + acetochlor + glyphosate + dichlormid; oxadiargyl + alachlor + glyphosate + dichlormid; oxadiazon + (S)-metolachlor + glyphosate + dichlormid; oxadiazon + metolachlor + glyphosate + dichlormid; oxadiazon + dimethenamid or (S)-dimethenamid + glyphosate + dichlormid; oxadiazon + acetochlor + glyphosate + dichlormid; oxadiazon + alachlor + glyphosate + dichlormid; pentoxazone + (S)-metolachlor + glyphosate + dichlormid; pentoxazone + metolachlor + glyphosate + dichlormid; pentoxazone + dimethenamid or (S)-dimethenamid + glyphosate + dichlormid; pentoxazone + acetochlor + glyphosate + dichlormid; pentoxazone + alachlor + glyphosate + dichlormid; sulfentrazone + (S)-metolachlor + glyphosate + dichlormid; sulfentrazone + metolachlor + glyphosate + dichlormid; sulfentrazone + dimethenamid or (S)-dimethenamid + glyphosate + dichlormid; sulfentrazone + acetochlor + glyphosate + dichlormid; sulfentrazone + alachlor + glyphosate + dichlormid; fluazolate + (S)-metolachlor + glyphosate + dichlormid; fluazolate + metolachlor + glyphosate + dichlormid; fluazolate + dimethenamid or (S)-dimethenamid + glyphosate + dichlormid; fluazolate + acetochlor + glyphosate + dichlormid; fluazolate + alachlor + glyphosate + dichlormid; pyraflufen-ethyl + (S)-metolachlor + glyphosate + dichlormid; pyraflufen-ethyl + metolachlor + glyphosate + dichlormid; pyraflufen-ethyl + dimethenamid or (S)-dimethenamid + glyphosate + dichlormid; pyraflufen-ethyl + acetochlor + glyphosate + dichlormid; pyraflufen-ethyl + alachlor + glyphosate + dichlormid; flumipropyn + (S)-metolachlor + glyphosate + dichlormid; flumipropyn + metolachlor + glyphosate + dichlormid; flumipropyn + dimethenamid or (S)-dimethenamid + glyphosate + dichlormid; flumipropyn + acetochlor + glyphosate + dichlormid; flumipropyn + alachlor + glyphosate + dichlormid; flupropacil + (S)-metolachlor + glyphosate + dichlormid; flupropacil + metolachlor + glyphosate + dichlormid; flupropacil + dimethenamid or (S)-dimethenamid + glyphosate + dichlormid; flupropacil + acetochlor + glyphosate + dichlormid; flupropacil + alachlor + glyphosate + dichlormid; nipyraclofen + (S)-metolachlor + glyphosate + dichlormid; nipyraclofen + metolachlor + glyphosate + dichlormid; nipyraclofen + dimethenamid or (S)-dimethenamid + glyphosate + dichlormid; nipyraclofen + acetochlor + glyphosate + dichlormid; nipyraclofen + alachlor + glyphosate + dichlormid; benzfendizone + (S)-metolachlor + glyphosate + dichlormid; benzfendizone + metolachlor + glyphosate + dichlormid; benzfendizone + dimethenamid or (S)-dimethenamid + glyphosate + dichlormid; benzfendizone + acetochlor + glyphosate + dichlormid; benzfendizone + alachlor + glyphosate + dichlormid; thidiazimin + (S)-metolachlor + glyphosate + dichlormid; thidiazimin + metolachlor + glyphosate + dichlormid; thidiazimin + dimethenamid or (S)-dimethenamid + glyphosate + dichiormid; thidiazimin + acetochlor + glyphosate + dichlormid; and thidiazimin + alachlor + glyphosate + dichlormid.

Acifluorfen + (S)-metolachlor + glyphosate + furilazole; acifluorfen + metolachlor + glyphosate + furilazole; acifluorfen + dimethenamid or (S)-dimethenamid + glyphosate + furilazole; acifluorfen + acetochlor + glyphosate + furilazole; acifluorfen + alachlor + glyphosate + furilazole; aclonifen + (S)-metolachlor + glyphosate + furilazole; aclonifen + metolachlor + glyphosate + furilazole; aclonifen + dimethenamid or (S)-dimethenamid + glyphosate + furilazole; aclonifen + acetochlor + glyphosate + furilazole; aclonifen + alachlor + glyphosate + furilazole; bifenox + (S)-metolachlor + glyphosate + furilazole; bifenox + metolachlor + glyphosate + furilazole; bifenox + dimethenamid or (S)-dimethenamid + glyphosate + furilazole; bifenox + acetochlor + glyphosate + furilazole; bifenox + alachlor + glyphosate + furilazole; chlornitrofen + (S)-metolachlor + glyphosate + furilazole; chlornitrofen + metolachlor + glyphosate + furilazole; chlornitrofen + dimethenamid or (S)-dimethenamid + glyphosate + furilazole; chlornitrofen + acetochlor + glyphosate + furilazole; chlornitrofen + alachlor + glyphosate + furilazole; ethoxyfen + (S)-metolachlor + glyphosate + furilazole; ethoxyfen + metolachlor + glyphosate + furilazole; ethoxyfen + dimethenamid or (S)-dimethenamid + glyphosate + furilazole; ethoxyfen + acetochlor + glyphosate + furilazole; ethoxyfen + alachlor + glyphosate + furilazole; fluoroglycofen + (S)-metolachlor + glyphosate + furilazole; fluoroglycofen + metolachlor + glyphosate + furilazole; fluoroglycofen + dimethenamid or (S)-dimethenamid + glyphosate + furilazole; fluoroglycofen + acetochlor + glyphosate + furilazole; fluoroglycofen + alachlor + glyphosate + furilazole; fomesafen + (S)-metolachlor + glyphosate + furilazole; fomesafen + metolachlor + glyphosate + furilazole; fomesafen + dimethenamid or (S)-dimethenamid + glyphosate + furilazole; fomesafen + acetochlor + glyphosate + furilazole; fomesafen + alachlor + glyphosate + furilazole; lactofen + (5)-metolachior + glyphosate + furilazole; lactofen + metolachlor + glyphosate + furilazole; lactofen + dimethenamid or (S)-dimethenamid + glyphosate + furilazole; lactofen + acetochlor + glyphosate + furilazole; lactofen + alachlor + glyphosate + furilazole; oxyfluorfen + (S)-metolachlor + glyphosate + furilazole; oxyfluorfen + metolachlor + glyphosate + furilazole; oxyfluorfen + dimethenamid or (S)-dimethenamid + glyphosate + furilazole; oxyfluorfen + acetochlor + glyphosate + furilazole; oxyfluorfen + alachlor + glyphosate + furilazole; azafenidin + (S)-metolachlor + glyphosate + furilazole; azafenidin + metolachlor + glyphosate + furilazole; azafenidin + dimethenamid or (S)-dimethenamid + glyphosate + furilazole; azafenidin + acetochlor + glyphosate + furilazole; azafenidin + alachlor + glyphosate + furilazole; carfentrazone-ethyl + (S)-metolachlor + glyphosate + furilazole; carfentrazone-ethyl + metolachlor + glyphosate + furilazole; carfentrazone-ethyl + dimethenamid or (S)-dimethenamid + glyphosate + furilazole; carfentrazone-ethyl + acetochlor + glyphosate + furilazole; carfentrazone-ethyl + alachlor + glyphosate + furilazole; compound of the formula A + (S)-metolachlor + glyphosate + furilazole; compound of the formula A + metolachlor + glyphosate + furilazole; compound of the formula A + dimethenamid or (S)-dimethenamid + glyphosate + furilazole; compound of the formula A + acetochlor + glyphosate + furilazole; compound of the formula A + alachlor + glyphosate + furilazole; cinidon-ethyl + (S)-metolachlor + glyphosate + furilazole; cinidon-ethyl + metolachlor + glyphosate + furilazole; cinidon-ethyl + dimethenamid or (S)-dimethenamid + glyphosate + furilazole; cinidon-ethyl + acetochlor + glyphosate + furilazole; cinidon-ethyl + alachlor + glyphosate + furilazole; flumiclorac-pentyl + (S)-metolachlor + glyphosate + furilazole; flumiclorac-pentyl + metolachlor + glyphosate + furilazole; flumiclorac-pentyl + dimethenamid or (S)-dimethenamid + glyphosate + furilazole; flumiclorac-pentyl + acetochlor + glyphosate + furllazole; flumiclorac-pentyl + alachlor + glyphosate + furilazole; flumioxazin + (S)-metolachlor + glyphosate + furilazole; flumioxazin + metolachlor + glyphosate + furilazole; flumioxazin + dimethenamid or (S)-dimethenamid + glyphosate + furilazole; flumioxazin + acetochlor + glyphosate + furilazole; flumioxazin + alachlor + glyphosate + furilazole; fluthiacet-methyl + (S)-metolachlor + glyphosate + furilazole; fluthiacet-methyl + metolachlor + glyphosate + furilazole; fluthiacet-methyl + dimethenamid or (S)-dimethenamid + glyphosate + furilazole; fluthiacet-methyl + acetochlor + glyphosate + furilazole; fluthiacet-methyl + alachlor + glyphosate + furilazole; oxadiargyl + (S)-metolachlor + glyphosate + furilazole; oxadiargyl + metolachlor + glyphosate + furilazole; oxadiargyl + dimethenamid or (S)-dimethenamid + glyphosate + furilazole; oxadiargyl + acetochlor + glyphosate + furilazole; oxadiargyl + alachlor + glyphosate + furilazole; oxadiazon + (S)-metolachlor + glyphosate + furilazole; oxadiazon + metolachlor + glyphosate + furilazole; oxadiazon + dimethenamid or (S)-dimethenamid + glyphosate + furilazole; oxadiazon + acetochlor + glyphosate + furilazole; oxadiazon + alachlor + glyphosate + furilazole; pentoxazone + (S)-metolachlor + glyphosate + furilazole; pentoxazone + metolachlor + glyphosate + furilazole; pentoxazone + dimethenamid or (S)-dimethenamid + glyphosate + furilazole; pentoxazone + acetochlor + glyphosate + furilazole; pentoxazone + alachlor + glyphosate + furilazole; sulfentrazone + (S)-metolachlor + glyphosate + furilazole; sulfentrazone + metolachlor + glyphosate + furilazole; sulfentrazone + dimethenamid or (S)-dimethenamid + glyphosate + furilazole; sulfentrazone + acetochlor + glyphosate + furilazole; sulfentrazone + alachlor + glyphosate + furilazole; fluazolate + (S)-metolachlor + glyphosate + furilazole; fluazolate + metolachlor + glyphosate + furilazole; fluazolate + dimethenamid or (S)-dimethenamid + glyphosate + furilazole; fluazolate + acetochlor + glyphosate + furilazole; fluazolate + alachlor + glyphosate + furilazole; pyraflufen-ethyl + (S)-metolachlor + glyphosate + furilazole; pyraflufen-ethyl + metolachlor + glyphosate + furilazole; pyraflufen-ethyl + dimethenamid or (S)-dimethenamid + glyphosate + furilazole; pyraflufen-ethyl + acetochlor + glyphosate + furilazole; pyraflufen-ethyl + alachlor + glyphosate + furilazole; flumipropyn + (S)-metolachlor + glyphosate + furilazole; flumipropyn + metolachlor + glyphosate + furilazole; flumipropyn + dimethenamid or (S)-dimethenamid + glyphosate + furilazole; flumipropyn + acetochlor + glyphosate + furilazole; flumipropyn + alachlor + glyphosate + furilazole; flupropacil + (S)-metolachlor + glyphosate + furilazole; flupropacil + metolachlor + glyphosate + furilazole; flupropacil + dimethenamid or (S)-dimethenamid + glyphosate + furilazole; flupropacil + acetochlor + glyphosate + furilazole; flupropacil + alachlor + glyphosate + furilazole; nipyraclofen + (S)-metolachlor + glyphosate + furilazole; nipyraclofen + metolachlor + glyphosate + furilazole; nipyraclofen + dimethenamid or (S)-dimethenamid + glyphosate + furilazole; nipyraclofen + acetochlor + glyphosate + furilazole; nipyraclofen + alachlor + glyphosate + furilazole; benzfendizone + (S)-metolachlor + glyphosate + furilazole; benzfendizone + metolachlor + glyphosate + furilazole; benzfendizone + dimethenamid or (S)-dimethenamid + glyphosate + furilazole; benzfendizone + acetochlor + glyphosate + furilazole; benzfendizone + alachlor + glyphosate + furilazole; thidiazimin + (S)-metolachlor + glyphosate + furilazole; thidiazimin + metolachlor + glyphosate + furilazole; thidiazimin + dimethenamid or (S)-dimethenamid + glyphosate + furilazole; thidiazimin + acetochlor + glyphosate + furilazole; and thidiazimin + alachlor + glyphosate + furilazole.

Acifluorfen + (5)-metotachlor + glufosinate + benoxacor; acifluorfen + metolachlor + glufosinate + benoxacor; acifluorfen + dimethenamid or (S)-dimethenamid + glufosinate + benoxacor; acifluorfen + acetochlor + glufosinate + benoxacor; acifluorfen + alachlor + glufosinate + benoxacor; aclonifen + (S)-metolachlor + glufosinate + benoxacor; aclonifen + metolachlor + glufosinate + benoxacor; aclonifen + dimethenamid or (S)-dimethenamid + glufosinate + benoxacor; aclonifen + acetochlor + glufosinate + benoxacor; aclonifen + alachlor + glufosinate + benoxacor; bifenox + (S)-metolachlor + glufosinate + benoxacor; bifenox + metolachlor + glufosinate + benoxacor; bifenox + dimethenamid or (S)-dimethenamid + glufosinate + benoxacor; bifenox + acetochlor + glufosinate + benoxacor; bifenox + alachlor + glufosinate + benoxacor; chlornitrofen + (S)-metolachlor + glufosinate + benoxacor; chlornitrofen + metolachlor + glufosinate + benoxacor; chlornitrofen + dimethenamid or (S)-dimethenamid + glufosinate + benoxacor; chlornitrofen + acetochlor + glufosinate + benoxacor; chlornitrofen + alachlor + glufosinate + benoxacor; ethoxyfen + (S)-metolachlor + glufosinate + benoxacor; ethoxyfen + metolachlor + glufosinate + benoxacor; ethoxyfen + dimethenamid or (S)-dimethenamid + glufosinate + benoxacor; ethoxyfen + acetochlor + glufosinate + benoxacor; ethoxyfen + alachlor + glufosinate + benoxacor; fluoroglycofen + (S)-metolachlor + glufosinate + benoxacor; fluoroglycofen + metolachlor + glufosinate + benoxacor; fluoroglycofen + dimethenamid or (S)-dimethenamid + glufosinate + benoxacor; fluoroglycofen + acetochlor + glufosinate + benoxacor; fluoroglycofen + alachlor + glufosinate + benoxacor; fomesafen + (S)-metolachlor + glufosinate + benoxacor; fomesafen + metolachlor + glufosinate + benoxacor; fomesafen + dimethenamid or (S)-dimethenamid + glufosinate + benoxacor; fomesafen + acetochlor + glufosinate + benoxacor; fomesafen + alachlor + glufosinate + benoxacor, lactofen + (S)-metolachlor + glufosinate + benoxacor; lactofen + metolachlor + glufosinate + benoxacor; lactofen + dimethenamid or (S)-dimethenamid + glufosinate + benoxacor; lactofen + acetochlor + glufosinate + benoxacor; lactofen + alachlor + glufosinate + benoxacor; oxyfluorfen + (S)-metolachlor + glufosinate + benoxacor; oxyfluorfen + metolachlor + glufosinate + benoxacor; oxyfluorfen + dimethenamid or (S)-dimethenamid + glufosinate + benoxacor; oxyfluorfen + acetochlor + glufosinate + benoxacor; oxyfluorfen + alachlor + glufosinate + benoxacor; azafenidin + (S)-metolachlor + glufosinate + benoxacor; azafenidin + metolachlor + glufosinate + benoxacor; azafenidin + dimethenamid or (S)-dimethenamid + glufosinate + benoxacor; azafenidin + acetochlor + glufosinate + benoxacor; azafenidin + alachlor + glufosinate + benoxacor; carfentrazone-ethyl + (S)-metolachlor + glufosinate + benoxacor; carfentrazone-ethyl + metolachlor + glufosinate + benoxacor; carfentrazone-ethyl + dimethenamid or (S)-dimethenamid + glufosinate + benoxacor; carfentrazone-ethyl + acetochlor + glufosinate + benoxacor; carfentrazone-ethyl + alachlor + glufosinate + benoxacor; compound of the formula A + (S)-metolachlor + glufosinate + benoxacor; compound of the formula A + metolachlor + glufosinate + benoxacor; compound of the formula A + dimethenamid or (S)-dimethenamid + glufosinate + benoxacor; compound of the formula A + acetochlor + glufosinate + benoxacor; compound of the formula A + alachlor + glufosinate + benoxacor; cinidon-ethyl + (S)-metolachlor + glufosinate + benoxacor; cinidon-ethyl + metolachlor + glufosinate + benoxacor; cinidon-ethyl + dimethenamid or (S)-dimethenamid + glufosinate + benoxacor; cinidon-ethyl + acetochlor + glufosinate + benoxacor; cinidon-ethyl + alachlor + glufosinate + benoxacor; flumiclorac-pentyl + (S)-metolachlor + glufosinate + benoxacor; flumiclorac-pentyl + metolachlor + glufosinate + benoxacor; flumiclorac-pentyl + dimethenamid or (S)-dimethenamid + glufosinate + benoxacor; flumiclorac-pentyl + acetochlor + glufosinate + benoxacor; flumiclorac-pentyl + alachlor + glufosinate + benoxacor; flumioxazin + (S)-metolachlor + glufosinate + benoxacor; flumioxazin + metolachlor + glufosinate + benoxacor; flumioxazin + dimethenamid or (S)-dimethenamid + glufosinate + benoxacor; flumioxazin + acetochlor + glufosinate + benoxacor; flumioxazin + alachlor + glufosinate + benoxacor; fluthiacet-methyl + (S)-metolachlor + glufosinate + benoxacor; fluthiacet-methyl + metolachlor + glufosinate + benoxacor; fluthiacet-methyl + dimethenamid or (S)-dimethenamid + glufosinate + benoxacor; fluthiacet-methyl + acetochlor + glufosinate + benoxacor; fluthiacet-methyl + alachlor + glufosinate + benoxacor; oxadiargyl + (S)-metolachlor + glufosinate + benoxacor; oxadiargyl + metolachlor + glufosinate + benoxacor; oxadiargyl + dimethenamid or (S)-dimethenamid + glufosinate + benoxacor; oxadiargyl + acetochlor + glufosinate + benoxacor; oxadiargyl + alachlor + glufosinate + benoxacor; oxadiazon + (S)-metolachlor + glufosinate + benoxacor; oxadiazon + metolachlor + glufosinate + benoxacor; oxadiazon + dimethenamid or (S)-dimethenamid + glufosinate + benoxacor; oxadiazon + acetochlor + glufosinate + benoxacor; oxadiazon + alachlor + glufosinate + benoxacor; pentoxazone + (S)-metolachlor + glufosinate + benoxacor; pentoxazone + metolachlor + glufosinate + benoxacor; pentoxazone + dimethenamid or (S)-dimethenamid + glufosinate + benoxacor, pentoxazone + acetochlor + glufosinate + benoxacor; pentoxazone + alachlor + glufosinate + benoxacor; sulfentrazone + (S)-metolachlor + glufosinate + benoxacor; sulfentrazone + metolachlor + glufosinate + benoxacor; sulfentrazone + dimethenamid or (S)-dimethenamid + glufosinate + benoxacor; sulfentrazone + acetochlor + glufosinate + benoxacor; sulfentrazone + alachlor + glufosinate + benoxacor; fluazolate + (S)-metolachlor + glufosinate + benoxacor; fluazolate + metolachlor + glufosinate + benoxacor; fluazolate + dimethenamid or (S)-dimethenamid + glufosinate + benoxacor; fluazolate + acetochlor + glufosinate + benoxacor; fluazolate + alachlor + glufosinate + benoxacor; pyraflufen-ethyl + (S)-metolachlor + glufosinate + benoxacor; pyraflufen-ethyl + metolachlor + glufosinate + benoxacor; pyraflufen-ethyl + dimethenamid or (S)-dimethenamid + glufosinate + benoxacor; pyraflufen-ethyl + acetochlor + glufosinate + benoxacor; pyraflufen-ethyl + alachlor + glufosinate + benoxacor; flumipropyn + (S)-metolachlor + glufosinate + benoxacor; flumipropyn + metolachlor + glufosinate + benoxacor; flumipropyn + dimethenamid or (S)-dimethenamid + glufosinate + benoxacor; flumipropyn + acetochlor + glufosinate + benoxacor; flumipropyn + alachlor + glufosinate + benoxacor; flupropacil + (S)-metolachlor + glufosinate + benoxacor; flupropacil + metolachlor + glufosinate + benoxacor; flupropacil + dimethenamid or (S)-dimethenamid + glufosinate + benoxacor; flupropacil + acetochlor + glufosinate + benoxacor; flupropacil + alachlor + glufosinate + benoxacor; nipyraclofen + (S)-metolachlor + glufosinate + benoxacor; nipyraclofen + metolachlor + glufosinate + benoxacor; nipyraclofen + dimethenamid or (S)-dimethenamid + glufosinate + benoxacor; nipyraclofen + acetochlor + glufosinate + benoxacor; nipyraclofen + alachlor + glufosinate + benoxacor; benzfendizone + (S)-metolachlor + glufosinate + benoxacor; benzfendizone + metolachlor + glufosinate + benoxacor; benzfendizone + dimethenamid or (S)-dimethenamid + glufosinate + benoxacor; benzfendizone + acetochlor + glufosinate + benoxacor; benzfendizone + alachlor + glufosinate + benoxacor; thidiazimin + (S)-metolachlor + glufosinate + benoxacor; thidiazimin + metolachlor + glufosinate + benoxacor; thidiazimin + dimethenamid or (S)-dimethenamid + glufosinate + benoxacor; thidiazimin + acetochlor + glufosinate + benoxacor; and thidiazimin + alachlor + glufosinate + benoxacor.

Acifluorfen + (S)-metolachlor + glufosinate + MON 4660; acifluorfen + metolachlor + glufosinate + MON 4660; acifluorfen + dimethenamid or (S)-dimethenamid + glufosinate + MON 4660; acifluorfen + acetochlor + glufosinate + MON 4660; acifluorfen + alachlor + glufosinate + MON 4660; aclonifen + (S)-metolachlor + glufosinate + MON 4660; aclonifen + metolachlor + glufosinate + MON 4660; aclonifen + dimethenamid or (S)-dimethenamid + glufosinate + MON 4660; aclonifen + acetochlor + glufosinate + MON 4660; aclonifen + alachlor + glufosinate + MON 4660; bifenox + (S)-metolachlor + glufosinate + MON 4660; bifenox + metolachlor + glufosinate + MON 4660; bifenox + dimethenamid or (S)-dimethenamid + glufosinate + MON 4660; bifenox + acetochlor + glufosinate + MON 4660; bifenox + alachlor + glufosinate + MON 4660; chlornitrofen + (S)-metolachlor + glufosinate + MON 4660; chlornitrofen + metolachlor + glufosinate + MON 4660; chlornitrofen + dimethenamid or (S)-dimethenamid + glufosinate + MON 4660; chlornitrofen + acetochlor + glufosinate + MON 4660; chlornitrofen + alachlor + glufosinate + MON 4660; ethoxyfen + (S)-metolachlor + glufosinate + MON 4660; ethoxyfen + metolachlor + glufosinate + MON 4660; ethoxyfen + dimethenamid or (S)-dimethenamid + glufosinate + MON 4660; ethoxyfen + acetochlor + glufosinate + MON 4660; ethoxyfen + alachlor + glufosinate + MON 4660; fluoroglycofen + (S)-metolachlor + glufosinate + MON 4660; fluoroglycofen + metolachlor + glufosinate + MON 4660; fluoroglycofen + dimethenamid or (S)-dimethenamid + glufosinate + MON 4660; fluoroglycofen + acetochlor + glufosinate + MON 4660; fluoroglycofen + alachlor + glufosinate + MON 4660; fomesafen + (S)-metolachlor + glufosinate + MON 4660; fomesafen + metolachlor + glufosinate + MON 4660; fomesafen + dimethenamid or (S)-dimethenamid + glufosinate + MON 4660; fomesafen + acetochlor + glufosinate + MON 4660; fomesafen + alachlor + glufosinate + MON 4660; lactofen + (S)-metolachlor + glufosinate + MON 4660; lactofen + metolachlor + glufosinate + MON 4660; lactofen + dimethenamid or (S)-dimethenamid + glufosinate + MON 4660; lactofen + acetochlor + glufosinate + MON 4660; lactofen + alachlor + glufosinate + MON 4660; oxyfluorfen + (S)-metolachlor + glufosinate + MON 4660; oxyfluorfen + metolachlor + glufosinate + MON 4660; oxyfluorfen + dimethenamid or (S)-dimethenamid + glufosinate + MON 4660; oxyfluorfen + acetochlor + glufosinate + MON 4660; oxyfluorfen + alachlor + glufosinate + MON 4660; azafenidin + (S)-metolachlor + glufosinate + MON 4660; azafenidin + metolachlor + glufosinate + MON 4660; azafenidin + dimethenamid or (S)-dimethenamid + glufosinate + MON 4660; azafenidin + acetochlor + glufosinate + MON 4660; azafenidin + alachlor + glufosinate + MON 4660; carfentrazone-ethyl + (S)-metolachlor + glufosinate + MON 4660; carfentrazone-ethyl + metolachlor + glufosinate + MON 4660; carfentrazone-ethyl + dimethenamid or (S)-dimethenamid + glufosinate + MON 4660; carfentrazone-ethyl + acetochlor + glufosinate + MON 4660; carfentrazone-ethyl + alachlor + glufosinate + MON 4660; compound of the formula A + (S)-metolachlor + glufosinate + MON 4660; compound of the formula A + metolachlor + glufosinate + MON 4660; compound of the formula A + dimethenamid or (S)-dimethenamid + glufosinate + MON 4660; compound of the formula A + acetochlor + glufosinate + MON 4660; compound of the formula A + alachlor + glufosinate + MON 4660; cinidon-ethyl + (S)-metolachlor + glufosinate + MON 4660; cinidon-ethyl + metolachlor + glufosinate + MON 4660; cinidon-ethyl + dimethenamid or (S)-dimethenamid + glufosinate + MON 4660; cinidon-ethyl + acetochlor + glufosinate + MON 4660; cinidon-ethyl + alachlor + glufosinate + MON 4660; flumiclorac-pentyl + (S)-metolachlor + glufosinate + MON 4660; flumiclorac-pentyl + metolachlor + glufosinate + MON 4660; flumiclorac-pentyl + dimethenamid or (S)-dimethenamid + glufosinate + MON 4660; flumiclorac-pentyl + acetochlor + glufosinate + MON 4660; flumiclorac-pentyl + alachlor + glufosinate + MON 4660; flumioxazin + (S)-metolachlor + glufosinate + MON 4660; flumioxazin + metolachlor + glufosinate + MON 4660; flumioxazin + dimethenamid or (S)-dimethenamid + glufosinate + MON 4660; flumioxazin + acetochlor + glufosinate + MON 4660; flumioxazin + alachlor + glufosinate + MON 4660; fluthiacet-methyl + (S)-metolachlor + glufosinate + MON 4660; fluthiacet-methyl + metolachlor + glufosinate + MON 4660; fluthiacet-methyl + dimethenamid or (S)-dimethenamid + glufosinate + MON 4660; fluthiacet-methyl + acetochlor + glufosinate + MON 4660; fluthiacet-methyl + alachlor + glufosinate + MON 4660; oxadiargyl + (S)-metolachlor + glufosinate + MON 4660; oxadiargyl + metolachlor + glufosinate + MON 4660; oxadiargyl + dimethenamid or (S)-dimethenamid + glufosinate + MON 4660; oxadiargyl + acetochlor + glufosinate + MON 4660; oxadiargyl + alachlor + glufosinate + MON 4660; oxadiazon + (S)-metolachlor + glufosinate + MON 4660; oxadiazon + metolachlor + glufosinate + MON 4660; oxadiazon + dimethenamid or (S)-dimethenamid + glufosinate + MON 4660; oxadiazon + acetochlor + glufosinate + MON 4660; oxadiazon + alachlor + glufosinate + MON 4660; pentoxazone + (S)-metolachlor + glufosinate + MON 4660; pentoxazone + metolachlor + glufosinate + MON 4660; pentoxazone + dimethenamid or (S)-dimethenamid + glufosinate + MON 4660; pentoxazone + acetochlor + glufosinate + MON 4660; pentoxazone + alachlor + glufosinate + MON 4660; sulfentrazone + (S)-metolachlor + glufosinate + MON 4660; sulfentrazone + metolachlor + glufosinate + MON 4660; sulfentrazone + dimethenamid or (S)-dimethenamid + glufosinate + MON 4660; sulfentrazone + acetochlor + glufosinate + MON 4660; sulfentrazone + alachlor + glufosinate + MON 4660; fluazolate + (S)-metolachlor + glufosinate + MON 4660; fluazolate + metolachlor + glufosinate + MON 4660; fluazolate + dimethenamid or (S)-dimethenamid + glufosinate + MON 4660; fluazolate + acetochlor + glufosinate + MON 4660; fluazolate + alachlor + glufosinate + MON 4660; pyraflufen-ethyl + (S)-metolachlor + glufosinate + MON 4660; pyraflufen-ethyl + metolachlor + glufosinate + MON 4660; pyraflufen-ethyl + dimethenamid or (S)-dimethenamid + glufosinate + MON 4660; pyraflufen-ethyl + acetochlor + glufosinate + MON 4660; pyraflufen-ethyl + alachlor + glufosinate + MON 4660; flumipropyn + (S)-metolachlor + glufosinate + MON 4660; flumipropyn + metolachlor + glufosinate + MON 4660; flumipropyn + dimethenamid or (S)-dimethenamid + glufosinate + MON 4660; flumipropyn + acetochlor + glufosinate + MON 4660; flumipropyn + alachlor + glufosinate + MON 4660; flupropacil + (S)-metolachlor + glufosinate + MON 4660; flupropacil + metolachlor + glufosinate + MON 4660; flupropacil + dimethenamid or (S)-dimethenamid + glufosinate + MON 4660; flupropacil + acetochlor + glufosinate + MON 4660; flupropacil + alachlor + glufosinate + MON 4660; nipyraclofen + (S)-metolachlor + glufosinate + MON 4660; nipyraclofen + metolachlor + glufosinate + MON 4660; nipyraclofen + dimethenamid or (S)-dimethenamid + glufosinate + MON 4660; nipyraclofen + acetochlor + glufosinate + MON 4660; nipyraclofen + alachlor + glufosinate + MON 4660; benzfendizone + (S)-metolachlor + glufosinate + MON 4660; benzfendizone + metolachlor + glufosinate + MON 4660; benzfendizone + dimethenamid or (S)-dimethenamid + glufosinate + MON 4660; benzfendizone + acetochlor + glufosinate + MON 4660; benzfendizone + alachlor + glufosinate + MON 4660; thidiazimin + (S)-metolachlor + glufosinate + MON 4660; thidiazimin + metolachlor + glufosinate + MON 4660; thidiazimin + dimethenamid or (S)-dimethenamid + glufosinate + MON 4660; thidiazimin + acetochlor + glufosinate + MON 4660; and thidiazimin + alachlor + glufosinate + MON 4660.

Acifluorfen + (S)-metolachlor + glufosinate + flurazole; acifluorfen + metolachlor + glufosinate + flurazole; acifluorfen + dimethenamid or (S)-dimethenamid + glufosinate + flurazole; acifluorfen + acetochlor + glufosinate + flurazole; acifluorfen + alachlor + glufosinate + flurazole; aclonifen + (S)-metolachlor + glufosinate + flurazole; aclonifen + metolachlor + glufosinate + flurazole; aclonifen + dimethenamid or (S)-dimethenamid + glufosinate + flurazole; aclonifen + acetochlor + glufosinate + flurazole; aclonifen + alachlor + glufosinate + flurazole; bifenox + (S)-metolachlor + glufosinate + flurazole; bifenox + metolachlor + glufosinate + flurazole; bifenox + dimethenamid or (S)-dimethenamid + glufosinate + flurazole; bifenox + acetochlor + glufosinate + flurazole; bifenox + alachlor + glufosinate + flurazole; chlornitrofen + (S)-metolachlor + glufosinate + flurazole; chlornitrofen + metolachlor + glufosinate + flurazole; chlornitrofen + dimethenamid or (S)-dimethenamid + glufosinate + flurazole; chlornitrofen + acetochlor + glufosinate + flurazole; chlornitrofen + alachlor + glufosinate + flurazole; ethoxyfen + (S)-metolachlor + glufosinate + flurazole; ethoxyfen + metolachlor + glufosinate + flurazole; ethoxyfen + dimethenamid or (S)-dimethenamid + glufosinate + flurazole; ethoxyfen + acetochlor + glufosinate + flurazole; ethoxyfen + alachlor + glufosinate + flurazole; fluoroglycofen + (S)-metolachlor + glufosinate + flurazole; fluoroglycofen + metolachlor + glufosinate + flurazole; fluoroglycofen + dimethenamid or (S)-dimethenamid + glufosinate + flurazole; fluoroglycofen + acetochlor + glufosinate + flurazole; fluoroglycofen + alachlor + glufosinate + flurazole; fomesafen + (S)-metolachlor + glufosinate + flurazole; fomesafen + metolachlor + glufosinate + flurazole; fomesafen + dimethenamid or (S)-dimethenamid + glufosinate + flurazole; fomesafen + acetochlor + glufosinate + flurazole; fomesafen + alachlor + glufosinate + flurazole; lactofen + (S)-metolachlor + glufosinate + flurazole; lactofen + metolachlor + glufosinate + flurazole; lactofen + dimethenamid or (S)-dimethenamid + glufosinate + flurazole; lactofen + acetochlor + glufosinate + flurazole; lactofen + alachlor + glufosinate + flurazole; oxyfluorfen + (S)-metolachlor + glufosinate + flurazole; oxyfluorfen + metolachlor + glufosinate + flurazole; oxyfluorfen + dimethenamid or (S)-dimethenamid + glufosinate + flurazole; oxyfluorfen + acetochlor + glufosinate + flurazole; oxyfluorfen + alachlor + glufosinate + flurazole; azafenidin + (S)-metolachlor + glufosinate + flurazole; azafenidin + metolachlor + glufosinate + flurazole; azafenidin + dimethenamid or (S)-dimethenamid + glufosinate + flurazole; azafenidin + acetochlor + glufosinate + flurazole; azafenidin + alachlor + glufosinate + flurazole; carfentrazone-ethyl + (S)-metolachlor + glufosinate + flurazole; carfentrazone-ethyl + metolachlor + glufosinate + flurazole; carfentrazone-ethyl + dimethenamid or (S)-dimethenamid + glufosinate + flurazole; carfentrazone-ethyl + acetochlor + glufosinate + flurazole; carfentrazone-ethyl + alachlor + glufosinate + flurazole; compound of the formula A + (S)-metolachlor + glufosinate + flurazole; compound of the formula A + metolachlor + glufosinate + flurazole; compound of the formula A + dimethenamid or (S)-dimethenamid + glufosinate + flurazole; compound of the formula A + acetochlor + glufosinate + flurazole; compound of the formula A + alachlor + glufosinate + flurazole; cinidon-ethyl + (S)-metolachlor + glufosinate + flurazole; cinidon-ethyl + metolachlor + glufosinate + flurazole; cinidon-ethyl + dimethenamid or (S)-dimethenamid + glufosinate + flurazole; cinidon-ethyl + acetochlor + glufosinate + flurazole; cinidon-ethyl + alachlor + glufosinate + flurazole; flumiclorac-pentyl + (S)-metolachlor + glufosinate + flurazole; flumiclorac-pentyl + metolachlor + glufosinate + flurazole; flumiclorac-pentyl + dimethenamid or (S)-dimethenamid + glufosinate + flurazole; flumiclorac-pentyl + acetochlor + glufosinate + flurazole; flumiclorac-pentyl + alachlor + glufosinate + flurazole; flumioxazin + (S)-metolachlor + glufosinate + flurazole; flumioxazin + metolachlor + glufosinate + flurazole; flumioxazin + dimethenamid or (S)-dimethenamid + glufosinate + flurazole; flumioxazin + acetochlor + glufosinate + flurazole; flumioxazin + alachlor + glufosinate + flurazole; fluthiacet-methyl + (S)-metolachlor + glufosinate + flurazole; fluthiacet-methyl + metolachlor + glufosinate + flurazole; fluthiacet-methyl + dimethenamid or (S)-dimethenamid + glufosinate + flurazole; fluthiacet-methyl + acetochlor + glufosinate + flurazole; fluthiacet-methyl + alachlor + glufosinate + flurazole; oxadiargyl + (S)-metolachlor + glufosinate + flurazole; oxadiargyl + metolachlor + glufosinate + flurazole; oxadiargyl + dimethenamid or (S)-dimethenamid + glufosinate + flurazole; oxadiargyl + acetochlor + glufosinate + flurazole; oxadiargyl + alachlor + glufosinate + flurazole; oxadiazon + (S)-metolachlor + glufosinate + flurazole; oxadiazon + metolachlor + glufosinate + flurazole; oxadiazon + dimethenamid or (S)-dimethenamid + glufosinate + flurazole; oxadiazon + acetochlor + glufosinate + flurazole; oxadiazon + alachlor + glufosinate + flurazole; pentoxazone + (S)-metolachlor + glufosinate + flurazole; pentoxazone + metolachlor + glufosinate + flurazole; pentoxazone + dimethenamid or (S)-dimethenamid + glufosinate + flurazole; pentoxazone + acetochlor + glufosinate + flurazole; pentoxazone + alachlor + glufosinate + flurazole; sulfentrazone + (S)-metolachlor + glufosinate + flurazole; sulfentrazone + metolachlor + glufosinate + flurazole; sulfentrazone + dimethenamid or (S)-dimethenamid + glufosinate + flurazole; sulfentrazone + acetochlor + glufosinate + flurazole; sulfentrazone + alachlor + glufosinate + flurazole; fluazolate + (S)-metolachlor + glufosinate + flurazole; fluazolate + metolachlor + glufosinate + flurazole; fluazolate + dimethenamid or (S)-dimethenamid + glufosinate + flurazole; fluazolate + acetochlor + glufosinate + flurazole; fluazolate + alachlor + glufosinate + flurazole; pyraflufen-ethyl + (S)-metolachlor + glufosinate + flurazole; pyraflufen-ethyl + metolachlor + glufosinate + flurazole; pyraflufen-ethyl + dimethenamid or (S)-dimethenamid + glufosinate + flurazole; pyraflufen-ethyl + acetochlor + glufosinate + flurazole; pyraflufen-ethyl + alachlor + glufosinate + flurazole; flumipropyn + (S)-metolachlor + glufosinate + flurazole; flumipropyn + metolachlor + glufosinate + flurazole; flumipropyn + dimethenamid or (S)-dimethenamid + glufosinate + flurazole; flumipropyn + acetochlor + glufosinate + flurazole; flumipropyn + alachlor + glufosinate + flurazole; flupropacil + (S)-metolachlor + glufosinate + flurazole; flupropacil + metolachlor + glufosinate + flurazole; flupropacil + dimethenamid or (S)-dimethenamid + glufosinate + flurazole; flupropacil + acetochlor + glufosinate + flurazole; flupropacil + alachlor + glufosinate + flurazole; nipyraclofen + (S)-metolachlor + glufosinate + flurazole; nipyraclofen + metolachlor + glufosinate + flurazole; nipyraclofen + dimethenamid or (S)-dimethenamid + glufosinate + flurazole; nipyraclofen + acetochlor + glufosinate + flurazole; nipyraclofen + alachlor + glufosinate + flurazole; benzfendizone + (S)-metolachlor + glufosinate + flurazole; benzfendizone + metolachlor + glufosinate + flurazole; benzfendizone + dimethenamid or (S)-dimethenamid + glufosinate + flurazole; benzfendizone + acetochlor + glufosinate + flurazole; benzfendizone + alachlor + glufosinate + flurazole; thidiazimin + (S)-metolachlor + glufosinate + flurazole; thidiazimin + metolachlor + glufosinate + flurazole; thidiazimin + dimethenamid or (S)-dimethenamid + glufosinate + flurazole; thidiazimin + acetochlor + glufosinate + flurazole; and thidiazimin + alachlor + glufosinate + flurazole.

Acifluorfen + (S)-metolachlor + glufosinate + dichlormid; acifluorfen + metolachlor + glufosinate + dichlormid; acifluorfen + dimethenamid or (S)-dimethenamid + glufosinate + dichlormid; acifluorfen + acetochlor + glufosinate + dichlormid; acifluorfen + alachlor + glufosinate + dichlormid; aclonifen + (S)-metofachlor + glufosinate + dichlormid; aclonifen + metolachlor + glufosinate + dichlormid; aclonifen + dimethenamid or (S)-dimethenamid + glufosinate + dichlormid; aclonifen + acetochlor + glufosinate + dichlormid; aclonifen + alachlor + glufosinate + dichlormid; bifenox + (S)-metolachlor + glufosinate + dichlormid; bifenox + metolachlor + glufosinate + dichlormid; bifenox + dimethenamid or (S)-dimethenamid + glufosinate + dichlormid; bifenox + acetochlor + glufosinate + dichlormid; bifenox + alachlor + glufosinate + dichlormid; chlornitrofen + (S)-metolachlor + glufosinate + dichlormid; chlornitrofen + metolachlor + glufosinate + dichlormid; chlornitrofen + dimethenamid or (S)-dimethenamid + glufosinate + dichlormid; chlornitrofen + acetochlor + glufosinate + dichlormid; chlornitrofen + alachlor + glufosinate + dichlormid; ethoxyfen + (S)-metolachlor + glufosinate + dichlormid; ethoxyfen + metolachlor + glufosinate + dichlormid; ethoxyfen + dimethenamid or (S)-dimethenamid + glufosinate + dichlormid; ethoxyfen + acetochlor + glufosinate + dichlormid; ethoxyfen + alachlor + glufosinate + dichlormid; fluoroglycofen + (S)-metolachlor + glufosinate + dichlormid; fluoroglycofen + metolachlor + glufosinate + dichlormid; fluoroglycofen + dimethenamid or (S)-dimethenamid + glufosinate + dichlormid; fluoroglycofen + acetochlor + glufosinate + dichlormid; fluoroglycofen + alachlor + glufosinate + dichlormid; fomesafen + (S)-metolachlor + glufosinate + dichlormid; fomesafen + metolachior + glufosinate + dichlormid; fomesafen + dimethenamid or (S)-dimethenamid + glufosinate + dichlormid; fomesafen + acetochlor + glufosinate + dichlormid; fomesafen + alachlor + glufosinate + dichlormid; lactofen + (S)-metolachlor + glufosinate + dichlormid; lactofen + metolachlor + glufosinate + dichlormid; lactofen + dimethenamid or (S)-dimethenamid + glufosinate + dichlormid; lactofen + acetochlor + glufosinate + dichlormid; lactofen + alachlor + glufosinate + dichlormid; oxyfluorfen + (S)-metolachlor + glufosinate + dichlormid; oxyfluorfen + metolachlor + glufosinate + dichlormid; oxyfluorfen + dimethenamid or (S)-dimethenamid + glufosinate + dichlormid; oxyfluorfen + acetochlor + glufosinate + dichlormid; oxyfluorfen + alachlor + glufosinate + dichtormid; azafenidin + (S)-metolachlor + glufosinate + dichlormid; azafenidin + metolachlor + glufosinate + dichlormid; azafenidin + dimethenamid or (S)-dimethenamid + glufosinate + dichlormid; azafenidin + acetochlor + glufosinate + dichlormid; azafenidin + alachlor + glufosinate + dichlormid; carfentrazone-ethyl + (S)-metolachlor + glufosinate + dichlormid; carfentrazone-ethyl + metolachlor + glufosinate + dichlormid; carfentrazone-ethyl + dimethenamid or (S)-dimethenamid + glufosinate + dichlormid; carfentrazone-ethyl + acetochlor + glufosinate + dichlormid; carfentrazone-ethyl + alachlor + glufosinate + dichlormid; compound of the formula A + (S)-metolachlor + glufosinate + dichlormid; compound of the formula A + metolachlor + glufosinate + dichlormid; compound of the formula A + dimethenamid or (S)-dimethenamid + glufosinate + dichlormid; compound of the formula A + acetochlor + glufosinate + dichlormid; compound of the formula A + alachlor + glufosinate + dichlormid; cinidon-ethyl + (S)-metolachlor + glufosinate + dichlormid; cinidon-ethyl + metolachlor + glufosinate + dichlormid; cinidon-ethyl + dimethenamid or (S)-dimethenamid + glufosinate + dichlormid; cinidon-ethyl + acetochlor + glufosinate + dichlormid; cinidon-ethyl + alachlor + glufosinate + dichlormid; flumiclorac-pentyl + (S)-metolachlor + glufosinate + dichlormid; flumiclorac-pentyl + metolachlor + glufosinate + dichlormid; flumiclorac-pentyl + dimethenamid or (S)-dimethenamid + glufosinate + dichlormid; flumiclorac-pentyl + acetochlor + glufosinate + dichlormid; flumiclorac-pentyl + alachlor + glufosinate + dichlormid; flumioxazin + (S)-metolachlor + glufosinate + dichlormid; flumioxazin + metolachlor + glufosinate + dichlormid; flumioxazin + dimethenamid or (S)-dimethenamid + glufosinate + dichlormid; flumioxazin + acetochlor + glufosinate + dichlormid; flumioxazin + alachlor + glufosinate + dichlormid; fluthiacet-methyl + (S)-metolachlor + glufosinate + dichlormid; fluthiacet-methyl + metolachlor + glufosinate + dichlormid; fluthiacet-methyl + dimethenamid or (S)-dimethenamid + glufosinate + dichlormid; fluthiacet-methyl + acetochlor + glufosinate + dichlormid; fluthiacet-methyl + alachlor + glufosinate + dichlormid; oxadiargyl + (S)-metolachlor + glufosinate + dichlormid; oxadiargyl + metolachlor + glufosinate + dichlormid; oxadiargyl + dimethenamid or (S)-dimethenamid + glufosinate + dichlormid; oxadiargyl + acetochlor + glufosinate + dichlormid; oxadiargyl + alachlor + glufosinate + dichlormid; oxadiazon + (S)-metolachlor + glufosinate + dichlormid; oxadiazon + metolachlor + glufosinate + dichlormid; oxadiazon + dimethenamid or (S)-dimethenamid + glufosinate + dichlormid; oxadiazon + acetochlor + glufosinate + dichlormid; oxadiazon + alachlor + glufosinate + dichlormid; pentoxazone + (S)-metolachlor + glufosinate + dichlormid; pentoxazone + metolachlor + glufosinate + dichlormid; pentoxazone + dimethenamid or (S)-dimethenamid + glufosinate + dichlormid; pentoxazone + acetochlor + glufosinate + dichlormid; pentoxazone + alachlor + glufosinate + dichlormid; sulfentrazone + (S)-metolachlor + glufosinate + dichlormid; sulfentrazone + metolachlor + glufosinate + dichlormid; sulfentrazone + dimethenamid or (S)-dimethenamid + glufosinate + dichlormid; sulfentrazone + acetochlor + glufosinate + dichlormid; sulfentrazone + alachlor + glufosinate + dichlormid; fluazolate + (S)-metolachlor + glufosinate + dichlormid; fluazolate + metolachlor + glufosinate + dichlormid; fluazolate + dimethenamid or (S)-dimethenamid + glufosinate + dichlormid; fluazolate + acetochlor + glufosinate + dichlormid; fluazolate + alachlor + glufosinate + dichlormid; pyraflufen-ethyl + (S)-metolachlor + glufosinate + dichlormid; pyraflufen-ethyl + metolachlor + glufosinate + dichlormid; pyraflufen-ethyl + dimethenamid or (S)-dimethenamid + glufosinate + dichlormid; pyraflufen-ethyl + acetochlor + glufosinate + dichlormid; pyraflufen-ethyl + alachlor + glufosinate + dichlormid; flumipropyn + (S)-metolachlor + glufosinate + dichlormid; flumipropyn + metolachlor + glufosinate + dichlormid; flumipropyn + dimethenamid or (S)-dimethenamid + glufosinate + dichlormid; flumipropyn + acetochlor + glufosinate + dichlormid; flumipropyn + alachlor + glufosinate + dichlormid; flupropacil + (S)-metolachlor + glufosinate + dichlormid; flupropacil + metolachlor + glufosinate + dichlormid; flupropacil + dimethenamid or (S)-dimethenamid + glufosinate + dichlormid; flupropacil + acetochlor + glufosinate + dichlormid; flupropacil + alachlor + glufosinate + dichlormid; nipyraclofen + (S)-metolachlor + glufosinate + dichlormid; nipyraclofen + metolachlor + glufosinate + dichlormid; nipyraclofen + dimethenamid or (S)-dimethenamid + glufosinate + dichlormid; nipyraclofen + acetochlor + glufosinate + dichlormid; nipyraclofen + alachlor + glufosinate + dichlormid; benzfendizone + (S)-metolachlor + glufosinate + dichlormid; benzfendizone + metolachlor + glufosinate + dichlormid; benzfendizone + dimethenamid or (S)-dimethenamid + glufosinate + dichlormid; benzfendizone + acetochlor + glufosinate + dichlormid; benzfendizone + alachlor + glufosinate + dichlormid; thidiazimin + (S)-metolachlor + glufosinate + dichlormid; thidiazimin + metolachlor + glufosinate + dichlormid; thidiazimin + dimethenamid or (S)-dimethenamid + glufosinate + dichlormid; thidiazimin + acetochlor + glufosinate + dichlormid; and thidiazimin + alachlor + glufosinate + dichlormid.

Acifluorfen + (S)-metolachlor + glufosinate + furilazole; acifluorfen + metolachlor + glufosinate + furilazole; acifluorfen + dimethenamid or (S)-dimethenamid + glufosinate + furilazole; acifluorfen + acetochlor + glufosinate + furilazole; acifluorfen + alachlor + glufosinate + furilazole; aclonifen + (S)-metolachlor + glufosinate + furilazole; aclonifen + metolachlor + glufosinate + furilazole; aclonifen + dimethenamid or (S)-dimethenamid + glufosinate + furilazole; aclonifen + acetochtor + glufosinate + furilazole; aclonifen + alachlor + glufosinate + furilazole; bifenox + (S)-metolachlor + glufosinate + furilazole; bifenox + metolachlor + glufosinate + furilazole; bifenox + dimethenamid or (S)-dimethenamid + glufosinate + furilazole; bifenox + acetochtor + glufosinate + furilazole; bifenox + alachlor + glufosinate + furilazole; chlornitrofen + (S)-metolachlor + glufosinate + furilazole; chlornitrofen + metolachlor + glufosinate + furilazole; chlornitrofen + dimethenamid or (S)-dimethenamid + glufosinate + furilazote; chlornitrofen + acetochlor + glufosinate + furilazole; chlornitrofen + alachlor + glufosinate + furilazole; ethoxyfen + (S)-metolachlor + glufosinate + furilazole; ethoxyfen + metolachlor + glufosinate + furilazole; ethoxyfen + dimethenamid or (S)-dimethenamid + glufosinate + furilazole; ethoxyfen + acetochlor + glufosinate + furilazole; ethoxyfen + alachlor + glufosinate + furilazole; fluoroglycofen + (S)-metolachlor + glufosinate + furilazole; fluoroglycofen + metolachlor + glufosinate + furilazole; fluoroglycofen + dimethenamid or (S)-dimethenamid + glufosinate + furilazole; fluoroglycofen + acetochlor + glufosinate + furilazole; fluoroglycofen + alachlor + glufosinate + furilazole; fomesafen + (S)-metolachlor + glufosinate + furilazole; fomesafen + metolachlor + glufosinate + furilazole; fomesafen + dimethenamid or (S)-dimethenamid + glufosinate + furilazole; fomesafen + acetochlor + glufosinate + furilazole; fomesafen + alachlor + glufosinate + furilazole; lactofen + (S)-metolachlor + glufosinate + furilazole; lactofen + metolachlor + glufosinate + furilazole; lactofen + dimethenamid or (S)-dimethenamid + glufosinate + furilazole; lactofen + acetochlor + glufosinate + furilazole; lactofen + alachlor + glufosinate + furilazole; oxyfluorfen + (S)-metolachlor + glufosinate + furilazole; oxyfluorfen + metolachlor + glufosinate + furilazole; oxyfluorfen + dimethenamid or (S)-dimethenamid + glufosinate + furilazole; oxyfluorfen + acetochlor + glufosinate + furilazole; oxyfluorfen + alachlor + glufosinate + furilazole; azafenidin + (S)-metolachlor + glufosinate + furilazole; azafenidin + metolachlor + glufosinate + furilazole; azafenidin + dimethenamid or (S)-dimethenamid + glufosinate + furilazole; azafenidin + acetochlor + glufosinate + furilazole; azafenidin + alachlor + glufosinate + furilazole; carfentrazone-ethyl + (S)-metolachlor + glufosinate + furilazole; carfentrazone-ethyl + metolachlor + glufosinate + furilazole; carfentrazone-ethyl + dimethenamid or (S)-dimethenamid + glufosinate + furilazole; carfentrazone-ethyl + acetochlor + glufosinate + furilazole; carfentrazone-ethyl + alachlor + glufosinate + furilazole; compound of the formula A + (S)-metolachlor + glufosinate + furilazole; compound of the formula A + metolachlor + glufosinate + furilazole; compound of the formula A + dimethenamid or (S)-dimethenamid + glufosinate + furilazole; compound of the formula A + acetochlor + glufosinate + furilazole; compound of the formula A + alachlor + glufosinate + furilazole; cinidon-ethyl + (S)-metolachlor + glufosinate + furilazole; cinidon-ethyl + metolachlor + glufosinate + furilazole; cinidon-ethyl + dimethenamid or (S)-dimethenamid + glufosinate + furilazole; cinidon-ethyl + acetochlor + glufosinate + furilazole; cinidon-ethyl + alachlor + glufosinate + furilazole; flumiclorac-pentyl + (S)-metolachlor + glufosinate + furilazole; flumiclorac-pentyl + metolachlor + glufosinate + furilazole; flumiclorac-pentyl + dimethenamid or (S)-dimethenamid + glufosinate + furilazole; flumiclorac-pentyl + acetochlor + glufosinate + furilazole; flumiclorac-pentyl + alachlor + glufosinate + furilazole; flumioxazin + (S)-metolachlor + glufosinate + furilazole; flumioxazin + metolachlor + glufosinate + furilazole; flumioxazin + dimethenamid or (S)-dimethenamid + glufosinate + furilazole; flumioxazin + acetochlor + glufosinate + furilazole; flumioxazin + alachlor + glufosinate + furilazole; fluthiacet-methyl + (S)-metolachlor + glufosinate + furilazole; fluthiacet-methyl + metolachlor + glufosinate + furilazole; fluthiacet-methyl + dimethenamid or (S)-dimethenamid + glufosinate + furilazole; fluthiacet-methyl + acetochlor + glufosinate + furilazole; fluthiacet-methyl + alachlor + glufosinate + furilazole; oxadiargyl + (S)-metolachlor + glufosinate + furilazole; oxadiargyl + metolachlor + glufosinate + furilazole; oxadiargyl + dimethenamid or (S)-dimethenamid + glufosinate + furilazole; oxadiargyl + acetochlor + glufosinate + furilazole; oxadiargyl + alachlor + glufosinate + furilazole; oxadiazon + (S)-metolachlor + glufosinate + furilazole; oxadiazon + metolachlor + glufosinate + furilazole; oxadiazon + dimethenamid or (S)-dimethenamid + glufosinate + furilazole; oxadiazon + acetochlor + glufosinate + furilazole; oxadiazon + alachlor + glufosinate + furilazole; pentoxazone + (S)-metolachlor + glufosinate + furilazole; pentaxazone + metolachlor + glufosinate + furilazole; pentoxazone + dimethenamid or (S)-dimethenamid + glufosinate + furilazole; pentoxazone + acetochlor + glufosinate + furilazole; pentoxazone + alachlor + glufosinate + furilazole; sulfentrazone + (S)-metolachlor + glufosinate + furilazole; sulfentrazone + metolachlor + glufosinate + furilazole; sulfentrazone + dimethenamid or (S)-dimethenamid + glufosinate + furilazole; sulfentrazone + acetochlor + glufosinate + furilazole; sulfentrazone + alachlor + glufosinate + furilazole; fluazolate + (S)-metolachlor + glufosinate + furilazole; fluazolate + metolachlor + glufosinate + furilazole; fluazolate + dimethenamid or (S)-dimethenamid + glufosinate + furilazole; fluazolate + acetochlor + glufosinate + furilazole; fluazolate + alachlor + glufosinate + furilazole; pyraflufen-ethyl + (S)-metolachlor + glufosinate + furilazole; pyraflufen-ethyl + metolachlor + glufosinate + furilazole; pyraflufen-ethyl + dimethenamid or (S)-dimethenamid + glufosinate + furilazole; pyraflufen-ethyl + acetochlor + glufosinate + furilazole; pyraflufen-ethyl + alachlor + glufosinate + furilazole; flumipropyn + (S)-metolachlor + glufosinate + furilazole; flumipropyn + metolachlor + glufosinate + furilazole; flumipropyn + dimethenamid or (S)-dimethenamid + glufosinate + furilazole; flumipropyn + acetochlor + glufosinate + furilazole; flumipropyn + alachlor + glufosinate + furilazole; flupropacil + (S)-metolachlor + glufosinate + furilazole; flupropacil + metolachlor + glufosinate + furilazole; flupropacil + dimethenamid or (S)-dimethenamid + glufosinate + furilazole; flupropacil + acetochlor + glufosinate + furilazole; flupropacil + alachlor + glufosinate + furilazole; nipyraclofen + (S)-metolachlor + glufosinate + furilazole; nipyraclofen + metolachlor + glufosinate + furilazole; nipyraclofen + dimethenamid or (S)-dimethenamid + glufosinate + furilazole; nipyraclofen + acetochlor + glufosinate + furilazole; nipyraclofen + alachlor + glufosinate + furilazole; benzfendizone + (S)-metolachlor + glufosinate + furilazole; benzfendizone + metolachlor + glufosinate + furilazole; benzfendizone + dimethenamid or (S)-dimethenamid + glufosinate + furilazole; benzfendizone + acetochlor + glufosinate + furilazole; benzfendizone + alachlor + glufosinate + furilazole; thidiazimin + (S)-metolachlor + glufosinate + furilazole; thidiazimin + metolachlor + glufosinate + furilazole; thidiazimin + dimethenamid or (S)-dimethenamid + glufosinate + furilazole; thidiazimin + acetochlor + glufosinate + furilazole; and thidiazimin + alachlor + glufosinate + furilazole.

Acifluorfen + (S)-metolachlor + sulfosate + benoxacor; acifluorfen + metolachlor + sulfosate + benoxacor; acifluorfen + dimethenamid or (S)-dimethenamid + sulfosate + benoxacor; acifluorfen + acetochlor + sulfosate + benoxacor; acifluorfen + alachlor + sulfosate + benoxacor; aclonifen + (S)-metolachlor + sulfosate + benoxacor; aclonifen + metolachlor + sulfosate + benoxacor; aclonifen + dimethenamid or (S)-dimethenamid + sulfosate + benoxacor; aclonifen + acetochlor + sulfosate + benoxacor; aclonifen + alachlor + sulfosate + benoxacor; bifenox + (S)-metolachior + sulfosate + benoxacor; bifenox + metolachlor + sulfosate + benoxacor; bifenox + dimethenamid or (S)-dimethenamid + sulfosate + benoxacor; bifenox + acetochlor + sulfosate + benoxacor; bifenox + alachlor + sulfosate + benoxacor; chlornitrofen + (S)-metolachlor + sulfosate + benoxacor; chlornitrofen + metolachlor + sulfosate + benoxacor; chlornitrofen + dimethenamid or (S)-dimethenamid + sulfosate + benoxacor; chlornitrofen + acetochlor + sulfosate + benoxacor; chlornitrofen + alachlor + sulfosate + benoxacor; ethoxyfen + (S)-metolachlor + sulfosate + benoxacor; ethoxyfen + metolachlor + sulfosate + benoxacor; ethoxyfen + dimethenamid or (S)-dimethenamid + sulfosate + benoxacor; ethoxyfen + acetochlor + sulfosate + benoxacor; ethoxyfen + alachlor + sulfosate + benoxacor; fluoroglycofen + (S)-metolachlor + sulfosate + benoxacor; fluoroglycofen + metolachlor + sulfosate + benoxacor; fluoroglycofen + dimethenamid or (S)-dimethenamid + sulfosate + benoxacor, fluoroglycofen + acetochlor + sulfosate + benoxacor; fluoroglycofen + alachlor + sulfosate + benoxacor; fomesafen + (S)-metotachlor + sulfosate + benoxacor; fomesafen + metolachlor + sulfosate + benoxacor; fomesafen + dimethenamid or (S)-dimethenamid + sulfosate + benoxacor; fomesafen + acetochlor + sulfosate + benoxacor; fomesafen + alachlor + sulfosate + benoxacor; lactofen + (S)-metolachlor + sulfosate + benoxacor; lactofen + metolachlor + sulfosate + benoxacor; lactofen + dimethenamid or (S)-dimethenamid + sulfosate + benoxacor; lactofen + acetochlor + sulfosate + benoxacor; lactofen + alachlor + sulfosate + benoxacor; oxyfluorfen + (S)-metolachlor + sulfosate + benoxacor; oxyfluorfen + metolachlor + sulfosate + benoxacor; oxyfluorfen + dimethenamid or (S)-dimethenamid + sulfosate + benoxacor; oxyfluorfen + acetochlor + sulfosate + benoxacor; oxyfluorfen + alachlor + sulfosate + benoxacor; azafenidin + (S)-metolachlor + sulfosate + benoxacor; azafenidin + metolachlor + sulfosate + benoxacor; azafenidin + dimethenamid or (S)-dimethenamid + sulfosate + benoxacor; azafenidin + acetochlor + sulfosate + benoxacor; azafenidin + alachlor + sulfosate + benoxacor; carfentrazone-ethyl + (S)-metolachlor + sulfosate + benoxacor; carfentrazone-ethyl + metolachlor + sulfosate + benoxacor; carfentrazone-ethyl + dimethenamid or (S)-dimethenamid + sulfosate + benoxacor; carfentrazone-ethyl + acetochlor + sulfosate + benoxacor; carfentrazone-ethyl + alachlor + sulfosate + benoxacor; compound of the formula A + (S)-metolachlor + sulfosate + benoxacor; compound of the formula A + metolachlor + sulfosate + benoxacor; compound of the formula A + dimethenamid or (S)-dimethenamid + sulfosate + benoxacor; compound of the formula A + acetochlor + sulfosate + benoxacor; compound of the formula A + alachlor + sulfosate + benoxacor; cinidon-ethyl + (S)-metolachlor + sulfosate + benoxacor; cinidon-ethyl + metolachlor + sulfosate + benoxacor; cinidon-ethyl + dimethenamid or (S)-dimethenamid + sulfosate + benoxacor; cinidon-ethyl + acetochlor + sulfosate + benoxacor; cinidon-ethyl + alachlor + sulfosate + benoxacor; flumiclorac-pentyl + (S)-metolachlor + sulfosate + benoxacor; flumiclorac-pentyl + metolachlor + sulfosate + benoxacor; flumiclorac-pentyl + dimethenamid or (S)-dimethenamid + sulfosate + benoxacor; flumiclorac-pentyl + acetochlor + sulfosate + benoxacor; flumiclorac-pentyl + alachlor + sulfosate + benoxacor; flumioxazin + (S)-metolachlor + sulfosate + benoxacor; flumioxazin + metolachlor + sulfosate + benoxacor; flumioxazin + dimethenamid or (S)-dimethenamid + sulfosate + benoxacor; flumioxazin + acetochlor + sulfosate + benoxacor; flumioxazin + alachlor + sulfosate + benoxacor; fluthiacet-methyl + (S)-metolachlor + sulfosate + benoxacor; fluthiacet-methyl + metolachlor + sulfosate + benoxacor; fluthiacet-methyl + dimethenamid or (S)-dimethenamid + sulfosate + benoxacor; fluthiacet-methyl + acetochlor + sulfosate + benoxacor; fluthiacet-methyl + alachlor + sulfosate + benoxacor; oxadiargyl + (S)-metolachlor + sulfosate + benoxacor; oxadiargyl + metolachlor + sulfosate + benoxacor; oxadiargyl + dimethenamid or (S)-dimethenamid + sulfosate + benoxacor; oxadiargyl + acetochlor + sulfosate + benoxacor; oxadiargyl + alachlor + sulfosate + benoxacor, oxadiazon + (S)-metolachlor + sulfosate + benoxacor; oxadiazon + metolachlor + sulfosate + benoxacor; oxadiazon + dimethenamid or (S)-dimethenamid + sulfosate + benoxacor; oxadiazon + acetochlor + sulfosate + benoxacor; oxadiazon + alachlor + sulfosate + benoxacor; pentoxazone + (S)-metolachlor + sulfosate + benoxacor; pentoxazone + metolachlor + sulfosate + benoxacor; pentoxazone + dimethenamid or (S)-dimethenamid + sulfosate + benoxacor; pentoxazone + acetochlor + sulfosate + benoxacor; pentoxazone + alachlor + sulfosate + benoxacor; sulfentrazone + (S)-metolachlor + sulfosate + benoxacor; sulfentrazone + metolachlor + sulfosate + benoxacor; sulfentrazone + dimethenamid or (S)-dimethenamid + sulfosate + benoxacor; sulfentrazone + acetochlor + sulfosate + benoxacor; sulfentrazone + alachlor + sulfosate + benoxacor; fluazolate + (S)-metolachlor + sulfosate + benoxacor; fluazolate + metolachlor + sulfosate + benoxacor; fluazolate + dimethenamid or (S)-dimethenamid + sulfosate + benoxacor; fluazolate + acetochlor + sulfosate + benoxacor; fluazolate + alachlor + sulfosate + benoxacor; pyraflufen-ethyl + (S)-metolachlor + sulfosate + benoxacor; pyraflufen-ethyl + metolachlor + sulfosate + benoxacor; pyraflufen-ethyl + dimethenamid or (S)-dimethenamid + sulfosate + benoxacor; pyraflufen-ethyl + acetochlor + sulfosate + benoxacor; pyraflufen-ethyl + alachlor + sulfosate + benoxacor; flumipropyn + (S)-metolachlor + sulfosate + benoxacor; flumipropyn + metolachlor + sulfosate + benoxacor; flumipropyn + dimethenamid or (S)-dimethenamid + sulfosate + benoxacor; flumipropyn + acetochlor + sulfosate + benoxacor; flumipropyn + alachlor + sulfosate + benoxacor; flupropacil + (S)-metolachlor + sulfosate + benoxacor; flupropacil + metolachlor + sulfosate + benoxacor; flupropacil + dimethenamid or (S)-dimethenamid + sulfosate + benoxacor; flupropacil + acetochlor + sulfosate + benoxacor; flupropacil + alachlor + sulfosate + benoxacor, nipyraclofen + (S)-metolachlor + sulfosate + benoxacor; nipyraclofen + metolachlor + sulfosate + benoxacor; nipyraclofen + dimethenamid or (S)-dimethenamid + sulfosate + benoxacor; nipyraclofen + acetochlor + sulfosate + benoxacor; nipyraclofen + alachlor + sulfosate + benoxacor; benzfendizone + (S)-metolachlor + sulfosate + benoxacor; benzfendizone + metolachlor + sulfosate + benoxacor; benzfendizone + dimethenamid or (S)-dimethenamid + sulfosate + benoxacor; benzfendizone + acetochlor + sulfosate + benoxacor; benzfendizone + alachlor + sulfosate + benoxacor; thidiazimin + (S)-metolachlor + sulfosate + benoxacor; thidiazimin + metolachlor + sulfosate + benoxacor; thidiazimin + dimethenamid or (S)-dimethenamid + sulfosate + benoxacor; thidiazimin + acetochlor + sulfosate + benoxacor; and thidiazimin + alachlor + sulfosate + benoxacor.

Acifluorfen + (S)-metolachlor + sulfosate + MON 4660; acifluorfen + metolachlor + sulfosate + MON 4660; acifluorfen + dimethenamid or (S)-dimethenamid + sulfosate + MON 4660; acifluorfen + acetochlor + sulfosate + MON 4660; acifluorfen + alachlor + sulfosate + MON 4660; aclonifen + (S)-metolachlor + sulfosate + MON 4660; aclonifen + metolachlor + sulfosate + MON 4660; aclonifen + dimethenamid or (S)-dimethenamid + sulfosate + MON 4660; aclonifen + acetochlor + sulfosate + MON 4660; aclonifen + alachlor + sulfosate + MON 4660; bifenox + (S)-metolachlor + sulfosate + MON 4660; bifenox + metolachlor + sulfosate + MON 4660; bifenox + dimethenamid or (S)-dimethenamid + sulfosate + MON 4660; bifenox + acetochlor + sulfosate + MON 4660; bifenox + alachlor + sulfosate + MON 4660; chlornitrofen + (S)-metolachlor + sulfosate + MON 4660; chlornitrofen + metolachlor + sulfosate + MON 4660; chlornitrofen + dimethenamid or (S)-dimethenamid + sulfosate + MON 4660; chlornitrofen + acetochlor + sulfosate + MON 4660; chlornitrofen + alachlor + sulfosate + MON 4660; ethoxyfen + (S)-metolachlor + sulfosate + MON 4660; ethoxyfen + metolachlor + sulfosate + MON 4660; ethoxyfen + dimethenamid or (S)-dimethenamid + sulfosate + MON 4660; ethoxyfen + acetochlor + sulfosate + MON 4660; ethoxyfen + alachlor + sulfosate + MON 4660; fluoroglycofen + (S)-metolachlor + sulfosate + MON 4660; fluoroglycofen + metolachlor + sulfosate + MON 4660; fluoroglycofen + dimethenamid or (5)-dimethenamid + sulfosate + MON 4660; fluoroglycofen + acetochlor + sulfosate + MON 4660; fluoroglycofen + alachlor + sulfosate + MON 4660; fomesafen + (S)-metolachlor + sulfosate + MON 4660; fomesafen + metolachlor + sulfosate + MON 4660; fomesafen + dimethenamid or (S)-dimethenamid + sulfosate + MON 4660; fomesafen + acetochlor + sulfosate + MON 4660; fomesafen + alachlor + sulfosate + MON 4660; lactofen + (S)-metolachlor + sulfosate + MON 4660; lactofen + metolachlor + sulfosate + MON 4660; lactofen + dimethenamid or (S)-dimethenamid + sulfosate + MON 4660; lactofen + acetochlor + sulfosate + MON 4660; lactofen + alachlor + sulfosate + MON 4660; oxyfluorfen + (S)-metolachlor + sulfosate + MON 4660; oxyfluorfen + metolachlor + sulfosate + MON 4660; oxyfluorfen + dimethenamid or (S)-dimethenamid + sulfosate + MON 4660; oxyfluorfen + acetochlor + sulfosate + MON 4660; oxyfluorfen + alachlor + sulfosate + MON 4660; azafenidin + (S)-metolachlor + sulfosate + MON 4660; azafenidin + metolachlor + sulfosate + MON 4660; azafenidin + dimethenamid or (S)-dimethenamid + sulfosate + MON 4660; azafenidin + acetochlor + sulfosate + MON 4660; azafenidin + alachlor + sulfosate + MON 4660; carfentrazone-ethyl + (S)-metolachlor + sulfosate + MON 4660; carfentrazone-ethyl + metolachlor + sulfosate + MON 4660; carfentrazone-ethyl + dimethenamid or (S)-dimethenamid + sulfosate + MON 4660; carfentrazone-ethyl + acetochlor + sulfosate + MON 4660; carfentrazone-ethyl + alachlor + sulfosate + MON 4660; compound of the formula A + (S)-metolachlor + sulfosate + MON 4660; compound of the formula A + metolachlor + sulfosate + MON 4660; compound of the formula A + dimethenamid or (S)-dimethenamid + sulfosate + MON 4660; compound of the formula A + acetochlor + sulfosate + MON 4660; compound of the formula A + alachlor + sulfosate + MON 4660; cinidon-ethyl + (S)-metolachlor + sulfosate + MON 4660; cinidon-ethyl + metolachlor + sulfosate + MON 4660; cinidon-ethyl + dimethenamid or (S)-dimethenamid + sulfosate + MON 4660; cinidon-ethyl + acetochlor + sulfosate + MON 4660; cinidon-ethyl + alachlor + sulfosate + MON 4660; flumiclorac-pentyl + (S)-metolachlor + sulfosate + MON 4660; flumiclorac-pentyl + metolachlor + sulfosate + MON 4660; flumiclorac-pentyl + dimethenamid or (S)-dimethenamid + sulfosate + MON 4660; flumiclorac-pentyl + acetochlor + sulfosate + MON 4660; flumiclorac-pentyl + alachlor + sulfosate + MON 4660; flumioxazin + (S)-metolachlor + sulfosate + MON 4660; flumioxazin + metolachlor + sulfosate + MON 4660; flumioxazin + dimethenamid or (S)-dimethenamid + sulfosate + MON 4660; flumioxazin + acetochlor + sulfosate + MON 4660; flumioxazin + alachlor + sulfosate + MON 4660; fluthiacet-methyl + (S)-metolachlor + sulfosate + MON 4660; fluthiacet-methyl + metolachlor + sulfosate + MON 4660; fluthiacet-methyl + dimethenamid or (S)-dimethenamid + sulfosate + MON 4660; fluthiacet-methyl + acetochlor + sulfosate + MON 4660; fluthiacet-methyl + alachlor + sulfosate + MON 4660; oxadiargyl + (S)-metolachlor + sulfosate + MON 4660; oxadiargyl + metolachlor + sulfosate + MON 4660; oxadiargyl + dimethenamid or (S)-dimethenamid + sulfosate + MON 4660; oxadiargyl + acetochlor + sulfosate + MON 4660; oxadiargyl + alachlor + sulfosate + MON 4660; oxadiazon + (S)-metolachlor + sulfosate + MON 4660; oxadiazon + metolachlor + sulfosate + MON 4660; oxadiazon + dimethenamid or (S)-dimethenamid + sulfosate + MON 4660; oxadiazon + acetochlor + sulfosate + MON 4660; oxadiazon + alachlor + sulfosate + MON 4660; pentoxazone + (S)-metolachlor + sulfosate + MON 4660; pentoxazone + metolachlor + sulfosate + MON 4660; pentoxazone + dimethenamid or (S)-dimethenamid + sulfosate + MON 4660; pentoxazone + acetochlor + sulfosate + MON 4660; pentoxazone + alachlor + sulfosate + MON 4660; sulfentrazone + (S)-metolachlor + sulfosate + MON 4660; suifentrazone + metolachlor + sulfosate + MON 4660; sulfentrazone + dimethenamid or (S)-dimethenamid + sulfosate + MON 4660; sulfentrazone + acetochlor + sulfosate + MON 4660; sulfentrazone + alachlor + sulfosate + MON 4660; fluazolate + (S)-metolachlor + sulfosate + MON 4660; fluazolate + metolachlor + sulfosate + MON 4660; fluazolate + dimethenamid or (S)-dimethenamid + sulfosate + MON 4660; fluazolate + acetochlor + sulfosate + MON 4660; fluazolate + alachlor + sulfosate + MON 4660; pyraflufen-ethyl + (S)-metolachlor + sulfosate + MON 4660; pyraflufen-ethyl + metolachlor + sulfosate + MON 4660; pyraflufen-ethyl + dimethenamid or (S)-dimethenamid + sulfosate + MON 4660; pyraflufen-ethyl + acetochlor + sulfosate + MON 4660; pyraflufen-ethyl + alachlor + sulfosate + MON 4660; flumipropyn + (S)-metolachlor + sulfosate + MON 4660; flumipropyn + metolachlor + sulfosate + MON 4660; flumipropyn + dimethenamid or (S)-dimethenamid + sulfosate + MON 4660; flumipropyn + acetochlor + sulfosate + MON 4660; flumipropyn + alachlor + sulfosate + MON 4660; flupropacil + (S)-metolachlor + sulfosate + MON 4660; flupropacil + metolachlor + sulfosate + MON 4660; flupropacil + dimethenamid or (S)-dimethenamid + sulfosate + MON 4660; flupropacil + acetochlor + sulfosate + MON 4660; flupropacil + alachlor + sulfosate + MON 4660; nipyraclofen + (S)-metolachlor + sulfosate + MON 4660; nipyraclofen + metolachlor + sulfosate + MON 4660; nipyraclofen + dimethenamid or (S)-dimethenamid + sulfosate + MON 4660; nipyraclofen + acetochlor + sulfosate + MON 4660; nipyraclofen + alachlor + sulfosate + MON 4660; benzfendizone + (S)-metolachlor + sulfosate + MON 4660; benzfendizone + metolachlor + sulfosate + MON 4660; benzfendizone + dimethenamid or (S)-dimethenamid + sulfosate + MON 4660; benzfendizone + acetochlor + sulfosate + MON 4660; benzfendizone + alachlor + sulfosate + MON 4660; thidiazimin + (S)-metolachlor + sulfosate + MON 4660; thidiazimin + metolachlor + sulfosate + MON 4660; thidiazimin + dimethenamid or (S)-dimethenamid + sulfosate + MON 4660; thidiazimin + acetochlor + sulfosate + MON 4660; and thidiazimin + alachlor + sulfosate + MON 4660.

Acifluorfen + (S)-metolachlor + sulfosate + flurazole; acifluorfen + metolachlor + sulfosate + flurazole; acifluorfen + dimethenamid or (S)-dimethenamid + sulfosate + flurazole; acifluorfen + acetochlor + sulfosate + flurazole; acifluorfen + alachlor + sulfosate + flurazole; aclonifen + (S)-metolachlor + sulfosate + flurazole; aclonifen + metolachlor + sulfosate + flurazole; aclonifen + dimethenamid or (S)-dimethenamid + sulfosate + flurazole; aclonifen + acetochlor + sulfosate + flurazole; aclonifen + alachlor + sulfosate + flurazole; bifenox + (S)-metolachlor + sulfosate + flurazole; bifenox + metolachlor + sulfosate + flurazole; bifenox + dimethenamid or (S)-dimethenamid + sulfosate + flurazole; bifenox + acetochlor + sulfosate + flurazole; bifenox + alachlor + sulfosate + flurazole; chlornitrofen + (S)-metolachlor + sulfosate + flurazole; chlornitrofen + metolachlor + sulfosate + flurazole; chlornitrofen + dimethenamid or (S)-dimethenamid + sulfosate + flurazole; chlornitrofen + acetochlor + sulfosate + flurazole; chlornitrofen + alachlor + sulfosate + flurazole; ethoxyfen + (S)-metolachlor + sulfosate + flurazole; ethoxyfen + metolachlor + sulfosate + flurazole; ethoxyfen + dimethenamid or (S)-dimethenamid + sulfosate + flurazole; ethoxyfen + acetochlor + sulfosate + flurazole; ethoxyfen + alachlor + sulfosate + flurazole; fluoroglycofen + (S)-metolachlor + sulfosate + flurazole; fluoroglycofen + metolachlor + sulfosate + flurazole; fluoroglycofen + dimethenamid or (S)-dimethenamid + sulfosate + flurazole; fluoroglycofen + acetochlor + sulfosate + flurazole; fluoroglycofen + alachlor + sulfosate + flurazole; fomesafen + (S)-metotachlor + sulfosate + flurazole; fomesafen + metolachlor + sulfosate + flurazole; fomesafen + dimethenamid or (S)-dimethenamid + sulfosate + flurazole; fomesafen + acetochlor + sulfosate + flurazole; fomesafen + alachlor + sulfosate + flurazole; lactofen + (S)-metolachlor + sulfosate + flurazole; lactofen + metolachlor + sulfosate + flurazole; lactofen + dimethenamid or (S)-dimethenamid + sulfosate + flurazole; lactofen + acetochlor + sulfosate + flurazole; lactofen + alachlor + sulfosate + flurazole; oxyfluorfen + (S)-metolachlor + sulfosate + flurazole; oxyfluorfen + metolachlor + sulfosate + flurazole; oxyfluorfen + dimethenamid or (S)-dimethenamid + sulfosate + flurazole; oxyfluorfen + acetochlor + sulfosate + flurazole; oxyfluorfen + alachlor + sulfosate + flurazole; azafenidin + (S)-metolachlor + sulfosate + flurazole; azafenidin + metolachlor + sulfosate + flurazole; azafenidin + dimethenamid or (S)-dimethenamid + sulfosate + flurazole; azafenidin + acetochlor + sulfosate + flurazole; azafenidin + alachlor + sulfosate + flurazole; carfentrazone-ethyl + (S)-metolachlor + sulfosate + flurazole; carfentrazone-ethyl + metolachlor + sulfosate + flurazole; carfentrazone-ethyl + dimethenamid or (S)-dimethenamid + sulfosate + flurazole; carfentrazone-ethyl + acetochlor + sulfosate + flurazole; carfentrazone-ethyl + alachlor + sulfosate + flurazole; compound of the formula A + (S)-metolachlor + sulfosate + flurazole; compound of the formula A + metolachlor + sulfosate + flurazole; compound of the formula A + dimethenamid or (S)-dimethenamid + sulfosate + flurazole; compound of the formula A + acetochlor + sulfosate + flurazole; compound of the formula A + alachlor + sulfosate + flurazole; cinidon-ethyl + (S)-metolachlor + sulfosate + flurazole; cinidon-ethyl + metolachlor + sulfosate + flurazole; cinidon-ethyl + dimethenamid or (S)-dimethenamid + sulfosate + flurazole; cinidon-ethyl + acetochlor + sulfosate + flurazole; cinidon-ethyl + alachlor + sulfosate + flurazole; flumiclorac-pentyl + (S)-metolachlor + sulfosate + flurazole; flumiclorac-pentyl + metolachlor + sulfosate + flurazole; flumiclorac-pentyl + dimethenamid or (S)-dimethenamid + sulfosate + flurazole; flumiclorac-pentyl + acetochlor + sulfosate + flurazole; flumiclorac-pentyl + alachlor + sulfosate + flurazole; flumioxazin + (S)-metolachlor + sulfosate + flurazole; flumioxazin + metolachlor + sulfosate + flurazole; flumioxazin + dimethenamid or (S)-dimethenamid + sulfosate + flurazole; flumioxazin + acetochlor + sulfosate + flurazole; flumioxazin + alachlor + sulfosate + flurazole; fluthiacet-methyl + (S)-metolachlor + sulfosate + flurazole; fluthiacet-methyl + metolachlor + sulfosate + flurazole; fluthiacet-methyl + dimethenamid or (S)-dimethenamid + sulfosate + flurazole; fluthiacet-methyl + acetochlor + sulfosate + flurazole; fluthiacet-methyl + alachlor + sulfosate + flurazole; oxadiargyl + (S)-metolachlor + sulfosate + flurazole; oxadiargyl + metolachlor + sulfosate + flurazole; oxadiargyl + dimethenamid or (S)-dimethenamid + sulfosate + flurazole; oxadiargyl + acetochlor + sulfosate + flurazole; oxadiargyl + alachlor + sulfosate + flurazole; oxadiazon + (S)-metolachlor + sulfosate + flurazole; oxadiazon + metolachlor + sulfosate + flurazole; oxadiazon + dimethenamid or (S)-dimethenamid + sulfosate + flurazole; oxadiazon + acetochlor + sulfosate + flurazole; oxadiazon + alachlor + sulfosate + flurazole; pentoxazone + (S)-metolachlor + sulfosate + flurazole; pentoxazone + metolachlor + sulfosate + flurazole; pentoxazone + dimethenamid or (S)-dimethenamid + sulfosate + flurazole; pentoxazone + acetochlor + sulfosate + flurazole; pentoxazone + alachlor + sulfosate + flurazole; sulfentrazone + (S)-metolachlor + sulfosate + flurazole; sulfentrazone + metolachlor + sulfosate + flurazole; sulfentrazone + dimethenamid or (S)-dimethenamid + sulfosate + flurazole; sulfentrazone + acetochlor + sulfosate + flurazole; sulfentrazone + alachlor + sulfosate + flurazole; fluazolate + (S)-metolachlor + sulfosate + flurazole; fluazolate + metolachlor + sulfosate + flurazole; fluazolate + dimethenamid or (S)-dimethenamid + sulfosate + flurazole; fluazolate + acetochlor + sulfosate + flurazole; fluazolate + alachlor + sulfosate + flurazole; pyraflufen-ethyl + (S)-metolachlor + sulfosate + flurazole; pyraflufen-ethyl + metolachlor + sulfosate + flurazole; pyraflufen-ethyl + dimethenamid or (S)-dimethenamid + sulfosate + flurazole; pyraflufen-ethyl + acetochlor + sulfosate + flurazole; pyraflufen-ethyl + alachlor + sulfosate + flurazole; flumipropyn + (S)-metolachlor + sulfosate + flurazole; flumipropyn + metolachlor + sulfosate + flurazole; flumipropyn + dimethenamid or (S)-dimethenamid + sulfosate + flurazole; flumipropyn + acetochlor + sulfosate + flurazole; flumipropyn + alachlor + sulfosate + flurazole; flupropacil + (S)-metolachlor + sulfosate + flurazole; flupropacil + metolachlor + sulfosate + flurazole; flupropacil + dimethenamid or (S)-dimethenamid + sulfosate + flurazole; flupropacil + acetochlor + sulfosate + flurazole; flupropacil + alachlor + sulfosate + flurazole; nipyraclofen + (S)-metolachlor + sulfosate + flurazole; nipyraclofen + metolachlor + sulfosate + flurazole; nipyraclofen + dimethenamid or (S)-dimethenamid + sulfosate + flurazole; nipyraclofen + acetochlor + sulfosate + flurazole; nipyraclofen + alachlor + sulfosate + flurazole; benzfendizone + (S)-metolachlor + sulfosate + flurazole; benzfendizone + metolachlor + sulfosate + flurazole; benzfendizone + dimethenamid or (S)-dimethenamid + sulfosate + flurazole; benzfendizone + acetochlor + sulfosate + flurazole; benzfendizone + alachlor + sulfosate + flurazole; thidiazimin + (S)-metolachlor + sulfosate + flurazole; thidiazimin + metolachlor + sulfosate + flurazole; thidiazimin + dimethenamid or (S)-dimethenamid + sulfosate + flurazole; thidiazimin + acetochlor + sulfosate + flurazole; and thidiazimin + alachlor + sulfosate + flurazole.

Acifluorfen + (S)-metolachlor + sulfosate + dichlormid; acifluorfen + metolachlor + sulfosate + dichlormid; acifluorfen + dimethenamid or (S)-dimethenamid + sulfosate + dichlormid; acifluorfen + acetochlor + sulfosate + dichlormid; acifluorfen + alachlor + sulfosate + dichlormid; aclonifen + (S)-metolachlor + sulfosate + dichlormid; aclonifen + metolachlor + sulfosate + dichlormid; aclonifen + dimethenamid or (S)-dimethenamid + sulfosate + dichlormid; aclonifen + acetochlor + sulfosate + dichlormid; aclonifen + alachlor + sulfosate + dichlormid; bifenox + (S)-metolachlor + sulfosate + dichlormid; bifenox + metolachlor + sulfosate + dichlormid; bifenox + dimethenamid or (S)-dimethenamid + sulfosate + dichlormid; bifenox + acetochlor + sulfosate + dichlormid; bifenox + alachlor + sulfosate + dichlormid; chlornitrofen + (S)-metolachlor + sulfosate + dichlormid; chlornitrofen + metolachlor + sulfosate + dichlormid; chlornitrofen + dimethenamid or (S)-dimethenamid + sulfosate + dichlormid; chlornitrofen + acetochlor + sulfosate + dichlormid; chlornitrofen + alachlor + sulfosate + dichlormid; ethoxyfen + (S)-metolachlor + sulfosate + dichlormid; ethoxyfen + metolachlor + sulfosate + dichlormid; ethoxyfen + dimethenamid or (S)-dimethenamid + sulfosate + dichlormid; ethoxyfen + acetochlor + sulfosate + dichlormid; ethoxyfen + alachlor + sulfosate + dichlormid; fluoroglycofen + (S)-metolachlor + sulfosate + dichlormid; fluoroglycofen + metolachlor + sulfosate + dichlormid; fluoroglycofen + dimethenamid or (S)-dimethenamid + sulfosate + dichlormid; fluoroglycofen + acetochlor + sulfosate + dichlormid; fluoroglycofen + alachlor + sulfosate + dichlormid; fomesafen + (S)-metolachlor + sulfosate + dichlormid; fomesafen + metolachlor + sulfosate + dichlormid; fomesafen + dimethenamid or (S)-dimethenamid + sulfosate + dichlormid; fomesafen + acetochlor + sulfosate + dichlormid; fomesafen + alachlor + sulfosate + dichlormid; lactofen + (S)-metolachlor + sulfosate + dichlormid; lactofen + metolachlor + sulfosate + dichlormid; lactofen + dimethenamid or (S)-dimethenamid + sulfosate + dichlormid; lactofen + acetochlor + sulfosate + dichlormid; lactofen + alachlor + suifosate + dichlormid; oxyfluorfen + (5)-metolachior + sulfosate + dichlormid; oxyfluorfen + metolachlor + sulfosate + dichlormid; oxyfluorfen + dimethenamid or (S)-dimethenamid + sulfosate + dichlormid; oxyfluorfen + acetochlor + sulfosate + dichlormid; oxyfluorfen + alachlor + sulfosate + dichlormid; azafenidin + (S)-metolachlor + sulfosate + dichlormid; azafenidin + metolachlor + sulfosate + dichlormid; azafenidin + dimethenamid or (S)-dimethenamid + sulfosate + dichlormid; azafenidin + acetochlor + sulfosate + dichlormid; azafenidin + alachlor + sulfosate + dichlormid; carfentrazone-ethyl + (S)-metolachlor + sulfosate + dichlormid; carfentrazone-ethyl + metolachlor + sulfosate + dichlormid; carfentrazone-ethyl + dimethenamid or (S)-dimethenamid + sulfosate + dichlormid; carfentrazone-ethyl + acetochlor + sulfosate + dichlormid; carfentrazone-ethyl + alachlor + sulfosate + dichlormid; compound of the formula A + (S)-metolachlor + sulfosate + dichlormid; compound of the formula A + metolachlor + sulfosate + dichlormid; compound of the formula A + dimethenamid or (S)-dimethenamid + sulfosate + dichlormid; compound of the formula A + acetochlor + sulfosate + dichlormid; compound of the formula A + alachlor + sulfosate + dichlormid; cinidon-ethyl + (S)-metolachlor + sulfosate + dichlormid; cinidon-ethyl + metolachlor + sulfosate + dichlormid; cinidon-ethyl + dimethenamid or (S)-dimethenamid + sulfosate + dichlormid; cinidon-ethyl + acetochlor + sulfosate + dichlormid; cinidon-ethyl + alachlor + sulfosate + dichlormid; flumiclorac-pentyl + (S)-metolachlor + sulfosate + dichlormid; flumiclorac-pentyl + metolachlor + sulfosate + dichlormid; flumiclorac-pentyl + dimethenamid or (S)-dimethenamid + sulfosate + dichlormid; flumiclorac-pentyl + acetochlor + sulfosate + dichlormid; flumiclorac-pentyl + alachlor + sulfosate + dichlormid; flumioxazin + (S)-metolachlor + sulfosate + dichlormid; flumioxazin + metolachlor + sulfosate + dichlormid; flumioxazin + dimethenamid or (S)-dimethenamid + sulfosate + dichlormid; flumioxazin + acetochlor + sulfosate + dichlormid; flumioxazin + alachlor + sulfosate + dichlormid; fluthiacet-methyl + (S)-metolachlor + sulfosate + dichlormid; fluthiacet-methyl + metolachlor + sulfosate + dichlormid; fluthiacet-methyl + dimethenamid or (S)-dimethenamid + sulfosate + dichlormid; fluthiacet-methyl + acetochlor + sulfosate + dichlormid; fluthiacet-methyl + alachlor + sulfosate + dichlormid; oxadiargyl + (S)-metolachlor + sulfosate + dichlormid; oxadiargyl + metolachlor + sulfosate + dichlormid; oxadiargyl + dimethenamid or (S)-dimethenamid + sulfosate + dichlormid; oxadiargyl + acetochlor + sulfosate + dichlormid; oxadiargyl + alachlor + sulfosate + dichlormid; oxadiazon + (S)-metolachlor + sulfosate + dichlormid; oxadiazon + metolachlor + sulfosate + dichlormid; oxadiazon + dimethenamid or (S)-dimethenamid + sulfosate + dichlormid; oxadiazon + acetochlor + sulfosate + dichlormid; oxadiazon + alachlor + sulfosate + dichlormid; pentoxazone + (S)-metolachlor + sulfosate + dichlormid; pentoxazone + metolachlor + sulfosate + dichlormid; pentoxazone + dimethenamid or (S)-dimethenamid + sulfosate + dichlormid; pentoxazone + acetochlor + sulfosate + dichlormid; pentoxazone + alachlor + sulfosate + dichlormid; sulfentrazone + (S)-metolachlor + sulfosate + dichlormid; sulfentrazone + metolachlor + sulfosate + dichlormid; sulfentrazone + dimethenamid or (S)-dimethenamid + sulfosate + dichlormid; sulfentrazone + acetochlor + sulfosate + dichlormid; sulfentrazone + alachlor + sulfosate + dichlormid; fluazolate + (S)-metolachlor + sulfosate + dichlormid; fluazolate + metolachlor + sulfosate + dichlormid; fluazolate + dimethenamid or (S)-dimethenamid + sulfosate + dichlormid; fluazolate + acetochlor + sulfosate + dichlormid; fluazolate + alachlor + sulfosate + dichlormid; pyraflufen-ethyl + (S)-metolachlor + sulfosate + dichlormid; pyraflufen-ethyl + metolachlor + sulfosate + dichlormid; pyraflufen-ethyl + dimethenamid or (S)-dimethenamid + sulfosate + dichlormid; pyraflufen-ethyl + acetochlor + sulfosate + dichlormid; pyraflufen-ethyl + alachlor + sulfosate + dichlormid; flumipropyn + (S)-metolachlor + sulfosate + dichlormid; flumipropyn + metolachlor + sulfosate + dichlormid; flumipropyn + dimethenamid or (S)-dimethenamid + sulfosate + dichlormid; flumipropyn + acetochlor + sulfosate + dichlormid; flumipropyn + alachlor + sulfosate + dichlormid; flupropacil + (S)-metolachlor + sulfosate + dichlormid; flupropacil + metolachlor + sulfosate + dichlormid; flupropacil + dimethenamid or (S)-dimethenamid + sulfosate + dichlormid; flupropacil + acetochlor + sulfosate + dichlormid; flupropacil + alachlor + sulfosate + dichlormid; nipyraclofen + (S)-metolachlor + sulfosate + dichlormid; nipyraclofen + metolachlor + sulfosate + dichlormid; nipyraclofen + dimethenamid or (S)-dimethenamid + sulfosate + dichlormid; nipyraclofen + acetochlor + sulfosate + dichlormid; nipyraclofen + alachlor + sulfosate + dichlormid; benzfendizone + (S)-metolachlor + sulfosate + dichlormid; benzfendizone + metolachlor + sulfosate + dichlormid; benzfendizone + dimethenamid or (S)-dimethenamid + sulfosate + dichlormid; benzfendizone + acetochlor + sulfosate + dichlormid; benzfendizone + alachlor + sulfosate + dichlormid; thidiazimin + (S)-metolachlor + sulfosate + dichlormid; thidiazimin + metolachlor + sulfosate + dichlormid; thidiazimin + dimethenamid or (S)-dimethenamid + sulfosate + dichlormid; thidiazimin + acetochlor + sulfosate + dichlormid; and thidiazimin + alachlor + sulfosate + dichlormid.

Acifluorfen + (S)-metolachlor + sulfosate + furilazole; acifluorfen + metolachlor + sulfosate + furilazole; acifluorfen + dimethenamid or (S)-dimethenamid + sulfosate + furilazole; acifluorfen + acetochlor + sulfosate + furilazole; acifluorfen + alachlor + sulfosate + furilazole; aclonifen + (S)-metolachlor + sulfosate + furilazole; aclonifen + metolachlor + sulfosate + furilazole; aclonifen + dimethenamid or (S)-dimethenamid + sulfosate + furilazole; aclonifen + acetochlor + sulfosate + furilazole; aclonifen + alachlor + sulfosate + furilazole; bifenox + (S)-metolachlor + sulfosate + furilazole; bifenox + metolachlor + sulfosate + furilazole; bifenox + dimethenamid or (S)-dimethenamid + sulfosate + furilazole; bifenox + acetochlor + sulfosate + furilazole; bifenox + alachlor + sulfosate + furilazole; chlornitrofen + (S)-metolachlor + sulfosate + furilazole; chlornitrofen + metolachlor + sulfosate + furilazole; chlornitrofen + dimethenamid or (S)-dimethenamid + sulfosate + furilazole; chlornitrofen + acetochlor + sulfosate + furilazole; chlornitrofen + alachlor + sulfosate + furilazole; ethoxyfen + (S)-metolachlor + sulfosate + furilazole; ethoxyfen + metolachlor + sulfosate + furilazole; ethoxyfen + dimethenamid or (S)-dimethenamid + sulfosate + furilazole; ethoxyfen + acetochlor + sulfosate + furilazole; ethoxyfen + alachlor + sulfosate + furilazole; fluoroglycofen + (S)-metolachlor + sulfosate + furilazole; fluoroglycofen + metolachlor + sulfosate + furilazole; fluoroglycofen + dimethenamid or (S)-dimethenamid + sulfosate + furilazole; fluoroglycofen + acetochlor + sulfosate + furilazole; fluorogfycofen + alachlor + sulfosate + furilazole; fomesafen + (S)-metolachlor + sulfosate + furilazole; fomesafen + metolachlor + sulfosate + furilazole; fomesafen + dimethenamid or (S)-dimethenamid + sulfosate + furilazole; fomesafen + acetochlor + sulfosate + furilazole; fomesafen + alachlor + sulfosate + furilazole; lactofen + (S)-metolachlor + sulfosate + furilazole; lactofen + metolachlor + sulfosate + furilazole; lactofen + dimethenamid or (S)-dimethenamid + sulfosate + furilazole; lactofen + acetochlor + sulfosate + furilazole; lactofen + alachlor + sulfosate + furilazole; oxyfluorfen + (S)-metolachlor + sulfosate + furilazole; oxyfluorfen + metolachlor + sulfosate + furilazole; oxyfluorfen + dimethenamid or (S)-dimethenamid + sulfosate + furilazole; oxyfluorfen + acetochlor + sulfosate + furilazole; oxyfluorfen + alachlor + sulfosate + furilazole; azafenidin + (S)-metolachlor + sulfosate + furilazole; azafenidin + metolachlor + sulfosate + furilazole; azafenidin + dimethenamid or (S)-dimethenamid + sulfosate + furilazole; azafenidin + acetochlor + sulfosate + furilazole; azafenidin + alachtor + sulfosate + furilazole; carfentrazone-ethyl + (S)-metolachlor + sulfosate + furilazole; carfentrazone-ethyl + metolachlor + sulfosate + furilazole; carfentrazone-ethyl + dimethenamid or (S)-dimethenamid + sulfosate + furilazole; carfentrazone-ethyl + acetochlor + sulfosate + furilazole; carfentrazone-ethyl + alachlor + sulfosate + furilazole; compound of the formula A + (S)-metolachlor + sulfosate + furilazole; compound of the formula A + metolachlor + sulfosate + furilazole; compound of the formula A + dimethenamid or (S)-dimethenamid + sulfosate + furilazole; compound of the formula A + acetochlor + sulfosate + furilazole; compound of the formula A + alachlor + sulfosate + furilazole; cinidon-ethyl + (S)-metolachlor + sulfosate + furilazole; cinidon-ethyl + metolachlor + sulfosate + furilazole; cinidon-ethyl + dimethenamid or (S)-dimethenamid + sulfosate + furilazole; cinidon-ethyl + acetochlor + sulfosate + furilazole; cinidon-ethyl + alachlor + sulfosate + furilazole; flumiclorac-pentyl + (S)-metolachlor + sulfosate + furilazole; flumiclorac-pentyl + metolachlor + sulfosate + furilazole; flumiclorac-pentyl + dimethenamid or (S)-dimethenamid + sulfosate + furilazole; flumiclorac-pentyl + acetochlor + sulfosate + furilazole; flumiclorac-pentyl + alachlor + sulfosate + furilazole; flumioxazin + (S)-metolachlor + sulfosate + furilazole; flumioxazin + metolachlor + sulfosate + furilazole; flumioxazin + dimethenamid or (S)-dimethenamid + sulfosate + furilazote; flumioxazin + acetochlor + sulfosate + furilazole; flumioxazin + alachlor + sulfosate + furilazole; fluthiacet-methyl + (S)-metolachlor + sulfosate + furilazole; fluthiacet-methyl + metolachlor + sulfosate + furilazole; fluthiacet-methyl + dimethenamid or (S)-dimethenamid + sulfosate + furilazole; fluthiacet-methyl + acetochlor + sulfosate + furilazole; fluthiacet-methyl + alachlor + sulfosate + furilazole; oxadiargyl + (S)-metolachlor + sulfosate + furilazole; oxadiargyl + metolachlor + sulfosate + furilazole; oxadiargyl + dimethenamid or (S)-dimethenamid + sulfosate + furilazole; oxadiargyl + acetochlor + sulfosate + furilazole; oxadiargyl + alachlor + sulfosate + furilazole; oxadiazon + (S)-metolachlor + sulfosate + furilazole; oxadiazon + metolachlor + sulfosate + furilazole; oxadiazon + dimethenamid or (S)-dimethenamid + sulfosate + furilazole; oxadiazon + acetochlor + sulfosate + furilazole; oxadiazon + alachlor + sulfosate + furilazole; pentoxazone + (S)-metolachlor + sulfosate + furilazole; pentoxazone + metolachlor + sulfosate + furilazole; pentoxazone + dimethenamid or (S)-dimethenamid + sulfosate + furilazole; pentoxazone + acetochlor + sulfosate + furilazole; pentoxazone + alachlor + sulfosate + furilazole; sulfentrazone + (S)-metolachlor + sulfosate + furilazole; sulfentrazone + metolachlor + sulfosate + furilazole; sulfentrazone + dimethenamid or (S)-dimethenamid + sulfosate + furilazole; sulfentrazone + acetochlor + sulfosate + furilazole; sulfentrazone + alachlor + sulfosate + furilazole; fluazolate + (S)-metolachlor + sulfosate + furilazole; fluazolate + metolachlor + sulfosate + furilazole; fluazolate + dimethenamid or (S)-dimethenamid + sulfosate + furilazole; fluazolate + acetochlor + sulfosate + furilazole; fluazolate + alachlor + sulfosate + furilazole; pyraflufen-ethyl + (S)-metolachlor + sulfosate + furilazole; pyraflufen-ethyl + metolachlor + sulfosate + furilazole; pyraflufen-ethyl + dimethenamid or (S)-dimethenamid + sulfosate + furilazole; pyraflufen-ethyl + acetochlor + sulfosate + furilazole; pyraflufen-ethyl + alachlor + sulfosate + furilazole; flumipropyn + (S)-metolachlor + sulfosate + furilazole; flumipropyn + metolachlor + sulfosate + furilazole; flumipropyn + dimethenamid or (S)-dimethenamid + sulfosate + furilazole; flumipropyn + acetochlor + sulfosate + furilazole; flumipropyn + alachlor + sulfosate + furilazole; flupropacil + (S)-metolachlor + sulfosate + furilazole; flupropacil + metolachlor + sulfosate + furilazole; flupropacil + dimethenamid or (S)-dimethenamid + sulfosate + furilazole; flupropacil + acetochlor + sulfosate + furilazole; flupropacil + alachlor + sulfosate + furilazole; nipyraclofen + (S)-metolachlor + sulfosate + furilazole; nipyraclofen + metolachlor + sulfosate + furilazole; nipyraclofen + dimethenamid or (S)-dimethenamid + sulfosate + furilazole; nipyraclofen + acetochlor + sulfosate + furilazole; nipyraclofen + alachlor + sulfosate + furilazole; benzfendizone + (S)-metolachlor + sulfosate + furilazole; benzfendizone + metolachlor + sulfosate + furilazole; benzfendizone + dimethenamid or (S)-dimethenamid + sulfosate + furilazole; benzfendizone + acetochlor + sulfosate + furilazole; benzfendizone + alachlor + sulfosate + furilazole; thidiazimin + (S)-metolachlor + sulfosate + furilazole; thidiazimin + metolachlor + sulfosate + furilazole; thidiazimin + dimethenamid or (S)-dimethenamid + sulfosate + furilazole; thidiazimin + acetochlor + sulfosate + furilazole; and thidiazimin + alachlor + sulfosate + furilazole.

The following specific combinations of the compounds under a) with the co-herbicides under b) (4-compound and 5-compund combinations) have been found to be further groups of very particularly effective herbicidal synergistic and selective-herbicidal compositions, in particular in crops of maize resistant to protoporphyrinogen oxidase inhibitors:
acifluorfen + prosulfuron + primisulfuron + glyphosate; acifluorfen + prosulfuron + dicamba + glyphosate; acifluorfen + primisulfuron + dicamba + glyphosate; acifluorfen + nicosulfuron + primisulfuron + glyphosate; acifluorfen + nicosulfuron + prosulfuron + glyphosate; acifluorfen + rimsulfuron + primisulfuron + glyphosate; acifluorfen + rimsulfuron + prosulfuron + glyphosate; acifluorfen + metolachlor + isoxaflutole + glyphosate; acifluorfen + metolachlor + isoxaflutole + glyphosate + benoxacor; acifluorfen + S-metolachlor + isoxaflutole + glyphosate; acifluorfen + S-metolachlor + isoxaflutole + glyphosate + benoxacor; acifluorfen + metolachlor + mesotrione + glyphosate; acifluorfen + metolachlor + mesotrione + glyphosate + benoxacor; acifluorfen + S-metolachlor + mesotrione + glyphosate; acifluorfen + S-metolachlor + mesotrione + benoxacor + glyphosate; acifluorfen + metolachlor + atrazine + glyphosate; acifluorfen + metolachlor + atrazine + glyphosate + benoxacor; acifluorfen + S-metolachlor + atrazine + glyphosate; acifluorfen + S-metolachlor + atrazine + glyphosate + benoxacor; acifluorfen + metolachlor + terbuthylazine + glyphosate; acifluorfen + metolachlor + terbuthylazine + glyphosate + benoxacor; acifluorfen + S-metolachlor + terbuthylazine + glyphosate; acifluorfen + S-metolachlor + terbuthylazine + glyphosate + benoxacor; acifluorfen + atrazine + nicosulfuron + glyphosate; acifluorfen + atrazine + nicosulfuron + glyphosate + benoxacor; aclonifen + prosulfuron + primisulfuron + glyphosate; aclonifen + prosulfuron + dicamba + glyphosate; aclonifen + primisulfuron + dicamba + glyphosate; aclonifen + nicosulfuron + primisulfuron + glyphosate; aclonifen + nicosulfuron + prosulfuron + glyphosate; aclonifen + rimsulfuron + primisulfuron + glyphosate; aclonifen + rimsulfuron + prosulfuron + glyphosate; aclonifen + metolachlor + isoxaflutole + glyphosate; aclonifen + metolachlor + isoxaflutole + glyphosate + benoxacor; aclonifen + S-metolachlor + isoxaflutole + glyphosate; aclonifen + S-metolachlor + isoxaflutole + glyphosate + benoxacor; aclonifen + metolachlor + mesotrione + glyphosate; aclonifen + metolachlor + mesotrione + glyphosate + benoxacor; aclonifen + S-metolachlor + mesotrione + glyphosate; aclonifen + S-metolachlor + mesotrione + glyphosate + benoxacor; aclonifen + metolachlor + atrazine + glyphosate; aclonifen + metolachlor + atrazine + glyphosate + benoxacor; aclonifen + S-metolachlor + atrazine + glyphosate; aclonifen + S-metolachlor + atrazine + glyphosate + benoxacor; aclonifen + metolachlor + terbuthylazine + glyphosate; aclonifen + metolachlor + terbuthylazine + glyphosate + benoxacor; aclonifen + S-metolachlor + terbuthylazine + glyphosate; aclonifen + S-metolachlor + terbuthylazine + glyphosate + benoxacor; aclonifen + atrazine + nicosulfuron + glyphosate; aclonifen + atrazine + nicosulfuron + glyphosate + benoxacor; bifenox + prosulfuron + primisulfuron + glyphosate; bifenox + prosulfuron + dicamba + glyphosate; bifenox + primisulfuron + dicamba + glyphosate; bifenox + nicosulfuron + primisulfuron + glyphosate; bifenox + nicosulfuron + prosulfuron + glyphosate; bifenox + rimsulfuron + primisulfuron + glyphosate; bifenox + rimsulfuron + prosulfuron + glyphosate; bifenox + metolachlor + isoxaflutole + glyphosate; bifenox + metolachlor + isoxaflutole + glyphosate + benoxacor; bifenox + S-metolachlor + isoxaflutole + glyphosate; bifenox + S-metolachlor + isoxaflutole + glyphosate + benoxacor; bifenox + metolachlor + mesotrione + glyphosate; bifenox + metolachlor + mesotrione + glyphosate + benoxacor; bifenox + S-metolachlor + mesotrione + glyphosate; bifenox + S-metolachlor + mesotrione + glyphosate + benoxacor; bifenox + metolachlor + atrazine + glyphosate; bifenox + metolachlor + atrazine + glyphosate + benoxacor; bifenox + S-metolachlor + atrazine + glyphosate; bifenox + S-metolachlor + atrazine + glyphosate + benoxacor; bifenox + metolachlor + terbuthylazine + glyphosate; bifenox + metolachlor + terbuthylazine + glyphosate + benoxacor; bifenox + S-metolachlor + terbuthylazine + glyphosate; bifenox + S-metolachlor + terbuthylazine + glyphosate + benoxacor; bifenox + atrazine + nicosulfuron + glyphosate; bifenox + atrazine + nicosulfuron + glyphosate + benoxacor; chlornitrofen + prosulfuron + primisulfuron + glyphosate; chlornitrofen + prosulfuron + dicamba + glyphosate; chlornitrofen + primisulfuron + dicamba + glyphosate; chlornitrofen + nicosulfuron + primisulfuron + glyphosate; chlornitrofen + nicosulfuron + prosulfuron + glyphosate; chlornitrofen + rimsulfuron + primisulfuron + glyphosate; chlornitrofen + rimsulfuron + prosulfuron + glyphosate; chlornitrofen + metolachlor + isoxaflutole + glyphosate; chlornitrofen + metolachlor + isoxaflutole + glyphosate + benoxacor; chlornitrofen + S-metolachlor + isoxaflutole + glyphosate; chlornitrofen + S-metolachlor + isoxaflutole + glyphosate + benoxacor; chlornitrofen + metolachlor + mesotrione + glyphosate; chlornitrofen + metolachlor + mesotrione + glyphosate + benoxacor; chlornitrofen + S-metolachlor + mesotrione + glyphosate; chlornitrofen + S-metolachlor + mesotrione + glyphosate + benoxacor; chlornitrofen + metolachlor + atrazine + glyphosate; chlornitrofen + metolachlor + atrazine + glyphosate + benoxacor; chlornitrofen + S-metolachlor + atrazine + glyphosate; chlornitrofen + S-metolachlor + atrazine + glyphosate + benoxacor; chlornitrofen + metolachlor + terbuthylazine + glyphosate; chlornitrofen + metolachlor + terbuthylazine + glyphosate + benoxacor; chlornitrofen + S-metolachlor + terbuthylazine + glyphosate; chlornitrofen + S-metolachlor + terbuthylazine + glyphosate + benoxacor; chlornitrofen + atrazine + nicosulfuron + glyphosate; chlornitrofen + atrazine + nicosulfuron + glyphosate + benoxacor; ethoxyfen + prosulfuron + primisulfuron + glyphosate; ethoxyfen + prosulfuron + dicamba + glyphosate; ethoxyfen + primisulfuron + dicamba + glyphosate; ethoxyfen + nicosulfuron + primisulfuron + glyphosate; ethoxyfen + nicosulfuron + prosulfuron + glyphosate; ethoxyfen + rimsulfuron + primisulfuron + glyphosate; ethoxyfen + rimsulfuron + prosulfuron + glyphosate; ethoxyfen + metolachlor + isoxaflutole + glyphosate; ethoxyfen + metolachlor + isoxaflutole + glyphosate + benoxacor; ethoxyfen + S-metolachlor + isoxaflutole + glyphosate; ethoxyfen + S-metolachlor + isoxaflutole + glyphosate + benoxacor; ethoxyfen + metolachlor + mesotrione + glyphosate; ethoxyfen + metolachlor + mesotrione + glyphosate + benoxacor; ethoxyfen + S-metolachlor + mesotrione + glyphosate; ethoxyfen + S-metolachlor + mesotrione + glyphosate + benoxacor; ethoxyfen + metolachlor + atrazine + glyphosate; ethoxyfen + metolachlor + atrazine + glyphosate + benoxacor; ethoxyfen + S-metolachlor + atrazine + glyphosate; ethoxyfen + S-metolachlor + atrazine + glyphosate + benoxacor; ethoxyfen + metolachlor + terbuthylazine + glyphosate; ethoxyfen + metolachlor + terbuthylazine + glyphosate + benoxacor; ethoxyfen + S-metolachlor + terbuthylazine + glyphosate; ethoxyfen + S-metolachlor + terbuthylazine + glyphosate + benoxacor; ethoxyfen + atrazine + nicosulfuron + glyphosate; ethoxyfen + atrazine + nicosulfuron + glyphosate + benoxacor; fluoroglycofen + prosulfuron + primisulfuron + glyphosate; fluoroglycofen + prosulfuron + dicamba + glyphosate; fluoroglycofen + primisulfuron + dicamba + glyphosate; fluoroglycofen + nicosulfuron + primisulfuron + glyphosate; fluoroglycofen + nicosulfuron + prosulfuron + glyphosate; fluoroglycofen + rimsulfuron + primisulfuron + glyphosate; fluoroglycofen + rimsulfuron + prosulfuron + glyphosate; fluoroglycofen + metolachlor + isoxaflutole + glyphosate; fluoroglycofen + metolachlor + isoxaflutole + glyphosate + benoxacor; fluoroglycofen + S-metolachlor + isoxaflutole + glyphosate; fluoroglycofen + S-metolachlor + isoxaflutole + glyphosate + benoxacor, fluoroglycofen + metolachior + mesotrione + glyphosate; fluoroglycofen + metolachlor + mesotrione + glyphosate + benoxacor; fluoroglycofen + S-metolachlor + mesotrione + glyphosate; fluoroglycofen + S-metolachlor + mesotrione + glyphosate + benoxacor; fluoroglycofen + metolachlor + atrazine + glyphosate; fluoroglycofen + metolachlor + atrazine + glyphosate + benoxacor; fluoroglycofen + S-metolachlor + atrazine + glyphosate; fluoroglycofen + S-metolachlor + atrazine + glyphosate + benoxacor; fluoroglycofen + metolachlor + terbuthylazine + glyphosate; fluoroglycofen + metolachlor + terbuthylazine + glyphosate + benoxacor; fluoroglycofen + S-metolachlor + terbuthylazine + glyphosate; fluoroglycofen + S-metolachlor + terbuthylazine + glyphosate + benoxacor, fluoroglycofen + atrazine + nicosulfuron + glyphosate; fluoroglycofen + atrazine + nicosulfuron + glyphosate + benoxacor; fomesafen + prosulfuron + primisulfuron + glyphosate; fomesafen + prosulfuron + dicamba + glyphosate; fomesafen + primisutfuron + dicamba + glyphosate; fomesafen + nicosulfuron + primisulfuron + glyphosate; fomesafen + nicosulfuron + prosulfuron + glyphosate; fomesafen + rimsulfuron + primisulfuron + glyphosate; fomesafen + rimsulfuron + prosulfuron + glyphosate; fomesafen + metolachtor + isoxaflutole + glyphosate; fomesafen + metolachlor + isoxaflutole + glyphosate + benoxacor; fomesafen + S-metolachlor + isoxaflutole + glyphosate; fomesafen + S-metolachlor + isoxaflutole + glyphosate + benoxacor; fomesafen + metolachlor + mesotrione + glyphosate; fomesafen + metolachlor + mesotrione + glyphosate + benoxacor; fomesafen + S-metolachlor + mesotrione + glyphosate; fomesafen + S-metolachlor + mesotrione + glyphosate + benoxacor; fomesafen + metolachlor + atrazine + glyphosate; fomesafen + metolachlor + atrazine + glyphosate + benoxacor; fomesafen + S-metolachlor + atrazine + glyphosate; fomesafen + S-metolachlor + atrazine + glyphosate + benoxacor; fomesafen + metolachlor + terbuthylazine + glyphosate; fomesafen + metolachlor + terbuthylazine + glyphosate + benoxacor; fomesafen + S-metolachlor + terbuthylazine + glyphosate; fomesafen + S-metolachlor + terbuthylazine + glyphosate + benoxacor; fomesafen + atrazine + nicosulfuron + glyphosate; fomesafen + atrazine + nicosulfuron + glyphosate + benoxacor; lactofen + prosulfuron + primisulfuron + glyphosate; lactofen + prosulfuron + dicamba + glyphosate; lactofen + primisulfuron + dicamba + glyphosate; lactofen + nicosulfuron + primisulfuron + glyphosate; lactofen + nicosulfuron + prosulfuron + glyphosate; lactofen + rimsulfuron + primisulfuron + glyphosate; lactofen + rimsulfuron + prosulfuron + glyphosate; lactofen + metolachlor + isoxaflutole + glyphosate; lactofen + metolachlor + isoxaflutole + glyphosate + benoxacor; lactofen + S-metolachlor + isoxaflutole + glyphosate; lactofen + S-metolachlor + isoxaflutole + glyphosate + benoxacor; lactofen + metolachlor + mesotrione + glyphosate; lactofen + metolachlor + mesotrione + glyphosate + benoxacor; lactofen + S-metolachlor + mesotrione + glyphosate; lactofen + S-metolachlor + mesotrione + glyphosate + benoxacor; lactofen + metolachlor + atrazine + glyphosate; lactofen + metolachlor + atrazine + benoxacor; lactofen + S-metolachlor + atrazine; lactofen + S-metolachlor + atrazine + glyphosate + benoxacor; lactofen + metolachlor + terbuthylazine + glyphosate; lactofen + metolachlor + terbuthylazine + glyphosate + benoxacor; lactofen + S-metolachlor + terbuthylazine + glyphosate; lactofen + S-metolachlor + terbuthylazine + glyphosate + benoxacor; lactofen + atrazine + nicosulfuron + glyphosate; lactofen + atrazine + nicosulfuron + glyphosate + benoxacor; oxyfluorfen + prosulfuron + primisulfuron + glyphosate; oxyfluorfen + prosulfuron + dicamba + glyphosate; oxyfluorfen + primisulfuron + dicamba + glyphosate; oxyfluorfen + nicosulfuron + primisulfuron + glyphosate; oxyfluorfen + nicosulfuron + prosulfuron + glyphosate; oxyfluorfen + rimsulfuron + primisulfuron + glyphosate; oxyfluorfen + rimsulfuron + prosulfuron + glyphosate; oxyfluorfen + metolachlor + isoxaflutole + glyphosate; oxyfluorfen + metolachlor + isoxaflutole + glyphosate + benoxacor; oxyfluorfen + S-metolachlor + isoxaflutole + glyphosate; oxyfluorfen + S-metolachlor + isoxaflutole + glyphosate + benoxacor; oxyfluorfen + metolachlor + mesotrione + glyphosate; oxyfluorfen + metolachlor + mesotrione + glyphosate + benoxacor; oxyfluorfen + S-metolachlor + mesotrione + glyphosate; oxyfluorfen + S-metolachtor + mesotrione + glyphosate + benoxacor; oxyfluorfen + metolachlor + atrazine + glyphosate; oxyfluorfen + metolachlor + atrazine + glyphosate + benoxacor; oxyfluorfen + S-metolachlor + atrazine + glyphosate; oxyfluorfen + S-metolachlor + atrazine + glyphosate + benoxacor; oxyfluorfen + metolachlor + terbuthylazine + glyphosate; oxyfluorfen + metolachlor + terbuthylazine + glyphosate + benoxacor; oxyfluorfen + S-metolachlor + terbuthylazine + glyphosate; oxyfluorfen + S-metolachlor + terbuthylazine + glyphosate + benoxacor; oxyfluorfen + atrazine + nicosulfuron + glyphosate; oxyfluorfen + atrazine + nicosulfuron + glyphosate + benoxacor; azafenidin + prosulfuron + primisulfuron + glyphosate; azafenidin + prosulfuron + dicamba + glyphosate; azafenidin + primisulfuron + dicamba + glyphosate; azafenidin + nicosulfuron + primisulfuron + glyphosate; azafenidin + nicosulfuron + prosulfuron + glyphosate; azafenidin + rimsulfuron + primisulfuron + glyphosate; azafenidin + rimsulfuron + prosulfuron + glyphosate; azafenidin + metolachlor + isoxaflutole + glyphosate; azafenidin + metolachlor + isoxaflutole + glyphosate + benoxacor; azafenidin + S-metolachlor + isoxaflutole + glyphosate; azafenidin + S-metolachlor + isoxaflutole + glyphosate + benoxacor; azafenidin + metolachlor + mesotrione + glyphosate; azafenidin + metolachlor + mesotrione + glyphosate + benoxacor; azafenidin + S-metolachlor + mesotrione + glyphosate; azafenidin + S-metolachlor + mesotrione + glyphosate + benoxacor; azafenidin + metolachlor + atrazine + glyphosate; azafenidin + metolachlor + atrazine + glyphosate + benoxacor; azafenidin + S-metolachlor + atrazine + glyphosate; azafenidin + S-metolachlor + atrazine + glyphosate + benoxacor; azafenidin + metolachlor + terbuthylazine + glyphosate; azafenidin + metolachlor + terbuthylazine + glyphosate + benoxacor; azafenidin + S-metolachlor + terbuthylazine + glyphosate; azafenidin + S-metolachlor + terbuthylazine + glyphosate + benoxacor; azafenidin + atrazine + nicosutfuron + glyphosate; azafenidin + atrazine + nicosulfuron + glyphosate + benoxacor; carfentrazone-ethyl + prosulfuron + primisulfuron + glyphosate; carfentrazone-ethyl + prosulfuron + dicamba + glyphosate; carfentrazone-ethyl + primisulfuron + dicamba + glyphosate; carfentrazone-ethyl + nicosulfuron + primisulfuron + glyphosate; carfentrazone-ethyl + nicosulfuron + prosulfuron + glyphosate; carfentrazone-ethyl + rimsulfuron + primisulfuron + glyphosate; carfentrazone-ethyl + rimsulfuron + prosulfuron + glyphosate; carfentrazone-ethyl + metolachlor + isoxaflutole + glyphosate; carfentrazone-ethyl + metolachlor + isoxaflutole + glyphosate + benoxacor; carfentrazone-ethyl + S-metolachlor + isoxaflutole + glyphosate; carfentrazone-ethyl + S-metolachlor + isoxaflutole + glyphosate + benoxacor; carfentrazone-ethyl + metolachlor + mesotrione + glyphosate; carfentrazone-ethyl + metolachlor + mesotrione + glyphosate + benoxacor; carfentrazone-ethyl + S-metolachlor + mesotrione + glyphosate; carfentrazone-ethyl + S-metolachlor + mesotrione + glyphosate + benoxacor; carfentrazone-ethyl + metolachlor + atrazine + glyphosate; carfentrazone-ethyl + metolachlor + atrazine + glyphosate + benoxacor; carfentrazone-ethyl + S-metolachlor + atrazine + glyphosate; carfentrazone-ethyl + S-metolachlor + atrazine + glyphosate + benoxacor; carfentrazone-ethyl + metolachlor + terbuthylazine + glyphosate; carfentrazone-ethyl + metolachlor + terbuthylazine + glyphosate + benoxacor; carfentrazone-ethyl + S-metolachlor + terbuthylazine + glyphosate; carfentrazone-ethyl + S-metolachlor + terbuthylazine + glyphosate + benoxacor; carfentrazone-ethyl + atrazine + nicosulfuron + glyphosate; carfentrazone-ethyl + atrazine + nicosulfuron + glyphosate + benoxacor; compound of the formula A + prosulfuron + primisulfuron + glyphosate; compound of the formula A + prosulfuron + dicamba + glyphosate; compound of the formula A + primisulfuron + dicamba + glyphosate; compound of the formula A + nicosulfuron + primisulfuron + glyphosate; compound of the formula A + nicosulfuron + prosulfuron + glyphosate; compound of the formula A + rimsulfuron + primisulfuron + glyphosate; compound of the formula A + rimsulfuron + prosulfuron + glyphosate; compound of the formula A + metolachlor + isoxaflutole + glyphosate; compound of the formula A + metolachlor + isoxaflutole + glyphosate + benoxacor; compound of the formula A + S-metolachlor + isoxaflutole + glyphosate; compound of the formula A + S-metolachlor + isoxaflutole + glyphosate + benoxacor; compound of the formula A + metolachlor + mesotrione + glyphosate; compound of the formula A + metolachlor + mesotrione + glyphosate + benoxacor; compound of the formula A + S-metolachlor + mesotrione + glyphosate; compound of the formula A + S-metolachlor + mesotrione + glyphosate + benoxacor; compound of the formula A + metolachlor + atrazine + glyphosate; compound of the formula A + metolachlor + atrazine + glyphosate + benoxacor; compound of the formula A + S-metolachlor + atrazine + glyphosate; compound of the formula A + S-metolachlor + atrazine + glyphosate + benoxacor; compound of the formula A + metolachlor + terbuthylazine + glyphosate; compound of the formula A + metolachlor + terbuthylazine + glyphosate + benoxacor; compound of the formula A + S-metolachlor + terbuthylazine + glyphosate; compound of the formula A + S-metolachlor + terbuthylazine + glyphosate + benoxacor; compound of the formula A + atrazine + nicosulfuron + glyphosate; compound of the formula A + atrazine + nicosulfuron + glyphosate + benoxacor; cinidon-ethyl + prosulfuron + primisulfuron + glyphosate; cinidon-ethyl + prosulfuron + dicamba + glyphosate; cinidon-ethyl + primisulfuron + dicamba + glyphosate; cinidon-ethyl + nicosulfuron + primisulfuron + glyphosate; cinidon-ethyl + nicosulfuron + prosulfuron + glyphosate; cinidon-ethyl + rimsulfuron + primisulfuron + glyphosate; cinidon-ethyl + rimsulfuron + prosulfuron + glyphosate; cinidon-ethyl + metolachlor + isoxaflutole + glyphosate; cinidon-ethyl + metolachlor + isoxaflutole + glyphosate + benoxacor; cinidon-ethyl + S-metolachlor + isoxaflutole + glyphosate; cinidon-ethyl + S-metolachlor + isoxaflutole + glyphosate + benoxacor; cinidon-ethyl + metolachlor + mesotrione + glyphosate; cinidon-ethyl + metolachlor + mesotrione + glyphosate + benoxacor; cinidon-ethyl + S-metolachlor + mesotrione + glyphosate; cinidon-ethyl + S-metolachlor + mesotrione + glyphosate + benoxacor; cinidon-ethyl + metolachlor + atrazine + glyphosate; cinidon-ethyl + metolachlor + atrazine + glyphosate + benoxacor; cinidon-ethyl + S-metolachlor + atrazine + glyphosate; cinidon-ethyl + S-metolachlor + atrazine + glyphosate + benoxacor; cinidon-ethyl + metolachlor + terbuthylazine + glyphosate; cinidon-ethyl + metolachlor + terbuthylazine + glyphosate + benoxacor; cinidon-ethyl + S-metolachlor + terbuthylazine + glyphosate; cinidon-ethyl + S-metolachlor + terbuthylazine + glyphosate + benoxacor; cinidon-ethyl + atrazine + nicosulfuron + glyphosate; cinidon-ethyl + atrazine + nicosulfuron + glyphosate + benoxacor; flumiclorac-pentyl + prosulfuron + primisulfuron + glyphosate; flumiclorac-pentyl + prosulfuron + dicamba + glyphosate; flumiclorac-pentyl + primisulfuron + dicamba + glyphosate; flumiclorac-pentyl + nicosulfuron + primisulfuron + glyphosate; flumiclorac-pentyl + nicosulfuron + prosulfuron + glyphosate; flumiclorac-pentyl + rimsulfuron + primisulfuron + glyphosate; flumiclorac-pentyl + rimsulfuron + prosulfuron + glyphosate; flumiclorac-pentyl + metolachlor + isoxaflutole + glyphosate; flumiclorac-pentyl + metolachlor + isoxaflutole + glyphosate + benoxacor; flumiclorac-pentyl + S-metolachlor + isoxaflutole + glyphosate; flumiclorac-pentyl + S-metolachlor + isoxaflutole + glyphosate + benoxacor; flumiclorac-pentyl + metolachlor + mesotrione + glyphosate; flumiclorac-pentyl + metolachlor + mesotrione + glyphosate + benoxacor; flumiclorac-pentyl + S-metolachlor + mesotrione + glyphosate; flumiclorac-pentyl + S-metolachlor + mesotrione + glyphosate + benoxacor; flumiclorac-pentyl + metolachlor + atrazine + glyphosate; flumiclorac-pentyl + metolachlor + atrazine + glyphosate + benoxacor; flumiclorac-pentyl + S-metolachlor + atrazine + glyphosate; flumiclorac-pentyl + S-metolachlor + atrazine + glyphosate + benoxacor; flumiclorac-pentyl + metolachlor + terbuthylazine + glyphosate; flumiclorac-pentyl + metolachlor + terbuthylazine + glyphosate + benoxacor; flumiclorac-pentyl + S-metolachlor + terbuthylazine + glyphosate; flumiclorac-pentyl + S-metolachlor + terbuthylazine + glyphosate + benoxacor; flumiclorac-pentyl + atrazine + nicosulfuron + glyphosate; flumiclorac-pentyl + atrazine + nicosulfuron + glyphosate + benoxacor; flumioxazin + prosulfuron + primisulfuron + glyphosate; flumioxazin + prosulfuron + dicamba + glyphosate; flumioxazin + primisulfuron + dicamba + glyphosate; flumioxazin + nicosulfuron + primisulfuron + glyphosate; flumioxazin + nicosulfuron + prosulfuron + glyphosate; flumioxazin + rimsulfuron + primisulfuron + glyphosate; flumioxazin + rimsulfuron + prosulfuron + glyphosate; flumioxazin + metolachlor + isoxaflutole + glyphosate; flumioxazin + metolachlor + isoxaflutole + glyphosate + benoxacor; flumioxazin + S-metolachlor + isoxaflutole + glyphosate; flumioxazin + S-metolachlor + isoxaflutole + glyphosate + benoxacor; flumioxazin + metolachlor + mesotrione + glyphosate; flumioxazin + metolachlor + mesotrione + glyphosate + benoxacor; flumioxazin + S-metolachlor + mesotrione + glyphosate; flumioxazin + S-metolachlor + mesotrione + glyphosate + benoxacor; flumioxazin + metolachlor + atrazine + glyphosate; flumioxazin + metolachlor + atrazine + glyphosate + benoxacor; flumioxazin + S-metolachlor + atrazine + glyphosate; flumioxazin + S-metolachlor + atrazine + glyphosate + benoxacor; flumioxazin + metolachlor + terbuthylazine + glyphosate; flumioxazin + metolachlor + terbuthylazine + glyphosate + benoxacor; flumioxazin + S-metolachlor + terbuthylazine + glyphosate; flumioxazin + S-metolachlor + terbuthylazine + glyphosate + benoxacor; flumioxazin + atrazine + nicosulfuron + glyphosate; flumioxazin + atrazine + nicosulfuron + glyphosate + benoxacor; fluthiacet-methyl + prosulfuron + primisulfuron + glyphosate; fluthiacet-methyl + prosulfuron + dicamba + glyphosate; fluthiacet-methyl + primisutfuron + dicamba + glyphosate; fluthiacet-methyl + nicosulfuron + primisulfuron + glyphosate; fluthiacet-methyl + nicosulfuron + prosulfuron + glyphosate; fluthiacet-methyl + rimsulfuron + primisulfuron + glyphosate; fluthiacet-methyl + rimsulfuron + prosulfuron + glyphosate; fluthiacet-methyl + metolachlor + isoxaflutole + glyphosate; fluthiacet-methyl + metolachlor + isoxaflutole + glyphosate + benoxacor; fluthiacet-methyl + S-metolachlor + isoxaflutole + glyphosate; fluthiacet-methyl + S-metolachlor + isoxaflutole + glyphosate + benoxacor; fluthiacet-methyl + metolachlor + mesotrione + glyphosate; fluthiacet-methyl + metolachlor + mesotrione + glyphosate + benoxacor; fluthiacet-methyl + S-metolachlor + mesotrione + glyphosate; fluthiacet-methyl + S-metolachlor + mesotrione + glyphosate + benoxacor; fluthiacet-methyl + metolachlor + atrazine + glyphosate; fluthiacet-methyl + metolachlor + atrazine + glyphosate + benoxacor; fluthiacet-methyl + S-metolachlor + atrazine + glyphosate; fluthiacet-methyl + S-metolachlor + atrazine + glyphosate + benoxacor; fluthiacet-methyl + metolachlor + terbuthylazine + glyphosate; fluthiacet-methyl + metolachlor + terbuthylazine + glyphosate + benoxacor; fluthiacet-methyl + S-metolachlor + terbuthylazine + glyphosate; fluthiacet-methyl + S-metolachlor + terbuthylazine + glyphosate + benoxacor; fluthiacet-methyl + atrazine + nicosulfuron + glyphosate; fluthiacet-methyl + atrazine + nicosulfuron + glyphosate + benoxacor; oxadiargyl + prosulfuron + primisulfuron + glyphosate; oxadiargyl + prosulfuron + dicamba + glyphosate; oxadiargyl + primisulfuron + dicamba + glyphosate; oxadiargyl + nicosulfuron + primisulfuron + glyphosate; oxadiargyl + nicosulfuron + prosulfuron + glyphosate; oxadiargyl + rimsulfuron + primisulfuron + glyphosate; oxadiargyl + rimsulfuron + prosulfuron + glyphosate; oxadiargyl + metolachlor + isoxaflutole + glyphosate; oxadiargyl + metolachlor + isoxaflutole + glyphosate + benoxacor; oxadiargyl + S-metolachlor + isoxaflutole + glyphosate; oxadiargyl + S-metolachlor + isoxaflutole + glyphosate + benoxacor; oxadiargyl + metolachlor + mesotrione + glyphosate; oxadiargyl + metolachlor + mesotrione + glyphosate + benoxacor; oxadiargyl + S-metolachlor + mesotrione + glyphosate; oxadiargyl + S-metolachlor + mesotrione + glyphosate + benoxacor; oxadiargyl + metolachlor + atrazine + glyphosate; oxadiargyl + metolachlor + atrazine + glyphosate + benoxacor; oxadiargyl + S-metolachlor + atrazine + glyphosate; oxadiargyl + S-metolachlor + atrazine + glyphosate + benoxacor; oxadiargyl + metolachlor + terbuthylazine + glyphosate; oxadiargyl + metolachlor + terbuthylazine + glyphosate + benoxacor; oxadiargyl + S-metolachlor + terbuthylazine + glyphosate; oxadiargyl + S-metolachlor + terbuthylazine + glyphosate + benoxacor; oxadiargyl + atrazine + nicosulfuron + glyphosate; oxadiargyl + atrazine + nicosulfuron + glyphosate + benoxacor; oxadiazon + prosulfuron + primisulfuron + glyphosate; oxadiazon + prosulfuron + dicamba + glyphosate; oxadiazon + primisulfuron + dicamba + glyphosate; oxadiazon + nicosulfuron + primisulfuron + glyphosate; oxadiazon + nicosulfuron + prosulfuron + glyphosate; oxadiazon + rimsulfuron + primisulfuron + glyphosate; oxadiazon + rimsulfuron + prosulfuron + glyphosate; oxadiazon + metolachlor + isoxaflutole + glyphosate; oxadiazon + metolachlor + isoxaflutole + glyphosate + benoxacor; oxadiazon + S-metolachlor + isoxaflutole + glyphosate; oxadiazon + S-metolachlor + isoxaflutole + glyphosate + benoxacor; oxadiazon + metolachlor + mesotrione + glyphosate; oxadiazon + metolachlor + mesotrione + glyphosate + benoxacor; oxadiazon + S-metolachlor + mesotrione + glyphosate; oxadiazon + S-metolachlor + mesotrione + glyphosate + benoxacor, oxadiazon + metolachlor + atrazine + glyphosate; oxadiazon + metolachlor + atrazine + glyphosate + benoxacor; oxadiazon + S-metolachlor + atrazine + glyphosate; oxadiazon + S-metolachlor + atrazine + glyphosate + benoxacor; oxadiazon + metolachlor + terbuthylazine + glyphosate; oxadiazon + metolachlor + terbuthylazine + glyphosate + benoxacor; oxadiazon + S-metolachlor + terbuthylazine + glyphosate; oxadiazon + S-metolachlor + terbuthylazine + glyphosate + benoxacor; oxadiazon + atrazine + nicosulfuron + glyphosate; oxadiazon + atrazine + nicosulfuron + glyphosate + benoxacor; pentoxazone + prosulfuron + primisulfuron + glyphosate; pentoxazone + prosulfuron + dicamba + glyphosate; pentoxazone + primisulfuron + dicamba + glyphosate; pentoxazone + nicosulfuron + primisulfuron + glyphosate; pentoxazone + nicosulfuron + prosulfuron + glyphosate; pentoxazone + rimsulfuron + primisulfuron + glyphosate; pentoxazone + rimsulfuron + prosulfuron + glyphosate; pentoxazone + metolachlor + isoxaflutole + glyphosate; pentoxazone + metolachlor + isoxaflutole + glyphosate + benoxacor; pentoxazone + S-metolachlor + isoxaflutole + glyphosate; pentoxazone + S-metolachlor + isoxaflutole + glyphosate + benoxacor, pentoxazone + metolachlor + mesotrione + glyphosate; pentoxazone + metolachlor + mesotrione + glyphosate + benoxacor; pentoxazone + S-metolachlor + mesotrione + glyphosate; pentoxazone + S-metolachlor + mesotrione + glyphosate + benoxacor; pentoxazone + metolachlor + atrazine + glyphosate; pentoxazone + metolachlor + atrazine + glyphosate + benoxacor; pentoxazone + S-metolachlor + atrazine + glyphosate; pentoxazone + S-metolachlor + atrazine + glyphosate + benoxacor; pentoxazone + metolachlor + terbuthylazine + glyphosate; pentoxazone + metolachlor + terbuthylazine + glyphosate + benoxacor; pentoxazone + S-metolachlor + terbuthylazine + glyphosate; pentoxazone + S-metolachlor + terbuthylazine + glyphosate + benoxacor; pentoxazone + atrazine + nicosulfuron + glyphosate; pentoxazone + atrazine + nicosulfuron + glyphosate + benoxacor; sulfentrazone + prosulfuron + primisulfuron + glyphosate; sulfentrazone + prosulfuron + dicamba + glyphosate; sulfentrazone + primisulfuron + dicamba + glyphosate; sulfentrazone + nicosulfuron + primisulfuron + glyphosate; sulfentrazone + nicosulfuron + prosulfuron + glyphosate; sulfentrazone + rimsulfuron + primisulfuron + glyphosate; sulfentrazone + rimsulfuron + prosulfuron + glyphosate; sulfentrazone + metolachlor + isoxaflutole + glyphosate; sulfentrazone + metolachlor + isoxaflutole + glyphosate + benoxacor; sulfentrazone + S-metolachlor + isoxaflutole + glyphosate; sulfentrazone + S-metolachlor + isoxaflutole + glyphosate + benoxacor; sulfentrazone + metolachlor + mesotrione + glyphosate; sulfentrazone + metolachlor + mesotrione + glyphosate + benoxacor; sulfentrazone + S-metolachlor + mesotrione + glyphosate; sulfentrazone + S-metolachlor + mesotrione + glyphosate + benoxacor; sulfentrazone + metolachlor + atrazine + glyphosate; sulfentrazone + metolachlor + atrazine + glyphosate + benoxacor; sulfentrazone + S-metolachlor + atrazine + glyphosate; sulfentrazone + S-metolachlor + atrazine + glyphosate + benoxacor; sulfentrazone + metolachlor + terbuthylazine + glyphosate; sulfentrazone + metolachlor + terbuthylazine + glyphosate + benoxacor; sulfentrazone + S-metolachlor + terbuthylazine + glyphosate; sulfentrazone + S-metolachlor + terbuthylazine + glyphosate + benoxacor; sulfentrazone + atrazine + nicosulfuron + glyphosate; sulfentrazone + atrazine + nicosulfuron + glyphosate + benoxacor; fluazolate + prosulfuron + primisulfuron + glyphosate; fluazolate + prosulfuron + dicamba + glyphosate; fluazolate + primisulfuron + dicamba + glyphosate; fluazolate + nicosulfuron + primisulfuron + glyphosate; fluazolate + nicosulfuron + prosulfuron + glyphosate; fluazolate + rimsulfuron + primisulfuron + glyphosate; fluazolate + rimsulfuron + prosulfuron + glyphosate; fluazolate + metolachlor + isoxaflutole + glyphosate; fluazolate + metolachlor + isoxaflutole + glyphosate + benoxacor; fluazolate + S-metolachlor + isoxaflutole + glyphosate; fluazolate + S-metolachlor + isoxaflutole + glyphosate + benoxacor; fluazolate + metolachlor + mesotrione + glyphosate; fluazolate + metolachlor + mesotrione + glyphosate + benoxacor; fluazolate + S-metolachlor + mesotrione + glyphosate; fluazolate + S-metolachlor + mesotrione + glyphosate + benoxacor; fluazolate + metolachlor + atrazine + glyphosate; fluazolate + metolachlor + atrazine + glyphosate + benoxacor; fluazolate + S-metolachlor + atrazine + glyphosate; fluazolate + S-metolachlor + atrazine + glyphosate + benoxacor; fluazolate + metolachlor + terbuthylazine + glyphosate; fluazolate + metolachlor + terbuthylazine + glyphosate + benoxacor; fluazolate + S-metolachlor + terbuthylazine + glyphosate; fluazolate + S-metolachlor + terbuthylazine + glyphosate + benoxacor; fluazolate + atrazine + nicosulfuron + glyphosate; fluazolate + atrazine + nicosulfuron + glyphosate + benoxacor; pyraflufen-ethyl + prosulfuron + primisulfuron + glyphosate; pyraflufen-ethyl + prosulfuron + dicamba + glyphosate; pyraflufen-ethyl + primisulfuron + dicamba + glyphosate; pyraflufen-ethyl + nicosulfuron + primisulfuron + glyphosate; pyraflufen-ethyl + nicosulfuron + prosulfuron + glyphosate; pyraflufen-ethyl + rimsulfuron + primisulfuron + glyphosate; pyraflufen-ethyl + rimsulfuron + prosulfuron + glyphosate; pyraflufen-ethyl + metolachlor + isoxaflutole + glyphosate; pyraflufen-ethyl + metolachlor + isoxaflutole + glyphosate + benoxacor; pyraflufen-ethyl + 5-metotachlor + isoxaflutole + glyphosate; pyraflufen-ethyl + S-metolachlor + isoxaflutole + glyphosate + benoxacor; pyraflufen-ethyl + metolachlor + mesotrione + glyphosate; pyraflufen-ethyl + metolachlor + mesotrione + glyphosate + benoxacor; pyraflufen-ethyl + S-metolachlor + mesotrione + glyphosate; pyraflufen-ethyl + S-metolachlor + mesotrione + glyphosate + benoxacor; pyraflufen-ethyl + metolachlor + atrazine + glyphosate; pyraflufen-ethyl + metolachlor + atrazine + glyphosate + benoxacor; pyraflufen-ethyl + S-metolachlor + atrazine + glyphosate; pyraflufen-ethyl + S-metolachlor + atrazine + glyphosate + benoxacor; pyraflufen-ethyl + metolachlor + terbuthylazine + glyphosate; pyraflufen-ethyl + metolachlor + terbuthylazine + glyphosate + benoxacor; pyraflufen-ethyl + S-metolachlor + terbuthylazine + glyphosate; pyraflufen-ethyl + S-metolachlor + terbuthylazine + glyphosate + benoxacor; pyraflufen-ethyl + atrazine + nicosulfuron + glyphosate; pyraflufen-ethyl + atrazine + nicosulfuron + glyphosate + benoxacor; flumipropyn + prosulfuron + primisulfuron + glyphosate; flumipropyn + prosulfuron + dicamba + glyphosate; flumipropyn + primisulfuron + dicamba + glyphosate; flumipropyn + nicosulfuron + primisulfuron + glyphosate; flumipropyn + nicosulfuron + prosulfuron + glyphosate; flumipropyn + rimsulfuron + primisulfuron + glyphosate; flumipropyn + rimsulfuron + prosulfuron + glyphosate; flumipropyn + metolachlor + isoxaflutole + glyphosate; flumipropyn + metolachlor + isoxaflutole + glyphosate + benoxacor; flumipropyn + S-metolachlor + isoxaflutole + glyphosate; flumipropyn + S-metolachlor + isoxaflutole + glyphosate + benoxacor; flumipropyn + metolachlor + mesotrione + glyphosate; flumipropyn + metolachlor + mesotrione + glyphosate + benoxacor; flumipropyn + S-metolachlor + mesotrione + glyphosate; flumipropyn + S-metolachlor + mesotrione + glyphosate + benoxacor; flumipropyn + metolachlor + atrazine + glyphosate; flumipropyn + metolachlor + atrazine + glyphosate + benoxacor; flumipropyn + S-metolachlor + atrazine + glyphosate; flumipropyn + S-metolachlor + atrazine + glyphosate + benoxacor; flumipropyn + metolachlor + terbuthylazine + glyphosate; flumipropyn + metolachlor + terbuthylazine + glyphosate + benoxacor; flumipropyn + S-metolachlor + terbuthylazine + glyphosate; flumipropyn + S-metolachlor + terbuthylazine + glyphosate + benoxacor; flumipropyn + atrazine + nicosulfuron + glyphosate; flumipropyn + atrazine + nicosulfuron + glyphosate + benoxacor; flupropacil + prosulfuron + primisulfuron + glyphosate; flupropacil + prosulfuron + dicamba + glyphosate; flupropacil + primisulfuron + dicamba + glyphosate; flupropacil + nicosulfuron + primisulfuron + glyphosate; flupropacil + nicosulfuron + prosulfuron + glyphosate; flupropacil + rimsulfuron + primisulfuron + glyphosate; flupropacil + rimsulfuron + prosulfuron + glyphosate; flupropacil + metolachlor + isoxaflutole + glyphosate; flupropacil + metolachlor + isoxaflutole + glyphosate + benoxacor; flupropacil + S-metolachlor + isoxaflutole + glyphosate; flupropacil + S-metolachlor + isoxaflutole + glyphosate + benoxacor; flupropacil + metolachlor + mesotrione + glyphosate; flupropacil + metolachlor + mesotrione + glyphosate + benoxacor; flupropacil + S-metolachlor + mesotrione + glyphosate; flupropacil + S-metolachlor + mesotrione + glyphosate + benoxacor; flupropacil + metolachlor + atrazine + glyphosate; flupropacil + metolachlor + atrazine + glyphosate + benoxacor; flupropacil + S-metolachlor + atrazine + glyphosate; flupropacil + S-metolachlor + atrazine + glyphosate + benoxacor; flupropacil + metolachlor + terbuthylazine + glyphosate; flupropacil + metolachlor + terbuthylazine + glyphosate + benoxacor; flupropacil + S-metolachlor + terbuthylazine + glyphosate; flupropacil + S-metolachlor + terbuthylazine + glyphosate + benoxacor; flupropacil + atrazine + nicosulfuron + glyphosate; flupropacil + atrazine + nicosulfuron + glyphosate + benoxacor; nipyraclofen + prosulfuron + primisulfuron + glyphosate; nipyraclofen + prosulfuron + dicamba + glyphosate; nipyraclofen + primisulfuron + dicamba + glyphosate; nipyraclofen + nicosulfuron + primisulfuron + glyphosate; nipyraclofen + nicosulfuron + prosulfuron + glyphosate; nipyraclofen + rimsulfuron + primisulfuron + glyphosate; nipyraclofen + rimsulfuron + prosulfuron + glyphosate; nipyraclofen + metolachlor + isoxaflutole + glyphosate; nipyraclofen + metolachlor + isoxaflutole + glyphosate + benoxacor; nipyraclofen + S-metolachlor + isoxaflutole + glyphosate; nipyraclofen + S-metolachlor + isoxaflutole + glyphosate + benoxacor; nipyraclofen + metolachlor + mesotrione + glyphosate; nipyraclofen + metolachlor + mesotrione + glyphosate + benoxacor; nipyraclofen + S-metolachlor + mesotrione + glyphosate; nipyraclofen + S-metolachlor + mesotrione + glyphosate + benoxacor; nipyraclofen + metolachlor + atrazine + glyphosate; nipyraclofen + metolachlor + atrazine + glyphosate + benoxacor; nipyraclofen + S-metolachlor + atrazine + glyphosate; nipyraclofen + S-metolachlor + atrazine + glyphosate + benoxacor; nipyraclofen + metolachlor + terbuthylazine + glyphosate; nipyraclofen + metolachlor + terbuthylazine + glyphosate + benoxacor; nipyraclofen + S-metolachlor + terbuthylazine + glyphosate; nipyraclofen + S-metolachlor + terbuthylazine + glyphosate + benoxacor; nipyraclofen + atrazine + nicosulfuron + glyphosate; nipyraclofen + atrazine + nicosulfuron + glyphosate + benoxacor; benzfendizone + prosulfuron + primisulfuron + glyphosate; benzfendizone + prosulfuron + dicamba + glyphosate; benzfendizone + primisulfuron + dicamba + glyphosate; benzfendizone + nicosulfuron + primisulfuron + glyphosate; benzfendizone + nicosulfuron + prosulfuron + glyphosate; benzfendizone + rimsulfuron + primisulfuron + glyphosate; benzfendizone + rimsulfuron + prosulfuron + glyphosate; benzfendizone + metolachlor + isoxaflutole + glyphosate; benzfendizone + metolachlor + isoxaflutole + glyphosate + benoxacor; benzfendizone + S-metolachlor + isoxaflutole + glyphosate; benzfendizone + S-metolachlor + isoxaflutole + glyphosate + benoxacor; benzfendizone + metolachlor + mesotrione + glyphosate; benzfendizone + metolachlor + mesotrione + glyphosate + benoxacor; benzfendizone + S-metolachlor + mesotrione + glyphosate; benzfendizone + S-metolachlor + mesotrione + glyphosate + benoxacor; benzfendizone + metolachlor + atrazine + glyphosate; benzfendizone + metolachlor + atrazine + glyphosate + benoxacor; benzfendizone + S-metolachlor + atrazine + glyphosate; benzfendizone + S-metolachlor + atrazine + glyphosate + benoxacor; benzfendizone + metolachlor + terbuthylazine + glyphosate; benzfendizone + metolachlor + terbuthylazine + glyphosate + benoxacor; benzfendizone + S-metolachlor + terbuthylazine + glyphosate; benzfendizone + S-metolachlor + terbuthylazine + glyphosate + benoxacor; benzfendizone + atrazine + nicosulfuron + glyphosate; benzfendizone + atrazine + nicosulfuron + glyphosate + benoxacor; thidiazimin + prosulfuron + primisulfuron + glyphosate; thidiazimin + prosulfuron + dicamba + glyphosate; thidiazimin + primisulfuron + dicamba + glyphosate; thidiazimin + nicosulfuron + primisulfuron + glyphosate; thidiazimin + nicosulfuron + prosulfuron + glyphosate; thidiazimin + rimsulfuron + primisulfuron + glyphosate; thidiazimin + rimsulfuron + prosulfuron + glyphosate; thidiazimin + metolachlor + isoxaflutole + glyphosate; thidiazimin + metolachlor + isoxaflutole + glyphosate + benoxacor; thidiazimin + S-metolachlor + isoxaflutole + glyphosate; thidiazimin + S-metolachlor + isoxaflutole + glyphosate + benoxacor; thidiazimin + metolachlor + mesotrione + glyphosate; thidiazimin + metolachlor + mesotrione + glyphosate + benoxacor; thidiazimin + S-metolachlor + mesotrione + glyphosate; thidiazimin + S-metolachlor + mesotrione + glyphosate + benoxacor; thidiazimin + metolachlor + atrazine + glyphosate; thidiazimin + metolachlor + atrazine + glyphosate + benoxacor; thidiazimin + S-metolachlor + atrazine + glyphosate; thidiazimin + S-metolachlor + atrazine + glyphosate + benoxacor; thidiazimin + metolachlor + terbuthylazine + glyphosate; thidiazimin + metolachlor + terbuthylazine + glyphosate + benoxacor; thidiazimin + S-metoiachlor + terbuthylazine + glyphosate; thidiazimin + S-metolachlor + terbuthylazine + glyphosate + benoxacor; thidiazimin + atrazine + nicosulfuron + glyphosate; and thidiazimin + atrazine + nicosulfuron + glyphosate + benoxacor.

Acifluorfen + metolachlor + isoxaflutole + glyphosate + MON 4660; acifluorfen + S-metolachlor + isoxaflutole + glyphosate + MON 4660; acifluorfen + metolachlor + mesotrione + glyphosate + MON 4660; acifluorfen + S-metolachlor + mesotrione + glyphosate + MON 4660; acifluorfen + metolachlor + atrazine + glyphosate + MON 4660; acifluorfen + S-metolachlor + atrazine + glyphosate + MON 4660; acifluorfen + metolachlor + terbuthylazine + glyphosate + MON 4660; acifluorfen + S-metolachlor + terbuthylazine + glyphosate + MON 4660; acifluorfen + atrazine + nicosulfuron + glyphosate + MON 4660; aclonifen + metolachlor + isoxaflutole + glyphosate + MON 4660; aclonifen + S-metolachlor + isoxaflutole + glyphosate + MON 4660; aclonifen + metolachlor + mesotrione + glyphosate + MON 4660; actonifen + S-metolachlor + mesotrione + glyphosate + MON 4660; aclonifen + metolachlor + atrazine + glyphosate + MON 4660; aclonifen + S-metolachlor + atrazine + glyphosate + MON 4660; aclonifen + metolachlor + terbuthylazine + glyphosate + MON 4660; aclonifen + S-metolachlor + terbuthylazine + glyphosate + MON 4660; aclonifen + atrazine + nicosulfuron + glyphosate + MON 4660; bifenox + metolachlor + isoxaflutole + glyphosate + MON 4660; bifenox + S-metolachlor + isoxaflutole + glyphosate + MON 4660; bifenox + metolachlor + mesotrione + glyphosate + MON 4660; bifenox + S-metolachlor + mesotrione + glyphosate + MON 4660; bifenox + metolachlor + atrazine + glyphosate + MON 4660; bifenox + S-metolachlor + atrazine + glyphosate + MON 4660; bifenox + metolachlor + terbuthylazine + glyphosate + MON 4660; bifenox + S-metolachlor + terbuthylazine + glyphosate + MON 4660; bifenox + atrazine + nicosulfuron + glyphosate + MON 4660; chlornitrofen + metolachlor + isoxaflutole + glyphosate + MON 4660; chlornitrofen + S-metolachlor + isoxaflutole + glyphosate + MON 4660; chlornitrofen + metolachlor + mesotrione + glyphosate + MON 4660; chlornitrofen + S-metolachlor + mesotrione + glyphosate + MON 4660; chlornitrofen + metolachlor + atrazine + glyphosate + MON 4660; chlornitrofen + S-metolachlor + atrazine + glyphosate + MON 4660; chlornitrofen + metolachlor + terbuthylazine + glyphosate + MON 4660; chlornitrofen + S-metolachlor + terbuthylazine + glyphosate + MON 4660; chlornitrofen + atrazine + nicosulfuron + glyphosate + MON 4660; ethoxyfen + metolachlor + isoxaflutole + glyphosate + MON 4660; ethoxyfen + S-metolachlor + isoxaflutole + glyphosate + MON 4660; ethoxyfen + metolachlor + mesotrione + glyphosate + MON 4660; ethoxyfen + S-metolachlor + mesotrione + glyphosate + MON 4660; ethoxyfen + metolachlor + atrazine + glyphosate + MON 4660; ethoxyfen + S-metolachlor + atrazine + glyphosate + MON 4660; ethoxyfen + metolachlor + terbuthylazine + glyphosate + MON 4660; ethoxyfen + S-metolachlor + terbuthylazine + glyphosate + MON 4660; ethoxyfen + atrazine + nicosulfuron + glyphosate + MON 4660; fluoroglycofen + metolachlor + isoxaflutole + glyphosate + MON 4660; fluoroglycofen + S-metolachlor + isoxaflutole + glyphosate + MON 4660; fluoroglycofen + metolachlor + mesotrione + glyphosate + MON 4660; fluoroglycofen + S-metolachlor + mesotrione + glyphosate + MON 4660; fluoroglycofen + metolachlor + atrazine + glyphosate + MON 4660; fluoroglycofen + S-metolachlor + atrazine + glyphosate + MON 4660; fluoroglycofen + metolachlor + terbuthylazine + glyphosate + MON 4660; fluoroglycofen + S-metolachlor + terbuthylazine + glyphosate + MON 4660; fluoroglycofen + atrazine + nicosulfuron + glyphosate + MON 4660; fomesafen + metolachlor + isoxaflutole + glyphosate + MON 4660; fomesafen + S-metolachlor + isoxaflutole + glyphosate + MON 4660; fomesafen + metolachlor + mesotrione + glyphosate + MON 4660; fomesafen + S-metolachlor + mesotrione + glyphosate + MON 4660; fomesafen + metolachlor + atrazine + glyphosate + MON 4660; fomesafen + S-metolachlor + atrazine + glyphosate + MON 4660; fomesafen + metolachlor + terbuthylazine + glyphosate + MON 4660; fomesafen + S-metolachlor + terbuthylazine + glyphosate + MON 4660; fomesafen + atrazine + nicosulfuron + glyphosate + MON 4660; lactofen + metolachlor + isoxaflutole + glyphosate + MON 4660; lactofen + S-metotachlor + isoxaflutole + glyphosate + MON 4660; lactofen + metolachlor + mesotrione + glyphosate + MON 4660; lactofen + S-metolachlor + mesotrione + glyphosate + MON 4660; lactofen + metolachlor + atrazine + glyphosate + MON 4660; lactofen + S-metolachlor + atrazine + MON 4660; lactofen + metolachlor + terbuthylazine + glyphosate + MON 4660; lactofen + S-metolachlor + terbuthylazine + glyphosate + MON 4660; lactofen + atrazine + nicosulfuron + glyphosate + MON 4660; oxyfluorfen + metolachlor + isoxaflutole + glyphosate + MON 4660; oxyfluorfen + S-metolachlor + isoxaflutole + glyphosate + MON 4660; oxyfluorfen + metolachlor + mesotrione + glyphosate + MON 4660; oxyfluorfen + S-metolachlor + mesotrione + glyphosate + MON 4660; oxyfluorfen + metolachlor + atrazine + glyphosate + MON 4660; oxyfluorfen + S-metolachlor + atrazine + glyphosate + MON 4660; oxyfluorfen + metolachlor + terbuthylazine + glyphosate + MON 4660; oxyfluorfen + S-metolachlor + terbuthylazine + glyphosate + MON 4660; oxyfluorfen + atrazine + nicosulfuron + glyphosate + MON 4660; azafenidin + metolachlor + isoxaflutole + glyphosate + MON 4660; azafenidin + S-metolachlor + isoxaflutole + glyphosate + MON 4660; azafenidin + metolachlor + mesotrione + glyphosate + MON 4660; azafenidin + S-metolachlor + mesotrione + glyphosate + MON 4660; azafenidin + metolachlor + atrazine + glyphosate + MON 4660; azafenidin + S-metolachlor + atrazine + glyphosate + MON 4660; azafenidin + metolachlor + terbuthylazine + glyphosate + MON 4660; azafenidin + S-metolachlor + terbuthylazine + glyphosate + MON 4660; azafenidin + atrazine + nicosulfuron + glyphosate + MON 4660; carfentrazone-ethyl + metolachlor + isoxaflutole + glyphosate + MON 4660; carfentrazone-ethyl + S-metolachior + isoxaflutole + glyphosate + MON 4660; carfentrazone-ethyl + metolachlor + mesotrione + glyphosate + MON 4660; carfentrazone-ethyl + S-metolachlor + mesotrione + glyphosate + MON 4660; carfentrazone-ethyl + metolachlor + atrazine + glyphosate + MON 4660; carfentrazone-ethyl + S-metolachlor + atrazine + glyphosate + MON 4660; carfentrazone-ethyl + metolachlor + terbuthylazine + glyphosate + MON 4660; carfentrazone-ethyl + S-metolachlor + terbuthylazine + glyphosate + MON 4660; carfentrazone-ethyl + atrazine + nicosulfuron + glyphosate + MON 4660; compound of the formula A + metolachlor + isoxaflutole + glyphosate + MON 4660; compound of the formula A + S-metolachlor + isoxaflutole + glyphosate + MON 4660; compound of the formula A + metolachlor + mesotrione + glyphosate + MON 4660; compound of the formula A + S-metolachlor + mesotrione + glyphosate + MON 4660; compound of the formula A + metolachlor + atrazine + glyphosate + MON 4660; compound of the formula A + S-metolachlor + atrazine + glyphosate + MON 4660; compound of the formula A + metolachlor + terbuthylazine + glyphosate + MON 4660; compound of the formula A + S-metolachlor + terbuthylazine + glyphosate + MON 4660; compound of the formula A + atrazine + nicosulfuron + glyphosate + MON 4660; cinidon-ethyl + metolachlor + isoxaflutole + glyphosate + MON 4660; cinidon-ethyl + S-metolachlor + isoxaflutole + glyphosate + MON 4660; cinidon-ethyl + metolachlor + mesotrione + glyphosate + MON 4660; cinidon-ethyl + S-metolachlor + mesotrione + glyphosate + MON 4660; cinidon-ethyl + metolachlor + atrazine + glyphosate + MON 4660; cinidon-ethyl + S-metolachlor + atrazine + glyphosate + MON 4660; cinidon-ethyl + metolachlor + terbuthylazine + glyphosate + MON 4660; cinidon-ethyl + S-metolachlor + terbuthylazine + glyphosate + MON 4660; cinidon-ethyl + atrazine + nicosulfuron + glyphosate + MON 4660; flumiclorac-pentyl + metolachlor + isoxaflutole + glyphosate + MON 4660; flumiclorac-pentyl + S-metolachlor + isoxaflutole + glyphosate + MON 4660; flumiclorac-pentyl + metolachlor + mesotrione + glyphosate + MON 4660; flumiclorac-pentyl + S-metolachlor + mesotrione + glyphosate + MON 4660; flumiclorac-pentyl + metolachlor + atrazine + glyphosate + MON 4660; flumiclorac-pentyl + S-metolachlor + atrazine + glyphosate + MON 4660; flumiclorac-pentyl + metolachlor + terbuthylazine + glyphosate + MON 4660; flumiclorac-pentyl + S-metolachlor + terbuthylazine + glyphosate + MON 4660; flumiclorac-pentyl + atrazine + nicosulfuron + glyphosate + MON 4660; flumioxazin + metolachlor + isoxaflutole + glyphosate + MON 4660; flumioxazin + S-metolachlor + isoxaflutole + glyphosate + MON 4660; flumioxazin + metolachlor + mesotrione + glyphosate + MON 4660; flumioxazin + S-metolachlor + mesotrione + glyphosate + MON 4660; flumioxazin + metolachlor + atrazine + glyphosate + MON 4660; flumioxazin + S-metolachlor + atrazine + glyphosate + MON 4660; flumioxazin + metolachlor + terbuthylazine + glyphosate + MON 4660; flumioxazin + S-metolachlor + terbuthylazine + glyphosate + MON 4660; flumioxazin + atrazine + nicosulfuron + glyphosate + MON 4660; fluthiacet-methyl + metolachlor + isoxaflutole + glyphosate + MON 4660; fluthiacet-methyl + S-metolachlor + isoxaflutole + glyphosate + MON 4660; fluthiacet-methyl + metolachlor + mesotrione + glyphosate + MON 4660; fluthiacet-methyl + S-metolachlor + mesotrione + glyphosate + MON 4660; fluthiacet-methyl + metolachlor + atrazine + glyphosate + MON 4660; fluthiacet-methyl + S-metolachlor + atrazine + glyphosate + MON 4660; fluthiacet-methyl + metolachlor + terbuthylazine + glyphosate + MON 4660; fluthiacet-methyl + S-metolachlor + terbuthylazine + glyphosate + MON 4660; fluthiacet-methyl + atrazine + nicosulfuron + glyphosate + MON 4660; oxadiargyl + metolachlor + isoxaflutole + glyphosate + MON 4660; oxadiargyl + S-metolachlor + isoxaflutole + glyphosate + MON 4660; oxadiargyl + metolachlor + mesotrione + glyphosate + MON 4660; oxadiargyl + S-metolachlor + mesotrione + glyphosate + MON 4660; oxadiargyl + metolachlor + atrazine + glyphosate + MON 4660; oxadiargyl + S-metolachlor + atrazine + glyphosate + MON 4660; oxadiargyl + metolachlor + terbuthylazine + glyphosate + MON 4660; oxadiargyl + S-metolachlor + terbuthylazine + glyphosate + MON 4660; oxadiargyl + atrazine + nicosulfuron + glyphosate + MON 4660; oxadiazon + metolachlor + isoxaflutole + glyphosate + MON 4660; oxadiazon + S-metoiachlor + isoxaflutole + glyphosate + MON 4660; oxadiazon + metolachlor + mesotrione + glyphosate + MON 4660; oxadiazon + S-metotachlor + mesotrione + glyphosate + MON 4660; oxadiazon + metolachlor + atrazine + glyphosate + MON 4660; oxadiazon + S-metolachlor + atrazine + glyphosate + MON 4660; oxadiazon + metolachlor + terbuthylazine + glyphosate + MON 4660; oxadiazon + S-metolachtor + terbuthylazine + glyphosate + MON 4660; oxadiazon + atrazine + nicosulfuron + glyphosate + MON 4660; pentoxazone + metolachlor + isoxaflutole + glyphosate + MON 4660; pentoxazone + S-metolachlor + isoxaflutole + glyphosate + MON 4660; pentoxazone + metolachlor + mesotrione + glyphosate + MON 4660; pentoxazone + S-metolachlor + mesotrione + glyphosate + MON 4660; pentoxazone + metolachlor + atrazine + glyphosate + MON 4660; pentoxazone + S-metolachlor + atrazine + glyphosate + MON 4660; pentoxazone + metolachlor + terbuthylazine + glyphosate + MON 4660; pentoxazone + S-metolachlor + terbuthylazine + glyphosate + MON 4660; pentoxazone + atrazine + nicosulfuron + glyphosate + MON 4660; sulfentrazone + metolachlor + isoxaflutole + glyphosate + MON 4660; sulfentrazone + S-metolachlor + isoxaflutole + glyphosate + MON 4660; sulfentrazone + metolachlor + mesotrione + glyphosate + MON 4660; sulfentrazone + S-metolachlor + mesotrione + glyphosate + MON 4660; sulfentrazone + metolachlor + atrazine + glyphosate + MON 4660; sulfentrazone + S-metolachlor + atrazine + glyphosate + MON 4660; sulfentrazone + metolachlor + terbuthylazine + glyphosate + MON 4660; sulfentrazone + S-metolachlor + terbuthylazine + glyphosate + MON 4660; sulfentrazone + atrazine + nicosulfuron + glyphosate + MON 4660; fluazolate + metolachlor + isoxaflutole + glyphosate + MON 4660; fluazolate + S-metolachlor + isoxaflutole + glyphosate + MON 4660; fluazolate + metolachlor + mesotrione + glyphosate + MON 4660; fluazolate + S-metolachlor + mesotrione + glyphosate + MON 4660; fluazolate + metolachlor + atrazine + glyphosate + MON 4660; fluazolate + S-metolachlor + atrazine + glyphosate + MON 4660; fluazolate + metolachlor + terbuthylazine + glyphosate + MON 4660; fluazolate + S-metolachlor + terbuthylazine + glyphosate + MON 4660; fluazolate + atrazine + nicosulfuron + glyphosate + MON 4660; pyraflufen-ethyl + metolachlor + isoxaflutole + glyphosate + MON 4660; pyraflufen-ethyl + S-metolachlor + isoxaflutole + glyphosate + MON 4660; pyraflufen-ethyl + metolachlor + mesotrione + glyphosate + MON 4660; pyraflufen-ethyl + S-metolachlor + mesotrione + glyphosate + MON 4660; pyraflufen-ethyl + metolachlor + atrazine + glyphosate + MON 4660; pyraflufen-ethyl + S-metolachlor + atrazine + glyphosate + MON 4660; pyraflufen-ethyl + metolachlor + terbuthylazine + glyphosate + MON 4660; pyraflufen-ethyl + S-metolachtor + terbuthylazine + glyphosate + MON 4660; pyraflufen-ethyl + atrazine + nicosulfuron + glyphosate + MON 4660; flumipropyn + metolachlor + isoxaflutole + glyphosate + MON 4660; flumipropyn + S-metolachlor + isoxaflutole + glyphosate + MON 4660; flumipropyn + metolachlor + mesotrione + glyphosate + MON 4660; flumipropyn + S-metolachlor + mesotrione + glyphosate + MON 4660; flumipropyn + metolachlor + atrazine + glyphosate + MON 4660; flumipropyn + S-metolachlor + atrazine + glyphosate + MON 4660; flumipropyn + metolachlor + terbuthylazine + glyphosate + MON 4660; flumipropyn + S-metolachlor + terbuthylazine + glyphosate + MON 4660; flumipropyn + atrazine + nicosulfuron + glyphosate + MON 4660; flupropacil + metolachlor + isoxaflutole + glyphosate + MON 4660; flupropacil + S-metolachlor + isoxaflutole + glyphosate + MON 4660; flupropacil + metolachlor + mesotrione + glyphosate + MON 4660; flupropacil + S-metolachlor + mesotrione + glyphosate + MON 4660; flupropacil + metolachlor + atrazine + glyphosate + MON 4660; flupropacil + S-metolachlor + atrazine + glyphosate + MON 4660; flupropacil + metolachlor + terbuthylazine + glyphosate + MON 4660; flupropacil + S-metolachlor + terbuthylazine + glyphosate + MON 4660; flupropacil + atrazine + nicosulfuron + glyphosate + MON 4660; nipyraclofen + metolachlor + isoxaflutole + glyphosate + MON 4660; nipyraclofen + S-metolachlor + isoxaflutole + glyphosate + MON 4660; nipyraclofen + metolachlor + mesotrione + glyphosate + MON 4660; nipyraclofen + S-metolachlor + mesotrione + glyphosate + MON 4660; nipyraclofen + metolachlor + atrazine + glyphosate + MON 4660; nipyraclofen + S-metolachlor + atrazine + glyphosate + MON 4660; nipyradofen + metolachlor + terbuthylazine + glyphosate + MON 4660; nipyraclofen + S-metolachlor + terbuthylazine + glyphosate + MON 4660; nipyraclofen + atrazine + nicosulfuron + glyphosate + MON 4660; benzfendizone + metolachlor + isoxaflutole + glyphosate + MON 4660; benzfendizone + S-metolachlor + isoxaflutole + glyphosate + MON 4660; benzfendizone + metolachlor + mesotrione + glyphosate + MON 4660; benzfendizone + S-metolachlor + mesotrione + glyphosate + MON 4660; benzfendizone + metolachlor + atrazine + glyphosate + MON 4660; benzfendizone + S-metolachlor + atrazine + glyphosate + MON 4660; benzfendizone + metolachlor + terbuthylazine + glyphosate + MON 4660; benzfendizone + S-metolachlor + terbuthylazine + glyphosate + MON 4660; benzfendizone + atrazine + nicosulfuron + glyphosate + MON 4660; thidiazimin + metolachlor + isoxaflutole + glyphosate + MON 4660; thidiazimin + S-metolachlor + isoxaflutole + glyphosate + MON 4660; thidiazimin + metolachlor + mesotrione + glyphosate + MON 4660; thidiazimin + S-metolachlor + mesotrione + glyphosate + MON 4660; thidiazimin + metolachlor + atrazine + glyphosate + MON 4660; thidiazimin + S-metolachlor + atrazine + glyphosate + MON 4660; thidiazimin + metolachlor + terbuthylazine + glyphosate + MON 4660; thidiazimin + S-metolachlor + terbuthylazine + glyphosate + MON 4660; and thidiazimin + atrazine + nicosulfuron + glyphosate + MON 4660.

Acifluorfen + metolachlor + isoxaflutole + glyphosate + FLURAZOLE; acifluorfen + S-metolachlor + isoxaflutole + glyphosate + FLURAZOLE; acifluorfen + metolachlor + mesotrione + glyphosate + FLURAZOLE; acifluorfen + S-metolachlor + mesotrione + glyphosate + FLURAZOLE; acifluorfen + metolachlor + atrazine + glyphosate + FLURAZOLE; acifluorfen + S-metolachlor + atrazine + glyphosate + FLURAZOLE; acifluorfen + metolachlor + terbuthylazine + glyphosate + FLURAZOLE; acifluorfen + S-metolachlor + terbuthylazine + glyphosate + FLURAZOLE; acifluorfen + atrazine + nicosulfuron + glyphosate + FLURAZOLE; aclonifen + metolachlor + isoxaflutole + glyphosate + FLURAZOLE; aclonifen + S-metolachlor + isoxaflutole + glyphosate + FLURAZOLE; aclonifen + metolachlor + mesotrione + glyphosate + FLURAZOLE; aclonifen + S-metolachlor + mesotrione + glyphosate + FLURAZOLE; aclonifen + metolachlor + atrazine + glyphosate + FLURAZOLE; aclonifen + S-metolachlor + atrazine + glyphosate + FLURAZOLE; aclonifen + metolachlor + terbuthylazine + glyphosate + FLURAZOLE; aclonifen + S-metolachlor + terbuthylazine + glyphosate + FLURAZOLE; aclonifen + atrazine + nicosulfuron + glyphosate + FLURAZOLE; bifenox + metolachlor + isoxaflutole + glyphosate + FLURAZOLE; bifenox + S-metolachlor + isoxaflutole + glyphosate + FLURAZOLE; bifenox + metolachlor + mesotrione + glyphosate + FLURAZOLE; bifenox + S-metolachlor + mesotrione + glyphosate + FLURAZOLE; bifenox + metolachior + atrazine + glyphosate + FLURAZOLE; bifenox + S-metolachlor + atrazine + glyphosate + FLURAZOLE; bifenox + metolachlor + terbuthylazine + glyphosate + FLURAZOLE; bifenox + S-metolachlor + terbuthylazine + glyphosate + FLURAZOLE; bifenox + atrazine + nicosulfuron + glyphosate + FLURAZOLE; chlornitrofen + metolachlor + isoxaflutole + glyphosate + FLURAZOLE; chlornitrofen + S-metolachlor + isoxaflutole + glyphosate + FLURAZOLE; chlornitrofen + metolachlor + mesotrione + glyphosate + FLURAZOLE; chlornitrofen + S-metolachlor + mesotrione + glyphosate + FLURAZOLE; chlornitrofen + metolachlor + atrazine + glyphosate + FLURAZOLE; chlornitrofen + S-metolachlor + atrazine + glyphosate + FLURAZOLE; chlornitrofen + metolachlor + terbuthylazine + glyphosate + FLURAZOLE; chlornitrofen + S-metolachlor + terbuthylazine + glyphosate + FLURAZOLE; chlornitrofen + atrazine + nicosulfuron + glyphosate + FLURAZOLE; ethoxyfen + metolachlor + isoxaflutole + glyphosate + FLURAZOLE; ethoxyfen + S-metolachlor + isoxaflutole + glyphosate + FLURAZOLE; ethoxyfen + metolachlor + mesotrione + glyphosate + FLURAZOLE; ethoxyfen + S-metolachlor + mesotrione + glyphosate + FLURAZOLE; ethoxyfen + metolachlor + atrazine + glyphosate + FLURAZOLE; ethoxyfen + S-metolachlor + atrazine + glyphosate + FLURAZOLE; ethoxyfen + metolachlor + terbuthylazine + glyphosate + FLURAZOLE; ethoxyfen + S-metolachlor + terbuthylazine + glyphosate + FLURAZOLE; ethoxyfen + atrazine + nicosulfuron + glyphosate + FLURAZOLE; fluoroglycofen + metolachlor + isoxaflutole + glyphosate + FLURAZOLE; fluoroglycofen + S-metolachlor + isoxaflutole + glyphosate + FLURAZOLE; fluoroglycofen + metolachlor + mesotrione + glyphosate + FLURAZOLE; fluoroglycofen + S-metolachlor + mesotrione + glyphosate + FLURAZOLE; fluoroglycofen + metolachlor + atrazine + glyphosate + FLURAZOLE; fluoroglycofen + S-metolachlor + atrazine + glyphosate + FLURAZOLE; fluoroglycofen + metolachlor + terbuthylazine + glyphosate + FLURAZOLE; fluoroglycofen + S-metolachlor + terbuthylazine + glyphosate + FLURAZOLE; fluoroglycofen + atrazine + nicosulfuron + glyphosate + FLURAZOLE; fomesafen + metolachlor + isoxaflutole + glyphosate + FLURAZOLE; fomesafen + S-metolachlor + isoxaflutole + glyphosate + FLURAZOLE; fomesafen + metolachlor + mesotrione + glyphosate + FLURAZOLE; fomesafen + S-metolachlor + mesotrione + glyphosate + FLURAZOLE; fomesafen + metolachlor + atrazine + glyphosate + FLURAZOLE; fomesafen + S-metolachlor + atrazine + glyphosate + FLURAZOLE; fomesafen + metolachlor + terbuthylazine + glyphosate + FLURAZOLE; fomesafen + S-metolachlor + terbuthylazine + glyphosate + FLURAZOLE; fomesafen + atrazine + nicosulfuron + glyphosate + FLURAZOLE; lactofen + metolachlor + isoxaflutole + glyphosate + FLURAZOLE; lactofen + S-metolachlor + isoxaflutole + glyphosate + FLURAZOLE; lactofen + metolachlor + mesotrione + glyphosate + FLURAZOLE; lactofen + S-metolachlor + mesotrione + glyphosate + FLURAZOLE; lactofen + metolachlor + atrazine + glyphosate + FLURAZOLE; lactofen + S-metolachlor + atrazine + glyphosate + FLURAZOLE; lactofen + metolachlor + terbuthylazine + glyphosate + FLURAZOLE; lactofen + S-metolachlor + terbuthylazine + glyphosate + FLURAZOLE; lactofen + atrazine + nicosulfuron + glyphosate + FLURAZOLE; oxyfluorfen + metolachlor + isoxaflutole + glyphosate + FLURAZOLE; oxyfluorfen + S-metolachlor + isoxaflutole + glyphosate + FLURAZOLE; oxyfluorfen + metolachlor + mesotrione + glyphosate + FLURAZOLE; oxyfluorfen + S-metolachlor + mesotrione + glyphosate + FLURAZOLE; oxyfluorfen + metolachlor + atrazine + glyphosate + FLURAZOLE; oxyfluorfen + S-metolachlor + atrazine + glyphosate + FLURAZOLE; oxyfluorfen + metolachlor + terbuthylazine + glyphosate + FLURAZOLE; oxyfluorfen + S-metolachlor + terbuthylazine + glyphosate + FLURAZOLE; oxyfluorfen + atrazine + nicosulfuron + glyphosate + FLURAZOLE; azafenidin + metolachlor + isoxaflutole + glyphosate + FLURAZOLE; azafenidin + S-metolachlor + isoxaflutole + glyphosate + FLURAZOLE; azafenidin + metolachlor + mesotrione + glyphosate + FLURAZOLE; azafenidin + S-metolachlor + mesotrione + glyphosate + FLURAZOLE; azafenidin + metolachlor + atrazine + glyphosate + FLURAZOLE; azafenidin + S-metolachlor + atrazine + glyphosate + FLURAZOLE; azafenidin + metolachlor + terbuthylazine + glyphosate + FLURAZOLE; azafenidin + S-metolachlor + terbuthylazine + glyphosate + FLURAZOLE; azafenidin + atrazine + nicosulfuron + glyphosate + FLURAZOLE; carfentrazone-ethyl + metolachlor + isoxaflutole + glyphosate + FLURAZOLE; carfentrazone-ethyl + S-metolachlor + isoxaflutole + glyphosate + FLURAZOLE; carfentrazone-ethyl + metolachlor + mesotrione + glyphosate + FLURAZOLE; carfentrazone-ethyl + S-metolachlor + mesotrione + glyphosate + FLURAZOLE; carfentrazone-ethyl + metolachlor + atrazine + glyphosate + FLURAZOLE; carfentrazone-ethyl + S-metolachlor + atrazine + glyphosate + FLURAZOLE; carfentrazone-ethyl + metolachlor + terbuthylazine + glyphosate + FLURAZOLE; carfentrazone-ethyl + S-metolachlor + terbuthylazine + glyphosate + FLURAZOLE; carfentrazone-ethyl + atrazine + nicosulfuron + glyphosate + FLURAZOLE; compound of the formula A + metolachlor + isoxaflutole + glyphosate + FLURAZOLE; compound of the formula A + S-metolachlor + isoxaflutole + glyphosate + FLURAZOLE; compound of the formula A + metolachlor + mesotrione + glyphosate + FLURAZOLE; compound of the formula A + S-metolachlor + mesotrione + glyphosate + FLURAZOLE; compound of the formula A + metolachlor + atrazine + glyphosate + FLURAZOLE; compound of the formula A + S-metolachlor + atrazine + glyphosate + FLURAZOLE; compound of the formula A + metolachlor + terbuthylazine + glyphosate + FLURAZOLE; compound of the formula A + S-metolachlor + terbuthylazine + glyphosate + FLURAZOLE; compound of the formula A + atrazine + nicosulfuron + glyphosate + FLURAZOLE; cinidon-ethyl + metolachlor + isoxaflutole + glyphosate + FLURAZOLE; cinidon-ethyl + S-metolachlor + isoxaflutole + glyphosate + FLURAZOLE; cinidon-ethyl + metolachlor + mesotrione + glyphosate + FLURAZOLE; cinidon-ethyl + S-metolachlor + mesotrione + glyphosate + FLURAZOLE; cinidon-ethyl + metolachlor + atrazine + glyphosate + FLURAZOLE; cinidon-ethyl + S-metolachlor + atrazine + glyphosate + FLURAZOLE; cinidon-ethyl + metolachlor + terbuthylazine + glyphosate + FLURAZOLE; cinidon-ethyl + S-metolachlor + terbuthylazine + glyphosate + FLURAZOLE; cinidon-ethyl + atrazine + nicosulfuron + glyphosate + FLURAZOLE; flumiclorac-pentyl + metolachlor + isoxaflutole + glyphosate + FLURAZOLE; flumiclorac-pentyl + S-metolachlor + isoxaflutole + glyphosate + FLURAZOLE; flumiciorac-pentyl + metolachlor + mesotrione + glyphosate + FLURAZOLE; flumiclorac-pentyl + S-metolachlor + mesotrione + glyphosate + FLURAZOLE; flumiclorac-pentyl + metolachlor + atrazine + glyphosate + FLURAZOLE; flumiclorac-pentyl + S-metolachlor + atrazine + glyphosate + FLURAZOLE; flumiclorac-pentyl + metolachlor + terbuthylazine + glyphosate + FLURAZOLE; flumiclorac-pentyl + S-metolachlor + terbuthylazine + glyphosate + FLURAZOLE; flumiclorac-pentyl + atrazine + nicosulfuron + glyphosate + FLURAZOLE; flumioxazin + metolachlor + isoxaflutole + glyphosate + FLURAZOLE; flumioxazin + S-metolachlor + isoxaflutole + glyphosate + FLURAZOLE; flumioxazin + metolachlor + mesotrione + glyphosate + FLURAZOLE; flumioxazin + S-metolachlor + mesotrione + glyphosate + FLURAZOLE; flumioxazin + metolachlor + atrazine + glyphosate + FLURAZOLE; flumioxazin + S-metolachlor + atrazine + glyphosate + FLURAZOLE; flumioxazin + metolachlor + terbuthylazine + glyphosate + FLURAZOLE; flumioxazin + S-metolachlor + terbuthylazine + glyphosate + FLURAZOLE; flumioxazin + atrazine + nicosulfuron + glyphosate + FLURAZOLE; fluthiacet-methyl + metolachlor + isoxaflutole + glyphosate + FLURAZOLE; fluthiacet-methyl + S-metolachlor + isoxaflutole + glyphosate + FLURAZOLE; fluthiacet-methyl + metolachlor + mesotrione + glyphosate + FLURAZOLE; fluthiacet-methyl + S-metolachlor + mesotrione + glyphosate + FLURAZOLE; fluthiacet-methyl + metolachlor + atrazine + glyphosate + FLURAZOLE; fluthiacet-methyl + S-metolachlor + atrazine + glyphosate + FLURAZOLE; fluthiacet-methyl + metolachlor + terbuthylazine + glyphosate + FLURAZOLE; fluthiacet-methyl + S-metolachlor + terbuthylazine + glyphosate + FLURAZOLE; fluthiacet-methyl + atrazine + nicosulfuron + glyphosate + FLURAZOLE; oxadiargyl + metolachlor + isoxaflutole + glyphosate + FLURAZOLE; oxadiargyl + S-metolachlor + isoxaflutole + glyphosate + FLURAZOLE; oxadiargyl + metolachlor + mesotrione + glyphosate + FLURAZOLE; oxadiargyl + S-metolachlor + mesotrione + glyphosate + FLURAZOLE; oxadiargyl + metolachlor + atrazine + glyphosate + FLURAZOLE; oxadiargyl + S-metolachlor + atrazine + glyphosate + FLURAZOLE; oxadiargyl + metolachlor + terbuthylazine + glyphosate + FLURAZOLE; oxadiargyl + S-metolachlor + terbuthylazine + glyphosate + FLURAZOLE; oxadiargyl + atrazine + nicosulfuron + glyphosate + FLURAZOLE; oxadiazon + metolachlor + isoxaflutole + glyphosate + FLURAZOLE; oxadiazon + S-metolachlor + isoxaflutole + glyphosate + FLURAZOLE; oxadiazon + metolachlor + mesotrione + glyphosate + FLURAZOLE; oxadiazon + S-metolachlor + mesotrione + glyphosate + FLURAZOLE; oxadiazon + metolachlor + atrazine + glyphosate + FLURAZOLE; oxadiazon + S-metolachlor + atrazine + glyphosate + FLURAZOLE; oxadiazon + metolachlor + terbuthylazine + glyphosate + FLURAZOLE; oxadiazon + S-metolachlor + terbuthylazine + glyphosate + FLURAZOLE; oxadiazon + atrazine + nicosulfuron + glyphosate + FLURAZOLE; pentoxazone + metolachlor + isoxaflutole + glyphosate + FLURAZOLE; pentoxazone + S-metolachlor + isoxaflutole + glyphosate + FLURAZOLE; pentoxazone + metolachlor + mesotrione + glyphosate + FLURAZOLE; pentoxazone + S-metolachlor + mesotrione + glyphosate + FLURAZOLE; pentoxazone + metolachlor + atrazine + glyphosate + FLURAZOLE; pentoxazone + S-metolachlor + atrazine + glyphosate + FLURAZOLE; pentoxazone + metolachlor + terbuthylazine + glyphosate + FLURAZOLE; pentoxazone + S-metolachlor + terbuthylazine + glyphosate + FLURAZOLE; pentoxazone + atrazine + nicosulfuron + glyphosate + FLURAZOLE; sulfentrazone + metolachlor + isoxaflutole + glyphosate + FLURAZOLE; sulfentrazone + S-metolachlor + isoxaflutole + glyphosate + FLURAZOLE; sulfentrazone + metolachlor + mesotrione + glyphosate + FLURAZOLE; sulfentrazone + S-metolachlor + mesotrione + glyphosate + FLURAZOLE; sulfentrazone + metolachlor + atrazine + glyphosate + FLURAZOLE; sulfentrazone + S-metolachlor + atrazine + glyphosate + FLURAZOLE; sulfentrazone + metolachlor + terbuthylazine + glyphosate + FLURAZOLE; sulfentrazone + S-metolachlor + terbuthylazine + glyphosate + FLURAZOLE; sulfentrazone + atrazine + nicosulfuron + glyphosate + FLURAZOLE; fluazolate + metolachlor + isoxaflutole + glyphosate + FLURAZOLE; fluazolate + S-metolachlor + isoxaflutole + glyphosate + FLURAZOLE; fluazolate + metolachlor + mesotrione + glyphosate + FLURAZOLE; fluazolate + S-metolachlor + mesotrione + glyphosate + FLURAZOLE; fluazolate + metolachlor + atrazine + glyphosate + FLURAZOLE; fluazolate + S-metolachlor + atrazine + glyphosate + FLURAZOLE; fluazolate + metolachlor + terbuthylazine + glyphosate + FLURAZOLE; fluazolate + S-metolachlor + terbuthylazine + glyphosate + FLURAZOLE; fluazolate + atrazine + nicosulfuron + glyphosate + FLURAZOLE; pyraflufen-ethyl + metolachlor + isoxaflutole + glyphosate + FLURAZOLE; pyraflufen-ethyl + S-metolachlor + isoxaflutole + glyphosate + FLURAZOLE; pyraflufen-ethyl + metolachlor + mesotrione + glyphosate + FLURAZOLE; pyraflufen-ethyl + S-metolachlor + mesotrione + glyphosate + FLURAZOLE; pyraflufen-ethyl + metolachlor + atrazine + glyphosate + FLURAZOLE; pyraflufen-ethyl + S-metolachlor + atrazine + glyphosate + FLURAZOLE; pyraflufen-ethyl + metolachlor + terbuthylazine + glyphosate + FLURAZOLE; pyraflufen-ethyl + S-metolachlor + terbuthylazine + glyphosate + FLURAZOLE; pyraflufen-ethyl + atrazine + nicosulfuron + glyphosate + FLURAZOLE; flumipropyn + metolachlor + isoxaflutole + glyphosate + FLURAZOLE; flumipropyn + S-metolachlor + isoxaflutole + glyphosate + FLURAZOLE; flumipropyn + metolachlor + mesotrione + glyphosate + FLURAZOLE; flumipropyn + S-metolachlor + mesotrione + glyphosate + FLURAZOLE; flumipropyn + metolachlor + atrazine + glyphosate + FLURAZOLE; flumipropyn + S-metolachlor + atrazine + glyphosate + FLURAZOLE; flumipropyn + metolachlor + terbuthylazine + glyphosate + FLURAZOLE; flumipropyn + S-metolachlor + terbuthylazine + glyphosate + FLURAZOLE; flumipropyn + atrazine + nicosulfuron + glyphosate + FLURAZOLE; flupropacil + metolachlor + isoxaflutole + glyphosate + FLURAZOLE; flupropacil + S-metolachlor + isoxaflutole + glyphosate + FLURAZOLE; flupropacil + metolachlor + mesotrione + glyphosate + FLURAZOLE; flupropacil + S-metolachlor + mesotrione + glyphosate + FLURAZOLE; flupropacil + metolachlor + atrazine + glyphosate + FLURAZOLE; flupropacil + S-metolachlor + atrazine + glyphosate + FLURAZOLE; flupropacil + metolachlor + terbuthylazine + glyphosate + FLURAZOLE; flupropacil + S-metolachlor + terbuthylazine + glyphosate + FLURAZOLE; flupropacil + atrazine + nicosulfuron + glyphosate + FLURAZOLE; nipyraclofen + metolachlor + isoxaflutole + glyphosate + FLURAZOLE; nipyraclofen + S-metolachlor + isoxaflutole + glyphosate + FLURAZOLE; nipyraclofen + metolachlor + mesotrione + glyphosate + FLURAZOLE; nipyraclofen + S-metolachlor + mesotrione + glyphosate + FLURAZOLE; nipyraclofen + metolachlor + atrazine + glyphosate + FLURAZOLE; nipyradofen + S-metolachlor + atrazine + glyphosate + FLURAZOLE; nipyraclofen + metolachfor + terbuthylazine + glyphosate + FLURAZOLE; nipyraclofen + S-metolachlor + terbuthylazine + glyphosate + FLURAZOLE; nipyradofen + atrazine + nicosulfuron + glyphosate + FLURAZOLE; benzfendizone + metolachlor + isoxaflutole + glyphosate + FLURAZOLE; benzfendizone + S-metolachlor + isoxaflutole + glyphosate + FLURAZOLE; benzfendizone + metolachlor + mesotrione + glyphosate + FLURAZOLE; benzfendizone + S-metolachlor + mesotrione + glyphosate + FLURAZOLE; benzfendizone + metolachlor + atrazine + glyphosate + FLURAZOLE; benzfendizone + S-metolachlor + atrazine + glyphosate + FLURAZOLE; benzfendizone + metolachlor + terbuthylazine + glyphosate + FLURAZOLE; benzfendizone + S-metolachlor + terbuthylazine + glyphosate + FLURAZOLE; benzfendizone + atrazine + nicosulfuron + glyphosate + FLURAZOLE; thidiazimin + metolachlor + isoxaflutole + glyphosate + FLURAZOLE; thidiazimin + S-metolachlor + isoxaflutole + glyphosate + FLURAZOLE; thidiazimin + metolachlor + mesotrione + glyphosate + FLURAZOLE; thidiazimin + S-metolachlor + mesotrione + glyphosate + FLURAZOLE; thidiazimin + metolachlor + atrazine + glyphosate + FLURAZOLE; thidiazimin + S-metolachlor + atrazine + glyphosate + FLURAZOLE; thidiazimin + metolachlor + terbuthylazine + glyphosate + FLURAZOLE; thidiazimin + S-metolachlor + terbuthylazine + glyphosate + FLURAZOLE; and thidiazimin + atrazine + nicosulfuron + glyphosate + FLURAZOLE.

Acifluorfen + metolachlor + isoxaflutole + glyphosate + DICHLORMID; acifluorfen + S-metolachlor + isoxaflutole + glyphosate + DICHLORMID; acifluorfen + metolachlor + mesotrione + glyphosate + DICHLORMID; acifluorfen + S-metolachlor + mesotrione + glyphosate + DICHLORMID; acifluorfen + metolachlor + atrazine + glyphosate + DICHLORMID; acifluorfen + S-metolachlor + atrazine + glyphosate + DICHLORMID; acifluorfen + metolachlor + terbuthylazine + glyphosate + DICHLORMID; acifluorfen + S-metolachlor + terbuthylazine + glyphosate + DICHLORMID; acifluorfen + atrazine + nicosulfuron + glyphosate + DICHLORMID; aclonifen + metolachlor + isoxaflutole + glyphosate + DICHLORMID; aclonifen + S-metolachlor + isoxaflutole + glyphosate + DICHLORMID; aclonifen + metolachlor + mesotrione + glyphosate + DICHLORMID; aclonifen + S-metolachlor + mesotrione + DICHLORMID; aclonifen + metolachlor + atrazine + glyphosate + DICHLORMID; aclonifen + S-metolachlor + atrazine + glyphosate + DICHLORMID; aclonifen + metolachlor + terbuthylazine + glyphosate + DICHLORMID; aclonifen + S-metolachlor + terbuthylazine + glyphosate + DICHLORMID; aclonifen + atrazine + nicosulfuron + glyphosate + DICHLORMID; bifenox + metolachlor + isoxaflutole + glyphosate + DICHLORMID; bifenox + S-metolachlor + isoxaflutole + glyphosate + DICHLORMID; bifenox + metolachlor + mesotrione + glyphosate + DICHLORMID; bifenox + S-metolachlor + mesotrione + glyphosate + DICHLORMID; bifenox + metolachlor + atrazine + glyphosate + DICHLORMID; bifenox + S-metolachlor + atrazine + glyphosate + DICHLORMID; bifenox + metolachlor + terbuthylazine + glyphosate + DICHLORMID; bifenox + S-metolachlor + terbuthylazine + glyphosate + DICHLORMID; bifenox + atrazine + nicosulfuron + glyphosate + DICHLORMID; chlornitrofen + metolachlor + isoxaflutole + glyphosate + DICHLORMID; chlornitrofen + S-metolachlor + isoxaflutole + glyphosate + DICHLORMID; chlornitrofen + metolachlor + mesotrione + glyphosate + DICHLORMID; chlornitrofen + S-metolachlor + mesotrione + glyphosate + DICHLORMID; chlornitrofen + metolachlor + atrazine + glyphosate + DICHLORMID; chlornitrofen + S-metolachlor + atrazine + glyphosate + DICHLORMID; chlornitrofen + metolachlor + terbuthylazine + glyphosate + DICHLORMID; chlornitrofen + S-metolachlor + terbuthylazine + glyphosate + DICHLORMID; chlornitrofen + atrazine + nicosulfuron + glyphosate + DICHLORMID; ethoxyfen + metolachlor + isoxaflutole + glyphosate + DICHLORMID; ethoxyfen + S-metolachlor + isoxaflutole + glyphosate + DICHLORMID; ethoxyfen + metolachlor + mesotrione + glyphosate + DICHLORMID; ethoxyfen + S-metolachlor + mesotrione + glyphosate + DICHLORMID; ethoxyfen + metolachlor + atrazine + glyphosate + DICHLORMID; ethoxyfen + S-metolachlor + atrazine + glyphosate + DICHLORMID; ethoxyfen + metolachlor + terbuthylazine + glyphosate + DICHLORMID; ethoxyfen + S-metolachlor + terbuthylazine + glyphosate + DICHLORMID; ethoxyfen + atrazine + nicosulfuron + glyphosate + DICHLORMID; fluoroglycofen + metolachlor + isoxaflutole + glyphosate + DICHLORMID; fluoroglycofen + S-metolachlor + isoxaflutole + glyphosate + DICHLORMID; fluoroglycofen + metolachlor + mesotrione + glyphosate + DICHLORMID; fluoroglycofen + S-metolachlor + mesotrione + glyphosate + DICHLORMID; fluoroglycofen + metolachlor + atrazine + glyphosate + DICHLORMID; fluoroglycofen + S-metolachlor + atrazine + glyphosate + DICHLORMID; fluoroglycofen + metolachlor + terbuthylazine + glyphosate + DICHLORMID; fluoroglycofen + S-metolachlor + terbuthylazine + glyphosate + DICHLORMID; fluoroglycofen + atrazine + nicosulfuron + glyphosate + DICHLORMID; fomesafen + metolachlor + isoxaflutole + glyphosate + DICHLORMID; fomesafen + S-metolachlor + isoxaflutole + glyphosate + DICHLORMID; fomesafen + metolachlor + mesotrione + glyphosate + DICHLORMID; fomesafen + S-metolachlor + mesotrione + glyphosate + DICHLORMID; fomesafen + metolachlor + atrazine + glyphosate + DICHLORMID; fomesafen + S-metolachlor + atrazine + glyphosate + DICHLORMID; fomesafen + metolachlor + terbuthylazine + glyphosate + DICHLORMID; fomesafen + S-metolachlor + terbuthylazine + glyphosate + DICHLORMID; fomesafen + atrazine + nicosulfuron + glyphosate + DICHLORMID; lactofen + metolachlor + isoxaflutole + glyphosate + DICHLORMID; lactofen + S-metolachlor + isoxaflutole + glyphosate + DICHLORMID; lactofen + metolachior + mesotrione + glyphosate + DICHLORMID; lactofen + S-metolachlor + mesotrione + glyphosate + DICHLORMID; lactofen + metolachlor + atrazine + glyphosate + DICHLORMID; lactofen + S-metolachlor + atrazine + glyphosate + DICHLORMID; lactofen + metolachlor + terbuthylazine + glyphosate + DICHLORMID; lactofen + S-metolachlor + terbuthylazine + glyphosate + DICHLORMID; lactofen + atrazine + nicosulfuron + glyphosate + DICHLORMID; oxyfluorfen + metolachlor + isoxaflutole + glyphosate + DICHLORMID; oxyfluorfen + S-metolachlor + isoxaflutole + glyphosate + DICHLORMID; oxyfluorfen + metolachlor + mesotrione + glyphosate + DICHLORMID; oxyfluorfen + S-metolachlor + mesotrione + glyphosate + DICHLORMID; oxyfluorfen + metolachlor + atrazine + glyphosate + DICHLORMID; oxyfluorfen + S-metolachlor + atrazine + glyphosate + DICHLORMID; oxyfluorfen + metolachlor + terbuthylazine + glyphosate + DICHLORMID; oxyfluorfen + S-metolachlor + terbuthylazine + glyphosate + DICHLORMID; oxyfluorfen + atrazine + nicosulfuron + glyphosate + DICHLORMID; azafenidin + metolachlor + isoxaflutole + glyphosate + DICHLORMID; azafenidin + S-metolachlor + isoxaflutole + glyphosate + DICHLORMID; azafenidin + metolachlor + mesotrione + glyphosate + DICHLORMID; azafenidin + S-metolachlor + mesotrione + glyphosate + DICHLORMID; azafenidin + metolachlor + atrazine + glyphosate + DICHLORMID; azafenidin + S-metolachlor + atrazine + glyphosate + DICHLORMID; azafenidin + metolachlor + terbuthylazine + glyphosate + DICHLORMID; azafenidin + S-metolachlor + terbuthylazine + glyphosate + DICHLORMID; azafenidin + atrazine + nicosulfuron + glyphosate + DICHLORMID; carfentrazone-ethyl + metolachlor + isoxaflutole + glyphosate + DICHLORMID; carfentrazone-ethyl + S-metolachlor + isoxaflutole + glyphosate + DICHLORMID; carfentrazone-ethyl + metolachlor + mesotrione + glyphosate + DICHLORMID; carfentrazone-ethyl + S-metolachlor + mesotrione + glyphosate + DICHLORMID; carfentrazone-ethyl + metolachlor + atrazine + glyphosate + DICHLORMID; carfentrazone-ethyl + S-metolachlor + atrazine + glyphosate + DICHLORMID; carfentrazone-ethyl + metolachlor + terbuthylazine + glyphosate + DICHLORMID; carfentrazone-ethyl + S-metolachlor + terbuthylazine + glyphosate + DICHLORMID; carfentrazone-ethyl + atrazine + nicosulfuron + DICHLORMID; compound of the formula A + metolachlor + isoxaflutole + glyphosate + DICHLORMID; compound of the formula A + S-metolachlor + isoxaflutole + glyphosate + DICHLORMID; compound of the formula A + metolachlor + mesotrione + glyphosate + DICHLORMID; compound of the formula A + S-metolachlor + mesotrione + glyphosate + DICHLORMID; compound of the formula A + metolachlor + atrazine + glyphosate + DICHLORMID; compound of the formula A + S-metolachlor + atrazine + glyphosate + DICHLORMID; compound of the formula A + metolachlor + terbuthylazine + glyphosate + DICHLORMID; compound of the formula A + S-metolachlor + terbuthylazine + glyphosate + DICHLORMID; compound of the formula A + atrazine + nicosulfuron + glyphosate + DICHLORMID; cinidon-ethyl + metolachlor + isoxaflutole + glyphosate + DICHLORMID; cinidon-ethyl + S-metolachlor + isoxaflutole + glyphosate + DICHLORMID; cinidon-ethyl + metolachlor + mesotrione + glyphosate + DICHLORMID; cinidon-ethyl + S-metolachlor + mesotrione + glyphosate + DICHLORMID; cinidon-ethyl + metolachlor + atrazine + glyphosate + DICHLORMID; cinidon-ethyl + S-metolachlor + atrazine + glyphosate + DICHLORMID; cinidon-ethyl + metolachlor + terbuthylazine + glyphosate + DICHLORMID; cinidon-ethyl + S-metolachlor + terbuthylazine + glyphosate + DICHLORMID; cinidon-ethyl + atrazine + nicosulfuron + glyphosate + DICHLORMID; flumiclorac-pentyl + metolachlor + isoxaflutole + DICHLORMID; flumiclorac-pentyl + S-metolachlor + isoxaflutole + glyphosate + DICHLORMID; flumiclorac-pentyl + metolachlor + mesotrione + glyphosate + DICHLORMID; flumiclorac-pentyl + S-metolachlor + mesotrione + glyphosate + DICHLORMID; flumiclorac-pentyl + metolachlor + atrazine + glyphosate + DICHLORMID; flumiclorac-pentyl + S-metolachlor + atrazine + glyphosate + DICHLORMID; flumiclorac-pentyl + metolachlor + terbuthylazine + glyphosate + DICHLORMID; flumiclorac-pentyl + S-metolachlor + terbuthylazine + glyphosate + DICHLORMID; flumiclorac-pentyl + atrazine + nicosulfuron + glyphosate + DICHLORMID; flumioxazin + metolachlor + isoxaflutole + glyphosate + DICHLORMID; flumioxazin + S-metolachlor + isoxaflutole + glyphosate + DICHLORMID; flumioxazin + metolachlor + mesotrione + glyphosate + DICHLORMID; flumioxazin + S-metolachlor + mesotrione + glyphosate + DICHLORMID; flumioxazin + metolachlor + atrazine + glyphosate + DICHLORMID; flumioxazin + S-metolachlor + atrazine + glyphosate + DICHLORMID; flumioxazin + metolachlor + terbuthylazine + glyphosate + DICHLORMID; flumioxazin + S-metolachlor + terbuthylazine + glyphosate + DICHLORMID; flumioxazin + atrazine + nicosulfuron + glyphosate + DICHLORMID; fluthiacet-methyl + metolachlor + isoxaflutole + glyphosate + DICHLORMID; fluthiacet-methyl + S-metolachlor + isoxaflutole + glyphosate + DICHLORMID; fluthiacet-methyl + metolachlor + mesotrione + glyphosate + DICHLORMID; fluthiacet-methyl + S-metolachlor + mesotrione + glyphosate + DICHLORMID; fluthiacet-methyl + metolachlor + atrazine + glyphosate + DICHLORMID; fluthiacet-methyl + S-metolachlor + atrazine + glyphosate + DICHLORMID; fluthiacet-methyl + metolachlor + terbuthylazine + glyphosate + DICHLORMID; fluthiacet-methyl + S-metolachlor + terbuthylazine + glyphosate + DICHLORMID; fluthiacet-methyl + atrazine + nicosulfuron + glyphosate + DICHLORMID; oxadiargyl + metolachlor + isoxaflutole + glyphosate + DICHLORMID; oxadiargyl + S-metolachlor + isoxaflutole + glyphosate + DICHLORMID; oxadiargyl + metolachlor + mesotrione + glyphosate + DICHLORMID; oxadiargyl + S-metolachlor + mesotrione + glyphosate + DICHLORMID; oxadiargyl + metolachlor + atrazine + glyphosate + DICHLORMID; oxadiargyl + S-metolachlor + atrazine + glyphosate + DICHLORMID; oxadiargyl + metolachlor + terbuthylazine + glyphosate + DICHLORMID; oxadiargyl + S-metolachlor + terbuthylazine + glyphosate + DICHLORMID; oxadiargyl + atrazine + nicosulfuron + glyphosate + DICHLORMID; oxadiazon + metolachlor + isoxaflutole + glyphosate + DICHLORMID; oxadiazon + S-metolachlor + isoxaflutole + glyphosate + DICHLORMID; oxadiazon + metolachlor + mesotrione + glyphosate + DICHLORMID; oxadiazon + S-metolachlor + mesotrione + glyphosate + DICHLORMID; oxadiazon + metolachlor + atrazine + glyphosate + DICHLORMID; oxadiazon + S-metolachlor + atrazine + glyphosate + DICHLORMID; oxadiazon + metolachlor + terbuthylazine + glyphosate + DICHLORMID; oxadiazon + S-metolachlor + terbuthylazine + glyphosate + DICHLORMID; oxadiazon + atrazine + nicosulfuron + glyphosate + DICHLORMID; pentoxazone + metolachlor + isoxaflutole + glyphosate + DICHLORMID; pentoxazone + S-metolachlor + isoxaflutole + glyphosate + DICHLORMID; pentoxazone + metolachlor + mesotrione + glyphosate + DICHLORMID; pentoxazone + S-metolachlor + mesotrione + glyphosate + DICHLORMID; pentoxazone + metolachlor + atrazine + glyphosate + DICHLORMID; pentoxazone + S-metolachlor + atrazine + glyphosate + DICHLORMID; pentoxazone + metolachlor + terbuthylazine + glyphosate + DICHLORMID; pentoxazone + S-metolachlor + terbuthylazine + glyphosate + DICHLORMID; pentoxazone + atrazine + nicosulfuron + glyphosate + DICHLORMID; sulfentrazone + metolachlor + isoxaflutole + glyphosate + DICHLORMID; sulfentrazone + S-metolachlor + isoxaflutole + glyphosate + DICHLORMID; sulfentrazone + metolachlor + mesotrione + glyphosate + DICHLORMID; sulfentrazone + S-metolachlor + mesotrione + glyphosate + DICHLORMID; sulfentrazone + metolachlor + atrazine + glyphosate + DICHLORMID; sulfentrazone + S-metolachlor + atrazine + glyphosate + DICHLORMID; sulfentrazone + metolachlor + terbuthylazine + glyphosate + DICHLORMID; sulfentrazone + S-metolachlor + terbuthylazine + glyphosate + DICHLORMID; sulfentrazone + atrazine + nicosulfuron + glyphosate + DICHLORMID; fluazolate + metolachlor + isoxaflutole + glyphosate + DICHLORMID; fluazolate + S-metolachlor + isoxaflutole + glyphosate + DICHLORMID; fluazolate + metolachlor + mesotrione + glyphosate + DICHLORMID; fluazolate + S-metolachlor + mesotrione + glyphosate + DICHLORMID; fluazolate + metolachlor + atrazine + glyphosate + DICHLORMID; fluazolate + S-metolachlor + atrazine + glyphosate + DICHLORMID; fluazolate + metolachlor + terbuthylazine + glyphosate + DICHLORMID; fluazolate + S-metolachlor + terbuthylazine + glyphosate + DICHLORMID; fluazolate + atrazine + nicosulfuron + glyphosate + DICHLORMID; pyraflufen-ethyl + metolachlor + isoxaflutole + glyphosate + DICHLORMID; pyraflufen-ethyl + S-metolachlor + isoxaflutole + glyphosate + DICHLORMID; pyraflufen-ethyl + metolachlor + mesotrione + glyphosate + DICHLORMID; pyraflufen-ethyl + S-metolachlor + mesotrione + glyphosate + DICHLORMID; pyraflufen-ethyl + metolachlor + atrazine + glyphosate + DICHLORMID; pyraflufen-ethyl + S-metolachlor + atrazine + glyphosate + DICHLORMID; pyraflufen-ethyl + metolachlor + terbuthylazine + glyphosate + DICHLORMID; pyraflufen-ethyl + S-metolachlor + terbuthylazine + glyphosate + DICHLORMID; pyraflufen-ethyl + atrazine + nicosulfuron + glyphosate + DICHLORMID; flumipropyn + metolachlor + isoxaflutole + glyphosate + DICHLORMID; flumipropyn + S-metolachlor + isoxaflutole + glyphosate + DICHLORMID; flumipropyn + metolachlor + mesotrione + glyphosate + DICHLORMID; flumipropyn + S-metolachlor + mesotrione + glyphosate + DICHLORMID; flumipropyn + metolachlor + atrazine + glyphosate + DICHLORMID; flumipropyn + S-metolachlor + atrazine + glyphosate + DICHLORMID; flumipropyn + metolachlor + terbuthylazine + glyphosate + DICHLORMID; flumipropyn + S-metolachlor + terbuthylazine + glyphosate + DICHLORMID; flumipropyn + atrazine + nicosulfuron + glyphosate + DICHLORMID; flupropacil + metolachlor + isoxaflutole + glyphosate + DICHLORMID; flupropacil + S-metolachlor + isoxaflutole + glyphosate + DICHLORMID; flupropacil + metolachlor + mesotrione + glyphosate + DICHLORMID; flupropacil + S-metolachlor + mesotrione + glyphosate + DICHLORMID; flupropacil + metotachlor + atrazine + glyphosate + DICHLORMID; flupropacil + S-metolachlor + atrazine + glyphosate + DICHLORMID; flupropacil + metolachlor + terbuthylazine + glyphosate + DICHLORMID; flupropacil + S-metolachlor + terbuthylazine + glyphosate + DICHLORMID; flupropacil + atrazine + nicosulfuron + glyphosate + DICHLORMID; nipyraclofen + metolachlor + isoxaflutole + glyphosate + DICHLORMID; nipyraclofen + S-metolachlor + isoxaflutole + glyphosate + DICHLORMID; nipyraclofen + metolachlor + mesotrione + glyphosate + DICHLORMID; nipyraclofen + S-metolachlor + mesotrione + glyphosate + DICHLORMID; nipyraclofen + metolachlor + atrazine + glyphosate + DICHLORMID; nipyraclofen + S-metolachlor + atrazine + glyphosate + DICHLORMID; nipyraclofen + metolachlor + terbuthylazine + glyphosate + DICHLORMID; nipyraclofen + S-metolachlor + terbuthylazine + glyphosate + DICHLORMID; nipyraclofen + atrazine + nicosulfuron + glyphosate + DICHLORMID; benzfendizone + metolachlor + isoxaflutole + glyphosate + DICHLORMID; benzfendizone + S-metolachlor + isoxaflutole + glyphosate + DICHLORMID; benzfendizone + metolachlor + mesotrione + glyphosate + DICHLORMID; benzfendizone + S-metolachlor + mesotrione + glyphosate + DICHLORMID; benzfendizone + metolachlor + atrazine + glyphosate + DICHLORMlD; benzfendizone + S-metolachlor + atrazine + glyphosate + DICHLORMID; benzfendizone + metolachlor + terbuthylazine + glyphosate + DICHLORMID; benzfendizone + S-metolachlor + terbuthylazine + glyphosate + DICHLORMID; benzfendizone + atrazine + nicosulfuron + glyphosate + DICHLORMID; thidiazimin + metolachlor + isoxaflutole + glyphosate + DICHLORMID; thidiazimin + S-metolachlor + isoxaflutole + glyphosate + DICHLORMID; thidiazimin + metolachlor + mesotrione + glyphosate + DICHLORMID; thidiazimin + S-metolachlor + mesotrione + glyphosate + DICHLORMID; thidiazimin + metolachlor + atrazine + glyphosate + DICHLORMID; thidiazimin + S-metolachlor + atrazine + glyphosate + DICHLORMID; thidiazimin + metolachlor + terbuthylazine + glyphosate + DICHLORMID; thidiazimin + S-metolachlor + terbuthylazine + glyphosate + DICHLORMID; and thidiazimin + atrazine + nicosulfuron + glyphosate + DICHLORMID.

Acifluorfen + metolachlor + isoxaflutole + glyphosate + FURILAZOLE; acifluorfen + S-metolachlor + isoxaflutole + glyphosate + FURILAZOLE; acifluorfen + metolachlor + mesotrione + glyphosate + FURILAZOLE; acifluorfen + S-metolachlor + mesotrione + glyphosate + FURILAZOLE; acifluorfen + metolachlor + atrazine + glyphosate + FURILAZOLE; acifluorfen + S-metolachlor + atrazine + glyphosate + FURILAZOLE; acifluorfen + metolachlor + terbuthylazine + glyphosate + FURILAZOLE; acifluorfen + S-metolachlor + terbuthylazine + glyphosate + FURILAZOLE; acifluorfen + atrazine + nicosulfuron + glyphosate + FURILAZOLE; aclonifen + metolachlor + isoxaflutole + glyphosate + FURILAZOLE; aclonifen + S-metolachlor + isoxaflutole + glyphosate + FURILAZOLE; aclonifen + metolachlor + mesotrione + glyphosate + FURILAZOLE; aclonifen + S-metolachlor + mesotrione + glyphosate + FURILAZOLE; aclonifen + metolachlor + atrazine + glyphosate + FURILAZOLE; aclonifen + S-metolachlor + atrazine + glyphosate + FURILAZOLE; aclonifen + metolachlor + terbuthylazine + glyphosate + FURILAZOLE; aclonifen + S-metolachlor + terbuthylazine + glyphosate + FURILAZOLE; aclonifen + atrazine + nicosulfuron + glyphosate + FURILAZOLE; bifenox + metolachlor + isoxaflutole + glyphosate + FURILAZOLE; bifenox + S-metolachlor + isoxaflutole + glyphosate + FURILAZOLE; bifenox + metolachlor + mesotrione + glyphosate + FURILAZOLE; bifenox + S-metolachlor + mesotrione + glyphosate + FURILAZOLE; bifenox + metolachlor + atrazine + glyphosate + FURILAZOLE; bifenox + S-metolachlor + atrazine + glyphosate + FURILAZOLE; bifenox + metolachlor + terbuthylazine + glyphosate + FURILAZOLE; bifenox + S-metolachlor + terbuthylazine + glyphosate + FURILAZOLE; bifenox + atrazine + nicosulfuron + glyphosate + FURILAZOLE; chlornitrofen + metolachlor + isoxaflutole + glyphosate + FURILAZOLE; chlornitrofen + S-metolachlor + isoxaflutole + glyphosate + FURILAZOLE; chlornitrofen + metolachlor + mesotrione + glyphosate + FURILAZOLE; chlornitrofen + S-metolachlor + mesotrione + glyphosate + FURILAZOLE; chlornitrofen + metolachlor + atrazine + glyphosate + FURILAZOLE; chlornitrofen + S-metolachlor + atrazine + glyphosate + FURILAZOLE; chlornitrofen + metolachlor + terbuthylazine + glyphosate + FURILAZOLE; chlornitrofen + S-metolachlor + terbuthylazine + glyphosate + FURILAZOLE; chlornitrofen + atrazine + nicosulfuron + glyphosate + FURILAZOLE; ethoxyfen + metolachlor + isoxaflutole + glyphosate + FURILAZOLE; ethoxyfen + S-metolachlor + isoxaflutole + glyphosate + FURILAZOLE; ethoxyfen + metolachlor + mesotrione + glyphosate + FURILAZOLE; ethoxyfen + S-metolachlor + mesotrione + glyphosate + FURILAZOLE; ethoxyfen + metolachlor + atrazine + glyphosate + FURILAZOLE; ethoxyfen + S-metolachlor + atrazine + glyphosate + FURILAZOLE; ethoxyfen + metolachlor + terbuthylazine + glyphosate + FURILAZOLE; ethoxyfen + S-metolachlor + terbuthylazine + glyphosate + FURILAZOLE; ethoxyfen + atrazine + nicosulfuron + glyphosate + FURILAZOLE; fluoroglycofen + metolachlor + isoxaflutole + glyphosate + FURILAZOLE; fluoroglycofen + S-metolachlor + isoxaflutole + glyphosate + FURILAZOLE; fluoroglycofen + metolachlor + mesotrione + glyphosate + FURILAZOLE; fluoroglycofen + S-metolachlor + mesotrione + glyphosate + FURILAZOLE; fluoroglycofen + metolachlor + atrazine + glyphosate + FURILAZOLE; fluoroglycofen + S-metolachlor + atrazine + glyphosate + FURILAZOLE; fluoroglycofen + metolachlor + terbuthylazine + glyphosate + FURILAZOLE; fluoroglycofen + S-metolachlor + terbuthylazine + glyphosate + FURILAZOLE; fluoroglycofen + atrazine + nicosulfuron + glyphosate + FURILAZOLE; fomesafen + metolachlor + isoxaflutole + glyphosate + FURILAZOLE; fomesafen + S-metolachlor + isoxaflutole + glyphosate + FURILAZOLE; fomesafen + metolachlor + mesotrione + glyphosate + FURILAZOLE; fomesafen + S-metolachlor + mesotrione + glyphosate + FURILAZOLE; fomesafen + metolachlor + atrazine + glyphosate + FURILAZOLE; fomesafen + S-metolachlor + atrazine + glyphosate + FURILAZOLE; fomesafen + metolachlor + terbuthylazine + glyphosate + FURILAZOLE; fomesafen + S-metolachlor + terbuthylazine + glyphosate + FURILAZOLE; fomesafen + atrazine + nicosulfuron + glyphosate + FURILAZOLE; lactofen + metolachlor + isoxaflutole + glyphosate + FURILAZOLE; lactofen + S-metolachlor + isoxaflutole + glyphosate + FURILAZOLE; lactofen + metolachlor + mesotrione + glyphosate + FURILAZOLE; lactofen + S-metolachlor + mesotrione + glyphosate + FURILAZOLE; lactofen + metolachlor + atrazine + glyphosate + FURILAZOLE; lactofen + S-metolachlor + atrazine + glyphosate + FURILAZOLE; lactofen + metolachlor + terbuthylazine + glyphosate + FURILAZOLE; lactofen + S-metolachlor + terbuthylazine + glyphosate + FURILAZOLE; lactofen + atrazine + nicosulfuron + glyphosate + FURILAZOLE; oxyfluorfen + metolachlor + isoxaflutole + glyphosate + FURILAZOLE; oxyfluorfen + S-metolachlor + isoxaflutole + glyphosate + FURILAZOLE; oxyfluorfen + metolachlor + mesotrione + glyphosate + FURILAZOLE; oxyfluorfen + S-metolachlor + mesotrione + glyphosate + FURILAZOLE; oxyfluorfen + metolachlor + atrazine + glyphosate + FURILAZOLE; oxyfluorfen + S-metolachlor + atrazine + glyphosate + FURILAZOLE; oxyfluorfen + metolachlor + terbuthylazine + glyphosate + FURILAZOLE; oxyfluorfen + S-metolachlor + terbuthylazine + glyphosate + FURILAZOLE; oxyfluorfen + atrazine + nicosulfuron + glyphosate + FURILAZOLE; azafenidin + metolachlor + isoxaflutole + glyphosate + FURILAZOLE; azafenidin + S-metolachlor + isoxaflutole + glyphosate + FURILAZOLE; azafenidin + metolachlor + mesotrione + glyphosate + FURILAZOLE; azafenidin + S-metolachlor + mesotrione + glyphosate + FURILAZOLE; azafenidin + metolachlor + atrazine + glyphosate + FURILAZOLE; azafenidin + S-metolachlor + atrazine + glyphosate + FURILAZOLE; azafenidin + metolachlor + terbuthylazine + glyphosate + FURILAZOLE; azafenidin + S-metolachlor + terbuthylazine + glyphosate + FURILAZOLE; azafenidin + atrazine + nicosulfuron + glyphosate + FURILAZOLE; carfentrazone-ethyl + metolachlor + isoxaflutole + glyphosate + FURILAZOLE; carfentrazone-ethyl + S-metolachlor + isoxaflutole + glyphosate + FURILAZOLE; carfentrazone-ethyl + metolachlor + mesotrione + glyphosate + FURILAZOLE; carfentrazone-ethyl + S-metolachlor + mesotrione + glyphosate + FURILAZOLE; carfentrazone-ethyl + metolachlor + atrazine + glyphosate + FURILAZOLE; carfentrazone-ethyl + S-metolachlor + atrazine + glyphosate + FURILAZOLE; carfentrazone-ethyl + metolachlor + terbuthylazine + glyphosate + FURILAZOLE; carfentrazone-ethyl + S-metolachlor + terbuthylazine + glyphosate + FURILAZOLE; carfentrazone-ethyl + atrazine + nicosulfuron + glyphosate + FURILAZOLE; compound of the formula A + metolachlor + isoxaflutole + glyphosate + FURILAZOLE; compound of the formula A + S-metolachlor + isoxaflutole + glyphosate + FURILAZOLE; compound of the formula A + metolachlor + mesotrione + glyphosate + FURILAZOLE; compound of the formula A + S-metolachlor + mesotrione + glyphosate + FURILAZOLE; compound of the formula A + metolachlor + atrazine + glyphosate + FURILAZOLE; compound of the formula A + S-metolachlor + atrazine + glyphosate + FURILAZOLE; compound of the formula A + metolachlor + terbuthylazine + glyphosate + FURILAZOLE; compound of the formula A + S-metolachlor + terbuthylazine + glyphosate + FURILAZOLE; compound of the formula A + atrazine + nicosulfuron + glyphosate + FURILAZOLE; cinidon-ethyl + metolachlor + isoxaflutole + glyphosate + FURILAZOLE; cinidon-ethyl + S-metolachlor + isoxaflutole + glyphosate + FURILAZOLE; cinidon-ethyl + metolachlor + mesotrione + glyphosate + FURILAZOLE; cinidon-ethyl + S-metolachlor + mesotrione + glyphosate + FURILAZOLE; cinidon-ethyl + metolachlor + atrazine + glyphosate + FURILAZOLE; cinidon-ethyl + S-metolachlor + atrazine + glyphosate + FURILAZOLE; cinidon-ethyl + metolachlor + terbuthylazine + glyphosate + FURILAZOLE; cinidon-ethyl + S-metolachlor + terbuthylazine + glyphosate + FURILAZOLE; cinidon-ethyl + atrazine + nicosulfuron + glyphosate + FURILAZOLE; flumiclorac-pentyl + metolachlor + isoxaflutole + glyphosate + FURILAZOLE; flumiclorac-pentyl + S-metolachlor + isoxaflutole + glyphosate + FURILA20LE; flumiclorac-pentyl + metolachlor + mesotrione + glyphosate + FURILAZOLE; flumiclorac-pentyl + S-metoiachtor + mesotrione + glyphosate + FURILAZOLE; flumiclorac-pentyl + metolachlor + atrazine + glyphosate + FURILAZOLE; flumiclorac-pentyl + S-metolachlor + atrazine + glyphosate + FURILAZOLE; flumiclorac-pentyl + metolachlor + terbuthylazine + glyphosate + FURILAZOLE; flumiclorac-pentyl + S-metolachlor + terbuthylazine + glyphosate + FURILAZOLE; flumiclorac-pentyl + atrazine + nicosulfuron + glyphosate + FURILAZOLE; flumioxazin + metolachlor + isoxaflutole + glyphosate + FURILAZOLE; flumioxazin + S-metolachlor + isoxaflutole + glyphosate + FURILAZOLE; flumioxazin + metolachlor + mesotrione + glyphosate + FURILAZOLE; flumioxazin + S-metolachlor + mesotrione + glyphosate + FURILAZOLE; flumioxazin + metolachlor + atrazine + glyphosate + FURILAZOLE; flumioxazin + S-metolachlor + atrazine + glyphosate + FURILAZOLE; flumioxazin + metolachlor + terbuthylazine + glyphosate + FURILAZOLE; flumioxazin + S-metolachlor + terbuthylazine + glyphosate + FURILAZOLE; flumioxazin + atrazine + nicosulfuron + glyphosate + FURILAZOLE; fluthiacet-methyl + metolachlor + isoxaflutole + glyphosate + FURILAZOLE; fluthiacet-methyl + S-metolachlor + isoxaflutole + glyphosate + FURILAZOLE; fluthiacet-methyl + metolachlor + mesotrione + glyphosate + FURILAZOLE; fluthiacet-methyl + S-metolachlor + mesotrione + glyphosate + FURILAZOLE; fluthiacet-methyl + metolachlor + atrazine + glyphosate + FURILAZOLE; fluthiacet-methyl + S-metolachlor + atrazine + glyphosate + FURILAZOLE; fluthiacet-methyl + metolachlor + terbuthylazine + glyphosate + FURILAZOLE; fluthiacet-methyl + S-metolachlor + terbuthylazine + glyphosate + FURILAZOLE; fluthiacet-methyl + atrazine + nicosulfuron + glyphosate + FURILAZOLE; oxadiargyl + metolachlor + isoxaflutole + glyphosate + FURILAZOLE; oxadiargyl + S-metolachlor + isoxaflutole + glyphosate + FURILAZOLE; oxadiargyl + metolachlor + mesotrione + glyphosate + FURILAZOLE; oxadiargyl + S-metolachlor + mesotrione + glyphosate + FURILAZOLE; oxadiargyl + metolachlor + atrazine + glyphosate + FURILAZOLE; oxadiargyl + S-metolachlor + atrazine + glyphosate + FURILAZOLE; oxadiargyl + metolachlor + terbuthylazine + glyphosate + FURILAZOLE; oxadiargyl + S-metolachlor + terbuthylazine + glyphosate + FURILAZOLE; oxadiargyl + atrazine + nicosulfuron + glyphosate + FURILAZOLE; oxadiazon + metolachlor + isoxaflutole + glyphosate + FURILAZOLE; oxadiazon + S-metolachlor + isoxaflutole + glyphosate + FURILAZOLE; oxadiazon + metolachlor + mesotrione + glyphosate + FURILAZOLE; oxadiazon + S-metolachlor + mesotrione + glyphosate + FURILAZOLE; oxadiazon + metolachlor + atrazine + glyphosate + FURILAZOLE; oxadiazon + S-metolachlor + atrazine + glyphosate + FURILAZOLE; oxadiazon + metolachlor + terbuthylazine + glyphosate + FURILAZOLE; oxadiazon + S-metolachlor + terbuthylazine + glyphosate + FURILAZOLE; oxadiazon + atrazine + nicosulfuron + glyphosate + FURILAZOLE; pentoxazone + metolachlor + isoxaflutole + glyphosate + FURILAZOLE; pentoxazone + S-metolachlor + isoxaflutole + glyphosate + FURILAZOLE; pentoxazone + metolachlor + mesotrione + glyphosate + FURILAZOLE; pentoxazone + S-metolachlor + mesotrione + glyphosate + FURILAZOLE; pentoxazone + metolachlor + atrazine + glyphosate + FURILAZOLE; pentoxazone + S-metolachlor + atrazine + glyphosate + FURILAZOLE; pentoxazone + metolachlor + terbuthylazine + glyphosate + FURILAZOLE; pentoxazone + S-metolachlor + terbuthylazine + glyphosate + FURILAZOLE; pentoxazone + atrazine + nicosulfuron + glyphosate + FURILAZOLE; sulfentrazone + metolachlor + isoxaflutole + glyphosate + FURILAZOLE; sulfentrazone + S-metolachlor + isoxaflutole + glyphosate + FURILAZOLE; sulfentrazone + metolachlor + mesotrione + glyphosate + FURILAZOLE; sulfentrazone + S-metolachlor + mesotrione + glyphosate + FURILAZOLE; sulfentrazone + metolachlor + atrazine + glyphosate + FURILAZOLE; sulfentrazone + S-metolachlor + atrazine + glyphosate + FURILAZOLE; sulfentrazone + metolachlor + terbuthylazine + glyphosate + FURILAZOLE; sulfentrazone + S-metolachlor + terbuthylazine + glyphosate + FURILAZOLE; sulfentrazone + atrazine + nicosulfuron + glyphosate + FURILAZOLE; fluazolate + metolachlor + isoxaflutole + glyphosate + FURILAZOLE; fluazolate + S-metolachlor + isoxaflutole + glyphosate + FURILAZOLE; fluazolate + metolachlor + mesotrione + glyphosate + FURILAZOLE; fluazolate + S-metolachlor + mesotrione + glyphosate + FURILAZOLE; fluazolate + metolachlor + atrazine + glyphosate + FURILAZOLE; fluazolate + S-metotachlor + atrazine + glyphosate + FURILAZOLE; fluazolate + metolachlor + terbuthylazine + glyphosate + FURILAZOLE; fluazolate + S-metolachlor + terbuthylazine + glyphosate + FURILAZOLE; fluazolate + atrazine + nicosulfuron + glyphosate + FURILAZOLE; pyraflufen-ethyl + metolachlor + isoxaflutole + glyphosate + FURILAZOLE; pyraflufen-ethyl + S-metolachlor + isoxaflutole + glyphosate + FURILAZOLE; pyraflufen-ethyl + metolachfor + mesotrione + glyphosate + FURILAZOLE; pyraflufen-ethyl + S-metolachlor + mesotrione + glyphosate + FURILAZOLE; pyraflufen-ethyl + metolachlor + atrazine + glyphosate + FURILAZOLE; pyraflufen-ethyl + S-metolachlor + atrazine + glyphosate + FURILAZOLE; pyraflufen-ethyl + metolachlor + terbuthylazine + glyphosate + FURILAZOLE; pyraflufen-ethyl + S-metolachlor + terbuthylazine + glyphosate + FURILAZOLE; pyraflufen-ethyl + atrazine + nicosulfuron + glyphosate + FURILAZOLE; flumipropyn + metolachlor + isoxaflutole + glyphosate + FURILAZOLE; flumipropyn + S-metolachlor + isoxaflutole + glyphosate + FURILAZOLE; flumipropyn + metolachlor + mesotrione + glyphosate + FURILAZOLE; flumipropyn + S-metolachlor + mesotrione + glyphosate + FURILAZOLE; flumipropyn + metolachlor + atrazine + glyphosate + FURILAZOLE; flumipropyn + S-metolachlor + atrazine + glyphosate + FURILAZOLE; flumipropyn + metolachlor + terbuthylazine + glyphosate + FURILAZOLE; flumipropyn + S-metolachlor + terbuthylazine + glyphosate + FURILAZOLE; flumipropyn + atrazine + nicosulfuron + glyphosate + FURILAZOLE; flupropacil + metolachlor + isoxaflutole + glyphosate + FURILAZOLE; flupropacil + S-metolachlor + isoxaflutole + glyphosate + FURILAZOLE; flupropacil + metolachlor + mesotrione + glyphosate + FURILAZOLE; flupropacil + S-metolachlor + mesotrione + glyphosate + FURILAZOLE; flupropacil + metolachlor + atrazine + glyphosate + FURILAZOLE; flupropacil + S-metolachlor + atrazine + glyphosate + FURILAZOLE; flupropacil + metolachlor + terbuthylazine + glyphosate + FURILAZOLE; flupropacil + S-metolachlor + terbuthylazine + glyphosate + FURILAZOLE; flupropacil + atrazine + nicosulfuron + glyphosate + FURILAZOLE; nipyraclofen + metolachlor + isoxaflutole + glyphosate + FURILAZOLE; nipyraclofen + S-metolachlor + isoxaflutole + glyphosate + FURILAZOLE; nipyraclofen + metolachlor + mesotrione + glyphosate + FURILAZOLE; nipyraclofen + S-metolachlor + mesotrione + glyphosate + FURILAZOLE; nipyraclofen + metolachlor + atrazine + glyphosate + FURILAZOLE; nipyraclofen + S-metolachlor + atrazine + glyphosate + FURILAZOLE; nipyraclofen + metolachlor + terbuthylazine + glyphosate + FURILAZOLE; nipyraclofen + S-metolachlor + terbuthylazine + glyphosate + FURILAZOLE; nipyraclofen + atrazine + nicosulfuron + glyphosate + FURILAZOLE; benzfendizone + metolachlor + isoxaflutole + glyphosate + FURILAZOLE; benzfendizone + S-metolachlor + isoxaflutole + glyphosate + FURILAZOLE; benzfendizone + metolachlor + mesotrione + glyphosate + FURILAZOLE; benzfendizone + S-metolachlor + mesotrione + glyphosate + FURILAZOLE; benzfendizone + metolachlor + atrazine + glyphosate + FURILAZOLE; benzfendizone + S-metolachlor + atrazine + glyphosate + FURILAZOLE; benzfendizone + metolachlor + terbuthylazine + glyphosate + FURILAZOLE; benzfendizone + S-metolachlor + terbuthylazine + glyphosate + FURILAZOLE; benzfendizone + atrazine + nicosulfuron + glyphosate + FURILAZOLE; thidiazimin + metolachlor + isoxaflutole + glyphosate + FURILAZOLE; thidiazimin + S-metolachlor + isoxaflutole + glyphosate + FURILAZOLE; thidiazimin + metolachlor + mesotrione + glyphosate + FURILAZOLE; thidiazimin + S-metolachlor + mesotrion + glyphosate + FURILAZOLE; thidiazimin + metolachlor + atrazine + glyphosate + FURILAZOLE; thidiazimin + S-metolachlor + atrazine + glyphosate + FURILAZOLE; thidiazimin + metolachlor + terbuthylazine + glyphosate + FURILAZOLE; thidiazimin + S-metolachlor + terbuthylazine + glyphosate + FURILAZOLE; and thidiazimin + atrazine + nicosulfuron + glyphosate + FURILAZOLE.

acifluorfen + prosulfuron + primisulfuron + glufosinate; acifluorfen + prosulfuron + dicamba + glufosinate; acifluorfen + primisulfuron + dicamba + glufosinate; acifluorfen + nicosulfuron + primisulfuron + glufosinate; acifluorfen + nicosulfuron + prosulfuron + glufosinate; acifluorfen + rimsulfuron + primisulfuron + glufosinate; acifluorfen + rimsulfuron + prosulfuron + glufosinate; acifluorfen + metolachlor + isoxaflutole + glufosinate; acifluorfen + metolachlor + isoxaflutole + glufosinate + benoxacor; acifluorfen + S-metolachlor + isoxaflutole + glufosinate; acifluorfen + S-metolachlor + isoxaflutole + glufosinate + benoxacor; acifluorfen + metolachlor + mesotrione + glufosinate; acifluorfen + metolachlor + mesotrione + glufosinate + benoxacor; acifluorfen + S-metolachlor + mesotrione + glufosinate; acifluorfen + S-metolachlor + mesotrione + benoxacor + glufosinate; acifluorfen + metolachlor + atrazine + glufosinate; acifluorfen + metolachlor + atrazine + glufosinate + benoxacor; acifluorfen + S-metolachlor + atrazine + glufosinate; acifluorfen + S-metolachlor + atrazine + glufosinate + benoxacor; acifluorfen + metolachlor + terbuthylazine + glufosinate; acifluorfen + metolachlor + terbuthylazine + glufosinate + benoxacor; acifluorfen + S-metolachlor + terbuthylazine + glufosinate; acifluorfen + S-metolachlor + terbuthylazine + glufosinate + benoxacor; acifluorfen + atrazine + nicosulfuron + glufosinate; acifluorfen + atrazine + nicosulfuron + glufosinate + benoxacor; aclonifen + prosulfuron + primisulfuron + glufosinate; aclonifen + prosulfuron + dicamba + glufosinate; aclonifen + primisulfuron + dicamba + glufosinate; adonifen + nicosulfuron + primisulfuron + glufosinate; aclonifen + nicosulfuron + prosulfuron + glufosinate; aclonifen + rimsulfuron + primisulfuron + glufosinate; aclonifen + rimsulfuron + prosulfuron + glufosinate; aclonifen + metolachlor + isoxaflutole + glufosinate; aclonifen + metolachlor + isoxaflutole + glufosinate + benoxacor; aclonifen + S-metolachlor + isoxaflutole + glufosinate; aclonifen + S-metolachlor + isoxaflutole + glufosinate + benoxacor; aclonifen + metolachlor + mesotrione + glufosinate; aclonifen + metolachlor + mesotrione + glufosinate + benoxacor; aclonifen + S-metolachlor + mesotrione + glufosinate; aclonifen + S-metolachlor + mesotrione + glufosinate + benoxacor; aclonifen + metolachlor + atrazine + glufosinate; aclonifen + metolachlor + atrazine + glufosinate + benoxacor; aclonifen + S-metolachlor + atrazine + glufosinate; aclonifen + S-metolachlor + atrazine + glufosinate + benoxacor; aclonifen + metolachlor + terbuthylazine + glufosinate; aclonifen + metolachlor + terbuthylazine + glufosinate + benoxacor; aclonifen + S-metolachlor + terbuthylazine + glufosinate; aclonifen + S-metolachlor + terbuthylazine + glufosinate + benoxacor; aclonifen + atrazine + nicosulfuron + glufosinate; aclonifen + atrazine + nicosulfuron + glufosinate + benoxacor; bifenox + prosulfuron + primisulfuron + glufosinate; bifenox + prosulfuron + dicamba + glufosinate; bifenox + primisulfuron + dicamba + glufosinate; bifenox + nicosulfuron + primisulfuron + glufosinate; bifenox + nicosulfuron + prosulfuron + glufosinate; bifenox + rimsulfuron + primisulfuron + glufosinate; bifenox + rimsulfuron + prosulfuron + glufosinate; bifenox + metolachlor + isoxaflutole + glufosinate; bifenox + metolachlor + isoxaflutole + glufosinate + benoxacor; bifenox + S-metolachlor + isoxaflutole + glufosinate; bifenox + S-metolachlor + isoxaflutole + glufosinate + benoxacor; bifenox + metolachlor + mesotrione + glufosinate; bifenox + metolachlor + mesotrione + glufosinate + benoxacor; bifenox + S-metolachlor + mesotrione + glufosinate; bifenox + S-metolachlor + mesotrione + glufosinate + benoxacor; bifenox + metolachlor + atrazine + glufosinate; bifenox + metolachlor + atrazine + glufosinate + benoxacor; bifenox + S-metolachlor + atrazine + glufosinate; bifenox + S-metolachlor + atrazine + glufosinate + benoxacor; bifenox + metolachlor + terbuthylazine + glufosinate; bifenox + metolachlor + terbuthylazine + glufosinate + benoxacor; bifenox + S-metolachlor + terbuthylazine + glufosinate; bifenox + S-metolachlor + terbuthylazine + glufosinate + benoxacor; bifenox + atrazine + nicosulfuron + glufosinate; bifenox + atrazine + nicosulfuron + glufosinate + benoxacor; chlornitrofen + prosulfuron + primisulfuron + glufosinate; chlornitrofen + prosulfuron + dicamba + glufosinate; chlornitrofen + primisulfuron + dicamba + glufosinate; chlornitrofen + nicosulfuron + primisulfuron + glufosinate; chlornitrofen + nicosulfuron + prosulfuron + glufosinate; chlornitrofen + rimsulfuron + primisulfuron + glufosinate; chlornitrofen + rimsulfuron + prosulfuron + glufosinate; chlornitrofen + metolachlor + isoxaflutole + glufosinate; chlornitrofen + metolachlor + isoxaflutole + glufosinate + benoxacor; chlornitrofen + S-metolachlor + isoxaflutole + glufosinate; chlornitrofen + S-metolachlor + isoxaflutole + glufosinate + benoxacor; chlornitrofen + metolachlor + mesotrione + glufosinate; chlornitrofen + metolachlor + mesotrione + glufosinate + benoxacor; chlornitrofen + S-metolachlor + mesotrione + glufosinate; chlornitrofen + S-metolachlor + mesotrione + glufosinate + benoxacor; chlornitrofen + metolachlor + atrazine + glufosinate; chlornitrofen + metolachlor + atrazine + glufosinate + benoxacor; chlornitrofen + S-metolachlor + atrazine + glufosinate; chlornitrofen + S-metolachlor + atrazine + glufosinate + benoxacor; chlornitrofen + metolachlor + terbuthylazine + glufosinate; chlornitrofen + metolachlor + terbuthylazine + glufosinate + benoxacor; chlornitrofen + S-metolachlor + terbuthylazine + glufosinate; chlornitrofen + S-metolachlor + terbuthylazine + glufosinate + benoxacor; chlornitrofen + atrazine + nicosulfuron + glufosinate; chlornitrofen + atrazine + nicosulfuron + glufosinate + benoxacor; ethoxyfen + prosulfuron + primisulfuron + glufosinate; ethoxyfen + prosulfuron + dicamba + glufosinate; ethoxyfen + primisulfuron + dicamba + glufosinate; ethoxyfen + nicosulfuron + primisulfuron + glufosinate; ethoxyfen + nicosulfuron + prosulfuron + glufosinate; ethoxyfen + rimsulfuron + primisulfuron + glufosinate; ethoxyfen + rimsulfuron + prosulfuron + glufosinate; ethoxyfen + metolachlor + isoxaflutole + glufosinate; ethoxyfen + metolachlor + isoxaflutole + glufosinate + benoxacor; ethoxyfen + S-metolachlor + isoxaflutole + glufosinate; ethoxyfen + S-metolachlor + isoxaflutole + glufosinate + benoxacor; ethoxyfen + metolachlor + mesotrione + glufosinate; ethoxyfen + metolachlor + mesotrione + glufosinate + benoxacor; ethoxyfen + S-metolachlor + mesotrione + glufosinate; ethoxyfen + S-metolachlor + mesotrione + glufosinate + benoxacor; ethoxyfen + metolachlor + atrazine + glufosinate; ethoxyfen + metolachlor + atrazine + glufosinate + benoxacor; ethoxyfen + S-metolachlor + atrazine + glufosinate; ethoxyfen + S-metolachlor + atrazine + glufosinate + benoxacor; ethoxyfen + metolachlor + terbuthylazine + glufosinate; ethoxyfen + metolachlor + terbuthylazine + glufosinate + benoxacor; ethoxyfen + S-metolachlor + terbuthylazine + glufosinate; ethoxyfen + S-metolachlor + terbuthylazine + glufosinate + benoxacor; ethoxyfen + atrazine + nicosulfuron + glufosinate; ethoxyfen + atrazine + nicosulfuron + glufosinate + benoxacor; fluoroglycofen + prosulfuron + primisulfuron + glufosinate; fluoroglycofen + prosulfuron + dicamba + glufosinate; fluoroglycofen + primisulfuron + dicamba + glufosinate; fluoroglycofen + nicosulfuron + primisulfuron + glufosinate; fluoroglycofen + nicosulfuron + prosulfuron + glufosinate; fluoroglycofen + rimsulfuron + primisulfuron + glufosinate; fluoroglycofen + rimsulfuron + prosulfuron + glufosinate; fluoroglycofen + metolachlor + isoxaflutole + glufosinate; fluoroglycofen + metolachlor + isoxaflutole + glufosinate + benoxacor; fluoroglycofen + S-metolachlor + isoxaflutole + glufosinate; fluoroglycofen + S-metolachlor + isoxaflutole + glufosinate + benoxacor; fluoroglycofen + metolachlor + mesotrione + glufosinate; fluoroglycofen + metolachlor + mesotrione + glufosinate + benoxacor; fluoroglycofen + S-metolachlor + mesotrione + glufosinate; fluoroglycofen + S-metolachlor + mesotrione + glufosinate + benoxacor; fluoroglycofen + metolachlor + atrazine + glufosinate; fluoroglycofen + metolachlor + atrazine + glufosinate + benoxacor; fluoroglycofen + S-metolachlor + atrazine + glufosinate; fluoroglycofen + S-metolachlor + atrazine + glufosinate + benoxacor; fluoroglycofen + metolachlor + terbuthylazine + glufosinate; fluoroglycofen + metolachlor + terbuthylazine + glufosinate + benoxacor; fluoroglycofen + S-metolachlor + terbuthylazine + glufosinate; fluoroglycofen + S-metolachlor + terbuthylazine + glufosinate + benoxacor; fluoroglycofen + atrazine + nicosulfuron + glufosinate; fluoroglycofen + atrazine + nicosulfuron + glufosinate + benoxacor; fomesafen + prosulfuron + primisulfuron + glufosinate; fomesafen + prosulfuron + dicamba + glufosinate; fomesafen + primisulfuron + dicamba + glufosinate; fomesafen + nicosulfuron + primisulfuron + glufosinate; fomesafen + nicosulfuron + prosulfuron + glufosinate; fomesafen + rimsulfuron + primisulfuron + glufosinate; fomesafen + rimsulfuron + prosulfuron + glufosinate; fomesafen + metolachlor + isoxaflutole + glufosinate; fomesafen + metolachlor + isoxaflutole + glufosinate + benoxacor; fomesafen + S-metolachlor + isoxaflutole + glufosinate; fomesafen + S-metolachlor + isoxaflutole + glufosinate + benoxacor; fomesafen + metolachlor + mesotrione + glufosinate; fomesafen + metolachlor + mesotrione + glufosinate + benoxacor; fomesafen + S-metolachlor + mesotrione + glufosinate; fomesafen + S-metolachlor + mesotrione + glufosinate + benoxacor; fomesafen + metolachlor + atrazine + glufosinate; fomesafen + metolachlor + atrazine + glufosinate + benoxacor; fomesafen + S-metolachlor + atrazine + glufosinate; fomesafen + S-metolachlor + atrazine + glufosinate + benoxacor; fomesafen + metolachlor + terbuthylazine + glufosinate; fomesafen + metolachlor + terbuthylazine + glufosinate + benoxacor; fomesafen + S-metolachlor + terbuthylazine + glufosinate; fomesafen + S-metolachlor + terbuthylazine + glufosinate + benoxacor; fomesafen + atrazine + nicosulfuron + glufosinate; fomesafen + atrazine + nicosulfuron + glufosinate + benoxacor; lactofen + prosulfuron + primisulfuron + glufosinate; lactofen + prosulfuron + dicamba + glufosinate; lactofen + primisulfuron + dicamba + glufosinate; lactofen + nicosulfuron + primisulfuron + glufosinate; lactofen + nicosulfuron + prosulfuron + glufosinate; lactofen + rimsulfuron + primisulfuron + glufosinate; lactofen + rimsulfuron + prosulfuron + glufosinate; lactofen + metolachlor + isoxaflutole + glufosinate; lactofen + metolachlor + isoxaflutole + glufosinate + benoxacor; lactofen + S-metolachlor + isoxaflutole + glufosinate; lactofen + S-metolachlor + isoxaflutole + glufosinate + benoxacor; lactofen + metotachlor + mesotrione + glufosinate; lactofen + metolachlor + mesotrione + glufosinate + benoxacor; lactofen + S-metolachlor + mesotrione + glufosinate; lactofen + S-metolachlor + mesotrione + glufosinate + benoxacor; lactofen + metolachlor + atrazine + glufosinate; lactofen + metolachlor + atrazine + benoxacor; lactofen + S-metolachlor + atrazine; lactofen + S-metolachlor + atrazine + glufosinate + benoxacor; lactofen + metolachlor + terbuthylazine + glufosinate; lactofen + metolachlor + terbuthylazine + glufosinate + benoxacor; lactofen + S-metolachlor + terbuthylazine + glufosinate; lactofen + S-metolachlor + terbuthylazine + glufosinate + benoxacor; lactofen + atrazine + nicosulfuron + glufosinate; lactofen + atrazine + nicosulfuron + glufosinate + benoxacor; oxyfluorfen + prosulfuron + primisulfuron + glufosinate; oxyfluorfen + prosulfuron + dicamba + glufosinate; oxyfluorfen + primisulfuron + dicamba + glufosinate; oxyfluorfen + nicosulfuron + primisulfuron + glufosinate; oxyfluorfen + nicosulfuron + prosulfuron + glufosinate; oxyfluorfen + rimsulfuron + primisulfuron + glufosinate; oxyfluorfen + rimsulfuron + prosulfuron + glufosinate; oxyfluorfen + metolachlor + isoxaflutole + glufosinate; oxyfluorfen + metolachlor + isoxaflutole + glufosinate + benoxacor; oxyfluorfen + S-metolachlor + isoxaflutole + glufosinate; oxyfluorfen + S-metolachlor + isoxaflutole + glufosinate + benoxacor; oxyfluorfen + metolachlor + mesotrione + glufosinate; oxyfluorfen + metolachlor + mesotrione + glufosinate + benoxacor; oxyfluorfen + S-metolachlor + mesotrione + glufosinate; oxyfluorfen + S-metolachlor + mesotrione + glufosinate + benoxacor; oxyfluorfen + metolachlor + atrazine + glufosinate; oxyfluorfen + metolachlor + atrazine + glufosinate + benoxacor; oxyfluorfen + S-metolachlor + atrazine + glufosinate; oxyfluorfen + S-metolachlor + atrazine + glufosinate + benoxacor; oxyfluorfen + metolachlor + terbuthylazine + glufosinate; oxyfluorfen + metolachlor + terbuthylazine + glufosinate + benoxacor; oxyfluorfen + S-metolachlor + terbuthylazine + glufosinate; oxyfluorfen + S-metolachlor + terbuthylazine + glufosinate + benoxacor; oxyfluorfen + atrazine + nicosulfuron + glufosinate; oxyfluorfen + atrazine + nicosulfuron + glufosinate + benoxacor; azafenidin + prosulfuron + primisulfuron + glufosinate; azafenidin + prosulfuron + dicamba + glufosinate; azafenidin + primisulfuron + dicamba + glufosinate; azafenidin + nicosulfuron + primisulfuron + glufosinate; azafenidin + nicosulfuron + prosulfuron + glufosinate; azafenidin + rimsulfuron + primisulfuron + glufosinate; azafenidin + rimsulfuron + prosulfuron + glufosinate; azafenidin + metolachlor + isoxaflutole + glufosinate; azafenidin + metolachlor + isoxaflutole + glufosinate + benoxacor; azafenidin + S-metolachlor + isoxaflutole + glufosinate; azafenidin + S-metolachlor + isoxaflutole + glufosinate + benoxacor; azafenidin + metolachlor + mesotrione + glufosinate; azafenidin + metolachlor + mesotrione + glufosinate + benoxacor; azafenidin + S-metolachlor + mesotrione + glufosinate; azafenidin + S-metolachlor + mesotrione + glufosinate + benoxacor; azafenidin + metolachlor + atrazine + glufosinate; azafenidin + metotachlor + atrazine + glufosinate + benoxacor; azafenidin + S-metolachlor + atrazine + glufosinate; azafenidin + S-metolachlor + atrazine + glufosinate + benoxacor; azafenidin + metolachlor + terbuthylazine + glufosinate; azafenidin + metolachlor + terbuthylazine + glufosinate + benoxacor; azafenidin + S-metolachlor + terbuthylazine + glufosinate; azafenidin + S-metolachlor + terbuthylazine + glufosinate + benoxacor; azafenidin + atrazine + nicosulfuron + glufosinate; azafenidin + atrazine + nicosulfuron + glufosinate + benoxacor; carfentrazone-ethyl + prosulfuron + primisulfuron + glufosinate; carfentrazone-ethyl + prosulfuron + dicamba + glufosinate; carfentrazone-ethyl + primisulfuron + dicamba + glufosinate; carfentrazone-ethyl + nicosulfuron + primisulfuron + glufosinate; carfentrazone-ethyl + nicosulfuron + prosulfuron + glufosinate; carfentrazone-ethyl + rimsulfuron + primisulfuron + glufosinate; carfentrazone-ethyl + rimsulfuron + prosulfuron + glufosinate; carfentrazone-ethyl + metolachlor + isoxaflutole + glufosinate; carfentrazone-ethyl + metolachlor + isoxaflutole + glufosinate + benoxacor; carfentrazone-ethyl + S-metolachlor + isoxaflutole + glufosinate; carfentrazone-ethyl + S-metolachlor + isoxaflutole + glufosinate + benoxacor; carfentrazone-ethyl + metolachlor + mesotrione + glufosinate; carfentrazone-ethyl + metolachlor + mesotrione + glufosinate + benoxacor; carfentrazone-ethyl + S-metolachlor + mesotrione + glufosinate; carfentrazone-ethyl + S-metolachlor + mesotrione + glufosinate + benoxacor; carfentrazone-ethyl + metolachlor + atrazine + glufosinate; carfentrazone-ethyl + metolachlor + atrazine + glufosinate + benoxacor; carfentrazone-ethyl + S-metolachlor + atrazine + glufosinate; carfentrazone-ethyl + S-metolachlor + atrazine + glufosinate + benoxacor; carfentrazone-ethyl + metolachlor + terbuthylazine + glufosinate; carfentrazone-ethyl + metolachlor + terbuthylazine + glufosinate + benoxacor; carfentrazone-ethyl + S-metolachlor + terbuthylazine + glufosinate; carfentrazone-ethyl + S-metolachlor + terbuthylazine + glufosinate + benoxacor; carfentrazone-ethyl + atrazine + nicosulfuron + glufosinate; carfentrazone-ethyl + atrazine + nicosulfuron + glufosinate + benoxacor; compound of the formula A + prosulfuron + primisulfuron + glufosinate; compound of the formula A + prosulfuron + dicamba + glufosinate; compound of the formula A + primisulfuron + dicamba + glufosinate; compound of the formula A + nicosulfuron + primisulfuron + glufosinate; compound of the formula A + nicosulfuron + prosulfuron + glufosinate; compound of the formula A + rimsulfuron + primisulfuron + glufosinate; compound of the formula A + rimsulfuron + prosulfuron + glufosinate; compound of the formula A + metolachlor + isoxaflutole + glufosinate; compound of the formula A + metolachlor + isoxaflutole + glufosinate + benoxacor; compound of the formula A + S-metolachlor + isoxaflutole + glufosinate; compound of the formula A + S-metolachlor + isoxaflutole + glufosinate + benoxacor; compound of the formula A + metolachlor + mesotrione + glufosinate; compound of the formula A + metolachlor + mesotrione + glufosinate + benoxacor; compound of the formula A + S-metolachtor + mesotrione + glufosinate; compound of the formula A + S-metolachlor + mesotrione + glufosinate + benoxacor; compound of the formula A + metolachlor + atrazine + glufosinate; compound of the formula A + metolachlor + atrazine + glufosinate + benoxacor; compound of the formula A + S-metolachlor + atrazine + glufosinate; compound of the formula A + S-metolachlor + atrazine + glufosinate + benoxacor; compound of the formula A + metolachlor + terbuthylazine + glufosinate; compound of the formula A + metolachlor + terbuthylazine + glufosinate + benoxacor; compound of the formula A + S-metolachlor + terbuthylazine + glufosinate; compound of the formula A + S-metolachlor + terbuthylazine + glufosinate + benoxacor; compound of the formula A + atrazine + nicosulfuron + glufosinate; compound of the formula A + atrazine + nicosulfuron + glufosinate + benoxacor; cinidon-ethyl + prosulfuron + primisulfuron + glufosinate; cinidon-ethyl + prosulfuron + dicamba + glufosinate; cinidon-ethyl + primisulfuron + dicamba + glufosinate; cinidon-ethyl + nicosulfuron + primisulfuron + glufosinate; cinidon-ethyl + nicosulfuron + prosulfuron + glufosinate; cinidon-ethyl + rimsulfuron + primisulfuron + glufosinate; cinidon-ethyl + rimsulfuron + prosulfuron + glufosinate; cinidon-ethyl + metolachlor + isoxaflutole + glufosinate; cinidon-ethyl + metolachlor + isoxaflutole + glufosinate + benoxacor; cinidon-ethyl + S-metolachlor + isoxaflutole + glufosinate; cinidon-ethyl + S-metolachlor + isoxaflutole + glufosinate + benoxacor; cinidon-ethyl + metolachlor + mesotrione + glufosinate; cinidon-ethyl + metolachlor + mesotrione + glufosinate + benoxacor; cinidon-ethyl + S-metolachlor + mesotrione + glufosinate; cinidon-ethyl + S-metolachlor + mesotrione + glufosinate + benoxacor; cinidon-ethyl + metolachlor + atrazine + glufosinate; cinidon-ethyl + metolachlor + atrazine + glufosinate + benoxacor; cinidon-ethyl + S-metolachlor + atrazine + glufosinate; cinidon-ethyl + S-metolachlor + atrazine + glufosinate + benoxacor; cinidon-ethyl + metolachlor + terbuthylazine + glufosinate; cinidon-ethyl + metolachlor + terbuthylazine + glufosinate + benoxacor; cinidon-ethyl + S-metolachior + terbuthylazine + glufosinate; cinidon-ethyl + S-metolachlor + terbuthylazine + glufosinate + benoxacor; cinidon-ethyl + atrazine + nicosulfuron + glufosinate; cinidon-ethyl + atrazine + nicosulfuron + glufosinate + benoxacor; flumiclorac-pentyl + prosulfuron + primisulfuron + glufosinate; flumiclorac-pentyl + prosulfuron + dicamba + glufosinate; flumiclorac-pentyl + primisulfuron + dicamba + glufosinate; flumiclorac-pentyl + nicosulfuron + primisulfuron + glufosinate; flumiclorac-pentyl + nicosulfuron + prosulfuron + glufosinate; flumiclorac-pentyl + rimsulfuron + primisulfuron + glufosinate; flumiclorac-pentyl + rimsulfuron + prosulfuron + glufosinate; flumiclorac-pentyl + metolachlor + isoxaflutole + glufosinate; flumiclorac-pentyl + metolachlor + isoxaflutole + glufosinate + benoxacor; flumiclorac-pentyl + S-metolachlor + isoxaftutole + glufosinate; flumiclorac-pentyl + S-metolachlor + isoxaflutole + glufosinate + benoxacor; flumiclorac-pentyl + metolachlor + mesotrione + glufosinate; flumiclorac-pentyl + metolachlor + mesotrione + glufosinate + benoxacor; flumiclorac-pentyl + S-metolachlor + mesotrione + glufosinate; flumiclorac-pentyl + S-metolachlor + mesotrione + glufosinate + benoxacor; flumiclorac-pentyl + metolachlor + atrazine + glufosinate; flumiclorac-pentyl + metolachlor + atrazine + glufosinate + benoxacor; flumiclorac-pentyl + S-metolachlor + atrazine + glufosinate; flumiclorac-pentyl + S-metolachlor + atrazine + glufosinate + benoxacor, flumiclorac-pentyl + metolachlor + terbuthylazine + glufosinate; flumiclorac-pentyl + metolachlor + terbuthylazine + glufosinate + benoxacor; flumiclorac-pentyl + S-metolachlor + terbuthylazine + glufosinate; flumiclorac-pentyl + S-metolachlor + terbuthylazine + glufosinate + benoxacor; flumiclorac-pentyl + atrazine + nicosulfuron + glufosinate; flumiclorac-pentyl + atrazine + nicosulfuron + glufosinate + benoxacor; flumioxazin + prosulfuron + primisulfuron + glufosinate; flumioxazin + prosulfuron + dicamba + glufosinate; flumioxazin + primisulfuron + dicamba + glufosinate; flumioxazin + nicosulfuron + primisulfuron + glufosinate; flumioxazin + nicosulfuron + prosulfuron + glufosinate; flumioxazin + rimsulfuron + primisulfuron + glufosinate; flumioxazin + rimsulfuron + prosulfuron + glufosinate; flumioxazin + metolachlor + isoxaflutole + glufosinate; flumioxazin + metolachlor + isoxaflutole + glufosinate + benoxacor; flumioxazin + S-metolachlor + isoxaflutole + glufosinate; flumioxazin + S-metolachlor + isoxaflutole + glufosinate + benoxacor; flumioxazin + metolachlor + mesotrione + glufosinate; flumioxazin + metolachlor + mesotrione + glufosinate + benoxacor; flumioxazin + S-metolachlor + mesotrione + glufosinate; flumioxazin + S-metolachlor + mesotrione + glufosinate + benoxacor; flumioxazin + metolachlor + atrazine + glufosinate; flumioxazin + metolachlor + atrazine + glufosinate + benoxacor; flumioxazin + S-metolachlor + atrazine + glufosinate; flumioxazin + S-metolachlor + atrazine + glufosinate + benoxacor; flumioxazin + metolachlor + terbuthylazine + glufosinate; flumioxazin + metolachlor + terbuthylazine + glufosinate + benoxacor; flumioxazin + S-metolachlor + terbuthylazine + glufosinate; flumioxazin + S-metolachlor + terbuthylazine + glufosinate + benoxacor; flumioxazin + atrazine + nicosulfuron + glufosinate; flumioxazin + atrazine + nicosulfuron + glufosinate + benoxacor; fluthiacet-methyl + prosulfuron + primisulfuron + glufosinate; fluthiacet-methyl + prosulfuron + dicamba + glufosinate; fluthiacet-methyl + primisulfuron + dicamba + glufosinate; fluthiacet-methyl + nicosulfuron + primisulfuron + glufosinate; fluthiacet-methyl + nicosulfuron + prosulfuron + glufosinate; fluthiacet-methyl + rimsulfuron + primisulfuron + glufosinate; fluthiacet-methyl + rimsulfuron + prosulfuron + glufosinate; fluthiacet-methyl + metolachlor + isoxaflutole + glufosinate; fluthiacet-methyl + metolachlor + isoxaflutole + glufosinate + benoxacor; fluthiacet-methyl + S-metolachlor + isoxaflutole + glufosinate; fluthiacet-methyl + S-metolachlor + isoxaflutole + glufosinate + benoxacor; fluthiacet-methyl + metolachlor + mesotrione + glufosinate; fluthiacet-methyl + metolachlor + mesotrione + glufosinate + benoxacor; fluthiacet-methyl + S-metolachlor + mesotrione + glufosinate; fluthiacet-methyl + S-metolachlor + mesotrione + glufosinate + benoxacor; fluthiacet-methyl + metolachlor + atrazine + glufosinate; fluthiacet-methyl + metolachlor + atrazine + glufosinate + benoxacor; fluthiacet-methyl + S-metolachlor + atrazine + glufosinate; fluthiacet-methyl + S-metolachlor + atrazine + glufosinate + benoxacor; fluthiacet-methyl + metolachlor + terbuthylazine + glufosinate; fluthiacet-methyl + metolachlor + terbuthylazine + glufosinate + benoxacor; fluthiacet-methyl + S-metolachlor + terbuthylazine + glufosinate; fluthiacet-methyl + S-metolachlor + terbuthylazine + glufosinate + benoxacor; fluthiacet-methyl + atrazine + nicosulfuron + glufosinate; fluthiacet-methyl + atrazine + nicosulfuron + glufosinate + benoxacor; oxadiargyl + prosulfuron + primisulfuron + glufosinate; oxadiargyl + prosulfuron + dicamba + glufosinate; oxadiargyl + primisulfuron + dicamba + glufosinate; oxadiargyl + nicosulfuron + primisulfuron + glufosinate; oxadiargyl + nicosulfuron + prosulfuron + glufosinate; oxadiargyl + rimsulfuron + primisulfuron + glufosinate; oxadiargyl + rimsulfuron + prosulfuron + glufosinate; oxadiargyl + metolachlor + isoxaflutole + glufosinate; oxadiargyl + metolachlor + isoxaflutole + glufosinate + benoxacor; oxadiargyl + S-metolachlor + isoxaflutole + glufosinate; oxadiargyl + S-metolachlor + isoxaflutole + glufosinate + benoxacor; oxadiargyl + metolachlor + mesotrione + glufosinate; oxadiargyl + metolachlor + mesotrione + glufosinate + benoxacor; oxadiargyl + S-metolachlor + mesotrione + glufosinate; oxadiargyl + S-metolachlor + mesotrione + glufosinate + benoxacor; oxadiargyl + metolachlor + atrazine + glufosinate; oxadiargyl + metolachlor + atrazine + glufosinate + benoxacor; oxadiargyl + S-metolachlor + atrazine + glufosinate; oxadiargyl + S-metolachlor + atrazine + glufosinate + benoxacor; oxadiargyl + metolachlor + terbuthylazine + glufosinate; oxadiargyl + metolachlor + terbuthylazine + glufosinate + benoxacor; oxadiargyl + S-metolachlor + terbuthylazine + glufosinate; oxadiargyl + S-metolachlor + terbuthylazine + glufosinate + benoxacor; oxadiargyl + atrazine + nicosulfuron + glufosinate; oxadiargyl + atrazine + nicosulfuron + glufosinate + benoxacor; oxadiazon + prosulfuron + primisulfuron + glufosinate; oxadiazon + prosulfuron + dicamba + glufosinate; oxadiazon + primisulfuron + dicamba + glufosinate; oxadiazon + nicosulfuron + primisulfuron + glufosinate; oxadiazon + nicosulfuron + prosulfuron + glufosinate; oxadiazon + rimsulfuron + primisulfuron + glufosinate; oxadiazon + rimsulfuron + prosulfuron + glufosinate; oxadiazon + metolachlor + isoxaflutole + glufosinate; oxadiazon + metolachlor + isoxaflutole + glufosinate + benoxacor; oxadiazon + S-metolachlor + isoxaflutole + glufosinate; oxadiazon + S-metolachlor + isoxaflutole + glufosinate + benoxacor; oxadiazon + metolachlor + mesotrione + glufosinate; oxadiazon + metolachlor + mesotrione + glufosinate + benoxacor; oxadiazon + S-metolachlor + mesotrione + glufosinate; oxadiazon + S-metolachlor + mesotrione + glufosinate + benoxacor; oxadiazon + metolachlor + atrazine + glufosinate; oxadiazon + metolachlor + atrazine + glufosinate + benoxacor; oxadiazon + S-metolachlor + atrazine + glufosinate; oxadiazon + S-metolachlor + atrazine + glufosinate + benoxacor; oxadiazon + metolachlor + terbuthylazine + glufosinate; oxadiazon + metolachlor + terbuthylazine + glufosinate + benoxacor; oxadiazon + S-metolachlor + terbuthylazine + glufosinate; oxadiazon + S-metolachlor + terbuthylazine + glufosinate + benoxacor; oxadiazon + atrazine + nicosulfuron + glufosinate; oxadiazon + atrazine + nicosulfuron + glufosinate + benoxacor; pentoxazone + prosulfuron + primisulfuron + glufosinate; pentoxazone + prosulfuron + dicamba + glufosinate; pentoxazone + primisulfuron + dicamba + glufosinate; pentoxazone + nicosulfuron + primisulfuron + glufosinate; pentoxazone + nicosulfuron + prosulfuron + glufosinate; pentoxazone + rimsulfuron + primisulfuron + glufosinate; pentoxazone + rimsulfuron + prosulfuron + glufosinate; pentoxazone + metolachlor + isoxaflutole + glufosinate; pentoxazone + metolachlor + isoxaflutole + gtufosinate + benoxacor; pentoxazone + S-metolachlor + isoxafiutole + glufosinate; pentoxazone + S-metolachlor + isoxaflutole + glufosinate + benoxacor; pentoxazone + metolachlor + mesotrione + glufosinate; pentoxazone + metolachlor + mesotrione + glufosinate + benoxacor; pentoxazone + S-metolachlor + mesotrione + glufosinate; pentoxazone + S-metolachlor + mesotrione + glufosinate + benoxacor; pentoxazone + metoiachlor + atrazine + glufosinate; pentoxazone + metolachlor + atrazine + glufosinate + benoxacor; pentoxazone + S-metolachlor + atrazine + glufosinate; pentoxazone + S-metolachlor + atrazine + glufosinate + benoxacor; pentoxazone + metolachlor + terbuthylazine + glufosinate; pentoxazone + metolachlor + terbuthylazine + glufosinate + benoxacor; pentoxazone + S-metolachlor + terbuthylazine + glufosinate; pentoxazone + S-metolachlor + terbuthylazine + glufosinate + benoxacor; pentoxazone + atrazine + nicosulfuron + glufosinate; pentoxazone + atrazine + nicosulfuron + glufosinate + benoxacor; sulfentrazone + prosutfuron + primisulfuron + glufosinate; sulfentrazone + prosulfuron + dicamba + glufosinate; sulfentrazone + primisulfuron + dicamba + glufosinate; sulfentrazone + nicosulfuron + primisulfuron + glufosinate; sulfentrazone + nicosulfuron + prosulfuron + glufosinate; sulfentrazone + rimsulfuron + primisulfuron + glufosinate; sulfentrazone + rimsulfuron + prosulfuron + glufosinate; sulfentrazone + metolachlor + isoxaflutole + glufosinate; sulfentrazone + metolachlor + isoxaflutole + glufosinate + benoxacor; sulfentrazone + S-metolachlor + isoxaflutole + glufosinate; sulfentrazone + S-metolachlor + isoxaflutole + glufosinate + benoxacor; sulfentrazone + metolachlor + mesotrione + glufosinate; sulfentrazone + metolachlor + mesotrione + glufosinate + benoxacor; sulfentrazone + S-metolachlor + mesotrione + glufosinate; sulfentrazone + S-metolachlor + mesotrione + glufosinate + benoxacor; sulfentrazone + metolachlor + atrazine + glufosinate; sulfentrazone + metolachlor + atrazine + glufosinate + benoxacor; sulfentrazone + S-metolachlor + atrazine + glufosinate; sulfentrazone + S-metolachlor + atrazine + glufosinate + benoxacor; sulfentrazone + metolachlor + terbuthylazine + glufosinate; sulfentrazone + metolachlor + terbuthylazine + glufosinate + benoxacor; sulfentrazone + S-metolachlor + terbuthylazine + glufosinate; sulfentrazone + S-metolachlor + terbuthylazine + glufosinate + benoxacor; sulfentrazone + atrazine + nicosulfuron + glufosinate; sulfentrazone + atrazine + nicosulfuron + glufosinate + benoxacor; fluazolate + prosulfuron + primisulfuron + glufosinate; fluazolate + prosulfuron + dicamba + glufosinate; fluazolate + primisulfuron + dicamba + glufosinate; fluazolate + nicosulfuron + primisulfuron + glufosinate; fluazolate + nicosulfuron + prosulfuron + glufosinate; fluazolate + rimsulfuron + primisulfuron + glufosinate; fluazolate + rimsulfuron + prosulfuron + glufosinate; fluazolate + metolachlor + isoxaflutole + glufosinate; fluazolate + metolachlor + isoxaflutole + glufosinate + benoxacor; fluazolate + S-metolachlor + isoxaflutole + glufosinate; fluazolate + S-metolachlor + isoxaflutole + glufosinate + benoxacor; fluazolate + metolachlor + mesotrione + glufosinate; fluazolate + metolachlor + mesotrione + glufosinate + benoxacor; fluazolate + S-metolachlor + mesotrione + glufosinate; fluazolate + S-metolachlor + mesotrione + glufosinate + benoxacor; fluazolate + metolachlor + atrazine + glufosinate; fluazolate + metolachlor + atrazine + glufosinate + benoxacor; fluazolate + S-metolachlor + atrazine + glufosinate; fluazolate + S-metolachlor + atrazine + glufosinate + benoxacor; fluazolate + metolachlor + terbuthylazine + glufosinate; fluazolate + metolachlor + terbuthylazine + glufosinate + benoxacor; fluazolate + S-metoiachlor + terbuthylazine + glufosinate; fluazolate + S-metoiachlor + terbuthylazine + glufosinate + benoxacor; ftuazolate + atrazine + nicosulfuron + glufosinate; fluazolate + atrazine + nicosulfuron + glufosinate + benoxacor; pyraflufen-ethyl + prosulfuron + primisulfuron + glufosinate; pyraflufen-ethyt + prosulfuron + dicamba + glufosinate; pyraflufen-ethyl + primisulfuron + dicamba + glufosinate; pyraflufen-ethyl + nicosuifuron + primisulfuron + glufosinate; pyraflufen-ethyl + nicosulfuron + prosulfuron + glufosinate; pyraflufen-ethyl + rimsulfuron + primisulfuron + glufosinate; pyraflufen-ethyl + rimsulfuron + prosulfuron + glufosinate; pyraflufen-ethyl + metolachlor + isoxaflutole + glufosinate; pyraflufen-ethyl + metolachlor + isoxaflutole + glufosinate + benoxacor; pyraflufen-ethyl + S-metolachlor + isoxaflutole + glufosinate; pyraflufen-ethyl + S-metolachlor + isoxaflutole + glufosinate + benoxacor; pyraflufen-ethyl + metolachlor + mesotrione + glufosinate; pyraflufen-ethyl + metolachlor + mesotrione + glufosinate + benoxacor; pyraflufen-ethyl + S-metolachlor + mesotrione + glufosinate; pyraflufen-ethyl + S-metolachlor + mesotrione + glufosinate + benoxacor; pyraflufen-ethyl + metolachlor + atrazine + glufosinate; pyraflufen-ethyl + metolachlor + atrazine + glufosinate + benoxacor, pyraflufen-ethyl + S-metolachlor + atrazine + glufosinate; pyraflufen-ethyl + S-metoiachlor + atrazine + glufosinate + benoxacor; pyraflufen-ethyl + metolachlor + terbuthylazine + glufosinate; pyraflufen-ethyl + metolachlor + terbuthylazine + glufosinate + benoxacor; pyraflufen-ethyl + S-metolachlor + terbuthylazine + glufosinate; pyraflufen-ethyl + S-metolachlor + terbuthylazine + glufosinate + benoxacor; pyraflufen-ethyl + atrazine + nicosulfuron + glufosinate; pyraflufen-ethyl + atrazine + nicosulfuron + glufosinate + benoxacor; flumipropyn + prosulfuron + primisulfuron + glufosinate; flumipropyn + prosulfuron + dicamba + glufosinate; flumipropyn + primisulfuron + dicamba + glufosinate; flumipropyn + nicosulfuron + primisulfuron + glufosinate; flumipropyn + nicosulfuron + prosulfuron + glufosinate; flumipropyn + rimsulfuron + primisulfuron + glufosinate; flumipropyn + rimsulfuron + prosulfuron + glufosinate; flumipropyn + metolachlor + isoxaflutole + glufosinate; flumipropyn + metolachlor + isoxaflutole + glufosinate + benoxacor; flumipropyn + S-metolachlor + isoxaflutole + glufosinate; flumipropyn + S-metolachlor + isoxaflutole + glufosinate + benoxacor; flumipropyn + metolachlor + mesotrione + glufosinate; flumipropyn + metolachlor + mesotrione + glufosinate + benoxacor; flumipropyn + S-metolachlor + mesotrione + glufosinate; flumipropyn + S-metolachlor + mesotrione + glufosinate + benoxacor; flumipropyn + metolachlor + atrazine + glufosinate; flumipropyn + metolachlor + atrazine + glufosinate + benoxacor; flumipropyn + S-metolachlor + atrazine + glufosinate; flumipropyn + S-metolachlor + atrazine + glufosinate + benoxacor; flumipropyn + metolachlor + terbuthylazine + glufosinate; flumipropyn + metolachlor + terbuthylazine + glufosinate + benoxacor; flumipropyn + S-metolachlor + terbuthylazine + glufosinate; flumipropyn + S-metolachlor + terbuthylazine + glufosinate + benoxacor; flumipropyn + atrazine + nicosulfuron + glufosinate; flumipropyn + atrazine + nicosulfuron + giufosinate + benoxacor; flupropacil + prosulfuron + primisulfuron + glufosinate; flupropacil + prosulfuron + dicamba + glufosinate; flupropacil + primisulfuron + dicamba + glufosinate; flupropacil + nicosulfuron + primisulfuron + glufosinate; flupropacil + nicosulfuron + prosulfuron + glufosinate; flupropacil + rimsulfuron + primisulfuron + glufosinate; flupropacil + rimsulfuron + prosulfuron + glufosinate; flupropacil + metolachlor + isoxaflutole + glufosinate; flupropacil + metolachlor + isoxaflutole + glufosinate + benoxacor; flupropacil + S-metolachlor + isoxaflutole + glufosinate; flupropacil + S-metolachlor + isoxaflutole + glufosinate + benoxacor; flupropacil + metolachlor + mesotrione + glufosinate; flupropacil + metolachlor + mesotrione + glufosinate + benoxacor; flupropacil + S-metolachlor + mesotrione + glufosinate; flupropacil + S-metolachlor + mesotrione + glufosinate + benoxacor; flupropacil + metolachlor + atrazine + glufosinate; flupropacil + metolachlor + atrazine + glufosinate + benoxacor; flupropacil + S-metolachlor + atrazine + glufosinate; flupropacil + S-metolachlor + atrazine + glufosinate + benoxacor; flupropacil + metolachlor + terbuthylazine + glufosinate; flupropacil + metolachlor + terbuthylazine + glufosinate + benoxacor; flupropacil + S-metolachlor + terbuthylazine + glufosinate; flupropacil + S-metolachlor + terbuthylazine + glufosinate + benoxacor; flupropacil + atrazine + nicosulfuron + glufosinate; flupropacil + atrazine + nicosulfuron + glufosinate + benoxacor; nipyraclofen + prosulfuron + primisulfuron + glufosinate; nipyraclofen + prosulfuron + dicamba + glufosinate; nipyraclofen + primisulfuron + dicamba + glufosinate; nipyraclofen + nicosulfuron + primisulfuron + glufosinate; nipyraclofen + nicosulfuron + prosulfuron + glufosinate; nipyraclofen + rimsulfuron + primisulfuron + glufosinate; nipyraclofen + rimsulfuron + prosulfuron + glufosinate; nipyraclofen + metolachlor + isoxaflutole + glufosinate; nipyraclofen + metolachlor + isoxaflutole + glufosinate + benoxacor; nipyraclofen + S-metolachlor + isoxaflutole + glufosinate; nipyraclofen + S-metolachlor + isoxaflutole + glufosinate + benoxacor, nipyraclofen + metolachlor + mesotrione + glufosinate; nipyraclofen + metolachlor + mesotrione + glufosinate + benoxacor; nipyraclofen + S-metotachlor + mesotrione + glufosinate; nipyraclofen + S-metolachlor + mesotrione + glufosinate + benoxacor; nipyraclofen + metolachlor + atrazine + glufosinate; nipyraclofen + metolachlor + atrazine + glufosinate + benoxacor; nipyraclofen + S-metoiachlor + atrazine + glufosinate; nipyraclofen + S-metolachlor + atrazine + glufosinate + benoxacor; nipyraclofen + metolachlor + terbuthylazine + glufosinate; nipyraclofen + metolachlor + terbuthylazine + glufosinate + benoxacor; nipyraclofen + S-metotachlor + terbuthylazine + glufosinate; nipyraclofen + S-metolachlor + terbuthylazine + glufosinate + benoxacor; nipyraclofen + atrazine + nicosulfuron + glufosinate; nipyraclofen + atrazine + nicosulfuron + glufosinate + benoxacor; benzfendizone + prosulfuron + primisulfuron + glufosinate; benzfendizone + prosulfuron + dicamba + glufosinate; benzfendizone + primisulfuron + dicamba + glufosinate; benzfendizone + nicosulfuron + primisulfuron + glufosinate; benzfendizone + nicosulfuron + prosulfuron + glufosinate; benzfendizone + rimsulfuron + primisulfuron + glufosinate; benzfendizone + rimsulfuron + prosulfuron + glufosinate; benzfendizone + metolachlor + isoxaflutole + glufosinate; benzfendizone + metolachlor + isoxaflutole + glufosinate + benoxacor; benzfendizone + S-metolachlor + isoxaflutole + glufosinate; benzfendizone + S-metolachlor + isoxaflutole + glufosinate + benoxacor; benzfendizone + metolachlor + mesotrione + glufosinate; benzfendizone + metolachlor + mesotrione + glufosinate + benoxacor; benzfendizone + S-metolachlor + mesotrione + glufosinate; benzfendizone + S-metolachlor + mesotrione + glufosinate + benoxacor; benzfendizone + metolachlor + atrazine + glufosinate; benzfendizone + metolachlor + atrazine + glufosinate + benoxacor; benzfendizone + S-metolachlor + atrazine + glufosinate; benzfendizone + S-metolachlor + atrazine + glufosinate + benoxacor; benzfendizone + metolachlor + terbuthylazine + glufosinate; benzfendizone + metolachlor + terbuthylazine + glufosinate + benoxacor; benzfendizone + S-metolachlor + terbuthylazine + glufosinate; benzfendizone + S-metolachlor + terbuthylazine + glufosinate + benoxacor; benzfendizone + atrazine + nicosulfuron + glufosinate; benzfendizone + atrazine + nicosulfuron + glufosinate + . benoxacor; thidiazimin + prosulfuron + primisulfuron + glufosinate; thidiazimin + prosulfuron + dicamba + glufosinate; thidiazimin + primisulfuron + dicamba + glufosinate; thidiazimin + nicosulfuron + primisulfuron + glufosinate; thidiazimin + nicosulfuron + prosulfuron + glufosinate; thidiazimin + rimsulfuron + primisulfuron + glufosinate; thidiazimin + rimsulfuron + prosulfuron + glufosinate; thidiazimin + metolachlor + isoxaflutole + glufosinate; thidiazimin + metolachlor + isoxaflutole + glufosinate + benoxacor; thidiazimin + S-metolachlor + isoxaflutole + glufosinate; thidiazimin + S-metolachlor + isoxaflutole + glufosinate + benoxacor; thidiazimin + metolachlor + mesotrione + glufosinate; thidiazimin + metolachlor + mesotrione + glufosinate + benoxacor; thidiazimin + S-metolachlor + mesotrione + glufosinate; thidiazimin + S-metolachlor + mesotrione + glufosinate + benoxacor; thidiazimin + metolachlor + atrazine + glufosinate; thidiazimin + metolachlor + atrazine + glufosinate + benoxacor; thidiazimin + S-metolachlor + atrazine + glufosinate; thidiazimin + S-metolachlor + atrazine + glufosinate + benoxacor; thidiazimin + metolachlor + terbuthylazine + glufosinate; thidiazimin + metolachlor + terbuthylazine + glufosinate + benoxacor; thidiazimin + S-metolachlor + terbuthylazine + glufosinate; thidiazimin + S-metolachlor + terbuthylazine + glufosinate + benoxacor; thidiazimin + atrazine + nicosulfuron + glufosinate; and thidiazimin + atrazine + nicosulfuron + glufosinate + benoxacor.

Acifluorfen + metolachlor + isoxaflutole + glufosinate + MON 4660; acifluorfen + S-metolachlor + isoxaflutole + glufosinate + MON 4660; acifluorfen + metolachlor + mesotrione + glufosinate + MON 4660; acifluorfen + S-metolachlor + mesotrione + glufosinate + MON 4660; acifluorfen + metolachlor + atrazine + glufosinate + MON 4660; acifluorfen + S-metolachlor + atrazine + glufosinate + MON 4660; acifluorfen + metolachlor + terbuthylazine + glufosinate + MON 4660; acifluorfen + S-metolachlor + terbuthylazine + glufosinate + MON 4660; acifluorfen + atrazine + nicosulfuron + glufosinate + MON 4660; aclonifen + metofachlor + isoxaflutole + glufosinate + MON 4660; aclonifen + S-metolachlor + isoxaflutole + glufosinate + MON 4660; aclonifen + metolachlor + mesotrione + glufosinate + MON 4660; aclonifen + S-metolachlor + mesotrione + glufosinate + MON 4660; aclonifen + metolachlor + atrazine + glufosinate + MON 4660; aclonifen + S-metolachlor + atrazine + glufosinate + MON 4660; aclonifen + metolachlor + terbuthylazine + glufosinate + MON 4660; aclonifen + S-metolachlor + terbuthylazine + glufosinate + MON 4660; aclonifen + atrazine + nicosulfuron + glufosinate + MON 4660; bifenox + metolachlor + isoxaflutole + glufosinate + MON 4660; bifenox + S-metolachlor + isoxaflutole + glufosinate + MON 4660; bifenox + metolachlor + mesotrione + glufosinate + MON 4660; bifenox + S-metolachlor + mesotrione + glufosinate + MON 4660; bifenox + metolachlor + atrazine + glufosinate + MON 4660; bifenox + S-metolachlor + atrazine + glufosinate + MON 4660; bifenox + metolachlor + terbuthylazine + glufosinate + MON 4660; bifenox + S-metolachlor + terbuthylazine + glufosinate + MON 4660; bifenox + atrazine + nicosulfuron + glufosinate + MON 4660; chlornitrofen + metolachlor + isoxaflutole + glufosinate + MON 4660; chlornitrofen + S-metolachlor + isoxaflutole + glufosinate + MON 4660; chlornitrofen + metolachlor + mesotrione + glufosinate + MON 4660; chlornitrofen + S-metolachlor + mesotrione + glufosinate + MON 4660; chlornitrofen + metolachlor + atrazine + glufosinate + MON 4660; chlornitrofen + S-metolachlor + atrazine + glufosinate + MON 4660; chlornitrofen + metolachlor + terbuthylazine + glufosinate + MON 4660; chlornitrofen + S-metolachlor + terbuthylazine + glufosinate + MON 4660; chlornitrofen + atrazine + nicosulfuron + glufosinate + MON 4660; ethoxyfen + metolachlor + isoxaflutole + glufosinate + MON 4660; ethoxyfen + S-metolachlor + isoxaflutole + glufosinate + MON 4660; ethoxyfen + metolachlor + mesotrione + glufosinate + MON 4660; ethoxyfen + S-metolachlor + mesotrione + glufosinate + MON 4660; ethoxyfen + metolachlor + atrazine + glufosinate + MON 4660; ethoxyfen + S-metolachlor + atrazine + glufosinate + MON 4660; ethoxyfen + metolachlor + terbuthylazine + glufosinate + MON 4660; ethoxyfen + S-metolachlor + terbuthylazine + glufosinate + MON 4660; ethoxyfen + atrazine + nicosulfuron + glufosinate + MON 4660; fluoroglycofen + metolachlor + isoxaflutole + glufosinate + MON 4660; fluoroglycofen + S-metolachlor + isoxaflutole + glufosinate + MON 4660; fluoroglycofen + metolachlor + mesotrione + glufosinate + MON 4660; fluoroglycofen + S-metolachlor + mesotrione + glufosinate + MON 4660; fluoroglycofen + metolachlor + atrazine + glufosinate + MON 4660; fluoroglycofen + S-metolachlor + atrazine + glufosinate + MON 4660; fluoroglycofen + metolachlor + terbuthylazine + glufosinate + MON 4660; fluoroglycofen + S-metolachlor + terbuthylazine + glufosinate + MON 4660; fluoroglycofen + atrazine + nicosulfuron + glufosinate + MON 4660; fomesafen + metolachlor + isoxaflutole + glufosinate + MON 4660; fomesafen + S-metolachlor + isoxaflutole + glufosinate + MON 4660; fomesafen + metolachlor + mesotrione + glufosinate + MON 4660; fomesafen + S-metolachlor + mesotrione + glufosinate + MON 4660; fomesafen + metolachlor + atrazine + glufosinate + MON 4660; fomesafen + S-metolachlor + atrazine + glufosinate + MON 4660; fomesafen + metolachlor + terbuthylazine + glufosinate + MON 4660; fomesafen + S-metolachlor + terbuthylazine + glufosinate + MON 4660; fomesafen + atrazine + nicosulfuron + glufosinate + MON 4660; lactofen + metolachlor + isoxaflutole + glufosinate + MON 4660; lactofen + S-metolachlor + isoxaflutole + glufosinate + MON 4660; lactofen + metolachlor + mesotrione + glufosinate + MON 4660; lactofen + S-metolachlor + mesotrione + glufosinate + MON 4660; lactofen + metolachlor + atrazine + glufosinate + MON 4660; lactofen + S-metolachlor + atrazine + MON 4660; lactofen + metolachlor + terbuthylazine + glufosinate + MON 4660; lactofen + S-metolachlor + terbuthylazine + glufosinate + MON 4660; lactofen + atrazine + nicosulfuron + glufosinate + MON 4660; oxyfluorfen + metolachlor + isoxaflutole + glufosinate + MON 4660; oxyfluorfen + S-metolachlor + isoxaflutole + glufosinate + MON 4660; oxyfluorfen + metolachlor + mesotrione + glufosinate + MON 4660; oxyfluorfen + S-metolachlor + mesotrione + glufosinate + MON 4660; oxyfluorfen + metolachlor + atrazine + glufosinate + MON 4660; oxyfluorfen + S-metolachlor + atrazine + glufosinate + MON 4660; oxyfluorfen + metolachlor + terbuthylazine + glufosinate + MON 4660; oxyfluorfen + S-metolachlor + terbuthylazine + glufosinate + MON 4660; oxyfluorfen + atrazine + nicosulfuron + glufosinate + MON 4660; azafenidin + metolachlor + isoxaflutole + glufosinate + MON 4660; azafenidin + S-metolachlor + isoxaflutole + glufosinate + MON 4660; azafenidin + metolachlor + mesotrione + glufosinate + MON 4660; azafenidin + S-metolachlor + mesotrione + glufosinate + MON 4660; azafenidin + metolachlor + atrazine + glufosinate + MON 4660; azafenidin + S-metolachlor + atrazine + glufosinate + MON 4660; azafenidin + metolachlor + terbuthylazine + glufosinate + MON 4660; azafenidin + S-metolachlor + terbuthylazine + glufosinate + MON 4660; azafenidin + atrazine + nicosulfuron + glufosinate + MON 4660; carfentrazone-ethyl + metotachlor + isoxaflutole + glufosinate + MON 4660; carfentrazone-ethyl + S-metolachlor + isoxaflutole + glufosinate + MON 4660; carfentrazone-ethyl + metolachlor + mesotrione + glufosinate + MON 4660; carfentrazone-ethyl + S-metolachlor + mesotrione + glufosinate + MON 4660; carfentrazone-ethyl + metolachlor + atrazine + glufosinate + MON 4660; carfentrazone-ethyl + S-metolachlor + atrazine + glufosinate + MON 4660; carfentrazone-ethyl + metolachlor + terbuthylazine + glufosinate + MON 4660; carfentrazone-ethyl + S-metolachlor + terbuthylazine + glufosinate + MON 4660; carfentrazone-ethyl + atrazine + nicosulfuron + glufosinate + MON 4660; compound of the formula A + metolachlor + isoxaflutole + glufosinate + MON 4660; compound of the formula A + S-metolachlor + isoxaflutole + glufosinate + MON 4660; compound of the formula A + metolachlor + mesotrione + glufosinate + MON 4660; compound of the formula A + S-metolachlor + mesotrione + glufosinate + MON 4660; compound of the formula A + metolachlor + atrazine + glufosinate + MON 4660; compound of the formula A + S-metolachlor + atrazine + glufosinate + MON 4660; compound of the formula A + metolachlor + terbuthylazine + glufosinate + MON 4660; compound of the formula A + S-metolachlor + terbuthylazine + glufosinate + MON 4660; compound of the formula A + atrazine + nicosulfuron + glufosinate + MON 4660; cinidon-ethyl + metolachlor + isoxaflutole + glufosinate + MON 4660; cinidon-ethyl + S-metolachlor + isoxaflutole + glufosinate + MON 4660; cinidon-ethyl + metolachlor + mesotrione + glufosinate + MON 4660; cinidon-ethyl + S-metolachlor + mesotrione + glufosinate + MON 4660; cinidon-ethyl + metolachlor + atrazine + glufosinate + MON 4660; cinidon-ethyl + S-metolachlor + atrazine + glufosinate + MON 4660; cinidon-ethyl + metolachlor + terbuthylazine + glufosinate + MON 4660; cinidon-ethyl + S-metolachlor + terbuthylazine + glufosinate + MON 4660; cinidon-ethyl + atrazine + nicosulfuron + glufosinate + MON 4660; flumiclorac-pentyl + metolachlor + isoxaflutole + glufosinate + MON 4660; flumiclorac-pentyl + S-metolachlor + isoxaflutole + glufosinate + MON 4660; flumiclorac-pentyl + metolachlor + mesotrione + glufosinate + MON 4660; flumiclorac-pentyl + S-metolachlor + mesotrione + glufosinate + MON 4660; flumiclorac-pentyl + metolachlor + atrazine + glufosinate + MON 4660; flumiclorac-pentyl + S-metolachlor + atrazine + glufosinate + MON 4660; flumiclorac-pentyl + metolachlor + terbuthylazine + glufosinate + MON 4660; flumiclorac-pentyl + S-metolachlor + terbuthylazine + glufosinate + MON 4660; flumiclorac-pentyl + atrazine + nicosulfuron + glufosinate + MON 4660; flumioxazin + metolachlor + isoxaflutole + glufosinate + MON 4660; flumioxazin + S-metolachlor + isoxaflutole + glufosinate + MON 4660; flumioxazin + metolachlor + mesotrione + glufosinate + MON 4660; flumioxazin + S-metolachlor + mesotrione + glufosinate + MON 4660; flumioxazin + metolachlor + atrazine + glufosinate + MON 4660; flumioxazin + S-metolachlor + atrazine + glufosinate + MON 4660; flumioxazin + metolachlor + terbuthylazine + glufosinate + MON 4660; flumioxazin + S-metolachlor + terbuthylazine + glufosinate + MON 4660; flumioxazin + atrazine + nicosulfuron + glufosinate + MON 4660; fluthiacet-methyl + metolachlor + isoxaflutole + glufosinate + MON 4660; fluthiacet-methyl + S-metolachlor + isoxaflutole + glufosinate + MON 4660; fluthiacet-methyl + metolachlor + mesotrione + glufosinate + MON 4660; fluthiacet-methyl + S-metolachlor + mesotrione + glufosinate + MON 4660; fluthiacet-methyl + metolachlor + atrazine + glufosinate + MON 4660; fluthiacet-methyl + S-metolachlor + atrazine + glufosinate + MON 4660; fluthiacet-methyl + metolachlor + terbuthylazine + glufosinate + MON 4660; fluthiacet-methyl + S-metolachlor + terbuthylazine + glufosinate + MON 4660; fluthiacet-methyl + atrazine + nicosulfuron + glufosinate + MON 4660; oxadiargyl + metolachlor + isoxaflutole + glufosinate + MON 4660; oxadiargyl + S-metolachlor + isoxaflutole + glufosinate + MON 4660; oxadiargyl + metolachlor + mesotrione + glufosinate + MON 4660; oxadiargyl + S-metolachlor + mesotrione + glufosinate + MON 4660; oxadiargyl + metolachlor + atrazine + glufosinate + MON 4660; oxadiargyl + S-metolachlor + atrazine + glufosinate + MON 4660; oxadiargyl + metolachlor + terbuthylazine + glufosinate + MON 4660; oxadiargyl + S-metolachlor + terbuthylazine + glufosinate + MON 4660; oxadiargyl + atrazine + nicosulfuron + glufosinate + MON 4660; oxadiazon + metolachlor + isoxaflutole + glufosinate + MON 4660; oxadiazon + S-metolachlor + isoxaflutole + glufosinate + MON 4660; oxadiazon + metolachlor + mesotrione + glufosinate + MON 4660; oxadiazon + S-metolachlor + mesotrione + glufosinate + MON 4660; oxadiazon + metolachlor + atrazine + glufosinate + MON 4660; oxadiazon + S-metolachlor + atrazine + glufosinate + MON 4660; oxadiazon + metolachlor + terbuthylazine + glufosinate + MON 4660; oxadiazon + S-metolachlor + terbuthylazine + glufosinate + MON 4660; oxadiazon + atrazine + nicosulfuron + glufosinate + MON 4660; pentoxazone + metolachlor + isoxaflutole + glufosinate + MON 4660; pentoxazone + S-metolachlor + isoxaflutole + glufosinate + MON 4660; pentoxazone + metolachlor + mesotrione + glufosinate + MON 4660; pentoxazone + S-metolachlor + mesotrione + glufosinate + MON 4660; pentoxazone + metolachlor + atrazine + glufosinate + MON 4660; pentoxazone + S-metolachlor + atrazine + glufosinate + MON 4660; pentoxazone + metolachlor + terbuthylazine + glufosinate + MON 4660; pentoxazone + S-metolachlor + terbuthylazine + glufosinate + MON 4660; pentoxazone + atrazine + nicosulfuron + glufosinate + MON 4660; sulfentrazone + metolachlor + isoxaflutole + glufosinate + MON 4660; sulfentrazone + S-metolachlor + isoxaflutole + glufosinate + MON 4660; sulfentrazone + metolachlor + mesotrione + glufosinate + MON 4660; sulfentrazone + S-metolachlor + mesotrione + glufosinate + MON 4660; sulfentrazone + metolachlor + atrazine + glufosinate + MON 4660; sulfentrazone + S-metolachlor + atrazine + glufosinate + MON 4660; sulfentrazone + metolachlor + terbuthylazine + glufosinate + MON 4660; sulfentrazone + S-metolachlor + terbuthylazine + glufosinate + MON 4660; sulfentrazone + atrazine + nicosulfuron + glufosinate + MON 4660; fluazolate + metolachlor + isoxaflutole + glufosinate + MON 4660; fluazolate + S-metolachlor + isoxaflutole + glufosinate + MON 4660; fluazolate + metolachlor + mesotrione + glufosinate + MON 4660; fluazolate + S-metolachlor + mesotrione + glufosinate + MON 4660; fluazolate + metolachior + atrazine + glufosinate + MON 4660; fluazolate + S-metolachlor + atrazine + glufosinate + MON 4660; fluazolate + metolachlor + terbuthylazine + glufosinate + MON 4660; fluazolate + S-metolachlor + terbuthylazine + glufosinate + MON 4660; fluazolate + atrazine + nicosulfuron + glufosinate + MON 4660; pyraflufen-ethyl + metolachlor + isoxaflutole + glufosinate + MON 4660; pyraflufen-ethyl + S-metolachlor + isoxaflutole + glufosinate + MON 4660; pyraflufen-ethyl + metolachlor + mesotrione + glufosinate + MON 4660; pyraflufen-ethyl + S-metolachlor + mesotrione + glufosinate + MON 4660; pyraflufen-ethyl + metolachlor + atrazine + glufosinate + MON 4660; pyraflufen-ethyl + S-metolachlor + atrazine + glufosinate + MON 4660; pyraflufen-ethyl + metolachlor + terbuthylazine + glufosinate + MON 4660; pyraflufen-ethyl + S-metolachlor + terbuthylazine + glufosinate + MON 4660; pyraflufen-ethyl + atrazine + nicosulfuron + glufosinate + MON 4660; flumipropyn + metolachlor + isoxaflutole + glufosinate + MON 4660; flumipropyn + S-metolachlor + isoxaflutole + glufosinate + MON 4660; flumipropyn + metolachlor + mesotrione + glufosinate + MON 4660; flumipropyn + S-metolachlor + mesotrione + glufosinate + MON 4660; flumipropyn + metolachlor + atrazine + glufosinate + MON 4660; flumipropyn + S-metolachlor + atrazine + glufosinate + MON 4660; flumipropyn + metolachlor + terbuthylazine + glufosinate + MON 4660; flumipropyn + S-metolachlor + terbuthylazine + glufosinate + MON 4660; flumipropyn + atrazine + nicosulfuron + glufosinate + MON 4660; flupropacil + metolachlor + isoxaflutole + glufosinate + MON 4660; flupropacil + S-metolachlor + isoxaflutole + glufosinate + MON 4660; flupropacil + metolachlor + mesotrione + glufosinate + MON 4660; flupropacil + S-metolachlor + mesotrione + glufosinate + MON 4660; flupropacil + metolachlor + atrazine + glufosinate + MON 4660; flupropacil + S-metolachlor + atrazine + glufosinate + MON 4660; flupropacil + metolachlor + terbuthylazine + glufosinate + MON 4660; flupropacil + S-metolachlor + terbuthylazine + glufosinate + MON 4660; flupropacil + atrazine + nicosulfuron + glufosinate + MON 4660; nipyraclofen + metolachlor + isoxaflutole + glufosinate + MON 4660; nipyraclofen + S-metolachlor + isoxaflutole + glufosinate + MON 4660; nipyraclofen + metolachlor + mesotrione + glufosinate + MON 4660; nipyraclofen + S-metolachlor + mesotrione + glufosinate + MON 4660; nipyraclofen + metolachlor + atrazine + glufosinate + MON 4660; nipyraclofen + S-metolachlor + atrazine + glufosinate + MON 4660; nipyraclofen + metolachlor + terbuthylazine + glufosinate + MON 4660; nipyraclofen + S-metolachlor + terbuthylazine + glufosinate + MON 4660; nipyraclofen + atrazine + nicosulfuron + glufosinate + MON 4660; benzfendizone + metolachlor + isoxaflutole + glufosinate + MON 4660; benzfendizone + S-metolachlor + isoxaflutole + glufosinate + MON 4660; benzfendizone + metolachlor + mesotrione + glufosinate + MON 4660; benzfendizone + S-metolachlor + mesotrione + glufosinate + MON 4660; benzfendizone + metolachlor + atrazine + glufosinate + MON 4660; benzfendizone + S-metolachlor + atrazine + glufosinate + MON 4660; benzfendizone + metolachlor + terbuthylazine + glufosinate + MON 4660; benzfendizone + S-metolachlor + terbuthylazine + glufosinate + MON 4660; benzfendizone + atrazine + nicosulfuron + glufosinate + MON 4660; thidiazimin + metolachlor + isoxaflutole + glufosinate + MON 4660; thidiazimin + S-metolachlor + isoxaflutole + glufosinate + MON 4660; thidiazimin + metolachlor + mesotrione + glufosinate + MON 4660; thidiazimin + S-metolachlor + mesotrione + glufosinate + MON 4660; thidiazimin + metolachlor + atrazine + glufosinate + MON 4660; thidiazimin + S-metolachlor + atrazine + glufosinate + MON 4660; thidiazimin + metolachlor + terbuthylazine + glufosinate + MON 4660; thidiazimin + S-metolachlor + terbuthylazine + glufosinate + MON 4660; and thidiazimin + atrazine + nicosulfuron + glufosinate + MON 4660.

Acifluorfen + metolachlor + isoxaflutole + glufosinate + FLURAZOLE; acifluorfen + S-metolachlor + isoxaflutole + glufosinate + FLURAZOLE; acifluorfen + metolachlor + mesotrione + glufosinate + FLURAZOLE; acifluorfen + S-metolachlor + mesotrione + glufosinate + FLURAZOLE; acifluorfen + metolachlor + atrazine + glufosinate + FLURAZOLE; acifluorfen + S-metolachlor + atrazine + glufosinate + FLURAZOLE; acifluorfen + metolachlor + terbuthylazine + glufosinate + FLURAZOLE; acifluorfen + S-metolachlor + terbuthylazine + glufosinate + FLURAZOLE; acifluorfen + atrazine + nicosulfuron + glufosinate + FLURAZOLE; aclonifen + metolachlor + isoxaflutole + glufosinate + FLURAZOLE; aclonifen + S-metolachlor + isoxaflutole + glufosinate + FLURAZOLE; aclonifen + metolachlor + mesotrione + glufosinate + FLURAZOLE; aclonifen + S-metolachlor + mesotrione + glufosinate + FLURAZOLE; aclonifen + metolachlor + atrazine + glufosinate + FLURAZOLE; aclonifen + S-metolachlor + atrazine + glufosinate + FLURAZOLE; aclonifen + metolachlor + terbuthylazine + glufosinate + FLURAZOLE; aclonifen + S-metolachlor + terbuthylazine + glufosinate + FLURAZOLE; aclonifen + atrazine + nicosulfuron + glufosinate + FLURAZOLE; bifenox + metolachlor + isoxaflutole + glufosinate + FLURAZOLE; bifenox + S-metolachlor + isoxaflutole + glufosinate + FLURAZOLE; bifenox + metolachlor + mesotrione + glufosinate + FLURAZOLE; bifenox + S-metolachlor + mesotrione + glufosinate + FLURAZOLE; bifenox + metolachlor + atrazine + glufosinate + FLURAZOLE; bifenox + S-metolachlor + atrazine + glufosinate + FLURAZOLE; bifenox + metolachlor + terbuthylazine + glufosinate + FLURAZOLE; bifenox + S-metolachlor + terbuthylazine + glufosinate + FLURAZOLE; bifenox + atrazine + nicosulfuron + glufosinate + FLURAZOLE; chlornitrofen + metolachlor + isoxaflutole + glufosinate + FLURAZOLE; chlornitrofen + S-metolachlor + isoxaflutole + glufosinate + FLURAZOLE; chlornitrofen + metolachlor + mesotrione + glufosinate + FLURAZOLE; chlornitrofen + S-metolachlor + mesotrione + glufosinate + FLURAZOLE; chlornitrofen + metolachlor + atrazine + glufosinate + FLURAZOLE; chlornitrofen + S-metolachlor + atrazine + glufosinate + FLURAZOLE; chlornitrofen + metolachlor + terbuthylazine + glufosinate + FLURAZOLE; chlornitrofen + S-metolachlor + terbuthylazine + glufosinate + FLURAZOLE; chlornitrofen + atrazine + nicosulfuron + glufosinate + FLURAZOLE; ethoxyfen + metolachlor + isoxaflutole + glufosinate + FLURAZOLE; ethoxyfen + S-metolachlor + isoxaflutole + glufosinate + FLURAZOLE; ethoxyfen + metolachlor + mesotrione + glufosinate + FLURAZOLE; ethoxyfen + S-metolachlor + mesotrione + glufosinate + FLURAZOLE; ethoxyfen + metolachlor + atrazine + glufosinate + FLURAZOLE; ethoxyfen + S-metolachlor + atrazine + glufosinate + FLURAZOLE; ethoxyfen + metolachlor + terbuthylazine + glufosinate + FLURAZOLE; ethoxyfen + S-metolachlor + terbuthylazine + glufosinate + FLURAZOLE; ethoxyfen + atrazine + nicosulfuron + glufosinate + FLURAZOLE; fluoroglycofen + metolachlor + isoxaflutole + glufosinate + FLURAZOLE; fluoroglycofen + S-metolachlor + isoxaflutole + glufosinate + FLURAZOLE; fluoroglycofen + metolachlor + mesotrione + glufosinate + FLURAZOLE; fluoroglycofen + S-metolachlor + mesotrione + glufosinate + FLURAZOLE; fluoroglycofen + metolachlor + atrazine + glufosinate + FLURAZOLE; fluoroglycofen + S-metolachlor + atrazine + glufosinate + FLURAZOLE; fluoroglycofen + metolachlor + terbuthylazine + glufosinate + FLURAZOLE; fluoroglycofen + S-metolachlor + terbuthylazine + glufosinate + FLURAZOLE; fluoroglycofen + atrazine + nicosulfuron + glufosinate + FLURAZOLE; fomesafen + metolachlor + isoxaflutole + glufosinate + FLURAZOLE; fomesafen + S-metolachlor + isoxaflutole + glufosinate + FLURAZOLE; fomesafen + metolachlor + mesotrione + glufosinate + FLURAZOLE; fomesafen + S-metolachlor + mesotrione + glufosinate + FLURAZOLE; fomesafen + metolachlor + atrazine + glufosinate + FLURAZOLE; fomesafen + S-metolachlor + atrazine + glufosinate + FLURAZOLE; fomesafen + metolachlor + terbuthylazine + glufosinate + FLURAZOLE; fomesafen + S-metolachlor + terbuthylazine + glufosinate + FLURAZOLE; fomesafen + atrazine + nicosulfuron + glufosinate + FLURAZOLE; lactofen + metolachlor + isoxaflutole + glufosinate + FLURAZOLE; lactofen + S-metolachlor + isoxaflutole + glufosinate + FLURAZOLE; lactofen + metolachlor + mesotrione + glufosinate + FLURAZOLE; lactofen + S-metolachlor + mesotrione + glufosinate + FLURAZOLE; lactofen + metolachlor + atrazine + glufosinate + FLURAZOLE; lactofen + S-metolachlor + atrazine + glufosinate + FLURAZOLE; lactofen + metolachlor + terbuthylazine + glufosinate + FLURAZOLE; lactofen + S-metolachlor + terbuthylazine + glufosinate + FLURAZOLE; lactofen + atrazine + nicosulfuron + glufosinate + FLURAZOLE; oxyfluorfen + metolachlor + isoxaflutole + glufosinate + FLURAZOLE; oxyfluorfen + S-metolachlor + isoxaflutole + glufosinate + FLURAZOLE; oxyfluorfen + metolachlor + mesotrione + glufosinate + FLURAZOLE; oxyfluorfen + S-metotachlor + mesotrione + glufosinate + FLURAZOLE; oxyfluorfen + metolachlor + atrazine + glufosinate + FLURAZOLE; oxyfluorfen + S-metolachlor + atrazine + glufosinate + FLURAZOLE; oxyfluorfen + metolachlor + terbuthylazine + glufosinate + FLURAZOLE; oxyfluorfen + S-metolachlor + terbuthylazine + glufosinate + FLURAZOLE; oxyfluorfen + atrazine + nicosulfuron + glufosinate + FLURAZOLE; azafenidin + metolachlor + isoxaflutole + glufosinate + FLURAZOLE; azafenidin + S-metolachlor + isoxaflutole + glufosinate + FLURAZOLE; azafenidin + metolachlor + mesotrione + glufosinate + FLURAZOLE; azafenidin + S-metolachlor + mesotrione + glufosinate + FLURAZOLE; azafenidin + metolachlor + atrazine + glufosinate + FLURAZOLE; azafenidin + S-metolachlor + atrazine + glufosinate + FLURAZOLE; azafenidin + metolachlor + terbuthylazine + glufosinate + FLURAZOLE; azafenidin + S-metolachlor + terbuthylazine + glufosinate + FLURAZOLE; azafenidin + atrazine + nicosulfuron + glufosinate + FLURAZOLE; carfentrazone-ethyl + metolachlor + isoxaflutole + glufosinate + FLURAZOLE; carfentrazone-ethyl + S-metolachlor + isoxaflutole + glufosinate + FLURAZOLE; carfentrazone-ethyl + metolachlor + mesotrione + glufosinate + FLURAZOLE; carfentrazone-ethyl + S-metolachlor + mesotrione + glufosinate + FLURAZOLE; carfentrazone-ethyl + metolachlor + atrazine + glufosinate + FLURAZOLE; carfentrazone-ethyl + S-metolachlor + atrazine + glufosinate + FLURAZOLE; carfentrazone-ethyl + metolachlor + terbuthylazine + glufosinate + FLURAZOLE; carfentrazone-ethyl + S-metolachlor + terbuthylazine + glufosinate + FLURAZOLE; carfentrazone-ethyl + atrazine + nicosulfuron + glufosinate + FLURAZOLE; compound of the formula A + metolachlor + isoxaflutole + glufosinate + FLURAZOLE; compound of the formula A + S-metolachlor + isoxaflutole + glufosinate + FLURAZOLE; compound of the formula A + metolachlor + mesotrione + glufosinate + FLURAZOLE; compound of the formula A + S-metolachlor + mesotrione + glufosinate + FLURAZOLE; compound of the formula A + metolachlor + atrazine + glufosinate + FLURAZOLE; compound of the formula A + S-metolachlor + atrazine + glufosinate + FLURAZOLE; compound of the formula A + metolachlor + terbuthylazine + glufosinate + FLURAZOLE; compound of the formula A + S-metolachlor + terbuthylazine + glufosinate + FLURAZOLE; compound of the formula A + atrazine + nicosulfuron + glufosinate + FLURAZOLE; cinidon-ethyl + metolachlor + isoxaflutole + glufosinate + FLURAZOLE; cinidon-ethyl + S-metolachlor + isoxaflutole + glufosinate + FLURAZOLE; cinidon-ethyl + metolachlor + mesotrione + glufosinate + FLURAZOLE; cinidon-ethyl + S-metolachtor + mesotrione + glufosinate + FLURAZOLE; cinidon-ethyl + metolachlor + atrazine + glufosinate + FLURAZOLE; cinidon-ethyl + S-metolachlor + atrazine + glufosinate + FLURAZOLE; cinidon-ethyl + metolachlor + terbuthylazine + glufosinate + FLURAZOLE; cinidon-ethyl + S-metolachlor + terbuthylazine + glufosinate + FLURAZOLE; cinidon-ethyl + atrazine + nicosulfuron + glufosinate + FLURAZOLE; flumiclorac-pentyl + metolachtor + isoxaflutole + glufosinate + FLURAZOLE; flumictorac-pentyl + S-metolachlor + isoxaflutole + glufosinate + FLURAZOLE; flumiclorac-pentyl + metolachlor + mesotrione + glufosinate + FLURAZOLE; flumiclorac-pentyl + S-metolachlor + mesotrione + glufosinate + FLURAZOLE; flumiclorac-pentyl + metolachfor + atrazine + glufosinate + FLURAZOLE; flumiclorac-pentyl + S-metolachlor + atrazine + glufosinate + FLURAZOLE; flumiclorac-pentyl + metolachlor + terbuthylazine + glufosinate + FLURAZOLE; flumiclorac-pentyl + S-metolachlor + terbuthylazine + glufosinate + FLURAZOLE; flumiclorac-pentyl + atrazine + nicosulfuron + glufosinate + FLURAZOLE; flumioxazin + metolachlor + isoxaflutole + glufosinate + FLURAZOLE; flumioxazin + S-metolachlor + isoxaflutole + glufosinate + FLURAZOLE; flumioxazin + metolachlor + mesotrione + glufosinate + FLURAZOLE; flumioxazin + S-metolachlor + mesotrione + glufosinate + FLURAZOLE; flumioxazin + metolachlor + atrazine + glufosinate + FLURAZOLE; flumioxazin + S-metolachlor + atrazine + glufosinate + FLURAZOLE; flumioxazin + metolachlor + terbuthylazine + glufosinate + FLURAZOLE; flumioxazin + S-metolachlor + terbuthylazine + glufosinate + FLURAZOLE; flumioxazin + atrazine + nicosulfuron + glufosinate + FLURAZOLE; fluthiacet-methyl + metolachlor + isoxaflutole + glufosinate + FLURAZOLE; fluthiacet-methyl + S-metolachlor + isoxaflutole + glufosinate + FLURAZOLE; fluthiacet-methyl + metolachlor + mesotrione + glufosinate + FLURAZOLE; fluthiacet-methyl + S-metolachlor + mesotrione + glufosinate + FLURAZOLE; fluthiacet-methyl + metolachlor + atrazine + glufosinate + FLURAZOLE; fluthiacet-methyl + S-metolachlor + atrazine + glufosinate + FLURAZOLE; fluthiacet-methyl + metolachlor + terbuthylazine + glufosinate + FLURAZOLE; fluthiacet-methyl + S-metolachlor + terbuthylazine + glufosinate + FLURAZOLE; fluthiacet-methyl + atrazine + nicosulfuron + glufosinate + FLURAZOLE; oxadiargyl + metolachlor + isoxaflutole + glufosinate + FLURAZOLE; oxadiargyl + S-metolachlor + isoxaflutole + glufosinate + FLURAZOLE; oxadiargyl + metolachlor + mesotrione + glufosinate + FLURAZOLE; oxadiargyl + S-metolachlor + mesotrione + glufosinate + FLURAZOLE; oxadiargyl + metolachlor + atrazine + glufosinate + FLURAZOLE; oxadiargyl + S-metolachlor + atrazine + glufosinate + FLURAZOLE; oxadiargyl + metolachlor + terbuthylazine + glufosinate + FLURAZOLE; oxadiargyl + S-metolachlor + terbuthylazine + glufosinate + FLURAZOLE; oxadiargyl + atrazine + nicosulfuron + glufosinate + FLURAZOLE; oxadiazon + metolachlor + isoxaflutole + glufosinate + FLURAZOLE; oxadiazon + S-metolachlor + isoxaflutole + glufosinate + FLURAZOLE; oxadiazon + metolachlor + mesotrione + glufosinate + FLURAZOLE; oxadiazon + S-metolachlor + mesotrione + glufosinate + FLURAZOLE; oxadiazon + metolachlor + atrazine + glufosinate + FLURAZOLE; oxadiazon + S-metolachlor + atrazine + glufosinate + FLURAZOLE; oxadiazon + metolachlor + terbuthylazine + glufosinate + FLURAZOLE; oxadiazon + S-metolachlor + terbuthylazine + glufosinate + FLURAZOLE; oxadiazon + atrazine + nicosulfuron + glufosinate + FLURAZOLE; pentoxazone + metolachlor + isoxaflutole + glufosinate + FLURAZOLE; pentoxazone + S-metolachlor + isoxaflutole + glufosinate + FLURAZOLE; pentoxazone + metolachlor + mesotrione + glufosinate + FLURAZOLE; pentoxazone + S-metolachlor + mesotrione + glufosinate + FLURAZOLE; pentoxazone + metolachlor + atrazine + glufosinate + FLURAZOLE; pentoxazone + S-metolachior + atrazine + glufosinate + FLURAZOLE; pentoxazone + metolachlor + terbuthylazine + glufosinate + FLURAZOLE; pentoxazone + S-metolachlor + terbuthylazine + glufosinate + FLURAZOLE; pentoxazone + atrazine + nicosulfuron + glufosinate + FLURAZOLE; sulfentrazone + metolachlor + isoxaflutole + glufosinate + FLURAZOLE; sulfentrazone + S-metolachlor + isoxaflutole + glufosinate + FLURAZOLE; sulfentrazone + metolachlor + mesotrione + glufosinate + FLURAZOLE; sulfentrazone + S-metolachlor + mesotrione + glufosinate + FLURAZOLE; sulfentrazone + metolachlor + atrazine + glufosinate + FLURAZOLE; sulfentrazone + S-metolachlor + atrazine + glufosinate + FLURAZOLE; sulfentrazone + metolachlor + terbuthylazine + glufosinate + FLURAZOLE; sulfentrazone + S-metolachlor + terbuthylazine + glufosinate + FLURAZOLE; sulfentrazone + atrazine + nicosulfuron + glufosinate + FLURAZOLE; fluazolate + metolachlor + isoxaflutole + glufosinate + FLURAZOLE; fluazolate + S-metolachlor + isoxaflutole + glufosinate + FLURAZOLE; fluazolate + metolachlor + mesotrione + glufosinate + FLURAZOLE; fluazolate + S-metolachlor + mesotrione + glufosinate + FLURAZOLE; fluazolate + metoiachlor + atrazine + glufosinate + FLURAZOLE; fluazolate + S-metolachlor + atrazine + glufosinate + FLURAZOLE; fluazolate + metolachlor + terbuthylazine + glufosinate + FLURAZOLE; fluazolate + S-metolachlor + terbuthylazine + glufosinate + FLURAZOLE; fluazolate + atrazine + nicosulfuron + glufosinate + FLURAZOLE; pyraflufen-ethyl + metolachlor + isoxaflutole + glufosinate + FLURAZOLE; pyraflufen-ethyl + S-metolachlor + isoxaflutole + glufosinate + FLURAZOLE; pyraflufen-ethyl + metolachlor + mesotrione + glufosinate + FLURAZOLE; pyraflufen-ethyl + S-metolachlor + mesotrione + glufosinate + FLURAZOLE; pyraflufen-ethyl + metolachlor + atrazine + glufosinate + FLURAZOLE; pyraflufen-ethyl + S-metolachlor + atrazine + glufosinate + FLURAZOLE; pyraflufen-ethyl + metolachlor + terbuthylazine + glufosinate + FLURAZOLE; pyraflufen-ethyl + S-metolachlor + terbuthylazine + glufosinate + FLURAZOLE; pyraflufen-ethyl + atrazine + nicosulfuron + glufosinate + FLURAZOLE; flumipropyn + metolachlor + isoxaflutole + glufosinate + FLURAZOLE; flumipropyn + S-metolachlor + isoxaflutole + glufosinate + FLURAZOLE; flumipropyn + metolachlor + mesotrione + glufosinate + FLURAZOLE; flumipropyn + S-metolachlor + mesotrione + glufosinate + FLURAZOLE; flumipropyn + metolachlor + atrazine + glufosinate + FLURAZOLE; flumipropyn + S-metolachlor + atrazine + glufosinate + FLURAZOLE; flumipropyn + metolachlor + terbuthylazine + glufosinate + FLURAZOLE; flumipropyn + S-metolachlor + terbuthylazine + glufosinate + FLURAZOLE; flumipropyn + atrazine + nicosulfuron + glufosinate + FLURAZOLE; flupropacil + metolachlor + isoxaflutole + glufosinate + FLURAZOLE; flupropacil + S-metolachlor + isoxaflutole + glufosinate + FLURAZOLE; flupropacil + metolachlor + mesotrione + glufosinate + FLURAZOLE; flupropacil + S-metolachlor + mesotrione + glufosinate + FLURAZOLE; flupropacil + metolachlor + atrazine + glufosinate + FLURAZOLE; flupropacil + S-metolachlor + atrazine + glufosinate + FLURAZOLE; flupropacil + metolachlor + terbuthylazine + glufosinate + FLURAZOLE; flupropacil + S-metolachlor + terbuthylazine + glufosinate + FLURAZOLE; flupropacil + atrazine + nicosulfuron + glufosinate + FLURAZOLE; nipyraclofen + metolachlor + isoxaflutole + glufosinate + FLURAZOLE; nipyraclofen + S-metolachlor + isoxaflutole + glufosinate + FLURAZOLE; nipyraclofen + metolachlor + mesotrione + glufosinate + FLURAZOLE; nipyraclofen + S-metolachlor + mesotrione + glufosinate + FLURAZOLE; nipyraclofen + metolachior + atrazine + glufosinate + FLURAZOLE; nipyraclofen + S-metolachlor + atrazine + glufosinate + FLURAZOLE; nipyraclofen + metolachlor + terbuthylazine + glufosinate + FLURAZOLE; nipyraclofen + S-metolachlor + terbuthylazine + glufosinate + FLURAZOLE; nipyraclofen + atrazine + nicosulfuron + glufosinate + FLURAZOLE; benzfendizone + metolachlor + isoxaftutole + glufosinate + FLURAZOLE; benzfendizone + S-metolachlor + isoxaflutole + glufosinate + FLURAZOLE; benzfendizone + metolachlor + mesotrione + glufosinate + FLURAZOLE; benzfendizone + S-metolachlor + mesotrione + glufosinate + FLURAZOLE; benzfendizone + metolachlor + atrazine + glufosinate + FLURAZOLE; benzfendizone + S-metolachlor + atrazine + glufosinate + FLURAZOLE; benzfendizone + metolachlor + terbuthylazine + glufosinate + FLURAZOLE; benzfendizone + S-metolachlor + terbuthylazine + glufosinate + FLURAZOLE; benzfendizone + atrazine + nicosulfuron + glufosinate + FLURAZOLE; thidiazimin + metolachlor + isoxaflutole + glufosinate + FLURAZOLE; thidiazimin + S-metolachlor + isoxaflutole + glufosinate + FLURAZOLE; thidiazimin + metolachlor + mesotrione + glufosinate + FLURAZOLE; thidiazimin + S-metolachlor + mesotrione + glufosinate + FLURAZOLE; thidiazimin + metolachlor + atrazine + glufosinate + FLURAZOLE; thidiazimin + S-metolachlor + atrazine + glufosinate + FLURAZOLE; thidiazimin + metolachlor + terbuthylazine + glufosinate + FLURAZOLE; thidiazimin + S-metolachlor + terbuthylazine + glufosinate + FLURAZOLE; and thidiazimin + atrazine + nicosulfuron + glufosinate + FLURAZOLE.
Acifluorfen + metolachlor + isoxaflutole + glufosinate + DICHLORMID; acifluorfen + S-metolachlor + isoxaflutole + glufosinate + DICHLORMID; acifluorfen + metolachlor + mesotrione + glufosinate + DICHLORMID; acifluorfen + S-metolachlor + mesotrione + glufosinate + DICHLORMID; acifluorfen + metolachlor + atrazine + glufosinate + DICHLORMID; acifluorfen + S-metolachlor + atrazine + glufosinate + DICHLORMID; acifluorfen + metolachlor + terbuthylazine + glufosinate + DICHLORMID; acifluorfen + S-metolachlor + terbuthylazine + glufosinate + DICHLORMID; acifluorfen + atrazine + nicosulfuron + glufosinate + DICHLORMID; aclonifen + metolachlor + isoxaflutole + glufosinate + DICHLORMID; aclonifen + S-metolachlor + isoxaflutole + glufosinate + DICHLORMID; aclonifen + metolachlor + mesotrione + glufosinate + DICHLORMID; aclonifen + S-metolachlor + mesotrione + DICHLORMID; aclonifen + metolachlor + atrazine + glufosinate + DICHLORMID; aclonifen + S-metolachlor + atrazine + glufosinate + DICHLORMID; aclonifen + metolachlor + terbuthylazine + glufosinate + DICHLORMID; aclonifen + S-metolachlor + terbuthylazine + glufosinate + DICHLORMID; aclonifen + atrazine + nicosulfuron + glufosinate + DICHLORMID; bifenox + metolachlor + isoxaflutole + glufosinate + DICHLORMID; bifenox + S-metolachlor + isoxaflutole + glufosinate + DICHLORMID; bifenox + metolachlor + mesotrione + glufosinate + DICHLORMID; bifenox + S-metolachlor + mesotrione + glufosinate + DICHLORMID; bifenox + metolachlor + atrazine + glufosinate + DICHLORMID; bifenox + S-metolachlor + atrazine + glufosinate + DICHLORMID; bifenox + metolachlor + terbuthylazine + glufosinate + DICHLORMID; bifenox + S-metolachlor + terbuthylazine + glufosinate + DICHLORMID; bifenox + atrazine + nicosulfuron + glufosinate + DICHLORMID; chlornitrofen + metolachlor + isoxaflutole + glufosinate + DICHLORMID; chlornitrofen + S-metolachlor + isoxaflutole + glufosinate + DICHLORMID; chlornitrofen + metolachlor + mesotrione + glufosinate + DICHLORMID; chlornitrofen + S-metolachlor + mesotrione + glufosinate + DICHLORMID; chlornitrofen + metolachlor + atrazine + glufosinate + DICHLORMID; chlornitrofen + S-metolachlor + atrazine + glufosinate + DICHLORMID; chlornitrofen + metolachlor + terbuthylazine + glufosinate + DICHLORMID; chlornitrofen + S-metolachlor + terbuthylazine + glufosinate + DICHLORMID; chlornitrofen + atrazine + nicosulfuron + glufosinate + DICHLORMID; ethoxyfen + metolachlor + isoxaflutole + glufosinate + DICHLORMID; ethoxyfen + S-metolachlor + isoxaflutole + glufosinate + DICHLORMID; ethoxyfen + metolachlor + mesotrione + glufosinate + DICHLORMID; ethoxyfen + S-metolachlor + mesotrione + glufosinate + DICHLORMID; ethoxyfen + metolachlor + atrazine + glufosinate + DICHLORMID; ethoxyfen + S-metolachlor + atrazine + glufosinate + DICHLORMID; ethoxyfen + metolachlor + terbuthylazine + glufosinate + DICHLORMID; ethoxyfen + S-metolachlor + terbuthylazine + glufosinate + DICHLORMID; ethoxyfen + atrazine + nicosulfuron + glufosinate + DICHLORMID; fluoroglycofen + metolachlor + isoxaflutole + glufosinate + DICHLORMID; fluoroglycofen + S-metolachlor + isoxaflutole + glufosinate + DICHLORMID; fluoroglycofen + metolachlor + mesotrione + glufosinate + DICHLORMID; fluoroglycofen + S-metolachlor + mesotrione + glufosinate + DICHLORMID; fluoroglycofen + metolachlor + atrazine + glufosinate + DICHLORMID; fluoroglycofen + S-metolachlor + atrazine + glufosinate + DICHLORMID; fluoroglycofen + metolachlor + terbuthylazine + glufosinate + DICHLORMID; fluoroglycofen + S-metolachlor + terbuthylazine + glufosinate + DICHLORMID; fluoroglycofen + atrazine + nicosulfuron + glufosinate + DICHLORMID; fomesafen + metolachlor + isoxaflutole + glufosinate + DICHLORMID; fomesafen + S-metolachlor + isoxaflutole + glufosinate + DICHLORMID; fomesafen + metolachlor + mesotrione + glufosinate + DICHLORMID; fomesafen + S-metolachlor + mesotrione + glufosinate + DICHLORMID; fomesafen + metolachlor + atrazine + glufosinate + DICHLORMID; fomesafen + S-metolachlor + atrazine + glufosinate + DICHLORMID; fomesafen + metolachlor + terbuthylazine + glufosinate + DICHLORMID; fomesafen + S-metolachlor + terbuthylazine + glufosinate + DICHLORMID; fomesafen + atrazine + nicosulfuron + glufosinate + DICHLORMID; lactofen + metolachlor + isoxaflutole + glufosinate + DICHLORMID; lactofen + S-metolachlor + isoxaflutole + glufosinate + DICHLORMtD; lactofen + metolachlor + mesotrione + glufosinate + DICHLORMID; lactofen + S-metolachlor + mesotrione + glufosinate + DICHLORMID; lactofen + metolachlor + atrazine + glufosinate + DICHLORMID; lactofen + S-metolachlor + atrazine + glufosinate + DICHLORMID; lactofen + metolachlor + terbuthylazine + glufosinate + DICHLORMID; lactofen + S-metolachlor + terbuthylazine + glufosinate + DICHLORMID; lactofen + atrazine + nicosulfuron + glufosinate + DICHLORMID; oxyfluorfen + metolachlor + isoxaflutole + glufosinate + DICHLORMID; oxyfluorfen + S-metolachlor + isoxaflutole + glufosinate + DICHLORMID; oxyfluorfen + metolachlor + mesotrione + glufosinate + DICHLORMID; oxyfluorfen + S-metolachlor + mesotrione + glufosinate + DICHLORMID; oxyfluorfen + metolachlor + atrazine + glufosinate + DICHLORMID; oxyfluorfen + S-metolachlor + atrazine + glufosinate + DICHLORMID; oxyfluorfen + metolachlor + terbuthylazine + glufosinate + DICHLORMID; oxyfluorfen + S-metolachlor + terbuthylazine + glufosinate + DICHLORMID; oxyfluorfen + atrazine + nicosulfuron + glufosinate + DICHLORMID; azafenidin + metolachlor + isoxaflutole + glufosinate + DICHLORMID; azafenidin + S-metolachlor + isoxaflutole + glufosinate + DICHLORMID; azafenidin + metolachlor + mesotrione + glufosinate + DICHLORMID; azafenidin + S-metolachlor + mesotrione + glufosinate + DICHLORMID; azafenidin + metolachlor + atrazine + glufosinate + DICHLORMID; azafenidin + S-metolachlor + atrazine + glufosinate + DICHLORMID; azafenidin + metolachlor + terbuthylazine + glufosinate + DICHLORMID; azafenidin + S-metolachlor + terbuthylazine + glufosinate + DICHLORMID; azafenidin + atrazine + nicosulfuron + glufosinate + DICHLORMID; carfentrazone-ethyl + metolachlor + isoxaflutole + glufosinate + DICHLORMID; carfentrazone-ethyl + S-metolachtor + isoxaflutole + glufosinate + DICHLORMID; carfentrazone-ethyl + metolachlor + mesotrione + glufosinate + DICHLORMID; carfentrazone-ethyl + S-metolachlor + mesotrione + glufosinate + DICHLORMID; carfentrazone-ethyl + metolachlor + atrazine + glufosinate + DICHLORMID; carfentrazone-ethyl + S-metolachlor + atrazine + glufosinate + DICHLORMID; carfentrazone-ethyl + metolachlor + terbuthylazine + glufosinate + DICHLORMID; carfentrazone-ethyl + S-metolachlor + terbuthylazine + glufosinate + DICHLORMID; carfentrazone-ethyl + atrazine + nicosulfuron + DICHLORMID; compound of the formula A + metolachlor + isoxaflutole + glufosinate + DICHLORMID; compound of the formula A + S-metolachlor + isoxaflutole + glufosinate + DICHLORMID; compound of the formula A + metoiachlor + mesotrione + glufosinate + DICHLORMID; compound of the formula A + S-metolachlor + mesotrione + glufosinate + DICHLORMID; compound of the formula A + metolachlor + atrazine + glufosinate + DICHLORMID; compound of the formula A + S-metolachlor + atrazine + glufosinate + DICHLORMID; compound of the formula A + metolachlor + terbuthylazine + glufosinate + DICHLORMID; compound of the formula A + S-metolachlor + terbuthylazine + glufosinate + DICHLORMID; compound of the formula A + atrazine + nicosulfuron + glufosinate + DICHLORMID; cinidon-ethyl + metolachlor + isoxaflutole + glufosinate + DICHLORMID; cinidon-ethyl + S-metolachlor + isoxaflutole + glufosinate + DICHLORMID; cinidon-ethyl + metolachlor + mesotrione + glufosinate + DICHLORMID; cinidon-ethyl + S-metolachlor + mesotrione + glufosinate + DICHLORMID; cinidon-ethyl + metolachlor + atrazine + glufosinate + DICHLORMID; cinidon-ethyl + S-metolachlor + atrazine + glufosinate + DICHLORMID; cinidon-ethyl + metolachlor + terbuthylazine + glufosinate + DICHLORMID; cinidon-ethyl + S-metolachlor + terbuthylazine + glufosinate + DICHLORMID; cinidon-ethyl + atrazine + nicosulfuron + glufosinate + DICHLORMID; flumiclorac-pentyl + metolachlor + isoxaflutole + DICHLORMID; flumiclorac-pentyl + S-metolachlor + isoxaflutole + glufosinate + DICHLORMID; flumiclorac-pentyl + metolachlor + mesotrione + glufosinate + DICHLORMID; flumiclorac-pentyl + S-metolachlor + mesotrione + glufosinate + DICHLORMID; flumiclorac-pentyl + metolachlor + atrazine + glufosinate + DICHLORMID; flumiclorac-pentyl + S-metolachlor + atrazine + glufosinate + DICHLORMID; flumiclorac-pentyl + metolachlor + terbuthylazine + glufosinate + DICHLORMID; flumiclorac-pentyl + S-metolachlor + terbuthylazine + glufosinate + DICHLORMID; flumiclorac-pentyl + atrazine + nicosulfuron + glufosinate + DICHLORMID; flumioxazin + metolachlor + isoxaflutole + glufosinate + DICHLORMID; flumioxazin + S-metolachlor + isoxaflutole + glufosinate + DICHLORMID; flumioxazin + metolachlor + mesotrione + glufosinate + DICHLORMID; flumioxazin + S-metolachlor + mesotrione + glufosinate + DICHLORMID; flumioxazin + metolachlor + atrazine + glufosinate + DICHLORMID; flumioxazin + S-metolachlor + atrazine + glufosinate + DICHLORMID; flumioxazin + metolachlor + terbuthylazine + glufosinate + DICHLORMID; flumioxazin + S-metolachlor + terbuthylazine + glufosinate + DICHLORMID; flumioxazin + atrazine + nicosulfuron + glufosinate + DICHLORMID; fluthiacet-methyl + metolachlor + isoxaflutole + glufosinate + DICHLORMID; fluthiacet-methyl + S-metolachlor + isoxaflutole + glufosinate + DICHLORMID; fluthiacet-methyl + metolachlor + mesotrione + glufosinate + DICHLORMID; fluthiacet-methyl + S-metotachlor + mesotrione + glufosinate + DICHLORMID; fluthiacet-methyl + metolachlor + atrazine + glufosinate + DICHLORMID; fluthiacet-methyl + S-metolachlor + atrazine + glufosinate + DICHLORMID; fluthiacet-methyl + metolachlor + terbuthylazine + glufosinate + DICHLORMID; fluthiacet-methyl + S-metotachlor + terbuthylazine + glufosinate + DICHLORMID; fluthiacet-methyl + atrazine + nicosulfuron + glufosinate + DICHLORMID; oxadiargyl + metolachlor + isoxaflutole + glufosinate + DICHLORMID; oxadiargyl + S-metolachlor + isoxaflutole + glufosinate + DICHLORMID; oxadiargyl + metolachlor + mesotrione + glufosinate + DICHLORMID; oxadiargyl + S-metolachlor + mesotrione + glufosinate + DICHLORMID; oxadiargyl + metolachlor + atrazine + glufosinate + DICHLORMID; oxadiargyl + S-metolachlor + atrazine + glufosinate + DICHLORMID; oxadiargyl + metolachlor + terbuthylazine + glufosinate + DICHLORMID; oxadiargyl + S-metolachlor + terbuthylazine + glufosinate + DICHLORMID; oxadiargyl + atrazine + nicosulfuron + glufosinate + DICHLORMID; oxadiazon + metolachlor + isoxaflutole + glufosinate + DICHLORMID; oxadiazon + S-metolachlor + isoxaflutole + glufosinate + DlCHLORMID; oxadiazon + metolachlor + mesotrione + glufosinate + DICHLORMID; oxadiazon + S-metolachlor + mesotrione + glufosinate + DICHLORMID; oxadiazon + metolachlor + atrazine + glufosinate + DICHLORMID; oxadiazon + S-metolachlor + atrazine + glufosinate + DICHLORMID; oxadiazon + metolachlor + terbuthylazine + glufosinate + DICHLORMID; oxadiazon + S-metolachlor + terbuthylazine + glufosinate + DICHLORMID; oxadiazon + atrazine + nicosulfuron + glufosinate + DICHLORMID; pentoxazone + metolachlor + isoxaflutole + glufosinate + DICHLORMID; pentoxazone + S-metolachlor + isoxaflutole + glufosinate + DICHLORMID; pentoxazone + metolachlor + mesotrione + glufosinate + DICHLORMID; pentoxazone + S-metolachlor + mesotrione + glufosinate + DICHLORMID; pentoxazone + metolachlor + atrazine + glufosinate + DICHLORMID; pentoxazone + S-metolachlor + atrazine + glufosinate + DICHLORMID; pentoxazone + metolachlor + terbuthylazine + glufosinate + DICHLORMID; pentoxazone + S-metolachlor + terbuthylazine + glufosinate + DICHLORMID; pentoxazone + atrazine + nicosulfuron + glufosinate + DICHLORMID; sulfentrazone + metolachlor + isoxaflutole + glufosinate + DICHLORMID; sulfentrazone + S-metolachlor + isoxaflutole + glufosinate + DICHLORMID; sulfentrazone + metolachlor + mesotrione + glufosinate + DICHLORMID; sulfentrazone + S-metolachlor + mesotrione + glufosinate + DICHLORMID; sulfentrazone + metolachlor + atrazine + glufosinate + DICHLORMID; sulfentrazone + S-metolachlor + atrazine + glufosinate + DICHLORMID; sulfentrazone + metolachlor + terbuthylazine + glufosinate + DICHLORMID; sulfentrazone + S-metolachlor + terbuthylazine + glufosinate + DICHLORMID; sulfentrazone + atrazine + nicosulfuron + glufosinate + DICHLORMID; fluazolate + metolachlor + isoxaflutole + glufosinate + DICHLORMID; fluazolate + S-metolachlor + isoxaflutole + glufosinate + DICHLORMID; fluazolate + metolachlor + mesotrione + glufosinate + DICHLORMID; fluazolate + S-metolachlor + mesotrione + glufosinate + DICHLORMID; fluazolate + metolachlor + atrazine + glufosinate + DICHLORMID; fluazolate + S-metolachlor + atrazine + glufosinate + DICHLORMID; fluazolate + metolachlor + terbuthylazine + glufosinate + DICHLORMID; fluazolate + S-metolachtor + terbuthylazine + glufosinate + DICHLORMID; fluazolate + atrazine + nicosutfuron + glufosinate + DICHLORMID; pyraflufen-ethyl + metolachlor + isoxaflutole + glufosinate + DICHLORMID; pyraflufen-ethyl + S-metolachlor + isoxaflutole + glufosinate + DICHLORMID; pyraflufen-ethyl + metolachlor + mesotrione + glufosinate + DICHLORMID; pyraflufen-ethyl + S-metolachlor + mesotrione + glufosinate + DICHLORMID; pyraflufen-ethyl + metolachlor + atrazine + glufosinate + DICHLORMID; pyreflufen-ethyl + S-metolachlor + atrazine + glufosinate + DICHLORMID; pyraflufen-ethyl + metolachlor + terbuthylazine + glufosinate + DICHLORMID; pyraflufen-ethyl + S-metolachlor + terbuthylazine + glufosinate + DICHLORMID; pyraflufen-ethyl + atrazine + nicosulfuron + glufosinate + DICHLORMID; flumipropyn + metolachlor + isoxaflutole + glufosinate + DICHLORMID; flumipropyn + S-metoiachlor + isoxaflutote + glufosinate + DICHLORMID; flumipropyn + metolachlor + mesotrione + glufosinate + DICHLORMID; flumipropyn + S-metolachlor + mesotrione + glufosinate + DICHLORMID; flumipropyn + metolachlor + atrazine + glufosinate + DICHLORMID; flumipropyn + S-metolachlor + atrazine + glufosinate + DICHLORMID; flumipropyn + metolachlor + terbuthylazine + glufosinate + DICHLORMID; flumipropyn + S-metolachlor + terbuthylazine + glufosinate + DICHLORMID; flumipropyn + atrazine + nicosulfuron + glufosinate + DICHLORMID; flupropacil + metolachlor + isoxaflutole + glufosinate + DICHLORMID; flupropacil + S-metolachlor + isoxaflutole + glufosinate + DICHLORMID; flupropacil + metolachlor + mesotrione + glufosinate + DICHLORMID; flupropacil + S-metolachlor + mesotrione + glufosinate + DICHLORMID; flupropacil + metolachlor + atrazine + glufosinate + DICHLORMID; flupropacil + S-metolachlor + atrazine + glufosinate + DICHLORMID; flupropaci) + metotachlor + terbuthylazine + glufosinate + DICHLORMID; flupropadl + S-metolachior + terbuthylazine + glufosinate + DICHLORMID; flupropacit + atrazine + nicosulfuron + glufosinate + DICHLORMID; nipyraclofen + metolachlor + isoxaflutole + glufosinate + DICHLORMID; nipyraclofen + S-metolachlor + isoxaflutole + glufosinate + DICHLORMID; nipyraclofen + metolachlor + mesotrione + glufosinate + DICHLORMID; nipyraclofen + S-metolachlor + mesotrione + glufosinate + DICHLORMID; nipyraclofen + metolachlor + atrazine + glufosinate + DICHLORMID; nipyraclofen + S-metolachlor + atrazine + glufosinate + DICHLORMID; nipyraclofen + metolachlor + terbuthylazine + glufosinate + DICHLORMID; nipyraclofen + S-metolachlor + terbuthylazine + glufosinate + DICHLORMID; nipyraclofen + atrazine + nicosulfuron + glufosinate + DICHLORMID; benzfendizone + metolachlor + isoxaflutole + glufosinate + DICHLORMID; benzfendizone + S-metolachlor + isoxaflutole + glufosinate + DICHLORMID; benzfendizone + metolachlor + mesotrione + glufosinate + DICHLORMID; benzfendizone + S-metolachlor + mesotrione + glufosinate + DICHLORMID; benzfendizone + metolachlor + atrazine + glufosinate + DICHLORMID; benzfendizone + S-metolachlor + atrazine + glufosinate + DICHLORMID; benzfendizone + metolachlor + terbuthylazine + glufosinate + DICHLORMID; benzfendizone + S-metolachlor + terbuthylazine + glufosinate + DICHLORMID; benzfendizone + atrazine + nicosulfuron + glufosinate + DICHLORMID; thidiazimin + metolachlor + isoxaflutole + glufosinate + DICHLORMID; thidiazimin + S-metolachlor + isoxaflutole + glufosinate + DICHLORMID; thidiazimin + metolachlor + mesotrione + glufosinate + DICHLORMID; thidiazimin + S-metolachlor + mesotrione + glufosinate + DICHLORMID; thidiazimin + metolachlor + atrazine + glufosinate + DICHLORMID; thidiazimin + S-metolachlor + atrazine + glufosinate + DICHLORMID; thidiazimin + metolachlor + terbuthylazine + glufosinate + DICHLORMID; thidiazimin + S-metolachlor + terbuthylazine + glufosinate + DICHLORMID; and thidiazimin + atrazine + nicosulfuron + glufosinate + DICHLORMID.

Acifluorfen + metolachlor + isoxaflutole + glufosinate + FURILAZOLE; acifluorfen + S-metolachtor + isoxaflutole + glufosinate + FURILAZOLE; acifluorfen + metolachlor + mesotrione + glufosinate + FURILAZOLE; acifluorfen + S-metolachlor + mesotrione + glufosinate + FURILAZOLE; acifluorfen + metolachlor + atrazine + glufosinate + FURILAZOLE; acifluorfen + S-metolachlor + atrazine + glufosinate + FURILAZOLE; acifluorfen + metolachlor + terbuthylazine + glufosinate + FURILAZOLE; acifluorfen + S-metotachlor + terbuthylazine + glufosinate + FURILAZOLE; acifluorfen + atrazine + nicosulfuron + glufosinate + FURILAZOLE; aclonifen + metolachlor + isoxaflutole + glufosinate + FURILAZOLE; aclonifen + S-metolachlor + isoxaflutole + glufosinate + FURILAZOLE; aclonifen + metolachlor + mesotrione + glufosinate + FURILAZOLE; aclonifen + S-metolachlor + mesotrione + glufosinate + FURILAZOLE; aclonifen + metolachlor + atrazine + glufosinate + FURILAZOLE; aclonifen + S-metolachlor + atrazine + glufosinate + FURILAZOLE; aclonifen + metolachlor + terbuthylazine + glufosinate + FURILAZOLE; aclonifen + S-metolachlor + terbuthylazine + glufosinate + FURILAZOLE; aclonifen + atrazine + nicosulfuron + glufosinate + FURILAZOLE; bifenox + metolachlor + isoxaflutole + glufosinate + FURILAZOLE; bifenox + S-metolachlor + isoxaflutole + glufosinate + FURILAZOLE; bifenox + metolachlor + mesotrione + glufosinate + FURILAZOLE; bifenox + S-metolachlor + mesotrione + glufosinate + FURILAZOLE; bifenox + metolachlor + atrazine + glufosinate + FURILAZOLE; bifenox + S-metolachlor + atrazine + glufosinate + FURILAZOLE; bifenox + metolachlor + terbuthylazine + glufosinate + FURILAZOLE; bifenox + S-metolachlor + terbuthylazine + glufosinate + FURILAZOLE; bifenox + atrazine + nicosulfuron + glufosinate + FURILAZOLE; chlornitrofen + metolachlor + isoxaflutole + glufosinate + FURILAZOLE; chlornitrofen + S-metolachlor + isoxaflutole + glufosinate + FURILAZOLE; chlornitrofen + metolachlor + mesotrione + glufosinate + FURILAZOLE; chlornitrofen + S-metolachlor + mesotrione + glufosinate + FURILAZOLE; chlornitrofen + metolachlor + atrazine + glufosinate + FURILAZOLE; chlornitrofen + S-metolachlor + atrazine + glufosinate + FURILAZOLE; chlornitrofen + metolachlor + terbuthylazine + glufosinate + FURILAZOLE; chlornitrofen + S-metolachlor + terbuthylazine + glufosinate + FURILAZOLE; chlornitrofen + atrazine + nicosulfuron + glufosinate + FURILAZOLE; ethoxyfen + metolachlor + isoxaflutole + glufosinate + FURILAZOLE; ethoxyfen + S-metolachlor + isoxaflutole + glufosinate + FURILAZOLE; ethoxyfen + metolachlor + mesotrione + glufosinate + FURILAZOLE; ethoxyfen + S-metolachlor + mesotrione + glufosinate + FURILAZOLE; ethoxyfen + metolachlor + atrazine + glufosinate + FURILAZOLE; ethoxyfen + S-metolachlor + atrazine + glufosinate + FURILAZOLE; ethoxyfen + metolachlor + terbuthylazine + glufosinate + FURILAZOLE; ethoxyfen + S-metolachlor + terbuthylazine + glufosinate + FURILAZOLE; ethoxyfen + atrazine + nicosulfuron + glufosinate + FURILAZOLE; fluoroglycofen + metolachlor + isoxaflutole + glufosinate + FURILAZOLE; fluoroglycofen + S-metolachlor + isoxaflutole + glufosinate + FURILAZOLE; fluoroglycofen + metotachlor + mesotrione + glufosinate + FURILAZOLE; fluoroglycofen + S-metolachlor + mesotrione + glufosinate + FURILAZOLE; fluoroglycofen + metolachlor + atrazine + glufosinate + FURILAZOLE; fluoroglycofen + S-metolachlor + atrazine + glufosinate + FURILAZOLE; fluoroglycofen + metolachlor + terbuthytazine + glufosinate + FURILAZOLE; fluoroglycofen + S-metolachlor + terbuthylazine + glufosinate + FURILAZOLE; fluoroglycofen + atrazine + nicosulfuron + glufosinate + FURILAZOLE; fomesafen + metolachlor + isoxaflutole + glufosinate + FURILAZOLE; fomesafen + S-metolachlor + isoxaflutole + glufosinate + FURILAZOLE; fomesafen + metolachlor + mesotrione + glufosinate + FURILAZOLE; fomesafen + S-metolachlor + mesotrione + glufosinate + FURILAZOLE; fomesafen + metolachlor + atrazine + glufosinate + FURILAZOLE; fomesafen + S-metolachlor + atrazine + glufosinate + FURILAZOLE; fomesafen + metolachlor + terbuthylazine + glufosinate + FURILAZOLE; fomesafen + S-metolachlor + terbuthylazine + glufosinate + FURILAZOLE; fomesafen + atrazine + nicosulfuron + glufosinate + FURILAZOLE; lactofen + metolachlor + isoxaflutole + glufosinate + PURILAZOLE; lactofen + S-metolachlor + isoxaflutole + glufosinate + FURILAZOLE; lactofen + metolachlor + mesotrione + glufosinate + FURILAZOLE; lactofen + S-metolachlor + mesotrione + glufosinate + FURILAZOLE; lactofen + metolachlor + atrazine + glufosinate + FURILAZOLE; lactofen + S-metolachlor + atrazine + glufosinate + FURILAZOLE; lactofen + metolachlor + terbuthylazine + glufosinate + FURILAZOLE; lactofen + S-metolachlor + terbuthylazine + glufosinate + FURILAZOLE; lactofen + atrazine + nicosulfuron + glufosinate + FURILAZOLE; oxyfluorfen + metolachlor + isoxaflutole + glufosinate + FURILAZOLE; oxyfluorfen + S-metolachlor + isoxaflutole + glufosinate + FURILAZOLE; oxyfluorfen + metolachlor + mesotrione + glufosinate + FURILAZOLE; oxyfluorfen + S-metolachlor + mesotrione + glufosinate + FURILAZOLE; oxyfluorfen + metolachlor + atrazine + glufosinate + FURILAZOLE; oxyfluorfen + S-metolachlor + atrazine + glufosinate + FURILAZOLE; oxyfluorfen + metolachlor + terbuthylazine + glufosinate + FURILAZOLE; oxyfluorfen + S-metolachlor + terbuthylazine + glufosinate + FURILAZOLE; oxyfluorfen + atrazine + nicosulfuron + glufosinate + FURILAZOLE; azafenidin + metolachlor + isoxaflutole + glufosinate + FURILAZOLE; azafenidin + S-metolachlor + isoxaflutole + glufosinate + FURILAZOLE; azafenidin + metolachlor + mesotrione + glufosinate + FURILAZOLE; azafenidin + S-metolachlor + mesotrione + glufosinate + FURILAZOLE; azafenidin + metolachlor + atrazine + glufosinate + FURILAZOLE; azafenidin + S-metolachlor + atrazine + glufosinate + FURILAZOLE; azafenidin + metolachlor + terbuthylazine + glufosinate + FURILAZOLE; azafenidin + S-metolachlor + terbuthylazine + glufosinate + FURILAZOLE; azafenidin + atrazine + nicosulfuron + glufosinate + FURILAZOLE; carfentrazone-ethyl + metolachlor + isoxaflutole + glufosinate + FURILAZOLE; carfentrazone-ethyl + S-metolachlor + isoxaflutole + glufosinate + FURILAZOLE; carfentrazone-ethyl + metolachlor + mesotrione + glufosinate + FURILAZOLE; carfentrazone-ethyl + S-metolachlor + mesotrione + glufosinate + FURILAZOLE; carfentrazone-ethyl + metolachlor + atrazine + glufosinate + FURILAZOLE; carfentrazone-ethyl + S-metolachlor + atrazine + glufosinate + FURILAZOLE; carfentrazone-ethyl + metolachlor + terbuthylazine + glufosinate + FURILAZOLE; carfentrazone-ethyl + S-metolachlor + terbuthylazine + glufosinate + FURILAZOLE; carfentrazone-ethyl + atrazine + nicosulfuron + glufosinate + FURILAZOLE; compound of the formula A + metolachlor + isoxaflutole + glufosinate + FURILAZOLE; compound of the formula A + S-metolachlor + isoxaflutole + glufosinate + FURILAZOLE; compound of the formula A + metolachlor + mesotrione + glufosinate + FURILAZOLE; compound of the formula A + S-metolachtor + mesotrione + glufosinate + FURILAZOLE; compound of the formula A + metolachlor + atrazine + glufosinate + FURILAZOLE; compound of the formula A + S-metolachlor + atrazine + glufosinate + FURILAZOLE; compound of the formula A + metolachlor + terbuthylazine + glufosinate + FURILAZOLE; compound of the formula A + S-metolachlor + terbuthylazine + glufosinate + FURILAZOLE; compound of the formula A + atrazine + nicosulfuron + glufosinate + FURILAZOLE; cinidon-ethyl + metolachlor + isoxaflutole + glufosinate + FURILAZOLE; cinidon-ethyl + S-metolachlor + isoxaflutole + glufosinate + FURILAZOLE; cinidon-ethyl + metolachlor + mesotrione + glufosinate + FURILAZOLE; cinidon-ethyl + S-metolachlor + mesotrione + glufosinate + FURILAZOLE; cinidon-ethyl + metolachlor + atrazine + glufosinate + FURILAZOLE; cinidon-ethyl + S-metolachlor + atrazine + glufosinate + FURILAZOLE; cinidon-ethyl + metolachlor + terbuthylazine + glufosinate + FURILAZOLE; cinidon-ethyl + S-metolachlor + terbuthylazine + glufosinate + FURILAZOLE; cinidon-ethyl + atrazine + nicosulfuron + glufosinate + FURILAZOLE; flumiclorac-pentyl + metolachlor + isoxaflutole + glufosinate + FURILAZOLE; flumiclorac-pentyl + S-metolachlor + isoxaflutole + glufosinate + FURILAZOLE; flumiclorac-pentyl + metolachlor + mesotrione + glufosinate + FURILAZOLE; flumiclorac-pentyl + S-metolachlor + mesotrione + glufosinate + FURILAZOLE; flumiclorac-pentyl + metolachlor + atrazine + glufosinate + FURILAZOLE; flumiclorac-pentyl + S-metolachlor + atrazine + glufosinate + FURILAZOLE; flumiclorac-pentyl + metolachlor + terbuthylazine + glufosinate + FURILAZOLE; flumiclorac-pentyl + S-metolachlor + terbuthylazine + glufosinate + FURILAZOLE; flumiclorac-pentyl + atrazine + nicosulfuron + glufosinate + FURILAZOLE; flumioxazin + metolachlor + isoxaflutole + glufosinate + FURILAZOLE; flumioxazin + S-metolachlor + isoxaflutole + glufosinate + FURILAZOLE; flumioxazin + metolachlor + mesotrione + glufosinate + FURILAZOLE; flumioxazin + S-metolachlor + mesotrione + glufosinate + FURILAZOLE; flumioxazin + metolachlor + atrazine + glufosinate + FURILAZOLE; flumioxazin + S-metolachlor + atrazine + glufosinate + FURILAZOLE; flumioxazin + metolachlor + terbuthylazine + glufosinate + FURILAZOLE; flumioxazin + S-metolachlor + terbuthylazine + glufosinate + FURILAZOLE; flumioxazin + atrazine + nicosulfuron + glufosinate + FURILAZOLE; fluthiacet-methyl + metolachlor + isoxaflutole + glufosinate + FURILAZOLE; fluthiacet-methyl + S-metolachlor + isoxaflutole + glufosinate + FURILAZOLE; fluthiacet-methyl + metolachlor + mesotrione + glufosinate + FURILAZOLE; fluthiacet-methyl + S-metolachlor + mesotrione + glufosinate + FURILAZOLE; fluthiacet-methyl + metolachlor + atrazine + glufosinate + FURILAZOLE; fluthiacet-methyl + S-metolachlor + atrazine + glufosinate + FURILAZOLE; fluthiacet-methyl + metolachlor + terbuthylazine + glufosinate + FURILAZOLE; fluthiacet-methyl + S-metolachlor + terbuthylazine + glufosinate + FURILAZOLE; fluthiacet-methyl + atrazine + nicosulfuron + glufosinate + FURILAZOLE; oxadiargyl + metolachlor + isoxaflutole + glufosinate + FURILAZOLE; oxadiargyl + S-metolachlor + isoxaflutole + glufosinate + FURILAZOLE; oxadiargyl + metolachlor + mesotrione + glufosinate + FURILAZOLE; oxadiargyl + S-metolachlor + mesotrione + glufosinate + FURILAZOLE; oxadiargyl + metolachlor + atrazine + glufosinate + FURILAZOLE; oxadiargyl + S-metolachlor + atrazine + glufosinate + FURILAZOLE; oxadiargyl + metolachlor + terbuthylazine + glufosinate + FURILAZOLE; oxadiargyl + S-metolachlor + terbuthylazine + glufosinate + FURILAZOLE; oxadiargyl + atrazine + nicosulfuron + glufosinate + FURILAZOLE; oxadiazon + metolachlor + isoxaflutole + glufosinate + FURILAZOLE; oxadiazon + S-metolachlor + isoxaflutole + glufosinate + FURILAZOLE; oxadiazon + metolachlor + mesotrione + glufosinate + FURILAZOLE; oxadiazon + S-metolachlor + mesotrione + glufosinate + FURILAZOLE; oxadiazon + metolachlor + atrazine + glufosinate + FURILAZOLE; oxadiazon + S-metolachlor + atrazine + glufosinate + FURILAZOLE; oxadiazon + metolachlor + terbuthylazine + glufosinate + FURILAZOLE; oxadiazon + S-metolachlor + terbuthylazine + glufosinate + FURILAZOLE; oxadiazon + atrazine + nicosulfuron + glufosinate + FURILAZOLE; pentoxazone + metolachlor + isoxaflutole + glufosinate + FURILAZOLE; pentoxazone + S-metolachlor + isoxaflutole + glufosinate + FURILAZOLE; pentoxazone + metolachlor + mesotrione + glufosinate + FURILAZOLE; pentoxazone + S-metolachlor + mesotrione + glufosinate + FURILAZOLE; pentoxazone + metolachlor + atrazine + glufosinate + FURILAZOLE; pentoxazone + S-metolachlor + atrazine + glufosinate + FURILAZOLE; pentoxazone + metolachlor + terbuthylazine + glufosinate + FURILAZOLE; pentoxazone + S-metolachlor + terbuthylazine + glufosinate + FURILAZOLE; pentoxazone + atrazine + nicosulfuron + glufosinate + FURILAZOLE; sulfentrazone + metolachlor + isoxaflutole + glufosinate + FURILAZOLE; sulfentrazone + S-metolachlor + isoxaflutole + glufosinate + FURILAZOLE; sulfentrazone + metolachlor + mesotrione + glufosinate + FURILAZOLE; sulfentrazone + S-metolachlor + mesotrione + glufosinate + FURILAZOLE; sulfentrazone + metolachlor + atrazine + glufosinate + FURILAZOLE; sulfentrazone + S-metolachlor + atrazine + glufosinate + FURILAZOLE; sulfentrazone + metolachlor + terbuthylazine + glufosinate + FURILAZOLE; sulfentrazone + S-metolachlor + terbuthylazine + glufosinate + FURILAZOLE; sulfentrazone + atrazine + nicosulfuron + glufosinate + FURILAZOLE; fluazolate + metolachlor + isoxaflutole + glufosinate + FURILAZOLE; fluazolate + S-metolachlor + isoxaflutole + glufosinate + FURILAZOLE; fluazotate + metolachlor + mesotrione + glufosinate + FURILAZOLE; fluazolate + S-metolachlor + mesotrione + glufosinate + FURILAZOLE; fluazolate + metolachlor + atrazine + glufosinate + FURILAZOLE; fluazolate + S-metolachlor + atrazine + glufosinate + FURILAZOLE; fluazolate + metolachlor + terbuthylazine + glufosinate + FURILAZOLE; fluazolate + S-metolachlor + terbuthylazine + glufosinate + FURILAZOLE; fluazolate + atrazine + nicosulfuron + glufosinate + FURILAZOLE; pyraflufen-ethyl + metolachlor + isoxaflutole + glufosinate + FURILAZOLE; pyraflufen-ethyl + S-metolachlor + isoxaflutole + glufosinate + FURILAZOLE; pyraflufen-ethyl + metolachlor + mesotrione + glufosinate + FURILAZOLE; pyraflufen-ethyl + S-metolachlor + mesotrione + glufosinate + FURILAZOLE; pyraflufen-ethyl + metolachlor + atrazine + glufosinate + FURILAZOLE; pyraflufen-ethyl + S-metolachlor + atrazine + glufosinate + FURILAZOLE; pyraflufen-ethyl + metolachlor + terbuthylazine + glufosinate + FURILAZOLE; pyraflufen-ethyl + S-metoiachlor + terbuthylazine + glufosinate + FURILAZOLE; pyraflufen-ethyl + atrazine + nicosulfuron + glufosinate + FURILAZOLE; flumipropyn + metolachlor + isoxaflutole + glufosinate + FURILAZOLE; flumipropyn + S-metolachlor + isoxaflutole + glufosinate + FURILAZOLE; flumipropyn + metolachlor + mesotrione + glufosinate + FURILAZOLE; flumipropyn + S-metolachlor + mesotrione + glufosinate + FURILAZOLE; flumipropyn + metolachlor + atrazine + glufosinate + FURILAZOLE; flumipropyn + S-metolachlor + atrazine + glufosinate + FURILAZOLE; flumipropyn + metolachlor + terbuthylazine + glufosinate + FURILAZOLE; flumipropyn + S-metolachlor + terbuthylazine + glufosinate + FURILAZOLE; flumipropyn + atrazine + nicosulfuron + glufosinate + FURILAZOLE; flupropacil + metolachlor + isoxaflutole + glufosinate + FURILAZOLE; flupropacil + S-metolachlor + isoxaflutole + glufosinate + FURILAZOLE; flupropacil + metolachlor + mesotrione + glufosinate + FURILAZOLE; flupropacit + S-metolachlor + mesotrione + glufosinate + FURILAZOLE; flupropacil + metolachlor + atrazine + glufosinate + FURILAZOLE; flupropacil + S-metolachlor + atrazine + glufosinate + FURILAZOLE; flupropacil + metolachlor + terbuthylazine + glufosinate + FURILAZOLE; flupropacil + S-metolachlor + terbuthylazine + glufosinate + FURILAZOLE; flupropacil + atrazine + nicosulfuron + glufosinate + FURILAZOLE; nipyraclofen + metolachlor + isoxaflutole + glufosinate + FURILAZOLE; nipyraclofen + S-metolachlor + isoxaflutole + glufosinate + FURILAZOLE; nipyraclofen + metolachlor + mesotrione + glufosinate + FURILAZOLE; nipyraclofen + S-metolachlor + mesotrione + glufosinate + FURILAZOLE; nipyraclofen + metolachlor + atrazine + glufosinate + FURILAZOLE; nipyraclofen + S-metolachlor + atrazine + glufosinate + FURILAZOLE; nipyraclofen + metolachlor + terbuthylazine + glufosinate + FURILAZOLE; nipyraclofen + S-metolachlor + terbuthylazine + glufosinate + FURILAZOLE; nipyraclofen + atrazine + nicosulfuron + glufosinate + FURILAZOLE; benzfendizone + metolachlor + isoxaflutole + glufosinate + FURILAZOLE; benzfendizone + S-metolachlor + isoxaflutole + glufosinate + FURILAZOLE; benzfendizone + metolachlor + mesotrione + glufosinate + FURILAZOLE; benzfendizone + S-metolachlor + mesotrione + glufosinate + FURILAZOLE; benzfendizone + metolachlor + atrazine + glufosinate + FURILAZOLE; benzfendizone + S-metolachlor + atrazine + glufosinate + FURILAZOLE; benzfendizone + metolachlor + terbuthylazine + glufosinate + FURILAZOLE; benzfendizone + S-metolachlor + terbuthylazine + glufosinate + FURILAZOLE; benzfendizone + atrazine + nicosulfuron + glufosinate + FURILAZOLE; thidiazimin + metolachlor + isoxaflutole + glufosinate + FURILAZOLE; thidiazimin + S-metolachlor + isoxaflutole + glufosinate + FURILAZOLE; thidiazimin + metolachlor + mesotrione + glufosinate + FURILAZOLE; thidiazimin + S-metolachlor + mesotrion + glufosinate + FURILAZOLE; thidiazimin + metolachlor + atrazine + glufosinate + FURILAZOLE; thidiazimin + S-metolachlor + atrazine + glufosinate + FURILAZOLE; thidiazimin + metolachlor + terbuthylazine + glufosinate + FURILAZOLE; thidiazimin + S-metolachlor + terbuthylazine + glufosinate + FURILAZOLE; and thidiazimin + atrazine + nicosulfuron + glufosinate + FURILAZOLE.

Acifluorfen + prosulfuron + primisulfuron + sulfosate; acifluorfen + prosulfuron + dicamba + sulfosate; acifluorfen + primisulfuron + dicamba + sulfosate; acifluorfen + nicosulfuron + primisulfuron + sulfosate; acifluorfen + nicosulfuron + prosulfuron + sulfosate; acifluorfen + rimsulfuron + primisulfuron + sulfosate; acifluorfen + rimsulfuron + prosulfuron + sulfosate; acifluorfen + metolachlor + isoxaflutole + sulfosate; acifluorfen + metolachlor + isoxaflutole + sulfosate + benoxacor; acifluorfen + S-metolachlor + isoxaflutole + sulfosate; acifluorfen + S-metolachlor + isoxaflutole + sulfosate + benoxacor; acifluorfen + metolachlor + mesotrione + sulfosate; acifluorfen + metolachlor + mesotrione + sulfosate + benoxacor; acifluorfen + S-metolachlor + mesotrione + sulfosate; acifluorfen + S-metolachlor + mesotrione + benoxacor + sulfosate; acifluorfen + metolachlor + atrazine + sulfosate; acifluorfen + metolachlor + atrazine + sulfosate + benoxacor; acifluorfen + S-metolachlor + atrazine + sulfosate; acifluorfen + S-metolachlor + atrazine + sulfosate + benoxacor; acifluorfen + metolachlor + terbuthylazine + sulfosate; acifluorfen + metolachlor + terbuthylazine + sulfosate + benoxacor; acifluorfen + S-metolachlor + terbuthylazine + sulfosate; acifluorfen + S-metolachlor + terbuthylazine + sulfosate + benoxacor; acifluorfen + atrazine + nicosulfuron + sulfosate; acifluorfen + atrazine + nicosulfuron + sulfosate + benoxacor; aclonifen + prosulfuron + primisulfuron + sulfosate; aclonifen + prosulfuron + dicamba + sulfosate; aclonifen + primisulfuron + dicamba + sulfosate; aclonifen + nicosulfuron + primisulfuron + sulfosate; aclonifen + nicosulfuron + prosulfuron + sulfosate; aclonifen + rimsulfuron + primisulfuron + sulfosate; aclonifen + rimsulfuron + prosulfuron + sulfosate; aclonifen + metolachlor + isoxaflutole + sulfosate; aclonifen + metolachlor + isoxaflutole + sulfosate + benoxacor; aclonifen + S-metolachlor + isoxaflutole + sulfosate; aclonifen + S-metolachlor + isoxaflutole + sulfosate + benoxacor; actonifen + metolachlor + mesotrione + sulfosate; aclonifen + metolachlor + mesotrione + sulfosate + benoxacor; aclonifen + S-metolachlor + mesotrione + sulfosate; aclonifen + S-metolachlor + mesotrione + sulfosate + benoxacor; aclonifen + metolachlor + atrazine + sulfosate; aclonifen + metolachlor + atrazine + sulfosate + benoxacor; aclonifen + S-metolachlor + atrazine + sulfosate; aclonifen + S-metolachlor + atrazine + sulfosate + benoxacor; aclonifen + metolachlor + terbuthylazine + sulfosate; aclonifen + metolachlor + terbuthylazine + sulfosate + benoxacor; aclonifen + S-metolachlor + terbuthylazine + sulfosate; aclonifen + S-metolachlor + terbuthylazine + sulfosate + benoxacor; aclonifen + atrazine + nicosulfuron + sulfosate; aclonifen + atrazine + nicosulfuron + sulfosate + benoxacor; bifenox + prosulfuron + primisulfuron + sulfosate; bifenox + prosulfuron + dicamba + sulfosate; bifenox + primisulfuron + dicamba + sulfosate; bifenox + nicosulfuron + primisulfuron + sulfosate; bifenox + nicosulfuron + prosulfuron + sulfosate; bifenox + rimsulfuron + primisulfuron + sulfosate; bifenox + rimsulfuron + prosulfuron + sulfosate; bifenox + metolachlor + isoxaflutole + sulfosate; bifenox + metolachlor + isoxaflutole + sulfosate + benoxacor; bifenox + S-metolachlor + isoxaflutole + sulfosate; bifenox + S-metolachlor + isoxaflutole + sulfosate + benoxacor; bifenox + metolachlor + mesotrione + sulfosate; bifenox + metolachlor + mesotrione + sulfosate + benoxacor; bifenox + S-metolachlor + mesotrione + sulfosate; bifenox + S-metolachlor + mesotrione + sulfosate + benoxacor; bifenox + metolachlor + atrazine + sulfosate; bifenox + metolachlor + atrazine + sulfosate + benoxacor; bifenox + S-metolachlor + atrazine + sulfosate; bifenox + S-metolachlor + atrazine + sulfosate + benoxacor; bifenox + metolachlor + terbuthylazine + sulfosate; bifenox + metolachlor + terbuthylazine + sulfosate + benoxacor; bifenox + S-metolachlor + terbuthylazine + sulfosate; bifenox + S-metolachlor + terbuthylazine + sulfosate + benoxacor; bifenox + atrazine + nicosulfuron + sulfosate; bifenox + atrazine + nicosulfuron + sulfosate + benoxacor; chlornitrofen + prosulfuron + primisulfuron + sulfosate; chlornitrofen + prosulfuron + dicamba + sulfosate; chlornitrofen + primisulfuron + dicamba + sulfosate; chlornitrofen + nicosulfuron + primisulfuron + sulfosate; chlornitrofen + nicosulfuron + prosulfuron + sulfosate; chlornitrofen + rimsulfuron + primisulfuron + sulfosate; chlornitrofen + rimsulfuron + prosulfuron + sulfosate; chlornitrofen + metolachlor + isoxaflutole + sulfosate; chlornitrofen + metolachlor + isoxaflutole + sulfosate + benoxacor; chlornitrofen + S-metolachlor + isoxaflutole + sulfosate; chlornitrofen + S-metolachlor + isoxaflutole + sulfosate + benoxacor; chlornitrofen + metolachlor + mesotrione + sulfosate; chlornitrofen + metolachlor + mesotrione + sulfosate + benoxacor; chlornitrofen + S-metolachlor + mesotrione + sutfosate; chlornitrofen + S-metolachlor + mesotrione + sulfosate + benoxacor; chlornitrofen + metolachlor + atrazine + sulfosate; chlornitrofen + metolachlor + atrazine + sulfosate + benoxacor; chlornitrofen + S-metolachlor + atrazine + sulfosate; chlornitrofen + S-metolachlor + atrazine + sulfosate + benoxacor, chlornitrofen + metolachlor + terbuthylazine + sulfosate; chlornitrofen + metolachlor + terbuthylazine + sulfosate + benoxacor; chlornitrofen + S-metolachlor + terbuthylazine + sulfosate; chlornitrofen + S-metolachlor + terbuthylazine + sulfosate + benoxacor; chlornitrofen + atrazine + nicosulfuron + sulfosate; chlornitrofen + atrazine + nicosulfuron + sulfosate + benoxacor; ethoxyfen + prosulfuron + primisulfuron + sulfosate; ethoxyfen + prosulfuron + dicamba + sulfosate; ethoxyfen + primisulfuron + dicamba + sulfosate; ethoxyfen + nicosulfuron + primisulfuron + sulfosate; ethoxyfen + nicosulfuron + prosulfuron + sulfosate; ethoxyfen + rimsulfuron + primisulfuron + sulfosate; ethoxyfen + rimsulfuron + prosulfuron + sulfosate; ethoxyfen + metolachlor + isoxaflutole + sulfosate; ethoxyfen + metolachlor + isoxaflutole + sulfosate + benoxacor; ethoxyfen + S-metolachlor + isoxaflutole + sulfosate; ethoxyfen + S-metolachlor + isoxaflutole + sulfosate + benoxacor; ethoxyfen + metolachlor + mesotrione + sulfosate; ethoxyfen + metolachlor + mesotrione + sulfosate + benoxacor; ethoxyfen + S-metolachlor + mesotrione + sulfosate; ethoxyfen + S-metolachlor + mesotrione + sulfosate + benoxacor; ethoxyfen + metolachlor + atrazine + sulfosate; ethoxyfen + metolachlor + atrazine + sulfosate + benoxacor; ethoxyfen + S-metolachlor + atrazine + sulfosate; ethoxyfen + S-metolachlor + atrazine + sulfosate + benoxacor; ethoxyfen + metofachlor + terbuthylazine + sulfosate; ethoxyfen + metolachtor + terbuthylazine + sulfosate + benoxacor; ethoxyfen + S-metolachlor + terbuthylazine + sulfosate; ethoxyfen + S-metolachlor + terbuthylazine + sulfosate + benoxacor; ethoxyfen + atrazine + nicosulfuron + sulfosate; ethoxyfen + atrazine + nicosulfuron + sulfosate + benoxacor; fluoroglycofen + prosulfuron + primisulfuron + sulfosate; fluoroglycofen + prosulfuron + dicamba + suffocate; fluoroglycofen + primisulfuron + dicamba + sulfosate; fluoroglycofen + nicosulfuron + primisulfuron + sulfosate; fluoroglycofen + nicosulfuron + prosulfuron + sulfosate; fluoroglycofen + rimsulfuron + primisulfuron + sulfosate; fluoroglycofen + rimsulfuron + prosulfuron + sulfosate; fluoroglycofen + metolachlor + isoxaflutole + sulfosate; fluoroglycofen + metolachlor + isoxaflutole + sutfosate + benoxacor; fluoroglycofen + S-metolachlor + isoxaflutole + sulfosate; fluoroglycofen + S-metolachlor + isoxaflutole + sulfosate + benoxacor; fluoroglycofen + metolachlor + mesotrione + sulfosate; fluoroglycofen + metolachlor + mesotrione + sulfosate + benoxacor; fluoroglycofen + S-metolachlor + mesotrione + sulfosate; fluoroglycofen + S-metolachlor + mesotrione + sulfosate + benoxacor; fluoroglycofen + metolachlor + atrazine + sulfosate; fluoroglycofen + metolachlor + atrazine + sulfosate + benoxacor; fluorogiycofen + S-metolachlor + atrazine + sulfosate; fluoroglycofen + S-metolachlor + atrazine + sulfosate + benoxacor; fluoroglycofen + metolachlor + terbuthylazine + sulfosate; fluoroglycofen + metolachlor + terbuthylazine + sulfosate + benoxacor; fluoroglycofen + S-metolachlor + terbuthylazine + sutfosate; fluoroglycofen + S-metolachlor + terbuthylazine + sulfosate + benoxacor; fluoroglycofen + atrazine + nicosulfuron + sulfosate; fluoroglycofen + atrazine + nicosulfuron + sulfosate + benoxacor; fomesafen + prosulfuron + primisulfuron + sulfosate; fomesafen + prosulfuron + dicamba + sulfosate; fomesafen + primisulfuron + dicamba + sulfosate; fomesafen + nicosulfuron + primisulfuron + sulfosate; fomesafen + nicosulfuron + prosulfuron + sulfosate; fomesafen + rimsulfuron + primisulfuron + sulfosate; fomesafen + rimsulfuron + prosulfuron + sulfosate; fomesafen + metolachlor + isoxaflutole + sulfosate; fomesafen + metolachlor + isoxaflutole + sulfosate + benoxacor; fomesafen + S-metolachlor + isoxaflutole + sulfosate; fomesafen + S-metolachlor + isoxaflutole + sulfosate + benoxacor; fomesafen + metolachlor + mesotrione + sulfosate; fomesafen + metolachlor + mesotrione + sulfosate + benoxacor; fomesafen + S-metolachlor + mesotrione + sulfosate; fomesafen + S-metolachlor + mesotrione + sulfosate + benoxacor; fomesafen + metolachlor + atrazine + sulfosate; fomesafen + metolachlor + atrazine + sulfosate + benoxacor; fomesafen + S-metolachlor + atrazine + sulfosate; fomesafen + S-metolachlor + atrazine + sulfosate + benoxacor; fomesafen + metolachlor + terbuthylazine + sulfosate; fomesafen + metolachlor + terbuthylazine + sulfosate + benoxacor; fomesafen + S-metolachlor + terbuthylazine + sulfosate; fomesafen + S-metolachlor + terbuthylazine + sulfosate + benoxacor; fomesafen + atrazine + nicosulfuron + sulfosate; fomesafen + atrazine + nicosulfuron + sulfosate + benoxacor; lactofen + prosulfuron + primisulfuron + sulfosate; lactofen + prosulfuron + dicamba + sulfosate; lactofen + primisulfuron + dicamba + sulfosate; lactofen + nicosulfuron + primisulfuron + sulfosate; lactofen + nicosulfuron + prosulfuron + sulfosate; lactofen + rimsulfuron + primisulfuron + sulfosate; lactofen + rimsulfuron + prosulfuron + sulfosate; lactofen + metolachlor + isoxaflutole + sulfosate; lactofen + metolachlor + isoxaflutole + sulfosate + benoxacor; lactofen + S-metolachlor + isoxaflutole + sulfosate; lactofen + S-metolachlor + isoxaflutole + sulfosate + benoxacor; lactofen + metolachlor + mesotrione + sulfosate; lactofen + metolachlor + mesotrione + sulfosate + benoxacor; lactofen + S-metolachlor + mesotrione + sulfosate; lactofen + S-metolachlor + mesotrione + sulfosate + benoxacor; lactofen + metolachlor + atrazine + sulfosate; lactofen + metolachlor + atrazine + benoxacor; lactofen + S-metolachlor + atrazine; lactofen + S-metolachlor + atrazine + sulfosate + benoxacor; lactofen + metolachlor + terbuthylazine + sulfosate; lactofen + metolachlor + terbuthylazine + sulfosate + benoxacor; lactofen + S-metolachlor + terbuthylazine + sulfosate; lactofen + S-metolachlor + terbuthylazine + sulfosate + benoxacor; lactofen + atrazine + nicosulfuron + sulfosate; lactofen + atrazine + nicosulfuron + sulfosate + benoxacor; oxyfluorfen + prosulfuron + primisulfuron + sulfosate; oxyfluorfen + prosulfuron + dicamba + sulfosate; oxyfluorfen + primisulfuron + dicamba + sulfosate; oxyfluorfen + nicosulfuron + primisulfuron + sulfosate; oxyfluorfen + nicosulfuron + prosulfuron + sulfosate; oxyfluorfen + rimsulfuron + primisulfuron + sulfosate; oxyfluorfen + rimsulfuron + prosulfuron + sulfosate; oxyfluorfen + metolachlor + isoxaflutole + sulfosate; oxyfluorfen + metolachlor + isoxaflutole + sulfosate + benoxacor; oxyfluorfen + S-metolachlor + isoxaflutole + sulfosate; oxyfluorfen + S-metolachlor + isoxaflutole + sulfosate + benoxacor; oxyfluorfen + metolachlor + mesotrione + sulfosate; oxyfluorfen + metolachlor + mesotrione + sulfosate + benoxacor; oxyfluorfen + S-metolachlor + mesotrione + sulfosate; oxyfluorfen + S-metolachlor + mesotrione + sulfosate + benoxacor; oxyfluorfen + metolachlor + atrazine + sulfosate; oxyfluorfen + metolachlor + atrazine + sulfosate + benoxacor; oxyfluorfen + S-metolachlor + atrazine + sulfosate; oxyfluorfen + S-metolachlor + atrazine + sulfosate + benoxacor; oxyfluorfen + metolachlor + terbuthylazine + sulfosate; oxyfluorfen + metolachlor + terbuthylazine + sulfosate + benoxacor; oxyfluorfen + S-metolachlor + terbuthylazine + sulfosate; oxyfluorfen + S-metolachlor + terbuthylazine + sulfosate + benoxacor; oxyfluorfen + atrazine + nicosulfuron + sulfosate; oxyfluorfen + atrazine + nicosulfuron + sulfosate + benoxacor; azafenidin + prosulfuron + primisulfuron + sulfosate; azafenidin + prosulfuron + dicamba + sulfosate; azafenidin + primisulfuron + dicamba + sulfosate; azafenidin + nicosulfuron + primisulfuron + sulfosate; azafenidin + nicosulfuron + prosulfuron + sulfosate; azafenidin + rimsulfuron + primisulfuron + sulfosate; azafenidin + rimsulfuron + prosulfuron + sulfosate; azafenidin + metolachior + isoxaflutole + sulfosate; azafenidin + metolachlor + isoxaflutole + sulfosate + benoxacor; azafenidin + S-metofachlor + isoxaflutole + sulfosate; azafenidin + S-metolachlor + isoxaflutole + sulfosate + benoxacor; azafenidin + metolachlor + mesotrione + sulfosate; azafenidin + metolachlor + mesotrione + sulfosate + benoxacor; azafenidin + S-metolachlor + mesotrione + sulfosate; azafenidin + S-metolachlor + mesotrione + sulfosate + benoxacor; azafenidin + metolachlor + atrazine + sulfosate; azafenidin + metolachlor + atrazine + sulfosate + benoxacor; azafenidin + S-metolachlor + atrazine + sulfosate; azafenidin + S-metolachlor + atrazine + sulfosate + benoxacor; azafenidin + metolachlor + terbuthylazine + sulfosate; azafenidin + metolachlor + terbuthylazine + sulfosate + benoxacor; azafenidin + S-metolachlor + terbuthylazine + sulfosate; azafenidin + S-metolachlor + terbuthylazine + sulfosate + benoxacor; azafenidin + atrazine + nicosulfuron + sulfosate; azafenidin + atrazine + nicosulfuron + sulfosate + benoxacor; carfentrazone-ethyl + prosulfuron + primisulfuron + sulfosate; carfentrazone-ethyl + prosulfuron + dicamba + sulfosate; carfentrazone-ethyl + primisulfuron + dicamba + sulfosate; carfentrazone-ethyl + nicosulfuron + primisulfuron + sulfosate; carfentrazone-ethyl + nicosulfuron + prosulfuron + sulfosate; carfentrazone-ethyl + rimsulfuron + primisulfuron + sulfosate; carfentrazone-ethyl + rimsulfuron + prosulfuron + sulfosate; carfentrazone-ethyl + metolachlor + isoxaflutole + sulfosate; carfentrazone-ethyl + metolachlor + isoxaflutole + sulfosate + benoxacor; carfentrazone-ethyl + S-metolachlor + isoxaflutole + sulfosate; carfentrazone-ethyl + S-metolachlor + isoxaflutole + sulfosate + benoxacor; carfentrazone-ethyl + metolachlor + mesotrione + sulfosate; carfentrazone-ethyl + metolachlor + mesotrione + sulfosate + benoxacor; carfentrazone-ethyl + S-metolachlor + mesotrione + sulfosate; carfentrazone-ethyl + S-metolachlor + mesotrione + sulfosate + benoxacor; carfentrazone-ethyl + metolachlor + atrazine + sulfosate; carfentrazone-ethyl + metolachlor + atrazine + sulfosate + benoxacor; carfentrazone-ethyl + S-metolachlor + atrazine + sulfosate; carfentrazone-ethyl + S-metolachlor + atrazine + sulfosate + benoxacor; carfentrazone-ethyl + metolachlor + terbuthylazine + sulfosate; carfentrazone-ethyl + metolachlor + terbuthylazine + sulfosate + benoxacor; carfentrazone-ethyl + S-metolachlor + terbuthylazine + sulfosate; carfentrazone-ethyl + S-metolachlor + terbuthylazine + sulfosate + benoxacor; carfentrazone-ethyl + atrazine + nicosulfuron + sulfosate; carfentrazone-ethyl + atrazine + nicosulfuron + sulfosate + benoxacor; compound of the formula A + prosulfuron + primisulfuron + sulfosate; compound of the formula A + prosulfuron + dicamba + sulfosate; compound of the formula A + primisulfuron + dicamba + sulfosate; compound of the formula A + nicosulfuron + primisulfuron + sulfosate; compound of the formula A + nicosulfuron + prosulfuron + sulfosate; compound of the formula A + rimsulfuron + primisulfuron + sulfosate; compound of the formula A + rimsulfuron + prosulfuron + sulfosate; compound of the formula A + metolachlor + isoxaflutole + sulfosate; compound of the formula A + metolachlor + isoxaflutole + sulfosate + benoxacor; compound of the formula A + S-metolachlor + isoxaflutole + sulfosate; compound of the formula A + S-metolachlor + isoxaflutole + sulfosate + benoxacor; compound of the formula A + metolachlor + mesotrione + sulfosate; compound of the formula A + metolachlor + mesotrione + sulfosate + benoxacor; compound of the formula A + S-metolachlor + mesotrione + sulfosate; compound of the formula A + S-metolachlor + mesotrione + sulfosate + benoxacor; compound of the formula A + metolachlor + atrazine + sulfosate; compound of the formula A + metolachlor + atrazine + sulfosate + benoxacor; compound of the formula A + S-metolachlor + atrazine + sulfosate; compound of the formula A + S-metolachlor + atrazine + sulfosate + benoxacor; compound of the formula A + metolachlor + terbuthylazine + sulfosate; compound of the formula A + metolachlor + terbuthylazine + sulfosate + benoxacor; compound of the formula A + S-metolachlor + terbuthylazine + sulfosate; compound of the formula A + S-metolachlor + terbuthylazine + sulfosate + benoxacor; compound of the formula A + atrazine + nicosulfuron + sulfosate; compound of the formula A + atrazine + nicosulfuron + sulfosate + benoxacor; cinidon-ethyl + prosulfuron + primisulfuron + sulfosate; cinidon-ethyl + prosulfuron + dicamba + sulfosate; cinidon-ethyl + primisulfuron + dicamba + sulfosate; cinidon-ethyl + nicosulfuron + primisulfuron + sulfosate; cinidon-ethyl + nicosulfuron + prosulfuron + sulfosate; cinidon-ethyl + rimsulfuron + primisulfuron + sulfosate; cinidon-ethyl + rimsulfuron + prosulfuron + sulfosate; cinidon-ethyl + metolachlor + isoxaflutole + sulfosate; cinidon-ethyl + metolachlor + isoxaflutole + sulfosate + benoxacor; cinidon-ethyl + S-metofachior + isoxaflutole + sulfosate; cinidon-ethyl + S-metolachlor + isoxaflutole + sulfosate + benoxacor; cinidon-ethyl + metolachlor + mesotrione + sulfosate; cinidon-ethyl + metolachlor + mesotrione + sulfosate + benoxacor; cinidon-ethyl + S-metolachlor + mesotrione + sulfosate; cinidon-ethyl + S-metolachlor + mesotrione + sulfosate + benoxacor; cinidon-ethyl + metolachlor + atrazine + sulfosate; cinidon-ethyl + metolachlor + atrazine + sulfosate + benoxacor; cinidon-ethyl + S-metolachlor + atrazine + sulfosate; cinidon-ethyl + S-metolachlor + atrazine + sulfosate + benoxacor; cinidon-ethyl + metolachlor + terbuthylazine + sulfosate; cinidon-ethyl + metolachlor + terbuthylazine + sulfosate + benoxacor; cinidon-ethyl + S-metolachlor + terbuthylazine + sulfosate; cinidon-ethyl + S-metolachlor + terbuthylazine + sulfosate + benoxacor; cinidon-ethyl + atrazine + nicosulfuron + sulfosate; cinidon-ethyl + atrazine + nicosulfuron + sulfosate + benoxacor; flumiclorac-pentyl + prosulfuron + primisulfuron + sulfosate; flumiclorac-pentyl + prosulfuron + dicamba + sulfosate; flumiclorac-pentyl + primisulfuron + dicamba + sulfosate; flumiclorac-pentyl + nicosulfuron + primisulfuron + sulfosate; flumiclorac-pentyl + nicosulfuron + prosulfuron + sulfosate; flumiclorac-pentyl + rimsulfuron + primisulfuron + sulfosate; flumiclorac-pentyl + rimsulfuron + prosulfuron + sulfosate; flumiclorac-pentyl + metolachlor + isoxaflutole + sulfosate; flumiclorac-pentyl + metolachlor + isoxaflutole + sulfosate + benoxacor; flumiclorac-pentyl + S-metolachlor + isoxaflutole + sulfosate; flumiclorac-pentyl + S-metolachlor + isoxaflutole + sulfosate + benoxacor, flumiclorac-pentyl + metolachlor + mesotrione + sulfosate; flumiclorac-pentyl + metolachlor + mesotrione + sulfosate + benoxacor; flumiclorac-pentyl + S-metolachlor + mesotrione + sulfosate; flumiclorac-pentyl + S-metolachlor + mesotrione + sulfosate + benoxacor; flumiclorac-pentyl + metolachlor + atrazine + sulfosate; flumiclorac-pentyl + metolachlor + atrazine + sulfosate + benoxacor; flumiclorac-pentyl + S-metolachlor + atrazine + sulfosate; flumiclorac-pentyl + S-metolachlor + atrazine + sulfosate + benoxacor; flumiclorac-pentyl + metolachlor + terbuthylazine + sulfosate; flumiclorac-pentyl + metolachlor + terbuthylazine + sulfosate + benoxacor; flumiclorac-pentyf + S-metolachlor + terbuthylazine + sulfosate; flumiclorac-pentyl + S-metolachlor + terbuthylazine + sulfosate + benoxacor; flumiclorac-pentyl + atrazine + nicosulfuron + sulfosate; flumiclorac-pentyl + atrazine + nicosulfuron + sulfosate + benoxacor; flumioxazin + prosulfuron + primisulfuron + sulfosate; flumioxazin + prosulfuron + dicamba + sulfosate; flumioxazin + primisulfuron + dicamba + sulfosate; flumioxazin + nicosulfuron + primisulfuron + sulfosate; flumioxazin + nicosulfuron + prosulfuron + sulfosate; flumioxazin + rimsulfuron + primisulfuron + sulfosate; flumioxazin + rimsulfuron + prosulfuron + sulfosate; flumioxazin + metolachlor + isoxaflutole + sulfosate; flumioxazin + metolachlor + isoxaflutole + sulfosate + benoxacor; flumioxazin + S-metolachlor + isoxaflutole + sulfosate; flumioxazin + S-metolachlor + isoxaflutole + sulfosate + benoxacor; flumioxazin + metolachlor + mesotrione + sulfosate; flumioxazin + metolachlor + mesotrione + sulfosate + benoxacor; flumioxazin + S-metolachlor + mesotrione + sulfosate; flumioxazin + S-metolachlor + mesotrione + sulfosate + benoxacor; flumioxazin + metolachlor + atrazine + sulfosate; flumioxazin + metolachlor + atrazine + sulfosate + benoxacor; flumioxazin + S-metolachlor + atrazine + sulfosate; flumioxazin + S-metolachlor + atrazine + sulfosate + benoxacor; flumioxazin + metolachlor + terbuthylazine + sulfosate; flumioxazin + metolachlor + terbuthylazine + sulfosate + benoxacor; flumioxazin + S-metolachlor + terbuthylazine + sulfosate; flumioxazin + S-metolachlor + terbuthylazine + sulfosate + benoxacor; flumioxazin + atrazine + nicosulfuron + sulfosate; flumioxazin + atrazine + nicosulfuron + sulfosate + benoxacor; fluthiacet-methyl + prosulfuron + primisulfuron + sulfosate; fluthiacet-methyl + prosulfuron + dicamba + sulfosate; fluthiacet-methyl + primisulfuron + dicamba + sulfosate; fluthiacet-methyl + nicosulfuron + primisulfuron + sulfosate; fluthiacet-methyl + nicosulfuron + prosulfuron + sulfosate; fluthiacet-methyl + rimsulfuron + primisulfuron + sulfosate; fluthiacet-methyl + rimsulfuron + prosulfuron + sulfosate; fluthiacet-methyl + metolachlor + isoxaflutole + sulfosate; fluthiacet-methyl + metolachlor + isoxaflutole + sulfosate + benoxacor; fluthiacet-methyl + S-metolachlor + isoxaflutole + sulfosate; fluthiacet-methyl + S-metolachlor + isoxaflutole + sulfosate + benoxacor; fluthiacet-methyl + metolachlor + mesotrione + sulfosate; fluthiacet-methyl + metolachlor + mesotrione + sulfosate + benoxacor; fluthiacet-methyl + S-metolachlor + mesotrione + sulfosate; fluthiacet-methyl + S-metolachlor + mesotrione + sulfosate + benoxacor; fluthiacet-methyl + metotachlor + atrazine + sulfosate; fluthiacet-methyl + metolachlor + atrazine + sulfosate + benoxacor; fluthiacet-methyl + S-metolachlor + atrazine + sulfosate; fluthiacet-methyl + S-metolachlor + atrazine + sulfosate + benoxacor; fluthiacet-methyl + metolachlor + terbuthylazine + sulfosate; fluthiacet-methyl + metolachlor + terbuthylazine + sulfosate + benoxacor; fluthiacet-methyl + S-metolachlor + terbuthylazine + sulfosate; fluthiacet-methyl + S-metolachlor + terbuthylazine + sulfosate + benoxacor; fluthiacet-methyl + atrazine + nicosulfuron + sulfosate; fluthiacet-methyl + atrazine + nicosulfuron + sulfosate + benoxacor; oxadiargyl + prosulfuron + primisulfuron + sulfosate; oxadiargyl + prosulfuron + dicamba + sulfosate; oxadiargyl + primisulfuron + dicamba + sulfosate; oxadiargyl + nicosulfuron + primisulfuron + sulfosate; oxadiargyl + nicosulfuron + prosulfuron + sulfosate; oxadiargyl + rimsulfuron + primisulfuron + sulfosate; oxadiargyl + rimsulfuron + prosulfuron + sulfosate; oxadiargyl + metolachlor + isoxaflutole + sulfosate; oxadiargyl + metolachlor + isoxaflutole + sulfosate + benoxacor; oxadiargyl + S-metolachlor + isoxaflutole + sulfosate; oxadiargyl + S-metolachlor + isoxaflutole + sulfosate + benoxacor; oxadiargyl + metolachlor + mesotrione + sulfosate; oxadiargyl + metolachlor + mesotrione + sulfosate + benoxacor; oxadiargyl + S-metolachlor + mesotrione + sulfosate; oxadiargyl + S-metolachlor + mesotrione + sulfosate + benoxacor; oxadiargyl + metolachlor + atrazine + sulfosate; oxadiargyl + metolachlor + atrazine + sulfosate + benoxacor; oxadiargyl + S-metolachlor + atrazine + sulfosate; oxadiargyl + S-metolachlor + atrazine + sulfosate + benoxacor; oxadiargyl + metolachlor + terbuthylazine + sulfosate; oxadiargyl + metolachlor + terbuthylazine + sulfosate + benoxacor; oxadiargyl + S-metolachlor + terbuthylazine + sulfosate; oxadiargyl + S-metolachlor + terbuthylazine + sulfosate + benoxacor; oxadiargyl + atrazine + nicosulfuron + sulfosate; oxadiargyl + atrazine + nicosulfuron + sulfosate + benoxacor; oxadiazon + prosulfuron + primisulfuron + sulfosate; oxadiazon + prosulfuron + dicamba + sulfosate; oxadiazon + primisulfuron + dicamba + sulfosate; oxadiazon + nicosulfuron + primisulfuron + sulfosate; oxadiazon + nicosulfuron + prosulfuron + sulfosate; oxadiazon + rimsulfuron + primisuifuron + sulfosate; oxadiazon + rimsulfuron + prosulfuron + sulfosate; oxadiazon + metolachlor + isoxaflutole + sulfosate; oxadiazon + metolachlor + isoxaflutole + sulfosate + benoxacor; oxadiazon + S-metolachlor + isoxaflutole + sulfosate; oxadiazon + S-metolachlor + isoxaflutole + sulfosate + benoxacor; oxadiazon + metolachlor + mesotrione + sulfosate; oxadiazon + metolachlor + mesotrione + sulfosate + benoxacor; oxadiazon + S-metolachlor + mesotrione + sulfosate; oxadiazon + S-metolachlor + mesotrione + sulfosate + benoxacor; oxadiazon + metolachlor + atrazine + sulfosate; oxadiazon + metolachlor + atrazine + sulfosate + benoxacor; oxadiazon + S-metolachlor + atrazine + sulfosate; oxadiazon + S-metolachlor + atrazine + sulfosate + benoxacor; oxadiazon + metolachlor + terbuthylazine + sulfosate; oxadiazon + metolachlor + terbuthylazine + sulfosate + benoxacor; oxadiazon + S-metolachlor + terbuthylazine + sulfosate; oxadiazon + S-metolachlor + terbuthylazine + sulfosate + benoxacor; oxadiazon + atrazine + nicosulfuron + sulfosate; oxadiazon + atrazine + nicosulfuron + sulfosate + benoxacor; pentoxazone + prosulfuron + primisulfuron + sulfosate; pentoxazone + prosulfuron + dicamba + sulfosate; pentoxazone + primisulfuron + dicamba + sulfosate; pentoxazone + nicosulfuron + primisulfuron + sulfosate; pentoxazone + nicosulfuron + prosulfuron + sulfosate; pentoxazone + rimsulfuron + primisulfuron + sulfosate; pentoxazone + rimsulfuron + prosulfuron + sulfosate; pentoxazone + metolachlor + isoxaflutole + sulfosate; pentoxazone + metolachlor + isoxaflutole + sulfosate + benoxacor; pentoxazone + S-metolachlor + isoxaflutole + sutfosate; pentoxazone + S-metolachlor + isoxaflutole + sulfosate + benoxacor; pentoxazone + metolachlor + mesotrione + sulfosate; pentoxazone + metolachlor + mesotrione + sulfosate + benoxacor; pentoxazone + S-metolachlor + mesotrione + sulfosate; pentoxazone + S-metolachlor + mesotrione + sulfosate + benoxacor; pentoxazone + metolachlor + atrazine + sulfosate; pentoxazone + metolachlor + atrazine + sulfosate + benoxacor; pentoxazone + S-metolachlor + atrazine + sulfosate; pentoxazone + S-metolachlor + atrazine + sulfosate + benoxacor; pentoxazone + metolachlor + terbuthylazine + sulfosate; pentoxazone + metolachlor + terbuthylazine + sulfosate + benoxacor; pentoxazone + S-metolachlor + terbuthylazine + sulfosate; pentoxazone + S-metolachlor + terbuthylazine + sulfosate + benoxacor; pentoxazone + atrazine + nicosulfuron + sulfosate; pentoxazone + atrazine + nicosulfuron + sulfosate + benoxacor; sulfentrazone + prosulfuron + primisulfuron + sulfosate; sulfentrazone + prosulfuron + dicamba + sulfosate; sulfentrazone + primisulfuron + dicamba + sulfosate; sulfentrazone + nicosulfuron + primisulfuron + sulfosate; sulfentrazone + nicosulfuron + prosulfuron + sulfosate; sulfentrazone + rimsulfuron + primisulfuron + sulfosate; sulfentrazone + rimsulfuron + prosulfuron + sulfosate; sulfentrazone + metolachlor + isoxaflutole + sulfosate; sulfentrazone + metolachlor + isoxaflutole + sulfosate + benoxacor; sulfentrazone + S-metolachlor + isoxaflutole + sulfosate; sulfentrazone + S-metolachlor + isoxaflutole + sulfosate + benoxacor; sulfentrazone + metolachlor + mesotrione + sulfosate; sulfentrazone + metolachlor + mesotrione + sulfosate + benoxacor; sulfentrazone + S-metolachlor + mesotrione + sulfosate; sulfentrazone + S-metolachlor + mesotrione + sulfosate + benoxacor; sulfentrazone + metolachlor + atrazine + sulfosate; sulfentrazone + metolachlor + atrazine + sulfosate + benoxacor; sulfentrazone + S-metolachlor + atrazine + sulfosate; sulfentrazone + S-metolachlor + atrazine + sulfosate + benoxacor; sulfentrazone + metolachlor + terbuthylazine + sulfosate; sulfentrazone + metolachlor + terbuthylazine + sulfosate + benoxacor; sulfentrazone + S-metolachlor + terbuthylazine + sulfosate; sulfentrazone + S-metolachlor + terbuthylazine + sulfosate + benoxacor; sulfentrazone + atrazine + nicosulfuron + sulfosate; sulfentrazone + atrazine + nicosulfuron + sulfosate + benoxacor; fluazolate + prosulfuron + primisulfuron + sutfosate; fluazolate + prosulfuron + dicamba + sulfosate; fluazolate + primisulfuron + dicamba + sulfosate; fluazolate + nicosulfuron + primisulfuron + sulfosate; fluazolate + nicosulfuron + prosulfuron + sulfosate; fluazolate + rimsulfuron + primisulfuron + sulfosate; fluazolate + rimsulfuron + prosulfuron + sulfosate; fluazolate + metolachlor + isoxaflutole + sulfosate; fluazolate + metolachlor + isoxaflutole + sulfosate + benoxacor; fluazolate + S-metolachlor + isoxaflutole + sulfosate; fluazolate + S-metolachlor + isoxaflutote + sulfosate + benoxacor, fluazolate + metolachlor + mesotrione + sulfosate; fluazolate + metolachlor + mesotrione + sulfosate + benoxacor; fluazolate + S-metolachlor + mesotrione + sulfosate; fluazolate + S-metolachlor + mesotrione + sulfosate + benoxacor; fluazolate + metolachlor + atrazine + sulfosate; fluazolate + metolachlor + atrazine + sulfosate + benoxacor; fluazolate + S-metolachlor + atrazine + sulfosate; fluazolate + S-metolachlor + atrazine + sulfosate + benoxacor; fluazolate + metolachlor + terbuthylazine + sulfosate; fluazolate + metolachlor + terbuthylazine + sulfosate + benoxacor; fluazolate + S-metolachlor + terbuthylazine + sulfosate; fluazolate + S-metolachlor + terbuthylazine + sulfosate + benoxacor; fluazolate + atrazine + nicosulfuron + sulfosate; fluazolate + atrazine + nicosulfuron + sulfosate + benoxacor; pyraflufen-ethyl + prosulfuron + primisulfuron + sulfosate; pyraflufen-ethyl + prosulfuron + dicamba + sulfosate; pyraflufen-ethyl + primisulfuron + dicamba + sulfosate; pyraflufen-ethyl + nicosulfuron + primisulfuron + sulfosate; pyraflufen-ethyl + nicosulfuron + prosulfuron + sulfosate; pyraflufen-ethyl + rimsulfuron + primisulfuron + sulfosate; pyraflufen-ethyl + rimsulfuron + prosulfuron + sulfosate; pyraflufen-ethyl + metolachlor + isoxaflutole + sulfosate; pyraflufen-ethyl + metolachlor + isoxaflutole + sulfosate + benoxacor; pyraflufen-ethyl + S-metolachlor + isoxaflutole + sulfosate; pyraflufen-ethyl + S-metolachlor + isoxaflutole + sulfosate + benoxacor; pyraflufen-ethyl + metolachlor + mesotrione + sulfosate; pyraflufen-ethyl + metolachlor + mesotrione + sulfosate + benoxacor; pyraflufen-ethyl + S-metolachlor + mesotrione + sulfosate; pyraflufen-ethyl + S-metolachlor + mesotrione + sulfosate + benoxacor; pyraflufen-ethyl + metolachlor + atrazine + sulfosate; pyraflufen-ethyl + metolachlor + atrazine + sulfosate + benoxacor; pyraflufen-ethyl + S-metolachlor + atrazine + sulfosate; pyraflufen-ethyl + S-metolachlor + atrazine + sulfosate + benoxacor; pyraflufen-ethyl + metolachlor + terbuthylazine + sulfosate; pyraflufen-ethyl + metolachlor + terbuthylazine + sulfosate + benoxacor; pyraflufen-ethyl + S-metolachlor + terbuthylazine + sulfosate; pyraflufen-ethyl + S-metolachlor + terbuthylazine + sulfosate + benoxacor; pyraflufen-ethyl + atrazine + nicosulfuron + sulfosate; pyraflufen-ethyl + atrazine + nicosulfuron + sulfosate + benoxacor; flumipropyn + prosulfuron + primisulfuron + sulfosate; flumipropyn + prosulfuron + dicamba + sulfosate; flumipropyn + primisulfuron + dicamba + sulfosate; flumipropyn + nicosulfuron + primisulfuron + sulfosate; flumipropyn + nicosulfuron + prosulfuron + sulfosate; flumipropyn + rimsulfuron + primisulfuron + sulfosate; flumipropyn + rimsulfuron + prosulfuron + sulfosate; flumipropyn + metolachlor + isoxaflutole + sulfosate; flumipropyn + metolachlor + isoxaflutole + sulfosate + benoxacor; flumipropyn + S-metolachlor + isoxaflutole + sulfosate; flumipropyn + S-metolachlor + isoxaflutole + sulfosate + benoxacor; flumipropyn + metolachlor + mesotrione + sulfosate; flumipropyn + metolachlor + mesotrione + sulfosate + benoxacor; flumipropyn + S-metolachlor + mesotrione + sulfosate; flumipropyn + S-metolachlor + mesotrione + sulfosate + benoxacor; flumipropyn + metolachlor + atrazine + sulfosate; flumipropyn + metolachlor + atrazine + sulfosate + benoxacor; flumipropyn + S-metolachlor + atrazine + sulfosate; flumipropyn + S-metolachlor + atrazine + sulfosate + benoxacor; flumipropyn + metolachlor + terbuthylazine + sulfosate; flumipropyn + metolachlor + terbuthylazine + sulfosate + benoxacor; flumipropyn + S-metolachlor + terbuthylazine + sulfosate; flumipropyn + S-metolachlor + terbuthylazine + sulfosate + benoxacor; flumipropyn + atrazine + nicosulfuron + sulfosate; flumipropyn + atrazine + nicosulfuron + sulfosate + benoxacor; flupropacil + prosulfuron + primisulfuron + sulfosate; flupropacil + prosulfuron + dicamba + sulfosate; flupropacil + primisulfuron + dicamba + sulfosate; flupropacil + nicosulfuron + primisulfuron + sulfosate; flupropacil + nicosulfuron + prosulfuron + sulfosate; flupropacil + rimsulfuron + primisulfuron + sulfosate; flupropacil + rimsulfuron + prosulfuron + sulfosate; flupropacil + metolachlor + isoxaflutole + sulfosate; flupropacil + metolachlor + isoxaflutole + sulfosate + benoxacor; flupropacil + S-metolachlor + isoxaflutole + sulfosate; flupropacil + S-metolachlor + isoxaflutole + suifosate + benoxacor; flupropacil + metolachlor + mesotrione + sulfosate; flupropacil + metolachlor + mesotrione + sulfosate + benoxacor; flupropacil + S-metolachlor + mesotrione + sulfosate; flupropacil + S-metolachlor + mesotrione + sulfosate + benoxacor; flupropacil + metolachlor + atrazine + sulfosate; flupropacil + metolachlor + atrazine + sulfosate + benoxacor; flupropacil + S-metolachlor + atrazine + sulfosate; flupropacil + S-metolachlor + atrazine + sulfosate + benoxacor; flupropacil + metolachlor + terbuthylazine + sulfosate; flupropacil + metolachlor + terbuthylazine + sulfosate + benoxacor; flupropacil + S-metolachlor + terbuthylazine + sulfosate; flupropacil + S-metolachlor + terbuthylazine + sulfosate + benoxacor; flupropacil + atrazine + nicosulfuron + sulfosate; flupropacil + atrazine + nicosulfuron + sulfosate + benoxacor; nipyraclofen + prosulfuron + primisulfuron + sulfosate; nipyraclofen + prosulfuron + dicamba + sulfosate; nipyraclofen + primisulfuron + dicamba + sulfosate; nipyraclofen + nicosulfuron + primisulfuron + sulfosate; nipyraclofen + nicosulfuron + prosulfuron + sulfosate; nipyraclofen + rimsulfuron + primisulfuron + sulfosate; nipyraclofen + rimsulfuron + prosulfuron + sulfosate; nipyraclofen + metolachlor + isoxaflutole + sulfosate; nipyraclofen + metolachlor + isoxaflutole + sulfosate + benoxacor; nipyraclofen + S-metolachlor + isoxaflutole + sulfosate; nipyraclofen + S-metolachlor + isoxaflutole + sulfosate + benoxacor; nipyraclofen + metolachlor + mesotrione + sulfosate; nipyraclofen + metolachlor + mesotrione + sulfosate + benoxacor; nipyraclofen + S-metolachlor + mesotrione + sulfosate; nipyraclofen + S-metolachlor + mesotrione + sulfosate + benoxacor; nipyraclofen + metolachlor + atrazine + sulfosate; nipyraclofen + metolachlor + atrazine + sulfosate + benoxacor; nipyraclofen + S-metolachlor + atrazine + sulfosate; nipyraclofen + S-metolachlor + atrazine + sulfosate + benoxacor; nipyraclofen + metolachlor + terbuthylazine + sulfosate; nipyraclofen + metolachlor + terbuthylazine + sutfosate + benoxacor; nipyraclofen + S-metolachlor + terbuthylazine + sulfosate; nipyraclofen + S-metolachlor + terbuthylazine + sulfosate + benoxacor; nipyraclofen + atrazine + nicosulfuron + sulfosate; nipyraclofen + atrazine + nicosulfuron + sulfosate + benoxacor; benzfendizone + prosulfuron + primisulfuron + sulfosate; benzfendizone + prosulfuron + dicamba + sulfosate; benzfendizone + primisulfuron + dicamba + sulfosate; benzfendizone + nicosulfuron + primisulfuron + sulfosate; benzfendizone + nicosulfuron + prosulfuron + sulfosate; benzfendizone + rimsulfuron + primisulfuron + sulfosate; benzfendizone + rimsulfuron + prosulfuron + sulfosate; benzfendizone + metolachlor + isoxaflutole + sulfosate; benzfendizone + metolachlor + isoxaflutole + sulfosate + benoxacor; benzfendizone + S-metolachlor + isoxaflutole + sulfosate; benzfendizone + S-metolachlor + isoxaflutole + sulfosate + benoxacor; benzfendizone + metolachlor + mesotrione + sulfosate; benzfendizone + metolachlor + mesotrione + sulfosate + benoxacor; benzfendizone + S-metolachlor + mesotrione + sulfosate; benzfendizone + S-metolachlor + mesotrione + sulfosate + benoxacor; benzfendizone + metolachlor + atrazine + sulfosate; benzfendizone + metolachlor + atrazine + sulfosate + benoxacor; benzfendizone + S-metolachlor + atrazine + sulfosate; benzfendizone + S-metolachlor + atrazine + sulfosate + benoxacor; benzfendizone + metolachlor + terbuthylazine + sulfosate; benzfendizone + metolachlor + terbuthylazine + sulfosate + benoxacor; benzfendizone + S-metolachlor + terbuthylazine + sulfosate; benzfendizone + S-metolachlor + terbuthylazine + sulfosate + benoxacor; benzfendizone + atrazine + nicosulfuron + sulfosate; benzfendizone + atrazine + nicosulfuron + sulfosate + benoxacor; thidiazimin + prosulfuron + primisulfuron + sulfosate; thidiazimin + prosulfuron + dicamba + sulfosate; thidiazimin + primisulfuron + dicamba + sulfosate; thidiazimin + nicosulfuron + primisulfuron + sulfosate; thidiazimin + nicosulfuron + prosulfuron + sulfosate; thidiazimin + rimsulfuron + primisulfuron + sulfosate; thidiazimin + rimsulfuron + prosulfuron + sulfosate; thidiazimin + metolachlor + isoxaflutole + sulfosate; thidiazimin + metolachlor + isoxaflutole + sulfosate + benoxacor; thidiazimin + S-metolachlor + isoxaflutole + sulfosate; thidiazimin + S-metolachlor + isoxaflutole + sulfosate + benoxacor; thidiazimin + metolachlor + mesotrione + sulfosate; thidiazimin + metolachlor + mesotrione + sulfosate + benoxacor; thidiazimin + S-metolachlor + mesotrione + sulfosate; thidiazimin + S-metolachlor + mesotrione + sulfosate + benoxacor; thidiazimin + metolachlor + atrazine + sulfosate; thidiazimin + metolachlor + atrazine + sulfosate + benoxacor; thidiazimin + S-metolachlor + atrazine + sulfosate; thidiazimin + S-metolachlor + atrazine + sulfosate + benoxacor; thidiazimin + metolachlor + terbuthylazine + sulfosate; thidiazimin + metolachlor + terbuthylazine + sulfosate + benoxacor; thidiazimin + S-metolachlor + terbuthylazine + sulfosate; thidiazimin + S-metolachlor + terbuthylazine + sulfosate + benoxacor; thidiazimin + atrazine + nicosulfuron + sulfosate; and thidiazimin + atrazine + nicosulfuron + sulfosate + benoxacor.

Acifluorfen + metolachlor + isoxaflutole + sulfosate + MON 4660; acifluorfen + S-metolachlor + isoxaflutole + sulfosate + MON 4660; acifluorfen + metolachlor + mesotrione + sulfosate + MON 4660; acifluorfen + S-metolachlor + mesotrione + sulfosate + MON 4660; acifluorfen + metolachlor + atrazine + sulfosate + MON 4660; acifluorfen + S-metolachlor + atrazine + sulfosate + MON 4660; acifluorfen + metolachlor + terbuthylazine + sulfosate + MON 4660; acifluorfen + S-metolachlor + terbuthylazine + sulfosate + MON 4660; acifluorfen + atrazine + nicosulfuron + sulfosate + MON 4660; aclonifen + metolachlor + isoxaflutole + sulfosate + MON 4660; aclonifen + S-metolachlor + isoxaflutole + sulfosate + MON 4660; aclonifen + metolachlor + mesotrione + sulfosate + MON 4660; aclonifen + S-metolachlor + mesotrione + sulfosate + MON 4660; aclonifen + metolachlor + atrazine + sulfosate + MON 4660; aclonifen + S-metolachlor + atrazine + sulfosate + MON 4660; aclonifen + metolachlor + terbuthylazine + sulfosate + MON 4660; aclonifen + S-metolachlor + terbuthylazine + sulfosate + MON 4660; aclonifen + atrazine + nicosulfuron + sulfosate + MON 4660; bifenox + metolachlor + isoxaflutole + sulfosate + MON 4660; bifenox + S-metolachlor + isoxaflutole + sulfosate + MON 4660; bifenox + metolachlor + mesotrione + sulfosate + MON 4660; bifenox + S-metolachlor + mesotrione + sulfosate + MON 4660; bifenox + metolachlor + atrazine + sulfosate + MON 4660; bifenox + S-metolachlor + atrazine + sulfosate + MON 4660; bifenox + metolachlor + terbuthylazine + sulfosate + MON 4660; bifenox + S-metolachlor + terbuthylazine + sulfosate + MON 4660; bifenox + atrazine + nicosulfuron + sulfosate + MON 4660; chlornitrofen + metolachlor + isoxaflutole + sulfosate + MON 4660; chlornitrofen + S-metotachlor + isoxaflutole + sulfosate + MON 4660; chlornitrofen + metolachlor + mesotrione + sulfosate + MON 4660; chlornitrofen + S-metolachlor + mesotrione + sulfosate + MON 4660; chlornitrofen + metolachlor + atrazine + sulfosate + MON 4660; chlornitrofen + S-metolachlor + atrazine + sulfosate + MON 4660; chlornitrofen + metolachlor + terbuthylazine + sulfosate + MON 4660; chlornitrofen + S-metolachlor + terbuthylazine + sulfosate + MON 4660; chlornitrofen + atrazine + nicosulfuron + sulfosate + MON 4660; ethoxyfen + metolachlor + isoxaflutole + sulfosate + MON 4660; ethoxyfen + S-metolachlor + isoxaflutole + sulfosate + MON 4660; ethoxyfen + metolachlor + mesotrione + sulfosate + MON 4660; ethoxyfen + S-metolachlor + mesotrione + sulfosate + MON 4660; ethoxyfen + metolachlor + atrazine + sulfosate + MON 4660; ethoxyfen + S-metolachlor + atrazine + sulfosate + MON 4660; ethoxyfen + metolachlor + terbuthylazine + sulfosate + MON 4660; ethoxyfen + S-metolachlor + terbuthylazine + sulfosate + MON 4660; ethoxyfen + atrazine + nicosulfuron + sulfosate + MON 4660; fluoroglycofen + metolachlor + isoxaflutole + sulfosate + MON 4660; fluoroglycofen + S-metolachlor + isoxaflutole + sulfosate + MON 4660; fluoroglycofen + metolachlor + mesotrione + sulfosate + MON 4660; fluoroglycofen + S-metolachlor + mesotrione + sulfosate + MON 4660; fluoroglycofen + metolachlor + atrazine + sulfosate + MON 4660; fluoroglycofen + S-metolachlor + atrazine + sulfosate + MON 4660; fluoroglycofen + metolachlor + terbuthylazine + sulfosate + MON 4660; fluoroglycofen + S-metolachlor + terbuthylazine + sulfosate + MON 4660; fluoroglycofen + atrazine + nicosulfuron + sulfosate + MON 4660; fomesafen + metolachlor + isoxaflutole + sulfosate + MON 4660; fomesafen + S-metolachlor + isoxaflutole + sulfosate + MON 4660; fomesafen + metolachlor + mesotrione + sulfosate + MON 4660; fomesafen + S-metolachlor + mesotrione + sulfosate + MON 4660; fomesafen + metolachlor + atrazine + sulfosate + MON 4660; fomesafen + S-metolachlor + atrazine + sulfosate + MON 4660; fomesafen + metolachlor + terbuthylazine + sulfosate + MON 4660; fomesafen + S-metolachlor + terbuthylazine + sulfosate + MON 4660; fomesafen + atrazine + nicosulfuron + sulfosate + MON 4660; lactofen + metolachlor + isoxaflutole + sulfosate + MON 4660; lactofen + S-metolachlor + isoxaflutole + sulfosate + MON 4660; lactofen + metolachlor + mesotrione + sulfosate + MON 4660; lactofen + S-metolachlor + mesotrione + sulfosate + MON 4660; lactofen + metolachlor + atrazine + sulfosate + MON 4660; lactofen + S-metolachlor + atrazine + MON 4660; lactofen + metolachlor + terbuthylazine + sulfosate + MON 4660; lactofen + S-metolachlor + terbuthylazine + sulfosate + MON 4660; lactofen + atrazine + nicosulfuron + sulfosate + MON 4660; oxyfluorfen + metotachlor + isoxaflutole + sulfosate + MON 4660; oxyfluorfen + S-metolachlor + isoxaflutole + sulfosate + MON 4660; oxyfluorfen + metolachlor + mesotrione + sulfosate + MON 4660; oxyfluorfen + S-metolachlor + mesotrione + sulfosate + MON 4660; oxyfluorfen + metolachlor + atrazine + sulfosate + MON 4660; oxyfluorfen + S-metolachlor + atrazine + sulfosate + MON 4660; oxyfluorfen + metolachlor + terbuthylazine + sulfosate + MON 4660; oxyfluorfen + S-metolachlor + terbuthylazine + sulfosate + MON 4660; oxyfluorfen + atrazine + nicosulfuron + sulfosate + MON 4660; azafenidin + metolachlor + isoxaflutole + sulfosate + MON 4660; azafenidin + S-metolachlor + isoxaflutole + sulfosate + MON 4660; azafenidin + metolachlor + mesotrione + sulfosate + MON 4660; azafenidin + S-metolachlor + mesotrione + sulfosate + MON 4660; azafenidin + metolachlor + atrazine + sulfosate + MON 4660; azafenidin + S-metolachlor + atrazine + sulfosate + MON 4660; azafenidin + metolachlor + terbuthylazine + sulfosate + MON 4660; azafenidin + S-metotachlor + terbuthylazine + sulfosate + MON 4660; azafenidin + atrazine + nicosulfuron + sulfosate + MON 4660; carfentrazone-ethyl + metolachlor + isoxaflutole + sulfosate + MON 4660; carfentrazone-ethyl + S-metolachlor + isoxaflutole + sulfosate + MON 4660; carfentrazone-ethyl + metolachlor + mesotrione + sulfosate + MON 4660; carfentrazone-ethyl + S-metolachlor + mesotrione + sulfosate + MON 4660; carfentrazone-ethyl + metolachlor + atrazine + sulfosate + MON 4660; carfentrazone-ethyl + S-metolachlor + atrazine + sulfosate + MON 4660; carfentrazone-ethyl + metolachlor + terbuthylazine + sulfosate + MON 4660; carfentrazone-ethyl + S-metolachlor + terbuthylazine + sulfosate + MON 4660; carfentrazone-ethyl + atrazine + nicosulfuron + sulfosate + MON 4660; compound of the formula A + metolachlor + isoxaflutole + sulfosate + MON 4660; compound of the formula A + S-metolachlor + isoxaflutole + sulfosate + MON 4660; compound of the formula A + metolachlor + mesotrione + sulfosate + MON 4660; compound of the formula A + S-metolachlor + mesotrione + sulfosate + MON 4660; compound of the formula A + metolachlor + atrazine + sulfosate + MON 4660; compound of the formula A + S-metolachlor + atrazine + sulfosate + MON 4660; compound of the formula A + metolachlor + terbuthylazine + sulfosate + MON 4660; compound of the formula A + S-metolachlor + terbuthylazine + sulfosate + MON 4660; compound of the formula A + atrazine + nicosulfuron + sulfosate + MON 4660; cinidon-ethyl + metolachlor + isoxaflutole + sulfosate + MON 4660; cinidon-ethyl + S-metolachlor + isoxaflutole + sulfosate + MON 4660; cinidon-ethyl + metolachlor + mesotrione + sulfosate + MON 4660; cinidon-ethyl + S-metolachlor + mesotrione + sulfosate + MON 4660; cinidon-ethyl + metolachlor + atrazine + sulfosate + MON 4660; cinidon-ethyl + S-metolachlor + atrazine + sulfosate + MON 4660; cinidon-ethyl + metolachlor + terbuthylazine + sulfosate + MON 4660; cinidon-ethyl + S-metolachlor + terbuthylazine + sulfosate + MON 4660; cinidon-ethyl + atrazine + nicosulfuron + sulfosate + MON 4660; flumiclorac-pentyl + metolachlor + isoxaflutole + sulfosate + MON 4660; flumiclorac-pentyl + S-metolachlor + isoxaflutole + sulfosate + MON 4660; flumiclorac-pentyl + metolachlor + mesotrione + sulfosate + MON 4660; flumiclorac-pentyl + S-metolachlor + mesotrione + sulfosate + MON 4660; flumiclorac-pentyl + metolachlor + atrazine + sulfosate + MON 4660; flumiclorac-pentyl + S-metolachlor + atrazine + sulfosate + MON 4660; flumiclorac-pentyl + metolachlor + terbuthylazine + sulfosate + MON 4660; flumiclorac-pentyl + S-metolachlor + terbuthylazine + sulfosate + MON 4660; flumiclorac-pentyl + atrazine + nicosulfuron + sulfosate + MON 4660; flumioxazin + metolachlor + isoxaflutole + sulfosate + MON 4660; flumioxazin + S-metolachlor + isoxaflutole + sulfosate + MON 4660; flumioxazin + metolachlor + mesotrione + sulfosate + MON 4660; flumioxazin + S-metolachlor + mesotrione + sulfosate + MON 4660; flumioxazin + metolachlor + atrazine + sulfosate + MON 4660; flumioxazin + S-metolachlor + atrazine + sulfosate + MON 4660; flumioxazin + metolachlor + terbuthylazine + sulfosate + MON 4660; flumioxazin + S-metolachlor + terbuthylazine + sulfosate + MON 4660; flumioxazin + atrazine + nicosulfuron + sulfosate + MON 4660; fluthiacet-methyl + metolachlor + isoxaflutole + sulfosate + MON 4660; fluthiacet-methyl + S-metolachlor + isoxaflutole + sulfosate + MON 4660; fluthiacet-methyl + metolachlor + mesotrione + sulfosate + MON 4660; fluthiacet-methyl + S-metolachlor + mesotrione + sulfosate + MON 4660; fluthiacet-methyl + metolachlor + atrazine + sulfosate + MON 4660; fluthiacet-methyl + S-metotachlor + atrazine + sulfosate + MON 4660; fluthiacet-methyl + metolachlor + terbuthylazine + sulfosate + MON 4660; fluthiacet-methyl + S-metolachlor + terbuthylazine + sulfosate + MON 4660; fluthiacet-methyl + atrazine + nicosulfuron + sulfosate + MON 4660; oxadiargyl + metolachlor + isoxaflutole + sulfosate + MON 4660; oxadiargyl + S-metolachlor + isoxaflutole + sulfosate + MON 4660; oxadiargyl + metolachlor + mesotrione + sulfosate + MON 4660; oxadiargyl + S-metolachlor + mesotrione + sulfosate + MON 4660; oxadiargyl + metolachlor + atrazine + sulfosate + MON 4660; oxadiargyl + S-metolachlor + atrazine + sulfosate + MON 4660; oxadiargyl + metolachlor + terbuthylazine + sulfosate + MON 4660; oxadiargyl + S-metolachlor + terbuthylazine + sulfosate + MON 4660; oxadiargyl + atrazine + nicosulfuron + sulfosate + MON 4660; oxadiazon + metolachlor + isoxaflutole + sulfosate + MON 4660; oxadiazon + S-metolachlor + isoxaflutole + sulfosate + MON 4660; oxadiazon + metolachlor + mesotrione + sulfosate + MON 4660; oxadiazon + S-metolachlor + mesotrione + sulfosate + MON 4660; oxadiazon + metolachlor + atrazine + sulfosate + MON 4660; oxadiazon + S-metolachlor + atrazine + sulfosate + MON 4660; oxadiazon + metolachlor + terbuthylazine + sulfosate + MON 4660; oxadiazon + S-metolachlor + terbuthylazine + sulfosate + MON 4660; oxadiazon + atrazine + nicosulfuron + sulfosate + MON 4660; pentoxazone + metolachlor + isoxaflutole + sulfosate + MON 4660; pentoxazone + S-metolachlor + isoxaflutole + sulfosate + MON 4660; pentoxazone + metolachlor + mesotrione + sulfosate + MON 4660; pentoxazone + S-metolachlor + mesotrione + sulfosate + MON 4660; pentoxazone + metolachlor + atrazine + sulfosate + MON 4660; pentoxazone + S-metolachlor + atrazine + sulfosate + MON 4660; pentoxazone + metolachlor + terbuthylazine + sulfosate + MON 4660; pentoxazone + S-metolachlor + terbuthylazine + sulfosate + MON 4660; pentoxazone + atrazine + nicosulfuron + sulfosate + MON 4660; sulfentrazone + metolachlor + isoxaflutole + sulfosate + MON 4660; sulfentrazone + S-metolachlor + isoxaflutole + sulfosate + MON 4660; sulfentrazone + metolachlor + mesotrione + sulfosate + MON 4660; sulfentrazone + S-metolachlor + mesotrione + sulfosate + MON 4660; sulfentrazone + metolachlor + atrazine + sulfosate + MON 4660; sulfentrazone + S-metotachlor + atrazine + sulfosate + MON 4660; sulfentrazone + metotachlor + terbuthylazine + sulfosate + MON 4660; sulfentrazone + S-metolachlor + terbuthylazine + sulfosate + MON 4660; sulfentrazone + atrazine + nicosulfuron + sulfosate + MON 4660; fluazolate + metolachlor + isoxaflutole + sulfosate + MON 4660; fluazolate + S-metolachlor + isoxaflutole + sulfosate + MON 4660; fluazolate + metolachlor + mesotrione + sulfosate + MON 4660; fluazolate + S-metolachlor + mesotrione + sulfosate + MON 4660; fluazolate + metolachlor + atrazine + sulfosate + MON 4660; fluazolate + S-metolachlor + atrazine + sulfosate + MON 4660; fluazolate + metolachlor + terbuthylazine + sulfosate + MON 4660; fluazolate + S-metolachlor + terbuthylazine + sulfosate + MON 4660; fluazolate + atrazine + nicosulfuron + sulfosate + MON 4660; pyraflufen-ethyl + metolachlor + isoxaflutole + sulfosate + MON 4660; pyraflufen-ethyl + S-metolachlor + isoxaflutole + sulfosate + MON 4660; pyraflufen-ethyl + metolachlor + mesotrione + sulfosate + MON 4660; pyraflufen-ethyl + S-metolachlor + mesotrione + sulfosate + MON 4660; pyraflufen-ethyl + metolachlor + atrazine + sulfosate + MON 4660; pyraflufen-ethyl + S-metolachlor + atrazine + sulfosate + MON 4660; pyraflufen-ethyl + metolachlor + terbuthylazine + sulfosate + MON 4660; pyraflufen-ethyl + S-metolachlor + terbuthylazine + sulfosate + MON 4660; pyraflufen-ethyl + atrazine + nicosulfuron + sulfosate + MON 4660; flumipropyn + metolachlor + isoxaflutole + sulfosate + MON 4660; flumipropyn + S-metolachlor + isoxaflutole + sulfosate + MON 4660; flumipropyn + metolachlor + mesotrione + sulfosate + MON 4660; flumipropyn + S-metolachlor + mesotrione + sulfosate + MON 4660; flumipropyn + metolachlor + atrazine + sulfosate + MON 4660; flumipropyn + S-metolachlor + atrazine + sulfosate + MON 4660; flumipropyn + metolachlor + terbuthylazine + sulfosate + MON 4660; flumipropyn + S-metolachlor + terbuthylazine + sulfosate + MON 4660; flumipropyn + atrazine + nicosulfuron + sulfosate + MON 4660; flupropacil + metotachlor + isoxaflutole + sulfosate + MON 4660; flupropacil + S-metolachlor + isoxaflutole + sulfosate + MON 4660; flupropacil + metolachlor + mesotrione + sulfosate + MON 4660; ftupropacil + S-metolachlor + mesotrione + sulfosate + MON 4660; flupropacil + metolachlor + atrazine + sulfosate + MON 4660; flupropacil + S-metolachlor + atrazine + sulfosate + MON 4660; flupropacil + metolachlor + terbuthylazine + sulfosate + MON 4660; flupropacil + S-metolachlor + terbuthylazine + sulfosate + MON 4660; flupropacil + atrazine + nicosulfuron + sulfosate + MON 4660; nipyraclofen + metolachlor + isoxaflutole + sulfosate + MON 4660; nipyraclofen + S-metolachlor + isoxaflutole + sulfosate + MON 4660; nipyraclofen + metolachlor + mesotrione + sulfosate + MON 4660; nipyraclofen + S-metolachlor + mesotrione + sulfosate + MON 4660; nipyraclofen + metolachlor + atrazine + sulfosate + MON 4660; nipyraclofen + S-metolachlor + atrazine + sulfosate + MON 4660; nipyraclofen + metolachlor + terbuthylazine + sulfosate + MON 4660; nipyraclofen + S-metolachlor + terbuthylazine + sulfosate + MON 4660; nipyraclofen + atrazine + nicosulfuron + sulfosate + MON 4660; benzfendizone + metolachlor + isoxaflutole + sulfosate + MON 4660; benzfendizone + S-metolachlor + isoxaflutole + sulfosate + MON 4660; benzfendizone + metolachlor + mesotrione + sulfosate + MON 4660; benzfendizone + S-metolachlor + mesotrione + sulfosate + MON 4660; benzfendizone + metolachlor + atrazine + sulfosate + MON 4660; benzfendizone + S-metolachlor + atrazine + sulfosate + MON 4660; benzfendizone + metolachlor + terbuthylazine + sulfosate + MON 4660; benzfendizone + S-metolachlor + terbuthylazine + sulfosate + MON 4660; benzfendizone + atrazine + nicosulfuron + sulfosate + MON 4660; thidiazimin + metolachlor + isoxaflutole + sulfosate + MON 4660; thidiazimin + S-metolachlor + isoxaflutole + sulfosate + MON 4660; thidiazimin + metolachlor + mesotrione + sulfosate + MON 4660; thidiazimin + S-metolachlor + mesotrione + sulfosate + MON 4660; thidiazimin + metolachlor + atrazine + sulfosate + MON 4660; thidiazimin + S-metolachlor + atrazine + sulfosate + MON 4660; thidiazimin + metolachlor + terbuthylazine + sulfosate + MON 4660; thidiazimin + S-metolachlor + terbuthylazine + sulfosate + MON 4660; and thidiazimin + atrazine + nicosulfuron + sulfosate + MON 4660.

Acifluorfen + metolachlor + isoxaflutole + sulfosate + FLURAZOLE; acifluorfen + S-metolachlor + isoxaflutole + sulfosate + FLURAZOLE; acifluorfen + metolachlor + mesotrione + sulfosate + FLURAZOLE; acifluorfen + S-metolachlor + mesotrione + sulfosate + FLURAZOLE; acifluorfen + metolachlor + atrazine + sulfosate + FLURAZOLE; acifluorfen + S-metolachlor + atrazine + sulfosate + FLURAZOLE; acifluorfen + metolachlor + terbuthylazine + sulfosate + FLURAZOLE; acifluorfen + S-metolachlor + terbuthylazine + sulfosate + FLURAZOLE; acifluorfen + atrazine + nicosulfuron + sulfosate + FLURAZOLE; aclonifen + metolachlor + isoxaflutole + sulfosate + FLURAZOLE; aclonifen + S-metolachior + isoxaflutole + sulfosate + FLURAZOLE; aclonifen + metolachlor + mesotrione + sulfosate + FLURAZOLE; aclonifen + S-metolachior + mesotrione + sulfosate + FLURAZOLE; aclonifen + metolachlor + atrazine + sulfosate + FLURAZOLE; aclonifen + S-metolachior + atrazine + sulfosate + FLURAZOLE; aclonifen + metolachlor + terbuthylazine + sulfosate + FLURAZOLE; aclonifen + S-metolachior + terbuthylazine + sulfosate + FLURAZOLE; aclonifen + atrazine + nicosulfuron + sulfosate + FLURAZOLE; bifenox + metolachlor + isoxaflutole + sulfosate + FLURAZOLE; bifenox + S-metolachlor + isoxaflutole + sulfosate + FLURAZOLE; bifenox + metolachlor + mesotrione + sulfosate + FLURAZOLE; bifenox + S-metolachlor + mesotrione + sulfosate + FLURAZOLE; bifenox + metolachlor + atrazine + sulfosate + FLURAZOLE; bifenox + S-metolachlor + atrazine + sulfosate + FLURAZOLE; bifenox + metolachlor + terbuthylazine + sulfosate + FLURAZOLE; bifenox + S-metolachlor + terbuthylazine + sulfosate + FLURAZOLE; bifenox + atrazine + nicosulfuron + sulfosate + FLURAZOLE; chlornitrofen + metolachlor + isoxaflutole + sulfosate + FLURAZOLE; chlornitrofen + S-metolachlor + isoxaflutole + sulfosate + FLURAZOLE; chlornitrofen + metolachlor + mesotrione + sulfosate + FLURAZOLE; chlornitrofen + S-metolachlor + mesotrione + sulfosate + FLURAZOLE; chlornitrofen + metolachlor + atrazine + sulfosate + FLURAZOLE; chlornitrofen + S-metolachlor + atrazine + sulfosate + FLURAZOLE; chlornitrofen + metolachlor + terbuthylazine + sulfosate + FLURAZOLE; chlornitrofen + S-metolachlor + terbuthylazine + sulfosate + FLURAZOLE; chlornitrofen + atrazine + nicosulfuron + sulfosate + FLURAZOLE; ethoxyfen + metolachlor + isoxaflutole + sulfosate + FLURAZOLE; ethoxyfen + S-metolachlor + isoxaflutole + sulfosate + FLURAZOLE; ethoxyfen + metolachlor + mesotrione + sulfosate + FLURAZOLE; ethoxyfen + S-metolachlor + mesotrione + sulfosate + FLURAZOLE; ethoxyfen + metolachlor + atrazine + sulfosate + FLURAZOLE; ethoxyfen + S-metolachlor + atrazine + sulfosate + FLURAZOLE; ethoxyfen + metolachlor + terbuthylazine + sulfosate + FLURAZOLE; ethoxyfen + S-metolachlor + terbuthylazine + sulfosate + FLURAZOLE; ethoxyfen + atrazine + nicosulfuron + sulfosate + FLURAZOLE; fluoroglycofen + metolachlor + isoxaflutole + sulfosate + FLURAZOLE; fluoroglycofen + S-metolachlor + isoxaflutole + sulfosate + FLURAZOLE; fluoroglycofen + metolachlor + mesotrione + sulfosate + FLURAZOLE; fluoroglycofen + S-metolachlor + mesotrione + sulfosate + FLURAZOLE; fluoroglycofen + metolachlor + atrazine + sulfosate + FLURAZOLE; fluoroglycofen + S-metolachlor + atrazine + sulfosate + FLURAZOLE; fluoroglycofen + metolachlor + terbuthylazine + sulfosate + FLURAZOLE; fluoroglycofen + S-metolachlor + terbuthylazine + sulfosate + FLURAZOLE; fluoroglycofen + atrazine + nicosulfuron + sulfosate + FLURAZOLE; fomesafen + metolachlor + isoxaflutole + sulfosate + FLURAZOLE; fomesafen + S-metolachlor + isoxaflutole + sulfosate + FLURAZOLE; fomesafen + metolachlor + mesotrione + sulfosate + FLURAZOLE; fomesafen + S-metolachlor + mesotrione + sulfosate + FLURAZOLE; fomesafen + metolachlor + atrazine + sulfosate + FLURAZOLE; fomesafen + S-metolachlor + atrazine + sulfosate + FLURAZOLE; fomesafen + metolachlor + terbuthylazine + sulfosate + FLURAZOLE; fomesafen + S-metolachlor + terbuthylazine + sulfosate + FLURAZOLE; fomesafen + atrazine + nicosulfuron + sulfosate + FLURAZOLE; lactofen + metolachlor + isoxaflutole + sulfosate + FLURAZOLE; lactofen + S-metolachlor + isoxaflutole + sulfosate + FLURAZOLE; lactofen + metolachlor + mesotrione + sulfosate + FLURAZOLE; lactofen + S-metolachlor + mesotrione + sulfosate + FLURAZOLE; lactofen + metolachlor + atrazine + sulfosate + FLURAZOLE; lactofen + S-metolachlor + atrazine + sulfosate + FLURAZOLE; lactofen + metolachlor + terbuthylazine + sulfosate + FLURAZOLE; lactofen + S-metolachlor + terbuthylazine + sulfosate + FLURAZOLE; lactofen + atrazine + nicosulfuron + sulfosate + FLURAZOLE; oxyfluorfen + metolachior + isoxaflutole + sulfosate + FLURAZOLE; oxyfluorfen + S-metolachlor + isoxaflutole + sulfosate + FLURAZOLE; oxyfluorfen + metolachlor + mesotrione + sulfosate + FLURAZOLE; oxyfluorfen + S-metolachlor + mesotrione + sulfosate + FLURAZOLE; oxyfluorfen + metolachlor + atrazine + sulfosate + FLURAZOLE; oxyfluorfen + S-metolachlor + atrazine + sutfosate + FLURAZOLE; oxyfluorfen + metolachlor + terbuthylazine + sulfosate + FLURAZOLE; oxyfluorfen + S-metolachlor + terbuthylazine + sulfosate + FLURAZOLE; oxyfluorfen + atrazine + nicosulfuron + sulfosate + FLURAZOLE; azafenidin + metolachlor + isoxaflutole + sulfosate + FLURAZOLE; azafenidin + S-metolachlor + isoxaflutole + sulfosate + FLURAZOLE; azafenidin + metolachlor + mesotrione + sulfosate + FLURAZOLE; azafenidin + S-metolachlor + mesotrione + sulfosate + FLURAZOLE; azafenidin + metolachlor + atrazine + sulfosate + FLURAZOLE; azafenidin + S-metolachlor + atrazine + sulfosate + FLURAZOLE; azafenidin + metolachlor + terbuthylazine + sulfosate + FLURAZOLE; azafenidin + S-metolachlor + terbuthylazine + sulfosate + FLURAZOLE; azafenidin + atrazine + nicosulfuron + sulfosate + FLURAZOLE; carfentrazone-ethyl + metolachlor + isoxaflutole + sulfosate + FLURAZOLE; carfentrazone-ethyl + S-metolachlor + isoxaflutole + sulfosate + FLURAZOLE; carfentrazone-ethyl + metolachlor + mesotrione + sulfosate + FLURAZOLE; carfentrazone-ethyl + S-metolachlor + mesotrione + sulfosate + FLURAZOLE; carfentrazone-ethyl + metolachlor + atrazine + sulfosate + FLURAZOLE; carfentrazone-ethyl + S-metolachlor + atrazine + sulfosate + FLURAZOLE; carfentrazone-ethyl + metolachlor + terbuthylazine + sulfosate + FLURAZOLE; carfentrazone-ethyl + S-metolachlor + terbuthylazine + sulfosate + FLURAZOLE; carfentrazone-ethyl + atrazine + nicosulfuron + sulfosate + FLURAZOLE; compound of the formula A + metolachlor + isoxaflutole + sulfosate + FLURAZOLE; compound of the formula A + S-metolachlor + isoxaflutole + sulfosate + FLURAZOLE; compound of the formula A + metolachior + mesotrione + sulfosate + FLURAZOLE; compound of the formula A + S-metolachlor + mesotrione + sulfosate + FLURAZOLE; compound of the formula A + metolachlor + atrazine + sulfosate + FLURAZOLE; compound of the formula A + S-metolachlor + atrazine + sulfosate + FLURAZOLE; compound of the formula A + metolachlor + terbuthylazine + sulfosate + FLURAZOLE; compound of the formula A + S-metolachlor + terbuthylazine + sulfosate + FLURAZOLE; compound of the formula A + atrazine + nicosulfuron + sulfosate + FLURAZOLE; cinidon-ethyl + metolachlor + isoxaflutole + sulfosate + FLURAZOLE; cinidon-ethyl + S-metolachlor + isoxaflutole + sulfosate + FLURAZOLE; cinidon-ethyl + metolachlor + mesotrione + sulfosate + FLURAZOLE; cinidon-ethyl + S-metolachlor + mesotrione + sulfosate + FLURAZOLE; cinidon-ethyl + metolachlor + atrazine + sulfosate + FLURAZOLE; cinidon-ethyl + S-metolachlor + atrazine + sulfosate + FLURAZOLE; cinidon-ethyl + metolachlor + terbuthylazine + sulfosate + FLURAZOLE; cinidon-ethyl + S-metolachlor + terbuthylazine + sulfosate + FLURAZOLE; cinidon-ethyl + atrazine + nicosulfuron + sulfosate + FLURAZOLE; flumiclorac-pentyl + metolachlor + isoxaflutole + sulfosate + FLURAZOLE; flumiclorac-pentyl + S-metolachlor + isoxaflutole + sulfosate + FLURAZOLE; flumiclorac-pentyl + metolachlor + mesotrione + sulfosate + FLURAZOLE; flumiclorac-pentyl + S-metolachlor + mesotrione + sulfosate + FLURAZOLE; flumiclorac-pentyl + metolachlor + atrazine + sulfosate + FLURAZOLE; flumiclorac-pentyl + S-metolachlor + atrazine + sulfosate + FLURAZOLE; flumiclorac-pentyl + metolachlor + terbuthylazine + sulfosate + FLURAZOLE; flumiclorac-pentyl + S-metolachlor + terbuthylazine + sulfosate + FLURAZOLE; flumiclorac-pentyl + atrazine + nicosulfuron + sulfosate + FLURAZOLE; flumioxazin + metolachlor + isoxaflutole + sulfosate + FLURAZOLE; flumioxazin + S-metolachlor + isoxaflutole + sulfosate + FLURAZOLE; flumioxazin + metolachlor + mesotrione + sulfosate + FLURAZOLE; flumioxazin + S-metolachlor + mesotrione + sulfosate + FLURAZOLE; flumioxazin + metolachlor + atrazine + sulfosate + FLURAZOLE; flumioxazin + S-metolachlor + atrazine + sulfosate + FLURAZOLE; flumioxazin + metolachlor + terbuthylazine + sulfosate + FLURAZOLE; flumioxazin + S-metolachlor + terbuthylazine + sulfosate + FLURAZOLE; flumioxazin + atrazine + nicosulfuron + sulfosate + FLURAZOLE; fluthiacet-methyl + metolachlor + isoxaflutole + sulfosate + FLURAZOLE; fluthiacet-methyl + S-metolachlor + isoxaflutole + sulfosate + FLURAZOLE; fluthiacet-methyl + metolachlor + mesotrione + sulfosate + FLURAZOLE; fluthiacet-methyl + S-metolachlor + mesotrione + sulfosate + FLURAZOLE; fluthiacet-methyl + metolachlor + atrazine + sulfosate + FLURAZOLE; fluthiacet-methyl + S-metolachlor + atrazine + sulfosate + FLURAZOLE; fluthiacet-methyl + metolachlor + terbuthylazine + sulfosate + FLURAZOLE; fluthiacet-methyl + S-metolachlor + terbuthylazine + sulfosate + FLURAZOLE; fluthiacet-methyl + atrazine + nicosulfuron + sulfosate + FLURAZOLE; oxadiargyl + metolachlor + isoxaflutole + sulfosate + FLURAZOLE; oxadiargyl + S-metolachlor + isoxaflutole + sulfosate + FLURAZOLE; oxadiargyl + metolachlor + mesotrione + sulfosate + FLURAZOLE; oxadiargyl + S-metolachlor + mesotrione + sulfosate + FLURAZOLE; oxadiargyl + metolachlor + atrazine + sulfosate + FLURAZOLE; oxadiargyl + S-metolachlor + atrazine + sulfosate + FLURAZOLE; oxadiargyl + metolachlor + terbuthylazine + sulfosate + FLURAZOLE; oxadiargyl + S-metolachlor + terbuthylazine + sulfosate + FLURAZOLE; oxadiargyl + atrazine + nicosulfuron + sulfosate + FLURAZOLE; oxadiazon + metolachlor + isoxaflutole + sulfosate + FLURAZOLE; oxadiazon + S-metolachlor + isoxaflutole + sulfosate + FLURAZOLE; oxadiazon + metolachlor + mesotrione + sulfosate + FLURAZOLE; oxadiazon + S-metolachlor + mesotrione + sulfosate + FLURAZOLE; oxadiazon + metolachlor + atrazine + sulfosate + FLURAZOLE; oxadiazon + S-metolachlor + atrazine + sulfosate + FLURAZOLE; oxadiazon + metolachlor + terbuthylazine + sulfosate + FLURAZOLE; oxadiazon + S-metolachlor + terbuthylazine + sulfosate + FLURAZOLE; oxadiazon + atrazine + nicosulfuron + sulfosate + FLURAZOLE; pentoxazone + metolachlor + isoxaflutole + sulfosate + FLURAZOLE; pentoxazone + S-metolachlor + isoxaflutole + sulfosate + FLURAZOLE; pentoxazone + metolachlor + mesotrione + sulfosate + FLURAZOLE; pentoxazone + S-metolachlor + mesotrione + sulfosate + FLURAZOLE; pentoxazone + metolachlor + atrazine + sulfosate + FLURAZOLE; pentoxazone + S-metolachlor + atrazine + sulfosate + FLURAZOLE; pentoxazone + metotachlor + terbuthylazine + sulfosate + FLURAZOLE; pentoxazone + S-metolachlor + terbuthylazine + sulfosate + FLURAZOLE; pentoxazone + atrazine + nicosulfuron + sulfosate + FLURAZOLE; sulfentrazone + metolachlor + isoxaflutole + sulfosate + FLURAZOLE; sulfentrazone + S-metolachlor + isoxaflutole + sulfosate + FLURAZOLE; sulfentrazone + metolachlor + mesotrione + sulfosate + FLURAZOLE; sulfentrazone + S-metolachlor + mesotrione + sulfosate + FLURAZOLE; sulfentrazone + metolachlor + atrazine + sulfosate + FLURAZOLE; sulfentrazone + S-metolachlor + atrazine + sulfosate + FLURAZOLE; sulfentrazone + metolachlor + terbuthylazine + sulfosate + FLURAZOLE; sulfentrazone + S-metolachlor + terbuthylazine + sulfosate + FLURAZOLE; sulfentrazone + atrazine + nicosulfuron + sulfosate + FLURAZOLE; fluazolate + metolachlor + isoxaflutole + sulfosate + FLURAZOLE; fluazolate + S-metolachlor + isoxaflutole + sulfosate + FLURAZOLE; fluazolate + metolachlor + mesotrione + sulfosate + FLURAZOLE; fluazolate + S-metolachlor + mesotrione + sulfosate + FLURAZOLE; fluazolate + metolachlor + atrazine + sulfosate + FLURAZOLE; fluazolate + S-metolachlor + atrazine + sulfosate + FLURAZOLE; fluazolate + metolachlor + terbuthylazine + sulfosate + FLURAZOLE; fluazolate + S-metolachlor + terbuthylazine + sulfosate + FLURAZOLE; fluazolate + atrazine + nicosulfuron + sulfosate + FLURAZOLE; pyraflufen-ethyl + metolachlor + isoxaflutole + sulfosate + FLURAZOLE; pyraflufen-ethyl + S-metolachlor + isoxaflutole + sulfosate + FLURAZOLE; pyraflufen-ethyl + metolachlor + mesotrione + sulfosate + FLURAZOLE; pyraflufen-ethyl + S-metolachtor + mesotrione + sulfosate + FLURAZOLE; pyraflufen-ethyl + metolachlor + atrazine + sulfosate + FLURAZOLE; pyraflufen-ethyl + S-metolachlor + atrazine + sulfosate + FLURAZOLE; pyraflufen-ethyl + metolachlor + terbuthylazine + sulfosate + FLURAZOLE; pyraflufen-ethyl + S-metolachlor + terbuthylazine + sulfosate + FLURAZOLE; pyraflufen-ethyl + atrazine + nicosulfuron + sulfosate + FLURAZOLE; flumipropyn + metolachlor + isoxaflutole + sulfosate + FLURAZOLE; flumipropyn + S-metolachlor + isoxaflutole + sulfosate + FLURAZOLE; flumipropyn + metolachlor + mesotrione + sulfosate + FLURAZOLE; flumipropyn + S-metolachlor + mesotrione + sulfosate + FLURAZOLE; flumipropyn + metolachlor + atrazine + sulfosate + FLURAZOLE; flumipropyn + S-metolachlor + atrazine + sulfosate + FLURAZOLE; flumipropyn + metolachlor + terbuthylazine + sulfosate + FLURAZOLE; flumipropyn + S-metolachlor + terbuthylazine + sulfosate + FLURAZOLE; flumipropyn + atrazine + nicosulfuron + sulfosate + FLURAZOLE; flupropacil + metolachlor + isoxaflutole + sulfosate + FLURAZOLE; flupropacil + S-metolachlor + isoxaflutole + sulfosate + FLURAZOLE; flupropacil + metolachlor + mesotrione + sulfosate + FLURAZOLE; flupropacil + S-metolachlor + mesotrione + sulfosate + FLURAZOLE; flupropacil + metolachlor + atrazine + sulfosate + FLURAZOLE; flupropacil + S-metolachlor + atrazine + sulfosate + FLURAZOLE; flupropacil + metolachlor + terbuthylazine + sulfosate + FLURAZOLE; flupropacil + S-metolachlor + terbuthylazine + sulfosate + FLURAZOLE; flupropacil + atrazine + nicosulfuron + sulfosate + FLURAZOLE; nipyraclofen + metolachlor + isoxaflutole + sulfosate + FLURAZOLE; nipyraclofen + S-metolachlor + isoxaflutole + sulfosate + FLURAZOLE; nipyraclofen + metolachlor + mesotrione + sulfosate + FLURAZOLE; nipyraclofen + S-metolachlor + mesotrione + sulfosate + FLURAZOLE; nipyraclofen + metolachlor + atrazine + sulfosate + FLURAZOLE; nipyraclofen + S-metolachlor + atrazine + sulfosate + FLURAZOLE; nipyraclofen + metolachlor + terbuthylazine + sulfosate + FLURAZOLE; nipyraclofen + S-metolachlor + terbuthylazine + sulfosate + FLURAZOLE; nipyraclofen + atrazine + nicosulfuron + sulfosate + FLURAZOLE; benzfendizone + metolachlor + isoxaflutole + sulfosate + FLURAZOLE; benzfendizone + S-metolachlor + isoxaflutole + sulfosate + FLURAZOLE; benzfendizone + metolachlor + mesotrione + sulfosate + FLURAZOLE; benzfendizone + S-metolachlor + mesotrione + sulfosate + FLURAZOLE; benzfendizone + metolachlor + atrazine + sulfosate + FLURAZOLE; benzfendizone + S-metolachlor + atrazine + sulfosate + FLURAZOLE; benzfendizone + metolachfor + terbuthylazine + sulfosate + FLURAZOLE; benzfendizone + S-metolachlor + terbuthylazine + sulfosate + FLURAZOLE; benzfendizone + atrazine + nicosulfuron + sulfosate + FLURAZOLE; thidiazimin + metolachlor + isoxaflutole + sulfosate + FLURAZOLE; thidiazimin + S-metolachlor + isoxaflutole + sutfosate + FLURAZOLE; thidiazimin + metolachlor + mesotrione + sulfosate + FLURAZOLE; thidiazimin + S-metolachlor + mesotrione + sulfosate + FLURAZOLE; thidiazimin + metolachlor + atrazine + sulfosate + FLURAZOLE; thidiazimin + S-metolachlor + atrazine + sulfosate + FLURAZOLE; thidiazimin + metolachlor + terbuthylazine + sulfosate + FLURAZOLE; thidiazimin + S-metolachlor + terbuthylazine + sulfosate + FLURAZOLE; and thidiazimin + atrazine + nicosulfuron + sulfosate + FLURAZOLE.

acifluorfen + metolachlor + isoxaflutole + sulfosate + DICHLORMID; acifluorfen + S-metolachlor + isoxaflutole + sulfosate + DICHLORMID; acifluorfen + metolachlor + mesotrione + sulfosate + DICHLORMID; acifluorfen + S-metolachlor + mesotrione + sulfosate + DICHLORMID; acifluorfen + metolachlor + atrazine + sulfosate + DICHLORMID; acifluorfen + S-metolachlor + atrazine + sulfosate + DICHLORMID; acifluorfen + metolachlor + terbuthylazine + sulfosate + DICHLORMID; acifluorfen + S-metolachlor + terbuthylazine + sulfosate + DICHLORMID; acifluorfen + atrazine + nicosulfuron + sulfosate + DICHLORMID; aclonifen + metolachlor + isoxaflutole + sulfosate + DICHLORMID; aclonifen + S-metolachlor + isoxaflutole + sulfosate + DICHLORMID; aclonifen + metolachlor + mesotrione + sulfosate + DICHLORMID; aclonifen + S-metolachlor + mesotrione + DICHLORMID; aclonifen + metolachior + atrazine + sulfosate + DICHLORMID; aclonifen + S-metolachlor + atrazine + sulfosate + DICHLORMID; aclonifen + metolachlor + terbuthylazine + sulfosate + DICHLORMID; aclonifen + S-metolachlor + terbuthylazine + sulfosate + DICHLORMID; aclonifen + atrazine + nicosulfuron + sulfosate + DICHLORMID; bifenox + metolachlor + isoxaflutole + sulfosate + DICHLORMID; bifenox + S-metolachlor + isoxaflutole + sulfosate + DICHLORMID; bifenox + metolachlor + mesotrione + sulfosate + DICHLORMID; bifenox + S-metolachlor + mesotrione + sulfosate + DICHLORMID; bifenox + metolachlor + atrazine + sutfosate + DICHLORMID; bifenox + S-metolachlor + atrazine + sulfosate + DICHLORMID; bifenox + metolachlor + terbuthylazine + sulfosate + DICHLORMID; bifenox + S-metolachlor + terbuthylazine + sulfosate + DICHLORMID; bifenox + atrazine + nicosulfuron + sulfosate + DICHLORMID; chlornitrofen + metolachlor + isoxaflutole + sulfosate + DICHLORMID; chlornitrofen + S-metolachlor + isoxaflutole + sulfosate + DICHLORMID; chlornitrofen + metolachlor + mesotrione + sulfosate + DICHLORMID; chlornitrofen + S-metolachlor + mesotrione + sulfosate + DICHLORMID; chlornitrofen + metolachlor + atrazine + sulfosate + DICHLORMID; chlornitrofen + S-metolachlor + atrazine + sulfosate + DICHLORMID; chlornitrofen + metolachlor + terbuthylazine + sulfosate + DICHLORMID; chlornitrofen + S-metolachlor + terbuthylazine + sulfosate + DICHLORMID; chlornitrofen + atrazine + nicosulfuron + sulfosate + DICHLORMID; ethoxyfen + metolachlor + isoxaflutole + sulfosate + DICHLORMID; ethoxyfen + S-metolachlor + isoxaflutole + sulfosate + DICHLORMID; ethoxyfen + metolachlor + mesotrione + sulfosate + DICHLORMID; ethoxyfen + S-metolachlor + mesotrione + sulfosate + DICHLORMID; ethoxyfen + metolachlor + atrazine + sulfosate + DICHLORMID; ethoxyfen + S-metolachlor + atrazine + sulfosate + DICHLORMID; ethoxyfen + metolachlor + terbuthylazine + sulfosate + DICHLORMID; ethoxyfen + S-metolachlor + terbuthylazine + sulfosate + DICHLORMID; ethoxyfen + atrazine + nicosulfuron + sulfosate + DICHLORMID; fluoroglycofen + metolachlor + isoxaflutole + sulfosate + DICHLORMID; fluoroglycofen + S-metolachlor + isoxaflutole + sulfosate + DICHLORMID; fluoroglycofen + metolachlor + mesotrione + sulfosate + DICHLORMID; fluoroglycofen + S-metolachlor + mesotrione + sulfosate + DICHLORMID; fluoroglycofen + metolachlor + atrazine + sulfosate + DICHLORMID; fluoroglycofen + S-metolachlor + atrazine + sulfosate + DICHLORMID; fluoroglycofen + metolachlor + terbuthylazine + sulfosate + DICHLORMID; fluoroglycofen + S-metolachlor + terbuthylazine + sulfosate + DICHLORMID; fluoroglycofen + atrazine + nicosulfuron + sulfosate + DICHLORMID; fomesafen + metolachlor + isoxaflutole + sulfosate + DICHLORMID; fomesafen + S-metolachlor + isoxaflutole + sulfosate + DICHLORMID; fomesafen + metolachlor + mesotrione + sulfosate + DICHLORMID; fomesafen + S-metolachlor + mesotrione + sulfosate + DICHLORMID; fomesafen + metolachlor + atrazine + sulfosate + DICHLORMID; fomesafen + S-metolachlor + atrazine + sulfosate + DICHLORMID; fomesafen + metolachlor + terbuthylazine + sulfosate + DICHLORMID; fomesafen + S-metolachlor + terbuthylazine + sulfosate + DICHLORMID; fomesafen + atrazine + nicosulfuron + sulfosate + DICHLORMID; lactofen + metolachlor + isoxaflutole + sulfosate + DICHLORMID; lactofen + S-metolachlor + isoxaflutole + sulfosate + DICHLORMlD lactofen + metolachlor + mesotrione + sulfosate + DICHLORMID; lactofen + S-metolachlor + mesotrione + sulfosate + DICHLORMID; lactofen + metolachlor + atrazine + sulfosate + DICHLORMID; lactofen + S-metolachlor + atrazine + sulfosate + DICHLORMID; lactofen + metolachlor + terbuthylazine + sulfosate + DICHLORMID; lactofen + S-metolachlor + terbuthylazine + sulfosate + DICHLORMID; lactofen + atrazine + nicosulfuron + sulfosate + DICHLORMID; oxyfluorfen + metolachlor + isoxaflutole + sulfosate + DICHLORMID; oxyfluorfen + S-metolachlor + isoxaflutole + sulfosate + DICHLORMlD; oxyfluorfen + metolachlor + mesotrione + sulfosate + DICHLORMID; oxyfluorfen + S-metolachlor + mesotrione + sulfosate + DICHLORMID; oxyfluorfen + metolachlor + atrazine + sulfosate + DICHLORMID; oxyfluorfen + S-metolachlor + atrazine + sulfosate + DICHLORMID; oxyfluorfen + metolachlor + terbuthylazine + sulfosate + DICHLORMID; oxyfluorfen + S-metolachlor + terbuthylazine + sulfosate + DICHLORMID; oxyfluorfen + atrazine + nicosulfuron + sulfosate + DICHLORMID; azafenidin + metolachlor + isoxaflutole + sulfosate + DICHLORMID; azafenidin + S-metolachlor + isoxaflutole + sulfosate + DICHLORMID; azafenidin + metolachlor + mesotrione + sulfosate + DICHLORMID; azafenidin + S-metolachlor + mesotrione + sulfosate + DICHLORMID; azafenidin + metolachlor + atrazine + sulfosate + DICHLORMID; azafenidin + S-metolachlor + atrazine + sulfosate + DICHLORMID; azafenidin + melolachlor + terbuthylazine + sulfosate + DICHLORMID; azafenidin + S-metolachlor + terbuthylazine + sulfosate + DICHLORMID; azafenidin + atrazine + nicosulfuron + sulfosate + DICHLORMID; carfentrazone-ethyl + metolachlor + isoxaflutole + sulfosate + DICHLORMID; carfentrazone-ethyl + S-metolachlor + isoxaflutole + sulfosate + DICHLORMID; carfentrazone-ethyl + metolachlor + mesotrione + sulfosate + DICHLORMID; carfentrazone-ethyl + S-metolachlor + mesotrione + sulfosate + DICHLORMID; carfentrazone-ethyl + metolachlor + atrazine + sulfosate + DICHLORMID; carfentrazone-ethyl + S-metolachlor + atrazine + sulfosate + DICHLORMID; carfentrazone-ethyl + metolachlor + terbuthylazine + sulfosate + DICHLORMID; carfentrazone-ethyl + S-metolachlor + terbuthylazine + sulfosate + DICHLORMID; carfentrazone-ethyl + atrazine + nicosulfuron + DICHLORMID; compound of the formula A + metolachlor + isoxaflutole + sulfosate + DICHLORMID; compound of the formula A + S-metolachlor + isoxaflutole + sulfosate + DICHLORMID; compound of the formula A + metolachlor + mesotrione + sulfosate + DICHLORMID; compound of the formula A + S-metolachlor + mesotrione + sulfosate + DICHLORMID; compound of the formula A + metolachlor + atrazine + sulfosate + DICHLORMID; compound of the formula A + S-metolachlor + atrazine + sulfosate + DICHLORMID; compound of the formula A + metolachlor + terbuthylazine + sulfosate + DICHLORMID; compound of the formula A + S-metolachlor + terbuthylazine + sulfosate + DICHLORMID; compound of the formula A + atrazine + nicosulfuron + sulfosate + DICHLORMID; cinidon-ethyl + metolachlor + isoxaflutole + sulfosate + DICHLORMID; cinidon-ethyl + S-metolachlor + isoxaflutole + sulfosate + DICHLORMID; cinidon-ethyl + metolachlor + mesotrione + sulfosate + DICHLORMID; cinidon-ethyl + S-metolachlor + mesotrione + sulfosate + DICHLORMID; cinidon-ethyl + metolachlor + atrazine + sulfosate + DICHLORMID; cinidon-ethyl + S-metolachlor + atrazine + sulfosate + DICHLORMID; cinidon-ethyl + metolachlor + terbuthylazine + sulfosate + DICHLORMID; cinidon-ethyl + S-metolachlor + terbuthylazine + sulfosate + DICHLORMID; cinidon-ethyl + atrazine + nicosulfuron + sulfosate + DICHLORMID; flumiclorac-pentyl + metolachlor + isoxaflutole + DICHLORMID; flumiclorac-pentyl + S-metolachlor + isoxaflutole + sulfosate + DICHLORMID; flumiclorac-pentyl + metolachlor + mesotrione + sulfosate + DICHLORMID; flumiclorac-pentyl + S-metolachlor + mesotrione + sulfosate + DICHLORMID; flumiclorac-pentyl + metolachlor + atrazine + sulfosate + DICHLORMID; flumiclorac-pentyl + S-metolachlor + atrazine + sulfosate + DICHLORMID; flumiclorac-pentyl + metolachlor + terbuthylazine + sulfosate + DICHLORMID; flumiclorac-pentyl + S-metolachlor + terbuthylazine + sulfosate + DICHLORMID; flumiclorac-pentyl + atrazine + nicosulfuron + sulfosate + DICHLORMID; flumioxazin + metolachlor + isoxaflutole + sulfosate + DICHLORMID; flumioxazin + S-metolachlor + isoxaflutole + sulfosate + DICHLORMID; flumioxazin + metolachlor + mesotrione + sulfosate + DICHLORMID; flumioxazin + S-metolachlor + mesotrione + sulfosate + DICHLORMID; flumioxazin + metolachlor + atrazine + sulfosate + DICHLORMID; flumioxazin + S-metolachlor + atrazine + sulfosate + DICHLORMID; flumioxazin + metolachlor + terbuthylazine + sulfosate + DICHLORMID; flumioxazin + S-metolachlor + terbuthylazine + sulfosate + DICHLORMID; flumioxazin + atrazine + nicosulfuron + sulfosate + DICHLORMID; fluthiacet-methyl + metolachlor + isoxaflutole + sulfosate + DICHLORMID; fluthiacet-methyl + S-metolachlor + isoxaflutole + sulfosate + DICHLORMID; fluthiacet-methyl + metolachlor + mesotrione + sulfosate + DICHLORMID; fluthiacet-methyl + S-metolachlor + mesotrione + sulfosate + DICHLORMID; fluthiacet-methyl + metolachlor + atrazine + sulfosate + DICHLORMID; fluthiacet-methyl + S-metolachlor + atrazine + sulfosate + DICHLORMID; fluthiacet-methyl + metolachlor + terbuthylazine + sulfosate + DICHLORMID; fluthiacet-methyl + S-metolachlor + terbuthylazine + sulfosate + DICHLORMID; fluthiacet-methyl + atrazine + nicosulfuron + sulfosate + DICHLORMID; oxadiargyl + metolachlor + isoxaflutole + sulfosate + DICHLORMID; oxadiargyl + S-metolachlor + isoxaflutole + sulfosate + DICHLORMID; oxadiargyl + metolachlor + mesotrione + sulfosate + DICHLORMID; oxadiargyl + S-metolachlor + mesotrione + sulfosate + DICHLORMID; oxadiargyl + metolachlor + atrazine + sulfosate + DICHLORMID; oxadiargyl + S-metolachlor + atrazine + sulfosate + DICHLORMID; oxadiargyl + metolachlor + terbuthylazine + sulfosate + DICHLORMID; oxadiargyl + S-metolachlor + terbuthylazine + sulfosate + DICHLORMID; oxadiargyl + atrazine + nicosulfuron + sulfosate + DICHLORMID; oxadiazon + metolachlor + isoxaflutole + sulfosate + DICHLORMID; oxadiazon + S-metolachlor + isoxaflutole + sulfosate + DICHLORMID; oxadiazon + metolachlor + mesotrione + sulfosate + DICHLORMID; oxadiazon + S-metolachlor + mesotrione + sulfosate + DICHLORMID; oxadiazon + metolachlor + atrazine + sulfosate + DICHLORMID; oxadiazon + S-metolachlor + atrazine + sulfosate + DICHLORMID; oxadiazon + metolachlor + terbuthylazine + sulfosate + DICHLORMID; oxadiazon + S-metolachlor + terbuthylazine + sulfosate + DICHLORMID; oxadiazon + atrazine + nicosulfuron + sulfosate + DICHLORMID; pentoxazone + metolachlor + isoxaflutole + sulfosate + DICHLORMID; pentoxazone + S-metolachlor + isoxaflutole + sulfosate + DICHLORMID; pentoxazone + metolachlor + mesotrione + sulfosate + DICHLORMID; pentoxazone + S-metolachlor + mesotrione + sulfosate + DICHLORMID; pentoxazone + metolachlor + atrazine + sulfosate + DICHLORMID; pentoxazone + S-metolachlor + atrazine + sulfosate + DICHLORMID; pentoxazone + metolachlor + terbuthylazine + sulfosate + DICHLORMID; pentoxazone + S-metolachlor + terbuthylazine + sulfosate + DICHLORMID; pentoxazone + atrazine + nicosulfuron + sulfosate + DICHLORMID; sulfentrazone + metolachlor + isoxaflutole + sulfosate + DICHLORMID; sulfentrazone + S-metolachlor + isoxaflutole + sulfosate + DICHLORMID; sulfentrazone + metolachlor + mesotrione + sulfosate + DICHLORMID; sulfentrazone + S-metolachlor + mesotrione + sulfosate + DICHLORMID; sulfentrazone + metolachlor + atrazine + sulfosate + DICHLORMID; sulfentrazone + S-metolachlor + atrazine + sulfosate + DICHLORMID; sulfentrazone + metolachlor + terbuthylazine + sulfosate + DICHLORMID; sulfentrazone + S-metolachlor + terbuthylazine + sulfosate + DICHLORMID; sulfentrazone + atrazine + nicosulfuron + sulfosate + DICHLORMID; fluazolate + metolachlor + isoxaflutole + sulfosate + DICHLORMID; fluazolate + S-metolachlor + isoxaflutole + sulfosate + DICHLORMID; fluazolate + metolachlor + mesotrione + sulfosate + DICHLORMID; fluazolate + S-metolachlor + mesotrione + sulfosate + DICHLORMID; fluazolate + metolachlor + atrazine + sulfosate + DICHLORMID; fluazolate + S-metolachlor + atrazine + sulfosate + DICHLORMID; fluazolate + metolachlor + terbuthylazine + sulfosate + DICHLORMID; fluazolate + S-metotachlor + terbuthylazine + sulfosate + DICHLORMID; fluazolate + atrazine + nicosulfuron + sulfosate + DICHLORMID; pyraflufen-ethyl + metolachlor + isoxaflutole + sulfosate + DICHLORMID; pyraflufen-ethyl + S-metolachlor + isoxaflutole + sulfosate + DICHLORMID; pyraflufen-ethyl + metolachlor + mesotrione + sulfosate + DICHLORMID; pyraflufen-ethyl + S-metolachlor + mesotrione + sulfosate + DICHLORMID; pyraflufen-ethyl + metolachlor + atrazine + sulfosate + DICHLORMID; pyraflufen-ethyl + S-metolachlor + atrazine + sulfosate + DICHLORMID; pyraflufen-ethyl + metolachlor + terbuthylazine + sulfosate + DICHLORMID; pyraflufen-ethyl + S-metolachlor + terbuthylazine + sulfosate + DICHLORMID; pyraflufen-ethyl + atrazine + nicosulfuron + sulfosate + DICHLORMID; flumipropyn + metolachlor + isoxaflutole + sulfosate + DICHLORMID; flumipropyn + S-metolachlor + isoxaflutole + sulfosate + DICHLORMID; flumipropyn + metolachlor + mesotrione + sulfosate + DICHLORMID; flumipropyn + S-metolachlor + mesotrione + sulfosate + DICHLORMID; flumipropyn + metolachlor + atrazine + sulfosate + DICHLORMID; flumipropyn + S-metolachlor + atrazine + sulfosate + DICHLORMID; flumipropyn + metolachlor + terbuthylazine + sulfosate + DICHLORMID; flumipropyn + S-metolachlor + terbuthylazine + sulfosate + DICHLORMID; flumipropyn + atrazine + nicosulfuron + sulfosate + DICHLORMID; flupropacil + metolachlor + isoxaflutole + sulfosate + DICHLORMID; flupropacil + S-metolachlor + isoxaflutole + sulfosate + DICHLORMID; flupropacil + metolachlor + mesotrione + sulfosate + DICHLORMID; flupropacil + S-metolachlor + mesotrione + sulfosate + DICHLORMID; flupropacil + metolachlor + atrazine + sulfosate + DICHLORMID; flupropacil + S-metolachlor + atrazine + sulfosate + DICHLORMID; flupropacil + metolachlor + terbuthylazine + sulfosate + DICHLORMID; flupropacil + S-metolachlor + terbuthylazine + sulfosate + DICHLORMID; flupropacil + atrazine + nicosulfuron + sulfosate + DICHLORMID; nipyraclofen + metolachlor + isoxaflutole + sulfosate + DICHLORMID; nipyraclofen + S-metolachlor + isoxaflutole + sulfosate + DICHLORMID; nipyraclofen + metolachlor + mesotrione + sulfosate + DICHLORMID; nipyraclofen + S-metolachlor + mesotrione + sulfosate + DICHLORMID; nipyraclofen + metolachlor + atrazine + sulfosate + DICHLORMID; nipyraclofen + S-metolachlor + atrazine + sulfosate + DICHLORMID; nipyraclofen + metolachlor + terbuthylazine + sulfosate + DICHLORMID; nipyraclofen + S-metolachlor + terbuthylazine + sulfosate + DICHLORMID; nipyraclofen + atrazine + nicosulfuron + sulfosate + DICHLORMID; benzfendizone + metolachlor + isoxaflutole + sulfosate + DICHLORMID; benzfendizone + S-metolachlor + isoxaflutole + sulfosate + DICHLORMID; benzfendizone + metolachlor + mesotrione + sulfosate + DICHLORMID; benzfendizone + S-metolachlor + mesotrione + sulfosate + DICHLORMID; benzfendizone + metolachlor + atrazine + sulfosate + DICHLORMID; benzfendizone + S-metolachlor + atrazine + sulfosate + DICHLORMID; benzfendizone + metolachlor + terbuthylazine + sulfosate + DICHLORMID; benzfendizone + S-metolachlor + terbuthylazine + sulfosate + DICHLORMID; benzfendizone + atrazine + nicosulfuron + sulfosate + DICHLORMID; thidiazimin + metolachlor + isoxaflutole + sulfosate + DICHLORMID; thidiazimin + S-metolachlor + isoxaflutole + sulfosate + DICHLORMID; thidiazimin + metolachlor + mesotrione + sulfosate + DICHLORMID; thidiazimin + S-metolachlor + mesotrione + sulfosate + DICHLORMID; thidiazimin + metolachlor + atrazine + sulfosate + DICHLORMID; thidiazimin + S-metolachlor + atrazine + sulfosate + DICHLORMID; thidiazimin + metolachlor + terbuthylazine + sulfosate + DICHLORMID; thidiazimin + S-metolachlor + terbuthylazine + sulfosate + DICHLORMID; and thidiazimin + atrazine + nicosulfuron + sulfosate + DICHLORMID.

Acifluorfen + metolachlor + isoxaflutole + sulfosate + FURILAZOLE; acifluorfen + S-metolachlor + isoxaflutole + sulfosate + FURILAZOLE; acifluorfen + metolachlor + mesotrione + sulfosate + FURILAZOLE; acifluorfen + S-metolachlor + mesotrione + sulfosate + FURILAZOLE; acifluorfen + metolachlor + atrazine + sulfosate + FURILAZOLE; acifluorfen + S-metolachlor + atrazine + sulfosate + FURILAZOLE; acifluorfen + metolachlor + terbuthylazine + sulfosate + FURILAZOLE; acifluorfen + S-metolachlor + terbuthylazine + sulfosate + FURILAZOLE; acifluorfen + atrazine + nicosulfuron + sulfosate + FURILAZOLE; aclonifen + metolachlor + isoxaflutole + sulfosate + FURILAZOLE; aclonifen + S-metolachlor + isoxaflutole + sulfosate + FURILAZOLE; aclonifen + metolachlor + mesotrione + sulfosate + FURILAZOLE; aclonifen + S-metolachlor + mesotrione + sulfosate + FURILAZOLE; aclonifen + metolachlor + atrazine + sulfosate + FURILAZOLE; aclonifen + S-metolachlor + atrazine + sulfosate + FURILAZOLE; aclonifen + metolachlor + terbuthylazine + sulfosate + FURILAZOLE; aclonifen + S-metolachlor + terbuthylazine + sulfosate + FURILAZOLE; aclonifen + atrazine + nicosulfuron + sulfosate + FURILAZOLE; bifenox + metolachlor + isoxaflutole + sulfosate + FURlLAZOLE; bifenox + S-metolachlor + isoxaflutole + sulfosate + FURILAZOLE; bifenox + metolachlor + mesotrione + sulfosate + FURILAZOLE; bifenox + S-metolachlor + mesotrione + sulfosate + FURILAZOLE; bifenox + metolachlor + atrazine + sulfosate + FURILAZOLE; bifenox + S-metolachlor + atrazine + sulfosate + FURILAZOLE; bifenox + metolachlor + terbuthylazine + sulfosate + FURILAZOLE; bifenox + S-metoiachior + terbuthylazine + sulfosate + FURILAZOLE; bifenox + atrazine + nicosulfuron + sutfosate + FURILAZOLE; chlornitrofen + metolachlor + isoxaflutole + sulfosate + FURILAZOLE; chlornitrofen + S-metolachlor + isoxaflutole + sulfosate + FURILAZOLE; chlornitrofen + metolachlor + mesotrione + sulfosate + FURILAZOLE; chlornitrofen + S-metolachlor + mesotrione + sulfosate + FURILAZOLE; chlornitrofen + metolachlor + atrazine + sulfosate + FURILAZOLE; chlornitrofen + S-metolachlor + atrazine + sulfosate + FURILAZOLE; chlornitrofen + metolachlor + terbuthylazine + sulfosate + FURILAZOLE; chlornitrofen + S-metolachlor + terbuthylazine + sulfosate + FURILAZOLE; chlornitrofen + atrazine + nicosulfuron + sulfosate + FURILAZOLE; ethoxyfen + metolachlor + isoxaflutole + sulfosate + FURILAZOLE; ethoxyfen + S-metolachlor + isoxaflutole + sulfosate + FURILAZOLE; ethoxyfen + metolachlor + mesotrione + sulfosate + FURILAZOLE; ethoxyfen + S-metolachlor + mesotrione + sulfosate + FURILAZOLE; ethoxyfen + metolachlor + atrazine + sulfosate + FURILAZOLE; ethoxyfen + S-metolachlor + atrazine + sulfosate + FURILAZOLE; ethoxyfen + metolachlor + terbuthylazine + sulfosate + FURILAZOLE; ethoxyfen + S-metolachlor + terbuthylazine + sulfosate + FURILAZOLE; ethoxyfen + atrazine + nicosulfuron + sulfosate + FURILAZOLE; fluoroglycofen + metolachlor + isoxaflutole + sulfosate + FURILAZOLE; fluoroglycofen + S-metolachlor + isoxaflutole + sulfosate + FURILAZOLE; fluoroglycofen + metolachlor + mesotrione + sulfosate + FURILAZOLE; fluoroglycofen + S-metolachlor + mesotrione + sulfosate + FURILAZOLE; fluoroglycofen + metolachlor + atrazine + sulfosate + FURILAZOLE; fluoroglycofen + S-metolachlor + atrazine + sulfosate + FURILAZOLE; fluoroglycofen + metolachlor + terbuthylazine + sulfosate + FURILAZOLE; fluoroglycofen + S-metolachlor + terbuthylazine + sulfosate + FURILAZOLE; fluoroglycofen + atrazine + nicosulfuron + sulfosate + FURILAZOLE; fomesafen + metolachlor + isoxaflutole + sulfosate + FURILAZOLE; fomesafen + S-metolachlor + isoxaflutole + sulfosate + FURILAZOLE; fomesafen + metolachlor + mesotrione + sulfosate + FURILAZOLE; fomesafen + S-metolachlor + mesotrione + sulfosate + FURILAZOLE; fomesafen + metolachlor + atrazine + sulfosate + FURILAZOLE; fomesafen + S-metolachlor + atrazine + sulfosate + FURILAZOLE; fomesafen + metolachlor + terbuthylazine + sulfosate + FURILAZOLE; fomesafen + S-metolachlor + terbuthylazine + sulfosate + FURILAZOLE; fomesafen + atrazine + nicosulfuron + sulfosate + FURILAZOLE; lactofen + metolachlor + isoxaflutole + sulfosate + FURILAZOLE; lactofen + S-metolachlor + isoxaflutole + sulfosate + FURILAZOLE; lactofen + metolachlor + mesotrione + sulfosate + FURILAZOLE; lactofen + S-metolachlor + mesotrione + sulfosate + FURILAZOLE; lactofen + metolachlor + atrazine + sulfosate + FURILAZOLE; lactofen + S-metolachtor + atrazine + sulfosate + FURILAZOLE; lactofen + metolachlor + terbuthylazine + sulfosate + FURILAZOLE; lactofen + S-metolachlor + terbuthylazine + sulfosate + FURILAZOLE; lactofen + atrazine + nicosulfuron + sulfosate + FURILAZOLE; oxyfluorfen + metolachlor + isoxaflutole + sulfosate + FURILAZOLE; oxyfluorfen + S-metolachlor + isoxaflutole + sulfosate + FURILAZOLE; oxyfluorfen + metolachlor + mesotrione + sulfosate + FURILAZOLE; oxyfluorfen + S-metolachlor + mesotrione + sulfosate + FURILAZOLE; oxyfluorfen + metolachlor + atrazine + sulfosate + FURILAZOLE; oxyfluorfen + S-metolachlor + atrazine + sulfosate + FURILAZOLE; oxyfluorfen + metolachlor + terbuthylazine + sulfosate + FURILAZOLE; oxyfluorfen + S-metolachlor + terbuthylazine + sulfosate + FURILAZOLE; oxyfluorfen + atrazine + nicosulfuron + sulfosate + FURILAZOLE; azafenidin + metolachlor + isoxaflutote + sulfosate + FURILAZOLE; azafenidin + S-metolachlor + isoxaflutole + sulfosate + FURILAZOLE; azafenidin + metolachlor + mesotrione + sulfosate + FURILAZOLE; azafenidin + S-metolachlor + mesotrione + sulfosate + FURILAZOLE; azafenidin + metolachlor + atrazine + sulfosate + FURILAZOLE; azafenidin + S-metolachlor + atrazine + sulfosate + FURILAZOLE; azafenidin + metolachlor + terbuthylazine + sulfosate + FURILAZOLE; azafenidin + S-metolachlor + terbuthylazine + sulfosate + FURILAZOLE; azafenidin + atrazine + nicosulfuron + sulfosate + FURILAZOLE; carfentrazone-ethyl + metolachlor + isoxaflutole + sulfosate + FURILAZOLE; carfentrazone-ethyl + S-metolachlor + isoxaflutole + sulfosate + FURILAZOLE; carfentrazone-ethyl + metolachlor + mesotrione + sulfosate + FURILAZOLE; carfentrazone-ethyl + S-metolachlor + mesotrione + sulfosate + FURILAZOLE; carfentrazone-ethyl + metolachlor + atrazine + sulfosate + FURILAZOLE; carfentrazone-ethyl + S-metolachlor + atrazine + sulfosate + FURILAZOLE; carfentrazone-ethyl + metolachlor + terbuthylazine + sulfosate + FURILAZOLE; carfentrazone-ethyl + S-metolachlor + terbuthylazine + sulfosate + FURILAZOLE; carfentrazone-ethyl + atrazine + nicosulfuron + sulfosate + FURILAZOLE; compound of the formula A + metolachlor + isoxaflutole + sulfosate + FURILAZOLE; compound of the formula A + S-metolachlor + isoxaflutole + sulfosate + FURILAZOLE; compound of the formula A + metolachlor + mesotrione + sulfosate + FURILAZOLE; compound of the formula A + S-metolachlor + mesotrione + sulfosate + FURILAZOLE; compound of the formula A + metolachlor + atrazine + sulfosate + FURILAZOLE; compound of the formula A + S-metolachlor + atrazine + sulfosate + FURILAZOLE; compound of the formula A + metolachlor + terbuthylazine + sulfosate + FURILAZOLE; compound of the formula A + S-metolachlor + terbuthylazine + sulfosate + FURILAZOLE; compound of the formula A + atrazine + nicosulfuron + sulfosate + FURILAZOLE; cinidon-ethyl + metolachlor + isoxaflutole + sulfosate + FURILAZOLE; cinidon-ethyl + S-metolachlor + isoxaflutole + sulfosate + FURILAZOLE; cinidon-ethyl + metolachlor + mesotrione + sulfosate + FURILAZOLE; cinidon-ethyl + S-metolachlor + mesotrione + sulfosate + FURILAZOLE; cinidon-ethyl + metolachlor + atrazine + sulfosate + FURILAZOLE; cinidon-ethyl + S-metolachlor + atrazine + sulfosate + FURILAZOLE; cinidon-ethyl + metolachlor + terbuthylazine + sulfosate + FURILAZOLE; cinidon-ethyl + S-metolachlor + terbuthylazine + sulfosate + FURILAZOLE; cinidon-ethyl + atrazine + nicosulfuron + sulfosate + FURILAZOLE; flumiclorac-pentyl + metolachlor + isoxaflutole + sulfosate + FURILAZOLE; flumiclorac-pentyl + S-metolachlor + isoxaflutole + sulfosate + FURILAZOLE; flumiclorac-pentyl + metolachlor + mesotrione + sulfosate + FURILAZOLE; flumiclorac-pentyl + S-metolachlor + mesotrione + sulfosate + FURILAZOLE; flumiclorac-pentyl + metolachlor + atrazine + sulfosate + FURILAZOLE; flumiclorac-pentyl + S-metolachlor + atrazine + sulfosate + FURILAZOLE; flumiclorac-pentyl + metolachior + terbuthylazine + sulfosate + FURILAZOLE; flumiclorac-pentyl + S-metolachlor + terbuthylazine + sulfosate + FURILAZOLE; flumiclorac-pentyl + atrazine + nicosulfuron + sulfosate + FURILAZOLE; flumioxazin + metolachlor + isoxaflutole + sulfosate + FURILAZOLE; flumioxazin + S-metolachlor + isoxaflutole + sulfosate + FURILAZOLE; flumioxazin + metolachlor + mesotrione + sulfosate + FURILAZOLE; flumioxazin + S-metolachlor + mesotrione + sulfosate + FURILAZOLE; flumioxazin + metolachlor + atrazine + sulfosate + FURILAZOLE; flumioxazin + S-metolachlor + atrazine + sulfosate + FURILAZOLE; flumioxazin + metolachlor + terbuthylazine + sulfosate + FURILAZOLE; flumioxazin + S-metolachlor + terbuthylazine + sulfosate + FURILAZOLE; flumioxazin + atrazine + nicosulfuron + sulfosate + FURILAZOLE; fluthiacet-methyl + metolachlor + isoxaflutole + sulfosate + FURILAZOLE; fluthiacet-methyl + S-metolachlor + isoxaflutole + sulfosate + FURILAZOLE; fluthiacet-methyl + metolachlor + mesotrione + sulfosate + FURILAZOLE; fluthiacet-methyl + S-metotachlor + mesotrione + sulfosate + FURILAZOLE; fluthiacet-methyl + metolachlor + atrazine + sulfosate + FURILAZOLE; fluthiacet-methyl + S-metolachlor + atrazine + sulfosate + FURILAZOLE; fluthiacet-methyl + metolachlor + terbuthylazine + sulfosate + FURILAZOLE; fluthiacet-methyl + S-metolachlor + terbuthylazine + sulfosate + FURILAZOLE; fluthiacet-methyl + atrazine + nicosulfuron + sulfosate + FURILAZOLE; oxadiargyl + metolachlor + isoxaflutole + sulfosate + FURILAZOLE; oxadiargyl + S-metolachlor + isoxaflutole + sulfosate + FURILAZOLE; oxadiargyl + metolachlor + mesotrione + sulfosate + FURILAZOLE; oxadiargyl + S-metolachlor + mesotrione + sulfosate + FURILAZOLE; oxadiargyl + metolachlor + atrazine + sulfosate + FURILAZOLE; oxadiargyl + S-metolachlor + atrazine + sulfosate + FURILAZOLE; oxadiargyl + metolachlor + terbuthylazine + sulfosate + FURILAZOLE; oxadiargyl + S-metolachlor + terbuthylazine + sulfosate + FURILAZOLE; oxadiargyl + atrazine + nicosulfuron + sulfosate + FURILAZOLE; oxadiazon + metolachlor + isoxaflutole + sulfosate + FURILAZOLE; oxadiazon + S-metolachlor + isoxaflutole + sulfosate + FURILAZOLE; oxadiazon + metotachlor + mesotrione + sulfosate + FURILAZOLE; oxadiazon + S-metolachlor + mesotrione + sulfosate + FURILAZOLE; oxadiazon + metolachlor + atrazine + sulfosate + FURILAZOLE; oxadiazon + S-metolachlor + atrazine + sulfosate + FURILAZOLE; oxadiazon + metolachlor + terbuthylazine + sulfosate + FURILAZOLE; oxadiazon + S-metolachlor + terbuthylazine + sulfosate + FURILAZOLE; oxadiazon + atrazine + nicosulfuron + sulfosate + FURILAZOLE; pentoxazone + metolachlor + isoxaflutole + sulfosate + FURILAZOLE; pentoxazone + S-metolachlor + isoxaflutole + sulfosate + FURILAZOLE; pentoxazone + metolachlor + mesotrione + sulfosate + FURILAZOLE; pentoxazone + S-metolachlor + mesotrione + sulfosate + FURILAZOLE; pentoxazone + metolachlor + atrazine + sulfosate + FURILAZOLE; pentoxazone + S-metolachlor + atrazine + sulfosate + FURILAZOLE; pentoxazone + metolachlor + terbuthylazine + sulfosate + FURILAZOLE; pentoxazone + S-metolachlor + terbuthylazine + sulfosate + FURILAZOLE; pentoxazone + atrazine + nicosulfuron + sulfosate + FURILAZOLE; sulfentrazone + metolachlor + isoxaflutole + sulfosate + FURILAZOLE; sulfentrazone + S-metolachlor + isoxaflutole + sulfosate + FURILAZOLE; sulfentrazone + metolachlor + mesotrione + sulfosate + FURILAZOLE; sulfentrazone + S-metolachlor + mesotrione + sulfosate + FURILAZOLE; sulfentrazone + metolachlor + atrazine + sulfosate + FURILAZOLE; sulfentrazone + S-metolachlor + atrazine + sulfosate + FURILAZOLE; sulfentrazone + metolachlor + terbuthylazine + sulfosate + FURILAZOLE; sulfentrazone + S-metolachlor + terbuthylazine + sulfosate + FURILAZOLE; sulfentrazone + atrazine + nicosulfuron + sulfosate + FURILAZOLE; fluazolate + metolachlor + isoxaflutole + sulfosate + FURILAZOLE; fluazolate + S-metolachlor + isoxaflutole + sulfosate + FURILAZOLE; fluazolate + metolachlor + mesotrione + sulfosate + FURILAZOLE; fluazolate + S-metolachlor + mesotrione + sulfosate + FURILAZOLE; fluazolate + metolachfor + atrazine + sulfosate + FURILAZOLE; fluazolate + S-metolachlor + atrazine + sulfosate + FURILAZOLE; fiuazolate + metoiachlor + terbuthylazine + sulfosate + FURILAZOLE; fluazolate + S-metolachlor + terbuthylazine + sulfosate + FURILAZOLE; fluazolate + atrazine + nicosulfuron + sulfosate + FURILAZOLE; pyraflufen-ethyl + metolachlor + isoxaflutole + sulfosate + FURILAZOLE; pyraflufen-ethyl + S-metolachlor + isoxaflutole + sulfosate + FURILAZOLE; pyraflufen-ethyl + metolachlor + mesotrione + sulfosate + FURILAZOLE; pyraflufen-ethyl + S-metolachlor + mesotrione + sulfosate + FURILAZOLE; pyraflufen-ethyl + metolachlor + atrazine + sulfosate + FURILAZOLE; pyraflufen-ethyl + S-metolachlor + atrazine + sulfosate + FURILAZOLE; pyraflufen-ethyl + metolachlor + terbuthylazine + sulfosate + FURILAZOLE; pyraflufen-ethyl + S-metolachlor + terbuthylazine + sulfosate + FURILAZOLE; pyraflufen-ethyl + atrazine + nicosulfuron + sulfosate + FURILAZOLE; flumipropyn + metolachlor + isoxaflutole + sulfosate + FURILAZOLE; flumipropyn + S-metolachlor + isoxaflutole + sulfosate + FURILAZOLE; flumipropyn + metolachlor + mesotrione + sulfosate + FURILAZOLE; flumipropyn + S-metolachlor + mesotrione + sulfosate + FURILAZOLE; flumipropyn + metolachlor + atrazine + sulfosate + FURILAZOLE; flumipropyn + S-metolachlor + atrazine + sulfosate + FURILAZOLE; flumipropyn + metolachlor + terbuthylazine + sulfosate + FURILAZOLE; flumipropyn + S-metolachlor + terbuthylazine + sulfosate + FURILAZOLE; flumipropyn + atrazine + nicosulfuron + sulfosate + FURILAZOLE; flupropacil + metolachlor + isoxaflutole + sulfosate + FURILAZOLE; flupropacil + S-metolachlor + isoxaflutole + sulfosate + FURILAZOLE; flupropacil + metolachlor + mesotrione + sulfosate + FURILAZOLE; flupropacil + S-metolachlor + mesotrione + sulfosate + FURILAZOLE; flupropacil + metolachlor + atrazine + sulfosate + FURILAZOLE; flupropacil + S-metolachlor + atrazine + sulfosate + FURILAZOLE; flupropacil + metolachlor + terbuthylazine + sulfosate + FURILAZOLE; flupropacil + S-metolachlor + terbuthylazine + sulfosate + FURILAZOLE; flupropacil + atrazine + nicosulfuron + sulfosate + FURILAZOLE; nipyraclofen + metolachlor + isoxaflutole + sulfosate + FURILAZOLE; nipyraclofen + S-metolachlor + isoxaflutole + sulfosate + FURILAZOLE; nipyraclofen + metolachlor + mesotrione + sulfosate + FURILAZOLE; nipyraclofen + S-metolachlor + mesotrione + sulfosate + FURILAZOLE; nipyraclofen + metolachlor + atrazine + sulfosate + FURILAZOLE; nipyraclofen + S-metolachlor + atrazine + sulfosate + FURILAZOLE; nipyraclofen + metolachlor + terbuthylazine + sulfosate + FURILAZOLE; nipyraclofen + S-metolachlor + terbuthylazine + sulfosate + FURILAZOLE; nipyraclofen + atrazine + nicosulfuron + sulfosate + FURILAZOLE; benzfendizone + metolachlor + isoxaflutole + sulfosate + FURILAZOLE; benzfendizone + S-metolachlor + isoxaflutole + sulfosate + FURILAZOLE; benzfendizone + metolachlor + mesotrione + sulfosate + FURILAZOLE; benzfendizone + S-metolachlor + mesotrione + sulfosate + FURILAZOLE; benzfendizone + metolachlor + atrazine + sulfosate + FURILAZOLE; benzfendizone + S-metolachlor + atrazine + sulfosate + FURILAZOLE; benzfendizone + metolachlor + terbuthylazine + sulfosate + FURILAZOLE; benzfendizone + S-metolachlor + terbuthylazine + sulfosate + FURILAZOLE; benzfendizone + atrazine + nicosulfuron + sulfosate + FURILAZOLE; thidiazimin + metolachlor + isoxaflutole + sulfosate + FURILAZOLE; thidiazimin + S-metolachlor + isoxaflutole + sulfosate + FURILAZOLE; thidiazimin + metolachlor + mesotrione + sulfosate + FURILAZOLE; thidiazimin + S-metolachlor + mesotrion + sulfosate + FURILAZOLE; thidiazimin + metolachlor + atrazine + sulfosate + FURILAZOLE; thidiazimin + S-metolachlor + atrazine + sulfosate + FURILAZOLE; thidiazimin + metolachlor + terbuthylazine + sulfosate + FURILAZOLE; thidiazimin + S-metolachlor + terbuthylazine + sulfosate + FURILAZOLE; and thidiazimin + atrazine + nicosulfuron + sulfosate + FURILAZOLE.

The weeds to be controlled can be both monocotyledonous and dicotyledonous weeds, for example Stellaria, Nasturtium, Agrostis, Digitaria, Avena, Setaria, Sinapis, Lolium, Solanum, Echinochloa, Scirpus, Monochoria, Sagittaria, Bromus, Alopecurus, Sorghum halepense, Rottboellia, Cyperus, Abutilon, Sida, Xanthium, Amaranthus, Chenopodium, Ipomoea, Chrysanthemum, Galium, Viola and Veronica.

Areas under cultivation are the areas on which the crop plants are already growing, or on which the seeds of these crop plants have been sown, and also the soils which are intended to be cultivated with these crop plants.

Depending on the intended use, the safener c), for example benoxacor (61) and cloquintocet-mexyl (154), can be employed for pretreating the seeds of the crop plant (dressing of the seeds or the seedlings), or it fan be worked into the soil before or after seeding. However, it can also be applied on its own or together with the herbicide after the plants have emerged. Thus, the treatment of the plants or the seeds with the safener can, in principle, be carried out independently of when the herbicide is applied. However, the plant can also be treated by simultaneous application of herbicide and safener, for example as so-called "ready- mix" or as tank mix. The application rate of safener to herbicide to be applied depends essentially on the type of application. In an outdoor treatment which is carried out either by using a tank mix of a combination of safener and herbicide or by separate application of safener and herbicide, the ratio of herbicide to safener is generally from 100: to 1:10, preferably from 20 : 1 to 1:1.

In an outdoor treatment, generally from 1 to 2000 g of safener/ha, preferably from 1 to 500 g of safener/ha, are applied.

The application rates of herbicide a) and co-herbicide(s) b) are generally between 1 and 5000 g/ha, but preferably between 5 and 1000 g/ha.

The compositions according to the invention are suitable for all application methods which are customary in agriculture, for example pre-emergence application, post-emergence application and seed dressing.

For seed dressing, generally 0.001 to 10 g of safener/kg of seed, preferably 0.05 to 2 g of safener/kg of seed, are applied. If the safener c) applied in liquid form while swelling the seeds shortly before seeding, it is advantageous to employ safener solutions which comprise the active compound in a concentration of from 1 to 10,000, preferably from 100 to 1000 ppm.

For application, the safener c) and the herbicides under a) and b) are advantageously processed together with the auxiliaries conventionally used in the art of formulation, for example to give emulsion concentrates, spreadable pastes, directly sprayable or dilutable solutions, dilute emulsions, wettable powders, soluble powders, dusts, granules or microcapsules.

Such formulations are described, for example, in WO 97/34485 on pages 9 to 13. The formulations are prepared in a known manner, for example by intimate mixing and/or grinding of the active compounds with liquid or solid formulation auxiliaries, for example solvents or solid carriers. Surplus-active compounds (surfactants) can furthermore additionally be used during preparation of the formulations. Solvents and solid carriers which are suitable for this purpose are mentioned, for example, in WO 97/34485 on page 6.

Suitable surface-active compounds are, depending on the nature of the active compounds under a) and b) to be formulated, nonionic, cationic and/or anionic surfactants and surfactant mixtures having good emulsifying, dispersing and wetting properties. Examples of suitable anionic, nonionic and cationic surfactants are listed, for example, in WO 97/34485 on pages 7 and 8. The surfactants conventionally used in the art of formulation and which can also be used in the preparation of the herbicidal compositions according to the invention are described, inter alia, in "Mc Cutcheon's Detergents and Emulsifiers Annual" MC publishing Corp., Ridgewood New Jersey, 1981, Stache, H., "Tensid-Taschenbuch" [Surfactant Handbook], Carl Hanser Verlag, Munich/Vienna. 1981 and M. and J. Ash, "Encyclopedia of Surfactants", Vol I-III, Chemical publishing Co., New York, 1980-81.

The herbicidal formulations generally comprise 0.1 to 99% by weight, in particular 0.1 to 95% by weight, of the active compound mixture of the compound under a), the compounds selected under b) and the compounds under c), 1 to 99.9% by weight of a solid or liquid formulation auxiliary and 0 to 25% by weight, in particular 0.1 to 25% by weight, of a surfactant.
While concentrate compositions are usually preferred as commercial goods, the end user generally uses dilute compositions.

The compositions can also comprise further additives, such as stabilizers, for example epoxidized or non-epoxidized vegetable oils (epoxidized coconut oil, reepseed oil or Soya oil), defoamers, for example silicone oil, preservators, viscosity regulators, binders, tackifiers and fertilizers or other active substances. For using the safeners c) or compositions comprising them to protect crop plants against damaging effects of herbicides under a) and b), various methods and techniques are suitable, for example the following:

### i) Seed dressing

a) Dressing of the seeds with an active compound c) formulated as a wettable powder by shaking in a vessel until even distribution on the surface of the seeds is achieved (dry dressing). Here, approximately 1 to 500 g of active compound under c) (4 g to 2 kg of wettable powder) are employed per 100 kg of seed.
b) Dressing the seeds using an emulsion concentrate of the active compound under c) according to method a) (wet dressing).
c) Dressing by dipping the seeds for 1 to 72 hours into a liquor containing 100-1000 ppm of active compound under c), with or without subsequent drying of the seeds (dip dressing).

Seed dressing or the treatment of the germinated seedlings are the naturally preferred application methods, since the treatment with active compound is completely directed at the target culture. In general. 1 to 1000 g of antidote c), preferably 5 to 250 g of antidote c), are employed per 100 kg of seed, but, depending on the method, which also permits the addition of other active compounds or micronutrients, it is possible to deviate above or below the stated limit concentration (repeat dressing).

### ii) Application as tank mix

A liquid preparation of a mixture of antidote c) and herbicide a) and b) (neutral ratio between 10:1 and 1:100) is employed, the application rate of herbicide being from 5 to 5000 g per hector. Such tank mixers are applied before or after seeding.

### iii) Application in the seed ferrule

The active compound under c) is applied into the open seeded seed ferrule as an emulsion concentrate, a wettable powder or as granules. After the seed ferrule has been covered, the herbicide is applied in a customary manner by the pre-emergence method.

### iv) Controlled release of active compound

The active compound under c) is absorbed in solution onto mineral granule carriers or polymerized granules (urea/formaldehyde) and dried. If appropriate, a coating which allows the active compound to be released in metered form over a certain period of time can be applied (coated granules).

## Claims

1. A herbicidal synergistic composition for the selective control of broad-leaved weeds and grasses in crops of useful plants resistant to protoporphyrinogen oxidase inhibitors, comprising, in addition to customary inert formulation auxiliaries, as active compounds a mixture of
a) a herbicide which inhibits the action of protoporphyrinogen oxidases selected from the group of diphenyl ethers consisting of acifluorphen, aclonifen, bifenox, chlornitrophen, ethoxyfen, fluoroglycofen-ethyl, fomesafen, lactofen and oxyfluorfen, or from the group of imides consisting of azafenidin, carfentrazon-ethyl, cinidon-ethyl, flumiclorac-pentyl, flumioxazin, fluthiacet-methyl, oxadiargyl, oxadiazon, pentoxazone (KPP 314), sulfentrazone, flumipropyn, flupropacil, benzfendizone and the compound of the formula A 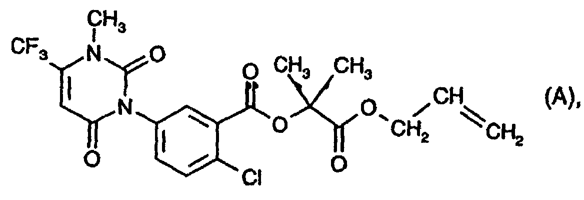 or from the group of
phenylpyrazoles consisting of nipyraclofen, and also fluazolate and thidiazimin, and
b) at least one further co-herbicide selected from the group of atrazine, terbuthylazine, (S)-metolachlor, metolachlor, terbutryn, simazine, dimethenamid, (S)-dimethenamid, flufenacet, acetochlor, alachlor, isoxaflutole, isoxachlortole, mesotrione, sulcotrione, metosulam, flumetsulam, pendimethalin, bromoxynil, bentazone, carfentrazone-ethyl, clomazone, nicosulfuron, rimsulfuron, halosulfuron-methyl, metribuzin, flumiclorac-pentyl, prosulfuron, primisulfuron-methyl, dicamba, fluthiacet-methyl, pyridate, 2,4-D, clopyralide, diflufenzopyr, fluroxypyr, MCPA, MCPB, mecoprop (MCPP), metobenzuron, thifensulfuron-methyl, aclonifen, EPTC, glyphosate, glufosinate, sulfosate, cyanazine, propaquizafop, metamitron, pyramin, phenmedipham, desmedipham, ethofumesate, triasulfuron, chloridazon, lenacil, triallate, fluazifop, sethoxydim, quizalofop, clopyralide, clethodim, oxasulfuron, acifluorfen, benazolin-ethyl, sulfentrazone, chlorimuron-ethyl, cloransulam-methyl, fomesafen, imazamox, imazaquin, imazethapyr, imazapyr, lactofen, fenoxaprop(P-ethyl), thidiazuron, tribufos, trifluralin, dimethachlor, napropamide, quinmerac, metazachlor, carbetamide, dimefuron, propyzamide, ethametsulfuron-methyl, tebutam, fluometuron, prometryn, norflurazon, pyrithiobac-sodium, MSMA, DSMA, diuron, flurochloridone, dithiopyr, thiazopyr, oxyfluorfen, ethalfluralin, clodinafop, amidosulfuron, diclofop-methyl, diflufenican, ethoxysulfuron, fentrazamide, flazasulfuron, florasulam, fluazolate, flucarbazone, flupyrsulfuron-methyl sodium, flurtamone, iodosulfuron, isoproturon, chlortoluron, chlorsulfuron, metsulfuron-methyl, sulfosulfuron, tribenuron-methyl, 2,4-DB, 2,4-DP, bifenox, flamprop-M, imazamethabenz-methyl, ioxynil, tralkoxydim, fluoroglycofen-ethyl, methabenzthiazuron, isoxaben, prosulfocarb, difenzoquat-metilsulfate, pretilachlor, cinosulfuron, fenclorim, bensulfuron-methyl, imazosulfuron, pyrazosulfuron-ethyl, azimsulfuron, esprocarb, mefenacet, molinate, propanil, pyrazolate, cyhalofop-butyl, bispyribac-sodium, pyriminobac-methyl, cafenstrole, oxadiargyl, oxadiazon, bromobutide, MY-100, dymron, NB 061, MK243, HW-52, AC 014, ametryn, hexazinone, asulam, azafenidin, tebuthiuron, ethametsulfuron-methyl, and compounds of the formulae A, B, C and D 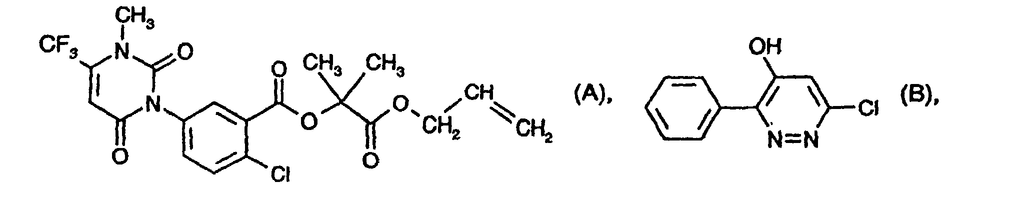 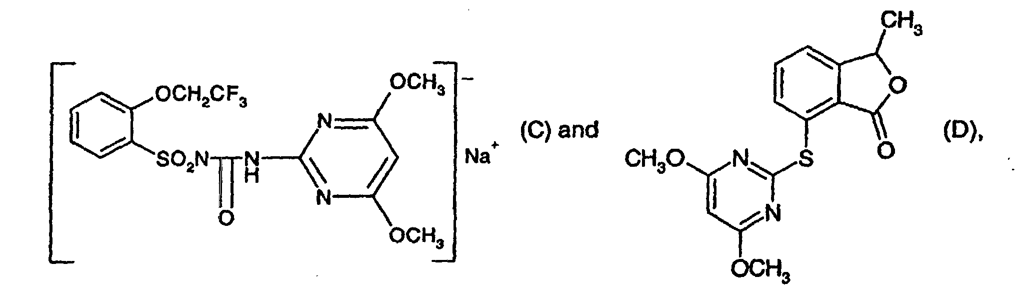 whereby the combination of the same compound of group a) and group b) cannot be employed as active ingredient.

2. A herbicidal composition according to claim 1 for controlling broad-leaved weeds and grasses in crops of maize, sugar beet, soya beans, rape, cotton, sunflowers, cereals, rice and sugar cane which are resistant to protoporphyrinogen oxidase inhibitors.

3. A herbicidal composition according to claim 1, for controlling weeds and grasses in crops of maize which are resistant to protoporphyrinogen inhibitors, where the co-herbicide b) is a compound selected from the group consisting of atrazine, terbuthylazine, (S)-metolachlor, metolachlor, terbutryn, simazine, dimethenamid or (S)-dimethenamid, flufenacet, acetochlor, alachlor, isoxaflutole, isoxachlortole, mesotrione, sulcotrione, metosulam, flumetsulam, pendimethalin, bromoxynil, bentazone, carfentrazone-ethyl, clomazone, nicosulfuron, rimsulfuron, halosulfuron-methyl, metribuzin, flumiclorac-pentyl, prosulfuron, primisulfuron-methyl, dicamba, fluthiacet-methyl, pyridate, 2,4-D, clopyralide, diflufenzopyr, fluroxypyr, MCPA, MCPB, mecoprop (MCPP), metobenzuron, thifensulfuron-methyl, aclonifen, EPTC, glyphosate, glufosinate, sulfosate and cyanazine, and compounds of the formulae A and B

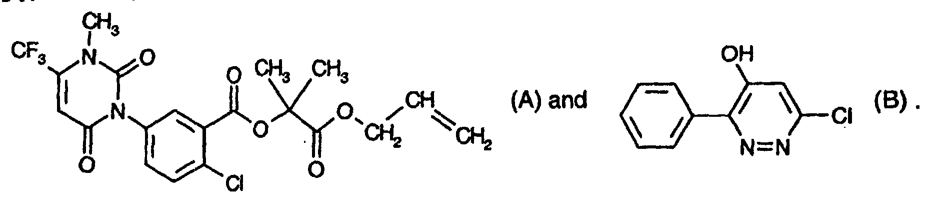

4. A herbicidal composition according to claim 3, where the co-herbicide b) is a compound selected from the group consisting of (S)-metolachlor, metolachlor, dimethenamid or (S)-dimethenamid, acetochlor and alachlor.

5. A herbicidal composition according to claim 4, comprising as additional component c) a safener of the benzoxazin type, in particular benoxacor, or MON 4660, flurazole, dichlormid or furilazole.

6. A herbicidal composition according to claim 1, for controlling weeds in crops of sugar beet resistant to protoporphyrinogen oxidase inhibitors, where the co-herbicide b) is a compound selected from the group consisting of metolachlor, (S)-metolachlor, propaquizafop, metamitron, pyramin, phenmedipham, desmedipham, ethofumesate, triasulfuron, chloridazon, lenacil, triallate, fluazifop, sethoxydim, quizalofop, glyphosate, glufosinate, sulfosate and clethodim.

7. A herbicidal composition according to claim 1, for controlling weeds in crops of soya resistant to photoporphyrinogen oxidase inhibitors, where the co-herbicide b) is a compound selected from the group consisting of metolachlor, (S)-metolachtor, oxasulfuron, fluthiacet-methyl, propaquizafop, alachlor, dimethenamid or (S)-dimethenamid, acifluorfen, benazolin-ethyl, bentazone, carfentrazone-ethyl, sulfentrazone, chlorimuron-ethyl, cloransulam-methyl, thifensulfuron-methyl, clopyralid, flumiclorac-pentyl, flumetsulam, fomesafen, imazamox, imazaquin, imazethapyr, imazapyr, lactofen, pyridate, sethoxydim, fluazifop, quizalofop, clethodim, fenoxaprop(P-ethyl), thidiazuron, tribufos, pendimethalin, glyphosate, glufosinate, sulfosate and trifluralin.

8. A herbicidal composition according to claim 1, for controlling weeds in crops of rape resistant to protoporphyrinogen oxidase inhibitors, where the co-herbicide b) is a compound selected from the group consisting of dimethachlor, propaquizafop, clomazone, napropamide, quinmerac, metazachlor, carbetamide, dimefuron, propyzamide, clopyralid, ethametsulfuron-methyl, sethoxydim, fluazifop, quizalofop, clethodim, fenoxaprop(P-ethyl), glyphosate, glufosinate, sulfosate and tebutam.

9. A herbicidal composition according to claim 1, for controlling weeds in crops of cotton resistant to protoporphyrinogen oxidase inhibitors, where the co-herbicide b) is a compound selected from the group consisting of fluometuron, prometryn, metolachlor, (S)-metolachlor, norflurazon, propaquizafop, pyrithiobac-sodium, trifluralin, pendimethalin, bromoxynil, clomazone, MSMA, DSMA, fluazifop, quizalofop, fenoxaprop(P-ethyl), sethoxydim, clethodim, diuron, cyanazine, alachlor, acetochlor, flurochloridone, dithiopyr, thiazopyr, lactofen, oxyfluorfen, glyphosate, glufosinate, sulfosate and ethalfluralin, and also the compound of the formula C

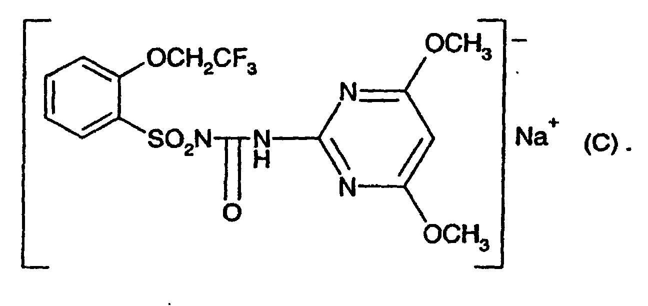

10. A herbicidal composition according to claim 1, for controlling weeds in crops of sunflowers resistant to protoporphyrinogen oxidase inhibitors, where the co-herbicide b) is a compound selected from the group consisting of metolachlor, (S)-metolachlor, pendimethalin, aclonifen, flurochloridon, prometryn, sethoxydim, fluazifop, quizalofop, clethodim, fenoxaprop(P-ethyl), terbutryn, acetochlor, glyphosate, glufosinate, sulfosate and trifluralin.

11. A herbicidal composition according to claim 1, for controlling weeds in crops of cereals resistant to protoporphyrinogen oxidase inhibitors, where the co-herbicide b) is a compound selected from the group consisting of triasulfuron, prosulfuron, clodinafop, terbutryn, amidosulfuron, bromoxynil, carfentrazone-ethyl, dicamba, diclofop-methyl, diflufenican, ethoxysulfuron, fenoxaprop(P-ethyl), fentrazamide, flazasulfuron, florasulam, fluazolate, flucarbazone, flufenacet, flupyrsulfuron-methyl sodium, flurtamone, iodosulfuron, isoproturon, chlortoluron, MCPA, MCPB, mecoprop (MCPP), chlorsulfuron, metsulfuron-methyl, sulfosulfuron, thifensulfuron-methyl, tribenuron-methyl, 2,4-D, 2,4-DB, 2,4-DP, bifenox, ethametsulfuron-methyl, flamprop-M, imazamethabenz-methyl, ioxynil, bromoxynil, metosutam, pyridate, quinmerac, tralkoxydim, fluoroglycofen-ethyl, methabenzthiazuron, ethalfturalin, pendimethalin, trifluralin, isoxaben, prosulfocarb, triallate, clopyralid, fluroxypyr, benazolin-ethyl, glyphosate, glufosinate, sulfosate and difenzoquat-metilsulfate.

12. A herbicidal composition according to claim 11, where the co-herbicide b) is a compound selected from the group consisting of triasulfuron, prosulfuron, clodinafop, amidosulfuron, diclofop-methyl, fenoxaprop(P-ethyl), flazasulfuron, flupyrsulfuron-methyl sodium, iodosulfuron, mecoprop (MCPP), chlorsulfuron, metsulfuron-methyl, sulfosulfuron and thifensulfuron-methyl.

13. A herbicidal composition according to claim 12, comprising as additional component c) a safener of the quinoline type, in particular cloquintocet-mexyl.

14. A herbicidal composition according to claim 1, for controlling weeds in crops of rice resistant to protoporphyrinogen oxidase inhibitors, where the co-herbicide b) is a compound selected from the group consisting of pretilachlor, cinosulfuron, triasulfuron, fenclorim, clodinafop, bensulfuron-methyl, imazosulfuron, pyrazosulfuron-ethyl, metsulfuron-methyl, azimsulfuron, halosulfuron-methyl, esprocarb, mefenacet, molinate, propanil, pyrazolate, cyhalofop-butyl, fenoxaprop(P-ethyl), bispyribac-sodium, pyriminobac-methyl, cafenstrole, oxadiargyl, oxadiazon, bromobutide, MY-100, dymron, NB 061, MK243, HW-52, glyphosate, glufosinate, sulfosate and AC 014, and also the compound of the formula D

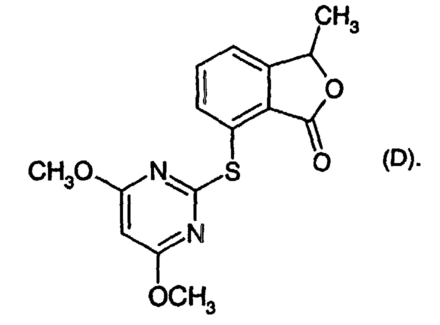

15. A herbicidal composition according to claim 1, for controlling weeds in crops of sugar cane resistant to protoporphyrinogen oxidase inhibitors, where the co-herbicide b) is a compound selected from the group consisting of atrazine, ametryn, dicamba, terbutryn, prosulfuron, hexazinone, asulam, diuron, 2,4-D, halosulfuron-methyl, flazasulfuron, isoxaflutole, azafenidin, tebuthiuron, sulcotrione, pendimethalin, clomazone, metribuzin, thiazopyr, glyphosate, glufosinate, sulfosate and ethoxysulfuron, and also the compound of the formula C

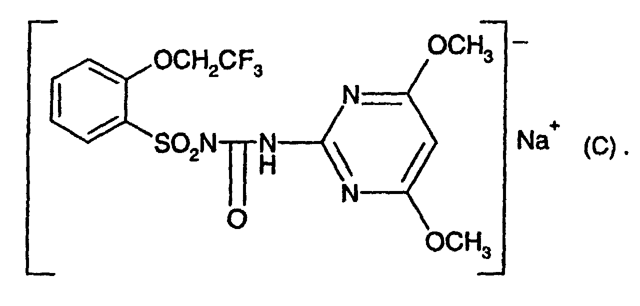

16. A herbicidal composition according to claim 1, for controlling broad-leaved weeds and grasses in crops of maize resistant to protoporphyrinogen oxidase inhibitors, where the following specific combinations of the co-herbicides b) are selected from the group consisting of
prosulfuron + primisulfuron; prosulfuron + dicamba; primisulfuron + dicamba; nicosulfuron + primisulfuron; nicosulfuron + prosulfuron; rimsulfuron + primisulfuron; rimsulfuron + prosulfuron; metolachlor + isoxaflutole; (S)-metolachlor + isoxaflutole; metolachlor + mesotrione; (S)-metolachlor + mesotrione; metolachlor + atrazine; (S)-metolachlor + atrazine; metolachlor + terbuthylazine; and (S)-metolachlor + terbuthylazine.

17. A herbicidal composition according to claim 16, where the following specific combinations of the co-herbicides b) are selected: metolachlor + isoxaflutole; (S)-metolachlor + isoxaflutole; metotachlor + mesotrione; (S)-metolachlor + mesotrione; metotachlor + atrazine; (S)-metolachlor + atrazine; metolachlor + terbuthylazine; and (S)-metolachlor + terbuthylazine.

18. A herbicidal composition according to claim 17, comprising as additional component c) a safener of the benzoxazine type, in particular benoxacor, or MON 4660, flurazole, dichlormid or furilazole.

19. A herbicidal composition according to claim 1, wherein the ratio by weight of the herbicides under a) to the co-herbicides under b) is from 1:2000 to 2000:1.

20. A method for controlling undesirable vegetation in crops of useful plants resistant to protoporphyrinogen oxidase inhibitors, wherein an effective amount of a herbicidal composition according to claim 1 is applied to the crop plants or their habitat.

21. A method according to claim 20, wherein the crops of useful plants are maize, sugar beet, soya beans, rape, cotton, sunflowers, cereals, rice and sugar cane.

22. A method according to claim 20, wherein the crops of useful plants are treated with the composition mentioned at application rates which correspond to a total amount of active compound of from 1 to 5000 g per hectare.

23. The use of a composition according to claim 1 for controlling undesirable vegetation.

## Patentansprüche

1. Herbizide synergistische Zusammensetzung zur selektiven Bekämpfung von breitblättrigen Unkräutern und Gräsern in gegen Protoporphyrinogen-Oxidase-Inhibitoren resistenten Kulturen von Nutzpflanzen, umfassend, neben üblichen inerten Formulierungshilfsmitteln, als Wirkstoff eine Mischung aus
a) einem Herbizid, das die Wirkung von Protoporphyrinogen-Oxidasen inhibiert, ausgewählt aus der Gruppe von Diphenylethern, bestehend aus Acifluorphen, Aclonifen, Bifenox, Chlornitrophen, Ethoxyfen, Fluoroglycofen-ethyl, Fomesafen, Lactofen und Oxyfluorfen, oder aus der Gruppe von Imiden, bestehend aus Azafenidin, Carfentrazon-ethyl, Cinidon-ethyl, Flumiclorac-pentyl, Flumioxazin, Fluthiacet-methyl, Oxadiargyl, Oxadiazon, Pentoxazon (KPP 314), Sulfentrazon, Flumipropyn, Flupropacil, Benzfendizon und der Verbindung der Formel A 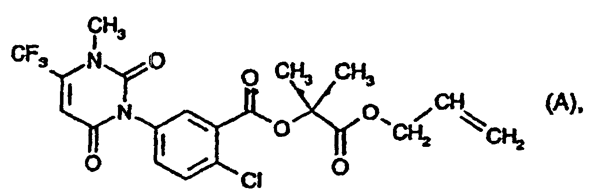 oder aus der Gruppe der Phenylpyrazole, bestehend aus Nipyraclofen, und ebenfalls Fluazolat und Thidiazimin, und
b) zumindest einem weiteren Co-Herbizid ausgewählt aus der Gruppe von Atrazin, Terbuthylazin, (S)-Metolachlor, Metolachlor, Terbutryn, Simazin, Dimethenamid, (S)-Dimethenamid, Flufenacet, Acetochlor, Alachlor, Isoxaflutol, Isoxachlortol, Mesotrion, Sulcotrion, Metosulam, Flumetsulam, Pendimethalin, Bromoxynil, Bentazon, Carfentrazon-ethyl, Clomazon, Nicosulfuron, Rimsulfuron, Halosulfüron-methyl, Metribuzin, Flumiclorac-pentyl, Prosulfuron, Primisulfuron-methyl, Dicamba, Fluthiacet-methyl, Pyridat, 2,4-D, Clopyralid, Diflufenzopyr, Fluroxypyr, MCPA, MCPB, Mecoprop (MCPP), Metobenzuron, Thifensulfuron-methyl, Aclonifen, EPTC, Glyphosat, Glufosinat, Sulfosat, Cyanazin, Propaquizafop, Metamitron, Pyramin, Phenmedipham, Desmedipham, Ethofumesat, Triasulfuron, Chloridazon, Lenacil, Triallat, Fluazifop, Sethoxydim, Quizalofop, Clopyralid, Clethodim, Oxasulfuron, Acifluorfen, Benazolin-ethyl, Sulfentrazon, Chlorimuron-ethyl, Cloransulam-methyl, Fomesafen, Imazamox, Imazaquin, Imazethapyr, Imazapyr, Lactofen, Fenoxaprop(P-ethyl), Thidiazuron, Tribufos, Trifluralin, Dimethachlor, Napropamid, Quinmerac, Metazachlor, Carbetamid, Dimefuron, Propyzamid, Ethametsulfuron-methyl, Tebutam, Fluometuron, Prometryn, Norflurazon, Pyrithiobac-Natrium, MSMA, DSMA, Diuron, Flurochloridon, Dithiopyr, Thiazopyr, Oxyfluorfen, Ethalfluralin, Clodinafop, Amidosulfuron, Diclofop-methyl, Diflufenican, Ethoxysulfuron, Fentrazamid, Flazasulfuron, Florasulam, Fluazolat, Flucarbazon, Flupyrsulfuron-methylnatrium, Flurtamon, Iodosulfuron, Isoproturon, Chlortoluron, Chlorsulfuron, Metsulfuron-methyl, Sulfosulfuron, Tribenuron-methyl, 2,4-DB, 2,4-DP, Bifenox, Flamprop-M, Imazamethabenz-methyl, Ioxynil, Tralkoxydim, Fluoroglycofen-ethyl, Methabenzthiazuron, Isoxaben, Prosulfocarb, Difenzoquat-metilsulfat, Pretilachlor, Cinosulfuron, Fenclorim, Bensulfuron-methyl, Imazosulfuron, Pyrazosulfuron-ethyl, Azimsulfuron, Esprocarb, Mefenacet, Molinat, Propanil, Pyrazolat, Cyhalofop-butyl, Bispyribac-Natrium, Pyriminobac-methyl, Cafenstrol, Oxadiargyl, Oxadiazon, Bromobutid, MY-100, Dymron, NB 061, MK243, HW-52, AC 014, Ametryn, Hexazinon, Asulam, Azafenidin, Tebuthiuron, Ethametsulfuron-methyl, und Verbindungen der Formeln A, B, C und D 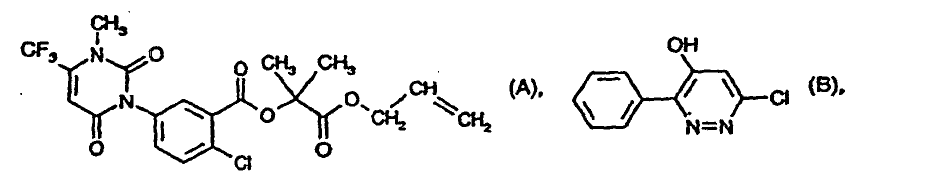 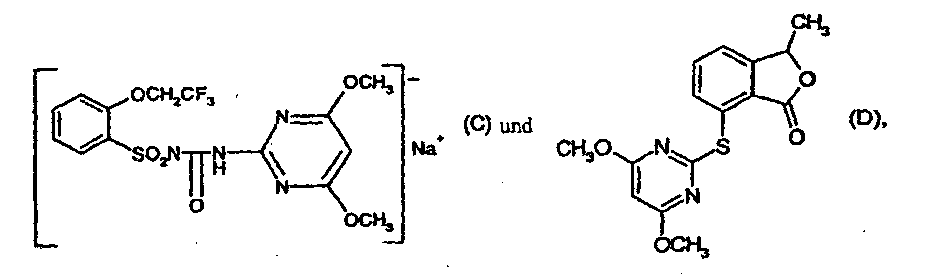 wobei die Kombination derselben Verbindung von Gruppe a) und Gruppe b) nicht als Wirkstoff eingesetzt werden kann.

2. Herbizide Zusammensetzung nach Anspruch 1 zur Bekämpfung von breitblättrigen Unkräutern und Gräsern in gegen Protoporphyrinogen-Oxidase-Inhibitoren resistenten Kulturen von Mais, Zuckerrüben, Sojabohnen, Raps, Baumwolle, Sonnenblumen, Getreide, Reis und Zuckerrohr.

3. Herbizide Zusammensetzung nach Anspruch 1 zur Bekämpfung von Unkräutern und Gräsern ingegen Protoporphyrinogen-Inhibitoren resistenten Kulturen von Mais, wobei das Co-herbizid b) eine Verbindung ist, ausgewählt aus der Gruppe, bestehend aus Atrazin, Terbuthylazin, (S)-Metolachlor, Metolachlor, Terbutryn, Simazin, Dimethenamid oder (S)-Dimethenamid, Flufenacet, Acetochlor, Alachlor, Isoxaflutol, Isoxachlortol, Mesotrion, Sulcotrion, Metosulam, Flumetsulam, Pendimethalin, Bromoxynil, Bentazon, Carfentrazon-ethyl, Clomazon, Nicosulfuron, Rimsulfuron, Halosulfuron-methyl, Metribuzin, Flumiclorac-pentyl, Prosulfuron, Primisulfuron-methyl, Dicamba, Fluthiacet-methyl, Pyridat, 2,4-D, Clopyralid, Diflufenzopyr, Fluroxypyr, MCPA, MCPB, Mecoprop (MCPP), Metobenzuron, Thifensulfuron-methyl, Aclonifen, EPTC, Glyphosat, Glufosinat, Sulfosat und Cyanazin, und Verbindungen der Formeln A und B

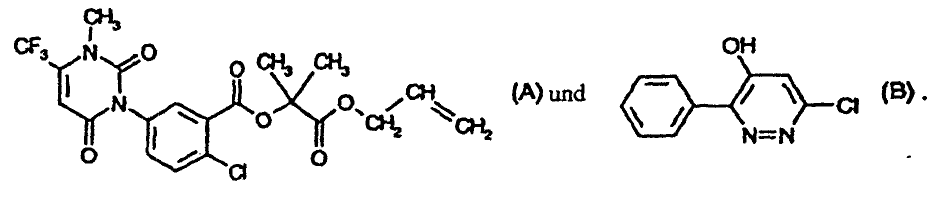

4. Herbizide Zusammensetzung nach Anspruch 3, wobei das Co-herbizid b) eine Verbindung ist, ausgewählt aus der Gruppe, bestehend aus (S)-Metolachlor, Metolachlor, Dimethenamid oder (S)-Dimethenamid, Acetochlor und Alachlor.

5. Herbizide Zusammensetzung nach Anspruch 4, umfassend als zusätzliche Komponente c) einen Safener vom Benzoxazintyp, insbesondere Benoxacor oder MON 4660, Flurazol, Dichlormid oder Furilazol.

6. Herbizide Zusammensetzung nach Anspruch 1 zur Bekämpfung von Unkräutern in gegen Protoporphyrinogen-Oxidase-Inhibitoren resistenten Kulturen von Zuckerrüben, wobei das Co-herbizid b) eine Verbindung ist, ausgewählt aus der Gruppe, bestehend aus Metolachlor, (S)-Metolachlor, Propaquizafop, Metamitron, Pyramin, Phenmedipham, Desmedipham, Ethofumesat, Triasulfuron, Chloridazon, Lenacil, Triallat, Fluazifop, Sethoxydim, Quizalofop, Glyphosat, Glufosinat, Sulfosat und Clethodim.

7. Herbizide Zusammensetzung nach Anspruch 1 zur Bekämpfung von Unkräutern in gegen Photoporphyrinogen-Oxidase-Inhibitoren resistenten Kulturen von Soja, wobei das Co-herbizid b) eine Verbindung ist, ausgewählt aus der Gruppe, bestehend aus Metolachlor, (S)-Metolachlor, Oxasulfuron, Fluthiacetmethyl, Propaquizafop, Alachlor, Dimethenamid oder (S)-Dimethenamid, Acifluorfen, Benazolinethyl, Bentazon, Carfentrazon-ethyl, Sulfentrazon, Chlorimuron-ethyl, Cloransulam-methyl, Thifensulfuron-methyl, Clopyralid, Flumiclorac-pentyl, Flumetsulam, Fomesafen, Imazamox, Imazaquin, Imazethapyr, Imazapyr, Lactofen, Pyridat, Sethoxydim, Fluazifop, Quizalofop, Clethodim, Fenoxaprop(P-ethyl), Thidiazuron, Tribufos, Pendimethalin, Glyphosat, Glufosinat, Sulfosat und Trifluralin.

8. Herbizide Zusammensetzung nach Anspruch 1 zur Bekämpfung von Unkräutern in gegen Protoporphyrinogen-Oxidase-Inhibitoren resistenten Kulturen von Raps, wobei das Co-herbizid b) eine Verbindung ist, ausgewählt aus der Gruppe, bestehend aus Dimethachlor, Propaquizafop, Clomazon, Napropamid, Quinmerac, Metazachlor, Carbetamid, Dimefuron, Propyzamid, Clopyralid, Ethametsulfuron-methyl, Sethoxydim, Fluazifop, Quizalofop, Clethodim, Fenoxaprop(P-ethyl), Glyphosat, Glufosinat, Sulfosat und Tebutam.

9. Herbizide Zusammensetzung nach Anspruch 1 zur Bekämpfung von Unkräutern in gegen Protoporphyrinogen-Oxidase-Inhibitoren resistenten Kulturen von Baumwolle, wobei das Co-herbizid b) eine Verbindung ist, ausgewählt aus der Gruppe, bestehend aus Fluometuron, Prometryn, Metolachlor, (S)-Metolachlor, Norflurazon, Propaquizafop, Pyrithiobac-Natrium, Trifluralin, Pendimethalin, Bromoxynil, Clomazon, MSMA, DSMA, Fluazifop, Quizalofop, Fenoxaprop(P-ethyl), Sethoxydim, Clethodim, Diuron, Cyanazin, Alachlor, Acetochlor, Flurochloridon, Dithiopyr, Thiazopyr, Lactofen, Oxyfluorfen, Glyphosat, Glufosinat, Sulfosat und Ethalfluralin, sowie der Verbindung von Formel C

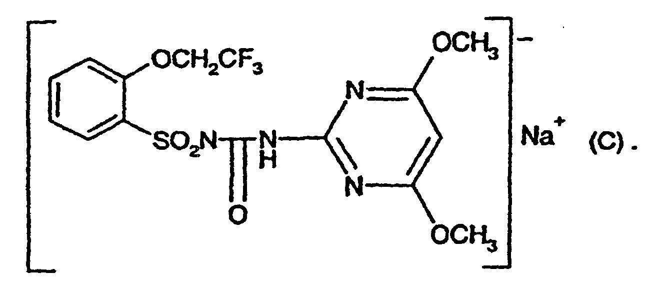

10. Herbizide Zusammensetzung nach Anspruch 1 zur Bekämpfung von Unkräutern in Protoporphyrinogen-Oxidase-Inhibitoren resistenten Kulturen von Sonnenblumen, wobei das Co-herbizid b) eine Verbindung ist, ausgewählt aus der Gruppe, bestehend aus Metolachlor, (S)-Metolachlor, Pendimethalin, Aclonifen, Flurochloridon, Prometryn, Sethoxydim, Fluazifop, Quizalofop, Clethodim, Fenoxaprop(P-ethyl), Terbutryn, Acetochlor, Glyphosat, Glufosinat, Sulfosat und Trifluralin.

11. Herbizide Zusammensetzung nach Anspruch 1 zur Bekämpfung von Unkräutern in gegen Protoporphyrinogen-Oxidase-Inhibitoren resistenten Kulturen von Getreide, wobei das Co-herbizid b) eine Verbindung ist, ausgewählt aus der Gruppe, bestehend aus Triasulfuron, Prosulfuron, Clodinafop, Terbutryn, Amidosulfuron, Bromoxynil, Carfentrazon-ethyl, Dicamba, Diclofop-methyl, Diflufenican, Ethoxysulfuron, Fenoxaprop(P-ethyl), Fentrazamid, Flazasulfuron, Florasulam, Fluazolat, Flucarbazon, Flufenacet, Flupyrsulfuron-methylnatrium, Flurtamon, Iodosulfuron, Isoproturon, Chlortoluron, MCPA, MCPB, Mecoprop (MCPP), Chlorsulfuron, Metsulfuronmethyl, Sulfosulfuron, Thifensulfuron-methyl, Tribenuron-methyl, 2,4-D, 2,4-DB, 2,4-DP, Bifenox, Ethametsulfuron-methyl, Flamprop-M, Imazamethabenz-methyl, Ioxynil, Bromoxynil, Metosulam, Pyridat, Quinmerac, Tralkoxydim, Fluoroglycofen-ethyl, Methabenzthiazuron, Ethalfluralin, Pendimethalin, Trifluralin, Isoxaben, Prosulfocarb, Triallat, Clopyralid, Fluroxypyr, Benazolin-ethyl, Glyphosat, Glufosinat, Sulfosat und Difenzoquat-metilsulfat.

12. Herbizide Zusammensetzung nach Anspruch 11, wobei das Co-herbizid b) eine Verbindung ist, ausgewählt aus der Gruppe, bestehend aus Triasulfuron, Prosulfuron, Clodinafop, Amidosulfuron, Diclofop-methyl, Fenoxaprop(P-ethyl), Flazasulfuron, Flupyrsulfuron-methylnatrium, Iodosulfuron, Mecoprop (MCPP), Chlorsulfuron, Metsulfuron-methyl, Sulfosulfuron und Thifensulfuron-methyl.

13. Herbizide Zusammensetzung nach Anspruch 12, umfassend als zusätzliche Komponente c) einen Safener vom Chinolintyp, insbesondere Cloquintocet-mexyl.

14. Herbizide Zusammensetzung nach Anspruch 1 zur Bekämpfung von Unkräutern in gegen Protoporphyrinogen-Oxidase-Inhibitoren resistenten Kulturen von Reis, wobei das Co-herbizid b) eine Verbindung ist, ausgewählt aus der Gruppe, bestehend aus Pretilachlor, Cinosulfuron, Triasulfuran, Fenclorim, Clodinafop, Bensulfuron-methyl, Imazosulfuron, Pyrazosulfuron-ethyl, Metsulfuron-methyl, Azimsulfuron, Halosulfuron-methyl, Esprocarb, Mefenacet, Molinat, Propanil, Pyrazolat, Cyhalofop-butyl, Fenoxaprop(P-ethyl), Bispyribac-natrium, Pyriminobac-methyl, Cafenstrol, Oxadiargyl, Oxadiazon, Bromobutid, MY-100, Dymron, NB 061, MK243, HW-52, Glyphosat, Glufosinat, Sulfosat und AC 014, sowie der Verbindung von Formel D

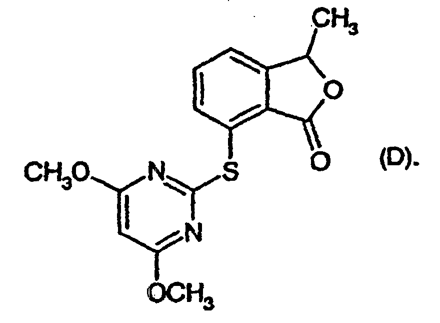

15. Herbizide Zusammensetzung nach Anspruch 1 zur Bekämpfung von Unkräutern in gegen Protoporphyrinogen-Oxidase-Inhibitoren resistenten Kulturen von Zuckerrohr, wobei das Co-herbizid b) eine Verbindung ist, ausgewählt aus der Gruppe, bestehend aus Atrazin, Ametryn, Dicamba, Terbutryn, Prosulfuron, Hexazinon, Asulam, Diuron, 2,4-D, Halosulfuron-methyl, Flazasulfuron, Isoxaflutol, Azafenidin, Tebuthiuron, Sulcotrion, Pendimethalin, Clomazon, Metribuzin, Thiazopyr, Glyphosat, Glufosinat, Sulfosat und Ethoxysulfuron, sowie der Verbindung von Formel C

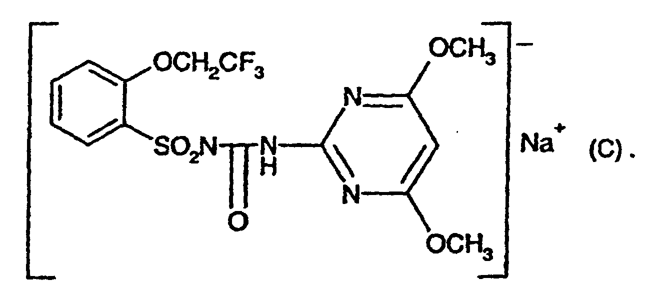

16. Herbizide Zusammensetzung nach Anspruch 1 zur Bekämpfung von breitblättrigen Unkräutern und Gräsern in gegen Protoporphyrinogen-Oxidase-Inhibitoren resistenten Kulturen von Mais, wobei die folgenden spezifischen Kombinationen der Co-herbizide b) aus der Gruppe ausgewählt werden, bestehend aus Prosulfuron + Primisulfuron; Prosulfuron + Dicamba; Primisulfuron + Dicamba; Nicosulfuron + Primisulfuron; Nicosulfuron + Prosulfuron; Rimsulfuron + Primisulfuron; Rimsulfuron + Prosulfuron; Metolachlor + Isoxaflutol; (S)-Metolachlor + Isoxaflutol; Metolachlor + Mesotrion; (S)-Metolachlor + Mesotrion; Metolachlor + Atrazin; (S)-Metolachlor + Atrazin; Metolachlor + Terbuthylazin; und (S)-Metolachlor + Terbuthylazin.

17. Herbizide Zusammensetzung nach Anspruch 16, wobei die folgenden spezifischen Kombinationen der Co-herbizide b) ausgewählt werden aus: Metolachlor + Isoxaflutol; (S)-Metolachlor + Isoxaflutol; Metolachlor + Mesotrion; (S)-Metolachlor + Mesotrion; Metolachlor + Atrazin; (S)-Metolachlor + Atrazin; Metolachlor + Terbuthylazin; und (S)-Metolachlor + Terbuthylazin.

18. Herbizide Zusammensetzung nach Anspruch 17, umfassend als zusätzliche Komponente c) einen Safener vom Benzoxazintyp, insbesondere Benoxacor, oder MON 4660, Flurazol, Dichlormid oder Furilazol.

19. Herbizide Zusammensetzung nach Anspruch 1, wobei das Gewichtsverhältnis der Herbizide unter a) zu den Co-herbiziden unter b) 1 : 2000 bis 2000 : 1 beträgt.

20. Verfahren zur Bekämpfung unerwünschten Pflanzenwachstums in gegen Protoporphyrinogen-Oxidase-Inhibitoren resistenten Nutzpflanzenkulturen, wobei eine wirksame Menge einer herbiziden Zusammensetzung nach Anspruch 1 auf die Kulturpflanzen oder deren Lebensraum appliziert wird.

21. Verfahren nach Anspruch 20, wobei die Nutzpflanzenkulturen Mais, Zuckerrüben, Sojabohnen, Raps, Baumwolle, Sonnenblumen, Getreide, Reis oder Zuckerrohr sind.

22. Verfahren nach Anspruch 20, wobei die Nutzpflanzenkulturen mit der genannten Zusammensetzung bei Ausbringungsmengen behandelt werden, die einer Wirkstoffgesamtmenge von 1 bis 5000 g pro Hektar entsprechen.

23. Verwendung einer Zusammensetzung nach Anspruch 1 zur Bekämpfung von unerwünschtem Pflanzenwachstum.

## Revendications

1. Composition herbicide synergique pour la lutte sélective contre les mauvaises herbes à grandes feuilles et les herbes dans les cultures de plantes utiles résistant aux inhibiteurs de protoporphyrinogène oxydases, comprenant, outre les auxiliaires de formulation inertes habituels, en tant que composés actifs, un mélange constitué par
a) un herbicide qui inhibe l'action des protoporphyrinogène oxydases choisi dans le groupe des éthers diphényliques constitués par l'acifluorphen, l'aclonifen, le bifénox, le chlornitrophen, l'éthoxyfen, le fluoroglycofène-éthyle, le fomésafen, le lactofen et l'oxyfluorfène ou dans le groupe des imides constitués par l'azafénidine, la carfentrazone-éthyle, le cinidon-éthyle, le flumiclorac-pentyle, la flumioxazine, le fluthiacet-méthyle, l'oxadiargyl, l'oxadiazone, la pentoxazone (KPP 314), la sulfentrazone, le flumipropyn, le flupropacil, la benzfendizone et le composé de formule A 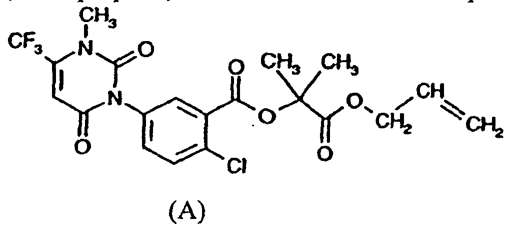 ou dans le groupe des phénylpyrazoles constitué par le nipyraclofen et également le fluazolate et la thidiazimine et
b) au moins un autre co-herbicide choisi dans le groupe constitué par l'atrazine, la terbuthylazine, le (S)-métolachlore, le métolachlore, la terbutryne, la simazine, le diméthénamid, le (S)-diméthénamid, le flufénacet, l'acétochlore, l'alachlore, l'isoxaflutole, l'isoxachlortole, la mésotrione, la sulcotrione, le métosulam, le flumetsulam, la pendiméthaline, le bromoxynil, la bentazone, la carfentrazone-éthyle, la clomazone, le nicosulfuron, le rimsulfuron, l'halosulfuron-méthyle, la métribuzine, le flumiclorac-pentyle, le prosulfuron, le primisulfuron-méthyle, le dicamba, le fluthiacet-méthyle, le pyridate, le 2,4-D, le clopyralid, le diflufenzopyr, le fluroxypyr, le MCPA, le MCPB, le mécoprop (MCPP), le métobenzuron, le thifensulfuron-méthyle, l'aclonifen, l'EPTC, le glyphosate, le glufosinate, le sulfosate, la cyanazine, le propaquizafop, la métamitrone, la pyramine, le phenmédiphame, le desmédiphame, l'éthofumésate, le triasulfuron, la chloridazone, le lénacile, le triallate, le fluazifop, la séthoxydime, le quizalofop, le clopyralid, le cléthodim, l'oxasulfuron, l'acifluorfen, le bénazolin-éthyle, la sulfentrazone, le chlorimuron-éthyle, le cloransulam-méthyle, le fomésaten, l'imazamox, l'imazaquine, l'imazéthapyr, l'imazapyr, le lactofen, le fénoxaprop(P-éthyle), le thidiazuron, le tribufos, la trifluraline, le diméthachlor, le napropamide, le quinmerac, le métazachlore, le carbétamide, le diméfuron, le propyzamide, l'éthametsulfuron-méthyle, le tébutam, le fluométuron, la prométryne, le norflurazon, le pyrithiobac-sodium, le MSMA, le DSMA, le diuron, la flurochloridone, le dithiopyr, le thiazopyr, l'oxyfluorfène, l'éthalfluralin, le clodinafop, l'amidosulfuron, le diclofop-méthyle, le diflufénican, l'éthoxysulfuron, le fentrazamide, le flazasulfuron, le florasulam, le fluazolate, la flucarbazone, le flupyrsulfuron-méthyle, sel de sodium, la flurtamone, l'iodosulfuron, l'isoproturon, le chlortoluron, le chlorsulfuron, le metsulfuron-méthyle, le sulfosulfuron, le tribénuron-méthyle, le 2,4-DB, le 2,4-DP, le bifénox, le flamprop-M, l'imazaméthabenz-méthyle, l'ioxynil, le tralkoxydim, le fluoroglycofène-éthyle, le méthabenzthiazuron, l'isoxaben, le prosulfocarb, le méthylsulfate du difenzoquat, le prétilachlore, le cinosulfuron, le fenclorim, le bensulfuron-méthyle, l'imazosulfuron, le pyrazosulfuron-éthyle, l'azimsulfuron, l'esprocarb, le méfénacet, le molinate, le propanil, le pyrazolate, le cyhalofop-butyle, le bispyribac-sodium, le pyriminobac-méthyle, le cafenstrole, l'oxadiargyl, l'oxadiazone, le bromobutide, le MY-100, le dymron, le NB 061, le MK243, le HW-52, l'AC 014, l'amétryne, l'hexazinone, l'asulame, l'azafénidine, le tébuthiuron, l'éthametsulfuron-méthyle et les composés de formules A, B, C et D 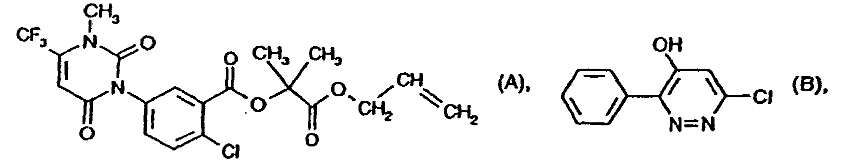 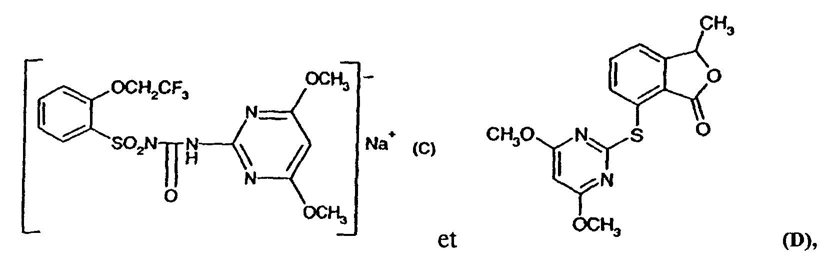 la combinaison du même composé du groupe a) et du groupe b) ne pouvant pas être utilisée comme ingrédient actif.

2. Composition herbicide selon la revendication 1 pour la lutte contre les mauvaises herbes à grandes feuilles et les herbes dans les cultures de maïs, de betteraves sucrières, de soja, de colza, de coton, de tournesols, de céréales, de riz et de canne à sucre, résistant aux inhibiteurs de protoporphyrinogène oxydase.

3. Composition herbicide selon la revendication 1, pour la lutte contre les mauvaises herbes à grandes feuilles et les herbes dans les cultures de maïs résistant aux inhibiteurs de protoporphyrinogène oxydase, où le co-herbicide b) est un composé choisi dans le groupe constitué par l'atrazine, la terbuthylazine, le (S)-métolachlore, le métolachlore, la terbutryne, la simazine, le diméthénamid ou le (S)-diméthénamid, le flufénacet, l'acétochlore, l'alacblore, l'isoxaflutole, l'isoxachlortole, la mésotrione, la sulcotrione, le métosulam, le flumetsulam, la pendiméthaline, le bromoxynil, la bentazone, la carfentrazone-éthyle, la clomazone, le nicosulfuron, le rimsulfuron, l'halosulfuron-méthyle, la métribuzine, le flumiclorac-pentyle, le prosulfuron, le primisulfuron-méthyle, le dicamba, le fluthiacet-méthyle, le pyridate, le 2,4-D, le clopyralid, le diflufenzopyr, le fluroxypyr, le MCPA, le MCPB, le mécoprop (MCPP), le métobenzuron, le thifensulfuron-méthyle, l'aclonifen, l'EPTC, le glyphosate, le glufosinate, le sulfosate et la cyanazine et les composés de formules A et B.

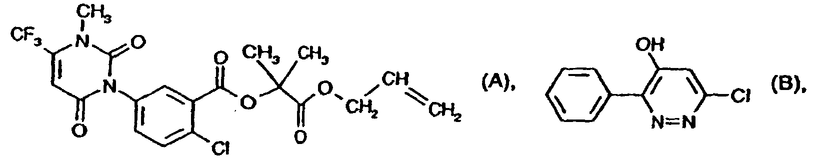

4. Composition herbicide selon la revendication 3, dans laquelle le co-herbicide b) est un composé choisi dans le groupe constitué par le (S)-métolachlore, le métolachlore, le diméthénamid ou le (S)-diméthénamid, l'acétochlore et l'alachlore.

5. Composition herbicide selon la revendication 4, comprenant comme composant additionnel c) un phytoprotecteur du type benzoxazine, en particulier le bénoxacor ou le MON 4660, le flurazole, le dichlormide ou le furilazole.

6. Composition herbicide selon la revendication 1, pour la lutte contre les mauvaises herbes à grandes feuilles et les herbes dans les cultures de betteraves sucrières résistant aux inhibiteurs de protoporphyrinogène oxydase, où le co-herbicide b) est un composé choisi dans le groupe constitué par le métolachlore, le (S)-métolachlore, le propaquizafop, la métamitrone, la pyramine, le phenmédiphame, le desmédiphame, l'éthofumésate, le triasulfuron, la chloridazone, le lénacile, le triallate, le fluazifop, le séthoxydime, le quizalofop, le glyphosate, le glufosinate, le sulfosate et le cléthodim.

7. Composition herbicide selon la revendication 1, pour la lutte contre les mauvaises herbes à grandes feuilles et les herbes dans les cultures de soja résistant aux inhibiteurs de protoporphyrinogène oxydase, où le co-herbicide b) est un composé choisi dans le groupe constitué par le métolachlore, le (S)-métolachlore, l'oxasulfiiron, le fluthiacet-méthyle, le propaquizafop, l'alachlore, le diméthénamid, ou le (S)-diméthénamid, l'acifluorfen, le bénazolin-éthyle, la bentazone, la carfentrazone-éthyle, la sulfentrazone, le chlorimuron-éthyle, le cloransulam-méthyle, le thifensulfuron-méthyle, le chlorpyralid, le flumiclorac-pentyle, le flumetsulam, le fomésafen, l'imazamox, l'imazaquine, l'imazéthapyr, l'imazapyr, le lactofen, le pyridate, le séthoxydime, le fluazifop, le quizalofop, le cléthodim, le fénoxaprop(P-éthyle), le thidiazuron, le tribufos, la pendiméthaline, le glyphosate, le glufosinate, le sulfosate et la trifluraline.

8. Composition herbicide selon la revendication 1, pour la lutte contre les mauvaises herbes à grandes feuilles et les herbes dans les cultures de colza résistant aux inhibiteurs de protoporphyrinogène oxydase, où le co-herbicide b) est un composé choisi dans le groupe constitué par le diméthachlor, le propaquizafop, la clomazone, le napropamide, le quinmérac, le métazachlor, le carbétamide, le diméfuron, le propyzamide, le clopyralid, l'éthametsulfuron-méthyle, le séthoxydime, le fluazifop, le quizalofop, le cléthodim, le fénoxaprop(P-éthyle), le glyphosate, le glufosinate, le sulfosate et le tébutam.

9. Composition herbicide selon la revendication 1, pour la lutte contre les mauvaises herbes à grandes feuilles et les herbes dans les cultures de coton résistant aux inhibiteurs de protoporphyrinogène oxydase, où le co-herbicide b) est un composé choisi dans le groupe constitué par le fluométuron, la prométryne, le métolachlore, le (S)-métolachlore, le norflurazon, le propaquizafop, le pyrithiobac-sodium, la trifluraline, la pendiméthaline, le bromoxynil, la clomazone, le MSMA, le DMSA, le fluazifop, le quizalofop, le fénoxaprop(P-éthyle), le séthoxydime, le cléthodim, le diuron, la cyanazine, l'alachlore, l'acétochlore, la flurochloridone, le dithiopyr, le thiazopyr, le lactofen, l'oxyfluorfène, le glyphosate, le glufosinate, le sulfosate et l'éthalfluralin, ainsi que le composé de formule C

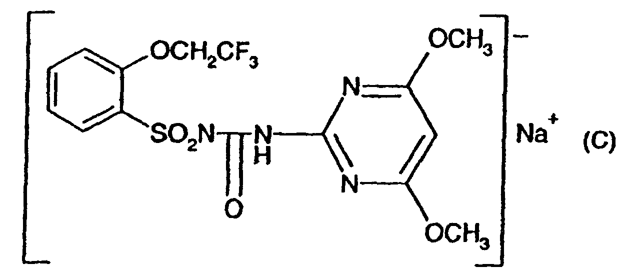

10. Composition herbicide selon la revendication 1, pour la lutte contre les mauvaises herbes à grandes feuilles et les herbes dans les cultures de tournesols résistant aux inhibiteurs de protoporphyrinogène oxydase, où le co-herbicide b) est un composé choisi dans le groupe constitué par le métolachlore, le (S)-métolachlore, la pendiméthaline, l'aclonifen, la flurochloridone, la prométryne, le séthoxydime, le fluazifop, le quizalofop, le cléthodim, le fénoxaprop(P-éthyle), la terbutryne, l'acétochlore, le glyphosate, le glufosinate, le sulfosate et la trifluraline.

11. Composition herbicide selon la revendication 1, pour la lutte contre les mauvaises herbes à grandes feuilles et les herbes dans les cultures de céréales résistant aux inhibiteurs de protoporphyrinogène oxydase, où le co-herbicide b) est un composé choisi dans le groupe constitué par le triasulfuron, le prosulfuron, le clodinafop, la terbutryne, l'amidosulfuron, le bromoxynil, la carfentrazone-éthyle, le dicamba, le diclofop-méthyle, le diflufénican, l'éthoxysulfuron, le fénoxaprop(P-éthyle), le fentrazamide, le flazasulfuron, le florasulam, le fluazolate, la flucarbazone, le flufénacet, le sel de sodium du flupyrsulfuron-méthyle, la flurtamone, l'iodosulfuron, l'isoproturon, le chlortoluron, le MCPA, le MCPB, le mécoprop (MCPP), le chlorsulfuron, le metsulfuron-méthyle, le sulfosulfuron, le thifensulfuron-méthyle, le tribénuron-méthyle, le 2,4-D, le 2,4-DB, le 2,4-DP, le bifénox, l'éthametsulfuron-méthyle, le flamprop-M, l'imazaméthabenz-méthyle, l'ioxynil, le bromoxynil, le métosulam, le pyridate, le quinmérac, la tralkoxydime, le fluoroglycofène-éthyle, le méthabenzthiazuron, l'éthalfluraline, la pendiméthaline, la trifluraline, l'isoxaben, le prosulfocarb, le triallate, le clopyralid, le fluroxypyr, le bénazolin-éthyle, le glyphosate, le glufosinate, le sulfosate et le méthylsulfate du difenzoquat.

12. Composition herbicide selon la revendication 11, dans laquelle le co-herbicide b) est un composé choisi dans le groupe constitué par le triasulfuron, le prosulfuron, le clodinafop, l'amidosulfuron, le diclofop-méthyle, le fénoxaprop(P-éthyle), le flazasulfuron, le sel de sodium du flupyrsulfuron-méthyle, l'iodosulfuron, le mécoprop (MCPP), le chlorsulfuron, le metsulfuron-méthyle, le sulfosulfuron et le thifensulfuron-méthyle.

13. Composition herbicide selon la revendication 12, comprenant comme composant additionnel c), un phytoprotecteur du type quinoléine, en particulier le cloquintocet-mexyle.

14. Composition herbicide selon la revendication 1, pour la lutte contre les mauvaises herbes à grandes feuilles et les herbes dans les cultures de riz résistant aux inhibiteurs de protoporphyrinogène oxydase, où le co-herbicide b) est un composé choisi dans le groupe constitué par le prétilachlore, le cinosulfuron, le triasulfuron, le fenclorim, le clodinafop, le bensulfuron-méthyle, l'imazosulfuron, le pyrazosulfuron-éthyle, le metsulfuron-méthyle, l'azimsulfuron, l'halosulfuron-méthyle, l'esprocarb, le méfénacet, le molinate, le propanil, le pyrazolate, le cyhalofop-butyle, le fénoxaprop(P-éthyle), le bispyribac-sodium, le pyriminobac-méthyle, le cafenstrole, l'oxadiargyl, l'oxadiazone, le bromobutide, le MY-100, le dymron, le NB 061, le MK243, le HW-52, le glyphosate, le glufosinate, le sulfosate et l'AC 014, et également le composé de formule D.

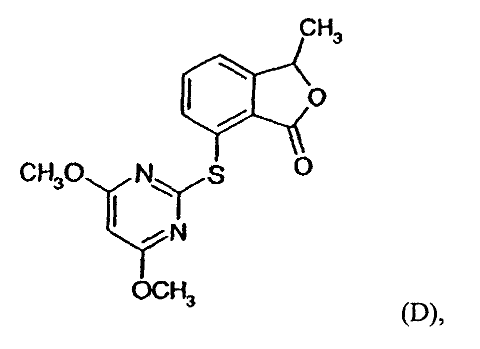

15. Composition herbicide selon la revendication 1, pour la lutte contre les mauvaises herbes à grandes feuilles et les herbes dans les cultures de canne à sucre résistant aux inhibiteurs de protoporphyrinogène oxydase, où le co-herbicide b) est un composé choisi dans le groupe constitué par l'atrazine, l'amétryne, le dicamba, la terbutryne, le prosulfuron, l'hexazinone, l'asulame, le diuron, le 2,4-D, l'halosulfuron-méthyle, le flazasulfuron, l'isoxaflutole, l'azafénidine, le tébuthiuron, la sulcotrione, la pendiméthaline, la clomazone, la métribuzine, le thiazopyr, le glyphosate, le glufosinate, le sulfosate et l'éthoxysulfuron, ainsi que le composé de formule C

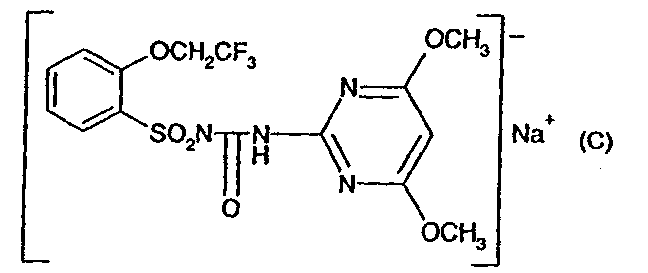

16. Composition herbicide selon la revendication 1, pour la lutte contre les mauvaises herbes à grandes feuilles et les herbes dans les cultures de maïs résistant aux inhibiteurs de protoporphyrinogène oxydase, où les combinaisons spécifiques de co-herbicides b) suivantes sont choisies dans le groupe constitué par prosulfuron + primisulfuron ; prosulfuron + dicamba ; primisulfuron + dicamba ; nicosulfuron + primisulfuron ; nicosulfuron + prosulfuron ; rimsulfuron + primisulfuron ; rimsulfuron + prosulfuron ; métolachlore+ isoxaflutole ; (S)-métolachlore + isoxaflutole ; métolachlore + mésotrione ; (S)-métolachlore + mésotrione ; métolachlore + atrazine ; (S)-métolachlore + atrazine ; métolachlore + terbuthylazine et (S)-métolachlore + terbuthylazine.

17. Composition herbicide selon la revendication 16, où les combinaisons spécifiques de co-herbicides b) suivantes sont choisies: métolachlore+ isoxaflutole ; (S)-métolachlore + isoxaflutole ; métolachlore + mésotrione ; (S)-métolachlore + mésotrione ; métolachlore + atrazine; (S)-métolachlore + atrazine ; métolachlore + terbuthylazine et (S)-métolachlore + terbuthylazine.

18. Composition herbicide selon la revendication 17, comprenant comme composant additionnel c) un phytoprotecteur du type benzoxazine, en particulier le bénoxacor, ou le MON 4660, le flurazole, le dichlormide ou le furilazole.

19. Composition herbicide selon la revendication 1, dans laquelle le rapport en masse des herbicides a) aux co-herbicides b) est de 1:2000 à 2000:1.

20. Méthode pour lutter contre la végétation indésirable dans les cultures de plantes utiles résistant aux inhibiteurs de protoporphyrinogène oxydase, dans laquelle on applique une quantité efficace d'une composition herbicide selon la revendication 1 aux plantes cultivées ou à leur habitat.

21. Méthode selon la revendication 20, dans laquelle les cultures de plantes utiles sont le maïs, la betterave sucrière, le soja, la colza, le coton, les tournesols, les céréales, le riz et la canne à sucre.

22. Méthode selon la revendication 20, dans laquelle les cultures de plantes utiles sont traitées par la composition mentionnée à des taux d'application correspondant à une quantité totale de composé actif de 1 à 5000 g par hectare.

23. Utilisation d'une composition selon la revendication 1 pour contrôler la végétation indésirable.
